# EUROPEAN PATENT APPLICATION

(11) **EP 4 576 846 A1**
(43) Date of publication of application: **25.06.2025**
(21) Application number: 23893560.5
(22) Date of filing: 30.10.2023
(51) Int. Cl.: H04W 4/80, H04R 1/10

(54) **PAIRING CONNECTION METHOD, AND RELATED DEVICE AND SYSTEM**

(30) Priority: 25.11.2022 CN 202211526181; 02.12.2022 CN 202211556701
(71) Applicant: Huawei Technologies Co., Ltd., Shenzhen, Guangdong 518129 (CN)
(72) Inventor: ZHANG, Xianchun, Shenzhen, Guangdong 518129 (CN); LIN, Jianxin, Shenzhen, Guangdong 518129 (CN); WANG, Shufeng, Shenzhen, Guangdong 518129 (CN); LIAO, Yousheng, Shenzhen, Guangdong 518129 (CN); WU, Yu, Shenzhen, Guangdong 518129 (CN); HU, Yan, Shenzhen, Guangdong 518129 (CN)
(74) Representative: MERH-IP Matias Erny Reichl Hoffmann Patentanwälte PartG mbB
(86) International application number: PCT/CN2023/127902
(87) International publication number: WO 2024/109469

(57) **Abstract**

Embodiments of this application provide a wearable device including a wireless audio apparatus, to form a new product form in which the wearable device and the audio apparatus are integrated, so that a user can easily obtain both the wearable device and the audio apparatus. In view of the new product form, embodiments of this application further provide a power-on/off method, an upgrade method, a method for restoring to factory settings, a pairing and connection method, a music playing control method, a call control method, a charging method, a device search method, and the like. In addition to providing new user experience, this application implements simple and efficient human-machine interaction. The wearable device and the audio apparatus may be treated as one device. The audio apparatus may be considered as a microphone and speaker of the wearable device, and the wearable device may alternatively serve as a display device and micro control center of the audio apparatus. In this way, the user can perform visual control such as volume adjustment, incoming call answering, and music playing on audio playing. The wearable device may be further used as a charger of the audio apparatus, and the like.

## Description

This application claims priorities to Chinese Patent Application No. 202211526181.2, filed with the China National Intellectual Property Administration on November 25, 2022 and entitled "WEARABLE DEVICE INCLUDING WIRELESS AUDIO APPARATUS, PAIRING AND CONNECTION METHOD, RELATED DEVICE, AND SYSTEM", and to Chinese Patent Application No. 202211556701.4, filed with the China National Intellectual Property Administration on December 2, 2022 and entitled "PAIRING AND CONNECTION METHOD, RELATED DEVICE, AND SYSTEM", both of which are incorporated herein by reference in their entireties.

### TECHNICAL FIELD

Embodiments described in this application relate to a wireless audio communication system, and in particular, to a wearable device including a wireless audio apparatus.

### BACKGROUND

In addition to mobile phones, smartwatches and true wireless stereo (true wireless stereo, TWS) Bluetooth earphones gradually become devices that need to be used by a large quantity of users in daily life. A large quantity of devices bring challenges to storage and carrying, and make device usage complex.

### SUMMARY

According to a first aspect, an embodiment of this application provides a pairing and connection method. The method may be applied to a wearable device. The wearable device may have an audio apparatus slot, and the audio apparatus slot is capable of accommodating an audio apparatus. The method may include: The wearable device performs pairing with a first electronic device. The wearable device establishes a connection to the first electronic device. The wearable device sends a media access control MAC address of the audio apparatus to the first electronic device through the connection. The MAC address of the audio apparatus is used by the first electronic device to perform pairing with the audio apparatus.

The wearable device may be, for example, a smartwatch, the audio apparatus may be, for example, earphones, and the audio apparatus slot may be, for example, an earphone compartment in the watch.

According to the method in the first aspect, the watch and the earphones may be considered as a whole and perform pairing with a mobile phone. After the mobile phone performs pairing with the watch, the mobile phone may obtain a MAC address of the earphones from the watch, so that the mobile phone can perform automatic pairing with the earphones based on the MAC address of the earphones, and a user does not need to manually pair the earphones with the mobile phone. The user only needs one pairing procedure to pair the watch and the earphones with the mobile phone.

With reference to the first aspect, in an implementation, the MAC address of the audio apparatus may be obtained by the wearable device from the audio apparatus through an electrical connection formed through contact between a communication electrode in the audio apparatus slot and a communication electrode of the audio apparatus.

With reference to the first aspect, in an implementation, the method may further include: The wearable device performs pairing with the audio apparatus based on the MAC address of the audio apparatus.

With reference to the first aspect, in an implementation, pairing between the wearable device and the audio apparatus may be performed when the audio apparatus is located in the audio apparatus slot or after the audio apparatus is back to the audio apparatus slot.

With reference to the first aspect, in an implementation, that the wearable device performs pairing with the audio apparatus based on the MAC address of the audio apparatus may specifically include:
if only a single earphone is located in the audio apparatus slot, the wearable device performs pairing with the single earphone located in the audio apparatus slot; or
if two earphones are located in the audio apparatus slot, the wearable device performs pairing with the two earphones located in the audio apparatus slot; or
if a single earphone or two earphones not located in the audio apparatus slot are back to the audio apparatus slot, the wearable device performs pairing with the single earphone or two earphones back to the audio apparatus slot.

With reference to the first aspect, in an implementation, the method in the first aspect may further include: The wearable device detects that a new audio apparatus enters the audio apparatus slot. The wearable device performs pairing with the new audio apparatus. The wearable device sends a MAC address of the new audio apparatus to the first electronic device. The MAC address of the new audio apparatus is used by the first electronic device to perform pairing with the new audio apparatus, and the new audio apparatus is an audio apparatus whose pairing information is not in the wearable device.

With reference to the first aspect, in an implementation, the method in the first aspect may further include: The wearable device obtains the MAC address of the new audio apparatus from the new audio apparatus through an electrical connection formed through contact between the communication electrode in the audio apparatus slot and a communication electrode of the new audio apparatus. The MAC address of the new audio apparatus is used by the wearable device to perform pairing with the new audio apparatus.

With reference to the first aspect, in an implementation, a prerequisite for pairing between the wearable device and the new audio apparatus may include: an old audio apparatus is not in use, where the old audio apparatus is an audio apparatus whose pairing information is in the wearable device.

With reference to the first aspect, in an implementation, that an old audio apparatus is not in use may include: the old audio apparatus is located in the audio apparatus slot, or the old audio apparatus is not located in the audio apparatus slot but is not connected to an electronic device, or the old audio apparatus is not located in the audio apparatus slot, and is connected to an electronic device but is not engaged in an audio service.

With reference to the first aspect, in an implementation, the new audio apparatus includes earphones. That the wearable device performs pairing with the new audio apparatus may specifically include:
if two new earphones enter the audio apparatus slot, the wearable device performs pairing with the two new earphones; or
if a single new earphone enters the audio apparatus slot and there is no old earphone in the audio apparatus slot, the wearable device performs pairing with the single new earphone; or
if a single new earphone enters the audio apparatus slot but there is still an old earphone in the audio apparatus slot, the wearable device deletes pairing information of the old earphone, and performs pairing with the pair of earphones in the audio apparatus slot.

With reference to the first aspect, in an implementation, the method in the first aspect may further include: If the wearable device is further connected to a second electronic device before performing pairing with the first electronic device, the wearable device is disconnected from the second electronic device.

According to a second aspect, an embodiment of this application provides a pairing and connection method. The method may be applied to a first electronic device. The method may include: The first electronic device performs pairing with a wearable device, where the wearable device has an audio apparatus slot, and the audio apparatus slot is capable of accommodating an audio apparatus. The first electronic device establishes a connection to the wearable device. The first electronic device receives, through the connection, a MAC address of the audio apparatus sent by the wearable device. The first electronic device performs pairing with the audio apparatus based on the MAC address of the audio apparatus.

The wearable device may be, for example, a smartwatch, the audio apparatus may be, for example, earphones, and the audio apparatus slot may be, for example, an earphone compartment in the watch.

According to the method in the second aspect, a mobile phone performs pairing with an all-in-one device of the watch and the earphones, and a user needs to perform only one pairing procedure. After the mobile phone completes pairing with the watch, the mobile phone may obtain the MAC address of the earphones from the watch, so that the mobile phone can automatically perform pairing with the earphones based on the MAC address of the earphones, and the user does not need to manually pair the earphones with the mobile phone.

With reference to the second aspect, in an implementation, before the first electronic device performs pairing with the wearable device, the first electronic device detects a first pairing operation.

With reference to the second aspect, in an implementation, the first pairing operation may include an operation of scanning, through a camera of the first electronic device, a graphic code that is of the wearable device and that is displayed on the wearable device.

With reference to the second aspect, in an implementation, before the first electronic device performs pairing with the wearable device, the method in the second aspect may further include: The first electronic device obtains a MAC address of the wearable device by scanning the graphic code, where the MAC address of the wearable device is used by the first electronic device to perform pairing with the wearable device.

With reference to the second aspect, in an implementation, the first pairing operation includes an operation of selecting the wearable device from a nearby device searched for by the first electronic device and adding the wearable device.

With reference to the second aspect, in an implementation, before the first electronic device performs pairing with the wearable device, the method in the second aspect may further include: The first electronic device obtains a MAC address of the nearby device by searching for the nearby device, where a MAC address of the wearable device is used by the first electronic device to perform pairing with the wearable device.

With reference to the second aspect, in an implementation, the first pairing operation may include an operation of selecting to connect to the wearable device found by the first electronic device through proximity discovery.

With reference to the second aspect, in an implementation, before the first electronic device performs pairing with the wearable device, the method may further include: The first electronic device obtains a MAC address of the wearable device through proximity discovery for the wearable device, where the MAC address of the wearable device is used by the first electronic device to perform pairing with the wearable device.

With reference to the second aspect, in an implementation, pairing between the first electronic device and the audio apparatus may be performed when the audio apparatus is located in the audio apparatus slot or after the audio apparatus is back to the audio apparatus slot.

With reference to the second aspect, in an implementation, the audio apparatus may include earphones; and that the first electronic device performs pairing with the audio apparatus based on the MAC address of the audio apparatus may specifically include:
if only a single earphone is located in the audio apparatus slot, the first electronic device performs pairing with the single earphone located in the audio apparatus slot; or
if two earphones are located in the audio apparatus slot, the first electronic device performs pairing with the two earphones located in the audio apparatus slot; or
if a single earphone or two earphones not located in the audio apparatus slot are back to the audio apparatus slot, the first electronic device performs pairing with the single earphone or two earphones back to the audio apparatus slot.

With reference to the second aspect, in an implementation, the MAC address of the audio apparatus may be obtained by the wearable device from the audio apparatus through an electrical connection formed through contact between a communication electrode in the audio apparatus slot and a communication electrode of the audio apparatus.

According to a third aspect, an embodiment of this application provides a pairing and connection method. The method may be applied to an audio apparatus, and the audio apparatus is capable of being accommodated in an audio apparatus slot of a wearable device. The method may include: The audio apparatus transmits a MAC address of the audio apparatus to the wearable device, where the MAC address of the audio apparatus is used by a first electronic device connected to the wearable device to perform pairing with the audio apparatus. The audio apparatus performs pairing with the first electronic device connected to the wearable device.

The wearable device may be, for example, a smartwatch, the audio apparatus may be, for example, earphones, and the audio apparatus slot may be, for example, an earphone compartment in the watch.

According to the method in the third aspect, the earphones transmits a MAC address of the earphones to the watch, so that the watch can be supported in performing automatic pairing with the earphones based on the MAC address, and a user does not need to manually pair the earphones with the watch. In addition, the MAC address may be further provided for the mobile phone through the watch, and the mobile phone is supported in performing automatic pairing with the earphones based on the MAC address, and the user does not need to manually pair the earphones with the mobile phone.

With reference to the third aspect, in an implementation, that the audio apparatus transmits a MAC address of the audio apparatus to the wearable device may specifically include: When the audio apparatus is located in the audio apparatus slot, the audio apparatus transmits the MAC address of the audio apparatus to the wearable device through an electrical connection formed through contact between a communication electrode of the audio apparatus and a communication electrode in the audio apparatus slot.

With reference to the third aspect, in an implementation, pairing between the audio apparatus and the first electronic device may be performed when the audio apparatus is located in the audio apparatus slot or after the audio apparatus is back to the audio apparatus slot.

With reference to the third aspect, in an implementation, the audio apparatus includes earphones; and that the audio apparatus performs pairing with the first electronic device connected to the wearable device may specifically include:
if only a single earphone is located in the audio apparatus slot, the single earphone located in the audio apparatus slot performs pairing with the first electronic device; or
if two earphones are located in the audio apparatus slot, the two earphones located in the audio apparatus slot perform pairing with the first electronic device; or
if a single earphone or two earphones not located in the audio apparatus slot are back to the audio apparatus slot, the single earphone or two earphones back to the audio apparatus slot perform pairing with the first electronic device.

With reference to the third aspect, in an implementation, the method in the third aspect may further include: The audio apparatus performs pairing with the wearable device.

With reference to the third aspect, in an implementation, pairing between the wearable device and the audio apparatus may be performed when the audio apparatus is located in the audio apparatus slot or after the audio apparatus is back to the audio apparatus slot.

With reference to the third aspect, in an implementation, the audio apparatus includes the earphones; and that the audio apparatus performs pairing with the wearable device may specifically include:
if only a single earphone is located in the audio apparatus slot, the single earphone located in the audio apparatus slot performs pairing with the wearable device; or
if the two earphones are located in the audio apparatus slot, the two earphones located in the audio apparatus slot perform pairing with the wearable device; or
if the single earphone or two earphones not located in the audio apparatus slot are back to the audio apparatus slot, the single earphone or two earphones back to the audio apparatus slot perform pairing with the wearable device.

With reference to the third aspect, in an implementation, if the audio apparatus is a new audio apparatus, a prerequisite for pairing between the audio apparatus and the wearable device may include: an old audio apparatus is not in use, where the old audio apparatus is an audio apparatus whose pairing information is in the wearable device.

With reference to the third aspect, in an implementation, that an old audio apparatus is not in use may include: the old audio apparatus is located in the audio apparatus slot, or the old audio apparatus is not located in the audio apparatus slot but is not connected to an electronic device, or the old audio apparatus is not located in the audio apparatus slot, and is connected to an electronic device, but is not engaged in an audio service.

According to a fourth aspect, an embodiment of this application further provides a wearable device. The wearable device may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform the method provided in the first aspect.

According to a fifth aspect, an embodiment of this application further provides an electronic device. The electronic device may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform the method provided in the second aspect.

According to a fifth aspect, an embodiment of this application further provides an audio apparatus. The audio apparatus may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform the method provided in the third aspect.

According to a sixth aspect, an embodiment of this application further provides a communication system. The communication system may include a wearable device and an audio apparatus. The wearable device may be the wearable device described in the fourth aspect, and the audio apparatus may be the audio apparatus described in the sixth aspect.

According to a seventh aspect, an embodiment of this application further provides a communication system. The communication system may include a wearable device, an audio apparatus, and an electronic device. The wearable device may be the wearable device described in the fourth aspect, the audio apparatus may be the audio apparatus described in the sixth aspect, and the electronic device may be the electronic device described in the fifth aspect.

According to an eighth aspect, an embodiment of this application further provides a computer-readable storage medium. The readable storage medium stores instructions. When the instructions are run on a computer, the computer is enabled to perform the method described in the first aspect.

According to a ninth aspect, an embodiment of this application further provides a computer-readable storage medium. The readable storage medium stores instructions. When the instructions are run on a computer, the computer is enabled to perform the method described in the second aspect.

According to a tenth aspect, an embodiment of this application further provides a computer-readable storage medium. The readable storage medium stores instructions. When the instructions are run on a computer, the computer is enabled to perform the method described in the third aspect.

According to an eleventh aspect, an embodiment of this application provides a method of performing automatic pairing between a watch and earphones. The method may include the following steps. Step 2-S1: The watch determines whether two earphones are in position. If the two earphones are in position, step 2-S2 may be performed. If only a single earphone is in position, step 2-S3 may be performed. If the two earphones are out of position, step 2-S4 may be performed. Step 2-S2: The watch performs pairing with the two earphones. Step 2-S3: The watch performs pairing with the single in-position earphone, that is, pairing between the single earphone and the watch is supported. If it is detected later that the other earphone that is out of position is back to position (that is, the earphone becomes "in position"), the watch may perform automatic pairing with the earphone. Step 2-S4: Because the two earphones are out of position, the watch ends a pairing procedure, and pairing between the watch and the earphones fails. If it is detected later that the two earphones or the single earphone is back to position, the watch may perform automatic pairing with the two back-to-position earphones or the single back-to-position earphone. For details, refer to step 2-S2 and step 2-S3, respectively.

It can be learned that pairing between the watch and the earphones does not need to be triggered by a user, and may be automatically performed by the watch. For example, when the watch is powered on for the first time or is restored to factory settings, pairing between the watch and the earphones may be automatically triggered. Other scenarios in which automatic pairing between the watch and the earphones is triggered, for example, a new earphone is placed in a compartment, and the watch resets earphones, are further mentioned in the following embodiments. After pairing succeeds, a "fixed connection (or an inherent connection)" can be formed between the watch and the earphones. Specifically, the connection may be established when the earphones are removed from a compartment.

In addition, a basic principle of automatic pairing between the watch and the earphones includes: 1. A condition for the watch to perform pairing with the two earphones is that the two earphones are in position. 2. Pairing between a single earphone and the watch is supported. 3. When an earphone is back to position, automatic pairing is performed between the watch and the earphones.

According to a twelfth aspect, an embodiment of this application further provides a method of one-time pairing of an entire device. The method may include the following steps. Step 2-S11: Automatic pairing is performed between a watch and earphones. Refer to the foregoing method of automatic pairing between the watch and the earphones. Details are not described herein again. Step 2-S12: A mobile phone receives a "one-time pairing operation". Here, the "one-time pairing operation" may include but is not limited to the pairing operations in the foregoing three UI manners. "One-time" does not mean one action, but means that a user only needs to implement a one-time pairing procedure. The "one-time pairing operation" may be a series of actions, for example, a series of actions of first opening a QR code and then scanning the QR code in "scanning a QR code". Step 2-S13: The mobile phone performs pairing with the watch in response to the "one-time pairing operation". Step 2-S14: The mobile phone establishes a connection to the watch. Step 2-S15: The earphones perform automatic pairing with the mobile phone.

Pairing results of the earphones and the mobile phone may be presented as follows: If two earphones are in position, the two earphones are paired with the mobile phone. If only a single earphone is in position, only the single earphone is paired with the mobile phone. If the two earphones are out of position, pairing ends first, and a pairing result is that the two earphones are not paired with the mobile phone. The single earphone (two earphones) paired with the mobile phone may establish a connection to the mobile phone when being removed from a compartment, so that the user can use the earphone to play audio on the mobile phone or answer an incoming call of the mobile phone at any time. The earphone not paired with the mobile phone may perform pairing with the mobile phone after the earphone is back to position. Here, pairing between the back-in-position earphone and the mobile phone is also "automatically" performed, and does not need to be triggered by the user.

It can be learned that one-time pairing of the entire device of the watch and the earphones can help the user complete pairing between the watch, the earphones, and the mobile phone "at one time", and support the foregoing connection manner of a "triangular connection". "One-time" mainly means that a user pairing procedure is simple and efficient, and may be represented as follows: For the user, the watch and the earphones may be sensed as one device to perform pairing with the mobile phone, and only one pairing procedure needs to be performed. A pairing procedure between the watch and the earphones, a pairing procedure between the watch and the mobile phone, and a pairing procedure between the earphones and the mobile phone do not need to be performed one by one.

In addition, a basic principle of one-time pairing of the entire device may include: 1. Pairing between the watch, the earphones, and the mobile phone is completed in one pairing procedure. 2. When the two earphones are out of position, pairing between only the watch and the mobile phone is supported. 3. When a single earphone is out of position, pairing between the single earphone and the mobile phone is supported. 4. When an earphone is back to position, automatic pairing is performed on the earphone.

According to a thirteenth aspect, an embodiment of this application further provides a method for earphones to independently perform pairing with a mobile phone. The method may include the following steps. Step 2-S35: A watch receives a specific user operation to control the earphones to enter a pairing state. The specific user operation may be, for example, an operation of opening the watch and touching and holding a function button of the watch. Step 2-S36: After the specific user operation, the watch may receive a notification sent by the earphones, to learn that the earphones are in the pairing state. Step 2-S37: The watch may give, in a manner such as vibration, a user a prompt that the earphones are in the pairing state. Step 2-S38: After the earphones are in the pairing state, a mobile phone B may find the earphones that are approaching and in the pairing state, and display a proximity discovery pop-up window. Step 2-S39: The mobile phone B detects an operation of connecting to the earphones. That is, the user performs the operation of connecting the earphones on the mobile phone B. Step 2-S40: The mobile phone B performs pairing with the earphones. Step 2-S41: The mobile phone B establishes a connection to the earphones.

In this way, the earphones are connected to the mobile phone B. When the watch and the earphones are both originally connected to a mobile phone A, a "U-shaped connection" is formed among the watch, the earphones, the mobile phone A, and the mobile phone B. The previous connection between the earphones and the mobile phone A may be changed to a virtual connection or disconnected.

At step 2-S36, a connection between the watch and the earphones is a prerequisite because the notification needs to be transmitted through the communication connection between the watch and the earphones. The communication connection may be a wireless communication connection (for example, a Bluetooth connection) established between the earphones and the watch, or may be an electrical connection formed through contact between a communication electrode in an earphone compartment and a communication electrode of the earphones. The former is applicable to a product form in which the earphones are removed from the compartment when the watch is opened, that is, the earphones are attracted to a watch cover of the watch. The latter is applicable to a product form in which the earphones are still in position when the watch is opened, that is, the earphones are not attracted to the watch cover of the watch.

A single earphone being connected to a new mobile phone is supported. If only one earphone is in position in the watch, the user opens the watch and presses and holds the function button, for example, presses and holds the function button for 2 seconds, to trigger the single earphone to enter the pairing state. The mobile phone B displays a proximity discovery pop-up window, to prompt the user to connect the mobile phone B and the single earphone. In this way, the single earphone may independently perform pairing with the mobile phone B.

When the earphone is used by an old mobile phone, the earphone is not allowed to independently perform pairing with a new mobile phone, to ensure that an ongoing audio service on the old mobile phone is not affected. After the watch receives the specific user operation, the watch may first determine whether the earphone is being used by the old mobile phone. If the earphone is being used by the old mobile phone, the watch does not trigger the earphone to enter the pairing state, does not support the earphone in performing pairing with the new mobile phone, and may give the user a prompt.

It can be learned that the earphone independently performs pairing with a mobile phone, so that the earphone and the watch can be respectively connected to different mobile phones, to form a "U-shaped connection". If the earphone supports a plurality of connections, when the earphone independently performs pairing with the mobile phone, a physical connection between the earphone and the old mobile phone may be converted into a virtual connection, and a "2+1 connection" and the like may be supported. Not limited to the mobile phone, the watch and the earphones may alternatively perform pairing with another type of electronic device, for example, a tablet computer or a large-screen device.

According to a fourteenth aspect, an embodiment of this application further provides a method for pairing new earphones in a compartment. The method may include the following steps:
In one case, the following steps are performed. Step 2-S51: A watch may detect that two new earphones are placed in compartments. Step 2-S52: The watch may determine whether old earphones are in use. If the old earphones are not in use, step 2-S53 is performed; otherwise, pairing is abandoned, and this procedure is exited. Step 2-S53: The watch may query a user whether to agree to pair the two new earphones, and if the user agrees to pair the two new earphones, step 2-S54 and step 2-S55 are performed; otherwise, pairing is abandoned, and this procedure is exited. Alternatively, the watch may directly start pairing with the two new earphones without querying the user. Step 2-S54: Pairing between the two new earphones and the watch is performed. Step 2-S55: Pairing between the two new earphones and a mobile phone is performed.

The mobile phone may be a mobile phone paired with and connected to the watch. The watch may send device information such as MAC addresses of the two new earphones to the mobile phone, and the mobile phone uses the MAC addresses to perform pairing with the two new earphones. In this way, the two new earphones and the watch are paired with the same mobile phone, to support a "triangular connection" between the two new earphones, the watch, and the mobile phone. Certainly, the watch may alternatively not be connected to any mobile phone. In this case, step 2-S55 is not performed, and only automatic pairing between the watch and the new earphones is first performed.

In another case, the following steps are performed. Step 2-S61: A watch may detect that a single new earphone is in a compartment. Step 2-S62: The watch may determine whether old earphones are in use. If the old earphones are not in use, step 2-S63 is performed; otherwise, pairing is abandoned, and this procedure is exited. Step 2-S63: The watch may determine whether there is one old earphone in the compartment, and if there is one old earphone in the compartment, step 2-S68 is performed; otherwise, step 2-S64 is performed. Step 2-S64: The watch may detect whether a user places another earphone, and if the user places the another earphone, step 2-S68 is performed; otherwise, step 2-S65 is performed. Step 2-S65: The watch may query the user whether to agree to pair the single new earphone, and if the user agrees to pair the single new earphone, step 2-S66 and step 2-S67 are performed; otherwise, pairing is abandoned, and this procedure is exited. Step 2-S66: Pairing between the single new earphone and the watch is performed. Step 2-S67: Pairing between the single new earphone and a mobile phone is performed. The mobile phone may be a mobile phone paired with and connected to the watch. The watch may send device information such as a MAC address of the single new earphone to the mobile phone, and the mobile phone uses the MAC address to perform pairing with the single new earphone. In this way, the single new earphone and the watch are paired with the same mobile phone, to support a "triangular connection" between the single new earphone, the watch, and the mobile phone. Certainly, the watch may alternatively not be connected to any mobile phone. In this case, step 2-S67 is not performed. Step 2-S68: The watch may query the user whether to agree to pair two earphones with the watch, and if the user agrees to pair the two earphones with the watch, step 2-S69 is performed; otherwise, pairing is abandoned, and this procedure is exited. Alternatively, the watch may directly trigger automatic pairing between the watch and the earphones without querying the user. Step 2-S69: The watch may control the two earphones in the watch to be restored to factory settings. Step 2-S70: After restoring to factory settings is performed, the watch performs automatic pairing with the two earphones. After pairing is completed, the watch obtains device information such as MAC addresses of the two earphones and sends the device information to a mobile phone connected to the watch, so that the mobile phone can perform pairing with the two earphones based on the MAC addresses (step 2-S71), and the user does not need to trigger pairing between the mobile phone and the two earphones. Step 2-S71: Pairing between the two earphones and the mobile phone is performed. After pairing is completed, a "triangle connection" may be formed between the two earphones, the watch, and the mobile phone. Certainly, the watch may alternatively not be connected to any mobile phone. In this case, step 2-S71 is not performed, and only automatic pairing between the watch and the new earphone is first performed.

After pairing of the new earphone is completed, if the watch detects that an old earphone is placed in a compartment, the old earphone may be considered as a new earphone, and the foregoing procedure for pairing the new earphone in the compartment is performed. Because the new earphone is paired with the watch, the watch no longer retains pairing information of the old earphone, and then the old earphone is considered as a new earphone by the watch after the old mobile phone is placed in the compartment.

According to a fifteenth aspect, an embodiment of this application further provides a method for an entire device of a watch and earphones to change a mobile phone for pairing. The method may include the following steps. Step 2-S80: The watch may detect an operation of the entire device of the watch and the earphones changing the mobile phone. Step 2-S82: The watch may perform earphone in-position detection. A detection result may be classified into the following cases: Two earphones are in position, the two earphones are out of position, and only a single earphone is in position.

When the two earphones are in position, the method may further include step 2-S83: The entire device of the watch and the earphones performs one-time pairing with a new mobile phone. For details, refer to the above "one-time pairing of the entire device". The only difference is that the mobile phone is a new mobile phone for the watch.

When the two earphones are out of position, the method may further include the following steps. Step 2-S84: Only the watch performs pairing with a new mobile phone. Step 2-S85: It is detected that an earphone is back to position. A detection result may include the following two cases: The two earphones are back to position, and a single earphone is back to position. Step 2-S86: Automatic pairing between the back-to-position earphone and the new mobile phone is performed. If only the single earphone is back to position, whether the other earphone that is not back to position is paired with another mobile phone can be further considered. Specifically, if the other earphone that is not back to position is not paired with the another mobile phone, the single back-to-position earphone may perform automatic pairing with the new mobile phone. This does not cause confusion to the user due to the two earphones being connected to different mobile phones later. If the other earphone that is not back to position has been connected to the another mobile phone, pairing of the single back-to-position earphone may be performed in the following manners to avoid the two earphones to be connected to the different mobile phones. Manner 1: The single back-to-position earphone is not allowed to perform automatic pairing with the new mobile phone. Manner 2: When the other earphone that is not back to position is disconnected from the another mobile phone, the single back-to-position earphone is allowed to perform automatic pairing with the new mobile phone, but the other earphone that is not back to position is not allowed to be reconnected to the another mobile phone later, and after the other earphone that is not back to position is back to position, the other earphone may also be automatically paired with the new mobile phone following the watch. If the other earphone that is not back to position is connected to the another mobile phone, the single back-to-position earphone is not allowed to perform automatic pairing with the new mobile phone.

When only the single earphone is in position, the method may further include the following steps. Step 2-S87: Only the single in-position earphone is paired with a new mobile phone following the watch. Specifically, pairing is first performed between the watch and the new mobile phone, and then pairing is performed between the single in-position earphone and the new mobile phone. Step 2-S88: It is detected that the other earphone is back to position. Step 2-S89: Automatic pairing between the back-to-position earphone and the new mobile phone is performed.

According to a sixteenth aspect, an embodiment of this application further provides a wearable device. The wearable device may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform a function on a wearable device (for example, a watch) side in the method provided in any one of the eleventh aspect to the fifteenth aspect.

According to a seventeenth aspect, this application provides a wireless audio apparatus. The wireless audio apparatus may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform a function on a wireless audio apparatus (for example, earphones) side in the method provided in any one of the eleventh aspect to the fifteenth aspect.

According to an eighteenth aspect, this application provides an electronic device. The electronic device may include a memory, and a processor and a transceiver that are coupled to the memory. The transceiver is configured to communicate with another communication device. The memory is configured to store code for implementing the pairing and connection method provided in this application. The processor is configured to execute the program code stored in the memory, that is, perform a function on an electronic device (for example, a mobile phone) side in the method provided in any one of the eleventh aspect to the fifteenth aspect.

According to a nineteenth aspect, a communication system is provided. The communication system includes a wearable device and a wireless audio apparatus, and the foregoing "fixed connection" may be formed between the wearable device and the wireless audio apparatus. The wearable device may be the wearable device described in the sixteenth aspect, and the wireless audio apparatus may be the audio apparatus described in the seventeenth aspect.

According to a twentieth aspect, a communication system is provided. The communication system includes a wearable device, a wireless audio apparatus, and a first electronic device, and the foregoing "triangular connection" may be formed between the wearable device, the wireless audio apparatus, and the first electronic device. The wearable device may be the wearable device described in the sixteenth aspect, the wireless audio apparatus may be the audio apparatus described in the seventeenth aspect, and the electronic device may be the electronic device described in the eighteenth aspect.

According to a twenty-first aspect, a communication system is provided. The communication system includes a wearable device, a wireless audio apparatus, a first electronic device, and a second electronic device. The foregoing "U-shaped connection" may be formed among the wearable device, the wireless audio apparatus, the first electronic device, and the second electronic device. The wearable device may be the wearable device described in the sixteenth aspect, the wireless audio apparatus may be the audio apparatus described in the seventeenth aspect, the first electronic device may be an electronic device connected to the wearable device, and the second electronic device may be an electronic device connected to the audio apparatus. The first electronic device and the second electronic device each may be the electronic device described in the eighteenth aspect.

According to a twenty-second aspect, a computer-readable storage medium is provided. The readable storage medium stores instructions. When the instructions are run on a computer, the computer is enabled to perform a function on a wearable device side in the method provided in any one of the eleventh aspect to the fifteenth aspect.

According to a twenty-third aspect, another computer-readable storage medium is provided. The readable storage medium stores instructions. When the instructions are run on a computer, the computer is enabled to perform a function on a wireless audio apparatus side in the method provided in any one of the eleventh aspect to the fifteenth aspect.

According to a twenty-fourth aspect, another computer-readable storage medium is provided. The readable storage medium stores instructions. When the instructions are run on a computer, the computer is enabled to perform a function on an electronic device side in the method provided in any one of the eleventh aspect to the fifteenth aspect. The electronic device may include the first electronic device and the second electronic device.

### BRIEF DESCRIPTION OF DRAWINGS

To describe the technical solutions in embodiments of this application or in the background more clearly, the following describes the accompanying drawings for describing embodiments of this application or the background.
FIG. 1 to FIG. 4 show examples of a wearable device including a wireless audio apparatus;
FIG. 5A to FIG. 5G are diagrams of some charging scenarios according to an embodiment of this application;
FIG. 6A to FIG. 6G are diagrams of some power-on scenarios according to an embodiment of this application;
FIG. 7A to FIG. 7G are diagrams of some power-off scenarios according to an embodiment of this application;
FIG. 8A to FIG. 8S are diagrams of some scenarios of restoring to factory settings according to an embodiment of this application;
FIG. 9 is a diagram of a restart scenario according to an embodiment of this application;
FIG. 10A to FIG. 10U and FIG. 11 to FIG. 15 are diagrams of some upgrade scenarios according to an embodiment of this application;
FIG. 16 is a flowchart of a device management method in an upgrade scenario according to an embodiment of this application;
FIG. 17 shows an example of a "triangular connection" formed between a watch, earphones, and a mobile phone;
FIG. 18 shows an example of a "U-shaped connection" formed among a watch, earphones, and a mobile phone;
FIG. 19 shows an example of a "fixed connection" formed between a watch and earphones;
FIG. 20 shows an example of a "2+1 connection" formed among a watch, earphones, and a mobile phone;
FIG. 21 briefly shows an overall procedure of automatic pairing between a watch and earphones;
FIG. 22 shows an example of a watch-side UI in "scanning for pairing";
FIG. 23 shows an example of a mobile phone-side UI in "scanning for pairing";
FIG. 24 shows an example of a mobile phone-side UI in "proximity discovery";
FIG. 25 shows an example of a watch-side UI in "proximity discovery";
FIG. 26 shows an example of a watch-side UI in "manual adding for pairing";
FIG. 27 shows an example of a mobile phone-side UI in "manual adding for pairing";
FIG. 28A briefly shows an overall procedure of one-time pairing of an entire device;
FIG. 28B-1 and FIG. 28B-2 show a detailed implementation procedure of pairing between a watch, earphones, and a mobile phone;

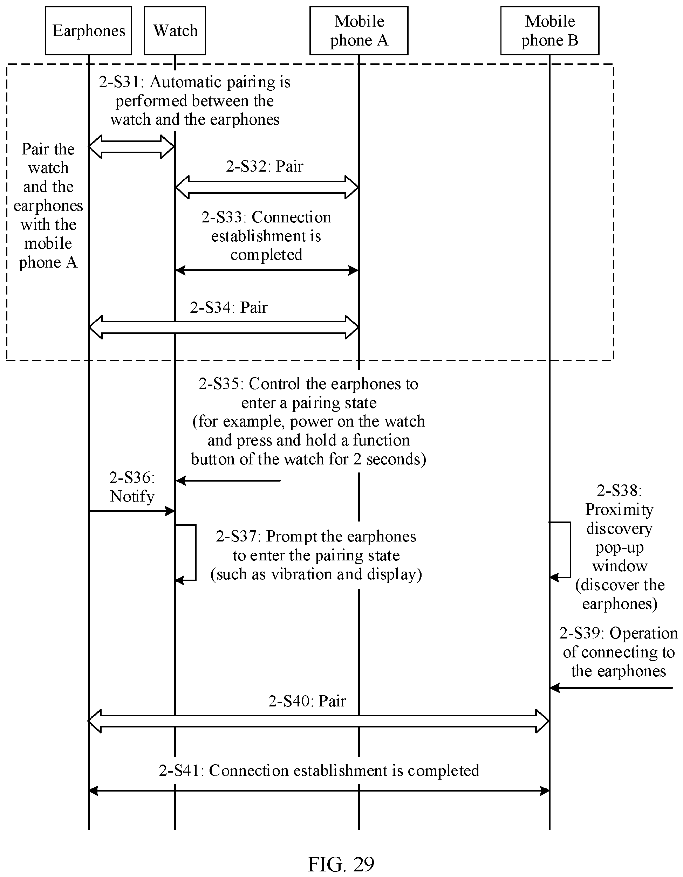

FIG. 29 briefly shows an overall procedure of independently pairing earphones with a mobile phone;

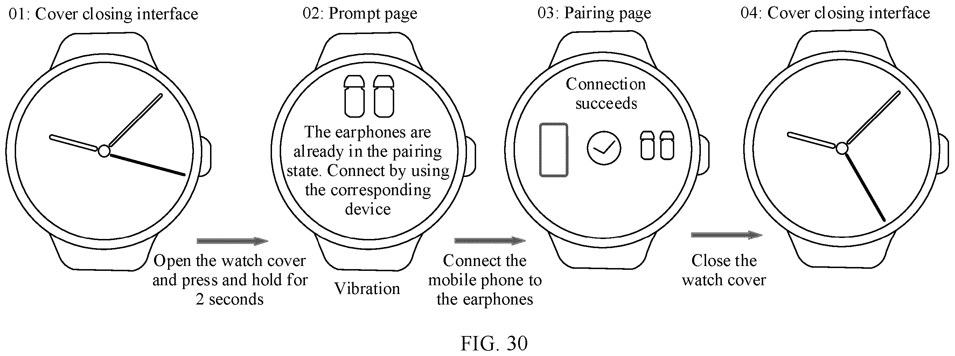

FIG. 30 shows an example of a watch-side UI in a case in which earphones independently perform pairing with a mobile phone;

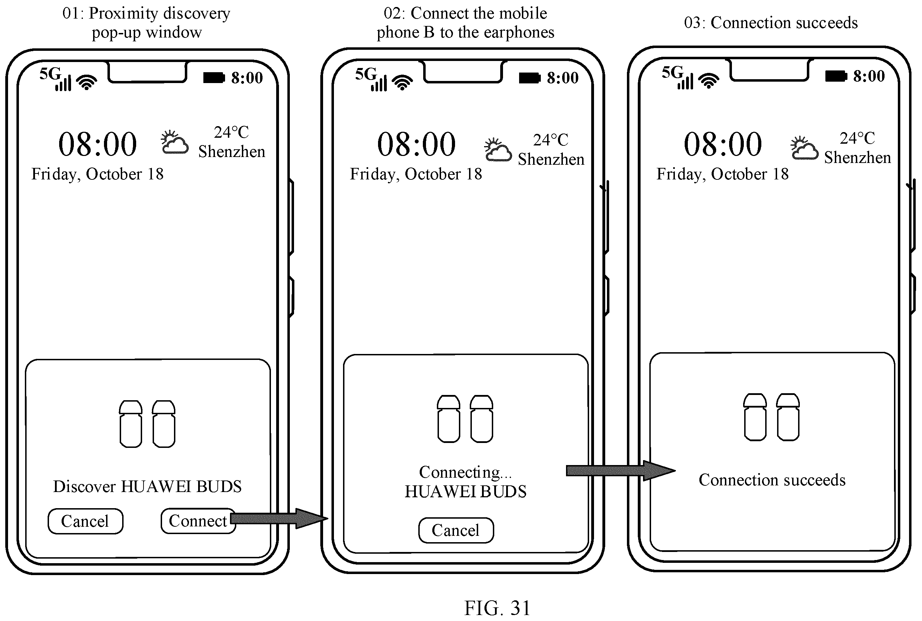

FIG. 31 shows an example of a mobile phone-side UI in a case in which earphones independently perform pairing with a mobile phone;

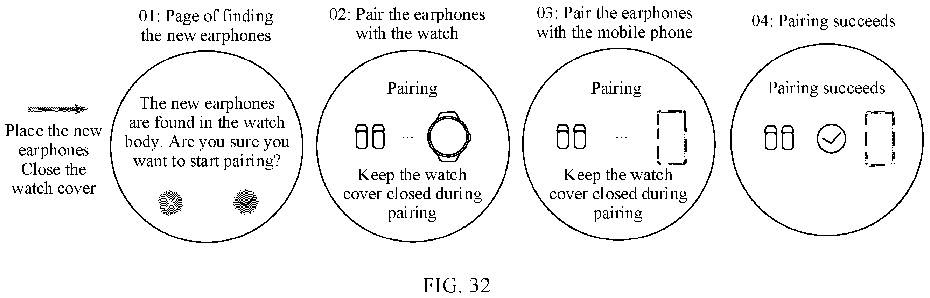

FIG. 32 shows an example of a watch-side UI in a case in which a new earphone is placed in a compartment;

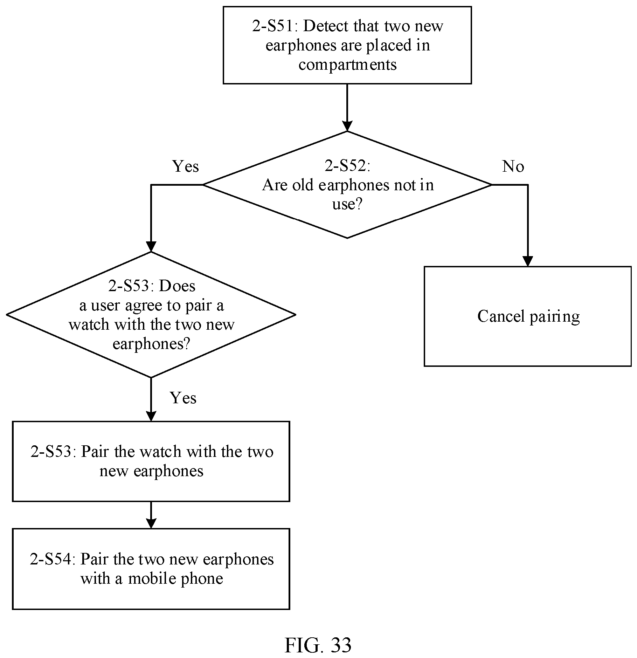

FIG. 33 briefly shows a pairing procedure triggered when two new earphones are placed in compartments;

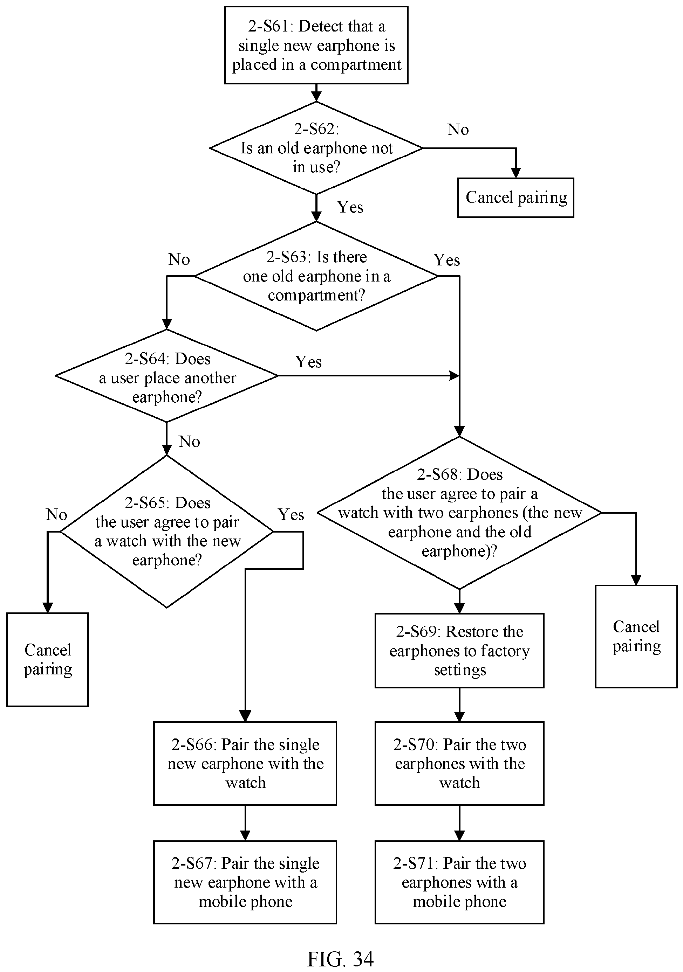

FIG. 34 briefly shows a pairing procedure triggered when a single new earphone is placed in a compartment;

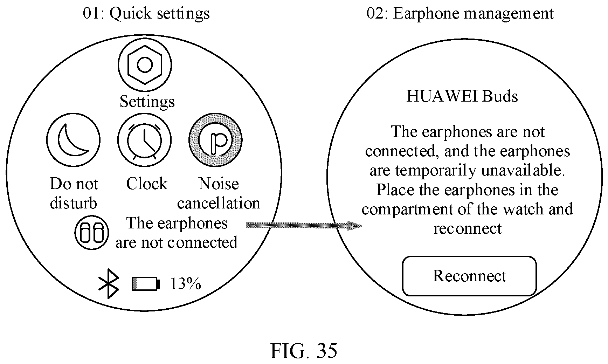

FIG. 35 shows an example of a function that is of manual pairing a new earphone and that is provided through "Quick settings" and "Earphone management" of a watch;

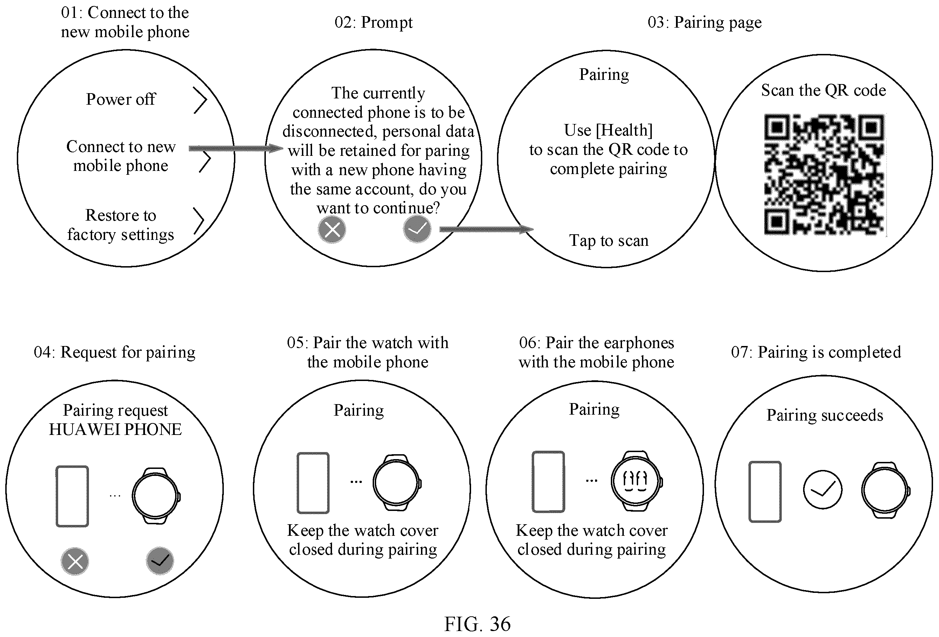

FIG. 36 shows an example of a watch-side UI in a case in which an entire device changes a mobile phone;

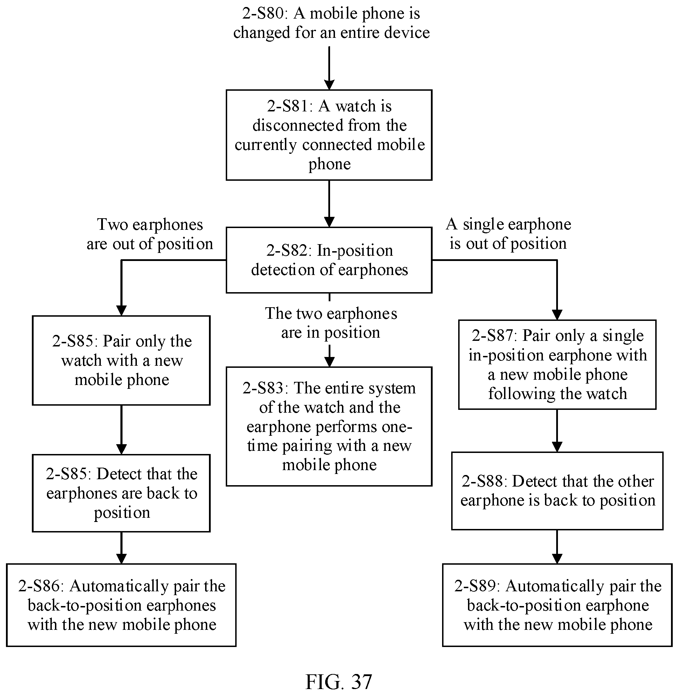

FIG. 37 briefly shows an overall procedure of an entire device of a watch and earphones changing a mobile phone;

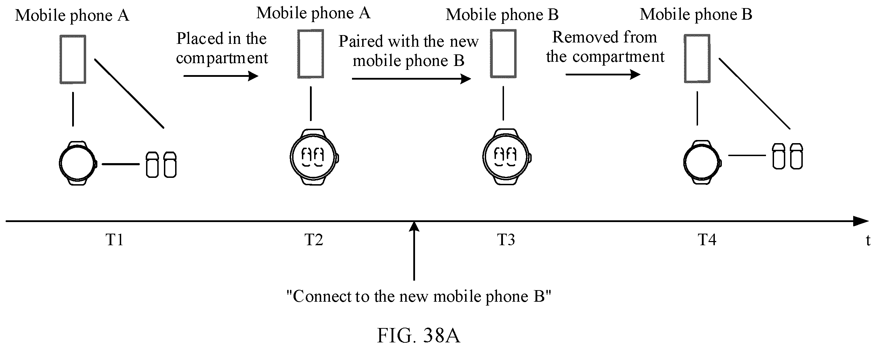

FIG. 38A shows an example of a case in which a watch and earphones are paired with a mobile phone A changing to a case in which the watch and the earphones are paired with a mobile phone B;

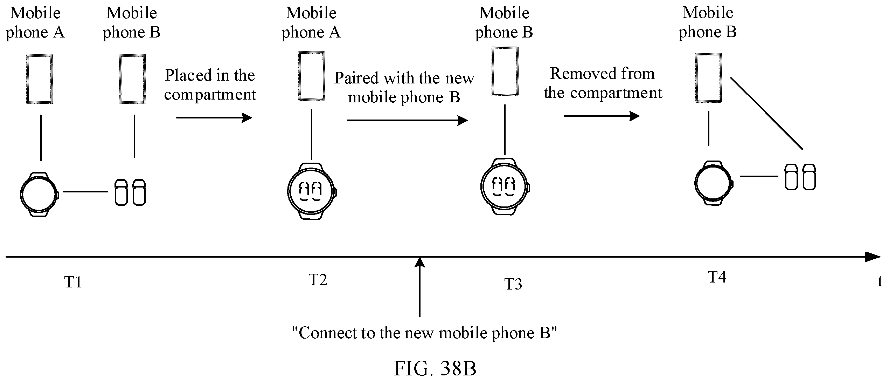

FIG. 38B shows an example of a case in which a watch and earphones are respectively paired with a mobile phone A and a mobile phone B changing to a case in which the watch and the earphones are paired with the mobile phone B;

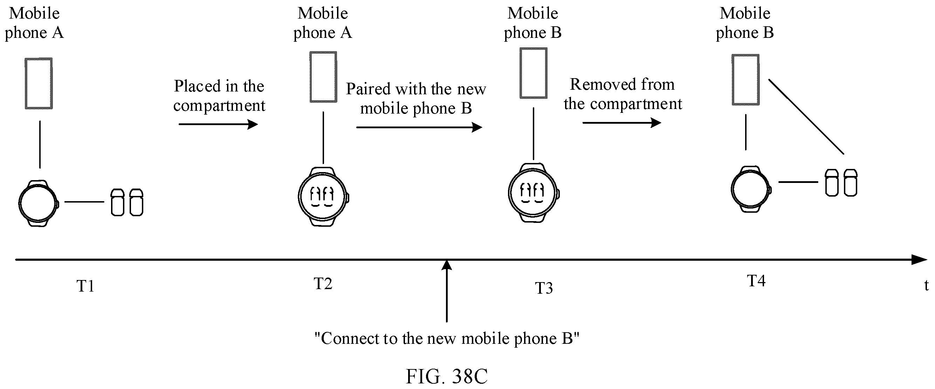

FIG. 38C shows an example of a case in which only a watch is paired with a mobile phone A but earphones are not paired with the mobile phone changing to a case in which the watch and the earphones are paired with a mobile phone B;

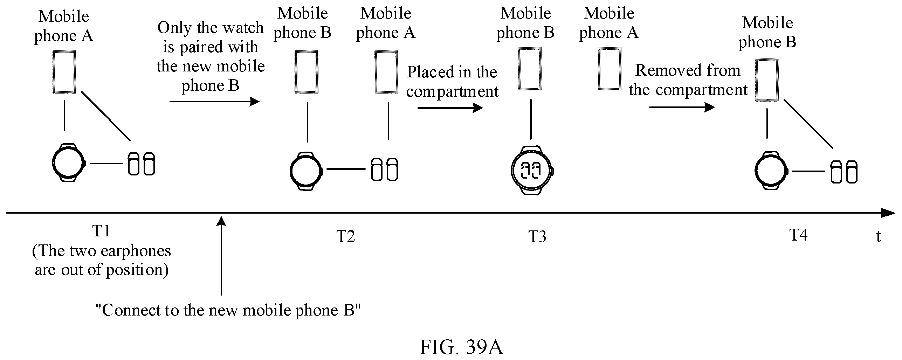

FIG. 39A shows an example in which two back-to-position earphones are automatically paired with a new mobile phone B following a watch;

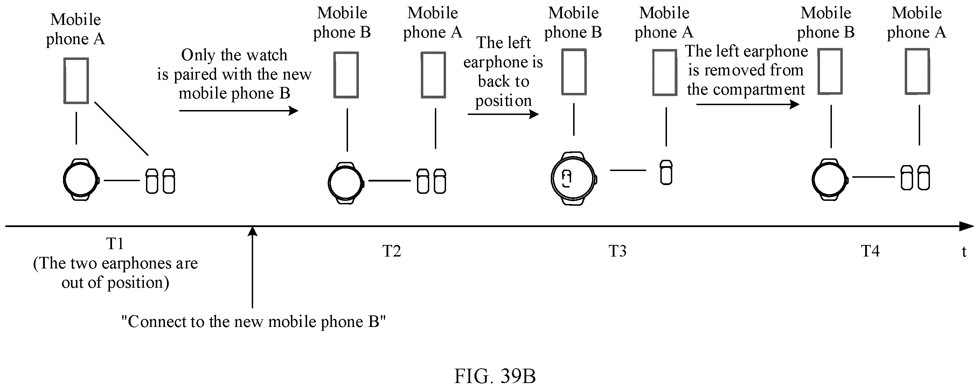

FIG. 39B shows an example in which when a single earphone that is not back to position is connected to a mobile phone A, a single back-to-position earphone is not automatically paired with a new mobile phone B following a watch;

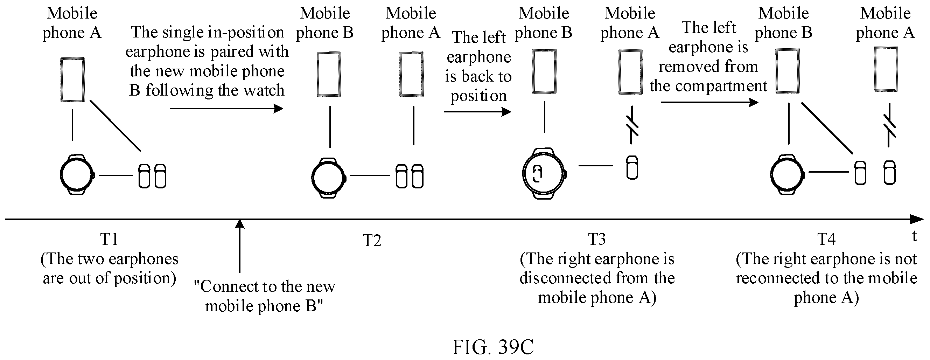

FIG. 39C shows an example in which when a single earphone that is not back to position is disconnected from a mobile phone A, a single back-to-position earphone is allowed to be automatically paired with a new mobile phone B following a watch;

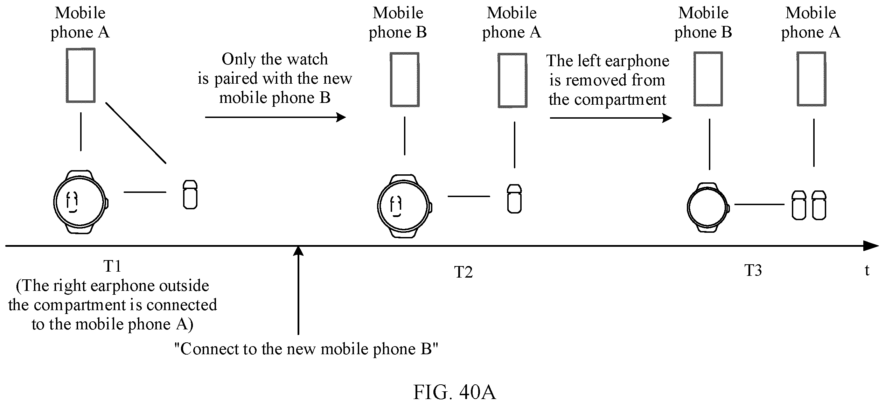

FIG. 40A shows an example in which when a single earphone is in position and a single out-of-position earphone is connected to a mobile phone A, the single in-position earphone is not paired with a new mobile phone B following a watch;

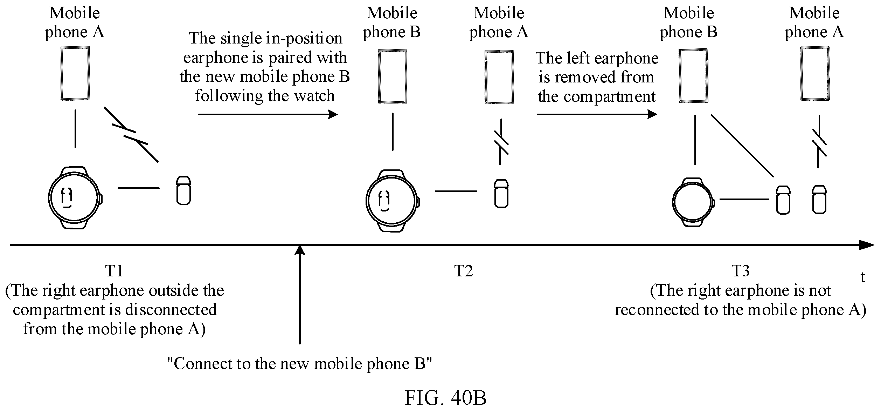

FIG. 40B shows an example in which when a single earphone is in position and a single out-of-position earphone is disconnected from a mobile phone A, the single in-position earphone is allowed to be paired with a new mobile phone B following a watch;

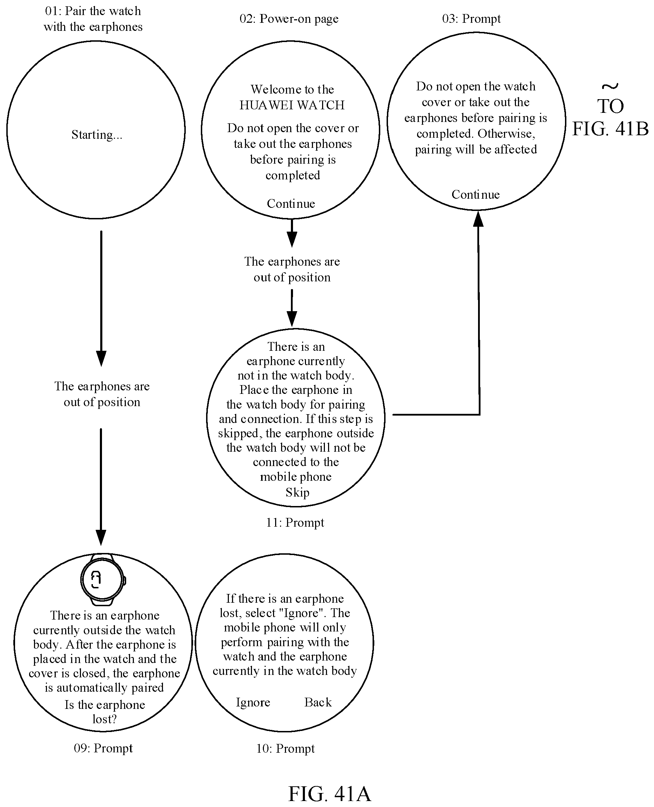

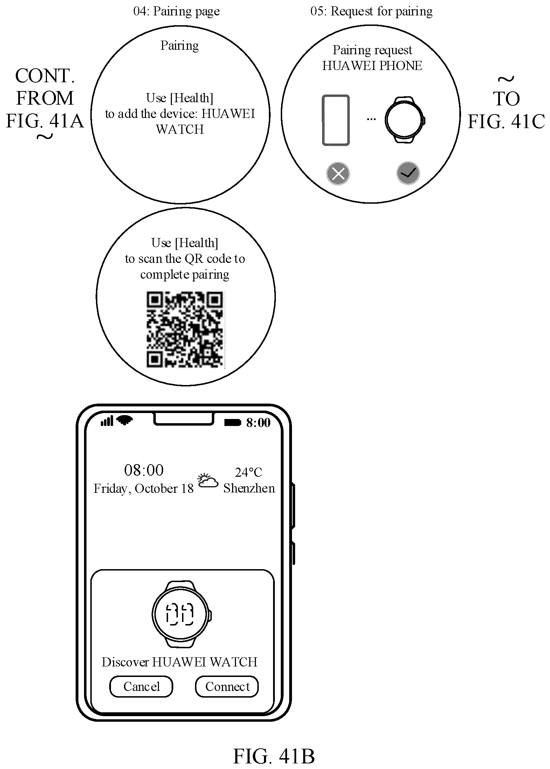

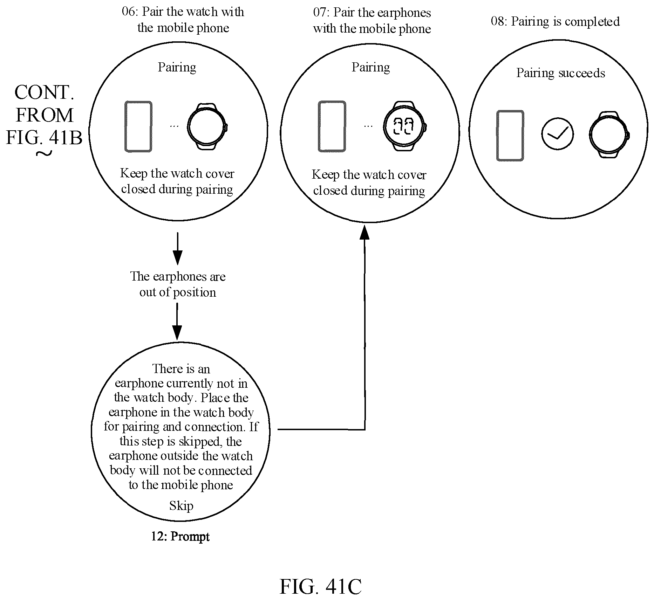

FIG. 41A to FIG. 41C show an example of a watch-side UI during first pairing;

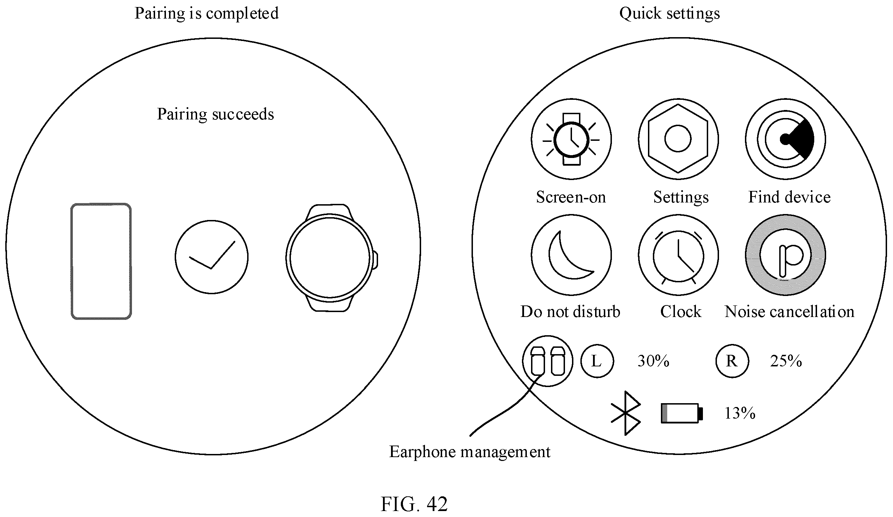

FIG. 42 shows an example of a "Quick settings" user interface;

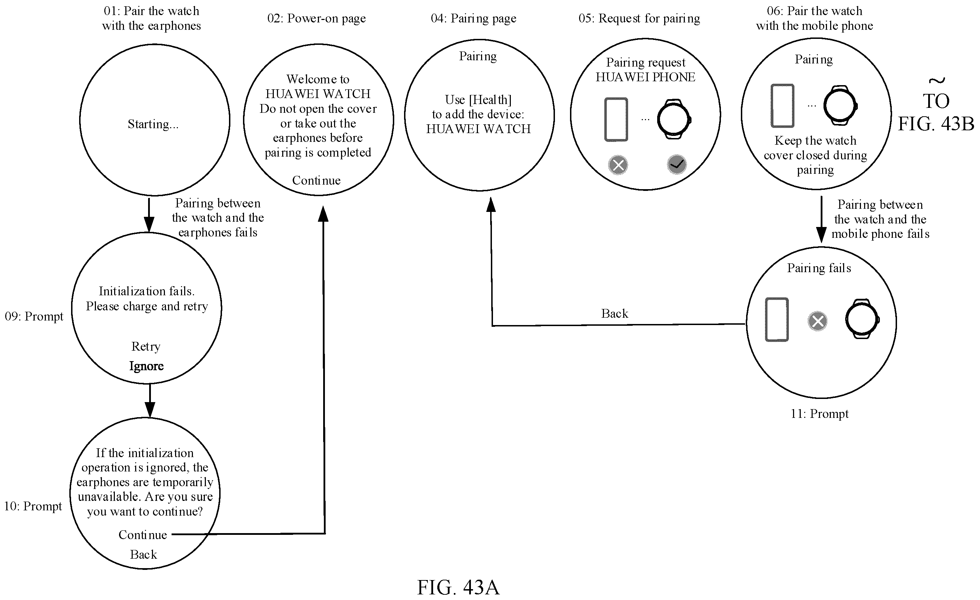

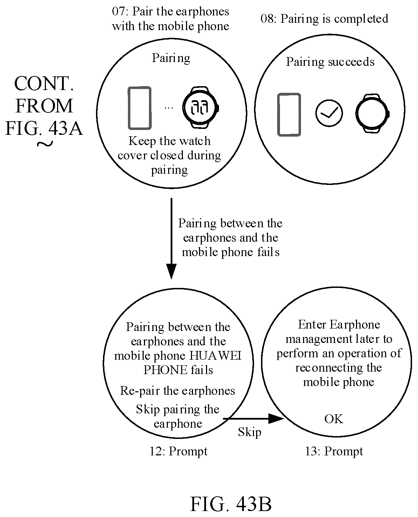

FIG. 43A and FIG. 43B show an example of a user interface in which pairing between a watch and earphones fails;

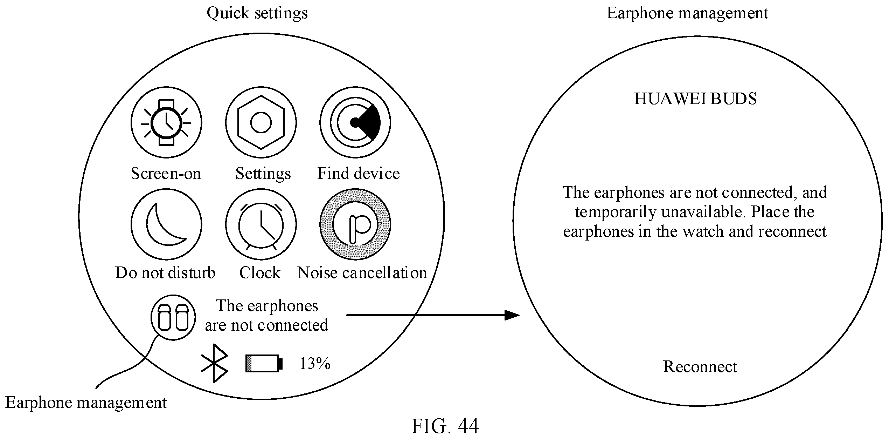

FIG. 44 shows an example of a user interface in which a watch prompts, after pairing between the watch and earphones fails, a user to re-pair the watch and the earphones;

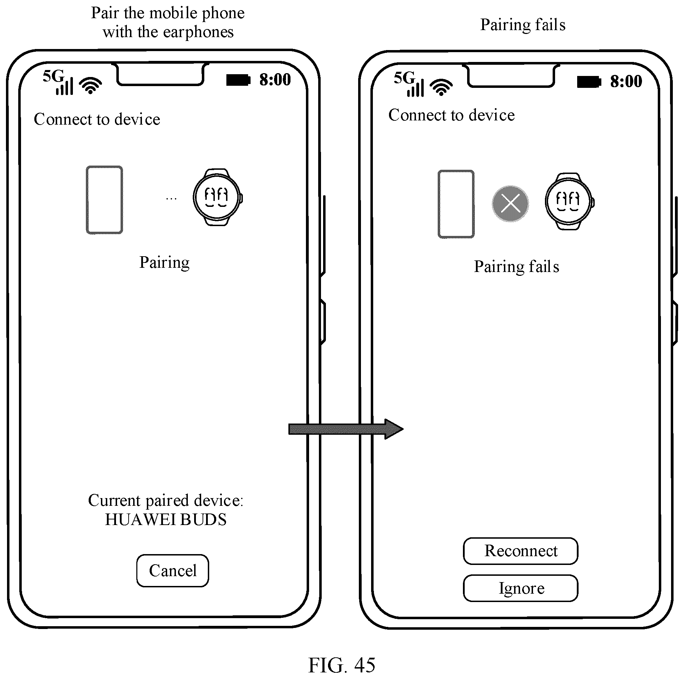

FIG. 45 shows an example of a user interface in which a mobile phone prompts, after pairing between earphones and the mobile phone fails, a user to re-pair the earphones with the mobile phone;

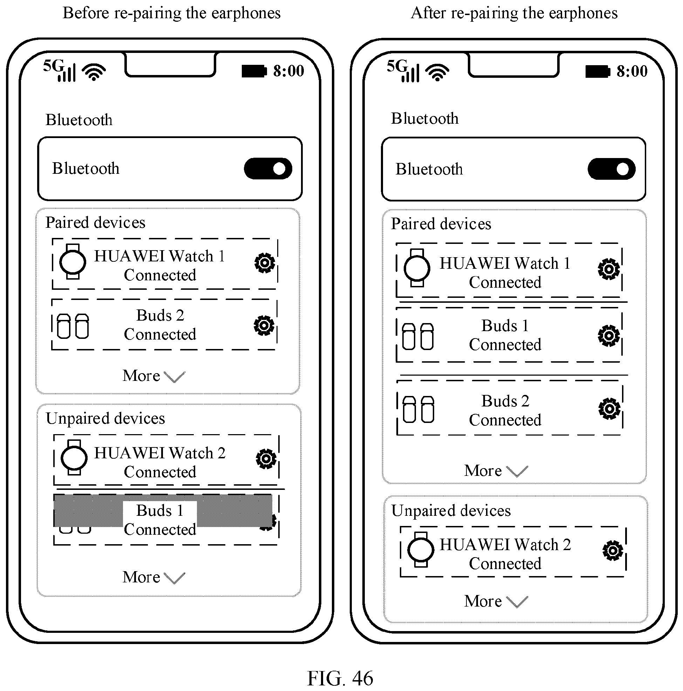

FIG. 46 shows an example of a "System Bluetooth" user interface of a mobile phone after a failure of pairing between earphones and the mobile phone;

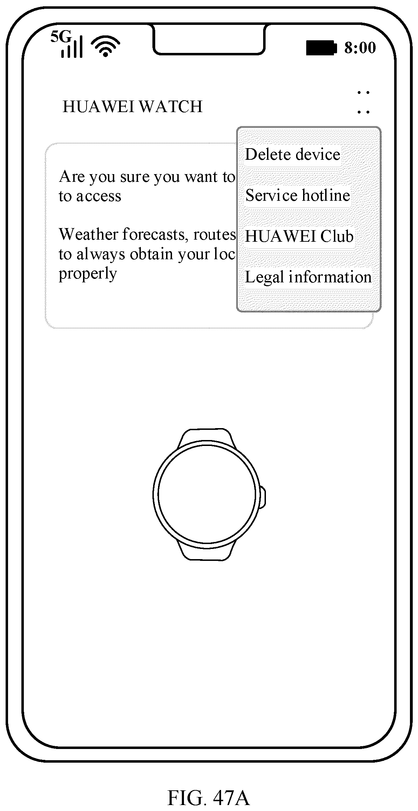

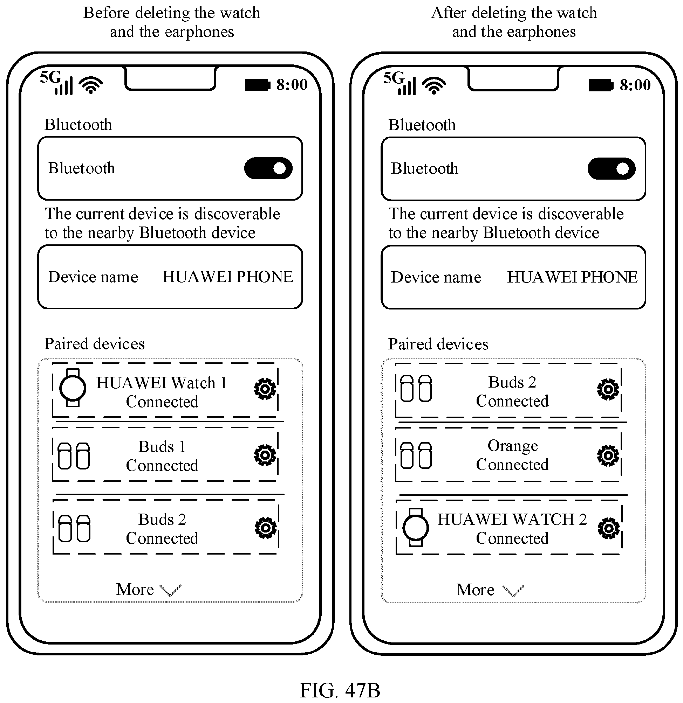

FIG. 47A and FIG. 47B show an example of concurrent deletion of a watch and earphones;

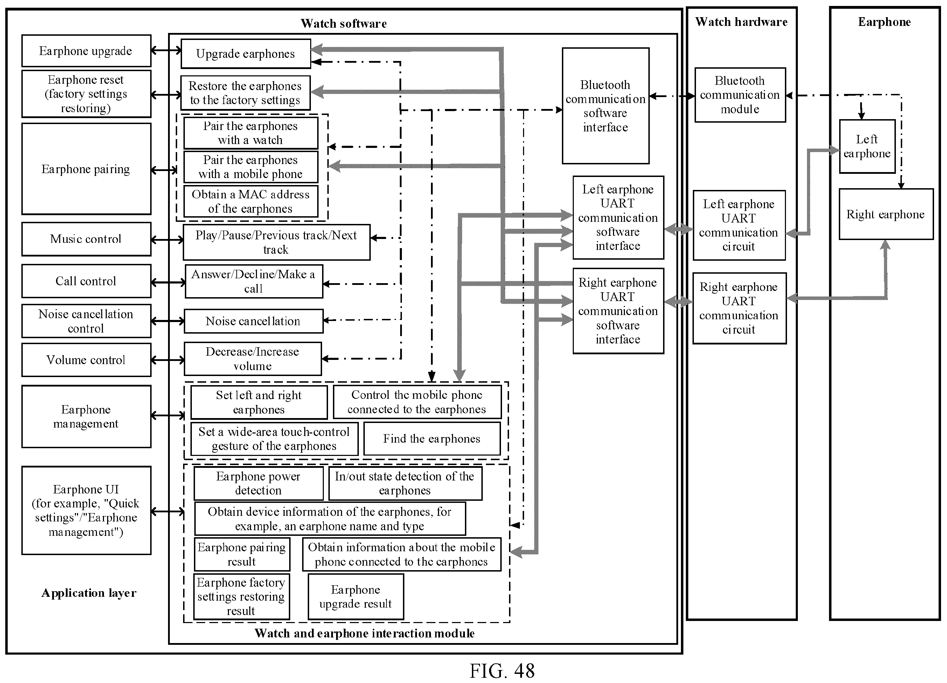

FIG. 48 shows an example of a software architecture of a watch and earphones;

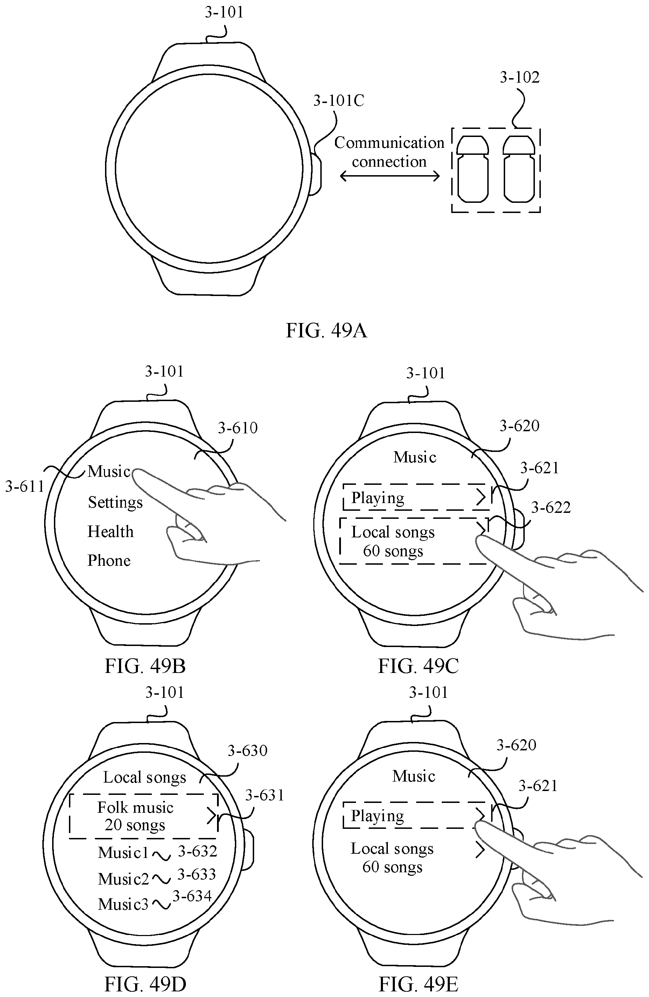

FIG. 49A to FIG. 49J are some diagrams of an audio playing scenario according to an embodiment of this application;

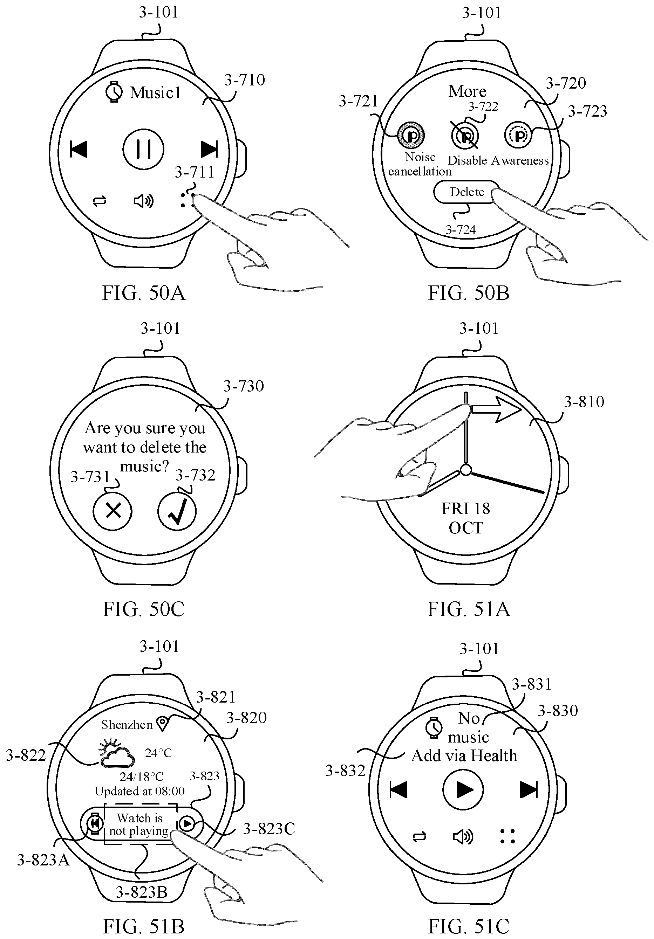

FIG. 50A to FIG. 50C are some diagrams of a scenario in which a smartwatch 3-101 controls audio playing according to an embodiment of this application;
FIG. 51A to FIG. 51F are some diagrams of an audio playing control scenario according to an embodiment of this application;

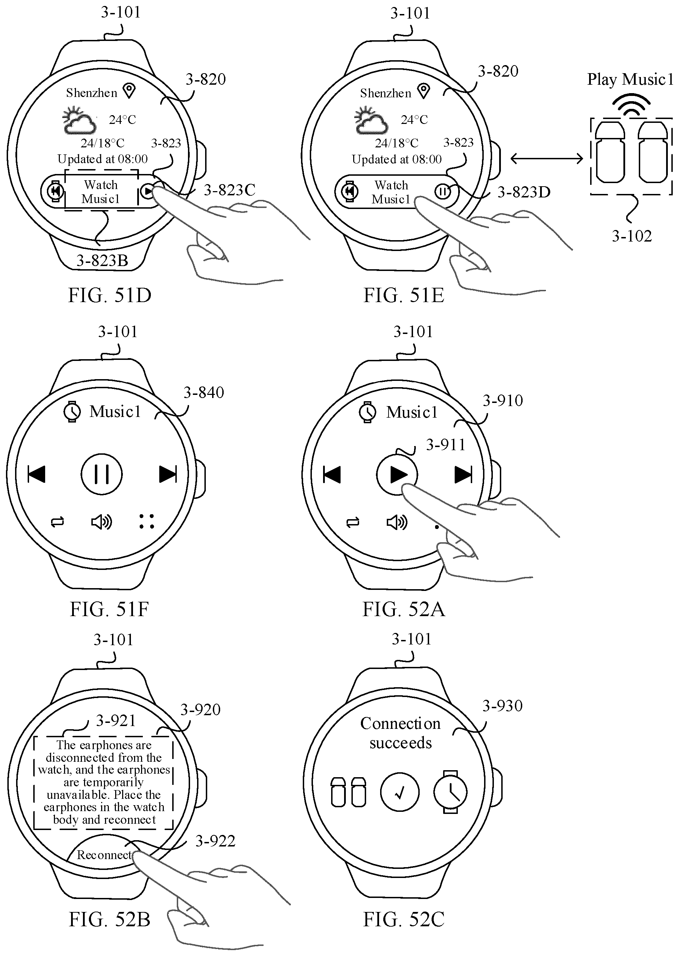

FIG. 52A to FIG. 52C are some diagrams of a scenario in which a smartwatch 3-101 establishes a communication connection to earphones 3-102 according to an embodiment of this application;

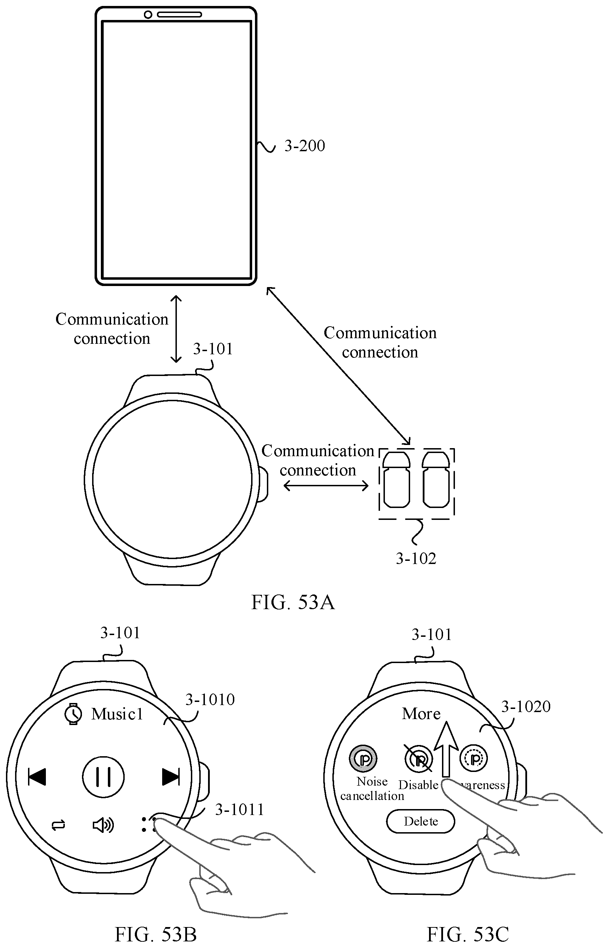

FIG. 53A to FIG. 53M are diagrams of some audio playing scenario according to an embodiment of this application;

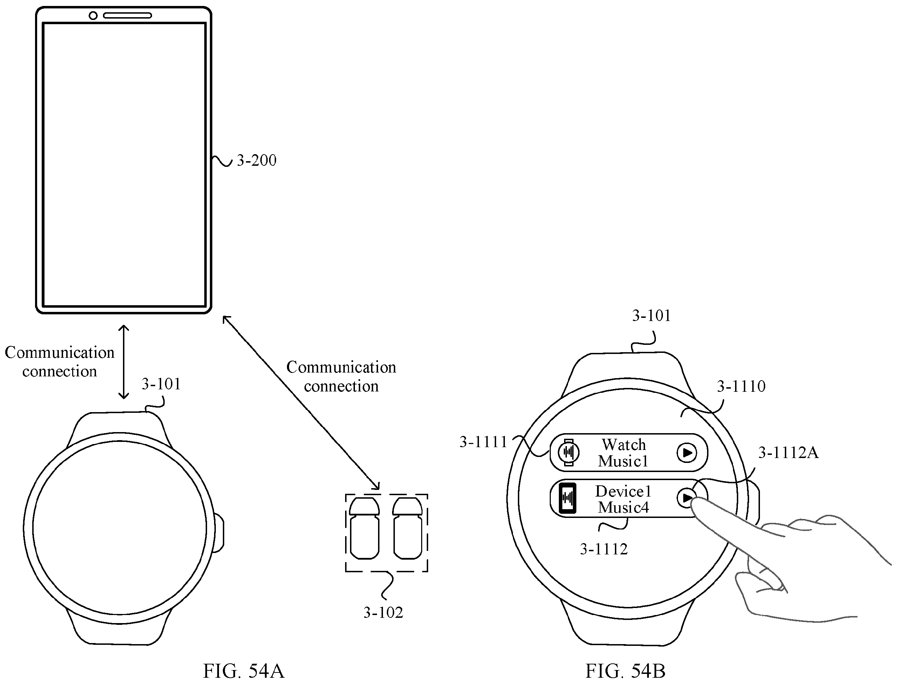

FIG. 54A to FIG. 54E are some diagrams of an audio playing scenario according to an embodiment of this application;

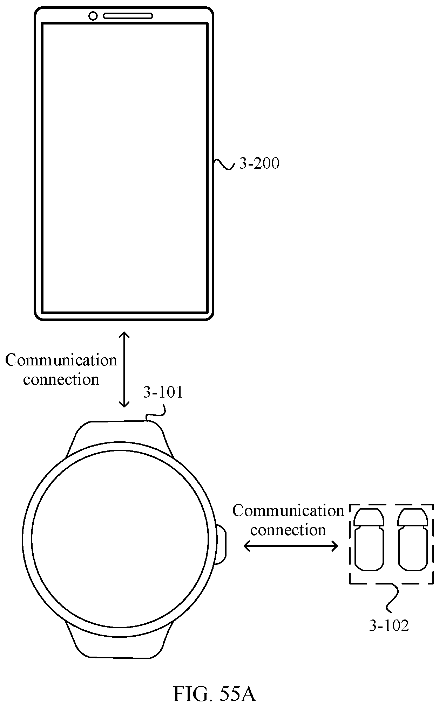

FIG. 55A to FIG. 55E are some diagrams of an audio playing scenario according to an embodiment of this application;

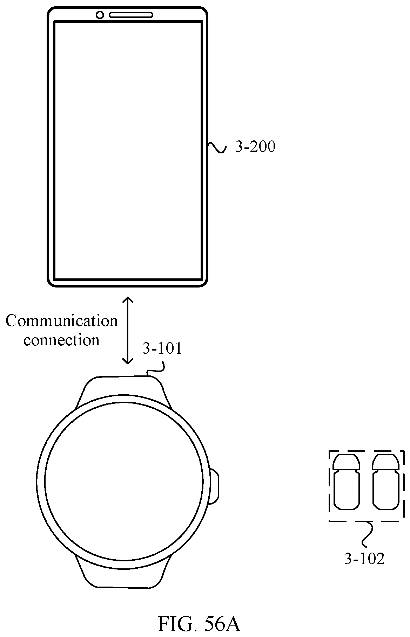

FIG. 56A to FIG. 56E are some diagrams of an audio playing control scenario according to an embodiment of this application;

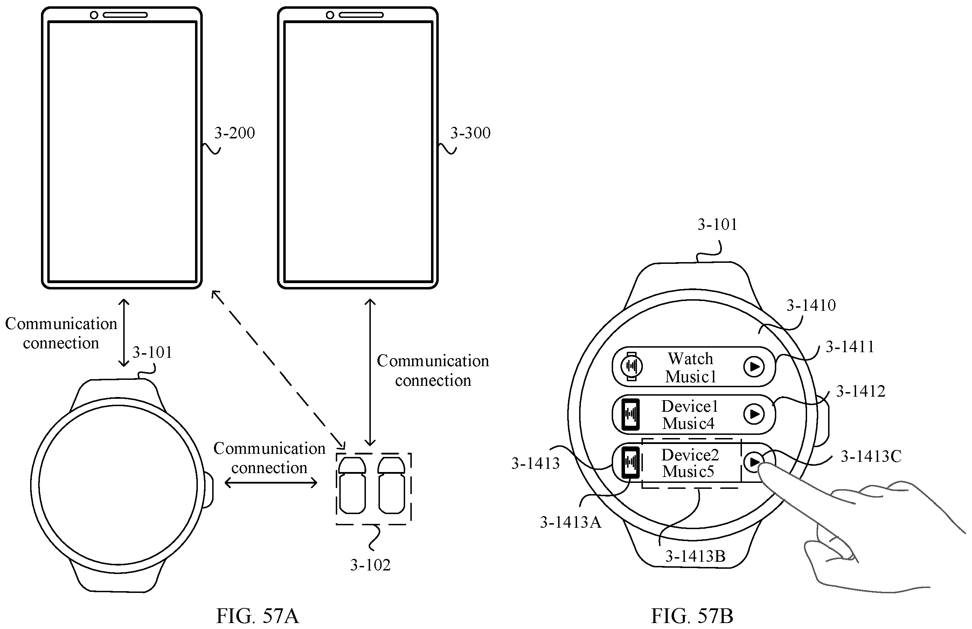

FIG. 57A to FIG. 57M are some diagrams of an audio playing control scenario according to an embodiment of this application;

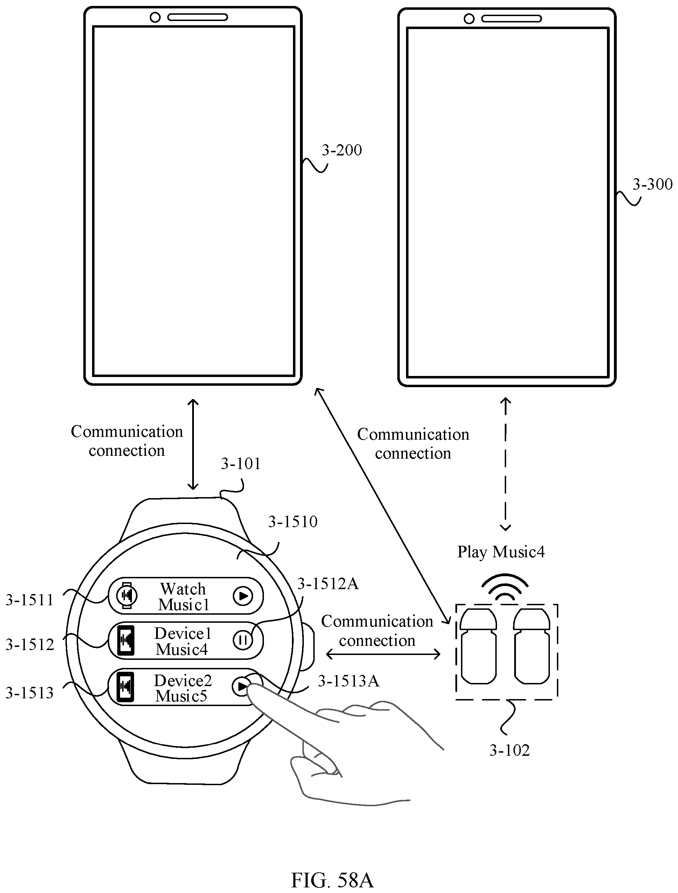

FIG. 58A to FIG. 58F are some diagrams of an audio playing control scenario according to an embodiment of this application;

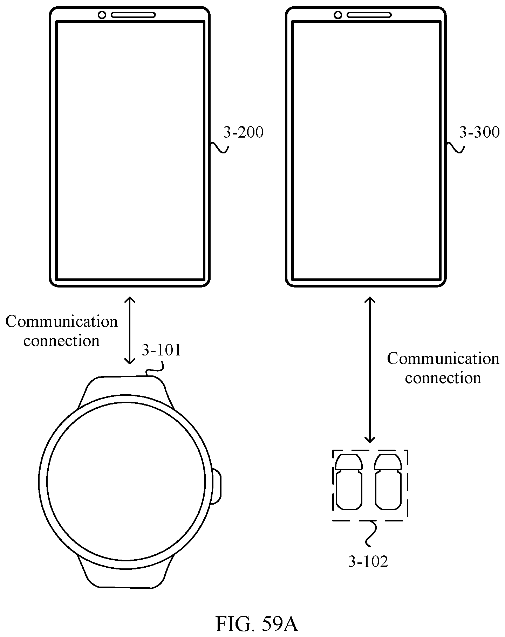

FIG. 59A to FIG. 59G are some diagrams of an audio playing control scenario according to an embodiment of this application;

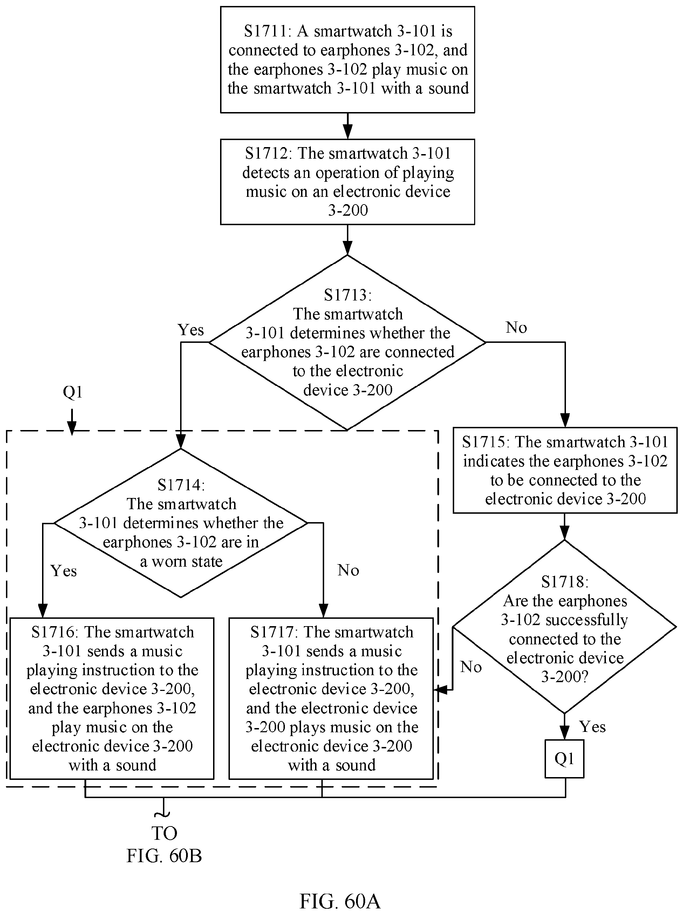

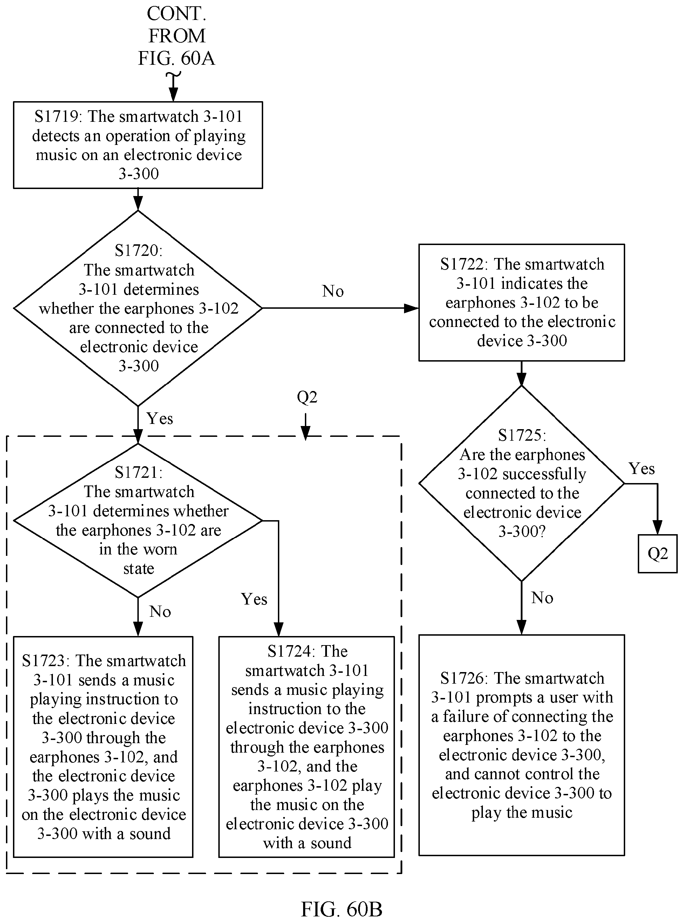

FIG. 60A and FIG. 60B are a flowchart of a method for controlling audio playing according to an embodiment of this application;

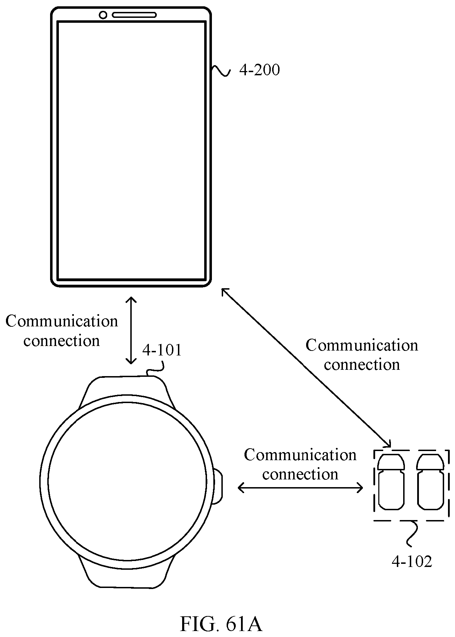

FIG. 61A to FIG. 61E are some diagrams of a call control scenarios according to an embodiment of this application;

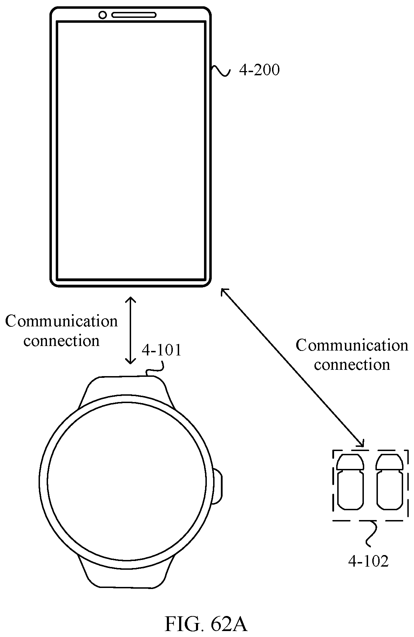

FIG. 62A to FIG. 62C are some other diagrams of a call control scenarios according to an embodiment of this application;

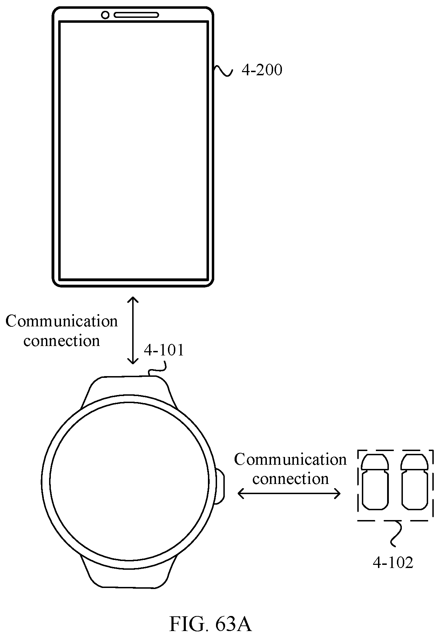

FIG. 63A to FIG. 63E are some other diagrams of a call control scenario according to an embodiment of this application;

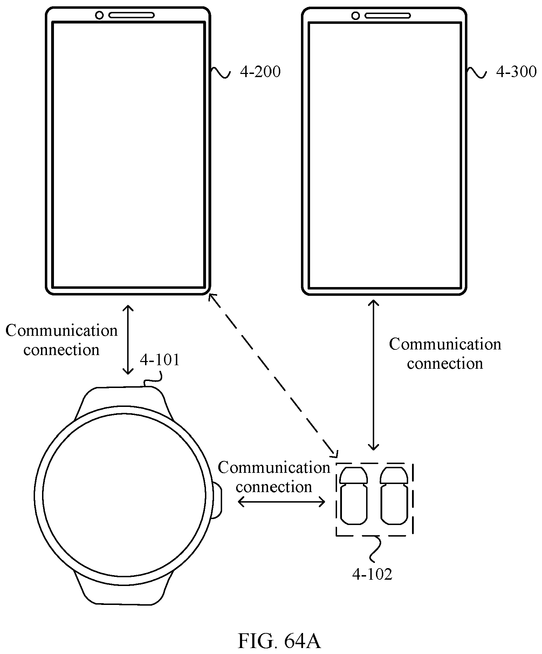

FIG. 64A to FIG. 64F are some other diagrams of a call control scenario according to an embodiment of this application;

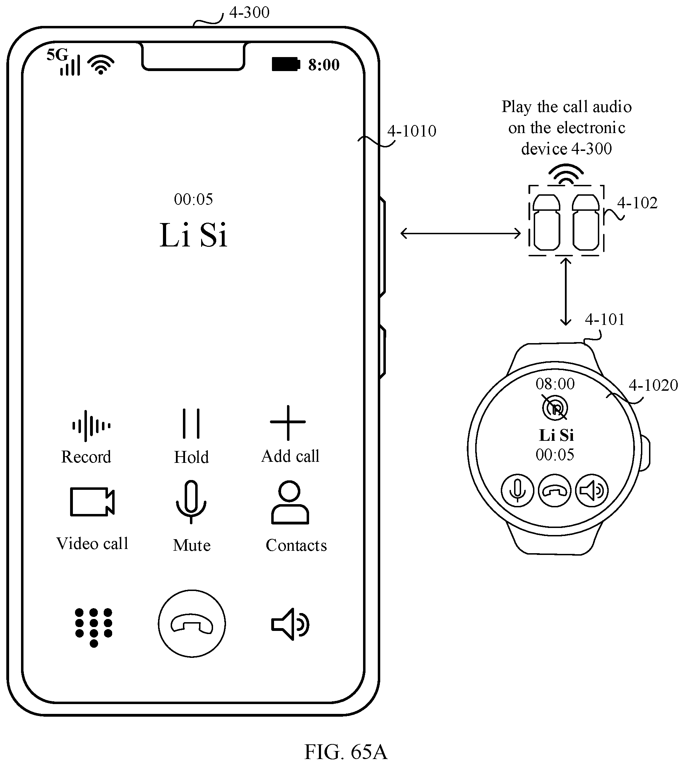

FIG. 65A to FIG. 65E are some other diagrams of a call control scenario according to an embodiment of this application;

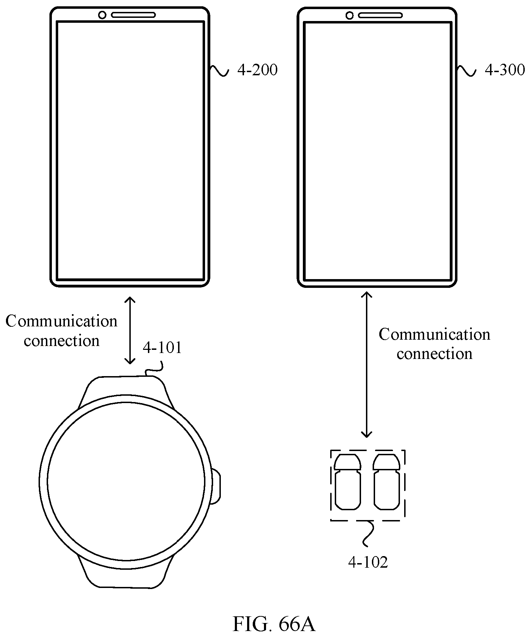

FIG. 66A to FIG. 66C are some other diagrams of a call control scenario according to an embodiment of this application;

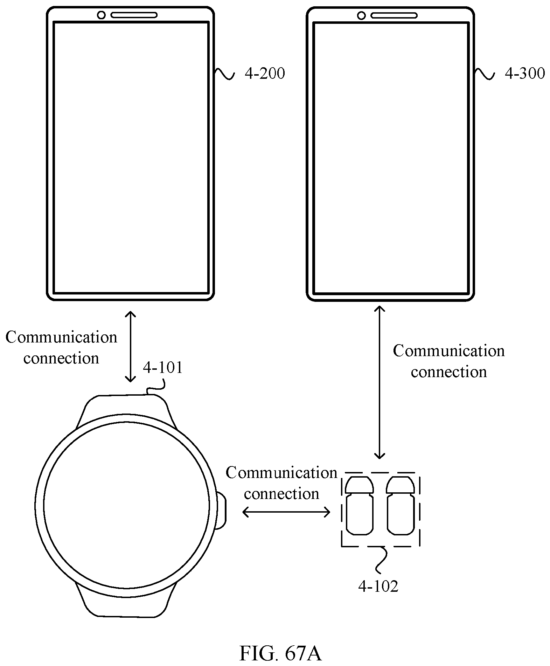

FIG. 67A to FIG. 67K are some other diagrams of a call control scenario according to an embodiment of this application;

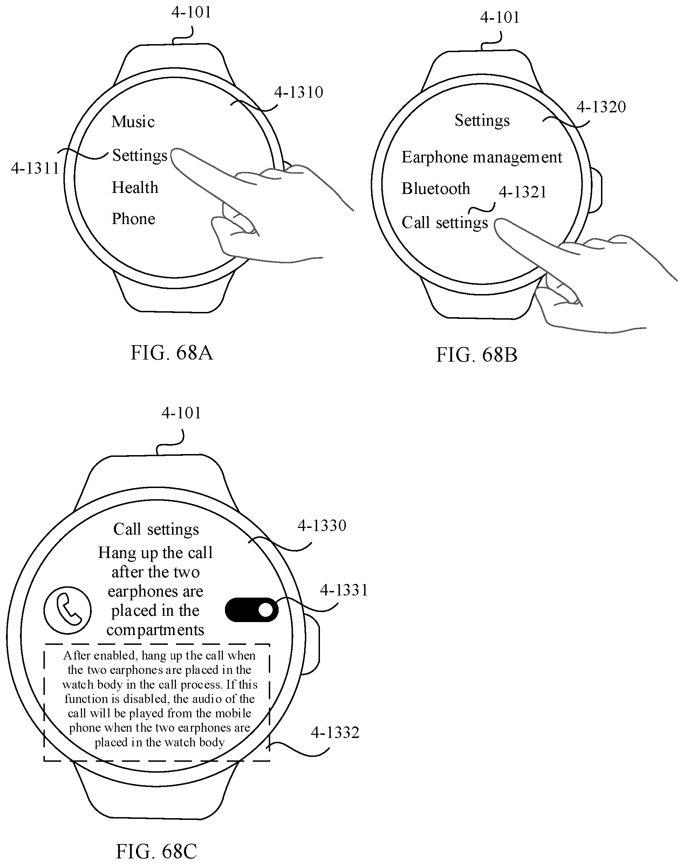

FIG. 68A to FIG. 68J are some other diagrams of a call control scenario according to an embodiment of this application;

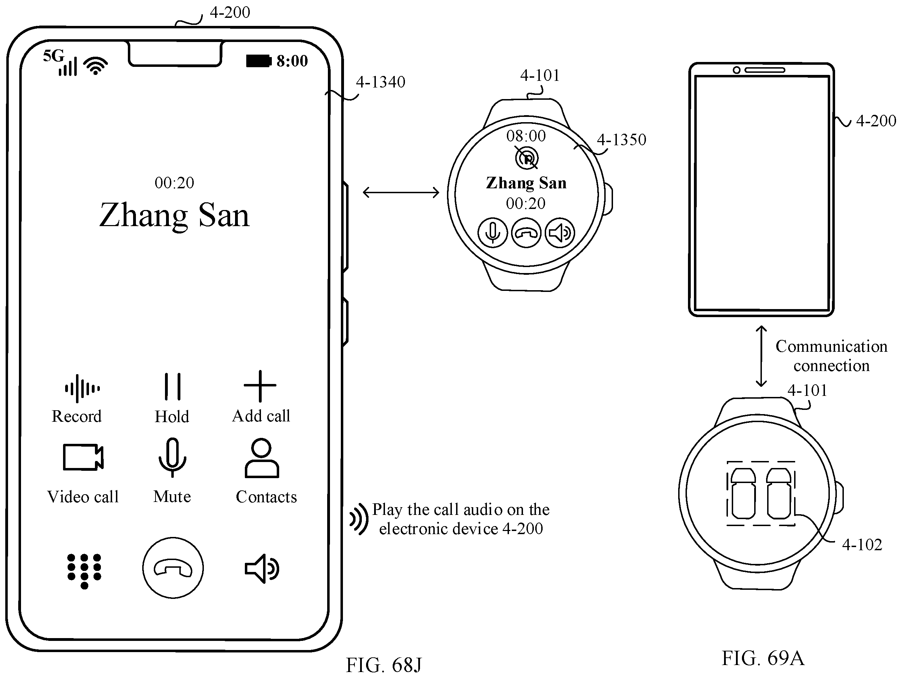

FIG. 69A to FIG. 69E are some diagrams of a scenario in which an electronic device is controlled to make an outgoing call through a smartwatch 4-101 according to an embodiment of this application;

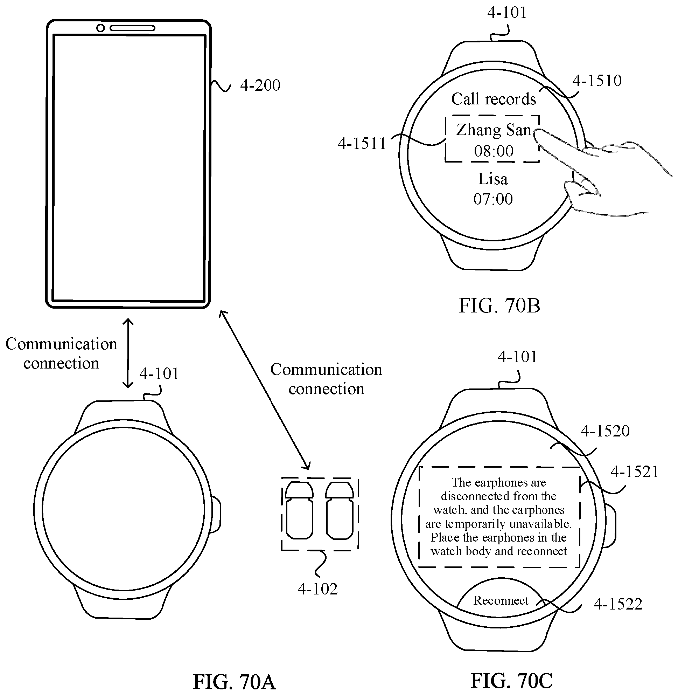

FIG. 70A to FIG. 70F are some diagrams of a scenario in which an electronic device makes an outgoing call according to an embodiment of this application;

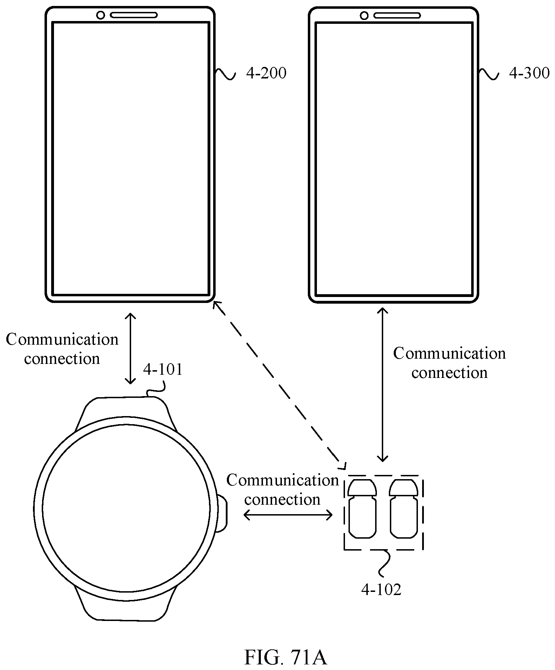

FIG. 71A to FIG. 71F are some other diagrams of a scenario in which an electronic device is controlled to make an outgoing call through a smartwatch 4-101 according to an embodiment of this application;

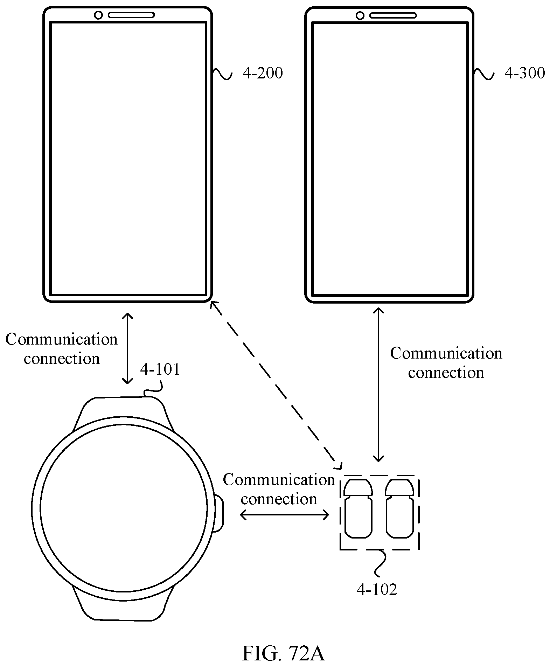

FIG. 72A to FIG. 72F are some other diagrams of a call control scenario according to an embodiment of this application;

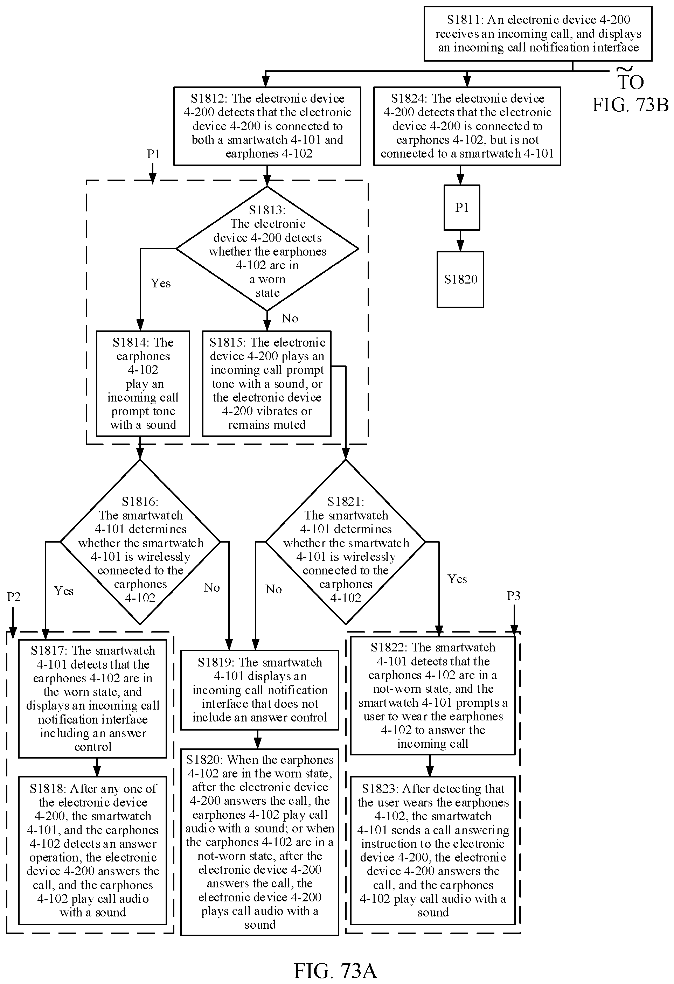

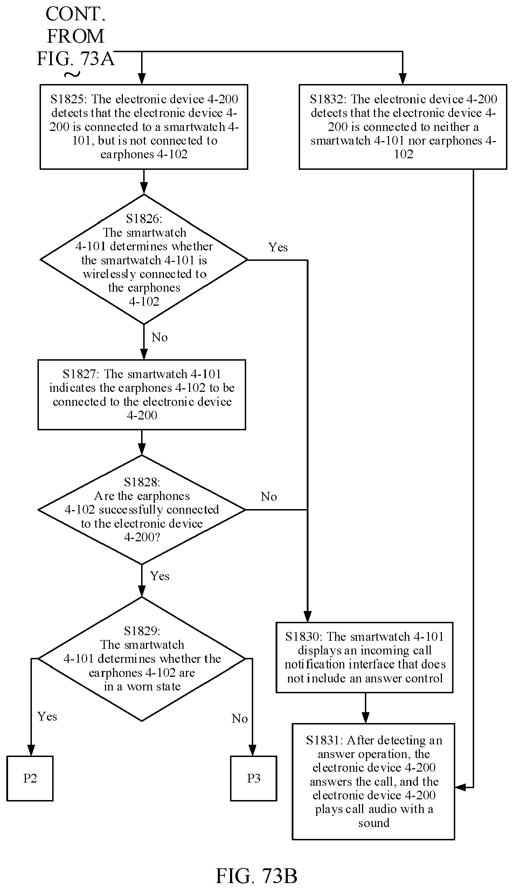

FIG. 73A and FIG. 73B are a flowchart of a call control method according to an embodiment of this application;

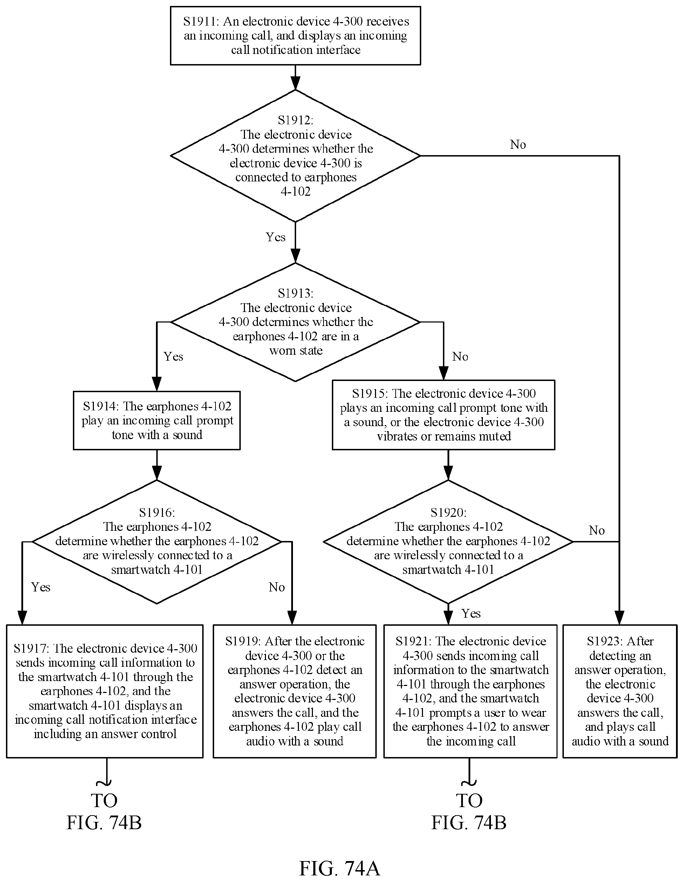

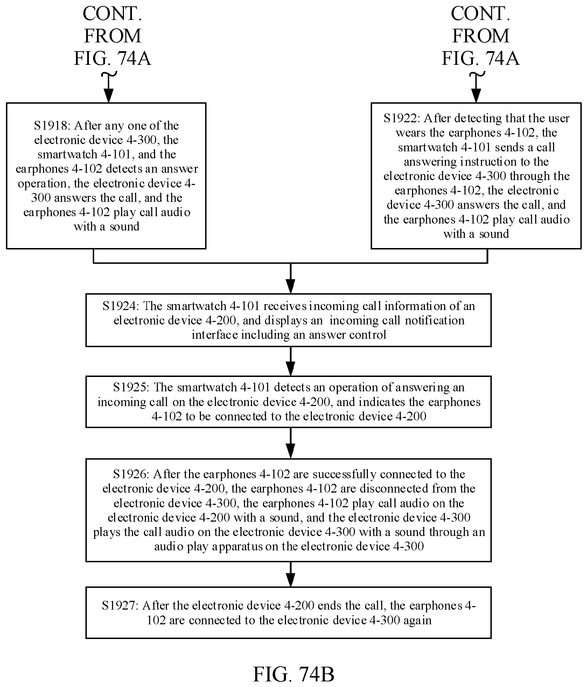

FIG. 74A and FIG. 74B are a flowchart of a call control method according to an embodiment of this application;

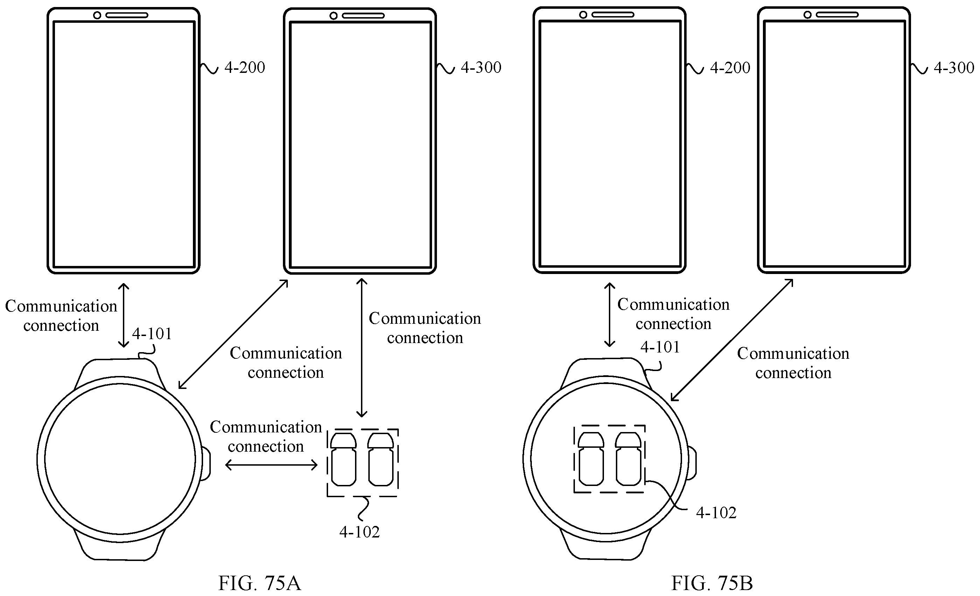

FIG. 75A to FIG. 75F are some other diagrams of a call control scenario according to an embodiment of this application;

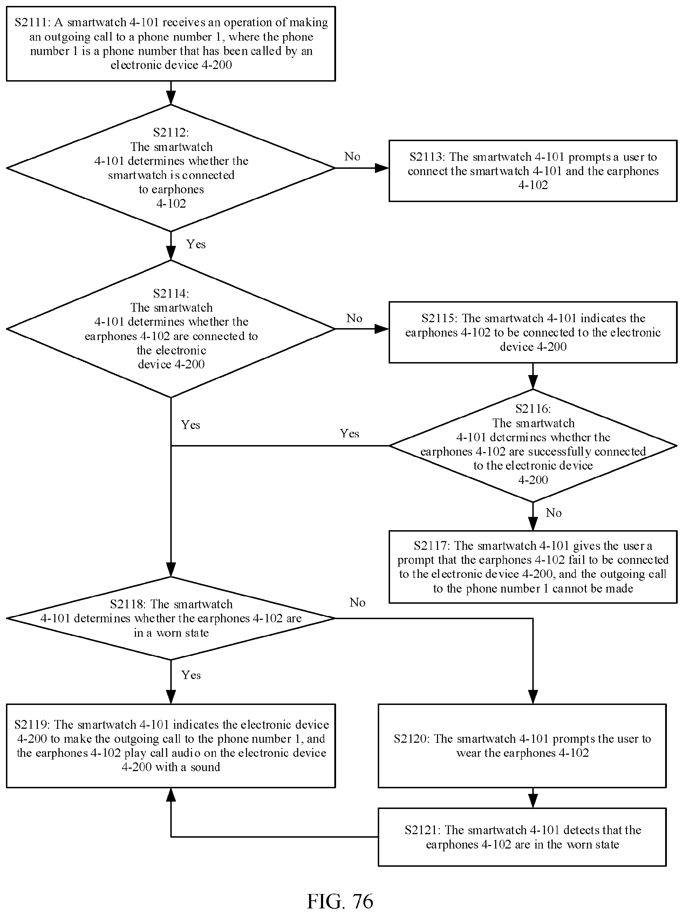

FIG. 76 is a flowchart of a call control method according to an embodiment of this application;

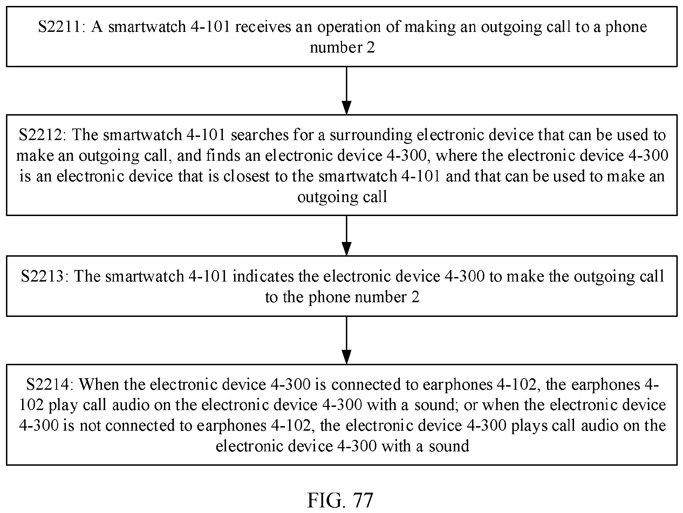

FIG. 77 is a flowchart of a call control method according to an embodiment of this application;

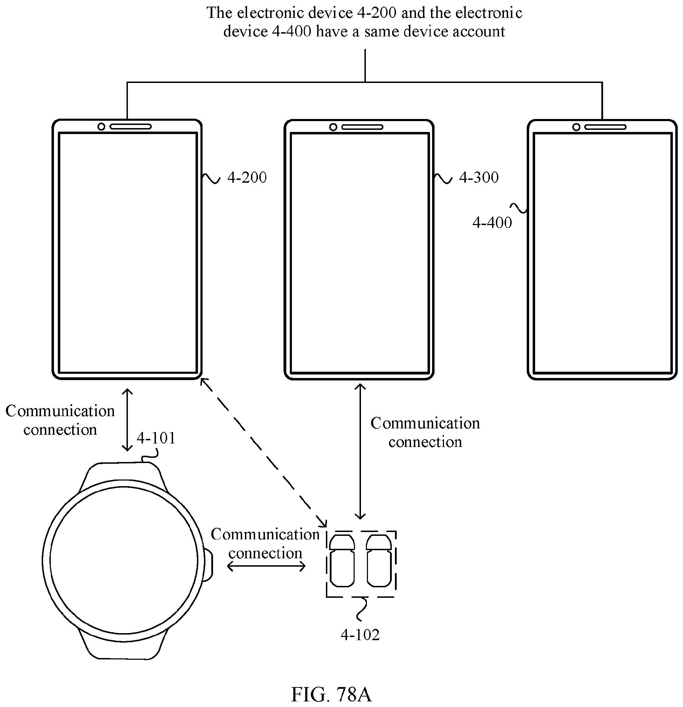

FIG. 78A to FIG. 78F are some other diagrams of a call control scenario according to an embodiment of this application;

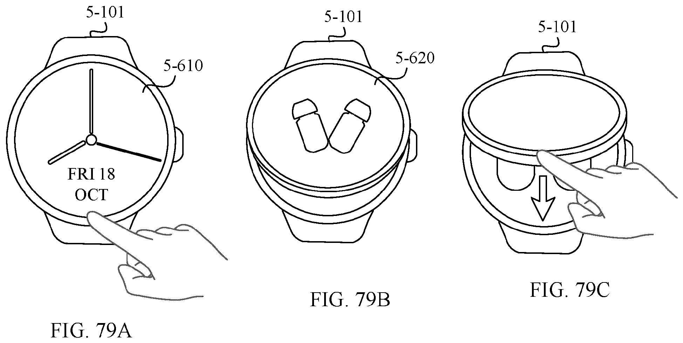

FIG. 79A to FIG. 79F are some diagrams of a scenario of managing a cover open/closed state of a smartwatch 5-101 according to an embodiment of this application;

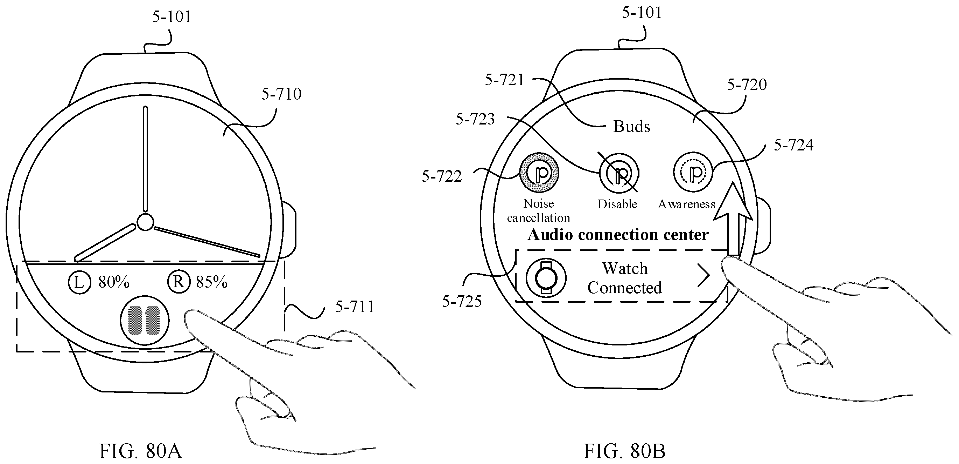

FIG. 80A to FIG. 80G are some diagrams of a scenario in which earphones 5-102 are managed through a smartwatch 5-101 according to an embodiment of this application;

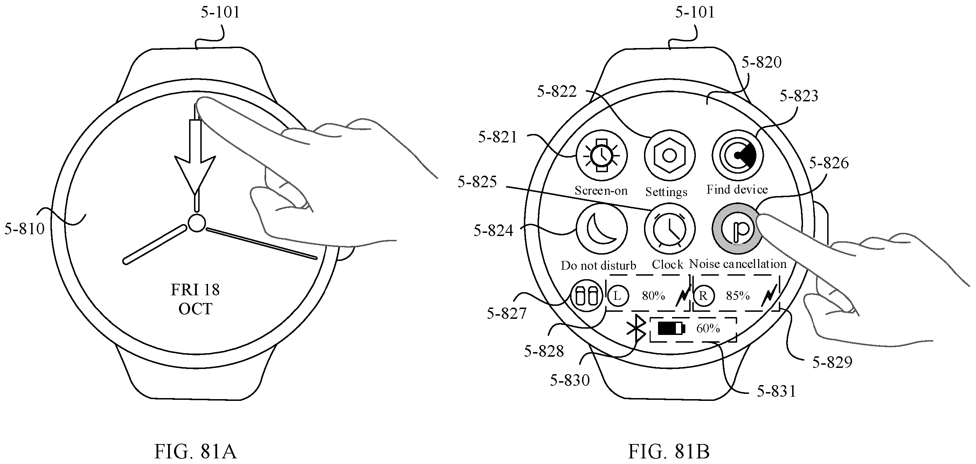

FIG. 81A to FIG. 81K are some other diagrams of a scenario in which earphones 5-102 are managed through a smartwatch 5-101 according to an embodiment of this application;

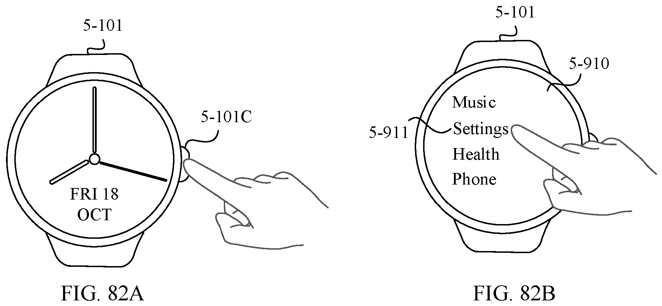

FIG. 82A to FIG. 82D are some other diagrams of a scenario in which earphones 5-102 are managed through a smartwatch 5-101 according to an embodiment of this application;

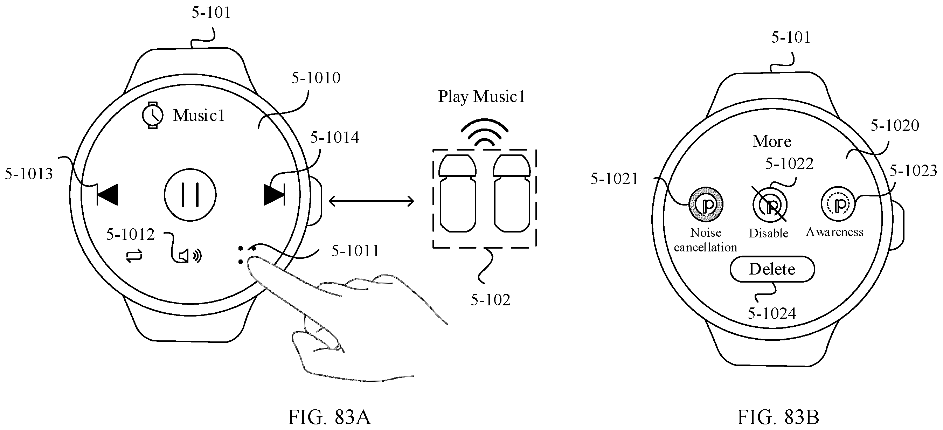

FIG. 83A to FIG. 83I are some diagrams of a scenario in which playing audio with a sound by earphones 5-102 is managed through a smartwatch 5-101 according to an embodiment of this application;

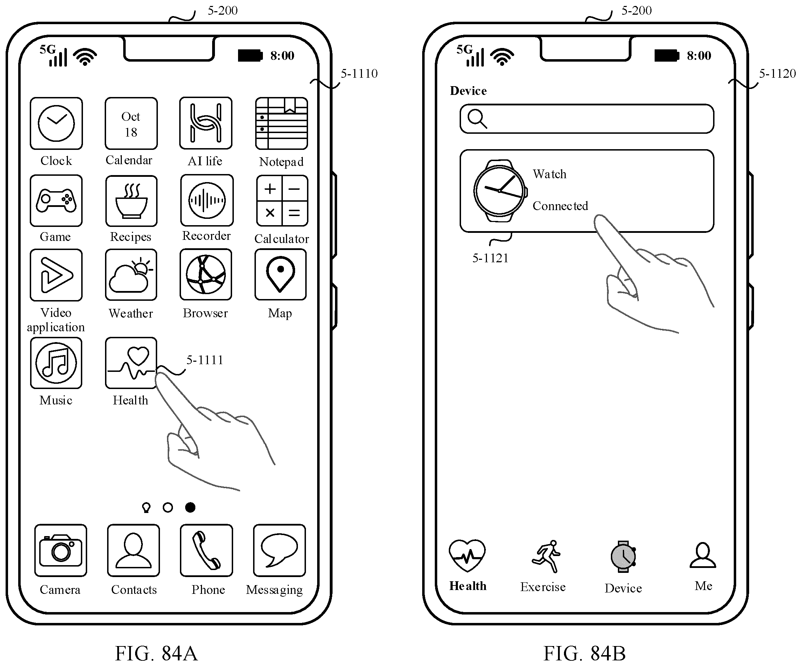

FIG. 84A to FIG. 84K are some diagrams of a scenario in which power management is performed on a wearable device according to an embodiment of this application;

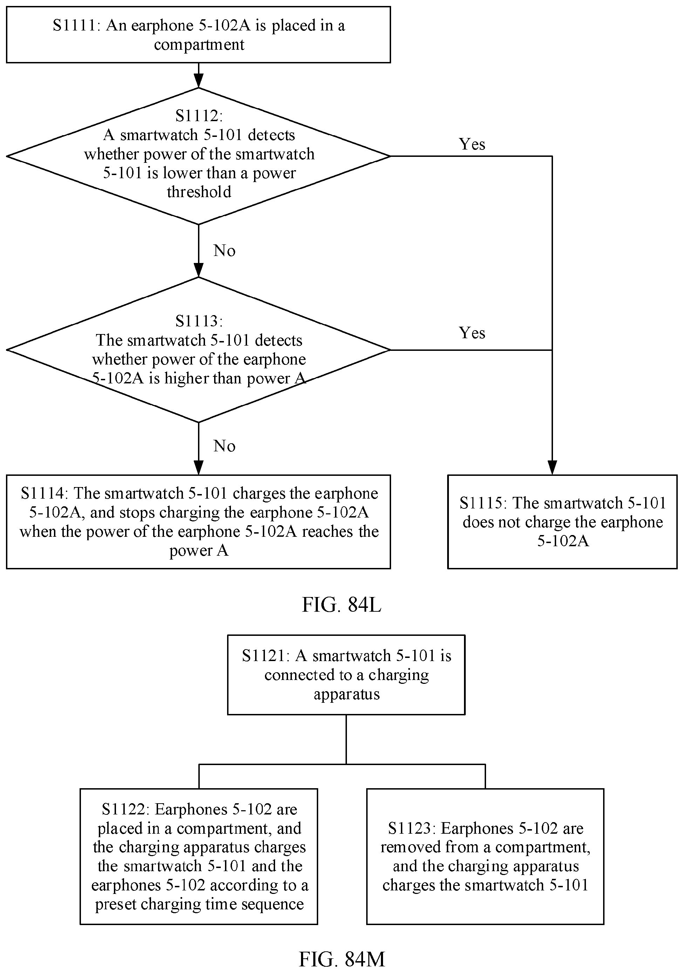

FIG. 84L is a flowchart of a power management method for a wearable device according to an embodiment of this application;
FIG. 84M is a flowchart of another power management method for a wearable device according to an embodiment of this application;

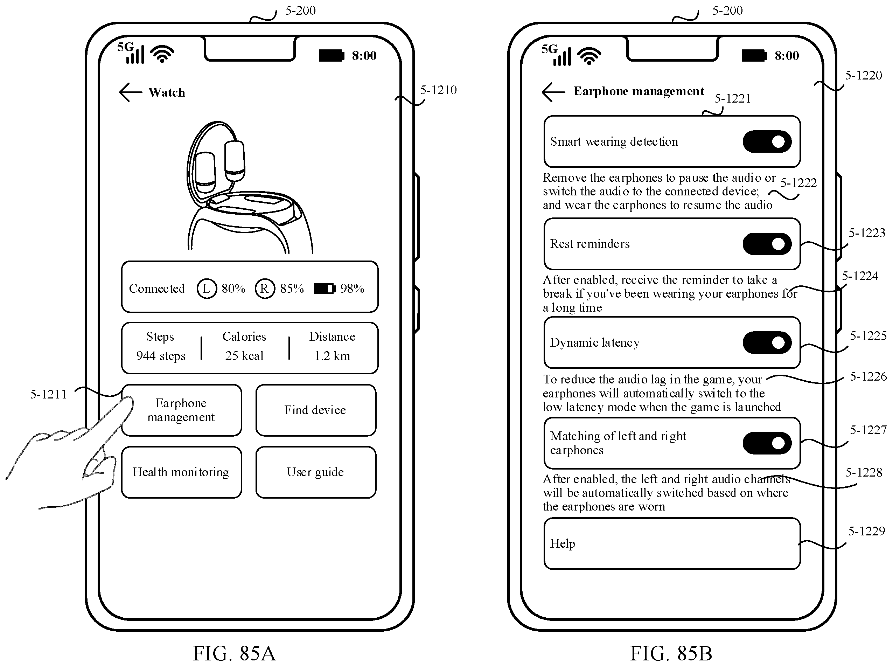

FIG. 85A to FIG. 85I are some diagrams of a scenario in which a wearable device is managed through an electronic device 5-200 according to an embodiment of this application;

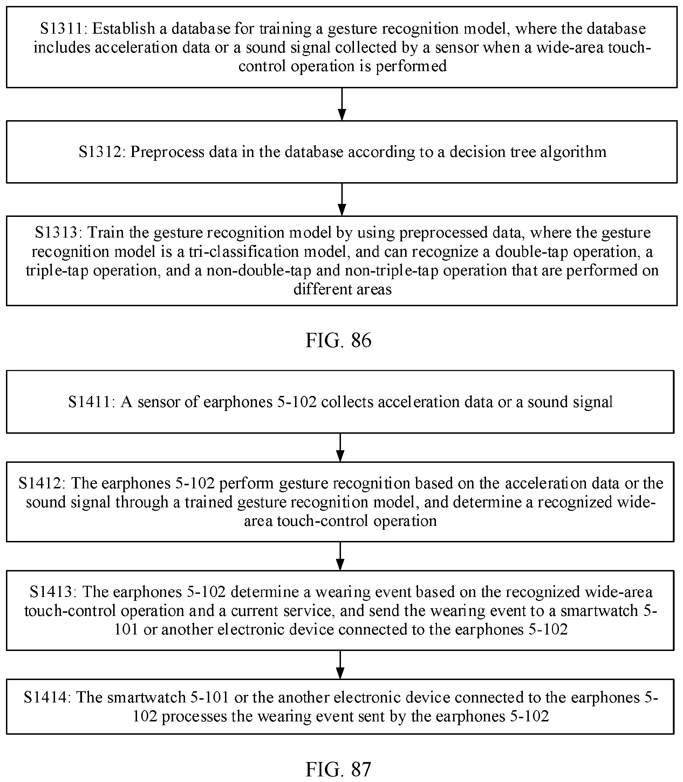

FIG. 86 is a flowchart of a gesture recognition model training method according to an embodiment of this application;
FIG. 87 is a flowchart of a method in which an earphone 5-102 provides a wide-area touch-control function according to an embodiment of this application;

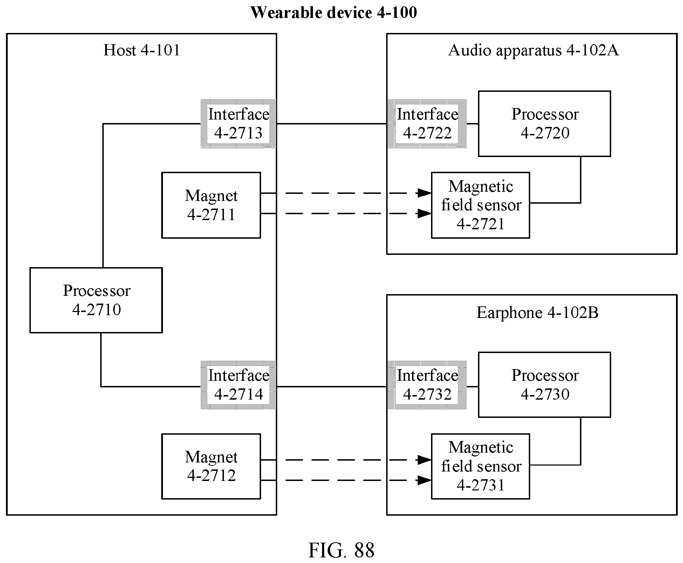

FIG. 88 shows an example of a hardware architecture of a wearable device;

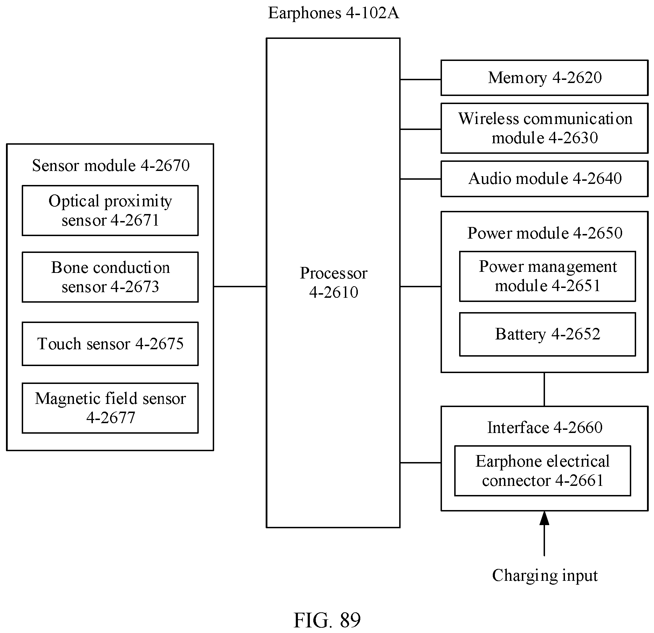

FIG. 89 shows an example of a hardware architecture of an audio apparatus; and

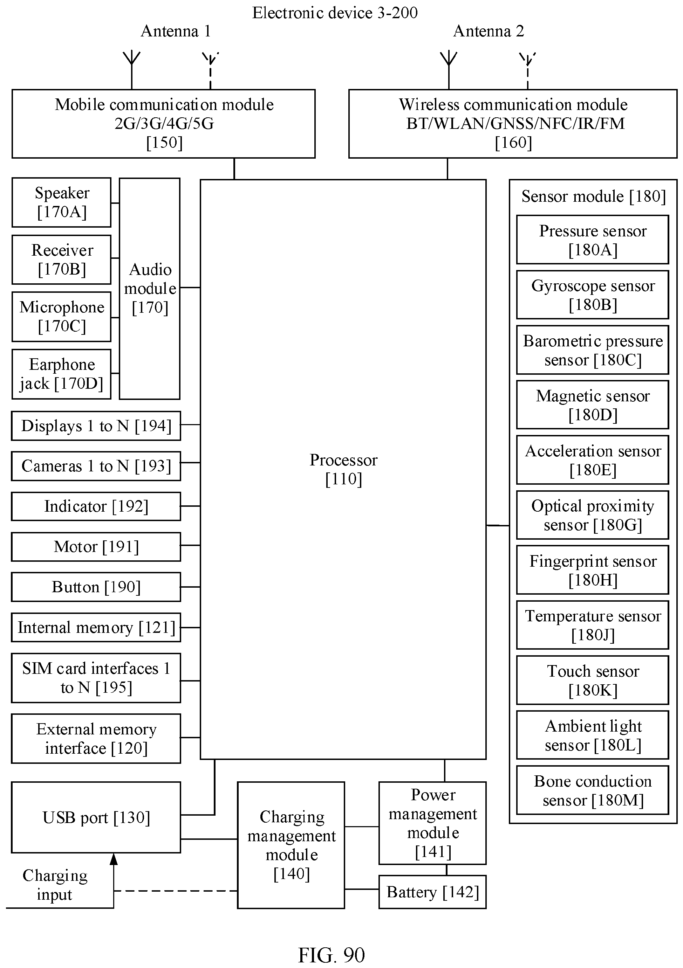

FIG. 90 shows an example of a hardware architecture of an electronic device like a mobile phone.

### DESCRIPTION OF EMBODIMENTS

The following describes a plurality of embodiments of this application in detail. While specific implementations have been discussed, it should be understood that this is for purposes of illustration only. A person skilled in the related art may recognize that other components and configurations may be used without departing from the spirit and scope of this application.

Embodiments of this application provide a wearable device including a wireless audio apparatus, to form a new product form in which the wearable device and the audio apparatus are integrated, so that a user can easily obtain both the wearable device and the audio apparatus. In view of the new product form, embodiments of this application further provide a power-on/off method, an upgrade method, a method for restoring to factory settings, a pairing and connection method, a music playing control method, a call control method, a charging method, a device search method, and the like. In addition to providing new user experience, this application implements simple and efficient human-machine interaction. The wearable device and the audio apparatus may be treated as one device. The audio apparatus may be considered as a microphone and speaker of the wearable device, and the wearable device may alternatively serve as a display device and micro control center of the audio apparatus. In this way, a user can perform visual control such as volume adjustment, incoming call answering, and music playing on audio playing. The wearable device may be further used as a charger of the audio apparatus, and the like.

The following first describes the new product form and typical product features and functions, and then describes a series of methods provided in embodiments of this application based on the new product form one by one.

### New product form

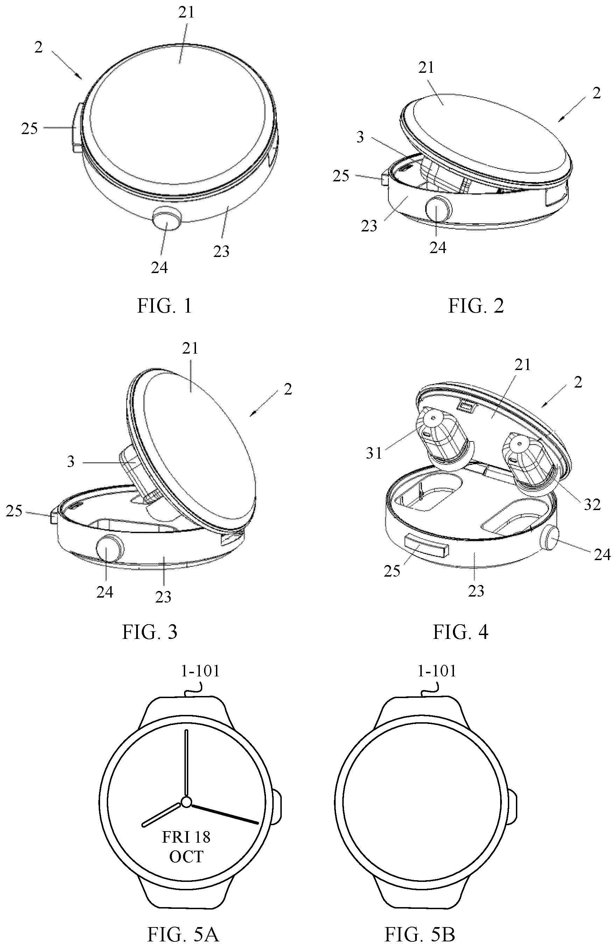

FIG. 1 to FIG. 4 show examples of a wearable device including a wireless audio apparatus, and provide a new product form in which the wearable device and the audio apparatus are integrated. The audio apparatus may be earphones, including but not limited to Bluetooth earphones (for example, true wireless stereo (true wireless stereo, TWS) earphones). Certainly, the audio apparatus may alternatively be another audio apparatus, for example, a mini sound box or a portable music player. The wearable device may be an electronic device like a smartwatch, an electronic sphygmomanometer, a smart band, a smart helmet, smart clothing, smart glasses, a mobile wireless fidelity (wireless-fidelity, Wi-Fi) device, or a smart backpack. The following uses an example in which the wearable device is a smartwatch and the audio apparatus is earphones for description.

As shown in FIG. 1 to FIG. 4, the wearable device 1 may include a host 2 and earphones 3. Here, "include" means that the earphones 3 may be accommodated in the host 2.

The host 2 may include a first part 21 and a second part 23. The first part 21 may be referred to as a cover body, and the second part 23 may be referred to as a main body. The host 2 may further include a wrist strap, and the wrist strap may be connected to two opposite sides of the second part 23. The earphones 3 may include a first earphone 31 and a second earphone 32. Structures of the first earphone 31 and the second earphone 32 may be completely consistent.

FIG. 1 shows that the host 2 is in a closed state. In this case, the first part 21 and the second part 23 are closed. When the host 2 is closed, the first part 21 and the second part 23 may enclose accommodation space, and the earphones 3 are accommodated in the accommodation space. A groove part that is of the second part 23 and that participates in forming the accommodation space may be referred to as an earphone compartment, and may specifically include a left-car earphone compartment and a right-ear earphone compartment.

FIG. 2 to FIG. 4 show that the host 2 is in an open state. In this case, the first part 21 may be opened at a specific angle relative to the second part 23. For example, an opening angle a of the first part 21 in FIG. 2 may be approximately 15 degrees. An opening angle b of the first part 21 in FIG. 3 may be approximately 75 degrees. It may be understood that a specific value of an opening angle in a case in which the first part 21 is at an extreme location may be designed based on a product requirement, for example, may be greater than or equal to 90 degrees. This is not limited to the foregoing description. As shown in FIG. 2 to FIG. 4, when the host 2 is in the open state, the earphones 3 may be detached from the second part 23 and attached to the first part 21. This design facilitates a user to take out and place the earphones 3. The attachment may be implemented by magnetically attracting an earphone magnet by an attracting magnet mounted on the first part 21. Certainly, when the host 2 is in the open state, the earphones 3 may alternatively not be detached from the second part 23, but are accommodated in the earphone compartment in the second part 23.

Not limited to the open state shown in FIG. 2 to FIG. 4, that the host 2 is in the open state may alternatively mean another state. For example, the first part 21 translates relative to the second part 23 until projections of the first part 21 and the second part 23 on a same plane do not overlap or slightly overlap. In this way, the earphones located in the earphone compartment in the second part 23 are fully exposed to the outside and available to the user.

As shown in FIG. 1 to FIG. 3, the host 2 may further include a function button 24 and an open button 25. The function button 24 is configured to be pressed and/or rotated by the user, so that the host 2 implements a corresponding function, for example, selection, confirmation, or image display switching. The function button 24 may be, for example, a power-on/off button. The open button 25 may be mounted on the second part 23. The open button 25 may have a lock structure, so that the open button 25 can cooperate with a lock structure in the first part 21 to implement unlocking and locking of the host 2. Alternatively, the open button 25 may be mounted on the first part. In this case, the second part also has a lock structure. The opening button cooperates with the lock structure in the second part, to implement unlocking and locking of the host.

The foregoing section briefly describes composition of the wearable device including the wireless audio apparatus. A person skilled in the related art can further understand typical product features and functions of the wearable device from the following content.

### Typical product features and functions

1. When the host 2 is opened, the earphones 3 are attracted to the first part 21 of the host 2.

Refer to FIG. 1 and FIG. 4. When the host 2 is in the closed state, the earphones 3 are accommodated in the space enclosed by the first part 21 and the second part 23. The first part 21 may have a first host attracting magnet, and a magnet (also referred to as an earphone magnet) may also be correspondingly configured in the earphones 3. Refer to FIG. 1 to FIG. 4. When the host 2 is gradually opened from the closed state, because there is a magnetic attraction force between the earphone magnet and the first host attracting magnet, the earphones 3 are attracted to the first part 21.

The second part 23 may have a second host attracting magnet, and the second host attracting magnet may also be magnetically attracted to the earphone magnet. Comparatively, a magnetic field of the first host attracting magnet is stronger, and the magnetic attraction force between the first host attracting magnet and the earphone magnet is larger; and a magnetic field of the second host attracting magnet is weaker, and a magnetic attraction force between the second host attracting magnet and the earphone magnet is smaller. When the host 2 is gradually opened from the closed state, because the magnetic attraction force of the first host attracting magnet is greater than the magnetic attraction force of the second host attracting magnet, the earphones 3 are attracted to the first part 21, and rotate relative to the second part 23 with the first part 21.

### 2. Detection of the open/closed state of the host 2

A status detection magnet may be mounted in the second part 23 of the host 2.

The first part 21 of the host 2 may have a magnetic field sensor. The magnetic field sensor may be referred to as a first magnetic field sensor, and is configured to detect a magnetic flux of the status detection magnet in the second part 23 of the host 2. The magnetic flux that is of the status detection magnet and that is detected by the first magnetic field sensor may be directly proportional to a spacing between the first magnetic field sensor and the status detection magnet. When the host 2 is in the closed state, the first magnetic field sensor detects a maximum magnetic flux. After the host 2 is completely opened, the first magnetic field sensor detects a minimum magnetic flux.

When the host 2 is gradually opened from the closed state, the spacing between the first magnetic field sensor and the status detection magnet gradually increases, and the magnetic flux that is of the status detection magnet and that is detected by the first magnetic field sensor tends to decrease. When the magnetic flux detected by the first magnetic field sensor is less than a first threshold, it may be considered that the host 2 is in the open state.

On the contrary, when the host 2 is gradually closed from the open state, the spacing between the first magnetic field sensor and the status detection magnet gradually decreases, and the magnetic flux that is of the status detection magnet and that is detected by the first magnetic field sensor tends to increase. When the magnetic flux detected by the first magnetic field sensor is greater than a second threshold, it may be considered that the host 2 is in the closed state.

When it is determined that the host 2 is in the open state, a display on the host 2 may perform corresponding interface display.

When it is determined that the host 2 is in the open state and the earphones 3 are in the host 2 (how to detect whether the earphones 3 are located in the host 2 is described below), a communication electrode of the host 2 may send a signal to a communication electrode of the earphones 3, to wake up the earphones 3. When it is determined that the host 2 is in the closed state and the earphones 3 are located in the host 2, the host 2 may start foreign object detection, and start charging of the earphones 3 after determining that no foreign object enters the host 2.

Locations of the first magnetic field sensor and the status detection magnet may be interchanged. To be specific, the first magnetic field sensor may be in the second part 23, and the status detection magnet may be in the first part 21.

Not limited to the status detection magnet and the magnetic field sensor, the open/closed state of the host 2 may be further detected in another detection manner. For example, a pair of contact detection spring plates may be respectively configured on the first part 21 and the second part 23, and whether the host 2 is in the closed state or the open state may be determined based on a detected contact state. For another example, a pair of an infrared transmitter and an infrared receiver may be respectively configured on the first part 21 and the second part 23, and whether the host 2 is in the closed state or the open state may be determined based on received signal strength.

When it is detected that the host 2 is in the open state, the host 2 may perform corresponding interface display on the display 211. The interface display is described in detail in the following embodiments. Details are not described here.

### 3. In-position detection of the earphones 3

An in-position status of the earphones 3 may include: Two earphones are in compartments, a single earphone is in a compartment, and the two earphones are not in the compartments (including a case in which the two earphones are attracted to the first part 21). Here, a "compartment" is an earphone compartment that is in the second part 23 and that is configured to accommodate an earphone. There may be two earphone compartments, and the first earphone 31 and the second earphone 32 may be respectively accommodated in different earphone compartments.

The in-position detection of the earphones may be performed by the host 2. The second part 23 of the host 2 may have a magnetic field sensor. The magnetic field sensor may be referred to as a second magnetic field sensor, and is configured to detect a change of a magnetic flux of the earphone magnet in the earphones. The two earphone compartments in the second part 23 may be respectively provided with magnetic field sensors, and are respectively configured to detect in-position statuses of the first earphone 31 and the second earphone 32. The magnetic flux that is of the earphone magnet and that is detected by the second magnetic field sensor may be directly proportional to a spacing between the second magnetic field sensor and the earphone magnet. When the magnetic flux detected by the second magnetic field sensor is large, for example, greater than a specific threshold, it may be considered that the earphones are in the compartment. When the magnetic flux detected by the second magnetic field sensor is small, for example, less than the specific threshold, it may be considered that the earphones are not in the compartment.

The in-position detection of the earphones may alternatively be performed by the earphones. The earphones may also have a magnetic field sensor. The magnetic field sensor may be referred to as a third magnetic field sensor, and may be configured to detect a change in the magnetic flux of the status detection magnet in the second part 23 of the host 2. The magnetic flux that is of the status detection magnet and that is detected by the third magnetic field sensor may be directly proportional to a spacing between the third magnetic field sensor and the status detection magnet. When the earphones are in the compartment, the magnetic flux detected by the third magnetic field sensor is large, for example, greater than a specific threshold. When the earphones are not in the compartment, the magnetic flux detected by the third magnetic field sensor is small, for example, less than the specific threshold.

The host 2 may display the in-position status of the earphones 3 on the display 211. For example, when the user presses the function button 24 to light up the display 211, an in-position earphone is displayed on the display 211, and an out-of-position earphone is displayed to be in a "vacant" state. The in-position status of the earphones 3 may also be displayed on an electronic device like a mobile phone that is paired with and connected to the wearable device. Display of the in-position status of the earphones is described in detail in subsequent embodiments. Details are not described here.

### 4. Charging

The earphones may have a charging electrode. After the earphones are placed in the earphone compartment, the charging electrode can be in contact with a charging electrode in the earphone compartment, to obtain power supply.

When the host 2 is not coupled to an external power supply, the host 2 supplies power to the earphones. When the host 2 is coupled to the external power supply, the host 2 and the earphones may be charged together. The earphones may be in contact with the charging electrode in the earphone compartment through the charging electrode of the earphones, to obtain power supply from the external power supply. A manner of charging through the external power supply may be wired charging or wireless charging. To implement wireless charging, the host 2 (for example, the bottom of the second part 23 of the host 2) needs to be provided with a wireless charging coil.

Here, coupling the external power supply may mean that the external power supply is directly connected in a wired manner or is in an effective contact range that is required by wireless charging and that is from the external power supply through the wireless charging coil.

Charging of the host 2 and the earphones may be further optimized based on a specific scenario. A charging method is described in the following embodiments. Details are not described here.

Not limited to the typical features and functions described in the foregoing 1 to 4, the wearable device including the wireless audio apparatus may further have other features or functions, for example, a foreign object detection function and charging overheat protection.

The following describes, by using an example in which the wearable device is a watch and the wireless audio apparatus is Bluetooth earphones, a series of methods provided in embodiments of this application based on the wearable device including the wireless audio apparatus.

### Charging scenario

FIG. 5A to FIG. 5G show examples of charging scenarios.

As shown in FIG. 5A, the smartwatch 1-101 may be charged in a screen-on state.

As shown in FIG. 5B, the smartwatch 1-101 may alternatively be charged in a screen-off state.

After the smartwatch 1-101 is coupled to an external power supply, for example, placed on a wireless charging cradle or connected to a wired charger, the smartwatch 1-101 and an in-position earphone in the earphones 1-102 start to be charged together.

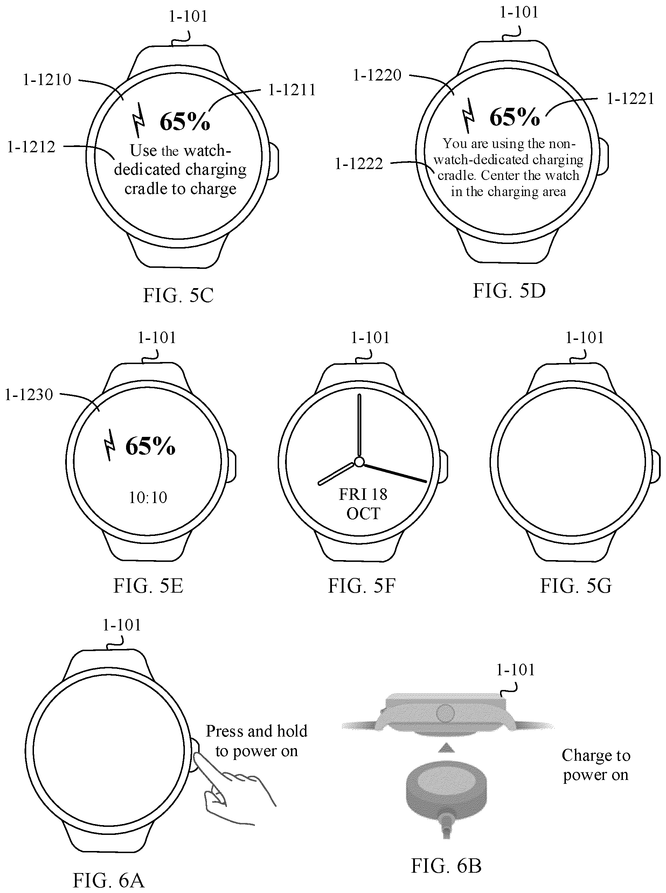

If the smartwatch 1-101 is placed on a third-party charging cradle or connected to a third-party wired charger, the user may be given a prompt to use a dedicated charging cradle or charger that belongs to a same manufacturer as the smartwatch 1-101 to perform charging. For example, refer to FIG. 5C. The smartwatch 1-101 may display charging progress information 1-1211 and prompt information 1-1212 (for example, "Use the watch-dedicated charging cradle to charge") of the smartwatch 1-101 in a charging process.

If the smartwatch 1-101 is placed on a non-watch-dedicated charging cradle or a non-watch-dedicated wired charger of a same manufacturer, the user may be given a prompt to use the watch-dedicated charging cradle or wired charger for charging and may be prompted with precautions during charging. For example, refer to FIG. 5D. The smartwatch 1-101 may display charging progress information 1-1221 and prompt information 1-1222 (for example, "You are using the non-watch-dedicated charging cradle. Center the watch in the charging area") of the smartwatch 1-101 in a charging process. The prompt information 1-1222 may be used to prompt the user to adjust a location of the smartwatch 1-101 on the charging cradle, to better charge the smartwatch.

After displaying an interface shown in FIG. 5C or FIG. 5D for a period of time (for example, 5 seconds), the smartwatch 1-101 may display a user interface 1230 shown in FIG. 5E. Alternatively, after the smartwatch 1-101 is placed on a watch-dedicated charging cradle of the same manufacturer or connected to a watch-dedicated wired charger, a user interface 1-1230 shown in FIG. 5E may be displayed. The user interface 1-1230 may be used to display a current charging progress of the smartwatch 1-101 and current time.

After the smartwatch 1-101 displays the user interface 1-1230 shown in FIG. 5E, if any operation of the user (for example, a tap operation on a display, an operation of pressing a home button, or an operation of raising a wrist by the user) is received, a home screen provided by the smartwatch 1-101, for example, a watch face interface provided in FIG. 5F, may be displayed. If no user operation is received for a period of time after the user interface 1230 shown in FIG. 5E is displayed, the screen-off state may be entered, for example, as shown in FIG. 5G.

In the charging scenarios shown as examples in FIG. 5A to FIG. 5G, a watch cover of the smartwatch 1-101 may be in a closed state, or may be in an open state.

In the charging scenarios shown as examples in FIG. 5A to FIG. 5G, two earphones in the earphones 1-102 may be both in position, or may not be in position, or one of the two earphones may be in position. This is not limited in embodiments of this application.

### Power-on/off method

FIG. 6A to FIG. 6G show examples of power-on scenarios.

Power-on indicates a process in which a device is powered on, loads an operating system, and runs some software.

In embodiments of this application, the smartwatch 1-101 and the earphones 1-102 may be separately powered on, or may be powered on together. The two earphones in the earphones 1-102 may be powered on independently or together.

When the smartwatch 1-101 is in a power-off state, the smartwatch 1-101 may be powered on in response to a received user operation.

As shown in FIG. 6A, the smartwatch 1-101 may receive a pressing operation (for example, a short-time pressing operation or a pressing operation lasting for specific duration) performed on the home button on the right side, and then be powered on in response to the pressing operation. The home button may be a physical button, and may also be referred to as a power button, a power on/off button, or the like. The home button may be designed in a form of a watch crown. Duration of the pressing operation that is performed on the home button and that is used to trigger powering on may be preset. This is not limited in embodiments of this application. For example, the duration may be 2 seconds.

The smartwatch 1-101 is coupled to the external power supply, for example, is charged through a wired charger or a wireless charging cradle. After the smartwatch enters a charged state, the smartwatch 1-101 may be powered on. For example, as shown in FIG. 6B, after the smartwatch 1-101 is placed on the wireless charging cradle for charging, the smartwatch may be powered on in response to the charging operation.

After the operation used to trigger powering on is received, the power-on state may be classified into the following types:
1. The two earphones in the earphones 1-102 are both in position, and both the smartwatch 1-101 and the earphones 1-102 are powered on.
2. The earphones 1-102 are partially in position, the smartwatch 1-101 and the in-position earphone are powered on, and the out-of-position earphone is not powered on.
3. The two earphones in the earphones 1-102 are both out of position, the smartwatch 1-101 is powered on, and the earphones 1-102 is not powered on.

Specifically, the smartwatch 1-101 may detect in-position statuses of two earphones in the earphones 1-102. For a specific detection manner, refer to the foregoing related descriptions.

That an earphone is in position means that the earphone is located in a charging compartment in the smartwatch 1-101. When the earphone is outside a watch body, or when the watch cover of smartwatch 1-101 is opened and the earphone is attracted to the watch cover, the earphone is out of position. The charging compartment in the earphones 1-102 may also be referred to as an earphone compartment.

That the two earphones are both in position means that the two earphones (including a left earphone and a right earphone) in the earphones 1-102 are both in position.

That the earphones 1-102 are partially in position means that the left or right earphone in the earphones 1-102 is in the compartment, and the other earphone is outside the watch body of the smartwatch 1-101 or is attracted to the watch cover.

That the two earphones are both out of position means that the left earphone in the earphones 1-102 is outside the watch body of the smartwatch 1-101 or is attracted to the watch cover, and the right earphone is also outside the watch body of the smartwatch 1-101 or is attracted to the watch cover.

A sequence of powering on the smartwatch 1-101 and the earphone in the foregoing cases 1 and 2 is not limited in embodiments of this application. In some implementations, after receiving an operation used to trigger powering on, the smartwatch 1-101 may be first powered on, and then detect an in-position status of the earphones 1-102. Then, the earphones 1-102 or an in-position earphone is triggered to be powered on based on the in-position status. In some other implementations, the smartwatch 1-101, the earphones 1-102, and the in-position earphone may alternatively be powered on at the same time.

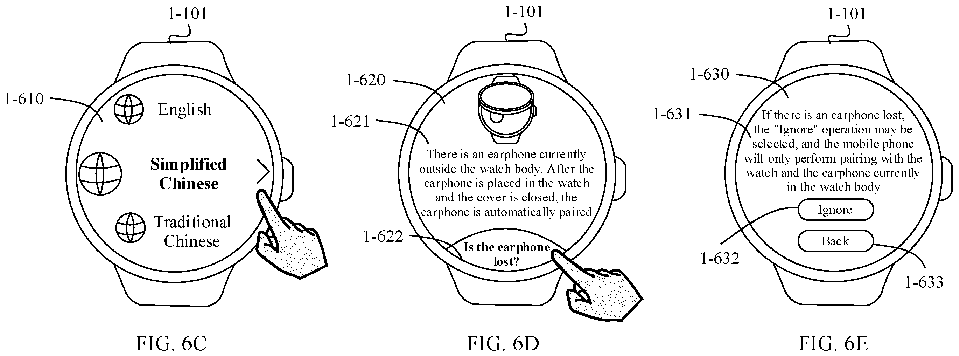

As shown in FIG. 6C, after detecting, for the first time, the operation used to trigger powering on, the smartwatch 1-101 may display a user interface 1-610. The operation that is detected for the first time and that is of triggering powering on may be that the smartwatch 1-101 detects the operation for the first time after the smartwatch is delivered from a factory or after the smartwatch is restored to factory settings. The user interface 1-610 displays a plurality of language options for the user to select, for example, a "Simplified Chinese" option in the figure. After the user taps one of the language options, the smartwatch 1-101 displays a subsequent user interface in a language corresponding to the language option.

If the two earphones are both in position, the smartwatch 1-101 performs pairing with the earphones 1-102 after receiving the user operation of selecting the language option by the user. The smartwatch 1-101 receives the user operation of selecting the language option by the user, and may further establish a connection to an electronic device 1-200.

If either of the left earphone and the right earphone is out of position, the smartwatch 1-101 may prompt, after receiving the user operation of selecting the language option by the user, the user to place the earphone in the compartment. For example, the smartwatch 1-101 may display a user interface 1-620 shown as an example in FIG. 6D. Prompt information 1-621 (for example, "There is an earphone currently outside the watch body. Place the earphone and close the cover. If this step is ignored, the earphone outside the watch body cannot be used") and a control 1-622 may be displayed on the user interface 1-620. A text "Is the earphone lost?" may be displayed on the control 1-622. In some implementations, the prompt information 1-621 may further indicate a specific earphone that is out of position.

If the user places the out-of-position earphone in a compartment after viewing the prompt information 1-621, after the smartwatch 1-101 detects the in-position earphone, the in-position earphone that is placed in the compartment may be triggered to be powered on. The user may place the out-of-position earphone in the compartment in a power-on process of the smartwatch 1-101, or after the smartwatch 1-101 is powered on, or in another scenario. This is equivalent to that the earphones 1-102 are placed in the compartment in a power-off state, and may be triggered to be powered on.

If the smartwatch 1-101 detects an operation (for example, a tap operation) performed by the user on the control 1-622, in response to the operation, the smartwatch 1-101 may display a user interface 1-630 shown as an example in FIG. 6E.

As shown in FIG. 6E, prompt information 1-631 (for example, "If there is an earphone lost, select the 'Ignore' operation. The mobile phone will only perform pairing with the watch and the earphone currently in the watch body"), a control 1-632, and a control 1-633 are displayed on the user interface 1-630.

If the smartwatch 1-101 detects an operation (for example, a tap operation) performed by the user on the control 1-633, in response to the operation, the smartwatch 1-101 may return to display the user interface shown in FIG. 6D, to prompt the user to place the earphone in a compartment.

If the smartwatch 1-101 detects an operation (for example, a tap operation) performed by the user on the control 1-632, in response to the operation, the smartwatch 1-101 and the in-position earphone are powered on.

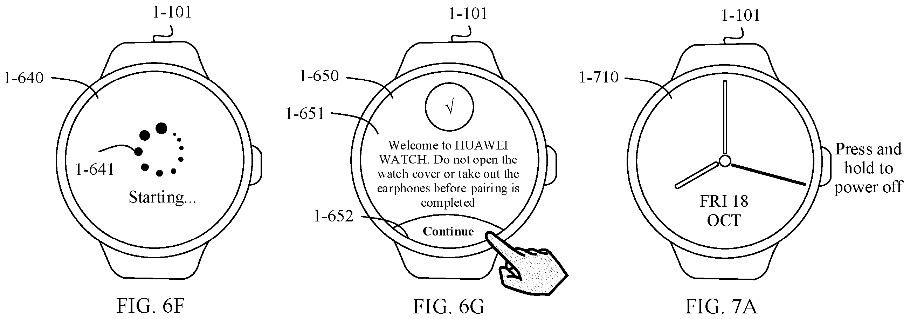

As shown in FIG. 6F, in a power-on process of the smartwatch 1-101, a user interface 1-640 may be displayed, and prompt information 1-641 on the user interface 1-640 is used to give the user a prompt that the smartwatch 1-101 is currently being powered on. In some implementations, if a power-on speed of the smartwatch 1-101 is high, the user interface 1-640 may be skipped and not be displayed.

After the smartwatch 1-101 is powered on, the smartwatch may perform pairing with the in-position earphone. After being powered on, the smartwatch 1-101 may also establish the connection to the electronic device 1-200. After the smartwatch 1-101 is powered on, a user interface 1-650 shown in FIG. 6G may be further displayed, and prompt information (for example, text "Welcome to HUAWEI WATCH. Do not open the watch cover or take out the earphones before pairing is completed") on the user interface 1-650 may be used to give the user a prompt that the earphones 1-102 need to be placed in the compartment in a pairing process. After receiving a user operation performed on a control 1-652 on the user interface 1-650, the smartwatch 1-101 may continue the pairing process.

In some implementations, if the smartwatch 1-101 is not powered on for the first time, the user interface 1-610 for selecting a language shown in FIG. 6C may be skipped, and the home screen or the user interface 1-620 shown in FIG. 6D is directly displayed.

The left earphone or the right earphone in the earphones 1-102 may be activated and powered on by a voltage (for example, a voltage of 5 V). For example, after receiving an operation of triggering powering on, the smartwatch 1-101 may input a signal (for example, a voltage) to an in-position earphone through a communication electrode, to activate the in-position earphone to be powered on. Then, the powered-on earphone may provide a service, for example, playing audio, for the user based on a requirement.

In the power-on scenarios shown as examples in FIG. 6A to FIG. 6G, the watch cover of the smartwatch 1-101 may be in the closed state, or may be in the open state. This is not limited in embodiments of this application.

FIG. 7A to FIG. 7G show an example of a power-off scenario.

Power-off indicates a process of shutting down running software, saving data, exiting a system, and powering off a device.

Power-off may be further classified into a ship mode (ship mode) and a normal power-off mode. In the ship mode, the device is completely powered off. In the normal power-off mode, a processor of the device is powered off but some peripherals are still powered on.

In embodiments of this application, the smartwatch 1-101 and the earphones 1-102 may be powered off independently or together. The two earphones in the earphones 1-102 may be powered off independently or together.

When the smartwatch 1-101 is in a power-on state, the smartwatch 1-101 may be powered off in response to a received user operation.

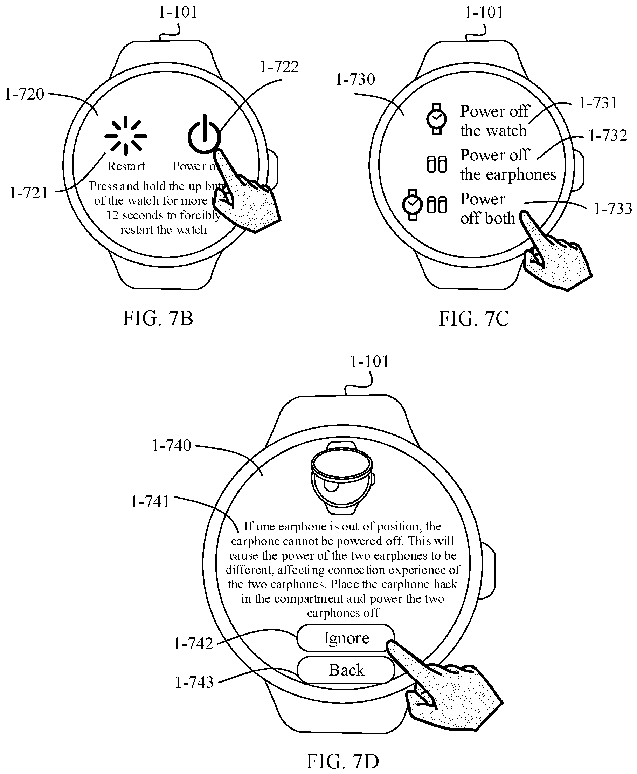

As shown in FIG. 7A, the smartwatch 1-101 may receive a pressing operation (for example, a short-time pressing operation or a pressing operation lasting for specific duration) performed on the home button on the right side, and then, in response to the pressing operation, the smartwatch 1-101 may display a user interface 1-720 shown in FIG. 7B. Here, duration of the pressing operation used to trigger the smartwatch 1-101 to display the user interface 1-720 may be preset. This is not limited in embodiments of this application. For example, the duration may be 5 seconds.

As shown in FIG. 7B, a control 1-721 and a control 1-722 are displayed on the user interface 1-720. After receiving a user operation performed on the control 1-722, the smartwatch 1-101 may display a user interface 1-730 shown in FIG. 7C.

As shown in FIG. 7C, a control 1-731 used to trigger the smartwatch 1-101 to be powered off, a control 1-732 used to trigger the earphone 1-102 to be powered off, and a control 1-733 used to trigger the smartwatch 1-101 and the earphones 1-102 to be powered off are displayed on the user interface 1-730. The control 1-731 may also be referred to as a power-off control for triggering the smartwatch 1-101 to be powered off. The control 1-732 may also be referred to as a power-off control for triggering the in-position earphone to be powered off. The control 1-733 may also be referred to as a power-off control for triggering the smartwatch 1-101 and the in-position earphone to be powered off.

After the smartwatch 1-101 receives a user operation performed on the control 1-733, based on different in-position statuses of the earphones 1-102, power-off states of the smartwatch 1-101 and the earphones 1-102 may be classified into the following several types:
1. The two earphones in the earphones 1-102 are both in position, and both the smartwatch 1-101 and the earphones 1-102 are powered off.
2. The earphones 1-102 are partially in position, the smartwatch 1-101 and the in-position earphone are powered off, and the out-of-position earphone is not powered off.
3. The two earphones in the earphones 1-102 are both out of position, the smartwatch 1-101 is powered off, and the earphones 1-102 are not powered off.

After the smartwatch 1-101 receives the user operation performed on the control 1-733, if one of the left earphone and the right earphone is out of position, the smartwatch 1-101 may prompt the user to place the earphone in a compartment, and may further give the user a prompt that power of the two earphones is inconsistent because the single earphone is out of position. This is because the out-of-position earphone is continuously in use, and the in-position earphone is powered off.

For example, the smartwatch 1-101 may display a user interface 1-740 shown as an example in FIG. 7D. Prompt information 1-741 (for example, "If one earphone is out of position, the earphone cannot be powered off. This will cause the power of the two earphones to be different, affecting connection experience of the two earphones. Place the earphone back in the compartment and power the two earphones off"), a control 1-742, and a control 1-743 may be displayed on the user interface 1-740. In some implementations, the prompt information 1-741 may further indicate a specific earphone that is out of position.

If the user places the out-of-position earphone in the compartment after viewing the prompt information 1-741, after the smartwatch 1-101 detects the earphone that is in position, the smartwatch 1-101 and the earphone that is placed in the compartment and that is in position may be triggered to be powered off.

If the smartwatch detects an operation (for example, a tap operation) performed by the user on the control 1-743, in response to the operation, the smartwatch 1-101 may return to display the user interface shown in FIG. 7C.

If the smartwatch 1-101 detects an operation (for example, a tap operation) performed by the user on the control 1-742, in response to the operation, the smartwatch 1-101 and the in-position earphone are both powered off.

After the smartwatch 1-101 receives the user operation performed on the control 1-733 in FIG. 7C, if the two earphones are both out of position, the smartwatch 1-101 may prompt the user to place the earphones in compartments.

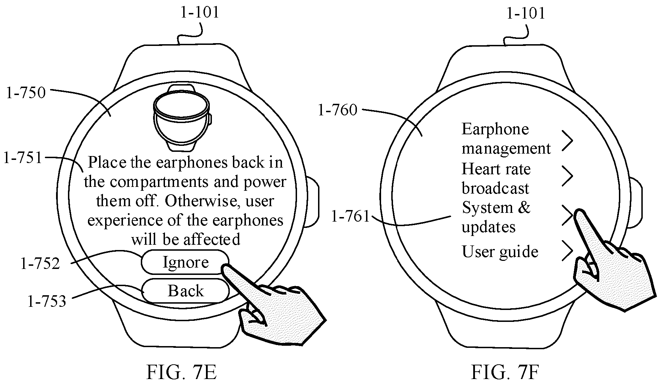

For example, the smartwatch 1-101 may display a user interface 1-750 shown as an example in FIG. 7E. Prompt information 1-751 (for example, "Place the earphones back in the compartments and power them off. Otherwise, user experience of the earphones will be affected"), a control 1-752, and a control 1-753 may be displayed on the user interface 1-750.

If the user places one or both of the out-of-position earphones in a compartment after viewing the prompt information 1-751, after the smartwatch 1-101 detects the one or two in-position earphones, the one or two in-position earphones that are placed in the compartment may be triggered to be powered off, and an out-of- position earphone is not powered off.

If the smartwatch detects an operation (for example, a tap operation) performed by the user on the control 1-753, in response to the operation, the smartwatch 1-101 may return to display the user interface shown in FIG. 7C.

If the smartwatch 1-101 detects an operation (for example, a tap operation) performed by the user on the control 1-752, in response to the operation, the smartwatch 1-101 and the in-position earphone are both powered off, and the out-of-position earphone is not powered off.

After the smartwatch 1-101 receives a user operation performed on the control 1-731 in FIG. 7C, the smartwatch 1-101 is powered off, and the earphones 1-102 are not powered off.

After the smartwatch 1-101 receives a user operation performed on the control 1-732 in FIG. 7C, the smartwatch 1-101 is not powered off, and a power-off state of the earphones 1-102 is determined with reference to in-position statuses of the two earphones. Here, for a specific implementation of powering off the earphones 1-102 with reference to the in-position statuses of the two earphones, refer to the foregoing related descriptions in FIG. 7D and FIG. 7E.

In some implementations of this application, after receiving the operation performed on the control 1-722 in FIG. 7B, the smartwatch 1-101 may skip displaying the user interface 1-730 shown in FIG. 7C, and the user does not need to select devices to be powered off. It is considered by default that the operation performed on the control 1-722 is used to trigger the smartwatch 1-101 and the earphones 1-102 to be powered off. In other words, the operation performed by the smartwatch 1-101 after receiving the operation performed on the control 1-722 is the same as the operation that is described above and that is performed by the smartwatch 1-101 after receiving the operation performed on the control 1-722 in FIG. 7C. For details, refer to related descriptions.

In some other implementations of this application, in addition to the pressing operation performed on the home button on the right side of the smartwatch 1-101, the smartwatch 1-101 and the earphones 1-102 may be triggered to be powered off in another manner. This is not limited in embodiments of this application.

As shown in FIG. 7F, a Settings application in the smartwatch 1-101 may provide a user interface 1-760. One or more setting options, for example, a system and update option 1-761, are displayed on the user interface 1-760.

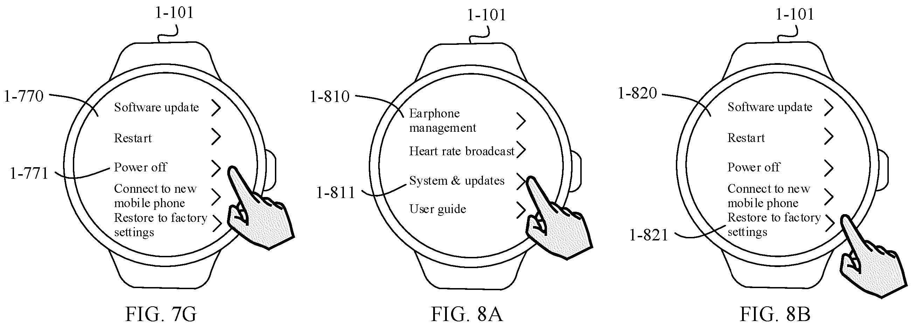

After detecting a user operation performed on the system and update option 1-761, the smartwatch 1-101 may display a user interface 1-770 shown in FIG. 7G. One or more setting options related to a system and an update, for example, a power-off option 1-771, are displayed on the user interface 1-770. A function of the power-off option 1-771 is the same as a function of the power-off option 1-722 in FIG. 7B, and may be used to trigger the smartwatch 1-101 and the earphones 1-102 to be powered off. For an interface displayed and an action performed after the smartwatch 1-101 detects an operation performed on the power-off option 1-771, refer to the foregoing interface displayed and the action performed after the smartwatch 1-101 detects the operation performed on the power-off option 1-722 in FIG. 7B. Details are not described herein again.

This is not limited thereto. In some other implementations, the electronic device 1-200 may alternatively receive a user operation used to trigger the smartwatch 1-101 and the earphones 1-102 to be powered off. This is not limited in embodiments of this application.

The left earphone or the right earphone in the earphones 1-102 may be triggered by the smartwatch 1-101 to be powered off. For example, after receiving an operation of triggering powering on, the smartwatch 1-101 may input a signal to an in-position earphone through the communication electrode, to trigger the in-position earphone to be powered off.

In the power-on scenario shown as an example in FIG. 7A to FIG. 7G, the watch cover of the smartwatch 1-101 may be in the closed state, or may be in the open state. This is not limited in embodiments of this application.

In some implementations, the smartwatch 1-101 and the earphones 1-102 may further determine, based on power of the smartwatch 1-101 and the earphones 1-102, whether to change from a power-on state to a power-off state.

If remaining power of the smartwatch 1-101 is low, for example, lower than a first threshold, the smartwatch 1-101 may be powered off, to maintain the power to support an important service. The first threshold may be preset. In this case, if power of the earphones 1-102 is sufficient, the earphones 1-102 are not powered off as the smartwatch 1-101 is powered off, but remain in a power-on state.

If the remaining power of the earphones 1-102 is low, for example, lower than a second threshold, the earphones 1-102 may be powered off, to maintain the power to support an important service. The second threshold may be preset. In this case, if the power of the smartwatch 1-101 is sufficient, the smartwatch 1-101 is not powered off as the earphones 1-102 are powered off, but remains in a power-on state. In some implementations, if the power of the two earphones in the earphones 1-102 is inconsistent, one earphone with lower remaining power may be powered off, and the other earphone remains in a power-on state.

In some implementations, before the smartwatch 1-101 and the earphones 1-102 are powered off due to low power, the smartwatch 1-101 and the earphones 1-102 may further give the user a prompt that the smartwatch 1-101 and the earphones 1-102 are to be powered off, so that the user can perform actions such as charging or data storage.

In addition to powering on or powering off based on the user operation, the charging status, the power, and the like shown in FIG. 6A to FIG. 6G and FIG. 7A to FIG. 7G, the smartwatch 1-101 and the earphones 1-102 may be powered on or powered off in another manner.

For example, the earphones 1-102 may be further powered on or powered off based on a use habit of the user.

For example, the earphones 1-102 may record a frequency of using a service provided by the earphones 1-102 by the user, and learn a habit of using the earphones 1-102 by the user, to learn of a time period in which the user usually uses the earphones 1-102 and a time period in which the user does not use the earphones 1-102. In this way, the earphones 1-102 may be powered on in the learned time period in which the user uses the earphones 1-102, and may be powered off in the learned time period in which the user does not use the earphones 1-102.

For another example, the earphones 1-102 may alternatively be powered on or powered off based on a sleep state of the user.

For example, after the user falls asleep (that is, enters the sleep state), the earphones 1-102 may be powered off. After the user wakes up (that is, exits the sleep state), the earphones 1-102 may be powered on. The sleep state of the user may be detected by any one or more of the smartwatch 1-101, the electronic device 1-200, an electronic device 300, or the earphones 1-102. Specifically, the sleep state of the user may be analyzed based on data measured by a component like a heart rate sensor or a blood pressure meter.

For another example, the smartwatch 1-101 may alternatively be powered on or powered off based on a state in which the smartwatch is worn or picked up.

For example, when the smartwatch 1-101 is picked up or worn by the user on a wrist, the smartwatch 1-101 is powered on. When the smartwatch 1-101 is put down or removed by the user from the wrist, the smartwatch 1-101 is powered off. In this way, the smartwatch 1-101 may be powered on only when the user uses the smartwatch 1-101, thereby saving power. A pick-up state or a wearing state of the smartwatch 1-101 may be obtained by analyzing data collected by a component like a heart rate sensor, an acceleration sensor, a speed sensor, an ambient light sensor, or a temperature sensor in the smartwatch 1-101.

For another example, the earphones 1-102 may alternatively be powered on or powered off based on a state in which the earphones are worn or picked up.

For example, when the earphones 1-102 are picked up or worn in ears, the earphones 1-102 are powered on. When the earphones 1-102 are put down or taken out of the ears by the user, the earphones 1-102 are powered off. In this way, the earphones 1-102 may be powered on only when the user uses the earphones 1-102, thereby saving power. A pick-up state or an in-ear state of the earphones 1-102 may be obtained by analyzing data collected by a component like an ambient light sensor or a temperature sensor in the earphones 1-102.

For another example, the smartwatch 1-101 or the earphones 1-102 may be woken up by a tap or a touch, to be powered on.

For example, the smartwatch 1-101 may be powered on when detecting that the display of the smartwatch is touched. The earphones 1-102 may be powered on when detecting that the earphones is touched or pressed.

For another example, the earphones 1-102 may alternatively be powered on or powered off based on the state in which the smartwatch 1-101 is worn or picked up.

For example, when the smartwatch 1-101 is picked up or worn by the user on the wrist, the earphones 1-102 are powered on. When the smartwatch 1-101 is put down or removed by the user from the wrist, the earphone 1-102 is powered off. For example, after the earphones 1-102 are placed in the compartment, if the smartwatch 1-101 is not worn, the earphones 1-102 may enter the power-off state after a period of time. In this way, the earphones 1-102 may be powered on only when the user uses the smartwatch 1-101, thereby saving power.

For another example, the earphones 1-102 may alternatively be powered on or powered off based on an open/closed state of the watch cover in the smartwatch 1-101.

For example, when the earphones 1-102 are located in the compartment, the earphones 1-102 are powered on when the watch cover of the smartwatch 1-101 is opened, and are powered off after the watch cover of the smartwatch 1-101 is closed. A Hall effect sensor may be disposed on the smartwatch 1-101, and the Hall effect sensor may be configured to detect the open/closed state of the watch cover in the smartwatch 1-101.

For another example, the earphones 1-102 may alternatively be powered off based on a status of the earphones 1-102 when the earphones are placed in the compartment.

For example, if the earphones 1-102 are placed in the compartment in a non-fully-charged state, the earphones 1-102 may be automatically powered off after the earphones 1-102 are fully charged in the compartment for specific duration (for example, 10 minutes).

For another example, if the earphones 1-102 are placed in the compartment in a fully-charged state, the earphones 1-102 may be automatically powered off after specific duration (for example, 30 minutes).

For another example, after the earphones 1-102 are placed in the compartment, if the smartwatch 1-101 is not in a charged state, the earphones 1-102 may be automatically powered off after being placed in the compartment for specific duration.

For another example, after the earphones 1-102 are placed in the compartment in the power-off state, the smartwatch 1-101 may detect that the earphones 1-102 are in position, and may trigger the earphones 1-102 to be powered on.

For another example, when an earphone in the earphones 1-102 is taken out of the charging compartment, the smartwatch 1-101 may trigger the in-position earphone to be powered on. When the earphone is not completely removed from the compartment, the earphone is still in the in-position state, and therefore may be triggered by the smartwatch 1-101 to be powered on.

In the foregoing several examples, the two earphones in the earphones 1-102 may be powered on or off together, or only one of the earphones may be powered on or off. This specifically depends on in-position statuses of the two earphones. For example, in the earphones 1-102, when only the left earphone is worn by the user in an ear and the right earphone is not worn in an ear, the left earphone may be powered on, and the right earphone remains in a power-off state.

For another example, the earphones 1-102 may alternatively be powered on or off based on a service state of the earphones 1-102.

For example, the earphones 1-102 are powered off when no audio service (for example, playing music or playing a peer-end voice during a call) is performed for specific duration (for example, 30 seconds), and are powered on if a new audio service (for example, playing music or playing a peer-end voice during a call) occurs after the earphones are powered off. Data, for example, music and a voice, generated when the earphones 1-102 perform the audio service may be from the smartwatch 1-101, or may be from the electronic device 1-200 or the electronic device 300. In this power-on/off solution, power of the earphones 1-102 can be saved without affecting user experience of the earphones 1-102.

In the foregoing examples of powering on or off the earphones 1-102 shown in this application, any one earphone or two earphones in the earphones 1-102 may be in a compartment, and the earphone in the compartment is powered on or off when a corresponding condition is met. The earphone in the compartment may be triggered to be powered on or off by the smartwatch 1-101. For example, the smartwatch 1-101 may send a signal to the earphone through the communication electrode, to trigger the earphone in the compartment to be powered on or off.

### Method for restoring to factory settings

FIG. 8A to FIG. 8S show an example of a scenario of restoring to the factory settings.

Restoring to the factory settings means that a device clears all stored user information, applications installed when the user uses the device, downloaded data, and stored parameters (such as pairing relationships with other devices), and is restored to factory default settings. Restoring to the factory settings may also be referred to as resetting. After the factory settings are restored to, only a default factory application is installed on the device, and settings in the device also comply with the factory default settings, for example, a default notification and reminder manner, default volume, and default screen brightness. After the device is restored to the factory settings, the device is like a device that is just delivered to the user, and there is no use trace of any user.

In embodiments of this application, the smartwatch 1-101 and the earphones 1-102 may be independently restored to factory settings, or may be restored to factory settings together. The two earphones in the earphones 1-102 may be independently restored to factory settings, or may be restored to factory settings together.

The smartwatch 1-101 may receive a user operation used to restore to the factory settings.

FIG. 8A to FIG. 8E show an example of a scenario in which the user operation of restoring to the factory settings is received on the smartwatch 1-101.

As shown in FIG. 8A, a Settings application in the smartwatch 1-101 may provide a user interface 1-810. One or more setting options, for example, a system and update option 1-811, are displayed on the user interface 1-810.

After detecting a user operation performed on the system and update option 1-811, the smartwatch 1-101 may display a user interface 1-820 shown in FIG. 8B. One or more setting options related to a system and an update, for example, a factory setting restore option 1-821, are displayed on the user interface 1-820. The factory setting restore option 1-821 may also be referred to as a factory setting restore control for triggering the smartwatch 1-101 and an in-position earphone to be restored to factory settings.

If the smartwatch 1-101 detects an operation (for example, a tap operation) performed by the user on the factory setting restore option 1-821, factory setting restoring statuses of the smartwatch 1-101 and the earphones 1-102 may be classified into the following types based on the different in-position statuses of the earphones 1-102:
1. The two earphones in the earphones 1-102 are both in position, and both the smartwatch 1-101 and the earphones 1-102 are restored to the factory settings.
2. The earphones 1-102 are partially in position, the smartwatch 1-101 and the in-position earphone are restored to factory settings, and the out-of-position earphone is not restored to factory settings.
3. The two earphones in the earphones 1-102 are both out of position, and the smartwatch 1-101 is restored to factory settings, and the earphones 1-102 are not restored to factory settings.

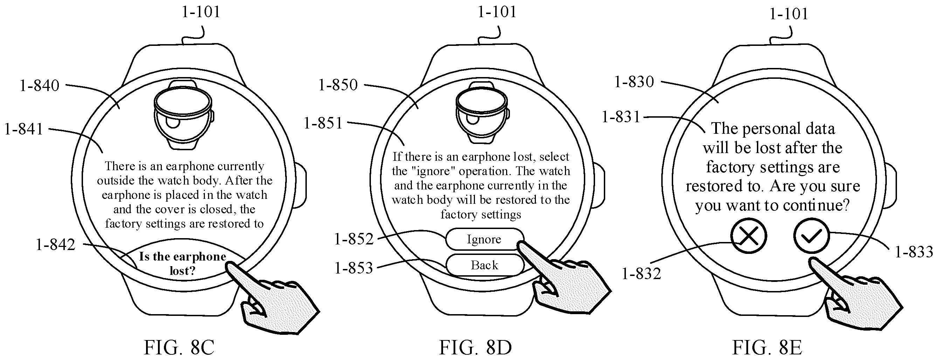

After the smartwatch 1-101 receives the user operation performed on the factory setting restore option 1-821, if at least one of the left earphone and the right earphone is out of position, the smartwatch 1-101 may prompt the user to place the earphone in a compartment. For example, the smartwatch 1-101 may display a user interface 1-840 shown as an example in FIG. 8C. Prompt information 1-841 (for example, "There is an earphone currently outside the watch body. After the earphone is placed in the watch and the cover is closed, the factory settings are restored to") and a control 1-842 may be displayed on the user interface 1-840. A text "Is the earphone lost?" may be displayed on the control 1-842. In some implementations, the prompt information 1-841 may further indicate a specific earphone that is out of position.

If the user places the two earphones in the compartments after viewing the prompt information 1-841, after the smartwatch 1-101 detects that the two earphones are both in position, the smartwatch 1-101 may display a user interface 1-830 shown in FIG. 8E.

If the smartwatch 1-101 detects an operation (for example, a tap operation) performed by the user on the control 1-842, in response to the operation, the smartwatch 1-101 may display a user interface 1-850 shown as an example in FIG. 8D.

As shown in FIG. 8D, prompt information 1-851 (for example, "If there is an earphone lost, select the 'ignore' operation. The watch and the earphone currently in the watch body will be restored to the factory settings"), a control 1-852, and a control 1-853 are displayed on the user interface 1-850.

If the smartwatch 1-101 detects an operation (for example, a tap operation) performed by the user on the control 1-853, in response to the operation, the smartwatch 1-101 may return to display the user interface shown in FIG. 8C, to prompt the user to place the earphone in a compartment.

If the smartwatch 1-101 detects an operation (for example, a tap operation) performed by the user on the control 1-852, in response to the operation, the smartwatch 1-101 may display the user interface 1-830 shown in FIG. 8E.

As shown in FIG. 8E, prompt information 1-831 (for example, "The personal data will be lost after the factory settings are restored to"), a control 1-832, and a control 1-833 are displayed on the user interface 1-830.

The prompt information 1-831 is used to prompt the user with a result obtained through restoring to the factory settings.

If the smartwatch 1-101 detects an operation (for example, a tap operation) performed by the user on the control 1-832, in response to the operation, the smartwatch 1-101 may return to display the user interface 1-820 shown in FIG. 8B.

If the smartwatch 1-101 detects an operation (for example, a tap operation) performed by the user on the control 1-833, in response to the operation, both the smartwatch 1-101 and the in-position earphone are restored to the factory settings. Specifically, the smartwatch 1-101 may first send an instruction to the in-position earphone to instruct the in-position earphone to be restored to factory settings. After the in-position earphone is restored to the factory settings, the in-position earphone feeds back an instruction to the smartwatch 1-101, and then the smartwatch 1-101 is restored to the factory settings. This is not limited thereto. In some other implementations, the smartwatch 1-101 may alternatively first be restored to the factory settings, and then indicate the earphones 1-102 to be restored to factory settings. Alternatively, the smartwatch 101 and the earphones 1-102 may simultaneously perform an operation of restoring to the factory settings. A sequence of restoring to the factory settings of the smartwatch 101 and the earphones 1-102 is not limited in embodiments of this application.

In some other implementations, after detecting the operation performed on the factory setting restore option 1-821 in FIG. 8B, the smartwatch 1-101 may further provide a smartwatch 101 option, an earphones 1-102 option, and a "both" option for the user to select a device to be restored to factory settings. After the smartwatch 1-101 detects an operation performed on the smartwatch 101 option, the smartwatch 1-101 is restored to the factory settings, and the earphones 1-102 are not restored to the factory settings. After the smartwatch 1-101 detects an operation performed on the earphones 1-102 option, the earphones 1-102 are restored to the factory settings, and the smartwatch 1-101 is not restored to the factory settings. After the smartwatch 1-101 detects an operation performed on the "both" option, the earphones 1-102 and the smartwatch 1-101 are restored to the factory settings. Here, the smartwatch 1-101 option may also be referred to as a factory setting restore option used to trigger the smartwatch 1-101 to be restored to the factory settings, the earphones 1-102 option may also be referred to as a factory setting restore option used to trigger the in-position earphone to be restored to the factory settings, and the "both" option may also be referred to as a factory setting restore option used to trigger the smartwatch 1-101 and the in-position earphone to be restored to the factory settings. In addition, factory setting restoring statuses of the two earphones in the earphones 1-102 further need to be determined with reference to in-position statuses of the two earphones. For details, refer to the foregoing related descriptions.

The electronic device 1-200 may also receive the user operation used to restore to the factory settings.

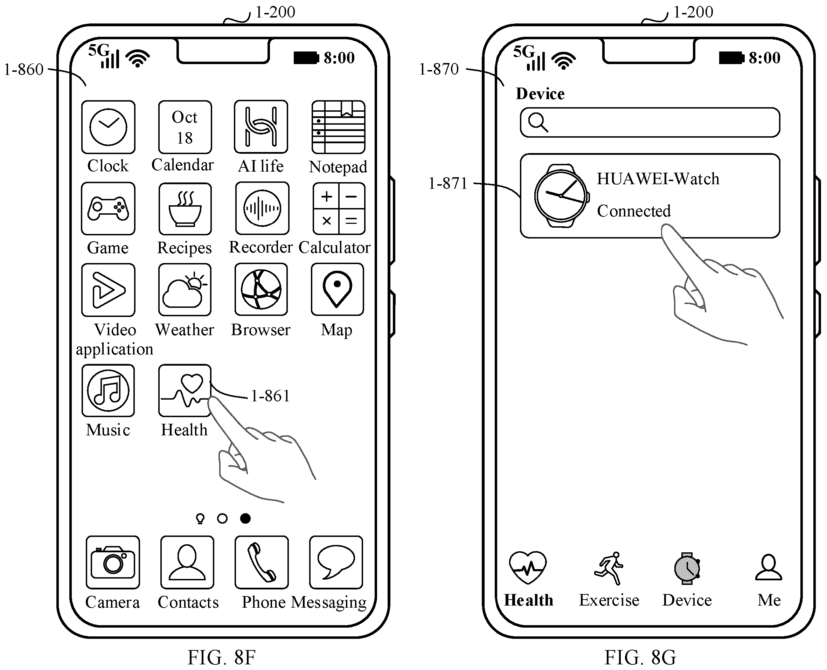

FIG. 8F to FIG. 8J show an example of a scenario in which the user operation of restoring to the factory settings is received on the electronic device 1-200.

FIG. 8F shows an example of a user interface 1-860 that is on the electronic device 1-200 and that is used to display an installed application.

As shown in FIG. 8F, an icon 1-861 of a Health application is displayed on the user interface 1-860. The Health application is an application installed in the electronic device and used to manage a health device and health data. A name of the application is not limited in embodiments. The Health application may be a system application provided by a mobile phone 100, or may be a third-party application.

After detecting a user operation (for example, a tap operation or a touch operation) performed on the icon 1-861, in response to the user operation, the electronic device 1-200 starts the Health application and displays a user interface 1-870 shown in FIG. 8G.

Refer to FIG. 8G. The user interface 1-870 are used to display a binding relationship between the electronic device 1-200 and another electronic device. A tab 1-871 is displayed on the user interface 1-870. An identifier of the smartwatch 1-101, for example, a picture or an identifier (for example, a name "Watch") may be displayed on the tab 1-871, and a status of a connection between the smartwatch 1-101 and the electronic device 1-200 may further be displayed on the tab 1-871. As shown in FIG. 8G, the smartwatch 1-101 and the electronic device 1-200 are currently in a connected state.

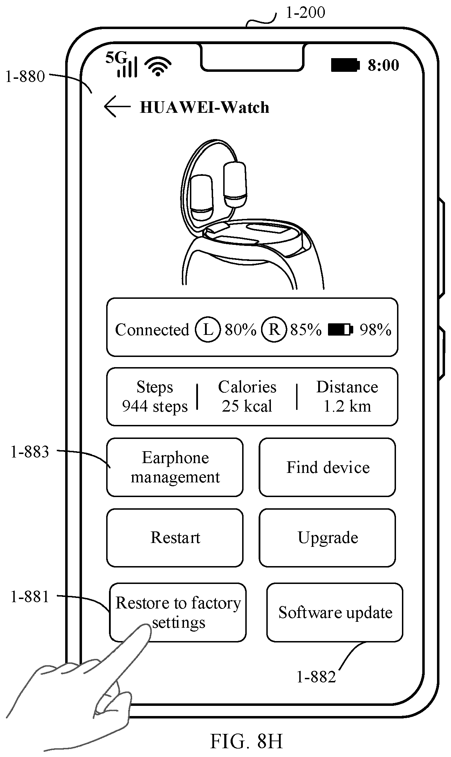

After detecting a user operation performed on the tab 1-871, in response to the user operation, the electronic device 1-200 may display a user interface 1-880 shown in FIG. 8H. Detailed information of the smartwatch 1-101 corresponding to the tab 1-871 and the earphone 1-102 that may be accommodated in the smartwatch 1-101, for example, a device identifier, a device type, respective power of the smartwatch 1-101 and the earphones 1-102, is displayed on the user interface 1-880.

As shown in FIG. 8H, a factory setting restore option 1-881, a software update option 1-882, an earphone management option 1-883, and some other options are further displayed on the user interface 1-880.

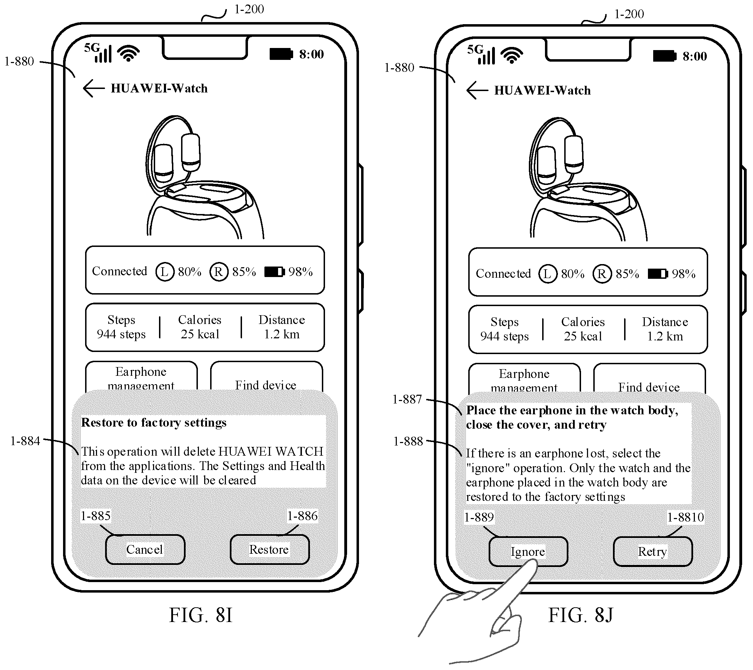

As shown in FIG. 8I, after detecting a user operation performed on the factory setting restore option 1-881, the electronic device 1-200 may display, on the user interface 1-880, prompt information 1-884 (for example, "This operation will delete HUAWEI WATCH from the applications. The Settings and Health data on the device will be cleared"), a control 1-885, and a control 1-886.

The prompt information 1-884 is used to prompt the user with a result obtained through restoring to the factory settings.

If the electronic device 1-200 detects an operation (for example, a tap operation) performed by the user on the control 1-885, in response to the operation, the electronic device may return to display the user interface 1-880 shown in FIG. 8H.

If the electronic device 1-200 detects an operation (for example, a tap operation) performed by the user on the control 1-886, in response to the operation, the electronic device 1-200 may trigger the smartwatch 1-101 to be restored to the factory settings, and the earphones 1-102 are also restored to the factory settings based on different in-position statuses. Here, for factory setting restoring statuses of the smartwatch 1-101 and the earphones 1-102 determined after the electronic device 1-200 detects the operation performed by the user on the control 11-886, refer to the foregoing descriptions of the factory setting restoring statuses of the smartwatch 1-101 and the earphones 1-102 determined after the smartwatch 1-101 detects the operation performed by the user on the factory setting restore option 1-821. This is not described herein again.

For example, after detecting the operation performed by the user on the control 1-886, the electronic device 1-200 may prompt the user to place the earphones in the compartment. For example, the electronic device 1-200 may display prompt information 1-887 (for example, "Place the earphones in the watch body, close the cover, and retry") in FIG. 8J.

Prompt information 1-888 (for example, "If there is an earphone lost, select the 'ignore' operation. Only the watch and the earphone placed in the watch body are restored to the factory settings"), a control 1-889, and a control 1-8810 may be further displayed on the user interface 1-880 in FIG. 8J.

If the electronic device 1-200 detects an operation (for example, a tap operation) performed by the user on the control 1-889, in response to the operation, the electronic device 1-200 may indicate the smartwatch 1-101 and the earphones 1-102 to be restored to the factory settings, factory setting restoring statuses of the two earphones in the earphones 1-102 further need to be determined based on in-position statuses of the two earphones.

If the electronic device 1-200 detects an operation (for example, a tap operation) performed by the user on the control 1-8810, in response to the operation, the electronic device 1-200 may re-indicate the smartwatch 1-101 and the earphones 1-102 to be restored to the factory settings.

When the electronic device 1-200 receives the user operation used to restore to the factory settings, the smartwatch 1-101 may not need to detect an in-position status of the earphones 1-102, and the electronic device 1-200 directly prompts the user to place the two earphones in the earphones 1-102 in the compartments. Certainly, in some other implementations, the electronic device 1-200 may alternatively query the smartwatch 1-101 for the in-position status of the earphones 1-102, and then specifically give the user a prompt based on the in-position status.

In some other implementations, after detecting the operation performed on the factory setting restore option 1-881 in FIG. 8H, the electronic device 1-200 may further provide a smartwatch 101 option, an earphones 1-102 option, and a "both" option for the user to select a device to be restored to factory settings. After the electronic device 1-200 detects an operation performed on the smartwatch 101 option, the smartwatch 1-101 is restored to the factory settings, and the earphones 1-102 are not restored to the factory settings. After the electronic device 1-200 detects an operation performed on the earphones 1-102 option, the earphones 1-102 are restored to the factory settings, and the smartwatch 1-101 is not restored to the factory settings. After the electronic device 1-200 detects an operation performed on the "both" option, the earphones 1-102 and the smartwatch 1-101 are restored to the factory settings. In addition, the factory setting restoring statuses of the two earphones in the earphones 1-102 further need to be determined with reference to the in-position statuses of the two earphones. For details, refer to the foregoing related descriptions.

In a process of restoring the smartwatch 1-101 to the factory settings, a pairing relationship between the smartwatch 1-101 and the earphones 1-102 that are previously paired with the smartwatch and between the smartwatch 1-101 and the electronic device 1-200 that is previously paired with the smartwatch and related data are deleted. In some implementations, the earphones 1-102 and the electronic device 1-200 also delete pairing relationships with the smartwatch 1-101 and related data.

After the smartwatch 1-101 is successfully restored to the factory settings, subsequent steps are performed based on operations of first powering on, including powering on, pairing with the earphones 1-102, establishing a connection to the electronic device 1-200, and the like. The smartwatch 1-101 may be successfully restored to the factory settings after the smartwatch 1-101 receives the user operation used to restore to the factory settings, or after the electronic device 1-200 receives the user operation used to restore to the factory settings.

For example, after the smartwatch 1-101 is successfully restored to the factory settings, user interfaces shown in FIG. 6A to FIG. 6G may be displayed. For an operation performed by the smartwatch 1-101, refer to the foregoing related descriptions in FIG. 6A to FIG. 6G.

The smartwatch 1-101 may receive a user operation used to trigger the earphones 1-102 to be independently restored to the factory settings.

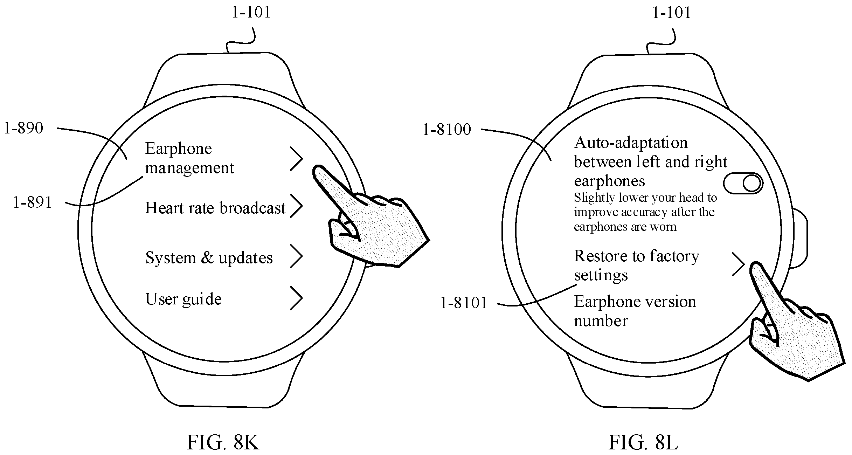

FIG. 8K to FIG. 8S show an example of a scenario in which the user operation of restoring to the factory settings is received on the smartwatch 1-101.

As shown in FIG. 8K, the Settings application in the smartwatch 1-101 may provide a user interface 1-890. One or more setting options, for example, an earphone management option 1-891, are displayed on the user interface 1-890.

After detecting a user operation performed on the earphone management option 1-891, the smartwatch 1-101 may display a user interface 1-8100 shown in FIG. 8L. One or more setting options related to earphone management, for example, a factory setting restore option 1-8101, are displayed on the user interface 1-8100.

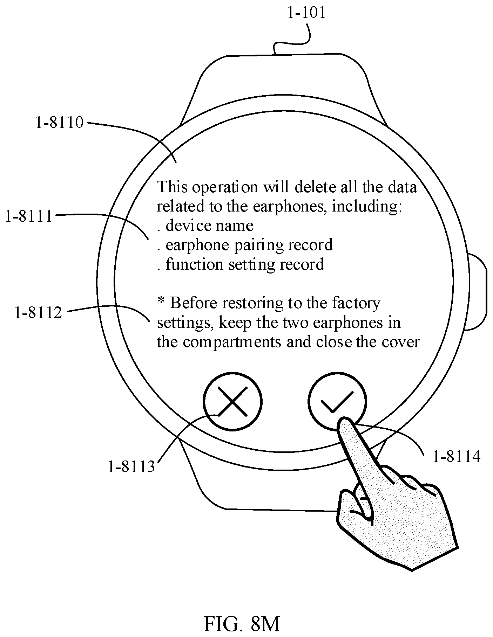

After detecting a user operation performed on the factory setting restore option 1-8101, the smartwatch 1-101 may display a user interface 1-8110 shown in FIG. 8M. Prompt information 1-8111 (for example, "This operation will delete all the data related to the earphones, including: the device name, the earphone pairing record, and the function setting record") used to prompt the user with a result of restoring the earphones 1-102 to the factory settings, prompt information 1-8112 (for example, "* Before restoring to the factory settings, keep the two earphones in the compartments and close the cover") used to prompt the user with a condition required for successfully restoring the earphones 1-102 to the factory settings, a control 1-8113, and a control 1-8114 are displayed on the user interface 1-8110.

If the smartwatch 1-101 detects an operation (for example, a tap operation) performed by the user on the control 1-8113, in response to the operation, the smartwatch 1-101 may return to display the user interface shown in FIG. 8L.

After the smartwatch 1-101 detects an operation (for example, a tap operation) performed by the user on the control 1-8114, if any one or more of the two earphones in the earphones 102 are out of position, the earphones 1-102 are not restored to the factory settings, and the smartwatch 1-101 may give the user a prompt that the factory settings fail to be restored to, and prompt the user to place the two earphones in the compartments.

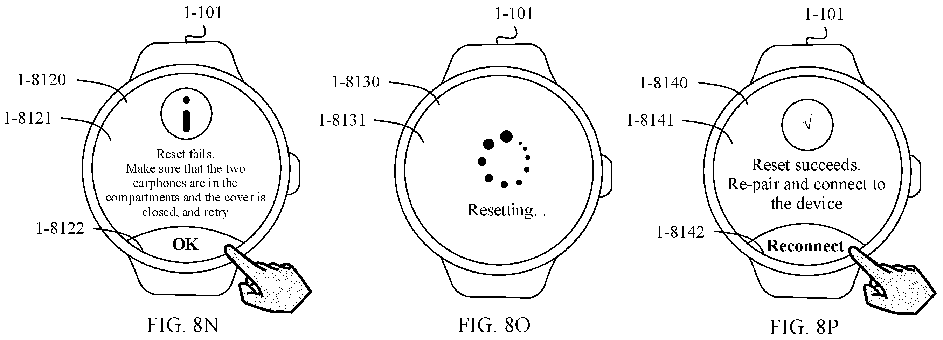

For example, the smartwatch 1-101 may display a user interface 1-8120 shown in FIG. 8N. Prompt information 1-8121 (for example, "Reset fails. Make sure that the two earphones are in the compartments and the cover is closed, and retry") and a control 1-8122 may be displayed on the user interface 1-8120. A text "OK" may be displayed on the control 1-8122. In some implementations, the prompt information 1-8121 may further indicate a specific earphone that is out of position. If the smartwatch 1-101 detects an operation (for example, a tap operation) performed by the user on the control 1-8122, in response to the operation, the smartwatch 1-101 may display the user interface 1-8100 shown as an example in FIG. 8L.

After the smartwatch 1-101 detects the operation (for example, the tap operation) performed by the user on the control 1-8114 in FIG. 8M, if the two earphones in the earphones 1-102 are both in position, the smartwatch 101 may indicate the two earphones in the earphones 102 to be both restored to the factory settings.

As shown in FIG. 8O, in a process of restoring the earphones 1-102 to the factory settings, a user interface 1-8130 may be displayed, and prompt information 1-8131 on the user interface 1-8130 is used to give the user a prompt that the earphones 1-102 are currently being reset. In some implementations, if a resetting speed of the earphones 1-102 is high, the user interface 1-8130 may be skipped and not be displayed.

As shown in FIG. 8P, after the earphones 1-102 are successfully restored to the factory settings, a user interface 1-8140 may be displayed. Prompt information 1-8141 (for example, "Reset succeeds. Re-pair and connect to the device") used to give the user a prompt that the earphones 1-102 are currently successfully restored to the factory settings and prompt the user to perform re-pairing and a control 1-8142 are displayed on the user interface 1-8130. After detecting an operation (for example, a tap operation) performed by the user on the control 1-8142, the smartwatch 1-101 may indicate the earphones 1-102 to re-perform a pairing operation. In some implementations, if the earphones 1-102 are successfully reset, the user interface 1-8140 may be skipped and not be displayed, and the pairing operation is directly re-performed.

The pairing operation of the earphones 1-102 may include: The earphones 1-102 perform pairing with the smartwatch 1-101, and the earphones 1-102 perform pairing with the electronic device 1-200/the electronic device 1-300. A sequence of the two pairing operations is not limited in embodiments of this application.

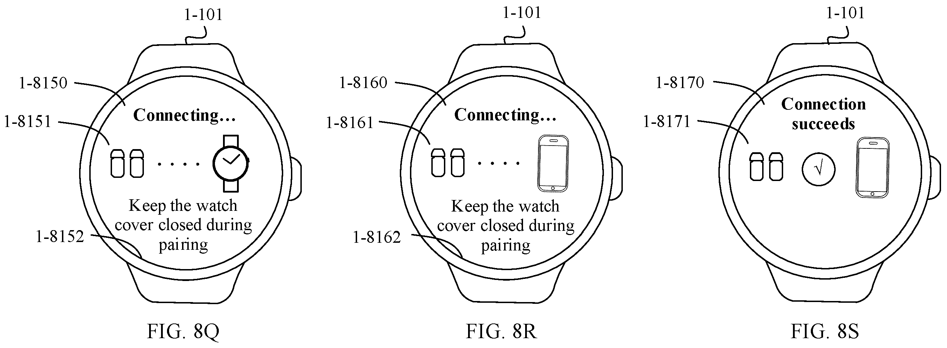

As shown in FIG. 8Q, in a process in which the earphones 1-102 perform pairing with the smartwatch 1-101, a user interface 1-8150 may be displayed. Prompt information 8-8151 used to give the user a prompt that the earphones 1-102 and the smartwatch 1-101 are currently being paired and prompt information 1-8152 (for example, "Keep the watch cover closed during pairing") used to prompt the user with a condition required for successful pairing are displayed on the user interface 1-8150.

As shown in FIG. 8R, in a process in which the earphones 1-102 perform pairing with the electronic device 1-200/the electronic device 1-300, a user interface 1-8160 may be displayed. Prompt information 8-8161 used to give the user a prompt that the earphones 1-102 and the electronic device 1-200/the electronic device 1-300 are currently being paired and prompt information 1-8162 (for example, "Keep the watch cover closed during pairing") used to prompt the user with a condition required for successful pairing are displayed on the user interface 1-8160.

After performing the pairing operation, the earphones 1-102 may output a pairing result. As shown in FIG. 8S, after the earphones 1-102 are successfully paired with the smartwatch 1-101 and the electronic device 1-200/the electronic device 1-300, a user interface 1-8170 may be displayed. Prompt information 1-8171 on the user interface 1-8170 may be used to give the user a prompt that the earphone 1-102 are successfully paired. In some other implementations, if the earphones 1-102 are partially successfully paired, the prompt information 1-8171 may be used to prompt the user with a specific device with which the earphones 1-102 are successfully paired and a specific device with which the earphones 1-102 fail to be paired.

Not limited to triggering the earphones 1-102 to be independently restored to the factory settings by receiving the user operation of restoring to the factory settings by the smartwatch 1-101, in embodiments of this application, the earphones 1-102 may be triggered to be independently restored to the factory settings in another manner.

For example, the electronic device 1-200/the electronic device 1-300 connected to the earphones 1-102 may also receive a user operation, and may indicate, in response to the user operation, the earphones 1-102 to be restored to the factory settings. For example, refer to FIG. 8H. The electronic device 1-200 may receive a user operation performed on the earphone management option 1-883 on the user interface 1-880, then display a factory setting restore option, and after receiving a user operation performed on the factory setting restore option, trigger the earphones 1-102 to be restored to the factory settings.

For another example, the earphones 1-102 may alternatively be directly restored to the factory settings based on a received user operation. For example, the earphones 1-102 may be restored to the factory settings after receiving a pressing operation that lasts for specific duration.

The left earphone or the right earphone in the earphones 1-102 may be triggered by the smartwatch 1-101 to be restored to the factory settings. For example, after the smartwatch 1-101 receives an operation of triggering to restore to factory settings, or after the electronic device 1-200 receives an operation of triggering to restore to factory settings and notifies the smartwatch 1-101, the smartwatch 1-101 may input a signal to the in-position earphone through the communication electrode, to trigger the in-position earphone to be restored to the factory settings.

In a process of restoring the earphones 1-102 to the factory settings, a pairing relationship between the earphones 1-102 and the smartwatch 1-101 that is previously paired with the earphones and between the earphones 1-102 and the electronic device 1-200/the electronic device 1-300 that is previously paired with the earphones and related data are deleted. In some implementations, the smartwatch 1-101 and the electronic device 1-200/the electronic device 1-300 also delete pairing relationships with the earphones 1-102 and related data.

After any one or two earphones in the earphones 1-102 are successfully restored to factory settings, subsequent steps are performed based on operations of first powering on, including powering on, pairing with the smartwatch 1-101 and the electronic device 1-200/the electronic device 1-300, and the like. For example, after the any one or two earphones in the earphones 1-102 are successfully restored to the factory settings, the smartwatch 1-101 may display user interfaces shown in FIG. 8P to FIG. 8S, indicating that the any one or two earphones in the earphones 1-102 re-perform a pairing operation.

In some implementations, if two earphones or any one earphone in the earphones 1-102 fails to be restored to factory settings, after the two earphones or any one earphone in the earphones is in position, the user may be prompted, through the smartwatch 1-101 or the electronic device 1-200/the electronic device 1-300, to retry; or the in-position earphone may be automatically triggered to be restored to the factory settings; or the smartwatch 1-101 triggers, after querying the user and obtaining consent to restore to the factory settings, the in-position earphone to be restored to the factory settings. After the factory settings are successfully restored to, the earphones 1-102 perform a pairing process with the smartwatch 1-101.

A reason why the two earphones or any one earphone in the earphones 1-102 fails to be restored to the factory settings may be that the two earphones or any one earphone is out of position. For example, when the earphone is out of position, if the smartwatch 1-101 receives an operation performed on the control 1-833 in FIG. 8E or receives an operation performed on the control 1-8113 in FIG. 8M, or the electronic device 1-200 receives a user operation performed on the control 1-889 in FIG. 8J, the out-of-position earphone cannot be successfully restored to the factory settings.

In some implementations of this application, the earphones 1-102 can be restored to the factory settings only when the two earphones in the earphones 1-102 are both in position, and a single earphone cannot be independently restored to factory settings. In some other implementations, when one earphone in the earphones 1-102 is in position and the other earphone is out of position, the single in-position earphone may also be independently restored to factory settings.

### Restart method

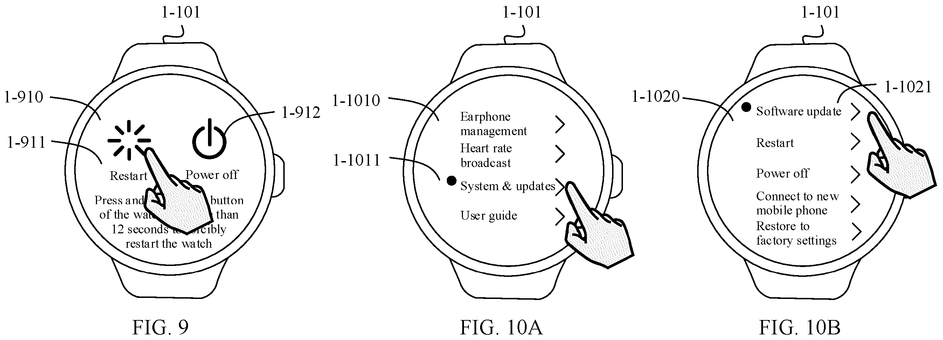

FIG. 9 shows an example of a restart scenario.

Restart is a process in which a device disables software running programs and clears major programs, but keeps hardware and a system still working to implement quick powering on.

The smartwatch 1-101 may receive a pressing operation (for example, a short-time pressing operation or a pressing operation lasting for specific duration) performed on the home button on the right side, and then, in response to the pressing operation, the smartwatch 1-101 may display a user interface 1-910 shown in FIG. 9. Here, duration of the pressing operation used to trigger the smartwatch 1-101 to display the user interface 1-910 may be preset. This is not limited in embodiments of this application. For example, the duration may be 5 seconds.

As shown in FIG. 9, a control 1-911 and a control 1-912 are displayed on the user interface 1-910. After the smartwatch 1-101 receives a user operation performed on the control 1-911, the smartwatch 1-101 and the earphones 1-102 may be restarted, and restart statuses of the earphones in the earphones 1-102 further need to be determined based on an in-position status of each earphone. The control 1-911 may also be referred to as a restart control for triggering the smartwatch 1-101 and an in-position earphone to be restarted.

This is not limited thereto. The smartwatch 1-101 may further receive a pressing operation (for example, a short-time pressing operation, or a pressing operation lasting for specific duration) performed on the home button on the right side, for example, a pressing operation lasting for 12 seconds. Then, the smartwatch 1-101 and the earphones 1-102 are restarted, and the restart statuses of the two earphones in the earphones 1-102 further need to be determined based on the in-position status of each earphone.

In embodiments of this application, the smartwatch 1-101 and the earphones 1-102 may be restarted independently or together. The two earphones in the earphones 1-102 may be restarted independently or together.

In embodiments of this application, restarting may be triggered on the smartwatch 1-101, or restarting may be triggered on the electronic device 1-200. For example, after the smartwatch 1-101 receives a user operation performed on a restart option in FIG. 8B, the smartwatch 1-101 and the earphones 1-102 are restarted, and the restart statuses of the earphones in the earphones 1-102 further need to be determined based on the in-position status of each earphone. For another example, after the electronic device 1-200 receives a user operation performed on the restart option in FIG. 8B, the smartwatch 1-101 and the earphones 1-102 are restarted, and the restart statuses of the two earphones in the earphones 1-102 further need to be determined based on the in-position status of each earphone.

In embodiments of this application, a triggering manner and an execution process of restarting the smartwatch 1-101 and the earphones 1-102 are similar to the triggering manner and the execution process of restoring the smartwatch 1-101 and the earphones 1-102 to the factory settings. For details, refer to the foregoing related descriptions of restoring to the factory settings. Details are not described herein again.

After being successfully restarted, any one or two earphones in the earphones 1-102 may perform work such as pairing with the smartwatch 1-101 and the electronic device 1-200/the electronic device 1-300.

### Upgrade method

FIG. 10A to FIG. 10U and FIG. 11 to FIG. 15 show examples of upgrade scenarios.

A device upgrade is a process in which development personnel develop firmware of a new version to make up for problems such as vulnerabilities and incompatibility in firmware of a current version of a device, so that the device can update a software package of firmware of an earlier version in earphones/a watch through the firmware of the new version, to add more functions or improve capabilities. A data packet used for a firmware upgrade may be referred to as an upgrade package, and there may be one or more upgrade packages.

Upgrade packages of the smartwatch 1-101 and the earphones 1-102 may be packaged together and deployed in an upgrade server. The electronic device 1-200 may detect and download the upgrade package from the upgrade server, and transmit the upgrade package to the smartwatch 1-101. The upgrade package may include an upgrade package of the smartwatch 1-101 and an upgrade package of the earphones 1-102. Then, the smartwatch 1-101 transmits the upgrade package of the earphones 1-102 to the earphones 1-102, and the earphones 1-102 are upgraded. The smartwatch 1-101 is also upgraded based on the upgrade package of the smartwatch.

Version numbers of the upgrade package of the smartwatch 1-101 and the upgrade package of the earphones 1-102 may be named separately or together. For example, old version numbers of the smartwatch 1-101 and the smart earphones 1-102 are both 1.2.0.1, and new version numbers are both 1.3.0.1. Alternatively, an old version number of the smartwatch 1-101 is 1.2.0.1, and a new version number is 1.3.0.1; and an old version number of the earphones 1-102 is 1.1.3.5, and a new version number is 1.2.3.5.

In embodiments of this application, the smartwatch 1-101 and the earphones 1-102 may be upgraded independently or together. The two earphones in the earphones 1-102 may be upgraded independently or together. An upgrade may be triggered on the smartwatch 1-101 side, or an upgrade may be triggered on the electronic device 1-200 side.

FIG. 10A to FIG. 10T show an example of a scenario in which a user operation of triggering an upgrade is received on the smartwatch 1-101.

As shown in FIG. 10A, the Settings application in the smartwatch 1-101 may provide a user interface 1-1010. One or more setting options, for example, a system and update option 1-1011, are displayed on the user interface 1-1010.

After detecting a user operation performed on the system and update option 1-1011, the smartwatch 1-101 may display a user interface 1-1020 shown in FIG. 10B. One or more setting options related to a system and an update, for example, a software update option 1-1021, are displayed on the user interface 1-1020. The software update option 1-1021 may also be referred to as an upgrade control for triggering the smartwatch 1-101 and an in-position earphone to be upgraded.

In some implementations, when the smartwatch 1-101 detects that there is an upgrade package, prompt information (for example, a small red dot in an upper left corner of the option in FIG. 10A) may be displayed on the system and update option 1-1011 in FIG. 10A and the software update option 1-1021 in FIG. 10B, to notify the user that a software package may be updated currently.

If the smartwatch 1-101 detects an operation (for example, a tap operation) performed by the user on the software update option 1-1021, the smartwatch 1-101 may query remaining power of the electronic device 1-200, to learn whether the remaining power of the electronic device 1-200 can support a subsequent upgrade process.

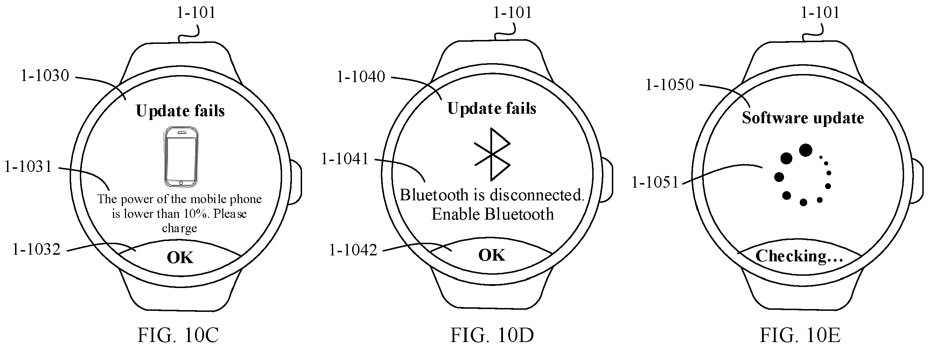

If the remaining power of the electronic device 1-200 is lower than a specific value (for example, 10%), and is insufficient to support the subsequent upgrade process, a user interface 1-1030 in FIG. 10C may be displayed. Prompt information 1-1031 (for example, "Update fails. The power of the mobile phone is lower than 10%. Please charge") and a control 1-1032 are displayed on the user interface 1-1030. The prompt information 1-1031 may be used to prompt the user with a failure of the current update, a reason of the update failure, and a solution. After a user operation is detected on the control 1-1032, the smartwatch 1-101 may return to display the user interface 1-1020 shown in FIG. 10B.

If the remaining power of the electronic device 1-200 is sufficient to support the subsequent upgrade process, the smartwatch 1-101 determines whether to enable Bluetooth. If Bluetooth is not enabled, a user interface 1-1040 shown in FIG. 10D may be displayed. Prompt information 1-1041 (for example, "Update fails. Bluetooth is disconnected. Enable Bluetooth") and a control 1-1042 are displayed on the user interface 1-1040. The prompt information 1-1041 may be used to prompt the user with a failure of the current update, a reason of the update failure, and a solution. After a user operation is detected on the control 1-1042, the smartwatch 1-101 may return to display the user interface 1-1020 shown in FIG. 10B.

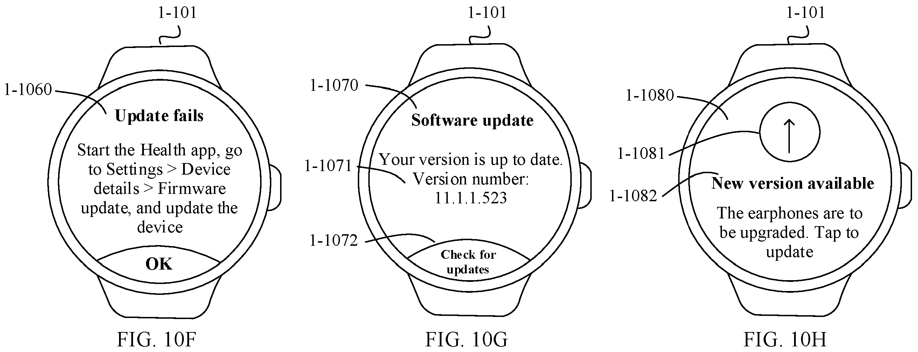

If the smartwatch 1-101 has enabled Bluetooth, a user interface 1-1050 shown in FIG. 10E may be displayed. Prompt information 1-1051 displayed on the user interface 1-1050 is used to give the user a prompt that the smartwatch 1-101 is currently checking whether there is a new upgrade package. In this process, the smartwatch 1-101 may further check whether connections have been established to both the earphones 1-102 and the electronic device 1-200. If the connections are not established, a user interface shown in FIG. 10F may be displayed to prompt the user to perform re-update. If the connections have been established, the smartwatch 1-101 continues to check whether there is a new update package.

As shown in FIG. 10G, if there is no new upgrade package, a user interface 1-1070 may be displayed. Prompt information 1-1071 (for example, "Your version is up to date. Version number: 11.1.1.523") and a control 1-1072 are displayed on the user interface 1-1070. The prompt information 1-1071 may be used to give the user a prompt that there is no new upgrade package currently. After a user operation is detected on the control 1-1072, the smartwatch 1-101 may re-check whether there is a new upgrade package.

As shown in FIG. 10H, if there is a new upgrade package, a user interface 1-1080 may be displayed. A control 1-1081 and prompt information 1-1082 (for example, "New version available. The earphones are to be upgraded. Tap to update") are displayed on the user interface 1-1080. The prompt information 1-1082 may be used to give the user a prompt that there is a new upgrade package currently. After a user operation is detected on the control 1-1081, the electronic device 1-200 downloads the upgrade package.

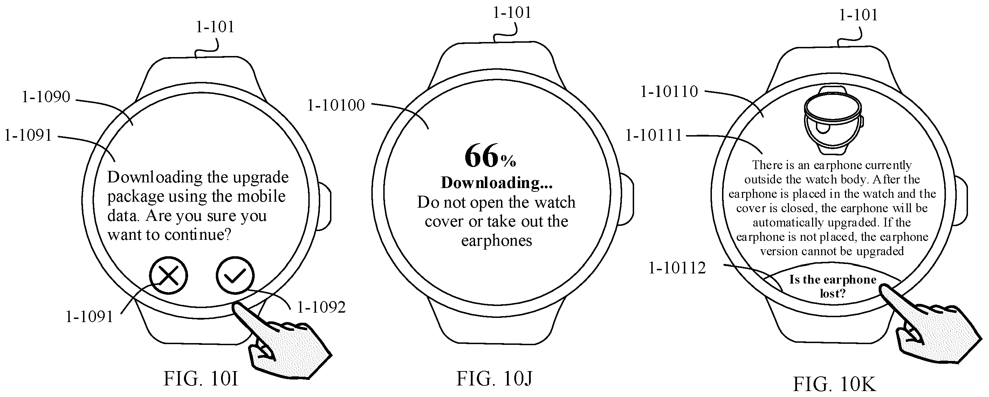

As shown in FIG. 10I, if the electronic device 1-200 currently is not connected to Wi-Fi, the smartwatch 1-101 may display a user interface 1-1090, to give the user a prompt that the upgrade package is currently downloaded by using data traffic.

After the smartwatch 1-101 detects a user operation performed on a control 1-1092, the electronic device 1-200 may start to download the upgrade package by using the data traffic. If the electronic device 1-200 is currently connected to Wi-Fi, after the smartwatch 1-101 detects the user operation for the control 1-1081, the electronic device 1-200 starts to download the upgrade package through Wi-Fi.

As shown in FIG. 10J, in a process in which the electronic device 1-200 downloads the upgrade package, a user interface 10100 is displayed. A current download progress and a precaution (for example, "66% Downloading... Do not open the watch cover or take out the earphones") are displayed on the user interface 10100.

In a process in which the electronic device 1-200 downloads the upgrade package, the smartwatch 1-101 may further detect the in-position status, the power, and the like of two earphones in the earphones 1-102, and give a prompt.

As shown in FIG. 10K, if at least one of the left earphone and the right earphone is out of position, the user may be prompted to place the earphone in a compartment. For example, the smartwatch 1-101 may display a user interface 1-10110. Prompt information 1-10111 (for example, "There is an earphone currently outside the watch body. After the earphone is placed in the watch and the cover is closed, the earphone will be automatically upgraded. If the earphone is not placed, the earphone version cannot be upgraded") and a control 1-10 112 may be displayed on the user interface 1-10110. A text "Is the earphone lost?" may be displayed on the control 1-10112. In some implementations, the prompt information 1-10111 may further indicate a specific earphone that is out of position.

If the user places the two earphones in the compartments after viewing the prompt information 1-10111, after the smartwatch 1-101 detects that the two earphones are both in position, both the smartwatch 1-101 and the earphones 1-102 may continue to perform an upgrade process.

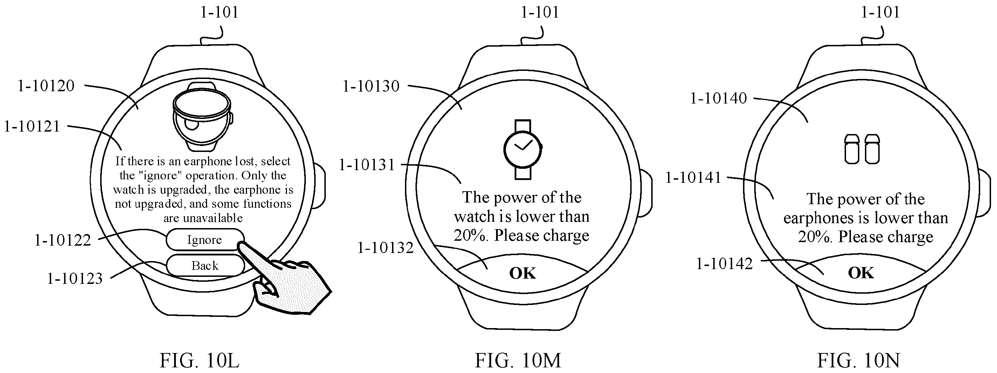

If the smartwatch 1-101 detects an operation (for example, a tap operation) performed by the user on the control 1-10112, in response to the operation, the smartwatch 1-101 may display a user interface 1-10120 shown as an example in FIG. 10L.

As shown in FIG. 10L, prompt information 1-10121 (for example, "If there is an earphone lost, select the 'ignore' operation. Only the watch is upgraded, the earphone is not upgraded, and some functions are unavailable"), a control 1-10122, and a control 1-10123 are displayed on the user interface 1-10120.

If the smartwatch 1-101 detects an operation (for example, a tap operation) performed by the user on the control 1-10123, in response to the operation, the smartwatch 1-101 may return to display the user interface shown in FIG. 10K, to prompt the user to place the earphone in a compartment.

If the smartwatch 1-101 detects an operation (for example, a tap operation) performed by the user on the control 1-10122, in response to the operation, the smartwatch 1-101 continues to perform an upgrade process of the smartwatch 1-101, and the earphones 1-102 do not perform an upgrade process.

The smartwatch 1-101 may query remaining power of the smartwatch, to learn whether the remaining power of the smartwatch can support a subsequent upgrade process. If the remaining power of the smartwatch 1-101 is lower than a specific value (for example, 20%), and is insufficient to support the subsequent upgrade process, a user interface 1-10130 in FIG. 10M may be displayed. Prompt information 1-10131 (for example, "The power of the watch is lower than 20%. Please charge") and a control 1-10132 are displayed on the user interface 1-10130. The prompt information 1-10131 may be used to prompt the user with a reason that may result in an update failure of the smartwatch 1-101 and a solution. After a user operation is detected on the control 1-10132, the smartwatch 1-101 does not perform the update process.

The smartwatch 1-101 may query remaining power of the earphones 1-102, to learn whether the power of the earphones 1-102 can support a subsequent upgrade process. If the remaining power of the earphones 1-102 is lower than a specific value (for example, 20%), and is insufficient to support the subsequent upgrade process, a user interface 1-10140 in FIG. 10N may be displayed. Prompt information 1-10141 (for example, "The power of the earphones is lower than 20%. Please charge") and a control 1-10142 are displayed on the user interface 1-10140. The prompt information 1-10141 may be used to prompt the user with a reason that may result in an update failure of the earphones 1-102 and a solution. After a user operation is detected on the control 1-10142, the earphones 1-102 do not perform the update process.

After the electronic device 1-200 downloads the upgrade package, the smartwatch 1-101 may perform the upgrade process. If the two earphones in the earphones 1-102 are both in position, the earphones 1-102 may also perform the update process.

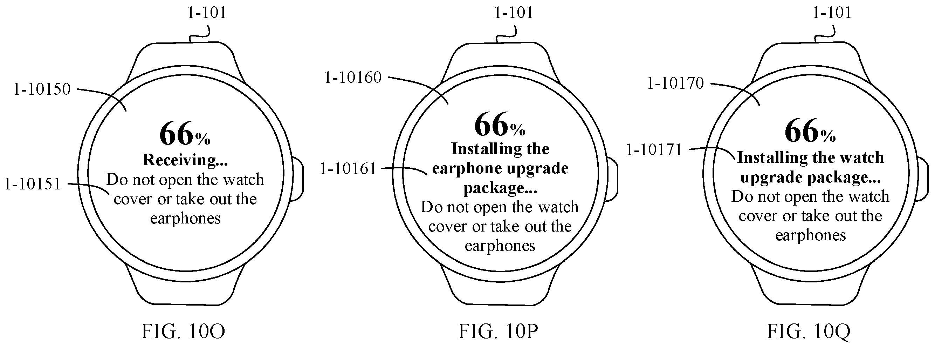

After the electronic device 1-200 downloads the upgrade package, the smartwatch 1-101 may receive the upgrade package from the electronic device 1-200, and display a user interface 10150 shown in FIG. 10O. Prompt information 10151 displayed on the user interface 10150 may be used to give the user a prompt that the smartwatch 1-101 is currently receiving the upgrade package and with a receiving progress.

After receiving the upgrade package, the smartwatch 1-101 may first send, to the earphones 1-102, a part that is of the upgrade package and that is used to upgrade the earphones 1-101. Then, the earphone 1-102 may be upgraded based on the part of the upgrade package, and the smartwatch 1-101 may display a user interface 1-10160 shown in FIG. 10P. Prompt information 1-10161 on the user interface 1-10160 may be used to give the user a prompt that the earphones 1-102 are currently being upgraded and an upgrade progress.

After the earphones 1-102 are upgraded, the smartwatch 1-101 is upgraded based on a part that is of the upgrade package and that is used to upgrade the smartwatch 1-101, and the smartwatch 1-101 may display a user interface 1-10170 shown in FIG. 10Q. Prompt information 1-10171 on the user interface 1-10170 may be used to give the user a prompt that the smartwatch 1-101 is currently being upgraded and with an upgrade progress.

This is not limited thereto. In some other implementations, the smartwatch 1-101 may alternatively first be upgraded, and then indicate the earphones 1-102 to be upgraded. Alternatively, the smartwatch 101 and the earphones 1-102 may simultaneously perform an upgrade operation. A sequence of upgrades of the smartwatch 101 and the earphones 1-102 is not limited in embodiments of this application.

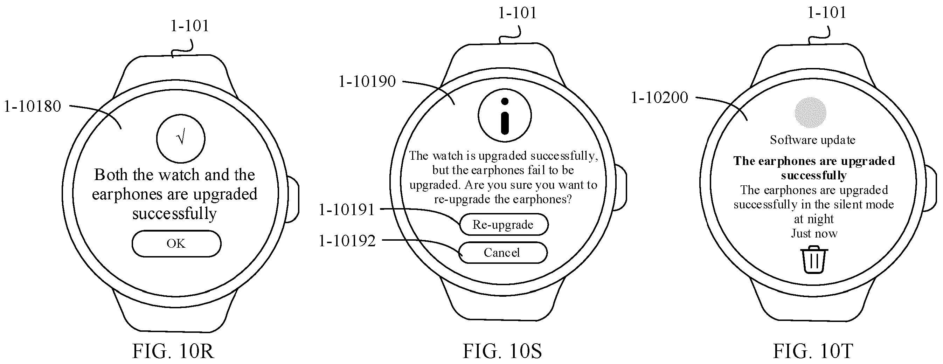

If both the smartwatch 1-101 and the earphones 1-102 are successfully upgraded, the smartwatch 1-101 may display a user interface 1-10180 shown in FIG. 10R, to give the user a prompt that both the smartwatch 1-101 and the earphones 1-102 are currently successfully upgraded. In some implementations, when both the smartwatch 1-101 and the earphones 1-102 are successfully upgraded, the smartwatch 1-101 may not need to output prompt information.

If the smartwatch 1-101 is successfully upgraded, and the earphones 1-102 fail to be upgraded, the smartwatch 1-101 may display a user interface 1-10190 shown in FIG. 10S. Prompt information 1-10191, a control 1-10191, and a control 1-10192 are displayed on the user interface 1-10190. The prompt information 1-10191 is used to give the user a prompt that the smartwatch 1-101 is currently successfully upgraded, but the earphones 1-102 fail to be upgraded. After a user operation is received on the control 1-10191, the smartwatch 1-101 triggers the earphones 1-102 to be re-upgraded.

In some implementations, after the smartwatch 1-101 is successfully upgraded, the smartwatch may be first restarted, and then provide various services for the user. In other words, after the smartwatch 1-101 is successfully upgraded, the smartwatch may be first restarted, and then display the user interface shown in FIG. 10R or FIG. 10S.

When the earphones 1-102 fail to be upgraded, the smartwatch 1-101 may notify the earphones 1-102 to perform silent upgrade. The silent upgrade means that the earphones 1-102 are automatically upgraded when a silent upgrade condition of the earphones 1-102 is met. For example, the silent upgrade condition of the earphones 1-102 may include: being in a preset time period like a night time period (for example, 0:00 to 6:00 at night), and the earphones 1-102 being in a charged state. The silent upgrade condition may alternatively be set to another condition, for example, may further include: The two earphones in the earphones 1-102 are both in position. This is not limited herein. The earphones 1-102 may independently detect whether the earphones 1-102 meets the silent upgrade condition, or the smartwatch 1-101 may detect whether the earphones 1-102 meets the silent upgrade condition, and trigger, after detecting that the silent upgrade condition is met, the earphones 1-102 to be upgraded.

FIG. 10T shows an example of a user interface 1-10200 displayed after the earphones 1-102 are successfully silently upgraded. The user interface 1-10200 may be used to notify the user that the earphones 1-102 are successfully silently upgraded.

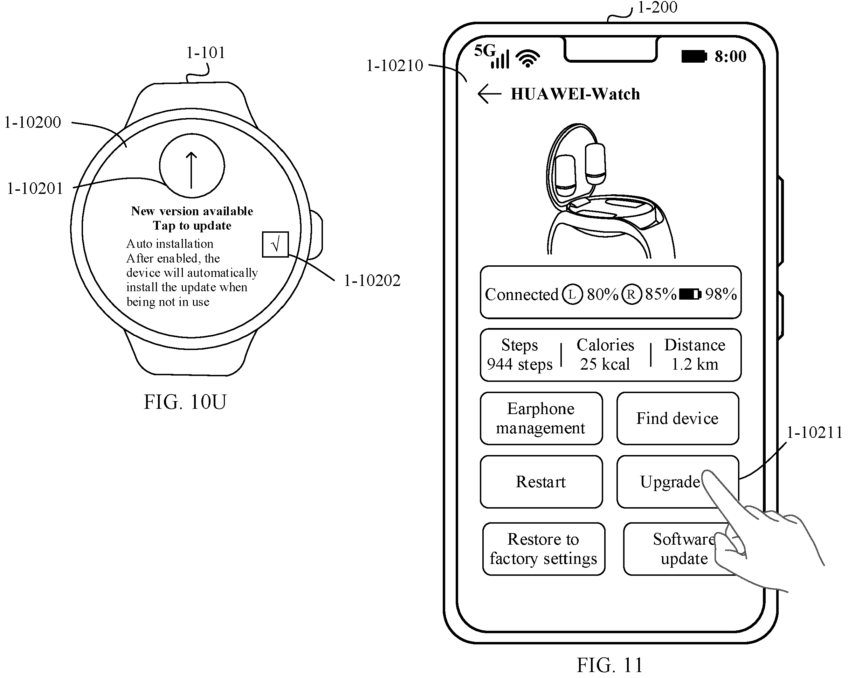

FIG. 10U shows an example of another scenario in which an upgrade is triggered on the smartwatch 1-101.

As shown in FIG. 10U, when detecting that there is a new upgrade package currently, the smartwatch 1-101 may display the user interface 1-10200. A control 1-10201 and an option 1-10202 are displayed on the user interface 1-10200. After a user operation performed on the control 1-10201 is received, the smartwatch 1-101 and the earphones 1-102 are triggered to be upgraded. After a user operation of selecting the option 1-10202 is received, the smartwatch 1-101 and the earphones 1-102 are automatically upgraded when the silent upgrade condition is met. In this way, user experience of currently using the smartwatch 1-101 and the earphones 1-102 may not be interrupted. Whether to upgrade the earphones 1-102 further needs to be determined based on the in-position status. When the earphones 1-102 are in position, the earphones 1-102 are upgraded. When the earphones 1-102 are out of position, the earphones 1-102 are not upgraded.

Not limited to the foregoing several scenarios, the earphones 1-102 may be independently triggered to be upgraded. For example, refer to FIG. 10A. The user may tap the earphone management option on the user interface 1-1010, and trigger the earphones 1-102 to be independently upgraded on a user interface that is subsequently displayed by the smartwatch 1-101 in response to the operation. The user interface subsequently displayed by the smartwatch 1-101 in response to the operation may be used to display a current version number of the earphones 1-102. For example, after responding to the operation performed on the earphone management option, the smartwatch 1-101 may display an upgrade control for independently triggering the earphones 1-102 to be upgraded. Then, the smartwatch 1-101 may receive a user operation performed on the upgrade control, and trigger an in-position earphone to be upgraded.

FIG. 11 to FIG. 15 show an example of a scenario in which a user operation of triggering an upgrade is received on the electronic device 1-200.

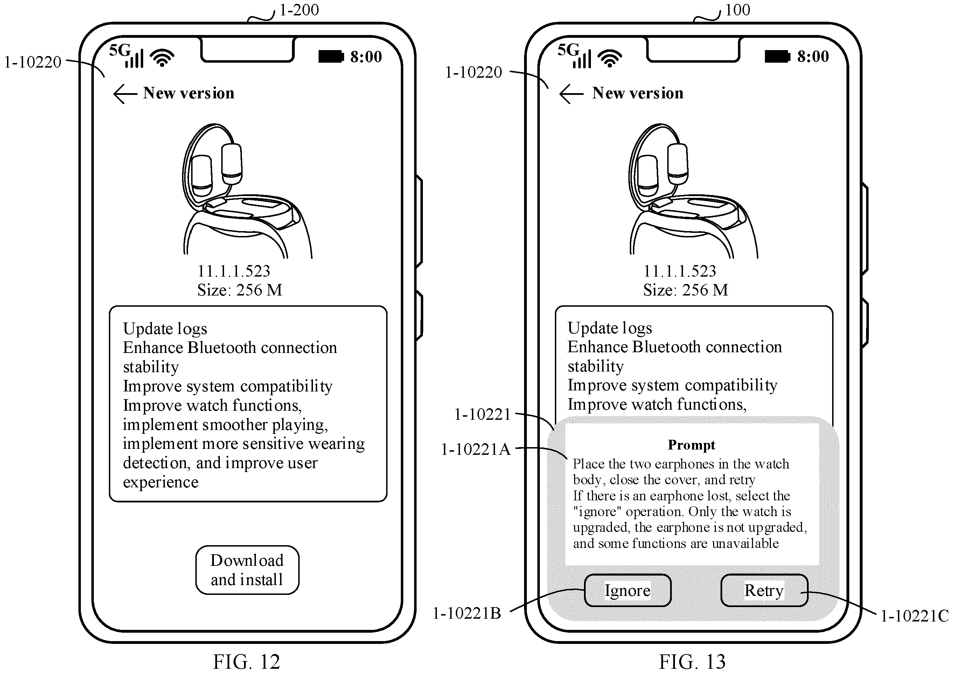

FIG. 11 shows a user interface 1-10210 displayed by the Health application on the electronic device 1-200. As shown in FIG. 11, the electronic device 1-200 may receive a user operation performed on an upgrade option 1-10211, and then display a user interface 1-10220 shown in FIG. 12.

As shown in FIG. 12, upgrade information 1-10221, an update log 1-10222, and a control 1-10223 are displayed on the user interface 1-10220. The upgrade information 1-10221 may be used to display new version information, for example, a version number of a new version and a size of a new upgrade package, that is detected by the electronic device 1-200 and that is for the smartwatch 1-101 and the earphones 1-102. The update log 1-10222 may be used to describe various functions that the new upgrade package supports to upgrade. After receiving a user operation performed on the control 1-10223, the electronic device 1-200 downloads the upgrade package from the upgrade server, sends the upgrade package to the smartwatch 1-101 after the upgrade package is successfully downloaded, and triggers the smartwatch 1-101 and the earphones 1-102 to be upgraded.

In a process in which the electronic device 1-200 downloads the upgrade package, the smartwatch 1-101 may display the user interface 1-10100 shown in FIG. 10J, to display the download progress.

In a process in which the electronic device 1-200 sends the upgrade package to the smartwatch 1-101, the smartwatch 1-101 may display the user interface 1-10150 shown in FIG. 10O, to display a progress of receiving the upgrade package by the smartwatch 1-101.

Then, in a process of upgrading the smartwatch 1-101 and the earphones 1-102, the smartwatch 1-101 may further display user interfaces shown in FIG. 10P to FIG. 10T. For a specific case in which a user interface is displayed, refer to the foregoing related descriptions of FIG. 10P to FIG. 10T.

After the electronic device 1-200 receives the user operation performed on the control 1-10223, the electronic device 1-200 may further learn of the in-position status of the earphones 1-102 from the smartwatch 1-101. When any one or two earphones in the earphones 1-102 are out of position, the electronic device 1-200 may further display a window 1-10221 shown in FIG. 13.

Prompt information 1-10221A, a control 1-10221B, and a control 1-10221C are displayed in the window 1-10221. The prompt information 1-10221A is used to prompt the user to place the two earphones in the earphones 1-102 in the compartments, and if any one earphone is out of position, the earphones 1-102 will not be upgraded. After detecting a user operation performed on the control 1-10221B, the electronic device 1-200 triggers the smartwatch 1-101 to be upgraded, and the earphones 1-102 are not upgraded. If the user places the two earphones in the compartments after viewing the prompt information 1-10221A, the user may input a user operation on the control 1-10221C, and the electronic device 1-200 triggers, in response to the operation, the smartwatch 1-101 and the earphones 1-102 to be upgraded.

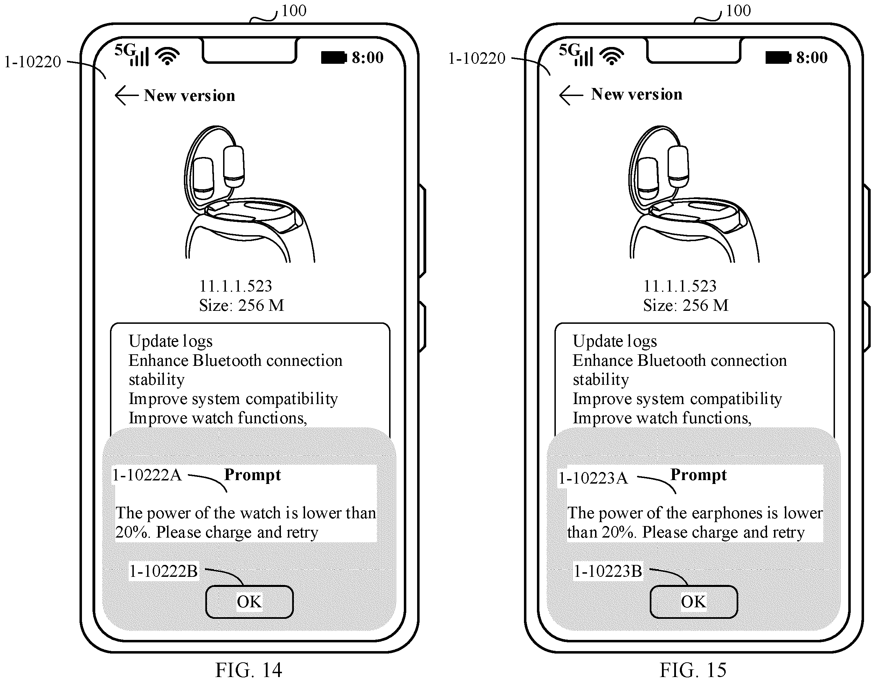

The electronic device 1-200 may query the remaining power of the smartwatch 1-101, to learn whether the remaining power of the smartwatch 1-101 can support a subsequent upgrade process. If the remaining power of the smartwatch 1-101 is lower than a specific value (for example, 20%), and is insufficient to support the subsequent upgrade process, prompt information 10222A (for example, "The power of the watch is lower than 20%. Please charge and retry") and a control 10222B shown in FIG. 14 may be displayed. The prompt information 10222A may be used to prompt the user with a reason that may result in an update failure of the smartwatch 1-101 and a solution. After a user operation is detected on the control 10222B, the electronic device 1-200 indicates the smartwatch 1-101 not to perform the upgrade process.

The electronic device 1-200 may query the remaining power of the earphones 1-102, to learn whether the remaining power of the earphones 1-102 can support a subsequent upgrade process. If the remaining power of the earphones 1-102 is lower than a specific value (for example, 20%), and is insufficient to support the subsequent upgrade process, prompt information 10223A (for example, "The power of the watch is lower than 20%. Please charge and retry") and a control 10223B shown in FIG. 15 may be displayed. The prompt information 10223A may be used to prompt the user with a reason that may result in an update failure of the earphones 1-102 and a solution. After a user operation is detected on the control 10223B, the electronic device 1-200 indicates the earphones 1-102 not to perform the upgrade process.

In some implementations, after a user operation of triggering an upgrade is input on the electronic device 1-200, the electronic device 1-200 may also display an upgrade result, so that the user learns of the upgrade result.

In the upgrade scenarios described in FIG. 10A to FIG. 10U and FIG. 11 to FIG. 15, the watch cover of the smartwatch 1-101 may be in the closed state, or may be in the open state. This is not limited in embodiments of this application.

In some implementations, the earphones 1-102 may alternatively be independently triggered to be upgraded, and the smartwatch 1-101 is not upgraded. For example, refer to FIG. 11. The electronic device 1-200 may receive a user operation performed on the earphone management option on the user interface 1-10210, then display an upgrade option, and after receiving a user operation performed on the upgrade option, trigger the earphones 1-102 to be upgraded. For another example, after displaying the user interface 1-10 10 shown in FIG. 10A, the smartwatch 1-101 may receive a user operation performed on the earphone management option, then display an upgrade option, and trigger, after receiving the user operation performed on the upgrade option, the earphones 1-102 to be upgraded. The upgrade option may also be referred to as an upgrade control for triggering the earphones 1-102 to be upgraded.

In addition to the manner that is described in the foregoing UI embodiments and in which the smartwatch 1-101 and/or the earphones 1-101 are triggered to be upgraded by inputting a user operation on the smartwatch 1-101 or the electronic device 1-200, in embodiments of this application, a silent upgrade manner may be used for upgrading.

For example, when detecting that a first silent upgrade condition is met, the smartwatch 1-101 may perform upgrade, and trigger the earphones 1-102 to be upgraded.

For another example, when detecting that a second silent upgrade condition is met, the smartwatch 1-101 may trigger only the earphones 1-102 to be upgraded, and not perform upgrade by the smartwatch.

For another example, when detecting that a third silent upgrade condition is met, the smartwatch 1-101 may only perform upgrade, and not trigger the earphones 1-102 to be upgraded.

The first silent upgrade condition, the second silent upgrade condition, and the third silent upgrade condition may all be preset by the smartwatch 1-101, or may be independently set by the user. The foregoing three silent upgrade conditions may be the same or may be different.

For example, the first silent upgrade condition may include: being in a preset time period like a night time period (for example, 0:00 to 6:00 at night), and both the smartwatch 1-101 and the earphones 1-102 being in a charged state. The second silent upgrade condition may include: being in a preset time period like a night time period (for example, 0:00 to 6:00 at night), and the earphones 1-102 being in the charged state. The third silent upgrade condition may include: being in a preset time period like a night time period (for example, 0:00 to 6:00 at night), and the smartwatch 1-101 being in the charged state.

In some implementations of this application, the earphones 1-102 can be upgraded only when the two earphones in the earphones 1-102 are both in position, and a single earphone cannot be independently upgraded.

In some other implementations, when one earphone in the earphones 1-102 is in position and the other earphone is out of position, the single in-position earphone may also be independently upgraded, and the out-of-position earphone is not upgraded. For example, after the smartwatch 1-101 receives a user operation performed on the control 1-1081 in FIG. 10H, the smartwatch 1-101 and the in-position earphone may be upgraded first, and the out-of-position earphone is not upgraded. Then, if the out-of-position earphone is in position, the out-of-position earphone may be triggered by the smartwatch 1-101 to be automatically upgraded.

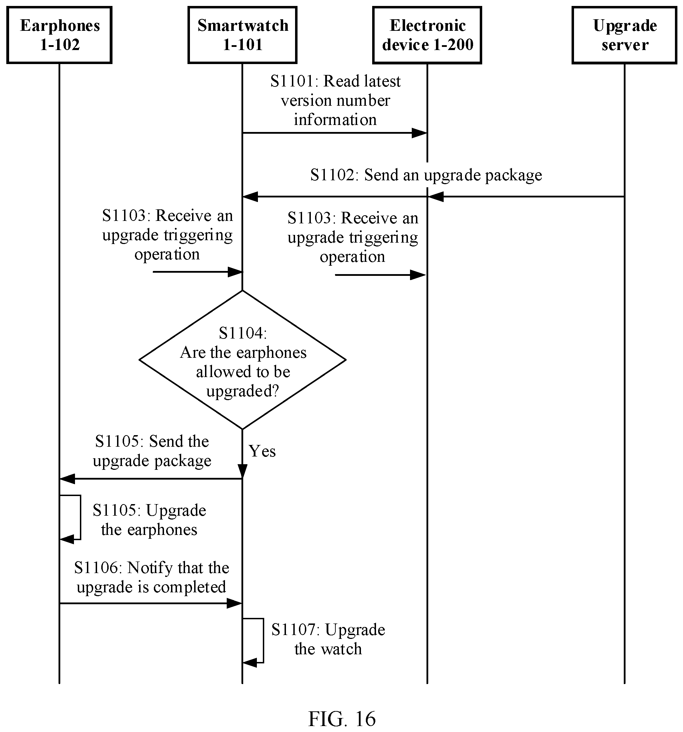

FIG. 16 shows an example of a specific procedure of a device management method in an "upgrade" scenario according to an embodiment of this application.

The method may be applied to a communication system including the electronic device 1-200, the smartwatch 1-101, and the earphones 1-102. Specific steps of the method are described in detail below.

S1101: The smartwatch 1-101 reads latest version number information on the electronic device 1-200.

The electronic device 1-200 may read the latest version number information from an upgrade server. Then, the smartwatch 1-101 may periodically read version number information on the electronic device 1-200 (for example, on a Health application installed on the electronic device 1-200), or the smartwatch 1-101 may read version number information on the electronic device 1-200 when triggered by a user, or the electronic device 1-200 may actively send latest version information to the smartwatch 1-101 when there is a firmware update, so that when there is a firmware update, the user can be prompted in a timely manner to trigger an upgrade operation.

S1102: The upgrade server sends an upgrade package to the smartwatch 1-101 through the electronic device 1-200.

The electronic device 1-200 may periodically detect whether the upgrade server has a firmware update for the smartwatch 1-101/the earphones 1-102. If the update server has the firmware update for the smartwatch 1-101/ the earphones 1-102, the electronic device 1-200 may download the upgrade package from the upgrade server in advance and send the upgrade package to the smartwatch 1-101. Alternatively, the upgrade package may be downloaded from the upgrade server in advance, and the upgrade package is sent to the smartwatch 1-101 after an operation of triggering an upgrade by the user is detected. Alternatively, only the latest version number information may be first downloaded, and after an operation of triggering an upgrade by the user is detected, the upgrade package is downloaded from the upgrade server and sent to the smartwatch 1-101.

S1103: The smartwatch 1-101 or the electronic device 1-200 detects the operation of triggering the upgrade by the user.

The operation of triggering the upgrade by the user may be performed by the user on the smartwatch 1-101, or may be performed by the user on the electronic device 1-200. For example, the operation of triggering the upgrade by the user may be: the user operation performed on the control 1-1081 displayed by the smartwatch 1-101 in FIG. 10H, the user operation performed on the control 1-10201 displayed by the smartwatch 1-101 in FIG. 10U, or the user operation performed on the upgrade option 1-10211 displayed by the electronic device 1-200 in FIG. 11.

S1103 is an optional step. In some other implementations, the smartwatch 1-101 or the earphones 1-102 may alternatively be automatically upgraded when a silent upgrade condition is met, and the user does not need to trigger the upgrade.

S1104: The smartwatch 1-101 may detect whether the earphones are allowed to be upgraded. If the earphones are allowed to be upgraded, the smartwatch 1-101 may perform the following step S1105. If the earphones are not allowed to be upgraded, the smartwatch 1-101 or the electronic device 1-200 may display prompt information.

After detecting the operation of triggering the upgrade by the user, the smartwatch 1-101 may perform S1104. If the electronic device 1-200 detects the operation of triggering the upgrade by the user, the electronic device 1-200 may notify the smartwatch 1-101 to perform S1104.

The smartwatch 1-101 may detect whether the earphones 1-102 are allowed to be upgraded (for example, any one or more of the following conditions are met: whether the earphones are in the compartment, whether the power of the earphones exceeds a preset threshold, whether the earphones are in a wakeup state, whether the earphones establish a Bluetooth communication connection to the watch, whether a primary earphone establishes a Bluetooth communication connection to a secondary earphone, and the like). If the earphones 1-102 are allowed to be upgraded (for example, one or more of the following conditions are met: the earphones are in the compartment, the power of the earphones exceeds the preset threshold, the earphones are in the wakeup state, the earphones establish the Bluetooth communication connection to the watch, the primary earphone establishes the Bluetooth communication connection to the secondary earphone, and the like), the smartwatch 1-101 may perform the following step S1105. If the earphones 1-102 are not allowed to be upgraded, the smartwatch 1-101 or the electronic device 1-200 may display related prompt information indicating that the earphones are currently not allowed to be upgraded, so as to perform a user operation (for example, placing the earphones in the compartment, charging the earphones until the power of the earphones exceeds the preset threshold, waking up the earphones, and establishing the Bluetooth communication connection between the earphones and the watch, establishing the Bluetooth communication connection between the primary earphone and the secondary earphone, and the like) to enable the earphones to be in a state in which an update is allowed.

In some implementations, the smartwatch 1-101 may detect whether a Bluetooth communication connection is established between the smartwatch 1-101 and the electronic device 1-200. The Bluetooth communication connection may be used by the user to notify, based on the Bluetooth communication connection, the smartwatch 1-101 to perform upgrade when the user triggers an upgrade on the electronic device 1-200, and is used by the smartwatch 1-101 to obtain an upgrade package from the electronic device 1-200 through the Bluetooth communication connection.

In some implementations, the smartwatch 1-101 may detect whether the two earphones in the earphones 1-102 are both in position. If the two earphones in the earphones 1-102 are not both in position, the smartwatch 1-101 may prompt the user to place the earphones 1-102 in the compartment and then attempt to perform upgrade again. If the two earphones in the earphones 1-102 are both in position, subsequent steps may continue to be performed.

If the smartwatch 1-101 detects that the two earphones are both in position, subsequent steps may continue to be performed.

If the smartwatch 1-101 detects that at least one of the two earphones is out of position, the smartwatch may prompt the user to place the earphone in a compartment and try to perform upgrade again. For example, the smartwatch 1-101 may display the user interface 1-10110 shown as an example in FIG. 10K. The user interface may include the prompt information 1-10111 (for example, "There is an earphone currently outside the watch body. After the earphone is placed in the watch and the cover is closed, the earphone will be automatically upgraded. If the earphone is not placed, the earphone version cannot be upgraded"). In this way, after the user places the earphone in the compartment, the smartwatch 1-101 may continue to perform subsequent steps.

For another example, if an upgrade is triggered on the electronic device 1-200, the smartwatch 1-101 may send a detection result to the electronic device 1-200, so that the electronic device 1-200 can display the user interface 1-10220 shown in FIG. 13. The prompt information 1-10221A on the user interface may be used to prompt the user to place the earphone in the compartment. After the user places the earphone in the compartment, the smartwatch 1-101 may perform subsequent steps.

In some implementations, the smartwatch 1-101 may detect whether the power of the smartwatch 1-101 exceeds a preset threshold (for example, 20% of full power of the smartwatch 1-10 1). If the power of the smartwatch 1-101 exceeds the preset threshold, subsequent steps may be performed. If the power of the smartwatch 1-101 does not exceed the preset threshold, the user may be given a prompt that the power of the smartwatch 1-101 is insufficient, and the smartwatch 1-101 needs to be charged and try to perform upgrade again.

For example, the smartwatch 1-101 may display the user interface 1-10130 shown as an example in FIG. 10M. The user interface may include the prompt information 1-10131 (for example, "The power of the smartwatch 1-101 is lower than 20%. Please charge"). In this way, after the user completes charging the smartwatch 1-101, the smartwatch 1-101 may continue to perform subsequent steps.

For another example, if an upgrade is triggered on the electronic device 1-200, the smartwatch 1-101 may send a detection result to the electronic device 1-200, so that the electronic device 1-200 can give the user a prompt that the power of the smartwatch 1-101 is insufficient. For example, the electronic device 1-200 may display the prompt information 1-10222A shown in FIG. 14 to prompt the user.

In some implementations, the smartwatch 1-101 may detect whether the power of the earphones 1-102 exceeds a preset threshold (for example, 20% of full power of the earphones 1-102). If the power of the earphones 1-102 exceeds the preset threshold, subsequent steps may be performed. If the power of the earphones 1-102 does not exceed the preset threshold, the user may be given a prompt that the power of the earphones 1-102 is insufficient, and the earphones 1-102 need to be charged and try to perform upgrade again.

For example, the smartwatch 1-101 may display the user interface 1-10140 shown as an example in FIG. 10N. The user interface may include the prompt information 1-10141 (for example, "The power of the earphones 1-102 is lower than 20%. Please charge"). In this way, after the user completes charging the earphones 1-102, the smartwatch 1-101 may continue to perform subsequent steps.

For another example, if an upgrade is triggered on the electronic device 1-200, the smartwatch 1-101 may send a detection result to the electronic device 1-200, so that the electronic device 1-200 can give the user a prompt that the power of the earphones 1-102 is insufficient. For example, the electronic device 1-200 may display the prompt information 1-10223A shown in FIG. 15 to prompt the user.

In embodiments of this application, a sequence of detecting the in-position status of the earphones 1-102 by the smartwatch 1-101, detecting the power of the smartwatch 1-101 by the smartwatch 1-101, and detecting the power of the earphones 1-102 by the smartwatch 1-101 is not limited.

S1105: Start to upgrade the earphones 1-102.

If the smartwatch 1-101 in S1104 allows the earphones 1-102 to be upgraded, S1105 may be performed.

Specifically, the smartwatch 1-101 may send an upgrade package used to upgrade the earphones to the earphones 1-102, and indicate the earphones 1-102 to perform upgrade. Certainly, the smartwatch 1-101 may alternatively send, in advance after obtaining the upgrade package used to upgrade the earphones, the upgrade package used to upgrade the earphones to the earphones 1-102, instead of sending the upgrade package after determining that the earphones are allowed to be upgraded. This is not limited herein.

In an upgrade process of the earphones 1-102, the smartwatch 1-101 or the electronic device 1-200 may display an upgrade progress interface of the earphones 1-102 based on an obtained upgrade progress of the earphones 1-102. For example, the smartwatch 1-101 may display the user interface 1-10150 shown as an example in FIG. 10P. The user interface may include the upgrade progress (for example, an upgrade progress bar or an upgrade progress percentage) of the earphones 1-102.

After the upgrade of the earphones 1-102 ends, it may be determined whether the earphones 1-102 are successfully upgraded. If the earphones 1-102 are successfully upgraded, the following step S1106 may be performed to start the upgrade of the smartwatch 1-101. If the earphones 1-102 are not successfully upgraded, the user may be given a prompt that the earphones 1-102 fail to be upgraded.

For example, after the earphones 1-102 fail to be upgraded, the smartwatch 1-101 may display the user interface shown as an example in FIG. 10S. The user interface may include prompt information (for example, "The smartwatch 1-101 is successfully upgraded, but the earphones 1-102 fail to be upgraded. Are you sure you want to re-upgrade the earphones 1-102?"). In some examples, display of the user interface shown in FIG. 10S may be canceled after the user interface is displayed for preset duration (for example, 2 seconds), and then the upgrade of the smartwatch 1-101 is started.

In some other examples, after the earphones 1-102 fail to be upgraded, the user may alternatively re-trigger the upgrade until the earphones 1-102 are successfully upgraded. After the earphones 1-102 are successfully upgraded, the upgrade of the smartwatch 1-101 is started. Alternatively, after the earphones 1-102 fail to be upgraded, the earphones 1-102 may be upgraded in the silent upgrade manner.

S1106: After being successfully upgraded, the earphones 1-102 notify the smartwatch 1-101 that the earphones 1-102 are successfully upgraded.

S1107: Start the upgrade of the smartwatch 1-101.

Specifically, after the earphones 1-102 are successfully upgraded, the upgrade of the smartwatch 1-101 may be started. In an upgrade process of the smartwatch 1-101, the smartwatch 1-101 or the electronic device 1-200 may display an upgrade progress interface of the smartwatch 1-101 based on a real-time upgrade progress of the smartwatch 1-101. For example, the smartwatch 1-101 may display the user interface 1-10170 shown as an example in FIG. 10Q. The user interface may include the upgrade progress (for example, an upgrade progress bar or an upgrade progress percentage) of the smartwatch 1-101.

After the upgrade of the smartwatch 1-101 ends, it may be determined whether the smartwatch 1-101 is successfully upgraded. If the smartwatch 1-101 is successfully upgraded, the upgrade is completed, and the entire upgrade process ends. If the smartwatch 1-101 is not successfully upgraded, the user may be given a prompt that the smartwatch 1-101 fails to be upgraded. After the smartwatch 1-101 fails to be upgraded, the user may further re-trigger the upgrade until the smartwatch 1-101 is successfully upgraded.

For example, after both the earphones 1-102 and the smartwatch 1-101 are successfully upgraded, the smartwatch 1-101 may further display the user interface shown in FIG. 10R. The user interface may be used to give the user a prompt that both the earphones 1-102 and the smartwatch 1-101 are upgraded, and the entire upgrade process ends. In some examples, after the smartwatch 1-101 is successfully upgraded, the smartwatch 1-101 or the electronic device 1-200 may not need to output prompt information.

In some examples, the upgrade of the smartwatch 1-101 may be first started, and the upgrade of the earphones 1-102 is started after the smartwatch 1-101 is upgraded. In some other examples, the upgrade of the smartwatch 1-101 and the upgrade of the smartwatch 1-101 may alternatively be synchronously started.

In some examples, after the smartwatch 1-101 is successfully upgraded, the smartwatch may be automatically restarted.

In this way, a bundle upgrade process of the smartwatch 1-101 and the earphones 1-102 is completed, and the user may complete the entire upgrade process of the smartwatch 1-101 and the earphones 1-102 by performing one upgrade operation. This is simple and convenient, and improves user experience.

### Device connection manners

**Before the pairing and connection method is described, several device connection manners formed based on the pairing and connection method are first described. A wireless communication connection in a device connection manner may be a Bluetooth connection, a Wi-Fi connection, or the like, or a combination of a plurality of wireless communication connections.**

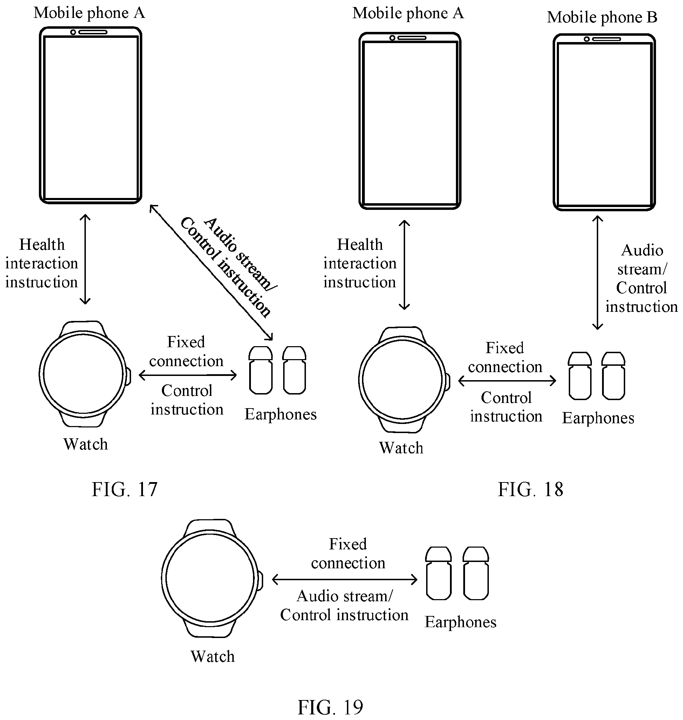

**FIG. 17** **shows a first connection manner, which may be vividly referred to as a "triangular connection".** The "triangular connection" may be established based on a method of "one-time pairing of an entire device", or may be converted from a "U-shaped connection". This will be described in the following content. Details are not described here.

In the "triangular connection", wireless communication connections are established between a watch and earphones, between the watch and a mobile phone A, and between the mobile phone A and the earphones. Certainly, the mobile phone may be replaced with another electronic device, for example, a tablet computer, a notebook computer, a smart television, or a large-screen device.

A connection between the watch and the earphones may be referred to as a "fixed connection", and establishment of the connection may be automatically performed by a device, and does not need to be triggered by a user, thereby reducing use complexity. For example, when the watch is powered on for the first time and the earphones are in position, the connection may be automatically established. For the user, the connection seems to "exist naturally", and therefore is referred to as a "fixed connection (or an inherent connection)".

The "fixed connection" may be used for data transmission between the watch and the earphones. In a direction from the watch to the earphones, transmitted data may include a noise cancellation instruction and a volume control instruction. The control instruction may be generated when the user performs a control operation on the watch or the mobile phone A by using a series of graphical user interfaces. In the direction from the watch to the earphones, the transmitted data may further include an audio stream, to trigger the earphones to play audio on the watch. In a direction from the earphones to the watch, transmitted data may include earphone status information like power of the earphones, wearing detection data, and the like. The wearing detection data may include detection data about whether the earphones are worn, and include detection data such as a wearing direction and displacement in a wearing process that are obtained through a motion sensor like a gyroscope. The latter detection data may be used to recognize left and right earphones. The "fixed connection" may be further used by the earphones to forward data between the mobile phone A and the watch, for example, health interaction data.

The connection between the watch and the mobile phone A may be used for data transmission between the watch and the mobile phone A. In a direction from the mobile phone A to the watch, transmitted data may include an exercise report, a reminder, and the like in the health interaction data. In a direction from the watch to the mobile phone A, transmitted data may include device information (for example, MAC addresses and device names) of the watch and the earphones, statuses of the watch and the earphones (for example, power and an earphone in-position status), the exercise data and physiological data such as blood oxygen and a heart rate in the health interaction data, and the like. In the direction from the watch to the mobile phone A, a connection between the watch and the mobile phone A may be further used to transmit an audio control instruction from the watch, for example, a music play instruction like a previous/next track instruction, and a call control instruction like an answering/declining instruction, to trigger the mobile phone A to switch music, answer/decline an incoming call, and the like, and finally affect sound rendered by the earphones. In other words, for audio of the mobile phone A, the user may perform a control operation on the watch.

A connection between the mobile phone A and the earphones may be used for data transmission between the mobile phone A and the earphones. In a direction from the mobile phone A to the earphones, transmitted data may include an audio stream, for example, a streaming audio stream generated during music playing, and a voice audio stream generated during a call. This is not limited thereto. The connection may also be used by the mobile phone A to directly transmit a noise cancellation instruction or a volume decrease/increase instruction to the earphones. In a direction from the earphones to the mobile phone A, transmitted data may include audio collected by a microphone of the earphones, for example, voice audio collected by the microphone of the earphones in a call scenario, or a voice instruction like a "previous/next track" instruction in a music playing scenario. The connection may also be used by the earphones to directly transmit earphone status information such as the power of the earphones, the wearing detection data, and the like to the mobile phone A.

In the "triangle connection", after receiving the data from the earphones, the watch may correspondingly display the data on a watch screen, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, power and whether the earphones are in position), an exercise status (for example, a running speed) of the user, a physiological status (for example, the blood oxygen and the heart rate) of the user, and the like. A related user interface will be described in detail in the subsequent implementations. Details are not described here.

It can be learned that in the "triangle connection", the earphones may play audio from the watch or the mobile phone A. The "triangle connection" allows the user to control, through the watch, audio playing on the mobile phone A and answer/decline an incoming call of the mobile phone A, and the user does not need to find the mobile phone A (which may be placed in a bag) to perform these control operations.

**FIG. 18** **shows a second connection manner, which may be vividly referred to as a "U-shaped connection".** The "U-shaped connection" may be generated because earphones independently perform pairing with a mobile phone or an entire device of a watch and the earphones changes a mobile phone. This will be described in the following content. Details are not described here.

In the "U-shaped connection", wireless communication connections are established between the watch and the earphones, between the watch and a mobile phone A, and between the earphones and a mobile phone B.

A "fixed connection" between the watch and the earphones may be used for data transmission between the watch and the earphones. In a direction from the watch to the earphones, transmitted data may include an audio control instruction like a noise cancellation instruction and a volume decrease/increase instruction, and an audio stream sent by the watch to the earphones. In a direction from the earphones to the watch, transmitted data may include power of the earphones, wearing detection data, and the like. In addition, in the direction from the earphones to the watch, the transmitted data may further include device information of the mobile phone B connected to the earphones, for example, a device name and a device model. In other words, even if the watch is not connected to the mobile phone B in the "U-shaped connection", the watch can still learn of information about the mobile phone connected to the earphones.

A connection between the watch and the mobile phone A may be used for data transmission between the watch and the mobile phone A. In a direction from the mobile phone A to the watch, transmitted data may include an exercise report, a reminder, and the like in health interaction data. In a direction from the watch to the mobile phone A, transmitted data may include device information (for example, MAC addresses and device names) of the watch and the earphones, statuses of the watch and the earphones (for example, power and an earphone in-position status), exercise data and physiological data such as blood oxygen and a heart rate in the health interaction data, and the like.

A connection between the mobile phone B and the earphones may be used by the mobile phone B to transmit, to the earphones, an audio stream, for example, a streaming audio stream generated during music playing or a voice audio stream generated during a call. This is not limited thereto. The connection may also be used by the mobile phone B to directly transmit a control instruction like a noise cancellation instruction or a volume decrease/increase instruction to the earphones. The connection between the mobile phone B and the earphones may be used by the earphones to transmit device information (for example, a device name) of the earphones, a status (for example, the power) of the earphones, the wearing detection data, and the like to the mobile phone B. The connection may be further used by the earphones to transmit, to the mobile phone B, audio collected by a microphone of the earphones, for example, voice audio collected by the microphone of the earphones in a call scenario, or a voice instruction like a "previous/next track" instruction in a music playing scenario.

In the "U-shaped connection", after receiving the data from the earphones, the watch may correspondingly display the data, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, power and whether the earphones are in position), an exercise status (for example, a running speed) of the user, a physiological status (for example, the blood oxygen and the heart rate) of the user, and the like. After receiving the data from the earphones, the mobile phone B may correspondingly display the data on a screen of the mobile phone B, so that the user learns of the earphone status (for example, the power). A related user interface will be described in detail in the subsequent implementations. Details are not described here.

It can be learned that, different from the "triangular connection", in the "U-shaped connection", the earphones and the watch are no longer connected to a same mobile phone, but are respectively connected to different mobile phones. The "U-shaped connection" allows the user to use the earphones to play audio of the mobile phone B, and use the watch to exchange health data with the mobile phone A. In other words, the watch and the earphones may serve different devices.

Further, the "U-shaped connection" can further provide richer user experience.
1. The user may also control, through the watch, the earphones to play audio on the mobile phone B, for example, control, through the watch, the earphones to play a next track of music on the mobile phone B, answer an incoming call of the mobile phone B, and the like. In other words, the "fixed connection" between the watch and the earphones may further serve music playing and incoming call answering/declining of the mobile phone B.

Details are described below.

In the direction from the earphones to the watch, the "fixed connection" may be used to transmit interface description information of a music playing interface and an incoming call screen from the mobile phone B, for example, a music name and a play control name, for example, a name, an incoming call number, and a home location of a calling party. Correspondingly, the watch may display a music playing interface and an incoming call screen on the watch based on the interface description information, so that the user can control, through the watch, audio playing of the mobile phone B. However, because a screen of the watch and the screen of the mobile phone B are usually different in size, shape, and the like, the music playing interface/incoming call screen displayed on the watch is naturally different from the music playing interface/incoming call screen displayed on the mobile phone B, even if both the watch and the mobile phone B provide a user interface for same audio.

In addition, in the direction from the watch to the earphones, the "fixed connection" may be used to transmit an audio control instruction from the watch, for example, a music play instruction like a previous/next track instruction, and a call control instruction like an answering/declining instruction. These control instructions are generated when the user performs a control operation on the watch by using the music playing interface and the incoming call screen. Then, these instructions are forwarded to the mobile phone B through the earphones, to trigger the mobile phone B to switch music, answer/decline an incoming call, and the like, and finally affect sound rendered by the earphones. In other words, for audio of the mobile phone B, the mobile phone B needs to be notified of the control operation performed by the user on the watch through the earphones, so that the mobile phone B can learn of a control requirement of the user, and perform corresponding music playing control and call control.

To avoid a conflict that occurs when both the mobile phone A and the mobile phone B need to use the watch to display an interface, the watch may preferentially display an interface for the mobile phone A, or may display an interface for the mobile phone B in a manner such as a small window or a floating window while displaying an interface for the mobile phone A in full screen. An interface to be displayed may be further determined based on a function selected by the user on the watch. For example, if the user selects "Health", health interaction data between the watch and the mobile phone A is displayed. If the user selects "Current music", audio of the mobile phone B currently played by the earphones is displayed. In actual application, the conflict may alternatively be resolved according to another policy. This is not limited herein.

2. The user may also use the earphones to play audio of the mobile phone A, and control, through the watch, the earphones to play the audio on the mobile phone A.

Details are described below.

The communication connection between the watch and the mobile phone A and the "fixed connection" between the watch and the earphones may be further used to transmit the audio stream of the mobile phone A. In other words, the audio stream of the mobile phone A may be forwarded to the earphones through the watch, to implement rendering and playing.

In addition, in the direction from the mobile phone A to the watch, the communication connection between the watch and the mobile phone A may be further used to transmit interface description information of a music playing interface and an incoming call screen of the mobile phone A to the watch. Correspondingly, the watch may display a music playing interface and an incoming call screen on the watch based on the interface description information, so that the user controls, through the watch, audio playing of the mobile phone A. In the direction from the watch to the mobile phone A, the communication connection between the watch and the mobile phone A may be further used to transmit an audio control instruction generated by the user on the watch, for example, a music play instruction like a previous/next track instruction, and a call control instruction like an answering/declining instruction, to trigger the mobile phone A to switch music, answer/decline an incoming call, and the like, and finally affect sound rendered by the earphones. The "fixed connection" may be further used to transmit a volume control instruction, a noise cancellation instruction, and the like from the mobile phone A, to control the earphones to adjust volume, perform noise cancellation, and the like.

To avoid a conflict that occurs when both the mobile phone A and the mobile phone B need to use the earphones to play audio, the watch may receive, only when the mobile phone B does not use the earphones to play audio, an audio stream from the mobile phone A and forward the audio stream to the earphones. In other words, the earphones may preferentially play the audio of the mobile phone B. The watch may determine, based on an audio service priority, which audio is to be preferentially played. For example, a priority of a phone call is higher than a priority of music, and the watch and the mobile phone agree on this priority policy. For example, if the mobile phone A receives an incoming call when the mobile phone B plays music, the watch may send a playing pause instruction to the mobile phone B through the earphones, and forward an audio stream of the mobile phone A to the earphones. In actual application, the conflict may alternatively be resolved according to another policy. This is not limited herein.

**FIG. 19** **shows a third connection manner, namely, the "fixed connection" mentioned above.** The "fixed connection" may be generated due to automatic pairing of a watch and earphones. This will be described in the following content. Details are not described here.

A scenario to which the "fixed connection" is applicable may be an exercise scenario. In the exercise scenario, the earphones may play audio from the watch. The "fixed connection" may be mainly used to transmit an audio stream that is sent by the watch to the earphones and a control instruction like a noise cancellation instruction or a volume decrease/increase instruction. Certainly, the "fixed connection" may further be used to transmit power of the earphones and wearing detection data that are sent by the earphones to the watch, a voice instruction collected by a microphone of the earphones, for example, a voice instruction like a "previous/next track" instruction in a music playing scenario, and the like.

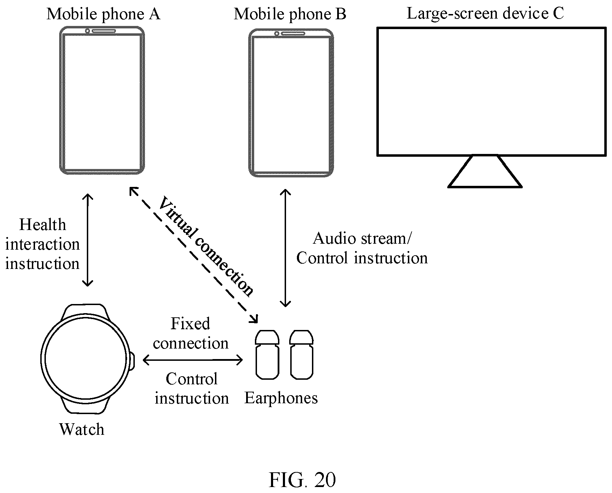

**FIG. 20** **shows a fourth connection manner, which may be vividly referred to as "2+1 connection".** "2+1" in the "2+1 connection" is described from a perspective of earphones, where "2" indicates two physical connections respectively established between the earphones and a watch and between the earphones and a mobile phone, and "1" indicates a virtual connection established between the earphones and another device (for example, a large-screen device).

If the watch and earphones are connected to a same mobile phone, for example, a mobile phone A, the "2+1 connection" is a "triangle connection" plus a virtual connection. If the watch and the earphones are respectively connected to different mobile phones, for example, mobile phones A and B, the "2+1 connection" is a "U-shaped connection" plus a virtual connection.

The "2+1 connection" may be generated because the earphones are paired with and connected to a new mobile phone, and keep a virtual connection with an old mobile phone. This will be mentioned in the following content. Details are not described here.

Not limited to one virtual connection, the earphones can further establish more virtual connections with more devices, to form a "2+2 connection", a "2+3 connection", or even a more complex communication architecture. In this way, the Bluetooth earphone can automatically switch, through the virtual connection, to process audio services of a plurality of electronic devices. Technologies of the "2+1 connection", the "2+2 connection", and even the "2+3 connection" are not limited in this application. For example, Bluetooth dual-connection and Bluetooth multi-connection technologies recorded in the following two patent documents may be used: Chinese Patent Application No. 201910314715.7, entitled "BLUETOOTH CONNECTION METHOD, DEVICE, AND SYSTEM"; and Chinese Patent Application No. 202011292453.8, entitled "AUDIO CONTROL SYSTEM". The entire content of the two patent documents is hereby incorporated herein by reference.

### Pairing and connection method

### Method of automatic pairing between a watch and earphones

Pairing between the watch and the earphones does not need to be triggered by a user, and may be automatically performed by the watch. For example, when the watch is powered on for the first time or is restored to factory settings, pairing between the watch and the earphones may be automatically triggered. Other scenarios in which automatic pairing between the watch and the earphones is triggered, for example, a new earphone is placed in a compartment, and the watch resets earphones, are further mentioned in the following embodiments. After pairing succeeds, a "fixed connection (or an inherent connection)" can be formed between the watch and the earphones. Specifically, the connection may be established when the earphones are removed from a compartment.

A basic principle of automatic pairing between the watch and the earphones includes:
1. A condition for the watch to perform pairing with two earphones is that the two earphones are in position.
2. Pairing between a single earphone and the watch is supported.
3. When an earphone is back to position, automatic pairing is performed between the watch and the earphones.

"In-position" means that an earphone is effectively in position, that is, the earphone is in the watch (specifically, in an earphone compartment) and has battery power. A corresponding concept is "back-to-position", which may include cases in which an earphone in the watch changes from having no battery power to having battery power, or an earphone is back to the inside of the watch from the outside of the watch and has battery power. For details about the definition and descriptions of "the earphone being in position", refer to the content of the in-position detection of the earphones in the preceding section "Typical product features and functions".

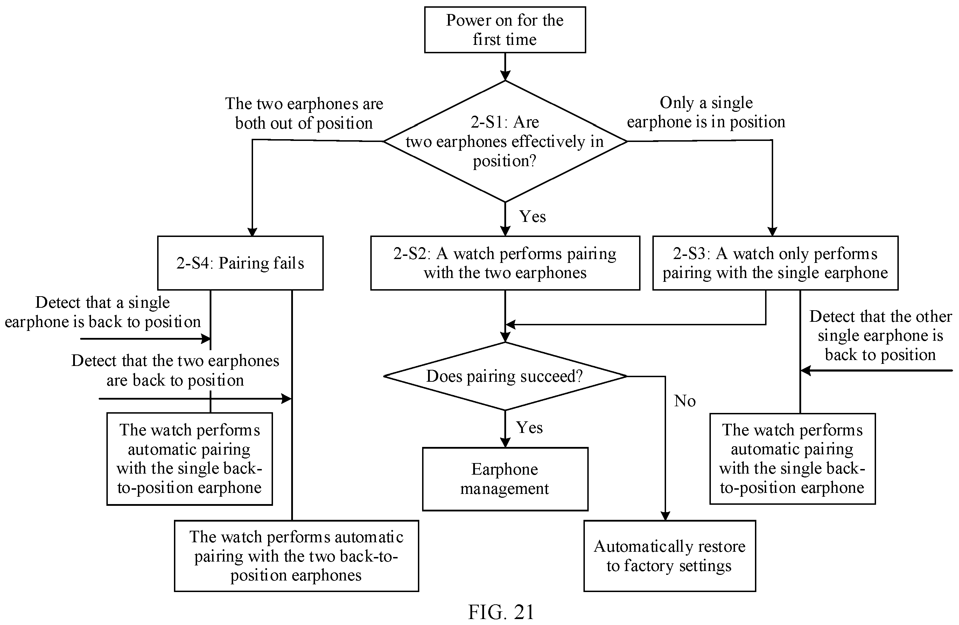

With reference to FIG. 21, an overall procedure of automatic pairing between a watch and earphones may include the following steps.

Step 2-S1: The watch determines whether two earphones are in position. If the two earphones are in position, step 2-S2 may be performed. If only a single earphone is in position, step 2-S3 may be performed. If the two earphones are out of position, step 2-S4 may be performed.

An earphone being in position may mean that the earphone is not in use, and the earphone is accommodated in an earphone slot. In this case, pairing the earphone does not affect an existing connection between the earphone and another device.

When the earphone is in position, the watch may obtain device information such as a MAC address of the in-position earphone through a communication electrode in the earphone compartment, to initiate pairing with the earphone based on the MAC address. Certainly, the device information such as the MAC address of the earphone may alternatively be written into the watch from delivery. This is feasible for a set of a watch and earphones delivered from the factory.

In addition, when the earphone is in position, for a pairing manner in which the watch pages (page) the earphone based on the MAC address of the earphone, the watch may send an electrical signal to the earphone through the communication electrode in the earphone compartment in the watch, to control the earphone to be in a page scan (scan) state, so that paging from the watch is successfully scanned (or received). Finally, the earphone performs pairing with and establishes a connection to the watch. In addition, when the earphone is in position, a communication distance between the earphone and the watch is short. In this case, a pairing and connection success rate is higher.

Step 2-S2: The watch performs pairing with the two earphones.

In a pairing process, the watch may display a user interface, to indicate a progress of the pairing process. In addition, the watch may further prompt the user not to open the watch in the pairing process. If pairing succeeds, an interface prompt that pairing succeeds is displayed. If pairing fails, an interface prompt that pairing fails is displayed, and a failure reason, a recovery method, and the like are prompted. The failure reason may be, for example, a pairing timeout, or a watch being opened in the pairing process.

If pairing succeeds, the user may view the earphones paired with the watch in "Quick settings" or "Earphone management". If pairing fails, the watch may perform re-pairing. After re-pairing fails a plurality of times, for example, twice, factory settings may be restored to. Alternatively, factory settings may be directly restored to, and the watch and the earphones may be triggered to perform re-pairing by restoring to the factory settings.

Step 2-S3: The watch performs pairing with the single in-position earphone, that is, pairing between the single earphone and the watch is supported.

Before this, the watch may query the user whether to pair only the watch with the single earphone. If the user agrees, step 2-S3 starts. In a process of performing step 2-S3, the watch may display a user interface, to give a prompt of a pairing progress. If the user declines to pair only the watch with the single earphone, the pairing process exits, and pairing between the watch and the earphone fails.

If it is detected later that the other earphone that is out of position is back to position (that is, the earphone becomes "in position"), the watch may perform automatic pairing with the earphone.

Step 2-S4: Because the two earphones are out of position, the watch ends a pairing procedure, and pairing between the watch and the earphones fails.

If it is detected later that the two earphones or the single earphone is back to position, the watch may perform automatic pairing with the two back-to-position earphones or the single back-to-position earphone. For details, refer to step 2-S2 and step 2-S3, respectively.

### Method of one-time pairing of an entire device

One-time pairing of the entire device of a watch and earphones can help the user complete pairing between the watch, the earphones, and a mobile phone "at one time", and support the foregoing connection manner of a "triangular connection". "One-time" mainly means that a user pairing procedure is simple and efficient, and may be represented as follows: For the user, the watch and the earphones may be sensed as one device to perform pairing with the mobile phone, and only one pairing procedure needs to be performed. A pairing procedure between the watch and the earphones, a pairing procedure between the watch and the mobile phone, and a pairing procedure between the earphones and the mobile phone do not need to be performed one by one.

A basic principle of one-time pairing of the entire device may include:
1. Pairing between the watch, the earphones, and the mobile phone is completed in one pairing procedure.
2. If two earphones are both out of position, only pairing the watch with the mobile phone is supported.
3. If a single earphone is out of position, pairing the single earphone with the mobile phone is supported.
4. If an earphone is back to position, automatic pairing is performed on the earphone.

### (1) Several user interaction (user interface, UI) manners of "one-time pairing of the entire device": scanning for pairing, proximity discovery for pairing, and manual adding for pairing.

### Scanning for pairing

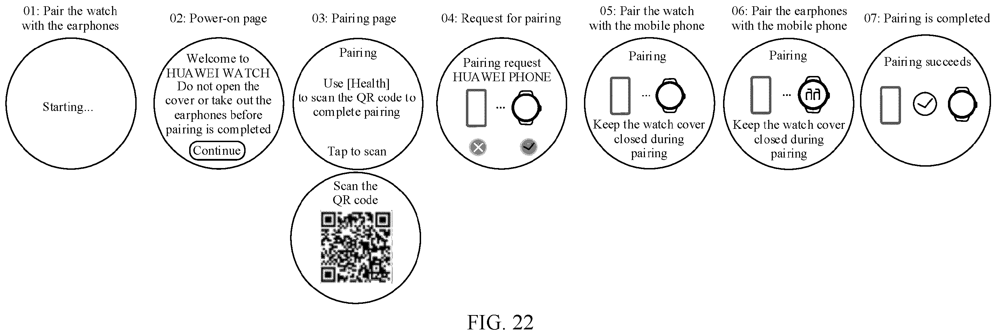

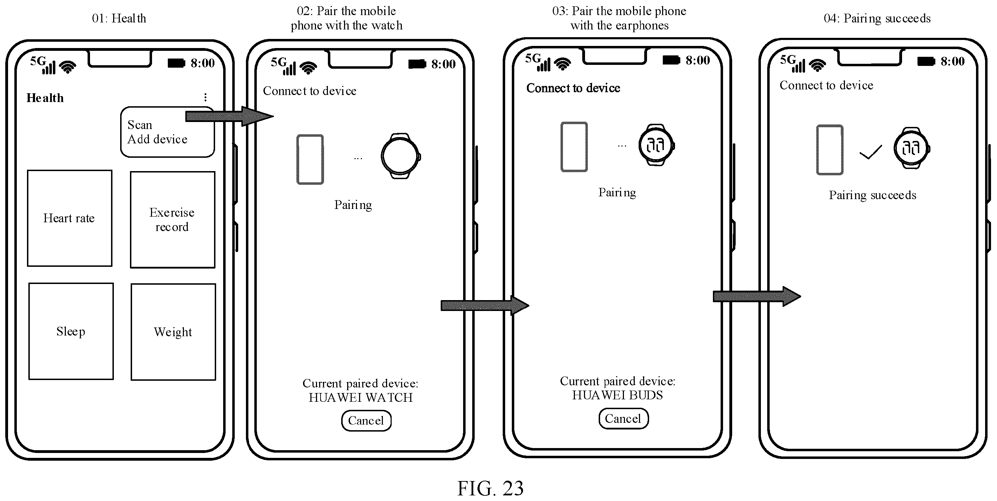

FIG. 22 and FIG. 23 respectively show a watch-side UI and a mobile phone side UI that cooperate with each other in scanning for pairing.

The watch and the earphones may be automatically paired when the entire device is powered on. Refer to a user interface 01 "Pair the watch with the earphones" and a user interface 02 "Power-on page" in FIG. 22.

Then, the watch may sequentially display a series of user interfaces shown in FIG. 22, for example, a user interface 03 to a user interface 06, to prompt the user with a process of pairing the watch and the earphones with the mobile phone. Correspondingly, the mobile phone may sequentially display a series of user interfaces shown in FIG. 23, to prompt the user with a process of pairing the mobile phone with the watch and the earphones.

When the watch displays the user interface 03 "Pairing page" in FIG. 22 and opens a QR code, the user may pick up the mobile phone, scan the QR code, and tap a "Scan" option as shown in FIG. 23 to add the all-in-one device of the watch and the earphones (for example, "HUAWEI WATCH"). Here, the essence of scanning the QR code is to obtain device information, for example, a MAC address, a device model, and a device name, of the watch. The user taps "Scan" to trigger the mobile phone to perform pairing with the watch and the earphones. As shown in FIG. 22 and FIG. 23, the mobile phone first performs pairing with the watch, and then performs pairing with the earphones.

When the mobile phone performs pairing with the watch and the earphones, as shown in FIG. 22, the watch may display an entire process of pairing the mobile phone with the watch through a series of user interfaces, for example, a user interface 04 "Request for pairing", a user interface 05 "Pair the watch with the mobile phone", a user interface 06 "Pair the earphones with the mobile phone", and a user interface 07 "Pairing is completed". Correspondingly, the mobile phone may also display a pairing process of the watch and the earphones.

After the mobile phone is paired with the watch, the mobile phone may perform automatic pairing with the earphones, and the user does not need to trigger pairing. In other words, to complete pairing between the watch and the mobile phone and pairing between the earphones and the mobile phone at one time, the user only needs to trigger pairing once. This pairing is perceived by the user as "pairing between the mobile phone and the all-in-one device of the watch and the earphones". The user does not need to care about how to pair the watch with the mobile phone and how to pair the earphones with the mobile phone, and does not need to process pairing between the watch and the earphones. For the user, this is the same as pairing two simple devices, and user experience is easy and natural.

In addition, during pairing, as shown in FIG. 23, the mobile phone may further query the user whether to allow a "Bluetooth message synchronization service" to invoke permissions such as Call, Messaging, Contacts, and Call records. If the user agrees, user data collected by these applications such as Call, Messaging, Contacts, and Call records may be obtained by the "Bluetooth message synchronization service", and synchronized to the watch. The "Bluetooth message synchronization service" is merely a name, and a function of the "Bluetooth message synchronization service" is the same as that described above. The name of the "Bluetooth message synchronization service" is not limited in embodiments of this application.

### Proximity discovery for pairing

"Proximity discovery" may be a function of the mobile phone. The mobile phone automatically searches for a nearby device by using a wireless communication technology like Bluetooth, and displays a pop-up window to prompt to perform pairing, so that the user can complete pairing by one touch. An implementation technology of "proximity discovery" is not limited in this application. For example, proximity discovery technologies recorded in the following several patent documents may be used: Chinese Patent Application No. 201910478059.4, entitled "PROXIMITY DISCOVERY METHOD AND DEVICE"; Chinese Patent Application No. 201910844294.9, entitled "BLUETOOTH CONNECTION METHOD AND ELECTRONIC DEVICE"; and Chinese Patent Application No. 202010163215.0, entitled "BLUETOOTH COMMUNICATION SYSTEM AND WIRELESS COMMUNICATION SYSTEM". The entire contents of these patent documents are hereby incorporated herein by reference.

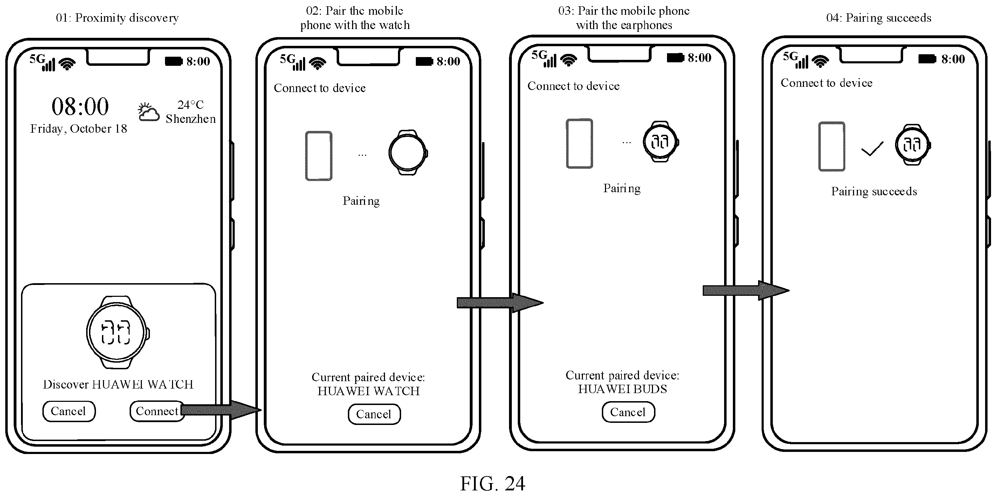

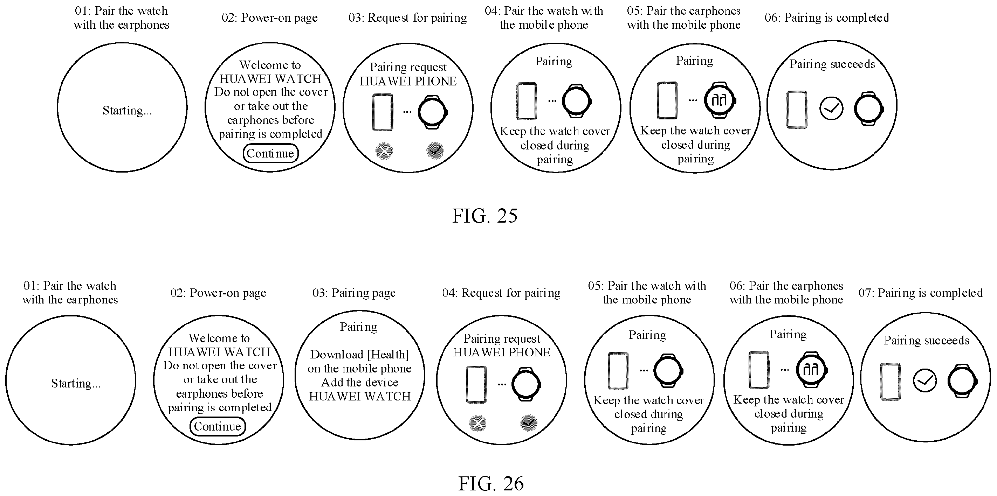

FIG. 24 shows a mobile phone-side UI in proximity discovery. In cooperation with the mobile phone-side UI, a watch-side UI may be shown in FIG. 25.

The watch and the earphones may be automatically paired when the entire device is powered on. Refer to a user interface 01 "Pair the watch with the earphones" and a user interface 02 "Power-on page" in FIG. 25.

When the "proximity discovery" function is enabled on the mobile phone and the mobile phone approaches the watch, the mobile phone may display a user interface 01 "Proximity discovery" shown in FIG. 24, to query the user whether to connect to the all-in-one device of the watch and earphones. The user may tap "Connect" to trigger pairing of the mobile phone with the watch and the earphones. As shown in FIG. 25 and FIG. 24, the mobile phone first performs pairing with the watch, and then performs pairing with the earphones.

When the mobile phone performs pairing with the watch and the earphones, as shown in FIG. 25, the watch may display an entire process of pairing the mobile phone with the watch through a series of user interfaces, for example, a user interface 04 "Request for pairing", a user interface 05 "Pair the watch with the mobile phone", a user interface 06 "Pair the earphones with the mobile phone", and a user interface 07 "Pairing is completed". Correspondingly, the mobile phone may also display a pairing process between the watch and the earphones, for example, a user interface 02 "Pair the mobile phone with the watch", a user interface 03 "Pair the mobile phone with the earphones", and a user interface 04 "Pairing succeeds".

After the mobile phone is paired with the watch, the mobile phone may perform automatic pairing with the earphones, and the user does not need to trigger pairing. In other words, to complete pairing between the watch and the mobile phone and pairing between the earphones and the mobile phone at one time, the user only needs to trigger pairing once. This pairing is perceived by the user as "pairing between the mobile phone and the all-in-one device of the watch and the earphones". The user does not need to care about how to pair the watch with the mobile phone and how to pair the earphones with the mobile phone, and does not need to process pairing between the watch and the earphones. For the user, this is the same as pairing two simple devices, and user experience is easy and natural.

Similar to "scanning for pairing", when performing pairing with the watch and the earphones, the mobile phone may also request user authorization to obtain permissions for the user data collected by the applications such as Call, Messaging, Contacts, and Call records.

### Manual adding for pairing

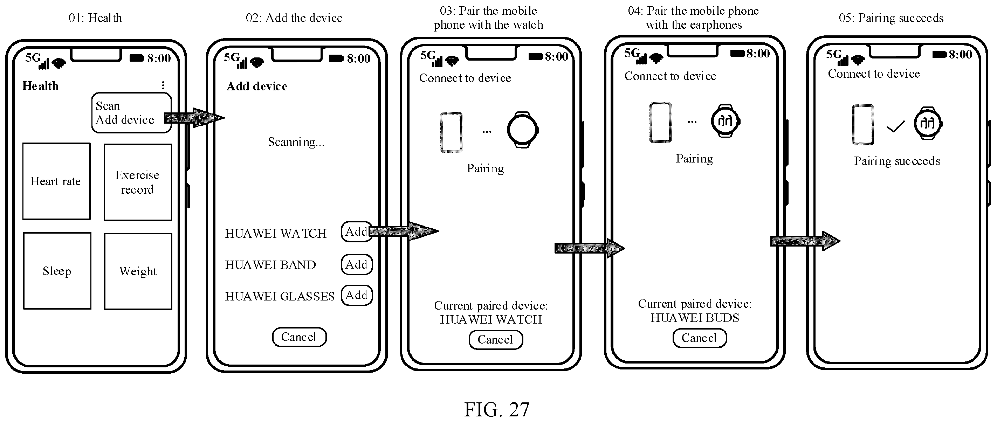

FIG. 26 and FIG. 27 respectively show a watch-side UI and a mobile phone-side UI that cooperate with each other in manual adding for pairing.

The watch and the earphones may be automatically paired when the entire device is powered on. Refer to a user interface 01 "Pair the watch with the earphones" and a user interface 02 "Power-on page" in FIG. 26.

Then, the watch may sequentially display a series of user interfaces shown in FIG. 26, for example, a user interface 03 to a user interface 07, to prompt the user with a process of pairing the watch and the earphones with the mobile phone. Correspondingly, the mobile phone may sequentially display a series of user interfaces shown in FIG. 27, to prompt the user with a process of pairing the mobile phone with the watch and the earphones.

When the watch displays a user interface 03 "Pairing page" in FIG. 26, the user taps an "Add device" option on the mobile phone, as shown in FIG. 27, to add the all-in-one device of the watch and the earphones (for example, "HUAWEI WATCH"). The user may tap "Add device" to trigger pairing of the mobile phone with the watch and the earphones. As shown in FIG. 26 and FIG. 27, the mobile phone first performs pairing with the watch, and then performs pairing with the earphones.

When the mobile phone performs pairing with the watch and the earphones, as shown in FIG. 26, the watch may display an entire process of pairing the mobile phone with the watch through a series of user interfaces, for example, a user interface 04 "Request for pairing", a user interface 05 "Pair the watch with the mobile phone", a user interface 06 "Pair the earphones with the mobile phone", and a user interface 07 "Pairing is completed". Correspondingly, the mobile phone may also display a pairing process of the watch and the earphones.

After the mobile phone is paired with the watch, the mobile phone may perform automatic pairing with the earphones, and the user does not need to trigger pairing. In other words, "one-time pairing of the entire device" only needs to be triggered by the user at one time. This pairing is perceived by the user as "pairing between the mobile phone and the all-in-one device of the watch and the earphones", and an operation is simple and efficient.

### (2) Overall procedure of "one-time pairing of the entire device"

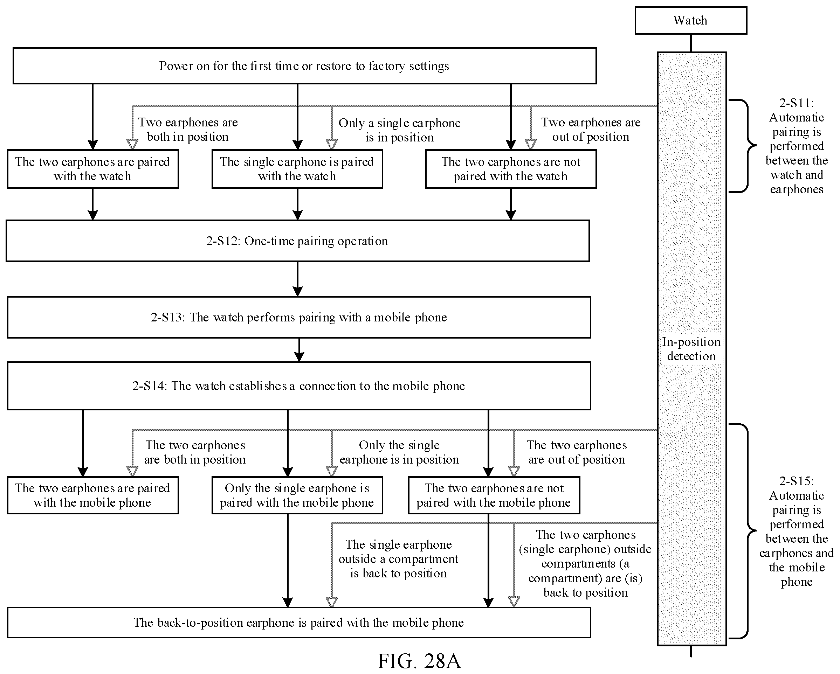

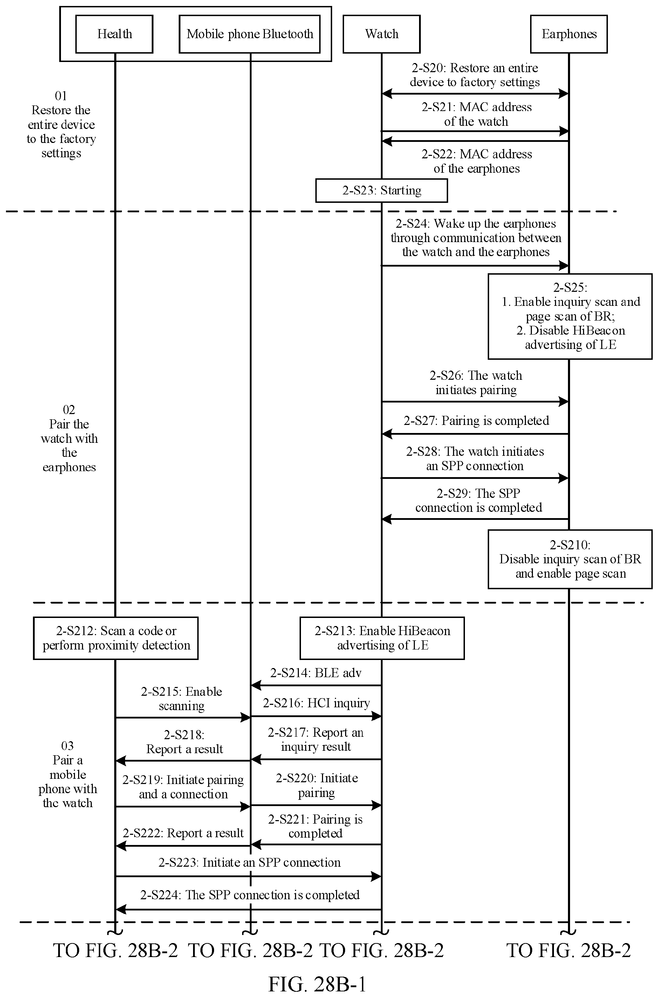

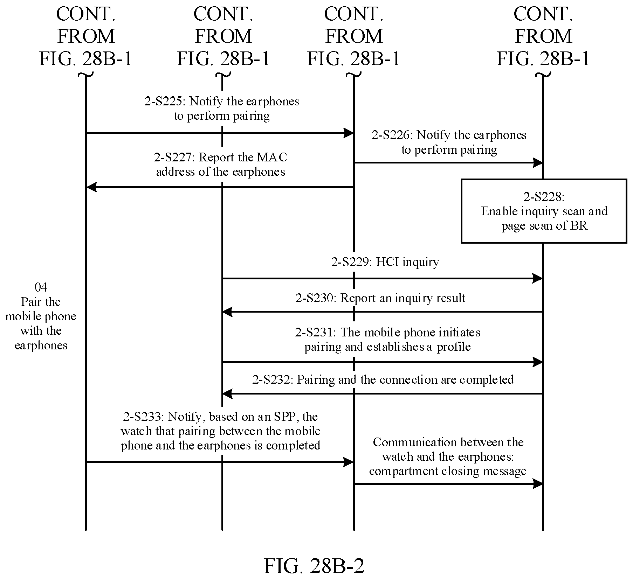

As shown in FIG. 28A, the overall procedure of one-time pairing of the entire device may include the following steps.

Step 2-S11: Automatic pairing is performed between the watch and the earphones.

Refer to the foregoing method of automatic pairing between the watch and the earphones. Details are not described herein again.

Step 2-S12: The mobile phone receives a "one-time pairing operation".

Here, the "one-time pairing operation" may include but is not limited to the pairing operations in the foregoing three UI manners. "One-time" does not mean one action, but means that the user only needs to implement a one-time pairing procedure. The "one-time pairing operation" may be a series of actions, for example, a series of actions of first opening a QR code and then scanning the QR code in "scanning a QR code".

Step 2-S13: The mobile phone performs pairing with the watch in response to the "one-time pairing operation".

Pairing between the mobile phone and the watch may be implemented in, but not limited to, the following manners.

Manner 1: In the pairing operation of "scanning a QR code", the mobile phone scans the QR code displayed on a screen of the watch through a camera, recognizes the QR code to obtain device information such as a MAC address of the watch through decoding, and then performs pairing with the watch based on the MAC address of the watch. The QR code may alternatively be printed or pasted on a chassis of the watch. Not limited to a form of the QR code, the device information such as the MAC address may be encoded and displayed as another graphic code, or even may be directly displayed without being encoded.

Manner 2: In a pairing operation of "proximity discovery", the mobile phone can scan a nearby watch, obtain a MAC address broadcast by the watch, and then perform pairing with the watch based on the MAC address of the watch.

Method 3: In a pairing operation of "manual adding", the mobile phone can scan a plurality of devices such as "HUAWEI WATCH", "HUAWEI BAND", and "HUAWEI GLASSES", read device information such as MAC addresses of these devices, and then perform pairing with a watch based on a MAC address of the watch (for example, "HUAWEI WATCH") selected by the user. The plurality of devices may broadcast the device information such as the MAC addresses of the plurality of devices, so that the mobile phone can scan the plurality of devices.

Step 2-S14: The mobile phone establishes a connection to the watch.

The connection established in step 2-S14 may be used by the watch to send device information such as a MAC address, a device name, and a device type of the earphones to the mobile phone. The MAC address of the earphones is a key to pairing between the mobile phone and the earphones, so that the mobile phone can perform pairing with the earphones based on the MAC address.

In terms of user interaction, the mobile phone may add the watch to a "Connected devices" list of the system, to display the watch connected to the mobile phone to the user. Correspondingly, the watch may also record the connected mobile phone, so that the user can view the mobile phone connected to the watch.

Step 2-S15: The earphones perform automatic pairing with the mobile phone.

Here, "automatic" means that pairing between the earphones and the mobile phone does not need to be triggered by the user again, and automatically occurs after pairing between the watch and the mobile phone. An implementation of automatic pairing between the earphones and the mobile phone may include: After the mobile phone and the watch are paired and establish a connection, the watch may send the MAC address of the earphones to the mobile phone through the communication connection between the watch and the mobile phone, so that the mobile phone pages (page) the earphones based on the MAC address of the earphones. In addition, the watch may send an electrical signal to an in-position earphone through the communication electrode in the earphone compartment in the watch, to control the earphone to be in a page scan (scan) state, so that the earphone successfully scans (or receives) paging from the mobile phone, and finally is paired with the mobile phone.

Pairing results of the earphones and the mobile phone may be presented as follows: If two earphones are in position, the two earphones are paired with the mobile phone. If only a single earphone is in position, only the single earphone is paired with the mobile phone. If the two earphones are out of position, pairing ends first, and a pairing result is that the two earphones are not paired with the mobile phone.

The single earphone (two earphones) paired with the mobile phone may establish a connection to the mobile phone when being removed from a compartment, so that the user can use the earphone to play audio on the mobile phone or answer an incoming call of the mobile phone at any time. The earphone not paired with the mobile phone may perform pairing with the mobile phone after the earphone is back to position. Here, pairing between the in-position earphone and the mobile phone is also "automatic", and does not need to be triggered by the user. A specific implementation of pairing may include: When detecting that the earphone is back to position, the watch sends a signal to the mobile phone through the communication connection established between the watch and the mobile phone, to trigger the mobile phone to page the back-to-position earphone based on a MAC address of the earphone. In addition, the watch may send an electrical signal to the back-to-position earphone through the communication electrode in the earphone compartment, to control the earphone to be in a page scan state, so that the earphone successfully scans (or receives) paging from the mobile phone, and finally is paired with the mobile phone.

As mentioned above, the earphones need be in position for one-time pairing of the entire device. That the earphones are in position means that the earphones are not connected to any mobile phone, that is, the earphones are not in use. In this case, pairing the earphones does not affect an audio service of the mobile phone.

This is not limited thereto. An earphone that is out of position but is connected to the watch may also perform pairing with the mobile phone. However, if the earphone that is out of position but is connected to the watch may have been connected to a mobile phone, the watch may learn whether the earphone is connected to a mobile phone and a mobile phone to which the earphone is connected through the "fixed connection" between the watch and the earphone. If the earphone has been connected to a mobile phone, a further policy may be set to determine whether to allow the earphone to be paired with a new mobile phone. For example, the watch may determine, based on user priorities of the old mobile phone and the new mobile phone, a mobile phone with which the earphone is to be paired. If the new mobile phone has a high priority, the earphone is allowed to be paired with the new mobile phone, that is, the new mobile phone is allowed to preempt to be connected to the earphone; otherwise, the earphone is not allowed to be paired with the new mobile phone. In actual application, another policy may be flexibly set. This is not limited in this application.

FIG. 28B-1 and FIG. 28B-2 show a specific implementation procedure of pairing between a watch, earphones, and a mobile phone after an entire device is restored to factory settings. Details are provided below.

### Restoring the entire device to the factory settings

Step 2-S20: Restore the entire device to the factory settings. For technical details of this step, refer to the foregoing section about the method for restoring to factory settings. Details are not described herein again.

Step 2-S21: The watch may send a MAC address of the watch to the earphones.

Step 2-S22: The earphones may send a MAC address of the earphones to the watch.

The watch and the earphones send MAC addresses of the watch and the earphones to each other to store pairing information of each other. The watch and the earphones may send the MAC addresses to each other through communication between the watch and the earphones. The communication between the watch and the earphones may mean that the earphones and the watch (equivalent to an earphone compartment) communicate with each other through a physical electrical connection. The electrical connection may be formed through contact between a communication electrode in an earphone compartment in the watch and a communication electrode of the earphones.

Step 2-S23: Start the watch. For technical details of this step, refer to the foregoing section about the power-on/off method. Details are not described herein again.

### Pairing the watch with the earphones

Step 2-S24: Wake up the earphones through the communication between the watch and the earphones, and in this way, the earphones may be triggered to enter a pairing mode, for example, enable an inquiry scan (inquiry scan) mode.

Step 2-S25: The earphones may enable an inquiry scan (inquiry scan) mode and a page scan (page scan) mode of a Bluetooth basic rate (Bluetooth basic rate, BR), so that the earphones enter a discoverable pairing state and a connectable state. In addition, HiBeacon advertising of Bluetooth low energy (Bluetooth low energy, LE) is disabled, to avoid being scanned by a nearby mobile phone in a Bluetooth low energy mode, for example, a mobile phone on which "proximity discovery" is enabled.

Step 2-S26: The watch may initiate pairing to the earphones.

Step 2-S27: The earphones may feed back pairing completion to the watch.

When the watch performs pairing with the earphones, the watch may send an inquiry message to the earphones, and the earphones in the discoverable state may receive the inquiry message and feed back an inquiry result. The inquiry result includes the MAC address of the earphones. Generally, in addition to the earphones, the watch may further inquire about other nearby devices, and these devices also enable an inquiry scan (inquiry scan) mode and are in a discoverable state. Because the watch knows the MAC address of the earphones in advance, the watch may select the earphones from the nearby devices obtained through inquiry and perform pairing with the earphones, and the user does not need to perform the selection. In this way, the watch may perform automatic pairing with the earphones based on the MAC address of the earphones without user intervention.

Step 2-S28: The watch may initiate a Bluetooth serial port profile (serial port profile, SPP) connection to the earphones.

Step 2-S29: The earphones may feed back, to the watch, that the SPP connection is completed.

Step 2-S210: The earphones may disable the inquiry scan (inquiry scan) mode of the Bluetooth basic rate (BR), so that the earphone exits the discoverable mode, but keeps enabling the page scan (page scan) mode, and the earphones may allow another device to be connected to the earphones.

### Pairing the mobile phone with the watch

Step 2-S212: "Health" on the mobile phone may detect a "one-time pairing operation" like code scanning or proximity discovery. For the "one-time pairing operation", refer to the foregoing content. Details are not described herein again.

Step 2-S213: The watch may enable HiBeacon advertising of the Bluetooth low energy (LE), to send an advertisement to surroundings.

Step 2-S214: The watch may send an advertisement, which may be specifically a Bluetooth low energy advertisement (BLE adv), and in this way, a nearby mobile phone may scan the watch.

Step 2-S215: In response to the "one-time pairing operation" in step 2-S212, the "Health" on the mobile phone may send a scanning enable instruction to a Bluetooth module of the mobile phone.

Step 2-S216: After receiving the scanning enable message, Bluetooth of the mobile phone sends a host control interface (host control interface, HCI) inquiry message, and correspondingly, the watch may receive the HCI inquiry message.

Step 2-S217: After receiving the inquiry message, the watch may report an inquiry result to the Bluetooth of the mobile phone, where the inquiry result may include the MAC address of the watch.

Step 2-S218: The Bluetooth of the mobile phone may then report a scanning result to the "Health" on the mobile phone, and the mobile phone may display the scanning result, for example, display a "proximity discovery pop-up window" of the watch, and for another example, display a device list shown as an example in FIG. 27, including "HUAWEI WATCH", "HUAWEI BAND", and "HUAWEI GLASSES".

Step 2-S219: The "Health" on the mobile phone delivers an instruction for initiating pairing and connection to the Bluetooth of the mobile phone.

Step 2-S220: In response to the instruction for initiating pairing and connection, the Bluetooth of the mobile phone may initiate pairing to the watch.

Step 2-S221: The watch may feed back a pairing completion result to the Bluetooth of the mobile phone.

Step 2-S222: The Bluetooth of the mobile phone may further report a pairing result, for example, a pairing success, to the "Health" on the mobile phone.

Step 2-S223: The "Health" on the mobile phone may initiate an SPP connection to the watch, where the SPP connection may be initiated directly through a serial port to implement point-to-point awareness.

Step 2-S224: The watch may feed back, to the "Health" on the mobile phone, that the SPP connection is completed, where the SPP connection completion may also be fed back directly through the serial port to implement point-to-point awareness.

In this way, a connection, namely, the SPP connection, is established between the mobile phone and the watch. The connection may be used by the watch to subsequently send information such as the MAC address of the earphones to the mobile phone.

Step 2-S225: The "Health" on the mobile phone may send a message to the watch through the SPP connection, to notify the earphones to perform pairing, to prepare for pairing between the mobile phone and the earphones.

Step 2-S226: The watch may then notify the earphones to perform pairing, where the notification may be implemented based on an SPP connection previously established between the watch and the earphones, or may be implemented through the communication between the watch and the earphones.

Step 2-S227: After the mobile phone notifies the earphones to perform pairing, the watch may further send the MAC address of the earphones to the mobile phone through the SPP connection between the watch and the mobile phone, so that the mobile phone automatically selects the to-be-paired earphones based on the MAC address, and the user does not need to perform the selection.

Step 2-S228: After receiving the pairing notification from the watch, the earphones may enable the inquiry scan (inquiry scan) mode and the page scan (page scan) mode of the Bluetooth basic rate (BR), so that the earphones enter the discoverable pairing state and the connectable state.

Step 2-S229: The earphones that enable the inquiry scan (inquiry scan) mode may receive an HCI inquiry message sent by the mobile phone.

Step 2-S230: After receiving the inquiry message, the earphones may report an inquiry result to the Bluetooth of the mobile phone, where the inquiry result may include the MAC address of the earphones.

Step 2-S231: The Bluetooth of the mobile phone may initiate pairing to the earphones, to establish a profile.

Many profiles (applications), for example, an A2DP, an AVRCP, an HSP, an HFP, an OPP, a GATT, and an SPP, are defined in a Bluetooth specification. A profile defines a manner in which a device implements a connection or application.

Step 2-S232: The earphones may feed back pairing completion to the Bluetooth of the mobile phone.

During pairing between the mobile phone and the earphones, the mobile phone may send an inquiry message to the earphones, and the earphones in the discoverable state may receive the inquiry message and feed back an inquiry result. The inquiry result includes the MAC address of the earphones. Generally, in addition to the earphones, the mobile phone may further inquire about other nearby devices, and these devices also enable an inquiry scan (inquiry scan) mode and are in a discoverable state. Because the mobile phone obtains the MAC address of the earphones from the watch in advance, the mobile phone may select the earphones from the nearby devices obtained through inquiry and perform pairing with the earphones, and the user does not need to perform the selection. In this way, the mobile phone may perform automatic pairing with the earphones based on the MAC address of the earphones without user intervention.

Step 2-S233: After the mobile phone is paired with the earphones, the mobile phone may notify the watch that the mobile phone is paired with the earphones.

The foregoing is not limited to restoring the entire device to the factory settings. The entire device being powered on for the first time may also trigger to pair the watch and the earphones with the mobile phone. Not limited to the method of one-time pairing of the entire device, the watch-earphone pairing implementation, the mobile phone-watch pairing implementation, and the mobile phone-earphone pairing implementation in FIG. 28B-1 and FIG. 28B-2 may also be applicable to another pairing and connection method, for example, a method of automatic pairing between a watch and earphones, a method of pairing new earphones, and a method for an entire device to change a mobile phone.

After the watch is paired with and establishes a connection to the mobile phone, the mobile phone may also require the user to select to-be-paired earphones and mobile phone, for example, select the to-be-paired earphones from devices obtained by the mobile phone through inquiry. For example, only after the user enables "system Bluetooth" to view the devices obtained by the mobile phone through inquiry and selects the to-be-paired earphone from the devices, the mobile phone triggers to pairing the mobile phone with the earphones. In other words, pairing between the mobile phone and the earphones may also require user intervention, instead of being automatically performed. In this case, pairing the watch and the earphones with the mobile phone is "secondary pairing", and the user needs to perform a pairing procedure twice.

### Method for the earphones to independently perform pairing with the mobile phone

The earphones may independently perform pairing with the mobile phone, so that the earphones and the watch can be respectively connected to different mobile phones, to form a "U-shaped connection". If the earphones support a plurality of connections, when the earphones independently perform pairing with the mobile phone, a physical connection between the earphones and the old mobile phone may be converted into a virtual connection, and a "2+1 connection" and the like may be supported. Not limited to the mobile phone, the watch and the earphones may alternatively perform pairing with another type of electronic device, for example, a tablet computer or a large-screen device.

A basic principle of independently pairing the earphone with the mobile phone may include:
1. Independently pairing a single earphone with the mobile phone is supported.
2. If the earphone is used by the old mobile phone, the earphone is not allowed to perform pairing with a new mobile phone.

With reference to FIG. 29, an overall procedure of independently pairing the earphone with the mobile phone may include the following steps.

Step 2-S31: Automatic pairing is performed between the watch and the earphones. For details, refer to the foregoing method of automatic pairing between the watch and the earphones. Details are not described herein again.

Step 2-S32: The watch performs pairing with a mobile phone A.

Step 2-S33: The watch establishes a connection to the mobile phone A. The watch transmits information such as the MAC address of the earphones to the mobile phone A through the connection, and the mobile phone A performs pairing with the earphones based on the MAC address of the earphones.

Step 2-S34: The earphones perform pairing with the mobile phone A. There is a possibility that the earphones are out of position when the watch performs pairing with the mobile phone A, and after being back to position, the earphones perform automatic pairing with the mobile phone A.

In the foregoing step 2-S31 to step 2-S34, the watch and the earphones are paired with the mobile phone A, and a "triangular connection" can be formed. In other words, both the watch and the earphones are connected to the same mobile phone. The connection between the watch and the earphones and the connection between the earphones and the mobile phone are established based on pairing information when the earphones are removed from a compartment.

For step 2-S32 to step 2-S34, refer to the foregoing method of one-time pairing of the entire device.

In the following, step 2-S35 to step 2-S41 describe a manner in which the earphones independently perform pairing with the new mobile phone, and a manner of a connection among the watch, the earphones, and the mobile phone may be changed from the "triangular connection" to a "U-shaped connection".

Step 2-S35: The watch receives a specific user operation to control the earphones to enter a pairing state. The specific user operation may be, for example, an operation of opening the watch and touching and holding a function button of the watch.

This is not limited thereto. The watch may further display, on a screen, a mobile phone that is previously paired with the earphones or another mobile phone that has a same account as a mobile phone that is previously paired with the earphones, for example, a mobile phone B, and may receive an operation of pairing the mobile phone B with the earphones. Once the operation is detected, the watch may send a MAC address of the mobile phone B to the earphones. In this way, the earphones can perform pairing with the mobile phone B based on the MAC address of the mobile phone B. Here, the watch may obtain information such as a MAC address of a mobile phone paired with the earphones, and may further obtain information such as a MAC address of another mobile phone that has a same account as the mobile phone. For example, in a triangular architecture, the watch and the earphones are paired with a same mobile phone, and the watch may obtain, from the mobile phone through a connection to the mobile phone, information such as a MAC address of the mobile phone or a MAC address, a device name, and a device model of another mobile phone that has a same account as the mobile phone.

Step 2-S36: After the earphones enter the pairing state, the watch may receive a notification sent by the earphones, to learn that the earphones are in the pairing state.

The connection between the watch and the earphones is a prerequisite because the notification needs to be transmitted through the communication connection between the watch and the earphones. The communication connection may be a wireless communication connection (for example, a Bluetooth connection) established between the earphones and the watch, or may be an electrical connection formed through contact between the communication electrode in the earphone compartment and the communication electrode of the earphones. The former is applicable to a product form in which the earphones are removed from the compartment when the watch is opened, that is, the earphones is attracted to a watch cover of the watch. The latter is applicable to a product form in which the earphones are still in position when the watch is opened, that is, the earphones are not attracted to the watch cover of the watch.

Step 2-S37: The watch may prompt, in a manner such as vibration, the user that the earphones are in the pairing state.

Step 2-S38: After the earphones are in the pairing state, the mobile phone B may find the earphones that are approaching and in the pairing state, and display a proximity discovery pop-up window.

Step 2-S39: The mobile phone B detects an operation of connecting to the earphones. That is, the user performs the operation of connecting the earphones on the mobile phone B.

Step 2-S40: The mobile phone B performs pairing with the earphones.

Step 2-S41: The mobile phone B establishes a connection to the earphones.

In this way, the earphones are connected to the mobile phone B, and a "U-shaped connection" is formed among the watch, the earphones, the mobile phone A, and the mobile phone B. The previous connection between the earphones and the mobile phone A may be changed to a virtual connection or disconnected. For details, refer to the foregoing content related to the "2+1 connection".

Certainly, not limited to changing from the "triangular connection" to the "U-shaped connection", the earphones may be independently paired with the mobile phone in another connection manner. For example, before the earphones perform pairing with a new mobile phone, the watch may not be paired with any mobile phone, that is, step 2-S32 and step 2-S33 are not performed. The watch and the earphones do not form a "triangular connection" with any mobile phone, and there may be only a "fixed connection" between the watch and the earphones. In this case, the earphones are independently paired with the mobile phone B to form a "watch-earphone-mobile phone B" connection. If the user then controls the watch to perform pairing with the mobile phone B, a "triangular connection" is formed between the watch, the earphones, and the mobile phone B, and is a "triangular connection" in which the watch and the earphones are connected to the mobile phone B. If the user then controls the watch to perform pairing with the mobile phone A, a "U-shaped connection" is formed among the watch, the earphones, the mobile phone A, and the mobile phone B.

For a UI procedure in which the earphones independently perform pairing with the mobile phone, refer to FIG. 30 and FIG. 31. FIG. 30 shows a watch-side UI, and FIG. 31 shows a mobile phone B-side UI. After the earphones enter the pairing state, the watch displays a user interface 02 "Prompt page" in FIG. 30, and the mobile phone B displays a user interface 01 "Proximity discovery pop-up window" in FIG. 31, to prompt the user to tap "Connect" on the mobile phone B to connect the mobile phone B with the earphones.

A single earphone being connected to a new mobile phone is supported. If only one earphone is in position in the watch, the user opens the watch and presses and holds the function button, for example, presses and holds the function button for 2 seconds, to trigger the single earphone to enter the pairing state. The mobile phone B displays a proximity discovery pop-up window, to prompt the user to connect the mobile phone B and the single earphone. In this way, the single earphone may independently perform pairing with the mobile phone B.

However, if the other single earphone that is out of position outside the watch is paired with the mobile phone A (currently connected to or disconnected from the mobile phone A), the single earphone may not be allowed to be independently paired with the mobile phone B, to avoid an error that occurs when the user uses the earphones because the two earphones are connected to different mobile phones.

Certainly, the two earphones may alternatively be supported to be independent of each other and respectively connected to different mobile phones. In this case, to avoid confusion of the user or use the two earphones as a pair of earphones, each time the user opens the watch to pick up the earphones, the watch may prompt the user with a mobile phone connected to each earphone, and the earphone may further output a prompt tone when the user wears the earphone, to prompt the user with the mobile phone connected to the earphone. In addition, a wearing status of the earphone, for example, whether the earphone is worn, an ear on which the earphone is worn, and a distance between the earphones, may be further displayed on the mobile phone, to help the user recognize whether a correct earphone is worn and whether an earphone connected by the user is worn by another person, to ensure proper use and avoid privacy leakage.

When the earphone is used by the old mobile phone, the earphone is not allowed to independently perform pairing with the new mobile phone, to ensure that an ongoing audio service on the old mobile phone is not affected. After the watch receives the specific user operation, the watch may first determine whether the earphone is being used by the old mobile phone. If the earphone is being used by the old mobile phone, the watch does not trigger the earphone to enter the pairing state, does not support the earphone in performing pairing with the new mobile phone, and may give the user a prompt.

Here, that the earphone is being used by the old mobile phone may mean that the earphone is connected to the old mobile phone, and the earphone may be further required to be in a worn state or engaged in a service of the old mobile phone. Being engaged in the service of the old mobile phone may mainly mean that there is data exchange between the earphone and the old mobile phone. It can be learned from the foregoing content that, regardless of the "triangular connection" or the "U-shaped connection", the watch, as a micro control center of the earphones, can learn of a mobile phone to which the earphones are connected and a service that is being processed.

### Method for pairing new earphones

Earphones in a watch may be lost, and a user may purchase new earphones. As shown in FIG. 32, the new earphones are placed in a compartment, and the watch may prompt the user to perform re-pairing, to support the user in using the new earphone. Pairing includes pairing the new earphones with the watch first, and then automatically triggering pairing between the new earphones and a mobile phone.

A basic principle of pairing the new earphones may include:
1. Pairing the new earphones is not allowed when the old earphones are in use.
2. When the new earphones are paired with the watch, pairing information of the old earphones is no longer retained.

Here, whether earphones are new or old is determined based on whether the watch stores pairing information of the earphones, and does not indicate that the earphones are old or new in a concept of component loss. If the watch does not have pairing information of the earphones placed in the compartment, the earphones are new earphones for the watch. If the watch has the pairing information of the earphones placed in the compartment, the earphones are old earphones for the watch. The pairing information of the earphones may include information such as a link key, an authentication code, and a MAC address and a device model of the earphones.

A case in which the watch detects the new earphones may include:
Case 1: Earphones paired with the watch are removed from the compartment, and earphones not paired with the watch are placed in a compartment.
Case 2: If the watch has not been paired with any earphone (for example, earphones are out of position when the watch is powered on for the first time), earphones delivered with the watch or supplemented earphones are placed in the compartment.
Case 2 is applicable to the foregoing automatic pairing between the watch and the earphones. To be specific, the watch may perform pairing with the earphones after detecting that the earphones are placed in the compartment (the earphones are back to position). If the watch has been paired with the mobile phone, the earphones placed in the compartment may be further automatically paired with the mobile phone following the watch.

The following mainly discusses pairing of the new earphones in Case 1.

FIG. 33 and FIG. 34 show a pairing procedure triggered when two new earphones (a single new earphone) are (is) placed in compartments (a compartment).

**As shown in** **FIG. 33****, a pairing procedure triggered when the two new earphones are placed in the compartments may include the following steps.**

Step 2-S51: The watch may detect that the two new earphones are placed in the compartments.

Step 2-S52: The watch may determine whether old earphones are in use. If the old earphones are not in use, step 2-S53 is performed; otherwise, pairing is abandoned, and this procedure is exited.

Here, that the old earphones are in use may include: The old earphones are connected to the mobile phone, and the old earphones may be further required to be in a worn state or engaged in a service. Being engaged in the service may mainly mean that the earphones are processing the service of the mobile phone. It can be learned from the foregoing content that, regardless of the "triangular connection" or the "U-shaped connection", the watch, as a micro control center of the earphones, can learn of a mobile phone to which the earphones are connected and a service that is being processed.

That the old earphones are not in use may include: The old earphones are in position, or the old earphones are out of position but are not connected to any mobile phone, or the old earphones are out of position, and are connected to the mobile phone, but are not engaged in a service.

Step 2-S52 is optional. To be specific, after it is detected that the two new earphones are placed in the compartments, step 2-S54 and step 2-S55 may be directly performed without determining whether the old earphones are in use.

Step 2-S53: The watch may query the user whether to agree to pair the two new earphones, and if the user agrees to pair the two new earphones, step 2-S54 and step 2-S55 are performed; otherwise, pairing is abandoned, and this procedure is exited.

Alternatively, the watch may directly start pairing with the two new earphones without querying the user.

Step 2-S54: Pairing between the two new earphones and the watch is performed.

Step 2-S55: Pairing between the two new earphones and the mobile phone is performed.

The mobile phone may be a mobile phone paired with and connected to the watch. The watch may send device information such as MAC addresses of the two new earphones to the mobile phone, and the mobile phone uses the MAC addresses to perform pairing with the two new earphones. In this way, the two new earphones and the watch are paired with the same mobile phone, to support a "triangular connection" between the two new earphones, the watch, and the mobile phone.

Certainly, the watch may alternatively not be connected to any mobile phone. In this case, step 2-S55 is not performed, and only automatic pairing between the watch and the new earphones is first performed.

**As shown in** **FIG. 34****, a pairing procedure triggered when the single new earphone is placed in the compartment may include the following steps.**

Step 2-S61: The watch may detect that the single new earphone is placed in the compartment.

When the new earphone is placed in the compartment, the watch may read device information such as a MAC address of the new earphone by touching a communication electrode of the new earphone in the earphone compartment.

Step 2-S62: The watch may determine whether an old earphone is in use. If the old earphone is not in use, step 2-S63 is performed; otherwise, pairing is abandoned, and this procedure is exited. For some details, refer to related descriptions of step 2-S52 in FIG. 33. Details are not described herein again.

Step 2-S62 is optional. To be specific, after it is detected that the new earphone is placed in the compartment, subsequent steps may be directly performed without determining whether the old earphone is in use.

Step 2-S63: The watch may determine whether there is one old earphone in the compartment, and if there is one old earphone in the compartment, step 2-S68 is performed; otherwise, step 2-S64 is performed.

Step 2-S64: The watch may detect whether the user places another earphone, and if the user places the another earphone, step 2-S68 is performed; otherwise, step 2-S65 is performed.

The another earphone placed in the compartment by the user may be a new earphone, or may be an old earphone.

Here, placing means placing the earphone in the compartment. Detection of an in state of the earphone may be performed in the following two manners. Manner 1: It is detected first whether a cover of the watch is closed. After the cover of the watch is closed, the communication electrode in the earphone compartment is used to detect whether the earphone in the compartment is a new earphone or an old earphone. Manner 2: The communication electrode in the earphone compartment is used to detect whether the earphone is placed in the compartment. If the communication electrode in the earphone compartment is in contact with a communication electrode of the new earphone, it indicates that the new earphone is placed in the compartment. Manner 1 is applicable to a product form in which the earphone is removed from the compartment when the watch is opened, that is, the earphone is attracted to the watch cover of the watch. In this product form, closing the cover of the watch is a prerequisite for placing the earphone in the compartment. Manner 2 is applicable to a product form in which the earphone is still in position when the watch is opened, that is, the earphone is not attracted to the watch cover of the watch, and is also applicable to a product form in which the earphone is removed from the compartment when the watch is opened.

Step 2-S65: The watch may query the user whether to agree to pair the single new earphone, and if the user agrees to pair the single new earphone, step 2-S66 and step 2-S67 are performed; otherwise, pairing is abandoned, and this procedure is exited.

Alternatively, the watch may directly start pairing with the single new earphone without querying the user.

Step 2-S66: Pairing between the single new earphone and the watch is performed.

Step 2-S67: Pairing between the single new earphone and a mobile phone is performed.

The mobile phone may be a mobile phone paired with and connected to the watch. The watch may send device information such as a MAC address of the single new earphone to the mobile phone, and the mobile phone uses the MAC address to perform pairing with the single new earphone. In this way, the single new earphone and the watch are paired with the same mobile phone, to support a "triangular connection" between the single new earphone, the watch, and the mobile phone.

Certainly, the watch may alternatively not be connected to any mobile phone. In this case, step 2-S67 is not performed.

Step 2-S68: The watch may query the user whether to agree to pair two earphones with the watch, and if the user agrees to pair the two earphones with the watch, step 2-S69 is performed; otherwise, pairing is abandoned, and this procedure is exited.

Alternatively, the watch may directly trigger automatic pairing between the watch and the earphones without querying the user.

Step 2-S69: The watch may control the two earphones in the watch to be restored to factory settings.

Step 2-S70: After restoring to factory settings is performed, the watch performs automatic pairing with the two earphones. After pairing is completed, the watch obtains device information such as MAC addresses of the two earphones and sends the device information to a mobile phone connected to the watch, so that the mobile phone can perform pairing with the two earphones based on the MAC addresses (step 2-S71), and the user does not need to trigger pairing between the mobile phone and the two earphones.

In this application, a key to restoring to the factory settings is to delete earphone pairing information in the watch, for example, pairing information of an old earphone outside a compartment. In other words, in essence, the earphone pairing information in the watch needs to be deleted first, and automatic pairing between an in-position earphone and the watch needs to be re-triggered. Restoring to the factory settings is only a means to achieve this purpose.

Step 2-S71: Pairing between the two earphones and the mobile phone is performed. After pairing is completed, a "triangle connection" may be formed between the two earphones, the watch, and the mobile phone.

Certainly, the watch may alternatively not be connected to any mobile phone. In this case, step 2-S71 is not performed, and only automatic pairing between the watch and the new earphone is first performed.

After pairing of the new earphone is completed, if the watch detects that the old earphone is placed in the compartment, the old earphone may be considered as a new earphone, and the foregoing procedure for pairing the new earphone in the compartment is performed. Because the new earphone is paired with the watch, the watch no longer retains pairing information of the old earphone, and then the old earphone is considered as a new earphone by the watch after the old mobile phone is placed in the compartment.

After the new earphone is placed in the compartment, if the user ignores or misses the pairing procedure of the new earphone, as shown in FIG. 35, the user may further enter a function like "Quick settings" or "Earphone management" of the watch, to actively trigger pairing of the new earphone.

### Method for an entire device to change a mobile phone

An entire device of a watch and earphones changing a mobile phone can help a user easily and efficiently change the mobile phone connected to the watch and the earphones. For the user, the watch and the earphones may be sensed as one device to perform pairing with a new mobile phone, and a pairing procedure between the watch and the new mobile phone and a pairing procedure between the earphones and the new mobile phone do not need to be performed one by one.

Here, whether a mobile phone is new or old is determined based on whether the watch stores pairing information of the mobile phone and does not indicate that the mobile phone is old or new in a concept of component loss. If the watch does not have pairing information of a mobile phone, the mobile phone is a new mobile phone for the watch. If the watch has the pairing information of the mobile phone, the mobile phone is an old mobile phone for the watch. The pairing information of the mobile phone may include information such as a link key, an authentication code, and a MAC address and a device model of the mobile phone.

As shown in FIG. 36, the user may trigger, on the watch, the entire device to change the mobile phone, for example, tap a "Connect to a new mobile phone" option on a user interface 01, then pick up the new mobile phone, scan a QR code on the watch, and trigger the entire device of the watch and the earphones to perform one-time pairing with the new mobile phone. Not limited to "scanning the QR code", a manner in which the entire device of the watch and the earphones performs one-time pairing with the new mobile phone may further include "proximity discovery" and "manual adding". For a manner of pairing the watch and the earphones with the new mobile phone, refer to the foregoing manner of pairing the watch and the earphones with the mobile phone in "one-time pairing of an entire device". Details are not described herein again.

A basic principle for the entire device to change the mobile phone may include:
1. If two earphones are in position, the earphones are paired with the new mobile phone following the watch.
2. If two earphones are out of position, only pairing the watch with the new mobile phone is supported.
3. If only a single earphone is in position, pairing the watch and the single in-position earphone with the new mobile phone is supported.
4. The mobile phone to which an out-of-position earphone is originally connected remains unchanged.

**FIG. 37** **shows an overall procedure of the entire device of the watch and the earphones changing the mobile phone. The procedure may include the following steps.**

Step 2-S80: The watch may detect an operation of changing the mobile phone for the entire device of the watch and the earphones, for example, tapping the "Connect to a new mobile phone" option on the user interface 01 in FIG. 36. In response to this, the watch may trigger a subsequent step to start the operation of the entire device of the watch and the earphones changing the mobile phone.

Step 2-S81: The watch may be disconnected from the currently connected mobile phone, and the mobile phone may be referred to as an old mobile phone.

Step 2-S82: The watch may perform earphone in-position detection.

A detection result may be classified into the following cases: Two earphones are in position, two earphones are out of position, and only a single earphone is in position. The following separately describes pairing between the watch and the new mobile phone and between the earphones and the new mobile phone in these cases.

### The two earphones being in position

Step 2-S83: The entire device of the watch and the earphones performs one-time pairing with a new mobile phone.

For details, refer to the above "one-time pairing of the entire device". The only difference is that the mobile phone is a new mobile phone for the watch. The "one-time pairing operation" is implemented by the user on the new mobile phone. For example, the user picks up the new mobile phone to scan a QR code on the watch and connect to the watch.

In response to the user performing the "one-time pairing operation" on the new mobile phone, the new mobile phone is first paired with the watch, and then the new mobile phone is paired with the earphones. After the watch is paired with the new mobile phone, a connection is established. The watch may transmit device information such as a MAC address of the earphones to the new mobile phone through the connection. The new mobile phone performs automatic pairing with the earphones based on the MAC address of the earphones, and the user does not need to trigger pairing.

When the two earphones are in position, the two earphones are paired with the new mobile phone following the watch.

The new pairing relationship may evolve from the following old pairing relationships:
In a first relationship, as shown in FIG. 38A, the earphones and the watch are previously paired with a mobile phone A. This may be represented as follows: The watch is connected to the mobile phone A, and the earphones are connected to the mobile phone A when the earphones are outside compartments, and may play audio on the mobile phone A.
In a second relationship, as shown in FIG. 38B, the watch and the earphones are previously respectively paired with different mobile phones: the mobile phone A and a mobile phone B. This may be represented as follows: The watch is connected to the mobile phone A, and the earphones are connected to the mobile phone B when the earphones are outside the compartment. This connection manner may be implemented by independently pairing the earphones with the mobile phone B. However, after the earphones are placed in the compartments, the earphones may be automatically paired with the mobile phone A following the watch. This may be represented as follows: After the earphones are removed from the compartments, the earphones are also connected to the mobile phone A following the watch.
In a third relationship, as shown in FIG. 38C, the watch is previously paired with the mobile phone A, but the two earphones are not paired with a mobile phone. This may be represented as follows: The watch is connected to the mobile phone A, but the earphones are not connected to any mobile phone when the earphones are outside the compartments. For example, when the watch performs pairing with the mobile phone A, the earphones are out of position. However, after the earphones are placed in the compartment, the earphones may be automatically paired with the mobile phone A following the watch. This may be represented as follows: After the earphones are removed from the compartment, the earphones are also connected to the mobile phone A following the watch.

### The two earphones being out of position

Step 2-S84: Only the watch performs pairing with the new mobile phone.

After pairing is completed, the watch may establish a connection to the new mobile phone. The connection may be used by the watch to send MAC addresses of the earphones to the new mobile phone, so that the new mobile phone performs pairing with the back-to-position earphones based on the MAC addresses after the two earphones are back to position.

If the two earphones outside the compartments are being connected to another mobile phone, the two earphones may continue the connection. If the two earphones outside the compartments are disconnected from another mobile phone to which the two earphones are connected, the two earphones may be reconnected to the mobile phone. In other words, the mobile phone originally connected to the earphones is not changed. Here, reconnection means that two paired devices establish a connection again without re-pairing.

One possibility is that the another mobile phone connected to the two earphones outside the compartment is the new mobile phone. In this case, it may be directly given a prompt that the entire device of the watch and the earphones is paired with the new mobile phone.

Step 2-S85: It is detected that an earphone is back to position. A detection result may include the following two cases: The two earphones are back to position, and a single earphone is back to position.

Step 2-S86: Automatic pairing between the back-to-position earphone and the new mobile phone is performed.

A specific implementation of automatic pairing may include: When detecting that the earphone is back to position, the watch sends a signal to the new mobile phone through the communication connection established between the watch and the mobile phone, to trigger the new mobile phone to page the back-to-position earphone based on a MAC address of the earphone. In addition, the watch may send an electrical signal to the back-to-position earphone through a communication electrode in an earphone compartment, to control the earphone to be in a page scan state, so that the earphone successfully scans (or receives) paging from the new mobile phone, and finally is paired with the new mobile phone. After pairing with the new mobile phone, the back-to-position earphone may be connected to the new mobile phone after being removed from the compartment, so that the user can use the earphone.

If only the single earphone is back to position, whether the other earphone that is not back to position is paired with another mobile phone can be further considered. Specifically, if the other earphone that is not back to position is not paired with the another mobile phone, the single back-to-position earphone may perform automatic pairing with the new mobile phone. This does not cause confusion to the user due to the two earphones being connected to different mobile phones later. If the other earphone that is not back to position has been connected to the another mobile phone, pairing of the single back-to-position earphone may be performed in the following manners to avoid the two earphones to be connected to the different mobile phones.

Manner 1: The single back-to-position earphone is not allowed to perform automatic pairing with the new mobile phone.

Manner 2: When the other earphone that is not back to position is disconnected from the another mobile phone, the single back-to-position earphone is allowed to perform automatic pairing with the new mobile phone, but the other earphone that is not back to position is not allowed to be reconnected to the another mobile phone later, and after the other earphone that is not back to position is back to position, the other earphone may also be automatically paired with the new mobile phone following the watch. If the other earphone that is not back to position is connected to the another mobile phone, the single back-to-position earphone is not allowed to perform automatic pairing with the new mobile phone.

An example in which the watch and the earphones are originally paired with a mobile phone A is used. With reference to FIG. 39A to FIG. 39C, the following shows an example of a process in which the entire device of the watch and the earphones performs pairing with a new mobile phone B in the foregoing manner 2 when the two earphones are out of position.

As shown in FIG. 39A, after only the watch is paired with the new mobile phone B, the two earphones are back to position, and the two earphones are automatically paired with the new mobile phone B following the watch. This may be represented as follows: After the two earphones are removed from compartments, the two earphones are connected to the new mobile phone B.

As shown in FIG. 39B, after only the watch is paired with the new mobile phone B, the left earphone is back to position. However, because the right earphone that is not back to position is connected to the mobile phone A, the back-to-position left earphone is not automatically paired with the new mobile phone B following the watch. This may be represented as follows: After the left earphone is removed from a compartment, the left earphone is still connected to the mobile phone A instead of the new mobile phone B.

As shown in FIG. 39C, after only the watch is paired with the new mobile phone B, the left earphone is back to position. Because the right earphone that is not back to position is disconnected from the mobile phone A, the back-to-position left earphone is automatically paired with the new mobile phone B following the watch. This may be represented as follows: After the left earphone is removed from the compartment, the left earphone is connected to the new mobile phone B instead of the mobile phone A. In addition, the right earphone that is not back to position is not reconnected to the mobile phone A, to avoid connecting the left earphone and the right earphone to different mobile phones.

The foregoing describes pairing of the back-to-position earphone by using step 2-S85 and step 2-S86. Not limited to the earphone being back to position, after only the watch is paired with the new mobile phone, an earphone placing in a compartment may be a new earphone instead of an old earphone that is paired with the watch. In this application, "back to position" means that the old earphone is placed in the compartment.

Optionally, after it is detected, by using step 2-S85, that the earphone is back to position, step 2-S86 may not be performed, that is, the back-to-position earphone is not automatically paired with the mobile phone. Pairing between the back-to-position earphone and the mobile phone may require user authorization or consent. In this optional implementation, FIG. 39A may be changed as follows: After only the watch is paired with the new mobile phone B, the two earphones are back to position, and the two back-to-position earphones are not paired with the new mobile phone B, and still paired with the old mobile phone. This may be represented as follows: After the two earphones are removed from the compartments, the two earphones are still connected to the old mobile phone A, and the watch, the earphones, the mobile phone A, and the mobile phone B form a "U-shaped connection".

If a new earphone is placed in a compartment, the watch may give the user a prompt that the new earphone is placed in the compartment, and may query the user whether to agree to pair the new earphone with the new mobile phone following the watch. If the user agrees, the new earphone may be paired with the new mobile phone. Further, the new earphone may be automatically paired with the watch, and the watch may no longer store pairing information of an originally paired earphone (namely, the old earphone). After that, the originally paired earphone is considered as a new earphone if the originally paired earphone is placed in the compartment. Here, "no longer storing" means deletion, which may be implemented by restoring to factory settings. Restoring to the factory settings may delete pairing information of an earphone in the watch and trigger automatic pairing between the in-position earphone and the watch.

Certainly, for the new earphone being placed in the compartment, the foregoing user prompt and user inquiry are both a type of user interaction. The user interaction may alternatively be flexibly set based on product positioning and a user habit. This is not limited herein.

### Only the single earphone being in position

Step 2-S87: Only the single in-position earphone is paired with the new mobile phone following the watch.

Specifically, pairing is first performed between the watch and the new mobile phone, and then pairing is performed between the single in-position earphone and the new mobile phone. After the watch is paired with the new mobile phone, the watch may establish a connection to the new mobile phone. The watch may send a MAC address of the earphone to the new mobile phone through the connection, and the new mobile phone may perform pairing with the in-position earphone based on the MAC address. After pairing with the new mobile phone, the in-position earphone may establish a connection to the new mobile phone after being removed from a compartment, so that the user can use the earphone.

However, if the other out-of-position earphone has been paired with another mobile phone, pairing of the single in-position earphone may be processed in the following manners to avoid the two earphones to be connected to different mobile phones.

Manner 1: The single in-position earphone is not allowed to be paired with the new mobile phone following the watch.

Manner 2: If the single out-of-position earphone is being connected to another mobile phone, the single in-position earphone is not allowed to be paired with the new mobile phone following the watch. If the single out-of-position earphone is disconnected from the another mobile phone, the single in-position earphone may be allowed to be paired with the new mobile phone following the watch, and the single out-of-position earphone is not allowed to be reconnected to the another mobile phone. Then, if the single out-of-position earphone is back to position, automatic pairing between the single out-of-position earphone and the new mobile phone may be performed.

An example in which the watch and the earphone are originally paired with the mobile phone A is used. With reference to FIG. 40A and FIG. 40B, the following shows an example of a process in which the entire device of the watch and the earphone performs pairing with the new mobile phone B in the foregoing manner 2 when only the left earphone is in position.

As shown in FIG. 40A, only the left earphone is in position, the right earphone is outside a compartment and is connected to the mobile phone A, and the in-position left earphone is not paired with the new mobile phone B following the watch. This may be represented as follows: After the left earphone is removed from the compartment, the left earphone is still connected to the mobile phone A.

As shown in FIG. 40B, only the left earphone is in position, the right earphone is outside the compartment and is disconnected from the mobile phone A, and the in-position left earphone is paired with the new mobile phone B following the watch. This may be represented as follows: After the left earphone is removed from the compartment, the left earphone is connected to the new mobile phone B. The right earphone outside the compartment is not reconnected to the mobile phone A.

Step 2-S88: It is detected that the other earphone is back to position.

Step 2-S89: Automatic pairing between the back-to-position earphone and the new mobile phone is performed.

The foregoing describes, by using step 2-S88 and step 2-S89, pairing after the other earphone is back to position. Not limited to the other earphone originally paired with the watch, after only the single in-position earphone is paired with the new mobile phone following the watch, the other earphone placed in the compartment may alternatively be a new earphone.

If the new earphone is placed in the compartment, the watch may give the user a prompt that the new earphone is placed in the compartment, and may query the user whether to agree to pair the new earphone with the new mobile phone following the watch. If the user agrees, the new earphone may be paired with the new mobile phone. Further, the new earphone may be automatically paired with the watch, and the watch no longer stores pairing information of the originally paired earphone (namely, the old earphone). After that, the originally paired earphone is considered as a new earphone if the originally paired earphone is placed in the compartment. Here, "no longer storing" means deletion, which may be implemented by restoring to factory settings. Restoring to the factory settings may delete pairing information of an earphone in the watch and trigger automatic pairing between the in-position earphone and the watch.

Certainly, for the new earphone being placed in the compartment, the foregoing user prompt and user inquiry are both a type of user interaction. The user interaction may alternatively be flexibly set based on product positioning and a user habit. This is not limited herein.

### Reconnection method

After a wireless communication connection between earphones, a watch, and a mobile phone is disconnected, reconnection may be performed.

A reconnection policy is discussed below.
(1) A fixed connection between the earphones and the watch is disconnected.

The earphones may be used as a secondary device to be reconnected to the watch, for example, periodically reconnected to the watch.

Not limited to a periodic mechanism, the earphones may further be reconnected to the watch based on a specific event.

The specific event may be an event of the earphones being removed from a compartment. "Being removed from the compartment" means that the earphones leave the earphone compartment, which may mean that a user needs to use the earphones. For a product form in which the earphones are attracted to a watch cover of the watch when the watch is opened, the event of being removed from the compartment may be generated when the watch cover is opened. The earphones are detached from the earphone compartment when the earphones are attracted to the watch cover. For a product form in which the earphones are not attracted to the watch cover of the watch when the watch is opened, the event of being removed from the compartment may be generated by taking the earphones out of the earphone compartment.

The specific event may alternatively be a watch cover opening event. Opening the cover of the watch may also reflect that the user intends to use the earphones. In this case, the watch may wake up the earphones in the watch, to trigger the earphones to be reconnected to the watch.

When detecting a specific user input, for example, an operation of turning on a screen of the watch, such as pressing a function button 24 of the watch, the watch may be actively reconnected to the earphones, to respond to a user requirement in a more timely manner.

(2) The watch is disconnected from the mobile phone.

The watch may be used as a secondary device to be reconnected to the mobile phone, for example, periodically reconnected to the mobile phone.

The mobile phone may receive a reconnection operation of the user, and therefore be reconnected to the watch. This reconnection may also be referred to as manual reconnection. The reconnection operation may be that the user selects, on the mobile phone, to reconnect to a watch to which the mobile phone has been connected, for example, selects, on a Bluetooth setting user interface, a watch from a list of connected devices for reconnection.

When detecting a specific user input, for example, an unlock operation, the mobile phone may be actively reconnected to the watch, to respond to a user requirement in a more timely manner.

(3) The earphones are disconnected from the mobile phone.

A policy for reconnecting the earphones to the mobile phone may be: The earphones are reconnected to a mobile phone connected last time.

If the reconnection fails, the earphones may report a failure reason to the watch through the fixed connection between the earphones and the watch, to prompt the user of the watch with the failure reason.

If the mobile phone to which the watch is connected is the same as the mobile phone to which the earphones are connected last time, the watch may notify the mobile phone to be reconnected to the watch.

(4) The earphones are disconnected from both the mobile phone and the watch.

An implementation may be as follows: The earphones are first reconnected to the watch, and then reconnected to the mobile phone.

To improve a reconnection speed, the watch may be reconnected to the earphones when the earphones are reconnected to the mobile phone. Alternatively, a device may be woken up for reconnection in advance based on a service. For example, before a scheduled conference starts, the mobile phone may be actively reconnected to the earphones, and may notify the watch to be reconnected to the earphones.

To preferentially ensure an audio service of the mobile phone, for example, a call service, the earphones may be preferentially reconnected to the mobile phone, and then reconnected to the watch.

In addition, the reconnection may be alternatively implemented based on a user habit or an application scenario. For example, when it is detected that a conference scenario is entered (a conference application is started), the mobile phone may be actively reconnected to the earphones, and may notify the watch to also be reconnected to the earphones.

### Some UIs related to pairing and connection

### User interfaces for first pairing

As shown in FIG. 41A to FIG. 41C, a watch may sequentially display a series of user interfaces, for example, a user interface 03 to a user interface 08, to prompt a user with a process of pairing the watch and earphones with a mobile phone.

The watch may display a user interface 04 "Pairing page", to guide the user to scan a QR code to pair the mobile phone with the watch and the earphones, or guide the user to add an all-in-one device of the watch and the earphones (for example, "HUAWEI WATCH") to the mobile phone to pair the mobile phone with the watch and the earphones. In another implementation, the user may open the watch and press and hold a function button. Correspondingly, the mobile phone may display a "proximity discovery pop-up window" to guide the user to connect to the all-in-one device of the watch and the earphones that is found through proximity discovery, to trigger to pair the mobile phone with the watch and the earphones.

To help the user learn of a progress of pairing the mobile phone with the watch and the earphones, the pairing progress may be displayed on the earphones, specifically, as shown on a user interface 05 to a user interface 08. The pairing progress may mainly include: The watch performs pairing with the mobile phone and the earphones perform pairing with the mobile phone.

After the watch is paired with the mobile phone, pairing the earphones with the mobile phone is performed automatically without triggering by the user. In other words, pairing between the watch and the mobile phone and between the earphones and the mobile phone may be completed in one procedure shown on the user interface 04. This pairing is perceived by the user as "pairing between the mobile phone and the all-in-one device of the watch and the earphones". The user does not need to care about how to pair the watch with the mobile phone and how to pair the earphones with the mobile phone, and does not need to process pairing between the watch and the earphones. For the user, this is the same as pairing two simple devices, and user experience is easy and natural.

Further, the UI for first pairing may prompt the user with a pairing requirement that the earphones are in position. For example, the user interface 03 prompts the user not to open a cover or take out the earphones in the pairing process. In this way, the user can be prompted with how to correctly pair the earphones with the mobile phone, to avoid a case in which the earphones are not paired with the mobile phone because the user does not know the pairing requirement in the pairing process.

Further, the UI for first pairing may further prompt an exception that the earphones are out of position, to help the user handle the exception.

For example, as shown on a user interface 11, after powering on is completed and before pairing is started, if an earphone is not in the watch, the watch may prompt the exception and a consequence of the exception (for example, the earphone outside the watch cannot be paired with the mobile phone), and may further guide the user to place the earphone back in the watch, to ensure that the earphone is paired with the mobile phone.

For another example, as shown on a user interface 12, after the watch is paired with the mobile phone and before pairing between the earphones and the mobile phone is started, if an earphone is not in the watch, the watch may prompt the exception and a consequence of the exception (for example, the earphone outside the watch cannot be paired with the mobile phone), and may further guide the user to place the earphone back in the watch, to ensure that the earphone is paired with the mobile phone.

For another example, as shown on a user interface 09 and a user interface 10, when the watch and the earphones are powered on, if an earphone is not in the watch, the watch may prompt the exception and a consequence of the exception (for example, the earphone outside the watch cannot be paired with the mobile phone), and may further guide the user to place the earphone back in the watch, to ensure that the earphone is paired with the mobile phone.

Correspondingly, the mobile phone with a screen may also display the pairing processes between the mobile phone and the watch and between the mobile phone and the earphones. For details, refer to the mobile phone-side UIs shown in FIG. 23, FIG. 24, and FIG. 27 in the method of one-time pairing of the entire device.

### User interfaces after completion of pairing

### (1) Guide for the user to manage the earphones

After the watch and the earphones are paired with the mobile phone, the watch and the mobile phone may provide some usage guides related to the earphones.

The watch may provide a use guide of the earphones after first pairing, for example, guiding the user to tap the "Earphone management" option to enter the "Quick settings" user interface shown in FIG. 42, and further guiding the user to use each function in the "Earphone management". The "Earphone management" is described in detail in subsequent embodiments. Details are not described here. The use guide may further include: guiding the user to use each function, for example, noise cancellation, in the "Quick settings" user interface.

After the watch and the earphones are paired with the mobile phone, the mobile phone may also provide a use guide of the earphones, for example, an operation guide like taking out the earphones, placing the earphones, and recognizing left and right ears.

This is not limited thereto. Abundant user usage guides may be provided by the watch and the mobile phone side. For details, refer to other embodiments in this specification. Details are not described here.

### (2) Association display of the watch and the earphones

To help the user recognize the watch and the earphones as an all-in-one device of the watch and the earphones, after "one-time pairing of the entire device" is completed, the mobile phone may associate and display the watch and the earphones as the all-in-one device that is paired with the mobile phone. Here, association display may include: In a display interface of "Paired devices" of the mobile phone, the watch may have a same or corresponding graphical interface appearance, for example, a same or corresponding device icon and device name, as that of the earphones. "Corresponding" may mean that icons or names are partially the same, or icons or names indicate that the watch and the earphones have a primary/secondary relationship, for example, "Watch" and "Earphones of the watch". Association display may also include: The watch and the earphones are always displayed in a following manner in an interface layout, for example, are displayed adjacently. For another example, the earphones are displayed as a sub-device of the watch through hierarchical arrangement. Certainly, the watch and the earphones may alternatively be combined for display into one entire device. Not limited to this, association display may further include: simultaneously highlighting the icons, texts, and the like of the watch and the earphones, for example, simultaneously highlighting, simultaneously enlarging, and simultaneously shaking the icons, texts, and the like, to indicate that the watch and the earphones are strongly associated with each other to form the all-in-one device. These association display manners mentioned above may also be combined for implementation.

In addition, the icons and names of the watch and the earphones may be edited by the user. Edited icons and names are synchronized between the mobile phone and the watch. To avoid damaging association display of the watch and the earphones due to editing, editing of the watch and the earphones may be coordinated. For example, when the user changes "Watch" to "Mobile phone S", a name of the earphones may be correspondingly automatically updated to "Earphones of the mobile phone S".

### User interfaces in which pairing fails

### A. User interfaces in which pairing between the watch and the earphones fails

As shown in FIG. 43A and FIG. 43B, when pairing between the watch and the earphones fails, the watch may prompt that pairing fails, and may further prompt the user with a failure reason or a solution, for example, "Initialization fails. Please charge and retry" displayed on a user interface 09, where "charge" indicates that the pairing failure reason is that the earphones have no battery power, and also prompts the user to charge to solve the problem.

If pairing fails due to an unknown reason, the watch may prompt the user to retry. A maximum number of retries may be set, for example, 2. If the watch and the earphones have not been successfully paired when the maximum number of retries is reached, the user may be prompted to ignore or skip pairing between the watch and the earphones, or restore the watch and the earphones to factory settings. If pairing between the watch and the earphones fails and the user chooses to ignore or skip pairing between the watch and the earphones, the user may be prompted with unavailability of the earphone, and the watch performs pairing with the mobile phone later.

In addition, if the failure reason of pairing between the watch and the earphones is that the earphones are out of position, the user may be prompted to place the earphones back in the watch. If only a single earphone is out of position, and the user ignores or gives up placing the other earphone back in the watch, the user may be further prompted with pairing between only the in-position earphone and the watch. If two earphones are out of position, and the user ignores or gives up placing the earphones back in the watch, pairing between the watch and the earphones may be skipped, and pairing between the watch and the mobile phone may be performed.

### B. User interfaces in which pairing between the watch and the mobile phone fails

As shown in FIG. 43A and FIG. 43B, when pairing between the watch and the mobile phone fails, the watch may prompt that pairing fails, as shown on a user interface 11. Further, the watch may further return to an interface of pairing between the watch and the mobile phone, to prompt the user to re-implement a procedure of pairing the watch and the earphones with the mobile phone, to trigger re-pairing between the watch and the mobile phone.

### C. User interfaces in which pairing between the earphones and the mobile phone fails

As shown in FIG. 43A and FIG. 43B, when pairing between the earphones and the mobile phone fails, the watch may prompt that pairing fails, for example, "Pairing between the earphones and the mobile phone HUAWEI PHONE fails" prompted on a user interface 12. The user may choose to re-pair the earphones with the mobile phone, or may choose to ignore or skip pairing between the earphones and the watch. If the user selects the latter, the user may be prompted to enter "Earphone management" later, and re-pair the earphones with the mobile phone, as shown on a user interface 13.

### D. User interfaces in which re-pairing between the watch and the earphones is performed

As shown in FIG. 44, pairing between the watch and the earphones fails, and the watch may prompt, on a "Quick settings" user interface, that the watch and the earphones are not paired. For example, "The earphones are not connected" is displayed at an "Earphone management" option. The user may tap the "The earphones are not connected" option to enter an "Earphone management" user interface. The watch may further provide a "Reconnect" option on the "Earphone management" user interface. The user may select this option to trigger re-pairing between the watch and the earphones.

In other words, after pairing between the watch and the earphones fails, the user may enter "Earphone management" to re-pair the earphones with the watch.

More conveniently, after pairing between the watch and the earphones fails, the watch may further directly provide a "Reconnect" option on the "Quick settings" user interface. The user only needs to tap the option to trigger pairing between the watch and the earphones, to implement "one-touch" reconnection of the earphones.

### E. User interfaces in which re-pairing between the earphones and the mobile phone is performed

If pairing between the earphones and the mobile phone fails, re-pairing between the earphones and the mobile phone may be performed in the following manners.

Method 1: The earphones are re-placed in a compartment, and the earphones may perform automatic pairing with the mobile phone.

This manner may not be perceived by the user, that is, automatic pairing is not presented to the user. The user may learn in "Earphone management" that the earphones change from not being paired with the mobile phone to being paired with the mobile phone.

Manner 2: The mobile phone may display a user interface in which pairing fails, where the user interface may include a "Reconnect" option, and the user is supported in triggering re-pairing between the mobile phone and the earphones by selecting the option. The user interface may be shown in FIG. 45.

Manner 3: The mobile phone may detect an earphone connection operation input by the user in "System Bluetooth", and support the user in pairing the mobile phone with the earphones in "System Bluetooth". "System Bluetooth" may be a specific function or service related to Bluetooth management in a system function or service "Settings" on the mobile phone.

If pairing between the earphones and the mobile phone fails, "System Bluetooth" on the mobile phone may be shown as a user interface on the left of FIG. 46. The watch "HUAWEI Watch 1" in the all-in-one device of the watch and the earphones is a paired device of the mobile phone, and the earphones "Buds 1" are an unpaired device of the mobile phone. The user may tap a device option "Buds 1" to trigger pairing between the mobile phone and the earphones "Buds 1". After pairing is completed, the earphones "Buds 1" may be added to a list of paired devices on the mobile phone.

### User interfaces in which the watch and the earphones are deleted

The user may delete the paired all-in-one device of the watch and the earphones from the mobile phone. Specifically, the user may delete the watch and the earphones from "Health", or may delete the watch and the earphones from "System Bluetooth". Regardless of where the user performs deletion, the deletion needs to be synchronized in "Health" and "System Bluetooth".

For example, as shown in FIG. 47A, the user opens a management interface "HUAWEI WATCH" that is of the all-in-one device of the watch and the earphones and that is of "Health", and taps a "Delete device" option on an upper right corner to delete the all-in-one device of the watch and the earphones. Then, as shown in FIG. 47B, the user enters "System Bluetooth", and may learn that device options of the watch and the earphones in the all-in-one device of the watch and the earphones are no longer displayed in "Paired devices".

Once an application or service detects a watch and earphone deletion operation, the mobile phone may send a notification to all applications or services that listen to a watch and earphone deletion event, to synchronize a watch and earphone pairing status between a plurality of applications or services. The applications or services that listen to the watch and earphone deletion event may include System Bluetooth, Health, and the like. These applications or services may cancel display of the watch and the earphones after receiving the notification. These applications or services usually listen to an event that the watch and the earphones are paired with the mobile phone, and may add display of the watch and the earphones based on the event. For example, after the notification is received, "System Bluetooth" may cancel display of the watch and the earphones, for example, the device options of the watch and the earphones are no longer displayed in "Paired devices". After the watch and the earphones are paired with the mobile phone, "System Bluetooth" may add display of the watch and the earphones, for example, the device options of the watch and the earphones are displayed in "Paired devices". For another example, after receiving the notification, "Health" no longer provides a management interface that is of the all-in-one device of the watch and the earphones and that is of "HUAWEI WATCH", and adds, after the watch and the earphones are paired with the mobile phone, the management interface that is of the all-in-one device of the watch and the earphones and that is of "HUAWEI WATCH".

The applications or services that listen to the watch and earphone deletion event may also have a capability of receiving a watch and earphone deletion operation. As shown in FIG. 47A, "Health" provides an option "Delete device" to receive the watch and earphone deletion operation.

Alternatively, the user may separately delete the watch or the earphones from the mobile phone, without limited to deleting only the watch and the earphones together.

### Software architecture of a watch and earphones

FIG. 48 shows an example of the software architecture of the watch and the earphones. In the software architecture, various control functions of the watch for the earphones may be implemented based on a watch and earphone interaction module. The watch and earphone interaction module may include a group of application interfaces (application interfaces, APIs) provided by an earphone developer, and a Bluetooth communication manner and an intra-compartment universal asynchronous receiver/transmitter (universal asynchronous receiver/transmitter, UART) communication manner on which these APIs are based. The watch may perform a plurality of types of control on the earphones by invoking the group of APIs, for example, upgrading the earphones, canceling noise, and increasing/decreasing volume, without requiring a watch developer to implement specific functions encapsulated or represented by these APIs. In this way, development burden on the watch side can be reduced, and development work of the watch and the earphones is decoupled. In addition, an update of the watch and earphone interaction module does not require that an earphone control function be adaptively changed on the watch side, so that the earphones are more flexibly updated.

The Bluetooth communication manner may be implemented based on a Bluetooth communication module in the watch and Bluetooth communication modules in left and right earphones. The intra-compartment UART communication manner may be implemented based on left-earphone and right-earphone UART communication circuits in the watch and UART communication circuits of the left and right earphones. In actual application, the Bluetooth communication manner may be replaced with another wireless communication manner, and the UART communication manner may be replaced with another bus communication manner.

As shown in FIG. 48, a software architecture of the watch may mainly include an application layer and the watch and earphone interaction module.

The application layer may include various earphone control functions (or applications or services). With reference to the foregoing methods, the various earphone control functions may include, for example, earphone upgrade, earphone reset (factory settings restoring), earphone pairing, music control, call control, noise cancellation control, volume control, earphone management, and an earphone UI (for example, "Quick settings" and "Earphone management"). This is not limited thereto. In actual application, the watch software application layer may include more or fewer earphone control functions than the foregoing functions.

The watch and earphone interaction module may include various earphone control APIs that are directly invoked by the application layer, and a Bluetooth communication software interface, a left-earphone UART communication software interface, and a right-earphone UART communication software interface that are based on the APIs. The Bluetooth communication software interface may be used by the watch to communicate with the earphones in the Bluetooth communication manner, for example, transmit an earphone upgrade package to the earphones and receive earphone power information from the earphones. The left-earphone and right-earphone UART communication software interfaces may be used by the watch to communicate with the earphones in the UART communication manner, for example, send a reset command to the earphones and obtain a MAC address of the earphones sent by the earphones.

The following describes an implementation of each earphone control function at the application layer based on the watch and earphone interaction module.

Earphone upgrade: This function may invoke an API for upgrading the earphones in the watch and earphone interaction module. The API for upgrading the earphones may specifically include an API for obtaining an earphone upgrade package and an API for updating an earphone capability. An example of the former API is "getPackage()", and the API may further invoke the Bluetooth communication software interface to send the earphone upgrade package to the earphones in the Bluetooth communication manner. An example of the latter API may be, "update (package)", and the API may further invoke the Bluetooth communication software interface to control, in the Bluetooth communication manner, the earphones to perform upgrade based on the upgrade package (package). Not limited to the Bluetooth communication manner, the upgrade package and an upgrade instruction may alternatively be sent to an in-position earphone in the UART communication manner.

Earphone reset (factory settings restoring): This function may invoke an API for restoring the earphones to factory settings in the watch and earphone interaction module. The API for restoring the earphones to factory settings may specifically include an API for deleting pairing information, for example, "deletePairInfo()". Here, deletePairInfo() may further invoke the left-earphone and right-earphone UART communication software interfaces to send, in the UART communication manner, a control instruction for deleting the pairing information to the in-position earphone. Here, deleting the pairing information may be deleting pairing information of the watch, the mobile phone, or the like from the earphone. The API for restoring the earphones to factory settings may further include another specific API, to implement another procedure further related to restoring the earphones to the factory settings.

Earphone pairing: This function may invoke an API for pairing the earphones with the watch (for example, "budsPairWatch()"), an API for pairing the earphones with the mobile phone (for example, "budsPairPhone()"), and an API for obtaining the MAC address of the earphones (for example, "getMac()") that are in the watch and earphone interaction module. Here, getMac() may further invoke the left-earphone and right-earphone UART communication software interfaces to obtain the MAC address of the earphones from the earphones in the UART communication manner. Here, budsPairWatch() may further invoke the left-earphone and right-earphone UART communication software interfaces to control, in the UART communication manner, the earphones to perform page scan (page scan), to scan paging of the watch and implement pairing between the watch and the earphones. Here, budsPairPhone() may further invoke the Bluetooth communication software interface to control, in the Bluetooth communication manner, the earphones to perform page scan, to scan paging of the mobile phone and implement pairing between the earphones and the mobile phone.

Music control: This function may invoke a playing API (for example, "play()"), a pause API (for example, "pause()"), a previous track API (for example, "previous()"), and a next track API (for example, "next()") that are in the watch and earphone interaction module. Here, play() may further invoke the Bluetooth communication software interface to send a music play instruction to the earphones in the Bluetooth communication manner, to control the earphones to start/continue to render currently buffered music. Here, pause() may further invoke the Bluetooth communication software interface to send a pause instruction to the earphones in the Bluetooth communication manner, to control the earphones to pause rendering of currently buffered music. Here, previous() may further invoke the Bluetooth communication software interface to send, to the earphones in the Bluetooth communication manner, an instruction for playing a previous track of music, to control the earphones to start to render the previous track of music. The earphones may simultaneously receive or have received the previous track of music from an audio source device (such as the mobile phone or the watch). Here, next() may further invoke the Bluetooth communication software interface to send, to the earphones in the Bluetooth communication manner, an instruction for playing a next track of music, to control the earphones to start to render the next track of music. The earphones may simultaneously receive or have received the previous track of music from the audio source device.

In addition, in a "U-shaped connection", the earphones may further forward, to the mobile phone connected to the earphones, a play/pause/previous track/next track instruction generated on the earphones, to trigger the mobile phone to start/pause transmitting an audio stream to the earphones, or change an audio stream transmitted to the earphones. In this way, in the "U-shaped connection", play()/pause()/previous()/next() may be further used to notify, in the Bluetooth manner, the earphones to forward a corresponding control instruction.

Call control: In a "U-shaped connection", this function may invoke an answer API (for example, accept()), a decline API (for example, decline()), and a call API (for example, call (number)) that are in the watch and earphone interaction module. Here, accept() may further invoke the Bluetooth communication software interface to notify, in the Bluetooth communication manner, the earphones to forward an answering instruction. Here, decline() may further invoke the Bluetooth communication software interface to notify, in the Bluetooth communication manner, the earphones to forward a declining instruction. Here, call (number) may further invoke the Bluetooth communication software interface to notify, in the Bluetooth communication manner, the earphones to forward a call instruction and a phone number (number).

Noise cancellation control: This function may invoke a noise cancellation API (for example, "noiseCancel() ") in the watch and earphone interaction module, and noiseCancel() may further invoke the Bluetooth communication software interface to send a noise cancellation instruction to the earphones in the Bluetooth communication manner.

Volume control: This function may invoke a volume increase API (for example, "volumeIncrease()") and a volume decrease API (for example, "volumeDecrease()") in the watch and earphone interaction module, and volumeIncrease() and volumeDecrease() may further separately invoke the Bluetooth communication software interface to send a volume increase instruction and a volume decrease instruction to the earphones in the Bluetooth communication manner.

Earphone management: This function may invoke an API for setting left and right earphones (for example, "setLR()"), an API for controlling the mobile phone connected to the earphones (for example, "connectPhone (targetPhone) "), an API for setting a wide-area touch-control gesture of the earphones (for example, "setGesture (targetGesture) "), and an API for finding the earphones (for example, "findBuds()") that are in the watch and earphone interaction module. Here, setLR() may further invoke the left and right earphone UART communication software interfaces to send, to in-position earphones in the UART communication manner, a control instruction for setting the left earphone and the right earphone, to control the left earphone and the right earphone to be set as the left earphone/right earphone, when stereo music is subsequently played, audio data of a corresponding audio channel is correspondingly selected and rendered based on whether an earphone is a left earphone or a right earphone. Here, connectPhone (targetPhone) may further invoke the Bluetooth communication software interface to send, to the earphones in the Bluetooth communication manner, an instruction for connecting to a target mobile phone targetPhone. The target mobile phone may be selected by the user. For example, in a "U-shaped connection", the user may choose, on the watch, to connect the earphones to the mobile phone connected to the watch. The target mobile phone may be selected by the watch based on an application scenario. For example, the watch may connect the earphones to a mobile phone closer to the watch, especially when the watch is in a worn state. Here, setGesture (targetGesture) may further invoke the Bluetooth communication software interface to send, to the earphones in the Bluetooth communication manner, an instruction for setting the wide-area touch-control gesture as a target gesture targetGesture, and control the earphones to update the wide-area touch-control gesture. Here, findBuds() may further invoke the Bluetooth communication software interface to send an instruction like a sound making/vibration instruction to the earphones in the Bluetooth communication manner, to control sound making/vibration of the earphones, so that the user can find the earphones.

Earphone UI (for example, "Quick settings" and "Earphone management"): This function may invoke a series of APIs related to earphone display in the watch and earphone interaction module, for example, including an earphone power detection API (for example, "getRemainCap()"), an API for detecting an in or out state of earphones (for example, "getInOutStatus()"), an API for obtaining earphone device information (for example, "getDevInfo()"), an API for obtaining an earphone pairing result (for example, "getPairRslt()"), an API for obtaining information about a connected mobile phone (for example, "getConnectPhoneInfo()"), an API for obtaining an earphone factory settings restoring result (for example, "getRecoverRslt()"), and an API for obtaining an earphone upgrade result (for example, "getUpdateRslt()"). Here, getRemainCap() may further invoke the Bluetooth communication software interface to send, to the earphones in the Bluetooth communication manner, an instruction for obtaining remaining power, to control the earphones to feed back remaining power information of the earphones to the watch, so that the watch refreshes and displays the remaining power of the earphones. Here, getInOutStatus() may further invoke the left and right earphone UART communication software interfaces to send an in-position detection instruction to in-position earphones in the UART communication manner, to obtain in/out states of the earphones (that is, whether the earphones are in position), so that the watch refreshes and displays in-position statuses of the earphones. Here, getDevInfo() may further invoke the Bluetooth communication software interface to send, to the earphones in the Bluetooth communication manner, an instruction for obtaining device information such as an earphone name and an earphone type, to control the earphones to feed back the device information of the earphones to the watch, so that the watch displays the device information of the earphones. Here, getPairRslt() may further invoke a UART communication software interface to send a pairing result query instruction to an in-position earphone in the UART communication manner, to obtain a result of pairing between the in-position earphone in the watch and the watch or the mobile phone, so that the watch displays the pairing result. Here, getConnectPhoneInfo() may further invoke the Bluetooth communication software interface to send, to the earphone in the Bluetooth communication manner, an instruction for querying a connected mobile phone, to control the earphone to feed back, to the watch, information about the mobile phone connected to the earphone, so that the watch refreshes and displays the information about the mobile phone connected to the earphone. Here, getRecoverRslt() and getUpdateRslt() may further invoke a UART communication software interface to send factory settings restoring and upgrade query instructions to an in-position earphone in the UART communication manner, to obtain factory settings restoring and upgrade results of the in-position earphone in the watch, so that the watch displays the results.

The earphone UI may appear on a plurality of functions or user interfaces of the watch. For example, the in-position status and the power information of the earphones may be displayed on a home (home) screen of the watch, the information about the mobile phone connected to the earphones may be displayed on a "Quick settings" user interface, the factory settings restoring and upgrade results may be respectively displayed on user interfaces of factory settings restoring and upgrade functions, and the pairing result may be displayed on a function related to earphone pairing (for example, "Watch and earphone management"). In other words, a plurality of functions at the application layer of the watch invoke API interfaces related to the earphone UI to implement display of the earphones, so that the user can learn of a status or a working status of the earphones when using these functions.

Whether an API in the watch and earphone interaction module invokes a Bluetooth software communication interface or a UART software communication interface may be determined based on a service scenario. For example, in a scenario in which the earphones are paired with the watch, an invoked API may invoke the Bluetooth software communication interface to control the earphones in the Bluetooth communication manner. For another example, in a scenario in which the earphones are in position, an invoked API may invoke the UART software communication interface to control the earphones in the UART communication manner.

### Music control method

This application provides an audio playing control method. A smartwatch 3-101 may control a plurality of electronic devices (for example, the smartwatch 3-101, an electronic device 3-200, and an electronic device 3-300) to play audio. In addition, the smartwatch 3-101 may be used as a control and management device of earphones 3-102 to control audio played with a sound by the earphone 3-102. In this way, a user may control, through the smartwatch 3-101, the earphones 3-102 to play audio on a specified device with a sound. According to the foregoing method, a conflict that a plurality of devices preempt the earphones 3-102 can be avoided, and user experience of listening to audio through the earphones 3-102 can be improved.

It should be noted that the smartwatch 3-101 may be the wearable device 1 shown in FIG. 1 to FIG. 4. The earphones 3-102 may be an audio apparatus that can be accommodated in the wearable device 1, for example, the earphones 3 shown in FIG. 1 to FIG. 4. The earphones 3-102 may include the first earphone 31 and the second earphone 32 shown in FIG. 4.

Here, an example in which the wearable device is the smartwatch 3-101 and the audio apparatus is the earphones 3-102 is used, and some audio playing control scenarios provided in embodiments of this application are described based on the foregoing device connection manner.

In embodiments of this application, audio played by a device may include but is not limited to music, radio, an audio book, and the like. In subsequent embodiments of this application, an example in which the played audio is music is specifically used for description.

**FIG. 49A to FIG. 49J** **show an example of a scenario in which the earphones 3-102 play audio on the smartwatch 3-101.**

As shown in FIG. 49A, a communication connection is established between the smartwatch 3-101 and the earphones 3-102. The communication connection may be, for example, a Bluetooth communication connection. A manner of establishing the communication connection between the smartwatch 3-101 and the earphones 3-102 is not limited in embodiments of this application. For the manner of establishing the communication connection between the smartwatch 3-101 and the earphones 3-102, refer to the descriptions in the foregoing embodiments. Details are not described herein again.

The smartwatch 3-101 may include a button 3-101C. The button 3-101C may be disposed on a side of a watch body of the smartwatch 3-101. A location of the button 3-101C on the smartwatch 3-101 is not limited in embodiments of this application.

As shown in FIG. 49B, the smartwatch 3-101 may display a user interface 3-610. In some embodiments, the user interface 3-610 may be displayed by the smartwatch 3-101 in response to an operation on the button 3-101C, for example, a press operation. The operation of triggering the smartwatch 3-101 to display the user interface 3-610 is not limited in embodiments of this application.

The user interface 3-610 may include a music control 3-611, a setting control, a health control, a call control, and the like. The music control 3-611 may be used to trigger the smartwatch 3-101 to open a user interface of a Music application. The setting control may be used to trigger the smartwatch 3-101 to open a user interface of a Settings application. The health control may be used to trigger the smartwatch 3-101 to open a user interface of a Health application. The call control may be used to trigger the smartwatch 3-101 to open a user interface of a Call application.

As shown in FIG. 49B, in response to an operation, for example, a tap operation, performed on the music control 3-611, the smartwatch 3-101 may display a user interface 3-620 shown in FIG. 49C.

As shown in FIG. 49C, the user interface 3-620 may include a playing control 3-621 and a local songs control 3-622. The playing control 3-621 may be used to view music that is being played on the smartwatch 3-101. The local songs control 3-622 may be used to view information about music stored in the smartwatch 3-101. In response to an operation, for example, a tap operation, performed on the local songs control 3-622, the smartwatch 3-101 may display a user interface 3-630 shown in FIG. 49D.

As shown in FIG. 49D, the user interface 3-630 may be used to display the information about the music stored in the smartwatch 3-101. For example, the user interface 3-630 may include a folk music option 3-631, a Music1 option 3-632, a Music2 option 3-633, and a Music3 option 3-634. The folk music option 3-631 may be used to view information about music in a group "Folk music" in classifications. The Music1 option 3-632, the Music2 option 3-633, and the Music3 option 3-634 may be respectively used to view information about music named Music 1, Music2, and Music3.

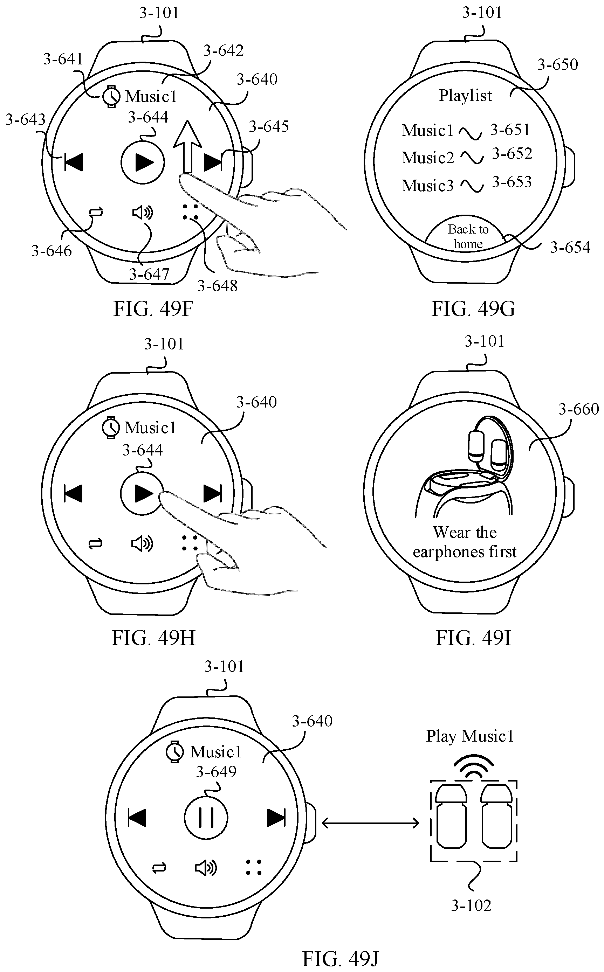

As shown in FIG. 49E, in response to an operation, for example, a tap operation, performed on the playing control 3-621, the smartwatch 3-101 may display a user interface 3-640 shown in FIG. 49F.

As shown in FIG. 49F, the user interface 3-640 may include a device type identifier 3-641, a music name 3-642, a previous track control 3-643, a play control 3-644, a next track control 3-645, a playing sequence control 3-646, a volume control 3-647, and a music setting control 3-648.

The device type identifier 3-641 may indicate a type of a device to which music to be played or being played on the user interface 3-640 belongs. The type of the device may include a mobile phone, a smartwatch, a tablet computer, and the like. For example, the device type identifier 3-641 is a watch icon shown in FIG. 49F, and may indicate that the device to which the music to be played or being played on the user interface 3-640 belongs is a smartwatch. The smartwatch is the smartwatch 3-101 in this application.

The music name 3-642 may indicate a name of the music to-be-played or being played on the user interface 3-640. For example, the music name is "Music1". It can be learned from the foregoing embodiments that the music named "Music1" is music on the smartwatch 3-101.

The previous track control 3-643 may be used to switch to a previous track of music.

The play control 3-644 may be used to trigger the smartwatch 3-101 to play music, for example, the music named "Music 1".

The next track control 3-645 may be used to switch to a next track of music.

The playing sequence control 3-646 may be used to adjust a sequence of playing music by the smartwatch 3-101. For example, the sequence of playing music may include single loop, shuffle, playlist loop, and the like.

The volume control 3-647 may be used to adjust music playing volume.

The music setting control 3-648 may be used to open a music playing setting interface.

In some embodiments, in response to a user operation of sliding upward on the user interface 3-640, the smartwatch 3-101 may display a user interface 3-650 shown in FIG. 49G.

As shown in FIG. 49G, a playlist in which music may be displayed is displayed on the user interface 3-650. The playlist may include one or more music options. The smartwatch 3-101 may play, in an arrangement sequence of the music options in the play list, music corresponding to the music options. For example, the playlist may include a Music1 option 3-651, a Music2 option 3-652, and a Music3 option 3-653.

The user interface 3-650 may further include a back to home control 3-654. The back to home control 3-654 may be used to trigger the smartwatch 3-101 to display a main interface of music playing. The main interface of music playing may be the user interface 3-640 shown in FIG. 49F.

As shown in FIG. 49H, in response to an operation, for example, a tap operation, performed on the play control 3-644, the smartwatch 3-101 may detect whether the earphones 3-102 are in a worn state. In a possible implementation, the earphones 3-102 may perform wearing detection periodically or aperiodically. The smartwatch 3-101 may receive a wearing detection result sent by the earphones 3-102, to determine whether the earphones 3-102 are in the worn state. Optionally, the smartwatch 3-101 may send a wearing detection instruction to the earphones 3-102, to indicate the earphones 3-102 to perform wearing detection. According to the wearing detection instruction, the earphones 3-102 may perform wearing detection, and send a wearing detection result to the smartwatch 3-101. An implementation method in which the earphones 3-102 perform wearing detection is not limited in embodiments of this application.

When it is detected that the earphones 3-102 are not in the worn state, the smartwatch 3-101 may display a user interface 3-660 shown in FIG. 49I. The user interface 3-660 may include prompt information. The prompt information may be used to prompt the user to wear the earphones 3-102. For example, the prompt information may include a text prompt "Wear the earphones first". Specific content of the prompt information on the user interface 3-660 is not limited in embodiments of this application.

When it is detected that the earphones 3-102 are in the worn state, the smartwatch 3-101 may send audio data of music playing to the earphones 3-102, to play music through the earphones 3-102. In this way, the user may listen to local music on the smartwatch 3-101 through the earphones 3-102.

As shown in FIG. 49J, when it is detected that the earphones 3-102 is in the worn state, the smartwatch 3-101 may change the play control 3-644 on the user interface 3-640 shown in FIG. 49H to a pause control 3-649 on a user interface 3-640 shown in FIG. 49J. The pause control 3-649 may be used to trigger the smartwatch 3-101 to pause playing of the music. The smartwatch 3-101 may send audio data of the music named "Music1" to the earphones 3-102. The earphones 3-102 may play Music1.

In some embodiments, when the smartwatch 3-101 establishes a communication connection to only a single earphone (for example, a left-ear earphone or a right-ear earphone) in the earphones 3-102, and the single earphone that establishes the communication connection to the smartwatch, that is, -101, is in the worn state, the smartwatch 3-101 may send, in response to an operation performed on the play control 3-644 shown in FIG. 49H, the audio data of music playing to the single earphone. In this way, when the smartwatch 3-101 establishes a communication connection to only a single earphone, music may still be played through the single earphone.

In some embodiments, a communication connection is established between the smartwatch 3-101 and each of two earphones (the left-ear earphone and the right-ear earphone) in the earphones 3-102. When the smartwatch 3-101 detects that one earphone in the earphones 3-102 is in the worn state and the other earphone is in a not-worn state, the smartwatch 3-101 may send, in response to the operation performed on the play control 3-644 shown in FIG. 49H, the audio data of music playing to the earphone in the worn state. The earphone in the worn state may play music from the smartwatch 3-101. When the other earphone changes from the not-worn state to the worn state, the smartwatch 3-101 may send the audio data of music playing to the other earphone, to play music through the two earphones in the earphones 3-102. It can be learned that when the user wears only one earphone in the earphones 3-102, the user may still listen to the local music on the smartwatch 3-101 through the worn earphone.

In some embodiments, in a case in which the earphones 3-102 is in the worn state and plays music from the smartwatch 3-101, when it is detected that the user takes off the earphones 3-102 (that is, the earphones 3-102 change from the worn state to the not-worn state), the earphones 3-102 may pause playing of the music. The earphones 3-102 may send a music playing pause message to the smartwatch 3-101. When receiving the music playing pause message, the smartwatch 3-101 may change the pause control 3-649 shown in FIG. 49J to the play control 3-644 shown in FIG. 49H. Further, when it is detected that the user wears the earphones 3-102 (that is, the earphones 3-102 change from the not-worn state to the worn state), the earphones 3-102 may resume the music. The earphones 3-102 may send a music resuming message to the smartwatch 3-101. When receiving the music resuming message, the smartwatch 3-101 may change the play control 3-644 shown in FIG. 49H to the pause control 3-649 shown in FIG. 49J.

It can be learned from the scenario shown in FIG. 49A to FIG. 49J that, when the earphones 3-102 are placed outside a compartment in the smartwatch 3-101, and a communication connection is established between the earphones 3-102 and the smartwatch 3-101, the smartwatch 3-101 may play music on the smartwatch 3-101 through the earphones 3-102. When receiving a music playing operation, the smartwatch 3-101 may further detect the wearing status of the earphones 3-102, and when the earphones 3-102 are in the not-worn state, prompt the user to wear the earphones. This can improve user experience of playing music through the smartwatch 3-101 and the earphones 3-102.

**FIG. 50A to FIG. 50C** **show an example of a scenario in which the smartwatch 3-101 manages audio playing.**

As shown in FIG. 50A, the smartwatch 3-101 may display a user interface 3-710. For the user interface 3-710, refer to the user interface 3-640 shown in FIG. 49J. Details are not described herein again. It can be learned from the user interface 3-710 that the smartwatch 3-101 is playing local music "Music1". When the smartwatch 3-101 plays the music "Music1", a sound-making device may be the earphones 3-102 shown in FIG. 49J.

The user interface 3-710 may include a music setting control 3-711. For the music setting control 3-711, refer to the descriptions of the music setting control 3-648 shown in FIG. 49F. In response to an operation, for example, a tap operation, performed on the music setting control 3-711, the smartwatch 3-101 may display a user interface 3-720 shown in FIG. 50B. The user interface 3-720 may be a music playing setting interface.

As shown in FIG. 50B, the user interface 3-720 may include controls corresponding to one or more music setting items, for example, a noise cancellation control 3-721, a disable control 3-722, an awareness control 3-723, and a delete control 3-724.

The noise cancellation control 3-721 may be used to enable a noise cancellation mode of the earphone 3-102. The noise cancellation mode may reduce interference caused by an external ambient sound to audio listening performed by a user through the earphones 3-102. In response to an operation, for example, a tap operation, performed on the noise cancellation control 3-721, the smartwatch 3-101 may send, to the earphones 3-102, a message for enabling the noise cancellation mode. Then, the earphones 3-102 may enable the noise cancellation mode, to filter out the external ambient sound and cancel noise. An implementation method in which the earphones 3-102 filter out the external ambient sound in the noise cancellation mode and cancel the noise is not limited in embodiments of this application.

The awareness control 3-723 may be used to enable an awareness mode of the earphones 3-102. The foregoing awareness mode can help the user talk with another person when the user wears the earphones. In response to an operation, for example, a tap operation, performed on the awareness control 3-723, the smartwatch 3-101 may send, to the earphones 3-102, a message for enabling the awareness mode. Then, the earphones 3-102 may enable the awareness mode, to filter out a background sound in the external ambient sound, but retain a human voice. An implementation method in which the earphones 3-102 filter out the background sound in the external ambient sound in the awareness mode but retain the human voice is not limited in embodiments of this application.

The disable control 3-722 may be used to disable the awareness mode and the noise cancellation mode of the earphones 3-102. In response to an operation, for example, a tap operation, performed on the disable control 3-722, the smartwatch 3-101 may send, to the earphones 3-102, a message indicating to maintain the awareness mode and the noise cancellation mode in a disabled state. In this way, the earphones 3-102 may maintain the awareness mode and the noise cancellation mode in the disabled state.

It may be understood that, in a same time period, only one of the noise cancellation control 3-721, the disable control 3-722, and the awareness control 3-723 can be in a selected state in the same time period. A display style used when any one of the noise cancellation control 3-721, the disable control 3-722, and the awareness control 3-723 is in the selected state may be different from a display style used when any one of the noise cancellation control 3-721, the disable control 3-722, and the awareness control 3-723 is in an unselected state. For example, as shown in FIG. 50B, the noise cancellation control 3-721 is in the selected state. The noise cancellation control 3-721 may have a dark display style. The disable control 3-722 and the awareness control 3-723 are in the unselected state. The disable control 3-722 and the awareness control 3-723 may have light-color display styles. Display styles of the noise cancellation control 3-721, the disable control 3-722, and the awareness control 3-723 are not limited in embodiments of this application.

The delete control 3-724 may be used to delete music indicated by the user interface 3-710 shown in FIG. 50A, for example, the music named "Music 1". In response to an operation, for example, a tap operation, performed on the delete control 3-724, the smartwatch 3-101 may display a user interface 3-730 shown in FIG. 50C.

As shown in FIG. 50C, the user interface 3-730 may include prompt information, to query the user whether to delete music (for example, the music "Music1"). The user interface 3-730 may further include a cancel control 3-731 and a confirm control 3-732. The cancel control 3-731 may be used to cancel deleting the music. The confirm control 3-732 may be used to trigger the smartwatch 3-101 to delete the music (for example, the music "Music1") indicated by the user interface 3-710. It may be understood that the music "Music 1" indicated by the user interface 3-710 shown in FIG. 50A is music locally stored in the smartwatch 3-101. Therefore, in response to an operation performed on the confirm control 3-732, the smartwatch 3-101 may locally delete the music "Music 1".

In some embodiments, if the music indicated by the user interface 3-710 is not music locally stored in the smartwatch 3-101, but music from another device (for example, the electronic device 3-200 or the electronic device 3-300), the user interface 3-720 shown in FIG. 50B may not include the delete control 3-724, or the delete control 3-724 on the user interface 3-720 shown in FIG. 50B is in an unavailable state. Optionally, if the music indicated by the user interface 3-710 is music locally stored in another device (for example, the electronic device 3-200 or the electronic device 3-300), the user interface 3-720 shown in FIG. 50B may still include the delete control 3-724, and the delete control 3-724 is in an available state. In response to an operation performed on the delete control 3-724, the smartwatch 3-101 may send a music deletion message to the electronic device to which the music indicated by the user interface 3-720 belongs. When receiving the music deletion message, the electronic device may locally delete the music indicated by the user interface 3-720.

Not limited to the controls shown in FIG. 50B, the user interface 3-720 may further include controls corresponding to more or fewer music setting items.

It can be learned from the scenario shown in FIG. 50A to FIG. 50C that the user can conveniently control, through the smartwatch 3-101, audio played on the earphones 3-102.

**FIG. 51A to FIG. 51F** **show an example of a scenario in which audio playing is controlled through the smartwatch 3-101.**

As shown in FIG. 51A, the smartwatch 3-101 may display a user interface 3-810. The user interface 3-810 may be a home screen of the smartwatch 3-101. In response to an operation of sliding rightward on the user interface 3-810, the smartwatch 3-101 may display a user interface 3-820 shown in FIG. 51B. The user interface 3-820 may be a leftmost screen interface of the smartwatch 3-101.

As shown in FIG. 51B, the user interface 3-820 may include location information 3-821, weather information 3-822, and a music control 3-823. The user interface 3-820 may further include more or less content. This is not limited in embodiments of this application.

The location information 3-821 may indicate a location of the smartwatch 3-101.

The weather information 3-822 may indicate weather of the location of the smartwatch 3-101.

The music control 3-823 may be used to control music locally stored in the smartwatch 3-101. The music control 3-823 may include a device type identifier 3-823A, a music information display area 3-823B, and a play control 3-823C.

The device type identifier 3-823A may indicate a type of a device to which music that can be controlled by the music control 3-823 belongs. For example, the device type identifier 3-823A is a watch icon, and may indicate that the type of the device to which the music that can be controlled by the music control 3-823 belongs is a watch.

The music information display area 3-823B may be used to display information such as a name of the device to which the music that can be controlled by the music control 3-823 belongs and a name of the music. For example, text information "Watch is not playing" may be displayed in the music information display area 3-823B. This may indicate that the name of the device to which the music that can be controlled by the music control 3-823 belongs is "Watch" (namely, a name of the smartwatch 3-101), and there is no to-be-played music in the smartwatch 3-101. That the name of the smartwatch 3-101 is "Watch" is merely an example for description of this application. The name of the smartwatch 3-101 is not limited in embodiments of this application.

The play control 3-823C may be used to trigger the smartwatch 3-101 to play music in the device to which the music that can be controlled by the music control 3-823 belongs (namely, the music locally stored in the smartwatch 3-101).

In some embodiments, the smartwatch 3-101 does not store music. In response to an operation, for example, a tap operation, performed on the music control 3-823 shown in FIG. 51B, the smartwatch 3-101 may display a user interface 3-830 shown in FIG. 51C.

As shown in FIG. 51C, the user interface 3-830 may include prompt information 3-831 and prompt information 3-832. Content of the prompt information 3-831 may be "No music". Content of the prompt information 3-832 may be "Add via Health". The prompt information 3-831 and the prompt information 3-832 may be used to give the user a prompt that the smartwatch 3-101 does not store music, and the user may add music to the smartwatch 3-101 through the Health app.

In some embodiments, the smartwatch 3-101 stores music. In response to the operation of sliding rightward shown in FIG. 51A, the smartwatch 3-101 may display a user interface 3-820 shown in FIG. 51D. For the user interface 3-820, refer to the descriptions in the foregoing embodiments.

As shown in FIG. 51D, the user interface 3-820 may include the music control 3-823. The music control 3-823 may include the music information display area 3-823B and the play control 3-823C.

In FIG. 51D, text information "Watch Music1" may be displayed in the music information display area 3-823B. This may indicate that the name of the device to which the music that can be controlled by the music control 3-823 belongs is "Watch" (namely, the smartwatch 3-101), and to-be-played music in the smartwatch 3-101 is the music "Music1". In response to an operation, for example, a tap operation, performed on the play control 3-823C shown in FIG. 51D, the smartwatch 3-101 may detect whether the earphones 3-102 are in a worn state. When it is detected that the earphones 3-102 are in the worn state, the smartwatch 3-101 may play the to-be-played music (namely, the music "Music1") displayed in the music information display area 3-823B.

As shown in FIG. 51E, the smartwatch 3-101 may send audio data of the music "Music1" to the earphones 3-102, and play the music "Music1" through the earphones 3-102. In addition, the smartwatch 3-101 may display a user interface 3-820 shown in FIG. 51E. It can be learned that when the music "Music1" is played, the smartwatch 3-101 may change the play control 3-823C shown in FIG. 51D to a pause control 3-823D shown in FIG. 51E.

As shown in FIG. 51E, in response to an operation, for example, a tap operation, performed on an area other than the pause control 3-823D in the music control 3-823, the smartwatch 3-101 may display a user interface 3-840 shown in FIG. 51F. For the user interface 3-840, refer to the user interface 3-640 shown in FIG. 49J. Details are not described herein again.

It can be learned from the scenario shown in FIG. 51A to FIG. 51F that the user may quickly find an entry for controlling audio playing on the leftmost screen interface on the smartwatch 3-101. According to the foregoing embodiments, convenience of controlling audio playing by the user can be improved.

In some embodiments, if it is detected, when an audio playing operation is received, that the smartwatch 3-101 is not connected to the earphones 3-102, the smartwatch 3-101 may prompt the user to connect the smartwatch 3-101 to the earphones 3-102 and provide a quick connection entry for triggering the smartwatch 3-101 to establish a communication connection to the earphones 3-102.

**FIG. 52A to FIG. 52C** **show an example of a scenario in which the smartwatch 3-101 establishes a communication connection to the earphones 3-102.**

As shown in FIG. 52A, the smartwatch 3-101 may display a user interface 3-910 shown in FIG. 52A. For the user interface 3-910, refer to the user interface 3-640 shown in FIG. 49F. Details are not described herein again. The user interface 3-910 may include a play control 3-911. In response to an operation performed on the play control 3-911, the smartwatch 3-101 may detect whether a communication connection is established between the smartwatch 3-101 and the earphones 3-102.

When it is detected that the communication connection is established between the smartwatch 3-101 and the earphones 3-102, the smartwatch 3-101 may play music according to embodiments shown in FIG. 49H to FIG. 49J.

When it is detected that no communication connection is established between the smartwatch 3-101 and the earphones 3-102, the smartwatch 3-101 may display a user interface 3-920 shown in FIG. 52B. The user interface 3-920 may include a connection prompt 3-921. Content of the connection prompt 3-921 may be "The earphones are disconnected from the watch, and the earphones are temporarily unavailable. Place the earphones in the watch body and reconnect". Content of the connection prompt 3-921 is not limited in embodiments of this application. It can be learned that the connection prompt 3-921 may be used to give a user a prompt that the smartwatch 3-101 is not connected to the earphones 3-102, and prompt the user with an operation manner of connecting the smartwatch 3-101 to the earphones 3-102.

The user interface 3-920 may further include a reconnection control 3-922. The reconnection control 3-922 is used as a quick connection entry for triggering the smartwatch 3-101 to establish the communication connection to the earphones 3-102, and may be used to trigger the smartwatch 3-101 to establish the communication connection to the earphones 3-102.

In response to an operation performed on the reconnection control 3-922, the smartwatch 3-101 may search for the earphones 3-102, and establish the communication connection to the earphones 3-102. For a manner of establishing the communication connection between the smartwatch 3-101 and the earphones 3-102, refer to the descriptions in the foregoing embodiments. Details are not described herein again. When the communication connection between the smartwatch 3-101 and the earphones 3-102 is successfully established, the smartwatch 3-101 may display a user interface 3-930 shown in FIG. 52C, to give the user a prompt that the smartwatch 3-101 and the earphones 3-102 are successfully connected.

After the smartwatch 3-101 and the earphones 3-102 are successfully connected, the smartwatch 3-101 may play music according to embodiments shown in FIG. 49H to FIG. 49J.

The foregoing audio playing operation is not limited in embodiments of this application. In addition to the operation performed on the play control 3-911 shown in FIG. 52A, the audio playing operation may further include the operation performed on the play control 3-823C on the user interface 3-820 (namely, the leftmost screen interface) shown in FIG. 51D.

It can be learned from the scenario shown in FIG. 52A to FIG. 52C that, when the smartwatch 3-101 plays locally stored music through the earphones 3-102, a communication connection needs to be established between the smartwatch 3-101 and the earphones 3-102. If the smartwatch 3-101 is not connected to the earphones 3-102 when receiving the audio playing operation, the smartwatch 3-101 may provide a quick connection entry for establishing a communication connection, so that the user can quickly connect the smartwatch 3-101 to the earphones 3-102. In this way, the user does not need to spend time and energy in another setting interface to search for a connection control for connecting the smartwatch 3-101 and the earphones 3-102. In this way, user experience can be improved.

**FIG. 53A to FIG. 53J** **show an example of a scenario in which the earphones 3-102 play audio on the electronic device 3-200.**

As shown in FIG. 53A, the smartwatch 3-101 is paired with the electronic device 3-200, and a communication connection is established between the smartwatch 3-101 and the electronic device 3-200. A communication connection is established between the smartwatch 3-101 and the earphones 3-102. A communication connection is also established between the electronic device 3-200 and the earphones 3-102. The communication connections between the smartwatch 3-101, the earphones 3-102, and the electronic device 3-200 may be, for example, Bluetooth communication connections. A manner of establishing the communication connections between the smartwatch 3-101, the earphones 3-102, and the electronic device 3-200 is not limited in embodiments of this application. For a manner of establishing a communication connection between every two of the smartwatch 3-101, the earphones 3-102, and the electronic device 3-200, refer to the descriptions in the foregoing embodiments. Details are not described herein again.

As shown in FIG. 53B, the smartwatch 3-101 may display a user interface 3-1010. For the user interface 3-1010, refer to the user interface 3-640 shown in FIG. 49J. Details are not described herein again. It can be learned from the user interface 3-1010 that the smartwatch 3-101 is playing local music "Music1" of the smartwatch 3-101. The music "Music 1" may be played with a sound by the earphones 3-102.

The user interface 3-1010 may include a music setting control 3-1011. In response to an operation performed on the music setting control 3-1011, the smartwatch 3-101 may display a user interface 3-1020 shown in FIG. 53C.

For the user interface 3-1020, refer to the user interface 3-720 shown in FIG. 50B. Details are not described herein again.

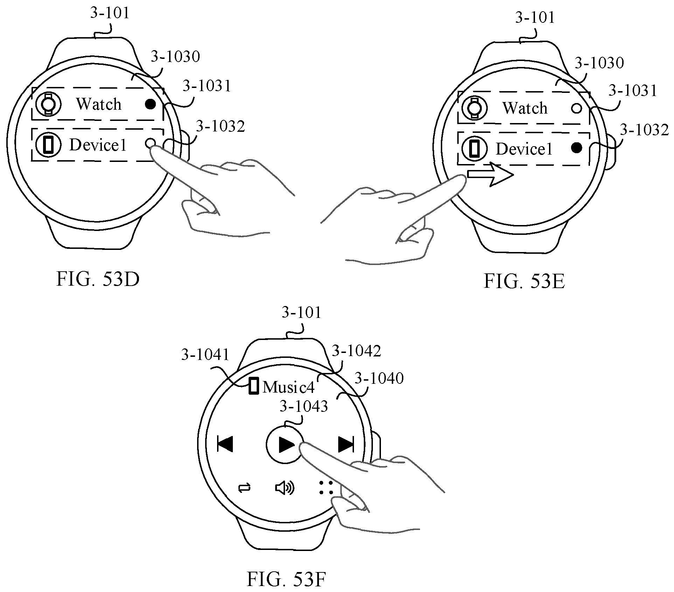

As shown in FIG. 53C, in response to an operation of sliding upward performed on the user interface 3-1020, the smartwatch 3-101 may display a user interface 3-1030 shown in FIG. 53D.

As shown in FIG. 53D, one or more device options may be displayed on the user interface 3-1030. Devices indicated by the one or more device options may include a device that has established a communication connection to the earphones 3-102. The device options on the user interface 3-1030 may be used to perform device switching, to control music playing of different devices through the smartwatch 3-101.

For example, the user interface 3-1030 may include a device option 3-1030 and a device option 3-1032. The device option 3-1031 may indicate a smartwatch named "Watch", namely, the smartwatch 3-101. The device option 3-1032 may indicate a mobile phone named "Device1", namely, the electronic device 3-200. In embodiments of this application, an example in which the electronic device 3-200 is a mobile phone named "Device1" is used for description. Names of the smartwatch 3-101 and the electronic device 3-200 are not limited in embodiments of this application.

That a device option on the user interface 3-1030 is in a selected state may indicate that the smartwatch 3-101 provides a related operation control for controlling a device corresponding to the device option to play music, for example, a control for controlling music playing, a control for controlling music pause, a control for switching to a previous or next track of music, or a control for adjusting volume.

It can be learned from FIG. 53B that the user interface 3-1010 displayed by the smartwatch 3-101 includes an operation control for controlling the smartwatch 3-101 to play local music. Correspondingly, in FIG. 53D, the device option 3-1031 is in the selected state. In this way, after returning to the user interface 3-1010 on the smartwatch 3-101, the user may control, through the operation control on the user interface 3-1010, local music playing of the smartwatch 3-101.

As shown in FIG. 53D, in response to an operation performed on the device option 3-1032, the smartwatch 3-101 may display a user interface 3-1030 shown in FIG. 53E. The smartwatch 3-101 changes a device option in the selected state on the user interface 3-1030 from the device option 3-1031 to the device option 3-1032. In FIG. 53E, the device option 3-1032 is in the selected state.

As shown in FIG. 53E, when the device option 3-1032 is in the selected state, in response to an operation of sliding rightward performed on the user interface 3-1030, the smartwatch 3-101 may display a user interface 3-1040 shown in FIG. 53F. The user interface 3-1040 may include an operation control for controlling the electronic device 3-200 to play music.

As shown in FIG. 53F, the user interface 3-1040 may include a device type identifier 3-1041, a music name 3-1042, and a play control 3-1043.

The device type identifier 3-1041 may indicate a type of a device to which music to be played or being played on the user interface 3-1040 belongs. For example, the device type identifier 3-1041 is a mobile phone icon shown in FIG. 53F, and may indicate that the device to which the music to be played or being played on the user interface 3-1040 belongs is a mobile phone. The mobile phone is the electronic device 3-200 in this application.

The music name 3-1042 may indicate a name of the music to-be-played or being played on the user interface 3-1040. For example, the music name is "Music4". The music named "Music4" may be music from the electronic device 3-200.

The play control 3-1040 may be used to control the electronic device 3-200 to play music, for example, the music named "Music4".

For other controls on the user interface 3-1040, refer to the descriptions of the user interface 3-640 shown in FIG. 49F in the foregoing embodiments. Details are not described herein again.

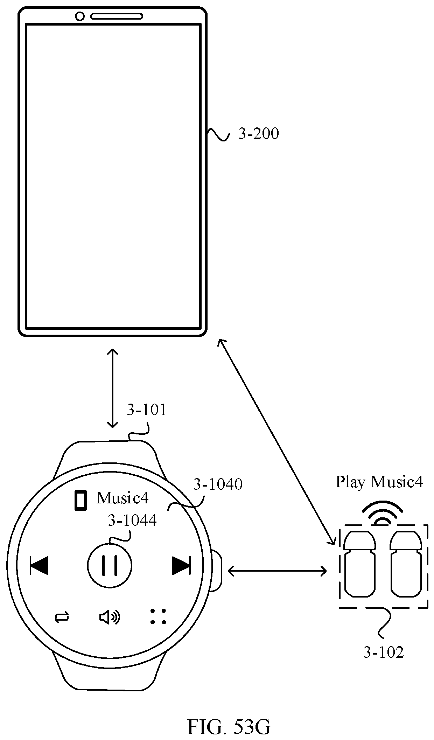

As shown in FIG. 53G, in response to an operation performed on the play control 3-1043 shown in FIG. 53F (the operation may be a first operation), the smartwatch 3-101 may send, to the electronic device 3-200, a message for playing the music "Music4". When receiving the message for playing the music "Music4", the electronic device 3-200 may send audio data of the music "Music4" to the earphones 3-102. In this way, the earphones 3-102 may play the music "Music4" with a sound.

In addition, if the electronic device 3-200 starts to play the music "Music4", the electronic device 3-200 may send, to the smartwatch 3-101, a message indicating that the music "Music4" is being played. Then, the smartwatch 3-101 may change the play control 3-1043 shown in FIG. 53F to a pause control 3-1044 shown in FIG. 53G. The pause control 3-1044 may be used to control the electronic device 3-200 to pause playing of the music.

The audio on the electronic device 3-200 may include first audio. For example, the first audio may include the music "Music4". Audio data sent by the electronic device 3-200 to the earphones 3-102 may include first audio data. For example, the first audio data may include the audio data of the music "Music4". The first audio data may be an audio stream of the first audio, and may be used by a device that receives the first audio data to play the first audio.

In a possible implementation, in a scenario in which the smartwatch 3-101 controls the electronic device 3-200 to play music on the electronic device 3-200 through the earphones 3-102 shown in FIG. 53G, control information of music playing may be transmitted between the smartwatch 3-101 and the electronic device 3-200. The control information of music playing may include: information about pausing playing, information about resuming, information about switching music, information about adjusting a playing sequence, information about enabling a noise cancellation mode or an awareness mode, information about disabling the noise cancellation mode and the awareness mode, a name of music being played, a singer name, and the like. Audio data of music playing may be transmitted between the electronic device 3-200 and the earphones 3-102. The audio data of music playing may be used by the earphones 3-102 to play corresponding music with a sound.

In another possible implementation, in a scenario in which the smartwatch 3-101 controls the electronic device 3-200 to play music on the electronic device 3-200 through the earphones 3-102 shown in FIG. 53G, control information and audio data of music playing may be transmitted between the smartwatch 3-101 and the electronic device 3-200. Then, the smartwatch 3-101 may send the audio data from the electronic device 3-200 to the earphones 3-102. The earphones 3-102 may play music on the electronic device 3-200 based on the audio data.

It may be understood that, when the operation performed on the play control 3-1043 shown in FIG. 53F is received, the smartwatch 3-101 may first detect whether there is a communication connection between the smartwatch 3-101 and the electronic device 3-200. If the communication connection between the smartwatch 3-101 and the electronic device 3-200 is disconnected, the smartwatch 3-101 may give the user a prompt that the smartwatch 3-101 is not connected to the electronic device 3-200, and the smartwatch 3-101 and the electronic device 3-200 need to be connected to control playing of music on the electronic device 3-200 through the smartwatch 3-101.

In addition, in the process in which the earphones 3-102 play the music from the electronic device 3-200, when it is detected that the user takes off the earphones 3-102 (that is, the earphones 3-102 change from a worn state to a not-worn state), the earphones 3-102 may pause playing of the music. When it is detected that the user wears the earphones 3-102 (that is, the earphones 3-102 change from the not-worn state to the worn state), the earphones 3-102 may resume the music.

In some embodiments, if the earphones 3-102 are not connected to the smartwatch 3-101, and are not connected to the electronic device 3-200, after the electronic device 3-200 detects a music playing operation or receives a music playing message from the smartwatch 3-101, the music on the electronic device 3-200 may be played with a sound through a speaker of the electronic device 3-200.

It can be learned from the scenario shown in FIG. 53B to FIG. 53G that the user may control, through the smartwatch 3-101, different devices (for example, the smartwatch 3-101 and the electronic device 3-200) to play music. The user may control the earphones 3-102 to play music on the different devices with a sound. When the user controls, through the smartwatch 3-101, the music locally stored in the smartwatch 3-101 to be played, the earphones 3-102 may play, with a sound, the music locally stored in the smartwatch 3-101. When the earphones 3-102 play, with a sound, the music locally stored in the smartwatch 3-101, the electronic device 3-200 may play the music with a sound through the speaker of the electronic device 3-200 after receiving the music playing operation. When the user switches, through the smartwatch 3-101, an object for controlling music playing from the smartwatch 3-101 to the electronic device 3-200, the earphones 3-102 may play the music on the electronic device 3-200 with a sound. In this way, when the earphones 3-102 are connected to both the smartwatch 3-101 and the electronic device 3-200, the smartwatch 3-101 may be used as a control and management device of the earphones 3-102 to control music played with a sound by the earphones 3-102. This can avoid a conflict of preempting the earphones 3-102 when both the smartwatch 3-101 and the electronic device 3-200 need to play music. The user may control, through the smartwatch 3-101, the earphones 3-102 to play the music on the smartwatch 3-101 or the music on the electronic device 3-200.

In some embodiments, the smartwatch 3-101 may further provide, on a leftmost screen interface, an operation entry for controlling different devices to play music.

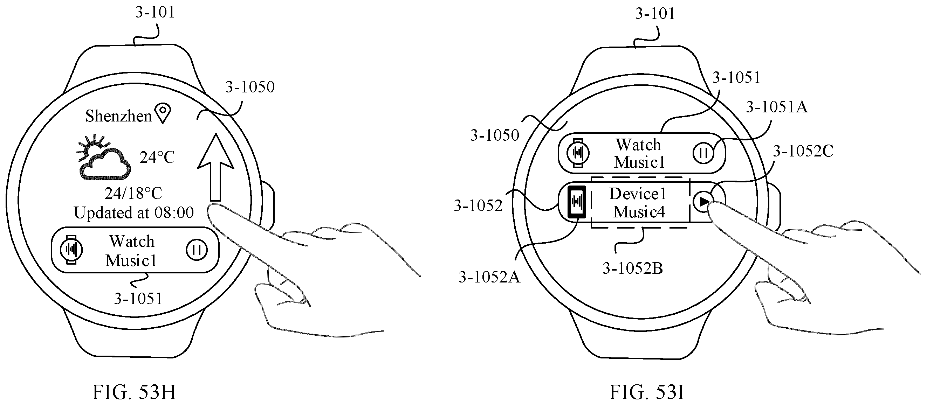

As shown in FIG. 53H, the smartwatch 3-101 may display a user interface 3-1050. For the user interface 3-1050, refer to the user interface 3-820 shown in FIG. 51E. Details are not described herein again. In response to an operation of sliding upward on the user interface 3-1050, the smartwatch 3-101 may display a user interface 3-1050 shown in FIG. 53I.

As shown in FIG. 53I, the user interface 3-1050 may include a music control 3-1051 and a music control 3-1052.

The music control 3-823 may be used to control the music locally stored in the smartwatch 3-101. For the music control 3-1051, refer to the music control 3-823 shown in FIG. 51E. The music control 3-1051 includes a pause control 3-1051A. The pause control 3-1051A may be used to control playing of the music to be paused. It can be learned from the music control 3-1051 that the smartwatch 3-101 is playing music (for example, the music "Music1"). The music "Music1" on the smartwatch 3-101 may be played with a sound by the earphones 3-102.

The music control 3-1052 may be used to control the music on the electronic device 3-200. The music control 3-1052 may include a device type identifier 3-1052A, a music information display area 3-1052B, and a play control 3-1052C.

The device type identifier 3-1052A may indicate a type of a device to which music that can be controlled by the music control 3-1052 belongs. For example, the device type identifier 3-1052A is a mobile phone icon, and may indicate that the type of the device to which the music that can be controlled by the music control 3-1052 belongs is a mobile phone.

The music information display area 3-1052B may be used to display information such as a name of the device to which the music that can be controlled by the music control 3-1052 belongs and a name of the music. For example, text information "Device1 Music4" may be displayed in the music information display area 3-1052B. This may indicate that the name of the device to which the music that can be controlled by the music control 3-1052 belongs is "Device 1" (namely, a name of the electronic device 3-200), and there is to-be-played music "Music4" on the electronic device 3-200.

The play control 3-1052C may be used to trigger the smartwatch 3-101 to play music in the device to which the music that can be controlled by the music control 3-1052 belongs (namely, the music on the electronic device 3-200). In response to an operation performed on the play control 3-1052C shown in FIG. 53I, the smartwatch 3-101 may pause playing of the local music (for example, the music "Music1") of the smartwatch 3-101. In addition, the smartwatch 3-101 may control the electronic device 3-200 to play music (for example, the music "Music4").

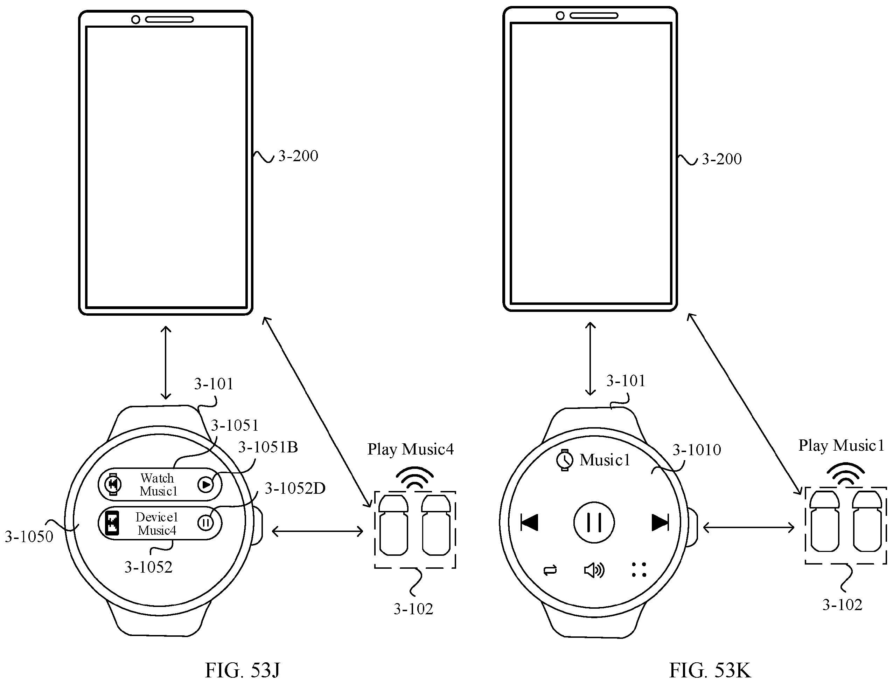

As shown in FIG. 53J, in response to the operation performed on the play control 3-1052C shown in FIG. 53I, the smartwatch 3-101 may display a user interface 3-1050 shown in FIG. 53J. The smartwatch 3-101 may change the pause control 3-1051A in the music control 3-1051 shown in FIG. 53I to a play control 3-1051B shown in FIG. 53J, and change the play control 3-1052C in the music control 3-1052 shown in FIG. 53I to a pause control 3-1052D shown in FIG. 53J. It can be learned from the music control 3-1051 and the music control 3-1052 shown in FIG. 53J that playing of the local music on the smartwatch 3-101 is paused. The music on the electronic device 3-200 is being played. The earphones 3-102 may switch from playing the music (for example, the music "Music 1") on the smartwatch 3-101 with a sound to playing the music (for example, the music "Music4") on the electronic device 3-200 with a sound.

For an implementation method in which the smartwatch 3-101 controls the electronic device 3-200 to play music and the earphones 3-102 to play the music on the electronic device 3-200, refer to the descriptions in the foregoing embodiments. Details are not described herein again.

It can be learned that the user may quickly control playing of the music on the smartwatch 3-101 and playing of the music on the electronic device 3-200 through the music control 3-1051 and the music control 3-1052 on the user interface 3-1050 (namely, the leftmost screen interface) shown in FIG. 53I. In addition, when the earphones 3-102 are connected to the smartwatch 3-101, and the earphones 3-102 are connected to the electronic device 3-200, the user may control, through the music control 3-1051 and the music control 3-1052, the earphones 3-102 to play the music on the smartwatch 3-101 or the music on the electronic device 3-200.

Not limited to the music control 3-1051 and the music control 3-1052 shown in FIG. 53I, the user interface 3-1050 may further include more or fewer music controls, to control music on a device connected to the earphones 3-102.

It can be learned from the scenario shown in FIG. 53A to FIG. 53J that the smartwatch 3-101 may control the electronic device 3-200 connected to the smartwatch 3-101 to play music. In addition, the user may switch, through the smartwatch 3-101, music played on the earphones between the music on the smartwatch 3-101 and the music on the electronic device 3-200. This can avoid a conflict that a plurality of devices preempt the earphones 3-102, and improve user experience of listening to audio through the earphones 3-102.

**FIG. 53K to FIG. 53M** **show an example of a scenario in which both the smartwatch 3-101 and the electronic device 3-200 play audio.**

As shown in FIG. 53K, the smartwatch 3-101 is paired with the electronic device 3-200, and a communication connection is established between the smartwatch 3-101 and the electronic device 3-200. A communication connection is established between the earphones 3-102 and the smartwatch 3-101. In addition, a communication connection is also established between the earphones 3-102 and the electronic device 3-200.

The smartwatch 3-101 may display the user interface 3-1010. For the user interface 3-1010, refer to the descriptions of the embodiment shown in FIG. 53B. It can be learned that the smartwatch 3-101 is playing locally stored music (for example, music "Music1") with a sound through the earphones 3-102.

In some embodiments, a user may perform an operation on the electronic device 3-200, to control the electronic device 3-200 to play music.

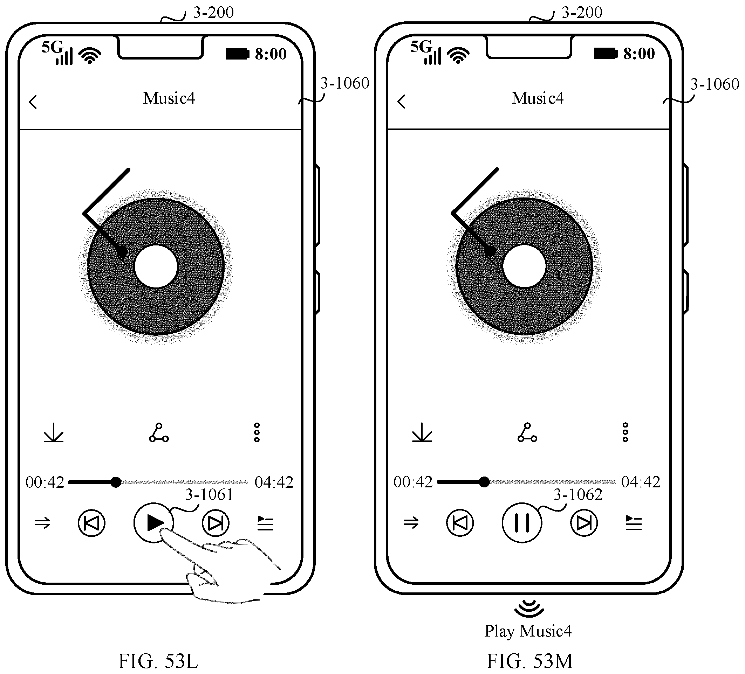

As shown in FIG. 53L, the electronic device 3-200 may display a user interface 3-1060. The user interface 3-1060 may be a user interface of a Music application on the electronic device 3-200. The user interface 3-1060 may include a play control 3-1061. The play control 3-1061 may be used to trigger the electronic device 3-200 to play to-be-played music (for example, music "Music4") corresponding to the user interface 3-1060. In response to an operation performed on the play control 3-1061, the electronic device 3-200 may start to play the music, and display a user interface 3-1062 shown in FIG. 53M.

As shown in FIG. 53M, the electronic device 3-200 may change the play control 3-1061 shown in FIG. 53L to a pause control 3-1062 shown in FIG. 53M. The pause control 3-1062 may be used to trigger the electronic device 3-200 to pause playing of the music. The electronic device 3-200 may play music "Music4" with a sound through a speaker of the electronic device 3-200.

In some embodiments, if the earphones 3-102 do not perform a service of the smartwatch 3-101 (for example, the earphones 3-102 do not play audio from the smartwatch 3-101), after the electronic device 3-200 receives the operation performed on the play control 3-1061 shown in FIG. 53L, the electronic device 3-200 may send audio data of music playing to the earphones 3-102, and the earphones 3-102 play music on the electronic device 3-200 with a sound.

It can be learned from the scenario shown in FIG. 53K to FIG. 53M that, when the earphones 3-102 are connected to both the smartwatch 3-101 and the electronic device 3-200, if the earphones 3-102 are playing the music on the smartwatch 3-101, the electronic device 3-200 may independently play the music with a sound in response to a music playing operation. In this way, a conflict that the electronic device and the smartwatch 3-101 preempt the earphones 3-102 is avoided.

In some embodiments, when the earphones 3-102 are connected to both the smartwatch 3-101 and the electronic device 3-200, the earphones 3-102 may alternatively play music on a corresponding device based on a music play instruction and audio data of music playing that are recently received.

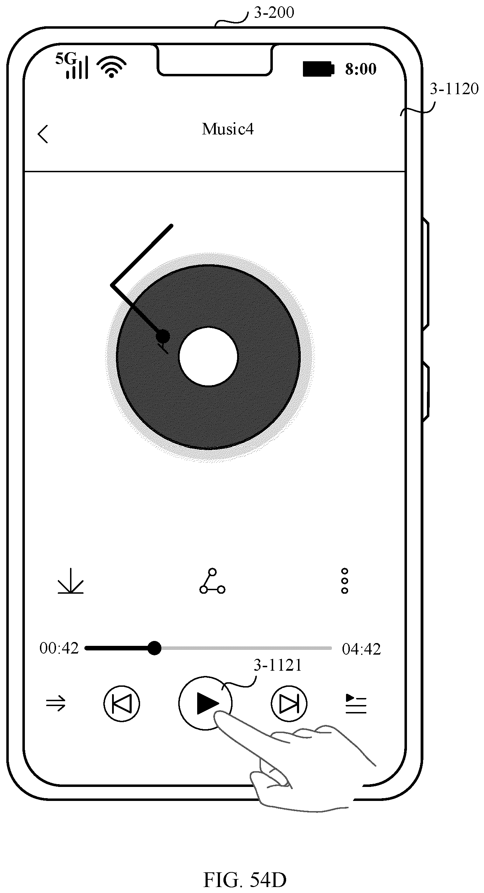

For example, in response to an operation performed on the smartwatch 3-101 to play the local music on the smartwatch 3-101, the smartwatch 3-101 may send, to the earphones 3-102, an instruction for playing the local music on the smartwatch 3-101 and audio data of the local music on the smartwatch 3-101. In this way, the earphones 3-102 may play the local music on the smartwatch 3-101. When the earphones 3-102 are playing the local music on the smartwatch 3-101, in response to an operation performed on the electronic device 3-200 to play the music on the electronic device 3-200 (for example, an operation performed on a play control 3-1121 shown in FIG. 54D), the electronic device 3-200 may send, to the earphones 3-102, an instruction for playing the music on the electronic device 3-200 and audio data of the music on the electronic device 3-200. In this way, the earphones 3-102 may play the music on the electronic device 3-200, and pause playing of the local music on the smartwatch 3-101.

It may be understood that the user may perform different operations on the smartwatch 3-101 and the electronic device 3-200 to implement different functions. The latest operation performed by the user may usually indicate what the user currently wants to do most. The earphones 3-102 may determine, based on a device to which to-be-played music indicated by a music play instruction recently received by the user belongs, whether the user currently wants to listen to the local music on the smartwatch 3-101 or listen to the music on the electronic device 3-200. In this way, the earphones 3-102 may play music on a device that the user currently wants to listen to most. According to the foregoing embodiments, user experience of listening to audio through the earphones 3-102 can be improved.

With reference to the scenario shown in FIG. 53A to FIG. 53J, it can be learned that when the user controls, through the smartwatch 3-101, the smartwatch 3-101 to play the local music, the earphones 3-102 may play the local music on the smartwatch 3-101 with a sound. When the user controls, through the smartwatch 3-101, the electronic device 3-200 to play the music, the earphones 3-102 may play the music on the electronic device 3-200 with a sound. In other words, the smartwatch 3-101 may be used as a control and management device of the earphones to control audio played with a sound by the earphones 3-102. This can avoid a conflict that a plurality of devices preempt the earphones 3-102, and improve user experience of listening to audio through the earphones 3-102.

**FIG. 54A to FIG. 54E** **show an example of another scenario in which the earphones 3-102 play audio on the electronic device 3-200.**

As shown in FIG. 54A, the smartwatch 3-101 is paired with the electronic device 3-200, and a communication connection is established between the smartwatch 3-101 and the electronic device 3-200. A communication connection is established between the electronic device 3-200 and the earphones 3-102. However, a communication connection between the smartwatch 3-101 and the earphones 3-102 is disconnected. The communication connection between the smartwatch 3-101 and the electronic device 3-200 and the communication connection between the electronic device 3-200 and the earphones 3-102 may be, for example, Bluetooth communication connections. A communication connection manner is not limited in embodiments of this application. For a manner in which the smartwatch 3-101 establishes the communication connection to the electronic device 3-200 and a manner in which the electronic device 3-200 establishes the communication connection to the earphones 3-102, refer to the descriptions in the foregoing embodiments. Details are not described herein again.

As shown in FIG. 54B, the smartwatch 3-101 may display a user interface 3-1110. For the user interface 3-1110, refer to the user interface 3-1050 shown in FIG. 53J. The user interface 3-1110 may include a music control 3-1111 and a music control 3-1112. The music control 3-1111 may be used to control music locally stored in the smartwatch 3-101. The music control 3-1112 may be used to control music on the electronic device 3-200. The music control 3-1112 may include a play control 3-1112A. In response to an operation performed on the play control 3-1112A, the smartwatch 3-101 may send a message for playing the music (for example, music "Music4") to the electronic device 3-200. When receiving the music playing message, the electronic device 3-200 may send audio data of the to-be-played music (for example, the music "Music4") to the earphones. In this way, the earphones 3-102 may play the music from the electronic device 3-200 with a sound.

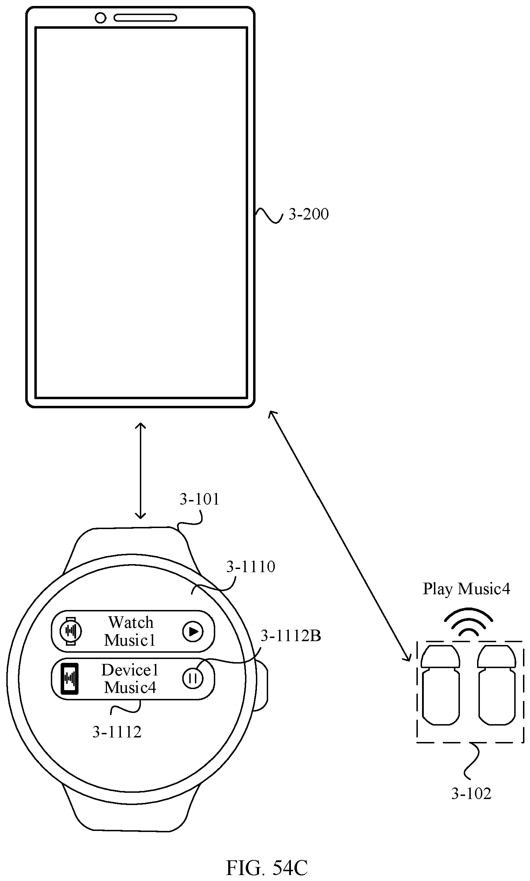

As shown in FIG. 54C, when the electronic device 3-200 plays the music through the earphones 3-102, the smartwatch 3-101 may display a user interface 3-1110. The smartwatch 3-101 may change the play control 3-1112A shown in FIG. 54B to a pause control 3-1112B shown in FIG. 54C. The pause control 3-1112B may be used to control the electronic device 3-200 to pause playing of the music. Music playing control information may be transmitted between the smartwatch 3-101 and the electronic device 3-200. Audio data of music playing may be transmitted between the electronic device 3-200 and the earphones 3-102.

In some embodiments, when the electronic device 3-200 establishes the communication connection to the earphones 3-102, the electronic device 3-200 may control, based on a received operation of controlling music playing, music played with a sound by the earphones 3-102.

As shown in FIG. 54D, the electronic device 3-200 may display a user interface 3-1120. The user interface 3-1120 may be a user interface of a Music application on the electronic device 3-200. The user interface 3-1120 may include a play control 3-1121. In response to an operation performed on the play control 3-1121, the electronic device 3-200 may start to play to-be-played music (for example, the music "Music4") corresponding to the user interface 3-1120.

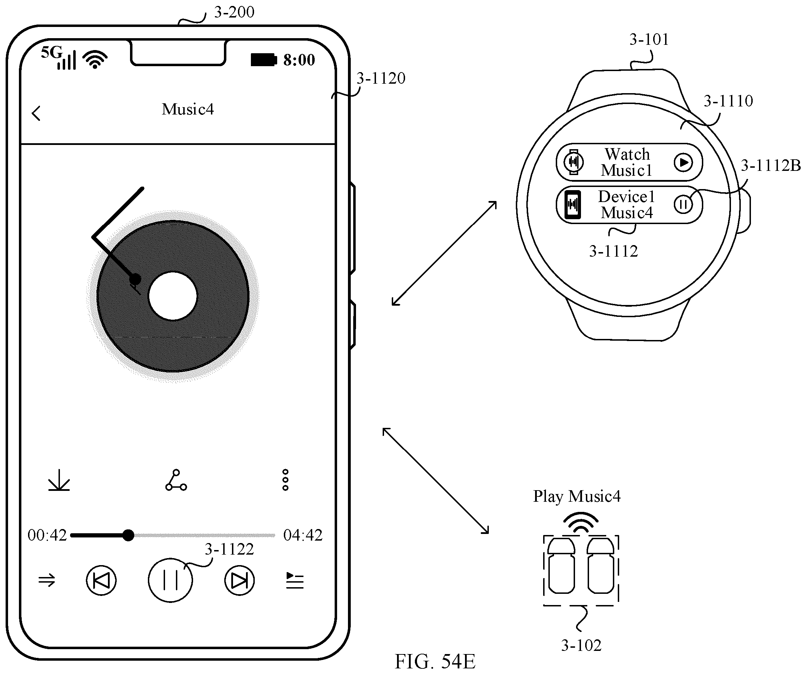

Specifically, as shown in FIG. 54E, the electronic device 3-200 may send the audio data of the music "Music4" to the earphones 3-102. The earphones 3-102 may play the music "Music4" with a sound based on the audio data of the music "Music4". The electronic device 3-200 may send, to the smartwatch 3-101, a message indicating that the music "Music4" is being played. When receiving the message indicating that the music "Music4" is being played, the smartwatch 3-101 may display the user interface 3-1110 shown in FIG. 54E. In FIG. 54E, the user interface 3-1110 may include the music control 3-1112. The music control 3-1112 may include a pause control 3-1113B. For the music control 3-1112, refer to the descriptions of the embodiment shown in FIG. 54C. In addition, when the music is being played, the electronic device 3-200 may display a user interface 3-1120 shown in FIG. 54E. The electronic device 3-200 may change the play control 3-1121 shown in FIG. 54D to a pause control 3-1122 shown in FIG. 54E. The pause control 3-1122 may be used to pause playing of the music.

It can be learned from the scenario shown in FIG. 54A to FIG. 54E that, when the earphones 3-102 establish the communication connection to the electronic device 3-200, but the communication connection between the earphones 3-102 and the smartwatch 3-101 is disconnected, the user can still listen to the music on the electronic device 3-200 through the earphones 3-102, and can control playing of the music on the electronic device 3-200 by performing an operation on the smartwatch 3-101 or the electronic device 3-200.

**FIG. 55A to FIG. 55E** **show an example of another scenario in which the earphones 3-102 play audio on the electronic device 3-200.**

As shown in FIG. 55A, the smartwatch 3-101 is paired with the electronic device 3-200, and a communication connection is established between the smartwatch 3-101 and the electronic device 3-200. A communication connection is established between the smartwatch 3-101 and the earphones 3-102. However, no communication connection is established between the earphones 3-102 and the electronic device 3-200. The communication connection between the smartwatch 3-101 and the electronic device 3-200 and the communication connection between the smartwatch 3-101 and the earphones 3-102 may be, for example, Bluetooth communication connections. A communication connection manner is not limited in embodiments of this application. For a manner in which the smartwatch 3-101 establishes the communication connection to the electronic device 3-200 and a manner in which the smartwatch 3-101 establishes the communication connection to the earphones 3-102, refer to the descriptions in the foregoing embodiments. Details are not described herein again.

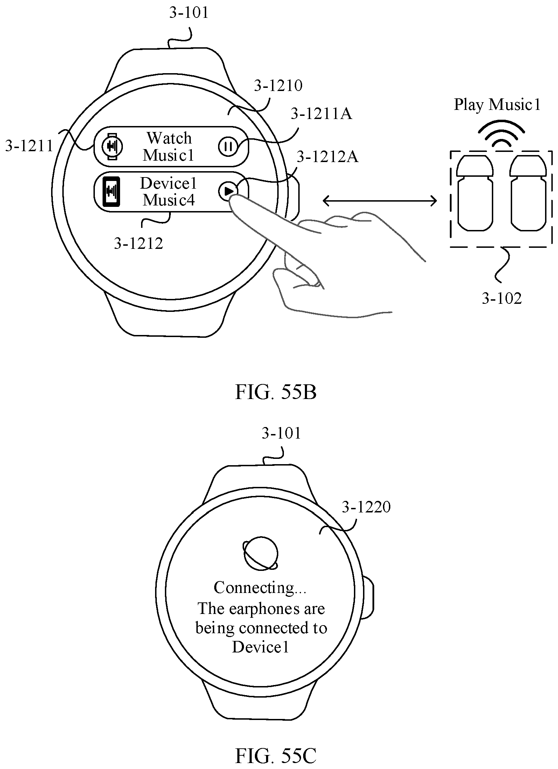

As shown in FIG. 55B, the smartwatch 3-101 may display a user interface 3-1210. For the user interface 3-1210, refer to the user interface 3-1051 shown in FIG. 53I. The user interface 3-1210 may include a music control 3-1211 and a music control 3-1212. The music control 3-1211 may be used to control music locally stored in the smartwatch 3-101. The music control 3-1211 may include a pause control 3-1211A. The music control 3-1212 may be used to control music on the electronic device 3-200. The music control 3-1212 may include a play control 3-1212A.

It can be learned from FIG. 55B that the smartwatch 3-101 is playing the locally stored music (for example, music "Music1"). The earphones 3-102 may play the local music "Music1" from the smartwatch 3-101 with a sound.

In response to an operation performed on the play control 3-1212A shown in FIG. 55B, the smartwatch 3-101 may detect whether the earphones 3-102 are connected to the electronic device 3-200. In a possible implementation, the smartwatch 3-101 may send a query message to the earphones 3-102, to query whether the earphones 3-102 are connected to the electronic device 3-200. The earphones 3-102 may send a status of a connection between the earphones 3-102 and the electronic device 3-200 to the smartwatch 3-101. An implementation in which the smartwatch 3-101 detects whether the earphones 3-102 are connected to the electronic device 3-200 is not limited in embodiments of this application.

If it is detected that a communication connection is established between the earphones 3-102 and the electronic device 3-200, the smartwatch 3-101 may control, according to embodiments shown in FIG. 53I and FIG. 53J, the electronic device 3-200 to play the music on the electronic device 3-200 through the earphones 3-102.

If it is detected that the earphones 3-102 are not connected to the electronic device 3-200, the smartwatch 3-101 may send, to the earphones 3-102, an instruction for establishing a communication connection to the electronic device 3-200, to indicate the earphones 3-102 to establish the communication connection to the electronic device 3-200. In addition, the smartwatch 3-101 may further send, to the electronic device 3-200, an instruction for establishing a communication connection to the earphones 3-102, to indicate the electronic device 3-200 to establish the communication connection to the earphones 3-102. Further, the earphones 3-102 and the electronic device 3-200 may establish the communication connection to each other according to the instruction for establishing the communication connection from the smartwatch 3-101.

In a process in which the smartwatch 3-101 indicates the earphones 3-102 to establish the communication connection to the electronic device 3-200, the smartwatch 3-101 may display a user interface 3-1220 shown in FIG. 55C. The user interface 3-1220 may include a connection prompt. The connection prompt may be used to give a user a prompt that the communication connection is being established between the earphones 3-102 and the electronic device 3-200. Content of the connection prompt may include "Connecting... The earphones are being connected to Device1". Specific content of the connection prompt on the user interface 3-1220 is not limited in embodiments of this application.

When the earphones 3-102 successfully establish the communication connection to the electronic device 3-200, the smartwatch 3-101 may pause playing of the local music (for example, the music "Music1") of the smartwatch 3-101. In addition, the smartwatch 3-101 may control, according to embodiments shown in FIG. 53I and FIG. 53J, the electronic device 3-200 to play the music on the electronic device 3-200 through the earphones 3-102.

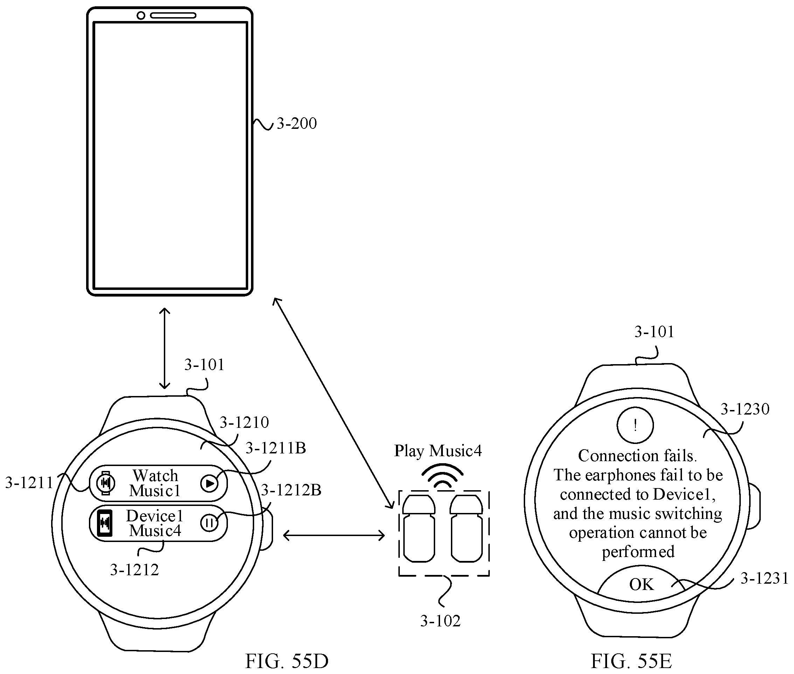

As shown in FIG. 55D, the earphones 3-102 successfully establish the communication connection to the electronic device 3-200. The electronic device 3-200 may send audio data of music playing to the earphones 3-102. The music played with a sound by the earphones 3-102 may be switched from the local music "Music1" of the smartwatch 3-101 shown in FIG. 55B to the music from the electronic device 3-200, for example, music "Music4". Music playing control information may be transmitted between the smartwatch 3-101 and the electronic device 3-200. The smartwatch 3-101 may display a user interface 3-1210 shown in FIG. 55D. After the earphones 3-102 play the music from the electronic device 3-200 with a sound, the smartwatch 3-101 may change the pause control 3-1211A in the music control 3-1211 shown in FIG. 55B to a play control 3-1211B shown in FIG. 55D. The play control 3-1211B may be used to trigger the smartwatch 3-101 to play the local music on the smartwatch 3-101 through the earphones 3-102. The smartwatch 3-101 may further change the play control 3-1212A in the music control 3-1212 shown in FIG. 55B to a pause control 3-1212B shown in FIG. 55D. The pause control 3-1212B may be used to trigger the smartwatch 3-101 to control the electronic device 3-200 to pause playing of the music. When the electronic device 3-200 pauses playing of the music, the earphones 3-102 may pause playing of the music from the electronic device 3-200 with a sound.

When the earphones 3-102 fail to establish the communication connection to the electronic device 3-200, the smartwatch 3-101 may display a user interface 3-1230 shown in FIG. 55E.

As shown in FIG. 55E, the user interface 3-1230 may include a connection failure prompt. The connection failure prompt may be used to give the user a prompt that the earphones 3-102 fail to establish the communication connection to the electronic device 3-200, and the music on the electronic device 3-200 cannot be played through the earphones 3-102. Content of the connection failure prompt may include "Connection fails. The earphones fail to be connected to Device 1, and the music switching operation cannot be performed". The content of the connection failure prompt on the user interface 3-1230 is not limited in embodiments of this application.

The user interface 1230 may further include a confirm control 3-1231. In response to an operation performed on the confirm control 3-1231, the smartwatch 3-101 may display the user interface 3-1210 shown in FIG. 55B again.

When the earphones 3-102 fail to be connected to the electronic device 3-200, the earphones 3-12 may resume the local music on the smartwatch 3-101, for example, the music "Music1".

In some embodiments, when the earphones 3-102 fail to establish the communication connection to the electronic device 3-200, the smartwatch 3-101 may further send, to the electronic device 3-200 based on an operation performed on the play control 3-1212A shown in FIG. 55B, a message for playing music (for example, the music "Music4"). The electronic device 3-200 may play the music in the electronic device 3-200 through a speaker of the electronic device 3-200 based on the music playing message. When the electronic device 3-200 independently play the music with a sound, the smartwatch 3-101 may change the play control 3-1212A shown in FIG. 55B to the pause control 3-1212B shown in FIG. 55D. In other words, when the earphones 3-102 fail to establish the communication connection to the electronic device 3-200, the smartwatch 3-101 may still control the electronic device 3-200 to play the music. In addition, the electronic device 3-200 may independently play the music with a sound.

It can be learned from the scenario shown in FIG. 55A to FIG. 55E that, when no communication connection is established between the earphones 3-102 and the electronic device 3-200, the smartwatch 3-101 may indicate, based on the operation of controlling the electronic device 3-200 to play the music, the electronic device 3-200 to establish the communication connection to the earphones 3-102. In this way, when controlling, through the smartwatch 3-101, the electronic device 3-200 to play the music, the user may not need to manually perform an operation of connecting the earphones 3-102 to the electronic device 3-200, and may listen to the music on the electronic device 3-200 through the earphones 3-102 after the earphones 3-102 are successfully connected to the electronic device 3-200.

**FIG. 56A to FIG. 56E** **show an example of a scenario in which audio playing is controlled through the smartwatch 3-101.**

As shown in FIG. 56A, the smartwatch 3-101 is paired with the electronic device 3-200, and a communication connection is established between the smartwatch 3-101 and the electronic device 3-200. A communication connection between the earphones 3-102 and the smartwatch 3-101 is disconnected. In addition, a communication connection between the earphones 3-102 and the electronic device 3-200 is disconnected.

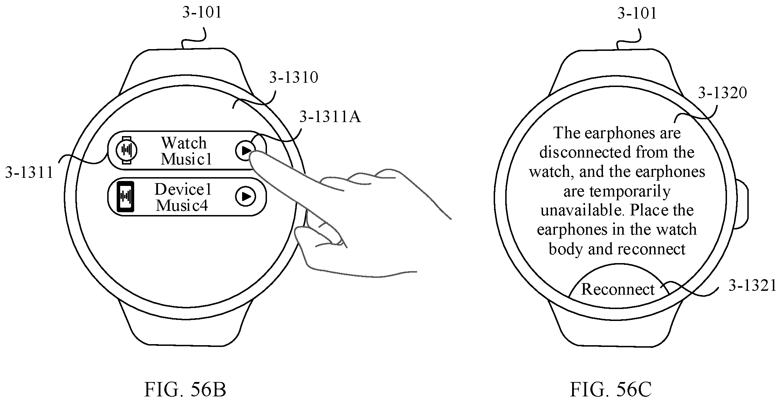

As shown in FIG. 56B, the smartwatch 3-101 may display a user interface 3-1310. For the user interface 3-1310, refer to the user interface 3-1050 shown in FIG. 53I. The user interface 3-1310 may include a music control 3-1311. The music control 3-1311 may include a play control 3-1311A. In response to an operation performed on the play control 3-1311A, the smartwatch 3-101 may detect whether the smartwatch 3-101 is connected to the earphones 3-102. When it is detected that the smartwatch 3-101 is not connected to the earphones 3-102, the smartwatch 3-101 may display a user interface 3-1320 shown in FIG. 56C. For the user interface 3-1320, refer to the user interface 3-920 shown in FIG. 52B.

As shown in FIG. 56C, the user interface 3-1320 may include a reconnection control 3-1321. The reconnection control 3-1321 is used as a quick connection entry for triggering the smartwatch 3-101 to establish the communication connection to the earphones 3-102, and may be used to trigger the smartwatch 3-101 to establish the communication connection to the earphones 3-102.

When the smartwatch 3-101 is not connected to the earphones 3-102, for an implementation in which the smartwatch 3-101 plays locally stored music, refer to the foregoing descriptions of the scenario shown in FIG. 52A to FIG. 52C. Details are not described herein again.

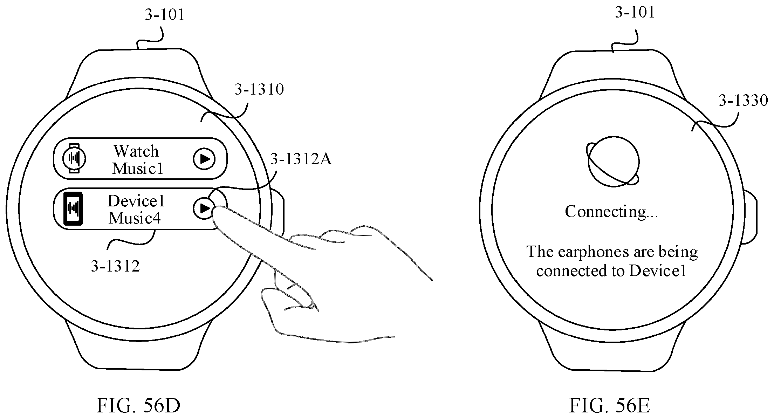

As shown in FIG. 56D, the user interface 3-1310 may further include a music control 3-1312. The music control 3-1312 may include a play control 3-1313A. In response to an operation performed on the play control 3-1312A, the smartwatch 3-101 may detect whether the earphones 3-102 are connected to the electronic device 3-200. In a possible implementation, because the smartwatch 3-101 is not connected to the earphones 3-102, the smartwatch 3-101 may send a query message to the electronic device 3-200, to query whether the electronic device 3-200 is connected to the earphones 3-102. The electronic device 3-200 may send a status of a connection between the electronic device 3-200 and the earphones 3-102 to the smartwatch 3-101.

If it is detected that a communication connection is established between the earphones 3-102 and the electronic device 3-200, the smartwatch 3-101 may control, according to embodiments shown in FIG. 53I and FIG. 53J, the electronic device 3-200 to play music on the electronic device 3-200 through the earphones 3-102.

If it is detected that the earphones 3-102 are not connected to the electronic device 3-200, the smartwatch 3-101 may send, to the electronic device 3-200, an instruction for establishing a communication connection to the earphones 3-102. When receiving the instruction for establishing the communication connection, the electronic device 3-200 may search for the earphones 3-102, and establish the communication connection to the earphones 3-102 after finding the earphones 3-102. In a process in which the electronic device 3-200 establishes the communication connection to the earphones 3-102, the smartwatch 3-101 may display a user interface 3-1330 shown in FIG. 56E. For the user interface 3-1330, refer to the user interface 3-1220 shown in FIG. 55C.

For a scenario in which the electronic device 3-200 successfully establishes or fails to establish the communication connection to the earphones 3-102, refer to the descriptions of the scenario shown in FIG. 55C to FIG. 55E. Details are not described herein again.

In some embodiments, an audio playing apparatus (for example, an earpiece or a speaker) is configured in the smartwatch 3-101. The smartwatch 3-101 may play audio on devices such as the smartwatch 3-101 and the electronic device 3-200.

For example, in response to an operation of playing the music on the smartwatch 3-101 (refer to the operation shown in FIG. 49H), the smartwatch 3-101 may detect whether the smartwatch 3-101 is wirelessly connected to the earphones 3-102. If the smartwatch 3-101 is wirelessly connected to the earphones 3-102, the smartwatch 3-101 may send audio data of music playing to the earphones 3-102, and play the music on the smartwatch 3-101 through the earphones 3-102. If there is no wireless connection between the smartwatch 3-101 and the earphones 3-102, the smartwatch 3-101 may play the music on the smartwatch 3-101 through the audio playing apparatus in the smartwatch 3-101. A case in which there is no wireless connection between the smartwatch 3-101 and the earphones 3-102 may include: The earphones 3-102 are in an in state, and the earphones 3-102 are in an out state but is not wirelessly connected to the smartwatch 3-101.

For another example, in response to an operation of playing the music on the electronic device 3-200 (refer to the operation shown in FIG. 53F), the smartwatch 3-101 may detect whether the electronic device 3-200 is connected to the earphones 3-102. If the electronic device 3-200 is connected to the earphones 3-102, the smartwatch 3-101 may indicate the electronic device 3-200 to play the music through the earphones 3-102. If the electronic device 3-200 is not connected to the earphones 3-102, the smartwatch 3-101 may indicate the electronic device 3-200 to establish the communication connection to the earphones 3-102. If the electronic device 3-200 successfully establishes the communication connection to the earphones 3-102, the electronic device 3-200 may play the music through the earphones 3-102. If the electronic device 3-200 fails to establish the communication connection to the earphones 3-102, the electronic device 3-200 may play the music through an audio playing apparatus in the electronic device 3-200, or the smartwatch 3-101 may indicate the electronic device 3-200 to play the music through the smartwatch 3-101. When the smartwatch 3-101 indicates the electronic device 3-200 to play the music through the smartwatch 3-101, the electronic device 3-200 may send audio data of music playing to the smartwatch 3-101. Then, the smartwatch 3-101 may play the music on the electronic device 3-200.

**FIG. 57A to FIG. 57M** **show an example of another scenario in which audio playing is controlled through the smartwatch 3-101.**

As shown in FIG. 57A, the smartwatch 3-101 is paired with the electronic device 3-200, and a communication connection is established between the smartwatch 3-101 and the electronic device 3-200. A communication connection is established between the earphones 3-102 and the smartwatch 3-101. A communication connection is established between the earphones 3-102 and the electronic device 3-300. A communication connection has been established between the earphones 3-102 and the electronic device 3-200, but the earphones 3-102 and the electronic device 3-200 currently are not connected. The communication connection between the electronic device 3-200 and the smartwatch 3-101, the communication connection between the smartwatch 3-101 and the earphones 3-102, and the communication connection between the earphones 3-102 and the electronic device 3-300 may be, for example, Bluetooth communication connections. A communication connection manner is not limited in embodiments of this application. For a manner in which the smartwatch 3-101 establishes communication connections to the electronic device 3-200 and the earphones 3-102, and a manner in which the earphones 3-102 establish the communication connection to the electronic device 3-300, refer to the descriptions in the foregoing embodiments. Details are not described herein again.

In a connection relationship shown in FIG. 57A, the earphones 3-102 may play music from the electronic device 3-300 with a sound. The electronic device 3-300 may send audio data of music playing to the earphones 3-102. Music playing control information may be forwarded between the electronic device 3-300 and the smartwatch 3-101 through the earphone 3-102, to implement transmission of the music playing control information. For example, the electronic device 3-300 may send, to the earphones 3-102, information such as a name of the electronic device 3-300, and a name and a singer name of music played with a sound by the earphones 3-102. Then, the earphones 3-102 may send, to the smartwatch 3-101, information such as the name of the electronic device 3-300, a name and a singer name of music that is being played by the electronic device 3-300. The smartwatch 3-101 may display information such as the name and the singer name of the music that is being played by the electronic device 3-300. In this way, a user can view, on the smartwatch 3-101, a playing status of the music on the electronic device 3-300. For another example, after receiving an operation of pausing playing of the music on the electronic device 3-300, the smartwatch 3-101 may send, to the earphones 3-102, a message for pausing playing of the music on the electronic device 3-300. The earphones 3-102 may pause playing of the music on the electronic device 3-300, and send the message for pausing playing of the music on the electronic device 3-300 to the electronic device 3-300. In this way, the user can control, through the smartwatch 3-101, the electronic device 3-300 to play the music.

As shown in FIG. 57B, the smartwatch 3-101 may display a user interface 3-1410. For the user interface 3-14 10, refer to the user interface 3-1050 shown in FIG. 53I. The user interface 3-1410 may include a music control 3-1411, a music control 3-1412, and a music control 1-1413.

The music control 3-1411 may be used to control music locally stored in the smartwatch 3-101. The music control 3-1412 may be used to control music on the electronic device 3-200. The music control 3-1413 may be used to control the music on the electronic device 3-300.

The music control 3-1413 may include a device type identifier 3-1413A, a music information display area 3-1413B, and a play control 3-1413C.

The device type identifier 3-1413A may indicate a type of a device to which music that can be controlled by the music control 3-1413 belongs. For example, the device type identifier 3-1413A is a mobile phone icon, and may indicate that the type of the device to which the music that can be controlled by the music control 3-141 belongs is a mobile phone.

The music information display area 3-1413B may be used to display information such as a name of the device to which the music that can be controlled by the music control 3-1413 belongs and a name of the music. For example, text information "Device2 Music5" may be displayed in the music information display area 3-1413B. This may indicate that the name of the device to which the music that can be controlled by the music control 3-1413 belongs is "Device2" (namely, a name of the electronic device 3-300), and there is to-be-played music "Music5" on the electronic device 3-300. In embodiments of this application, an example in which the electronic device 3-300 is a mobile phone named "Device2" is used for description. The name of the electronic device 3-300 is not limited in embodiments of this application.

The play control 3-1413C may be used to trigger the smartwatch 3-101 to play music in the device to which the music that can be controlled by the music control 3-1413 belongs (namely, the music on the electronic device 3-300). In response to an operation performed on the play control 3-1413C shown in FIG. 57B, the smartwatch 3-101 may control the electronic device 3-300 to play music (for example, music "Music5").

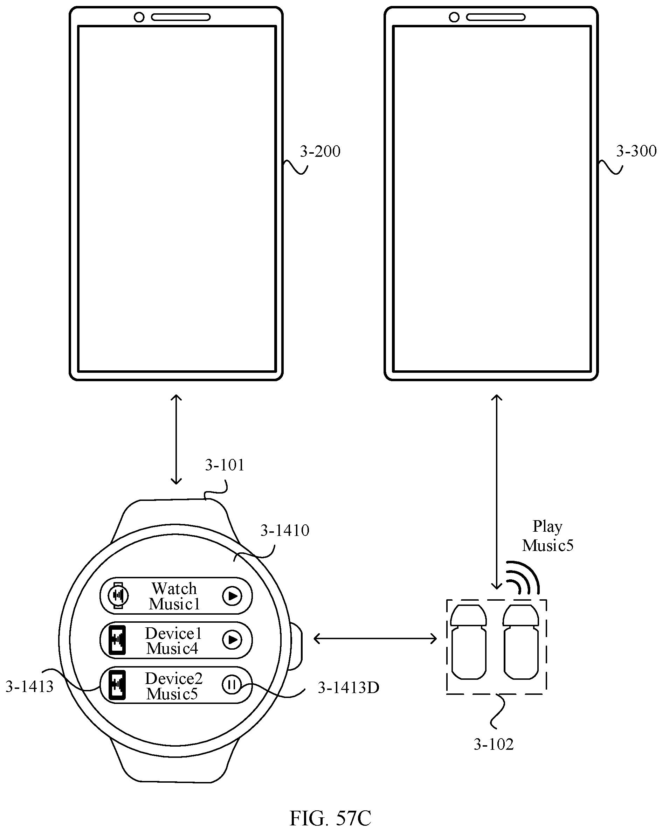

As shown in FIG. 57C, in response to the operation performed on the play control 3-1413C shown in FIG. 57B, the smartwatch 3-101 may indicate the earphones 3-102 to send, to the electronic device 3-300, a message for playing the music "Music5". When receiving the message for playing the music "Music5", the electronic device 3-300 may send audio data of the music "Music5" to the earphones 3-102, and indicate the earphones 3-102 to send, to the smartwatch 3-101, a message indicating that the music "Music5" is being played. When the audio data of the music "Music5" is received, the earphones 3-102 may play the music "Music5" with a sound. When receiving the message that indicates that the music "Music5" is being played and that is forwarded through the earphones 3-102, the smartwatch 3-101 may display the user interface 3-1410 shown in FIG. 57C. The smartwatch 3-101 may change the play control 3-1413C in the music control 3-1413 shown in FIG. 57B to a pause control 3-1413D shown in FIG. 57C. The pause control 3-1413D may be used to control the electronic device 3-300 to pause playing of the music.

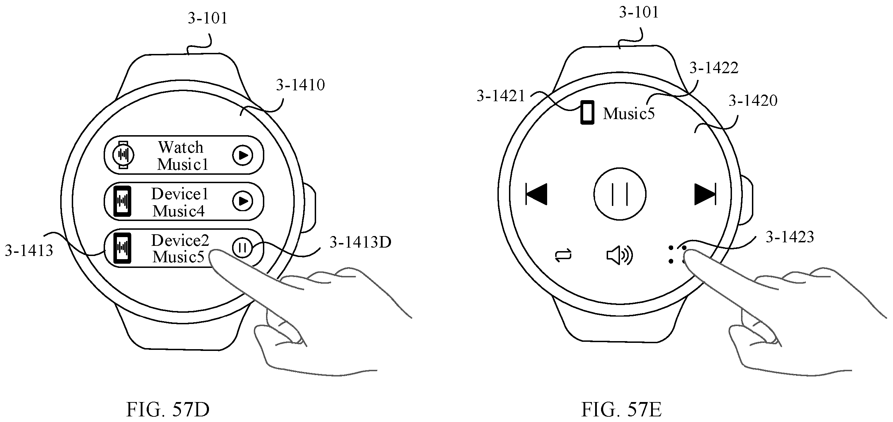

As shown in FIG. 57D, the smartwatch 3-101 receives an operation performed on the music control 3-1413 on the user interface 3-1410. The operation may be an operation, for example, a tap operation, performed on an area other than the pause control 3-1413D in the music control 3-1413. In response to the operation performed on the music control 3-1413, the smartwatch 3-101 may display a user interface 3-1422 shown in FIG. 57E. For the user interface 3-1420, refer to the user interface 3-640 shown in FIG. 49F.

As shown in FIG. 57E, the user interface 3-1420 may include a device type identifier 3-1421, a music name 3-1422, and a music setting control 3-1423.

The device type identifier 3-1421 may indicate a type of a device to which music to be played or being played on the user interface 3-1420 belongs. For example, the device type identifier 3-1420 is a mobile phone icon shown in FIG. 57E, and may indicate that the device to which the music to be played or being played on the user interface 3-1420 belongs is a mobile phone. The mobile phone is the electronic device 3-300 in this application.

The music name 3-1422 may indicate a name of the music to-be-played or being played on the user interface 3-1420. For example, the music name 3-1422 is "Music5". The music named "Music5" is music in the electronic device 3-300.

The music setting control 3-1423 may be used to open a music playing setting interface.

For other controls on the user interface 3-1420, refer to the descriptions of the controls on the user interface 3-640 shown in FIG. 49F in the foregoing embodiments. Details are not described herein again.

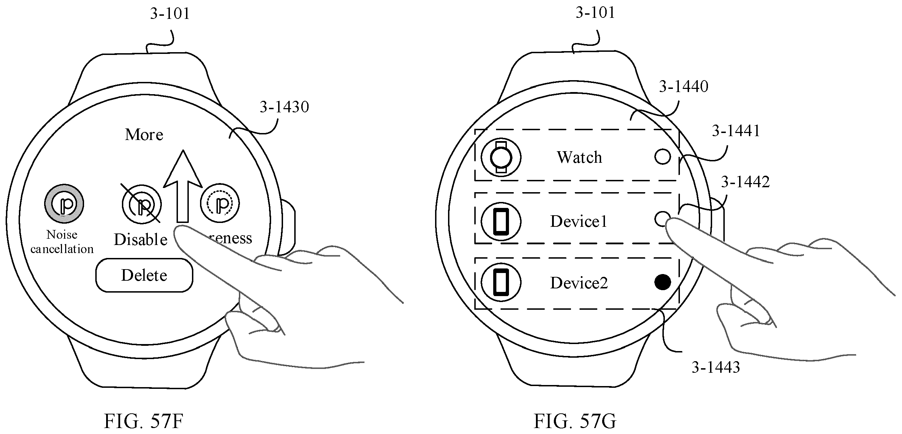

In response to an operation performed on the music setting control 3-1423, the smartwatch 3-101 may display a user interface 3-1430 shown in FIG. 57F. For the user interface 3-1430, refer to the user interface 3-720 shown in FIG. 50B.

As shown in FIG. 57F, in response to an operation of sliding upward performed on the user interface 3-1430, the smartwatch 3-101 may display a user interface 3-1440 shown in FIG. 57G. For the user interface 3-1440, refer to the user interface 3-1030 shown in FIG. 53D.

As shown in FIG. 57G, the user interface 3-1440 may include a device option 3-1441, a device option 3-1442, and a device option 3-1443. The device option 3-1441 may indicate a smartwatch named "Watch", namely, the smartwatch 3-101. The device option 3-1442 may indicate a mobile phone named "Device1", namely, the electronic device 3-200. The device option 3-1443 may indicate a mobile phone named "Device2", namely, the electronic device 3-300. The device options on the user interface 3-1440 may be used to perform device switching, to control music playing of different devices through the smartwatch 3-101.

It can be learned from FIG. 57E that the user interface 3-1420 displayed by the smartwatch 3-101 includes an operation control for controlling the electronic device 3-200 to play music. Correspondingly, in FIG. 57G, the device option 3-1443 is in a selected state. In this way, after returning to the user interface 3-1420 on the smartwatch 3-101, the user may control, through the operation control on the user interface 3-1420, the electronic device 3-200 to play the music.

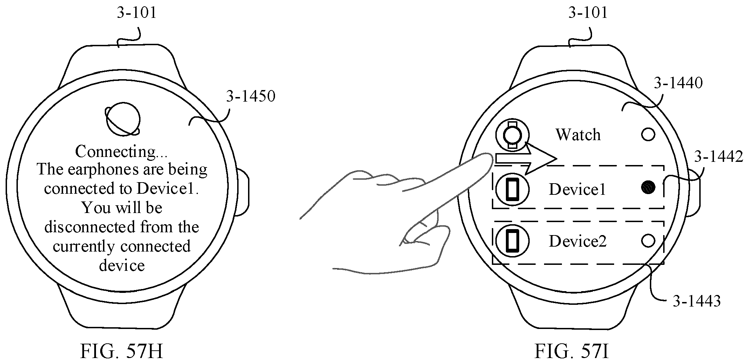

As shown in FIG. 57G, in response to an operation performed on the device option 3-1442, the smartwatch 3-101 may display a user interface 3-1450 shown in FIG. 57H. The user interface 3-1450 may include a connection prompt. The connection prompt may be used to give the user a prompt that the earphones are being connected to the electronic device 3-200 corresponding to the device option 3-1442, and is to be disconnected from the currently connected electronic device 3-300. Content of the connection prompt may include "Connecting... The earphones are being connected to Device 1. You will be disconnected from the currently connected device". Specific content of the connection prompt on the user interface 3-1450 is not limited in embodiments of this application.

It may be understood that the earphones 3-102 are currently connected to the electronic device 3-300, and is playing the music from the electronic device 3-300 with a sound. The smartwatch 3-101 receives the operation performed on the device option 3-1442 shown in FIG. 57G, and may provide a related operation control for controlling the electronic device 3-200 corresponding to the device option 3-1442 to play the music, so that the user controls, through the smartwatch 3-101, the electronic device 3-200 to play the music through the earphones 3-102. In this case, in response to the operation performed on the device option 3-1442 shown in FIG. 57G, the smartwatch 3-101 may indicate the earphones 3-102 to be disconnected from the electronic device 3-300, and establish a communication connection to the electronic device 3-200.

For an implementation method in which the smartwatch 3-101 indicates the earphones 3-102 to establish the communication connection to the electronic device 3-200, refer to the descriptions in the foregoing embodiments. Details are not described herein again.

In some embodiments, when the communication connection between the earphones 3-102 and the electronic device 3-300 is disconnected, the electronic device 3-300 may pause playing of the music. Optionally, when the communication connection between the earphones 3-102 and the electronic device 3-300 is disconnected, the electronic device 3-300 may still resume the music. The electronic device 3-300 may play the music with a sound through a speaker of the electronic device 3-300.

When the earphones 3-102 successfully establish the communication connection to the electronic device 3-200, the smartwatch 3-101 may display a user interface 3-1440 shown in FIG. 57I. The smartwatch 3-101 may change a device option in a selected state on the user interface 3-1440 from the device option 3-1443 shown in FIG. 57G to the device option 1442 shown in FIG. 57I.

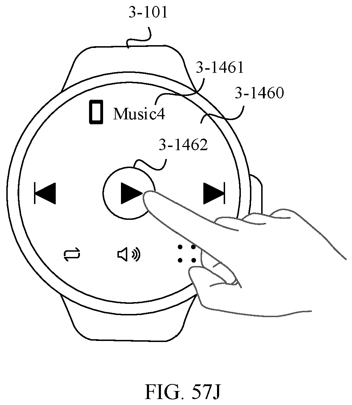

As shown in FIG. 57I, when the device option 3-1442 is in the selected state, in response to a user operation of sliding rightward performed on the user interface 3-1440, the smartwatch 3-101 may display a user interface 3-1460 shown in FIG. 57J. For the user interface 3-1460, refer to the user interface 3-640 shown in FIG. 49F.

As shown in FIG. 57J, the user interface 3-1460 may include a music name 3-1461 and a play control 3-1462.

The music name 3-1461 may indicate a name of music to-be-played or being played on the user interface 3-1460. For example, the music name 3-1461 is "Music4". The music named "Music4" is music in the electronic device 3-200.

The play control 3-1462 may be used to trigger the smartwatch 3-101 to control the electronic device 3-200 to play the music.

In response to an operation performed on the play control 3-1462, the smartwatch 3-101 may control the electronic device 3-200 to play the music (for example, the music "Music4" of the electronic device 3-200) with a sound through the earphones 3-102.

For an implementation in which the smartwatch 3-101 controls the electronic device 3-200 to play the music with a sound through the earphones 3-102, refer to the descriptions of embodiments shown in FIG. 53F and FIG. 53G. Details are not described herein again.

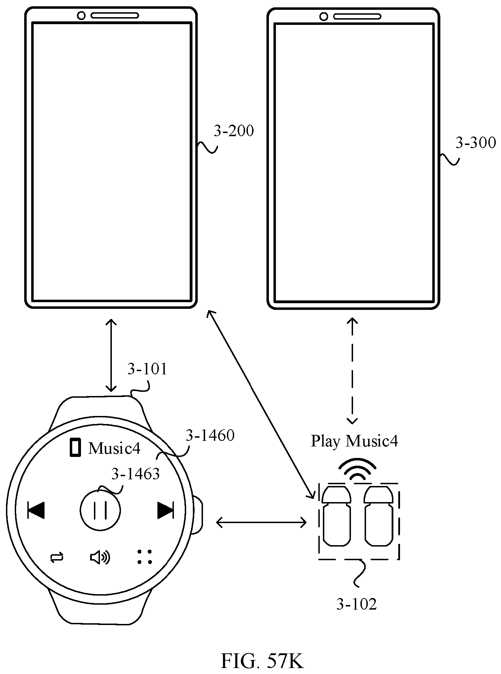

As shown in FIG. 57K, the communication connection between the earphones 3-102 and the electronic device 3-300 is disconnected. The earphones 3-102 currently establish a communication connection to the electronic device 3-200, and may play the music "Music4" from the electronic device 3-200. When the earphones 3-102 play the music from the electronic device 3-200, the smartwatch 3-101 may display a user interface 3-1460 shown in FIG. 57K. In FIG. 57K, the user interface 3-1460 may include a pause control 3-1463. The pause control 3-1463 may be used to trigger the smartwatch 3-101 to control the electronic device 3-200 to pause playing of the music.

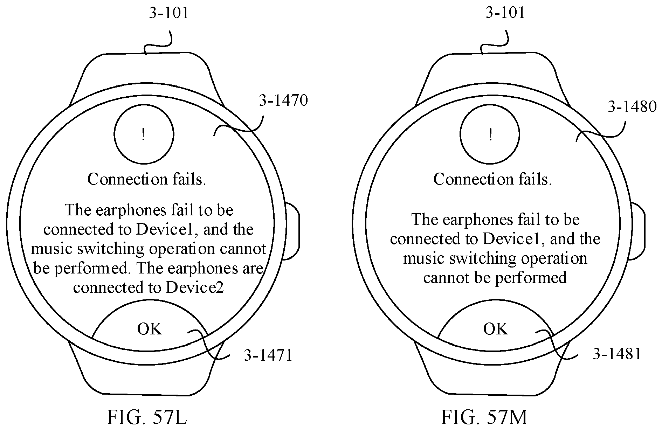

When the earphones 3-102 fail to establish the communication connection to the electronic device 3-200, the smartwatch 3-101 may display a user interface 3-1470 shown in FIG. 57L.

As shown in FIG. 57L, the user interface 3-1470 may include a connection failure prompt. The connection failure prompt may be used to give the user a prompt that the earphones 3-102 fail to be connected to the electronic device 3-200, and the earphones 3-102 are still connected to the electronic device 3-300. Content of the connection failure prompt may include "Connection fails. The earphones fail to be connected to Device1, and the music switching operation cannot be performed. The earphones are connected to Device2". In this way, the user may know that the earphones 3-102 fail to be connected to the electronic device 3-200, and cannot play the music from the electronic device 3-200. The content of the connection failure prompt on the user interface 3-1470 is not limited in embodiments of this application. If the user wants to play the music from the electronic device 3-200 through the earphones 3-102, the user may perform an operation of connecting the earphone 3-102 to the electronic device 3-200 again. The user interface 3-1470 may further include a confirm control 3-1471. In response to an operation performed on the confirm control 3-1471, the smartwatch 3-101 may display the user interface 3-1440 shown in FIG. 57G again.

In other words, when the earphones 3-102 fail to establish the communication connection to the electronic device 3-200, the earphones 3-102 may re-establish the communication connection to the electronic device 3-300, and resume the music from the electronic device 3-300.

In some embodiments, if the earphones 3-102 fail to establish the communication connection to the electronic device 3-200, and the earphones 3-102 also fail to re-establish the communication connection to the electronic device 3-300, the smartwatch 3-101 may display a user interface 3-1480 shown in FIG. 57M.

As shown in FIG. 57M, the user interface 1480 may include a connection failure prompt. The connection failure prompt may be used to give the user a prompt that the earphones 3-102 fail to be connected to the electronic device 3-200. Content of the connection failure prompt may include "Connection fails. The earphones fail to be connected to Device 1, and the music switching operation cannot be performed". The content of the connection failure prompt on the user interface 3-1480 is not limited in embodiments of this application. The user interface 14M may further include a confirm control 3-1481. In response to an operation performed on the confirm control 3-1481, the smartwatch 3-101 may display the user interface 3-1440 shown in FIG. 57G again.

It can be learned from the scenario shown in FIG. 57A to FIG. 57M that, in addition to controlling an electronic device (for example, the electronic device 3-200) that directly establishes a communication connection to the smartwatch to play music, the smartwatch 3-101 may control, through the earphones 3-102, an electronic device (for example, the electronic device 3-300) that does not establish a communication connection to the smartwatch to play music. The user may control, through the smartwatch 3-101, the earphones 3-102 to play music on any one of the smartwatch 3-101, the electronic device 3-200, and the electronic device 3-300. This can avoid a conflict that a plurality of devices preempt the earphones 3-102, and improve user experience of listening to audio through the earphones 3-102.

**FIG. 58A to FIG. 58F** **show an example of another scenario in which audio playing is controlled through the smartwatch 3-101.**

As shown in FIG. 58A, the smartwatch 3-101 is paired with the electronic device 3-200, and a communication connection is established between the smartwatch 3-101 and the electronic device 3-200. A communication connection is established between the earphones 3-102 and the smartwatch 3-101. A communication connection is established between the earphones 3-102 and the electronic device 3-200. A communication connection has been established between the earphones 3-102 and the electronic device 3-300, but the earphones 3-102 and the electronic device 3-300 currently are not connected. The communication connection between the electronic device 3-200 and the smartwatch 3-101, the communication connection between the smartwatch 3-101 and the earphones 3-102, and the communication connection between the earphones 3-102 and the electronic device 3-200 may be, for example, Bluetooth communication connections. A communication connection manner is not limited in embodiments of this application. For a manner in which the smartwatch 3-101 establishes communication connections to the electronic device 3-200 and the earphones 3-102, and a manner in which the earphones 3-102 establish the communication connection to the electronic device 3-200, refer to the descriptions in the foregoing embodiments. Details are not described herein again.

In a connection relationship shown in FIG. 58A, the earphones 3-102 may play music from the electronic device 3-200 with a sound. For a method in which the smartwatch 3-101 controls the electronic device 3-200 to play the music with a sound through the earphones 3-102, refer to the descriptions of embodiments shown in FIG. 53F and

FIG. 53G. Details are not described herein again. Because the earphones 3-102 currently are not connected to the electronic device 3-300, the electronic device 3-300 may play music with a sound through a speaker of the electronic device 3-300 after receiving a music playing operation.

When the earphones 3-102 play music "Music4" from the electronic device 3-200 with a sound, the smartwatch 3-101 may display a user interface 3-1510 shown in FIG. 58A. For the user interface 3-1510, refer to the user interface 3-1410 shown in FIG. 57B. The user interface 3-1510 may include a music control 3-1511, a music control 3-1512, and a music control 1-1513.

The music control 3-1511 may be used to control music locally stored in the smartwatch 3-101. The music control 3-1512 may be used to control the music on the electronic device 3-200. The music control 3-1513 may be used to control music on the electronic device 3-300.

The music control 3-1512 may include a pause control 3-1512A. The pause control 3-1512A may be used to trigger the smartwatch 3-101 to control the electronic device 3-200 to pause playing of the music. When the earphones 3-102 play the music from the electronic device 3-200, after the electronic device 3-200 pauses playing of the music, the earphones 3-102 may pause playing of the music from the electronic device 3-200 with a sound.

The music control 3-1513 may include a play control 3-1513A. The play control 3-1513A may be used to trigger the smartwatch 3-101 to control the electronic device 3-300 to play the music. After the electronic device 3-300 establishes a communication connection to the earphones 3-102, the music on the electronic device 3-300 may be played with a sound by the earphones 3-102.

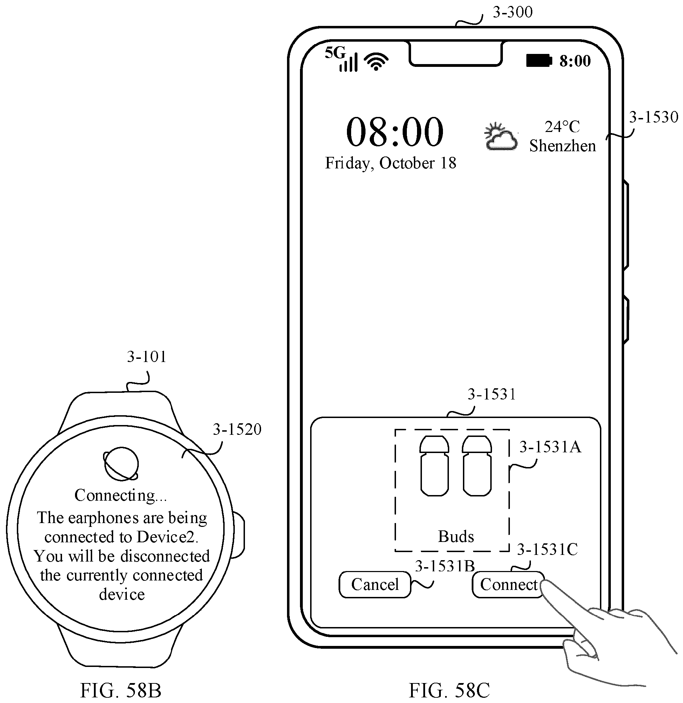

In response to an operation performed on the play control 3-1513A, the smartwatch 3-101 may display a user interface 3-1520 shown in FIG. 58B. For the user interface 3-1520, refer to the user interface 3-1450 shown in FIG. 57H.

As shown in FIG. 58B, the user interface 3-1520 may include a connection prompt. The connection prompt may be used to give a user a prompt that the earphones are being connected to the electronic device 3-300 corresponding to the music control 3-1513, and is to be disconnected from the currently connected electronic device 3-200. Content of the connection prompt may include "Connecting... The earphones are being connected to Device2. You will be disconnected from the currently connected device". Specific content of the connection prompt on the user interface 3-1520 is not limited in embodiments of this application.

It may be understood that the earphones 3-102 are currently connected to the electronic device 3-200, and is playing the music from the electronic device 3-200 with a sound. The smartwatch 3-101 receives an operation performed on the play control 3-1513A in the music control 3-1513 shown in FIG. 58A, and may control, through the earphones 3-102, the electronic device 3-300 corresponding to the music control 3-1513 to play the music, so that the user controls, through the smartwatch 3-101, the electronic device 3-300 to play the music through the earphones 3-102. In this case, in response to the operation performed on the play control 3-1513A shown in FIG. 58A, the smartwatch 3-101 may indicate the earphones 3-102 to be disconnected from the electronic device 3-200, and establish a communication connection to the electronic device 3-300.

In some embodiments, when the communication connection between the earphones 3-102 and the electronic device 3-200 is disconnected, the electronic device 3-200 may pause playing of the music.

In response to the operation performed on the play control 3-1513A shown in FIG. 58A, the smartwatch 3-101 may send, to the earphones 3-102, an instruction for establishing the communication connection to the electronic device 3-300. According to the communication connection establishment instruction, the earphones 3-102 may search for the electronic device 3-300, and request the electronic device 3-300 to establish the communication connection.

When receiving the request of the earphones 3-102 for establishing the communication connection, the electronic device 3-300 may display a user interface 3-1530 shown in FIG. 58C.

As shown in FIG. 58C, the user interface 3-1530 may include a connection widget 3-1531. The connection widget 3-1531 may be used to give the user a prompt that a device requests to establish a communication connection to the electronic device 3-300. The connection widget 3-1531 may include a device information display area 3-1531A, a cancel control 3-1531B, and a connection control 3-1531C.

The device information display area 3-1531A may be used to display related information of the device that requests to establish the communication connection to the electronic device 3-300, for example, a device image and a device name. The device that requests to establish the communication connection to the electronic device 3-300 is the earphones 3-102. Therefore, an image of the earphones 3-102 and a name (for example, "Buds") of the earphones 3-102 may be displayed in the device information display area 3-1531A. The name of the earphones 3-102 is not limited in embodiments of this application.

The cancel control 3-1531B may be used to decline establishment of the communication connection to the earphones 3-102.

The connection control 3-1531C may be used to agree to establish the communication connection to the earphones 3-102. In response to an operation performed on the connection control 3-1531C, the electronic device 3-300 may send, to the earphones 3-102, a message indicating that the establishment of the communication connection is agreed.

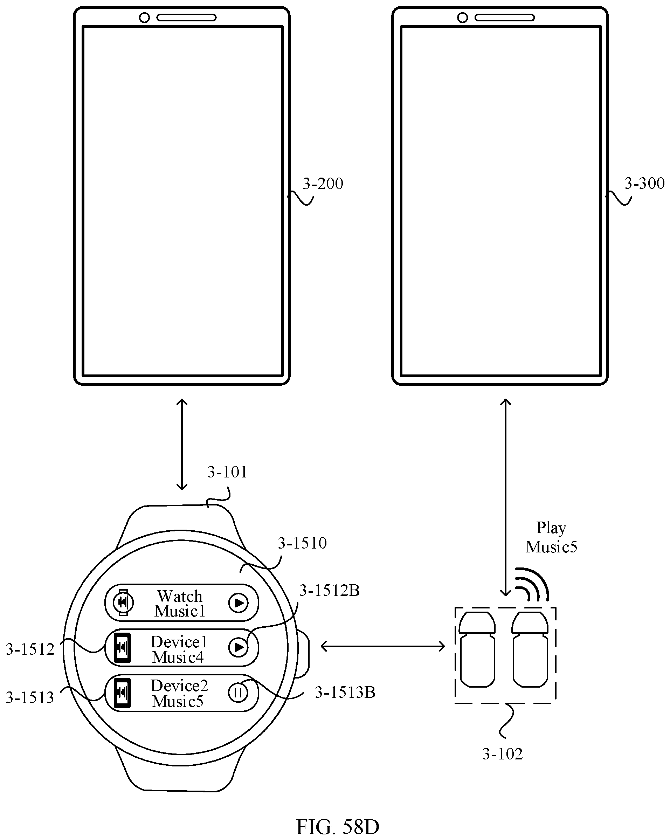

As shown in FIG. 58D, the earphones 3-102 successfully establish the communication connection to the electronic device 3-300. The smartwatch 3-101 may indicate the earphones 3-102 to send a music playing message to the electronic device 3-300. When receiving the music playing message, the electronic device 3-300 may send audio data of music playing, for example, audio data of music "Music5", to the earphones 3-102. The earphones 3-102 may play the music "Music5" from the electronic device 3-300 with a sound. In addition, the electronic device 3-300 may further send, to the smartwatch 3-101 through the earphones 3-102, a message indicating that the music is being played. The smartwatch 3-101 may display a user interface 3-1510 shown in FIG. 58D. The smartwatch 3-101 may change the pause control 3-1512A in the music control 3-1512 shown in FIG. 58A to a play control 3-1512B shown in FIG. 58D, and change the play control 3-1513A in the music control 3-1513 shown in FIG. 58A to a pause control 3-1513C shown in FIG. 58D. The pause control 3-1513B may be used to trigger the smartwatch 3-101 to control the electronic device 3-300 to pause playing of the music.

It can be learned that, when the earphones 3-102 establish the communication connection to the electronic device 3-300, the communication connection between the earphones 3-102 and the electronic device 3-200 is disconnected. In addition, the electronic device 3-200 may pause playing of the music.

In some embodiments, when the earphones 3-102 establishes the communication connection to the electronic device 3-300 according to the communication connection establishment instruction sent by the smartwatch 3-101, the communication connection may fail to be established to the electronic device 3-300. For a scenario in which the earphones 3-102 fail to establish the communication connection to the electronic device 3-300, refer to the foregoing scenario shown in FIG. 57L and FIG. 57M in which the earphones 3-102 fail to establish the communication connection to the electronic device 3-200. Details are not described herein again.

In some embodiments, when there is a communication connection established between the earphones 3-102 and the electronic device 3-300, the electronic device 3-300 may control playing of music in the earphones 3-102 based on a received music playing control operation.

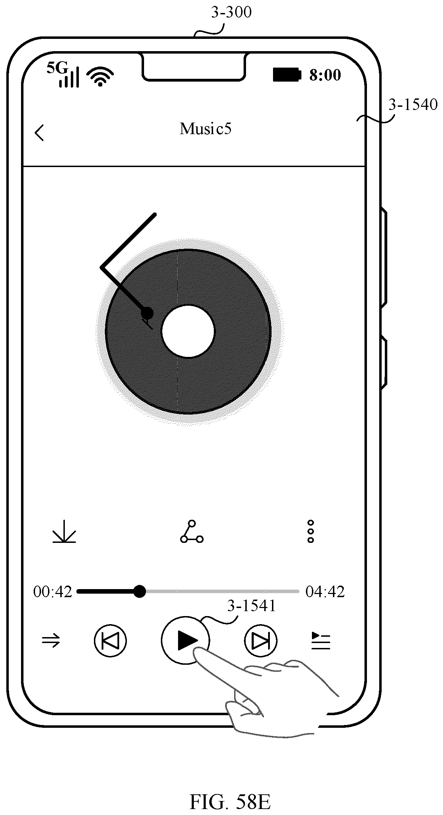

Specifically, as shown in FIG. 58E, the electronic device 3-300 may display a user interface 3-1540. The user interface 3-1540 may be a user interface of a Music application on the electronic device 3-300. The user interface 3-1540 may include a play control 3-1541. In response to an operation performed on the play control 3-1541, the electronic device 3-200 may start to play to-be-played music (for example, the music "Music5") corresponding to the user interface 3-1540.

Because the electronic device 3-300 is connected to the earphones 3-102, the electronic device 3-300 may send audio data of music playing to the earphones 3-102, to play music (for example, the music "Music5") on the electronic device 3-300 with a sound through the earphones 3-102.

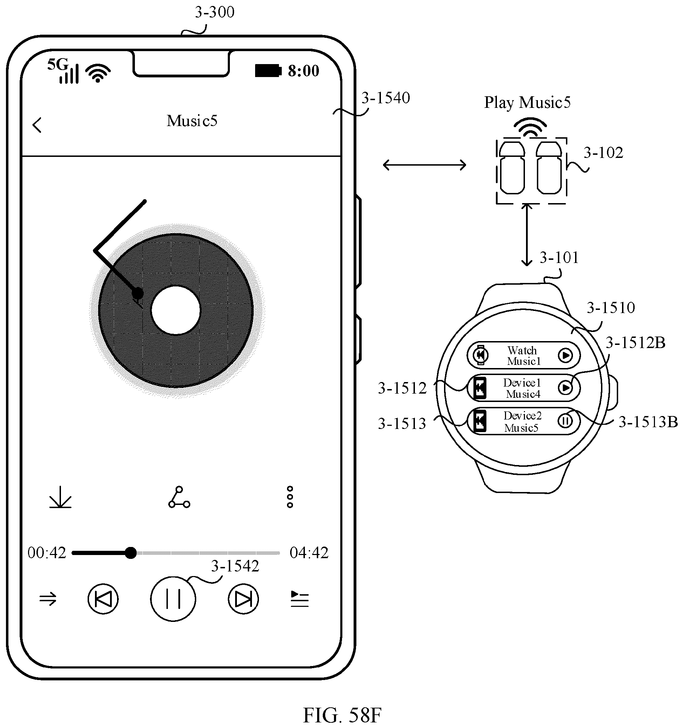

As shown in FIG. 58F, the electronic device 3-300 may send the audio data of "Music5" to the earphones 3-102. The earphones 3-102 may play the music "Music5" of the electronic device 3-300. The electronic device 3-300 may display a user interface 3-1540. In a process of playing the music through the earphones 3-102, the electronic device 3-300 may display a pause control 3-1542 on the user interface 3-1540. The pause control 3-1542 may be used to pause playing of the music. In addition, the electronic device 3-300 may further send, to the smartwatch 3-101 through the earphones 3-102, a message indicating that the music is being played. When receiving the message indicating that the music is being played, the smartwatch 3-101 may display the user interface 3-1510 shown in FIG. 58F. In FIG. 58F, the user interface 1510 may include the music control 3-1512 and the music control 3-1513. The music control 3-1512 may include the play control 3-1512B. The play control 3-1512B may be used to trigger the smartwatch 3-101 to control the electronic device 3-200 corresponding to the music control 3-1512 to play the music. The music control 3-1513 may include the pause control 3-1513B. The pause control 3-1513B may indicate that the electronic device 3-300 is playing the music. The pause control 3-1513B may be used to trigger the smartwatch 3-101 to control the electronic device 3-300 to pause playing of the music.

It can be learned from the scenario shown in FIG. 58A to FIG. 58F that the smartwatch 3-101 may control different devices to play music. The user may control, through the smartwatch 3-101, the earphones 3-102 to play music on different devices. This can avoid a conflict that a plurality of devices preempt the earphones 3-102, and improve user experience of listening to audio through the earphones 3-102.

**FIG. 59A to FIG. 59G** **show an example of another scenario in which audio playing is controlled through the smartwatch 3-101.**

As shown in FIG. 59A, the smartwatch 3-101 is paired with the electronic device 3-200, and a communication connection is established between the smartwatch 3-101 and the electronic device 3-200. A communication connection is established between the earphones 3-102 and the electronic device 3-300. A communication connection between the earphones 3-102 and the smartwatch 3-101 is disconnected. In addition, a communication connection has been established between the earphones 3-102 and the electronic device 3-200, but the earphones 3-102 and the electronic device 3-200 currently are not connected. The communication connection between the smartwatch 3-101 and the electronic device 3-200 and the communication connection between the earphones 3-102 and the electronic device 3-300 may be, for example, Bluetooth communication connections. A communication connection manner is not limited in embodiments of this application. For a manner in which the smartwatch 3-101 establishes the communication connection to the electronic device 3-200 and a manner in which the earphones 3-102 establish the communication connection to the electronic device 3-300, refer to the descriptions in the foregoing embodiments. Details are not described herein again.

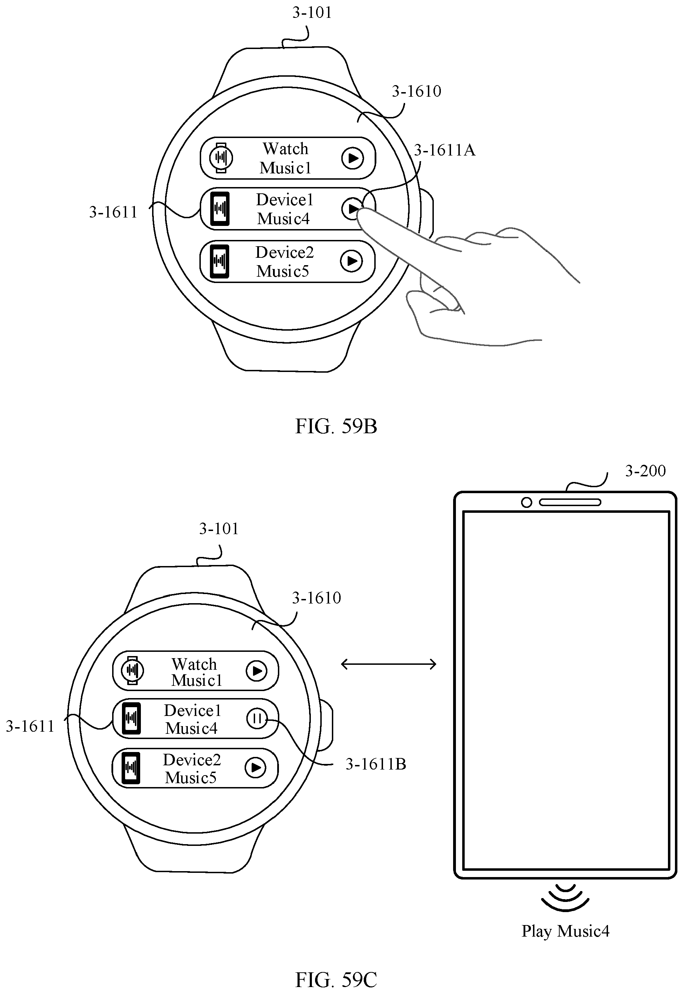

As shown in FIG. 59B, the smartwatch 3-101 may display a user interface 3-1610 shown in FIG. 59B. For the user interface 3-1610, refer to the user interface 3-1410 shown in FIG. 57B. The user interface 3-1610 may include a music control 3-1611. The music control 3-1611 may be used to control music on the electronic device 3-200. The music control 3-1611 may include a play control 3-1611A.

As shown in FIG. 59C, in response to an operation performed on the play control 3-1611A shown in FIG. 59B, the smartwatch 3-101 may send a music playing message to the electronic device 3-200. Because the electronic device 3-200 is not connected to the earphones 3-102, the electronic device 3-200 may play the music (for example, the music "Music4") with a sound through a speaker on the electronic device 3-200 after receiving the music playing message.

After playing the music, the electronic device 3-200 may send, to the smartwatch 3-101, a message indicating that the music is being played. Based on the message indicating that the music is being played, the smartwatch 3-101 may display a user interface 3-1610 shown in FIG. 59C. The smartwatch 3-101 may change the play control 3-1611A in the music control 3-1611 shown in FIG. 59B to a pause control 3-1611B shown in FIG. 59C. The pause control 3-1611B may be used to trigger the smartwatch 3-101 to control the electronic device 3-200 to pause playing of the music.

In some embodiments, in response to the operation performed on the play control 3-1611A shown in FIG. 59B, the smartwatch 3-101 may further detect whether the electronic device 3-200 is connected to the earphones 3-102. When determining that the electronic device 3-200 is not connected to the earphones 3-102, the smartwatch 3-101 may further send, to the electronic device 3-200, an instruction for establishing a communication connection to the earphones 3-102. According to the instruction for establishing the communication connection, the electronic device 3-200 may search for the earphones 3-102, and request to establish the communication connection to the earphones 3-102.

When there is a communication connection established between the earphones 3-102 and the electronic device 3-300, the earphones 3-102 may decline the request of the electronic device 3-200 for establishing the communication connection. In other words, the earphones 3-102 may maintain the communication connection to the electronic device 3-300. Alternatively, when receiving the request of the electronic device 3-200 for establishing the communication connection, the earphones 3-102 may determine, based on whether a service of the electronic device 3-300 is currently being performed, whether to agree to establish the communication connection to the electronic device 3-200. If the earphones 3-102 currently do not perform the service of the electronic device 3-300 (for example, the earphones 3-102 do not play audio from the electronic device 3-300), the earphones 3-102 may disconnect the communication connection to the electronic device 3-300, and agree to the request of the electronic device 3-200 for establishing the communication connection. After the earphones 3-102 are successfully connected to the electronic device 3-200, the electronic device 3-200 may play the music through the earphones 3-102. If the earphones 3-102 are currently performing the service of the electronic device 3-300 (for example, the earphones 3-102 are playing the audio from the electronic device 3-300), the earphones 3-102 may decline the request of the electronic device 3-200 for establishing the communication connection.

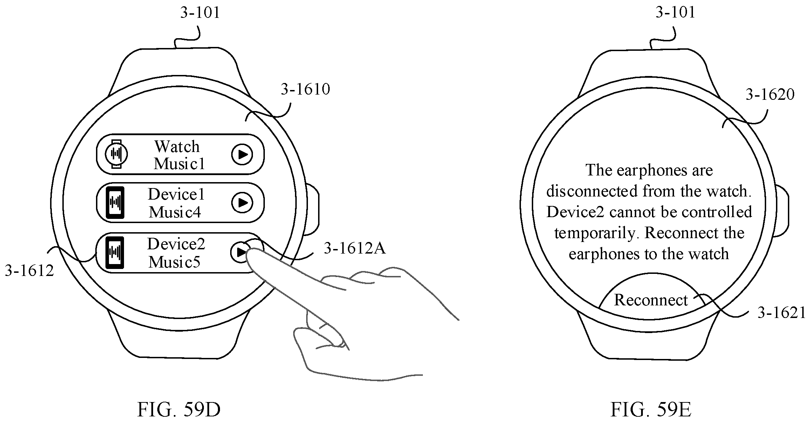

As shown in FIG. 59D, the user interface 3-1610 displayed by the smartwatch 3-101 may further include a music control 3-1612. The music control 3-1612 may be used to control the music on the electronic device 3-300. The music control 3-1612 may include a play control 3-1612A. In response to an operation performed on the play control 3-1612A, the smartwatch 3-101 may display a user interface 1620 shown in FIG. 59E.

As shown in FIG. 59E, the user interface 3-1620 may include a connection prompt. The connection prompt may be used to give a user a prompt that the earphones 3-102 are not connected to the smartwatch 3-101, and the smartwatch 3-101 cannot control the electronic device 3-300 to play the music. Content of the connection prompt may include "The earphones are disconnected from the watch. Device2 cannot be controlled temporarily. Reconnect the earphones to the watch". Specific content of the connection prompt is not limited in embodiments of this application.

The user interface 3-1620 may further include a connection control 3-1621. The connection control 3-1621 may be used to trigger the smartwatch 3-101 to search for the earphones 3-102 and establish a communication connection to the earphones 3-102. For an implementation in which the smartwatch 3-101 establishes the communication connection to the earphones 3-102 in response to an operation performed on the connection control 3-1621, refer to the descriptions of embodiments shown in FIG. 52B and FIG. 52C.

It may be understood that the electronic device 3-300 does not establish a communication connection to the smartwatch 3-101. The communication connection between the smartwatch 3-101 and the earphones 3-102 is disconnected. Therefore, the smartwatch 3-101 cannot communicate with the electronic device 3-300. In this case, the user cannot control the electronic device 3-300 through the smartwatch 3-101. After the smartwatch 3-101 is connected to the earphones 3-102 again, the smartwatch 3-101 may control the electronic device 3-300 through the earphones 3-102, and obtain a playing status of audio in the electronic device 3-300, so that the user views, on the smartwatch 3-101, the playing status of the audio in the electronic device 3-300.

In some embodiments, when there is a communication connection established between the earphones 3-102 and the electronic device 3-300, the electronic device 3-300 may control playing of audio in the earphones 3-102 based on a received audio playing control operation.

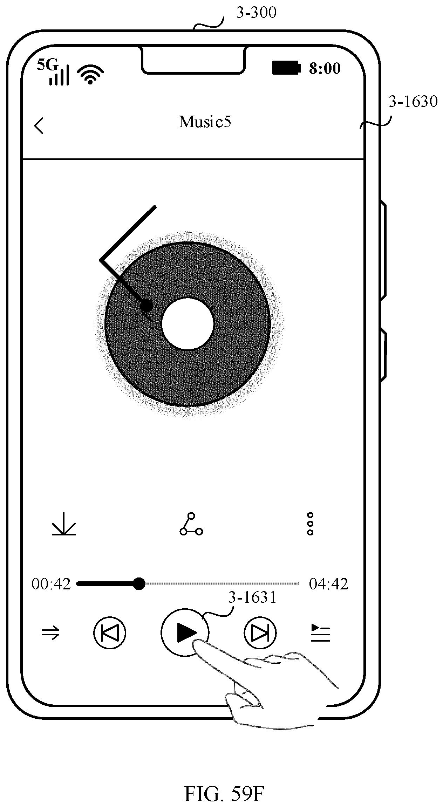

As shown in FIG. 59F, the electronic device 3-300 may display a user interface 3-1630. For the user interface 1-1630, refer to the user interface 3-1540 shown in FIG. 58E. The user interface 3-1630 may include a play control 3-1631. In response to an operation performed on the play control 3-1631, the electronic device 3-200 may start to play to-be-played music (for example, music "Music5") corresponding to the user interface 3-1630.

Because the electronic device 3-300 is connected to the earphones 3-102, the electronic device 3-300 may send audio data of music playing to the earphones 3-102, to play music (for example, the music "Music5") on the electronic device 3-300 with a sound through the earphones 3-102.

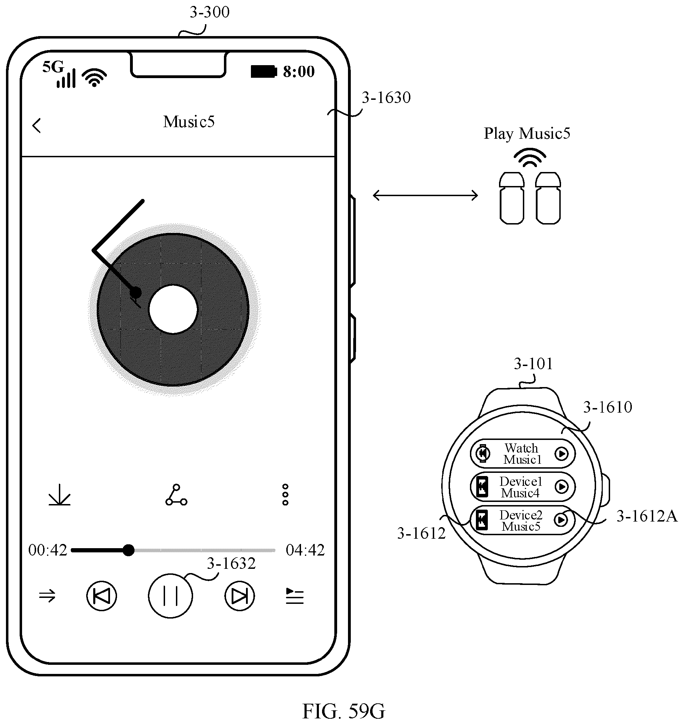

As shown in FIG. 59G, the electronic device 3-300 may send the audio data of "Music5" to the earphones 3-102. The earphones 3-102 may play the music "Music5" of the electronic device 3-300. The electronic device 3-300 may display the user interface 3-1630. In a process of playing the music through the earphones 3-102, the electronic device 3-300 may display a pause control 3-1632 on the user interface 3-1630. The pause control 3-1632 may be used to pause playing of the music.

In addition, because the communication connection between the earphones 3-102 and the smartwatch 3-101 is disconnected, the electronic device 3-300 cannot send, through the earphones 3-102, a message indicating that the music is being played. In this case, in the process in which the electronic device 3-300 plays the music through the earphones 3-102, the smartwatch 3-101 may still display the user interface 3-1610 shown in FIG. 59G. The user interface 3-1610 may include the music control 3-1612. The music control 3-1612A may include the play control 3-1612A. It can be learned that, when the communication connection between the earphones 3-102 and the smartwatch 3-101 is disconnected, the user cannot learn of the playing status of the audio in the electronic device 3-300 through the user interface 3-1612A displayed by the smartwatch 3-101.

It can be learned from the scenario shown in FIG. 59A to FIG. 59G that, when the earphones 3-102 are connected to the smartwatch 3-101, the smartwatch 3-101 may control the earphones 3-102 to play music on a specified device. When the earphones 3-102 are not connected to the smartwatch 3-101, the earphones 3-102 may maintain a communication connection to a currently connected device, or the earphones 3-102 may establish a communication connection to another device in response to a connection request of the another device when no service is currently being performed, and perform a service from the another device. According to the foregoing embodiments, a conflict that a plurality of devices preempt the earphones 3-102 can be avoided, and user experience of listening to audio through the earphones 3-102 can be improved.

**FIG. 60A** **and** **FIG. 60B** **show an example of a flowchart of an audio playing control method.**

As shown in FIG. 60A and FIG. 60B, the method may include step S1711 to step S1726.
**1. (S1711) Play music on the smartwatch 3-101 based on a communication system including the smartwatch 3-101 and the earphones 3-102.**

S1711: The smartwatch 3-101 is connected to the earphones 3-102, and the earphones 3-102 play the music on the smartwatch 3-101 with a sound.

After being taken out of the smartwatch 3-101, the earphones 3-102 may establish a wireless connection, for example, a Bluetooth communication connection, to the smartwatch 3-101. The earphones 3-102 may play the music on the smartwatch 3-101 with a sound. For details, refer to the descriptions of the scenario shown in FIG. 49H and FIG. 49J.

**2. (S1712 to S1718) Establish the communication system shown in** **FIG. 5A** **and play music on the electronic device 3-200.**

S1712: The smartwatch 3-101 detects an operation of playing the music on the electronic device 3-200.

The smartwatch 3-101 is paired with the electronic device 3-200, and a communication connection (for example, a Bluetooth communication connection) is established between the smartwatch 3-101 and the electronic device 3-200.

For the operation of playing the music on the electronic device 3-200, refer to the operation shown in FIG. 53F, or refer to the operation shown in FIG. 53I.

S1713: The smartwatch 3-101 determines whether the earphones 3-102 are connected to the electronic device 3-200.

If it is determined that the earphones 3-102 are connected to the electronic device 3-200, the smartwatch 3-101 may perform the following step S1714.

If it is determined that the earphones 3-102 are not connected to the electronic device 3-200, the smartwatch 3-101 may perform the following step S1715.

It should be noted that, that the smartwatch 3-101 determines whether the earphones 3-102 are connected to the electronic device 3-200 may be specifically that the smartwatch 3-101 determines whether at least one earphone in the earphones 3-102 is connected to the electronic device 3-200.

When the at least one earphone in the earphones 3-102 is connected to the electronic device 3-200, the smartwatch 3-101 may perform the following step S1714. When two earphones in the earphones 3-102 are not connected to the electronic device 3-200, the smartwatch 3-101 may perform the following step S1715.

S1714: The smartwatch 3-101 determines whether the earphones 3-102 are in a worn state.

If it is determined that the earphones 3-102 are in the worn state, the smartwatch 3-101 may perform the following step S1716.

If it is determined that the earphones 3-102 are in a not-worn state, the smartwatch 3-101 may perform the following step S1717.

It should be noted that, that the smartwatch 3-101 determines whether the earphones 3-102 are in a worn state may be specifically that the smartwatch 3-101 determines whether at least one earphone in the earphones 3-102 is in the worn state.

When the at least one earphone in the earphones 3-102 is in the worn state, and the earphone in the worn state is connected to the electronic device 3-200, the smartwatch 3-101 may perform the following step S1716. When the two earphones in the earphones 3-102 are in the not-worn state, the smartwatch 3-101 may perform the following step S1717.

S1715: The smartwatch 3-101 indicates the earphones 3-102 to be connected to the electronic device 3-200.

For an implementation method in which the smartwatch 3-101 indicates the earphones 3-102 to be connected to the electronic device 3-200, refer to the descriptions of the scenario shown in FIG. 55C.

S1716: The smartwatch 3-101 sends a music play instruction to the electronic device 3-200, and the earphones 3-102 play the music on the electronic device 3-200 with a sound.

For an implementation method in which the earphones 3-102 play the music on the electronic device 3-200 with a sound, refer to the descriptions of the scenario shown in FIG. 53G.

In a process in which the earphones 3-102 play the music on the electronic device 3-200 with a sound, the earphones 3-102 may perform wearing detection. When it is detected that the earphones 3-102 are taken off, the earphones 3-102 may pause playing of the music, and send a music playing pause message to the smartwatch 3-101 and/or the electronic device 3-200. When it is detected that the earphones 3-102 are worn, the earphones 3-102 may resume music, and send, to the smartwatch 3-101 and/or the electronic device 3-200, a message indicating that the music is resumed.

S1717: The smartwatch 3-101 sends a music play instruction to the electronic device 3-200, and the electronic device 3-200 plays the music on the electronic device 3-200 with a sound.

For an implementation in which the electronic device 3-200 plays the music on the electronic device 3-200 with a sound, refer to the descriptions of the scenario shown in FIG. 53M.

Optionally, in step S1714, if the smartwatch 3-101 determines that the earphones 3-102 are in the not-worn state, the smartwatch 3-101 may further prompt a user to wear the earphones 3-102. For an implementation in which the smartwatch 3-101 prompts the user to wear the earphones 3-102, refer to the descriptions of the scenario shown in FIG. 49I.

Step S1714, step S1716, and step S1717 may constitute step Q1.

An execution sequence of step S1713 and step S 1714 is not limited in embodiments of this application. In a possible implementation, the smartwatch 3-101 may first perform step S1714 and then perform step S1713. Alternatively, the smartwatch 3-101 may simultaneously perform step S1713 and step S1714.

In a possible implementation, the smartwatch 3-101 may not perform step S1714. When determining that the earphones 3-102 are connected to the electronic device 3-200, the smartwatch 3-101 may send the music play instruction to the electronic device 3-200. Then, the electronic device 3-200 may send audio data of music playing to the earphones 3-102. The earphones 3-102 may play the music on the electronic device 3-200 with a sound. Alternatively, the earphones 3-102 may determine, based on whether the earphones 3-102 are in the worn state, whether to play the music on the electronic device 3-200 with a sound or pause playing of the music on the electronic device 3-200.

S1718: The smartwatch 3-101 may determine whether the earphones 3-102 are successfully connected to the electronic device 3-200.

The earphones 3-102 may establish a communication connection to the electronic device 3-200 based on an indication of the smartwatch 3-101 for establishing the communication connection. The smartwatch 3-101 may determine whether the earphones 3-102 are successfully connected to the electronic device 3-200.

If it is determined that the earphones 3-102 are successfully connected to the electronic device 3-200, the smartwatch 3-101 may perform step Q1.

If it is determined that the earphones 3-102 fail to be connected to the electronic device 3-200, the smartwatch 3-101 may perform step S1717. Optionally, if it is determined that the earphones 3-102 fail to be connected to the electronic device 3-200, the smartwatch 3-101 may display the user interface 3-1230 shown in FIG. 55E, to give the user a prompt that when the earphones 3-102 fail to be connected to the electronic device 3-200, the electronic device 3-200 cannot be controlled, through the smartwatch 3-101, to play the music.

In a possible implementation, step S1713 may be performed by the electronic device 3-200. Specifically, after the smartwatch 3-101 detects the operation of playing the music on the electronic device 3-200 (namely, step S1712), the smartwatch 3-101 may send the music play instruction to the electronic device 3-200. When receiving the music play instruction, the electronic device 3-200 may determine whether the earphones 3-102 are connected to the electronic device 3-200.

When determining that the earphones 3-102 are connected to the electronic device 3-200, the electronic device 3-200 may send the audio data of music playing to the earphones 3-102, to indicate the earphones 3-102 to play the music on the electronic device 3-200 with a sound. Alternatively, when determining that the earphones 3-102 are connected to the electronic device 3-200, the electronic device 3-200 may determine whether the earphones 3-102 are in the worn state. When determining that the earphones 3-102 are in the worn state, the electronic device 3-200 may send the audio data of music playing to the earphones 3-102, to indicate the earphones 3-102 to play the music on the electronic device 3-200 with a sound. When determining that the earphones 3-102 are in the not-worn state, the electronic device 3-200 may play the music on the electronic device 3-200 with a sound through an audio playing apparatus on the electronic device 3-200. Alternatively, when determining that the earphones 3-102 are in the not-worn state, the electronic device 3-200 may send, to the smartwatch 3-101, a message indicating that the earphones 3-102 are in the not-worn state. Then, the smartwatch 3-101 may prompt the user to wear the earphones 3-102 to listen to music.

When determining that the earphones 3-102 are not connected to the electronic device 3-200, the electronic device 3-200 may play the music on the electronic device 3-200 with a sound through an audio playing apparatus on the electronic device 3-200. Alternatively, when determining that the earphones 3-102 are not connected to the electronic device 3-200, the electronic device 3-200 may send, to the smartwatch 3-101, a message indicating that the earphones 3-102 are not connected to the electronic device 3-200. Then, the smartwatch 3-101 may perform step S1715.

**3. (S1719 to S1726) Establish the communication system shown in** **FIG. 5B** **and play music on the electronic device 3-300.**

S1719: The smartwatch 3-101 detects an operation of playing the music on the electronic device 3-300.

In a possible implementation, the smartwatch 3-101 previously controls, through the earphones 3-102, the electronic device 3-300 to play the music. The smartwatch 3-101 may display a control for controlling the music played by the electronic device 3-300. For the control, refer to the music control 3-1413 shown in FIG. 57B.

For the operation of playing the music on the electronic device 3-300, refer to the operation shown in FIG. 57B, or refer to the operation shown in FIG. 58A.

S1720: The smartwatch 3-101 determines whether the earphones 3-102 are connected to the electronic device 3-300.

If it is determined that the earphones 3-102 are connected to the electronic device 3-300, the smartwatch 3-101 may perform the following step S1721.

If it is determined that the earphones 3-102 are not connected to the electronic device 3-300, the smartwatch 3-101 may perform the following step S1722.

It should be noted that, that the smartwatch 3-101 determines whether the earphones 3-102 are connected to the electronic device 3-300 may be specifically that the smartwatch 3-101 determines whether at least one earphone in the earphones 3-102 is connected to the electronic device 3-300.

When the at least one earphone in the earphones 3-102 is connected to the electronic device 3-300, the smartwatch 3-101 may perform the following step S1721. When two earphones in the earphones 3-102 are not connected to the electronic device 3-300, the smartwatch 3-101 may perform the following step S1722.

S1721: The smartwatch 3-101 determines whether the earphones 3-102 are in a worn state.

If it is determined that the earphones 3-102 are in the worn state, the smartwatch 3-101 may perform the following step S1724.

If it is determined that the earphones 3-102 are in a not-worn state, the smartwatch 3-101 may perform the following step S1723.

It should be noted that, that the smartwatch 3-101 determines whether the earphones 3-102 are in a worn state may be specifically that the smartwatch 3-101 determines whether at least one earphone in the earphones 3-102 is in the worn state.

When the at least one earphone in the earphones 3-102 is in the worn state, and the earphone in the worn state is connected to the electronic device 3-300, the smartwatch 3-101 may perform the following step S1724. When the two earphones in the earphones 3-102 are in the not-worn state, the smartwatch 3-101 may perform the following step S1723.

S1722: The smartwatch 3-101 indicates the earphones 3-102 to be connected to the electronic device 3-300.

For an implementation method in which the smartwatch 3-101 indicates the earphones 3-102 to be connected to the electronic device 3-300, refer to the descriptions of the scenario shown in FIG. 58B.

S1723: The smartwatch 3-101 sends a music play instruction to the electronic device 3-300 through the earphones 3-102, and the electronic device 3-300 plays the music on the electronic device 3-300 with a sound.

For an implementation method in which the earphones 3-102 play the music on the electronic device 3-300 with a sound, refer to the descriptions of the scenario shown in FIG. 57C.

In a process in which the earphones 3-102 play the music on the electronic device 3-300 with a sound, the earphones 3-102 may perform wearing detection. When it is detected that the earphones 3-102 are taken off, the earphones 3-102 may pause playing of the music, and send a music playing pause message to the smartwatch 3-101 and/or the electronic device 3-300. When it is detected that the earphones 3-102 are worn, the earphones 3-102 may resume music, and send, to the smartwatch 3-101 and/or the electronic device 3-300, a message indicating that the music is resumed.

S1724: The smartwatch 3-101 sends a music play instruction to the electronic device 3-300 through the earphones 3-102, and the earphones 3-102 play the music on the electronic device 3-300 with a sound.

Step S1721, step S1723, and step S1724 may constitute step Q2.

An execution sequence of step S1720 and step S1721 is not limited in embodiments of this application. In a possible implementation, the smartwatch 3-101 may first perform step S1721 and then perform step S1720. Alternatively, the smartwatch 3-101 may simultaneously perform step S1720 and step S1721.

In a possible implementation, the smartwatch 3-101 may not perform step S1721. When determining that the earphones 3-102 are connected to the electronic device 3-300, the smartwatch 3-101 may send the music play instruction to the electronic device 3-300 through the earphones 3-102. Then, the electronic device 3-300 may send audio data of music playing to the earphones 3-102. The earphones 3-102 may determine, based on whether the earphones 3-102 are in the worn state, whether to play the music on the electronic device 3-300 with a sound or pause playing of the music on the electronic device 3-300.

In a possible implementation, when performing step S1720, the smartwatch 3-101 determines that the earphones 3-102 are connected to the electronic device 3-300. In this case, the earphones 3-102 are not connected to the electronic device 3-200. The electronic device 3-200 may play music on the electronic device 3-200 with a sound through an audio playing apparatus on the electronic device 3-200 according to an instruction for playing music by the smartwatch 3-101 (refer to step S1717). The earphones 3-102 may play the music on the electronic device 3-300 with a sound.

S1725: The smartwatch 3-101 may determine whether the earphones 3-102 are successfully connected to the electronic device 3-300.

The earphones 3-102 may establish a communication connection to the electronic device 3-300 based on an indication of the smartwatch 3-101 for establishing the communication connection. The smartwatch 3-101 may determine whether the earphones 3-102 are successfully connected to the electronic device 3-300.

If it is determined that the earphones 3-102 are successfully connected to the electronic device 3-300, the smartwatch 3-101 may perform step Q2.

In a possible implementation, when the smartwatch 3-101 determines, when performing step S1725, that the earphones 3-102 are not connected to the electronic device 3-300, the earphones 3-102 may be connected to the electronic device 3-200. The earphones 3-102 may be playing the music on the electronic device 3-200 with a sound (refer to step S1716). When the earphones 3-102 successfully establish the communication connection to the electronic device 3-300 based on the indication of the smartwatch 3-101, the earphones 3-102 may be disconnected from the electronic device 3-200. Then, the earphones 3-102 may play the music on the electronic device 3-300 with a sound. After the earphones 3-102 are disconnected from the electronic device 3-200, the electronic device 3-200 may pause playing of the music or play the music on the electronic device 3-200 through the audio playing apparatus on the electronic device 3-200. In this way, a connection relationship among the smartwatch 3-101, the earphones 3-102, the electronic device 3-200, and the electronic device 3-300 may be switched from the connection relationship of a communication system shown in FIG. 5A to a connection relationship of the communication system shown in FIG. 5B.

If it is determined that the earphones 3-102 fail to be connected to the electronic device 3-300, the smartwatch 3-101 may perform the following step S1726.

S1726: The smartwatch 3-101 prompts the user with a failure of connecting the earphones 3-102 to the electronic device 3-300, and cannot control the electronic device 3-300 to play the music.

In a possible implementation, step S1720 may be performed by the electronic device 3-300. Specifically, after the smartwatch 3-101 detects the operation of playing the music on the electronic device 3-300 (namely, step S1719), the smartwatch 3-101 may send the music play instruction to the electronic device 3-300. When receiving the music play instruction, the electronic device 3-300 may determine whether the earphones 3-102 are connected to the electronic device 3-300.

When determining that the earphones 3-102 are connected to the electronic device 3-300, the electronic device 3-300 may send the audio data of music playing to the earphones 3-102, to indicate the earphones 3-102 to play the music on the electronic device 3-300 with a sound. Alternatively, when determining that the earphones 3-102 are connected to the electronic device 3-300, the electronic device 3-300 may determine whether the earphones 3-102 are in the worn state. When determining that the earphones 3-102 are in the worn state, the electronic device 3-300 may send the audio data of music playing to the earphones 3-102, to indicate the earphones 3-102 to play the music on the electronic device 3-300 with a sound. When determining that the earphones 3-102 are in the not-worn state, the electronic device 3-300 may play the music on the electronic device 3-300 with a sound through an audio playing apparatus on the electronic device 3-300. Alternatively, when determining that the earphones 3-102 are in the not-worn state, the electronic device 3-300 may send, to the smartwatch 3-101, a message indicating that the earphones 3-102 are in the not-worn state. Then, the smartwatch 3-101 may prompt the user to wear the earphones 3-102 to listen to music.

When determining that the earphones 3-102 are not connected to the electronic device 3-300, the electronic device 3-300 may play the music on the electronic device 3-300 with a sound through an audio playing apparatus on the electronic device 3-300. Alternatively, when determining that the earphones 3-102 are not connected to the electronic device 3-300, the electronic device 3-300 may send, to the smartwatch 3-101, a message indicating that the earphones 3-102 are not connected to the electronic device 3-300. Then, the smartwatch 3-101 may perform step S1722.

It can be learned from the method shown in FIG. 60A and FIG. 60B that the smartwatch 3-101 may be used as a control and management device of the earphones 3-102 to control audio played with a sound by the earphones 3-102. In this way, the user may control, through the smartwatch 3-101, the earphones 3-102 to play audio on a specified device with a sound. According to the foregoing method, a conflict that a plurality of devices preempt the earphones 3-102 can be avoided, and user experience of listening to audio through the earphones 3-102 can be improved.

In some embodiments, the earphones 3-102 may search for surrounding electronic devices, and calculate distances between the surrounding electronic devices and the earphones 3-102. The earphones 3-102 may play, with a sound, audio on an electronic device closest to the earphones 3-102. The electronic devices that can be found by the earphones 3-102 may include an electronic device currently connected to the earphones 3-102 and an electronic device to which the earphones 3-102 currently are not connected but has been connected. For example, both the electronic device 3-200 and the electronic device 3-300 are playing music. When one or two earphones in the earphones 3-102 are in an out state, surrounding electronic devices may be searched for through Bluetooth communication and distances between these electronic devices and the earphones 3-102 may be determined. The earphones 3-102 may calculate the distances between the electronic devices and the earphones 3-102 based on strength of received Bluetooth signals of the surrounding electronic devices. A method in which the earphones 3-102 calculate the distances between the surrounding electronic devices and the earphones 3-102 is not limited in embodiments of this application.

When the earphones 3-102 find that the electronic device 3-200 is an electronic device that is closest to the earphones 3-102 and that is playing music, the earphones 3-102 may be connected to the electronic device 3-200 and play the music on the electronic device 3-200 with a sound.

The user may move in a process of wearing the earphones 3-102. Herein, a scenario in which the user wears the earphones 3-102 and moves from a location close to the electronic device 3-200 to a location close to the electronic device 3-300 is used as an example for description.

As a location of the earphones 3-102 changes, the earphones 3-102 may detect that the electronic device that is closest to the earphones 3-102 and that is playing music changes from the electronic device 3-200 to the electronic device 3-300. Then, the earphones 3-102 may be connected to the electronic device 3-300 and play the music on the electronic device 3-300 with a sound.

In a possible implementation, when the earphones 3-102 are in the worn state, the earphones 3-102 may calculate the distances between the surrounding electronic devices and the earphones 3-102, and play, with a sound, music on an electronic device that is closest to the earphones 3-102 and that is playing music.

In a possible implementation, the smartwatch 3-101 may search for surrounding electronic devices, and calculate distances between the surrounding electronic devices and the smartwatch 3-101. The smartwatch 3-101 may indicate the earphones 3-102 to play, with a sound, music on an electronic device that is closest to the smartwatch 3-101 and that is playing music.

### Call control method

This application provides a call control method. A smartwatch 4-101 may communicate with a plurality of electronic devices. The smartwatch 4-101 may establish a communication connection to an electronic device, and directly communicate with the electronic device to which the communication connection is established. The smartwatch 4-101 may further communicate with one or more electronic devices through earphones 4-102. When the plurality of electronic devices receive incoming calls, the smartwatch 4-101 may provide an incoming call notification and an operation control for answering or declining a call. This helps a user quickly view incoming call information and answer or decline the call. The user may control, through the smartwatch 4-101, a plurality of electronic devices to make or answer calls, and may listen to call audio of each electronic device through the earphones 4-102. According to the call control method provided in this application, the user can conveniently control a plurality of electronic devices to make/answer calls, to improve call experience of the user.

It should be noted that the smartwatch 4-101 may be the wearable device 1 shown in FIG. 1 to FIG. 4. The earphones 4-102 may be an audio apparatus that can be accommodated in the wearable device 1, for example, the earphones 3 shown in FIG. 1 to FIG. 4. The earphones 4-102 may include the first earphone 31 and the second earphone 32 shown in FIG. 4.

Here, an example in which the wearable device is the smartwatch 4-101 and the audio apparatus is the earphones 4-102 is used, and some call control scenarios provided in embodiments of this application are described based on the foregoing device connection manner.

FIG. 61A to FIG. 61E show an example of a call control scenario.

As shown in FIG. 61A, the smartwatch 4-101 is paired with an electronic device 4-200, and a communication connection is established between the smartwatch 4-101 and the electronic device 4-200. A communication connection is established between the smartwatch 4-101 and the earphones 4-102. A communication connection is also established between the electronic device 4-200 and the earphones 4-102. The communication connections between the smartwatch 4-101, the earphones 4-102, and the electronic device 4-200 may be, for example, Bluetooth communication connections. A manner of establishing the communication connections between the smartwatch 4-101, the earphones 4-102, and the electronic device 4-200 is not limited in embodiments of this application. For a manner of establishing a communication connection between every two of the smartwatch 4-101, the earphones 4-102, and the electronic device 4-200, refer to the descriptions in the foregoing embodiments. Details are not described herein again.

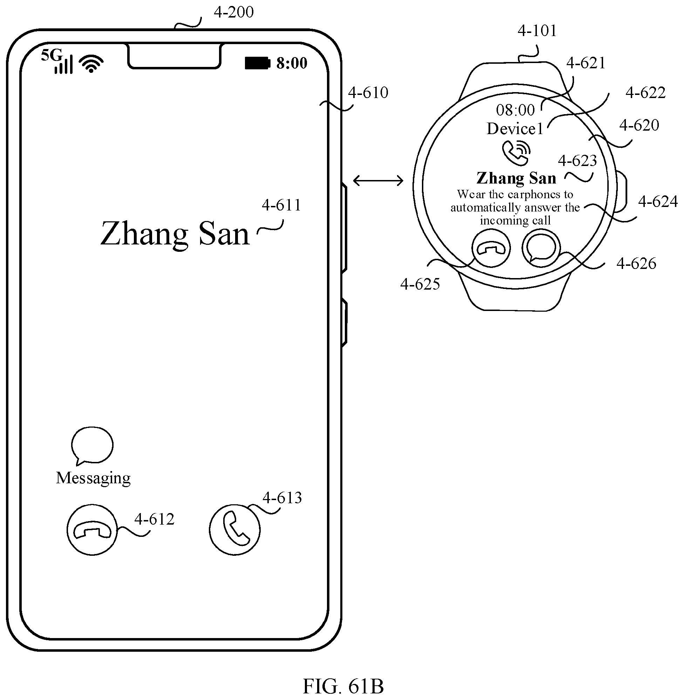

As shown in FIG. 61B, the electronic device 4-200 receives an incoming call. The electronic device 4-200 may display a user interface 4-610. The user interface 4-610 may be an incoming call notification screen of a Phone application in the electronic device 4-200. The user interface 4-610 may include caller information 4-611, a decline control 4-612, and an answer control 4-613.

The caller information 4-611 may indicate a caller who makes a call to the electronic device 4-200. The caller information 4-611 may include information such as a name of the caller, a phone number of the caller, and the like. Content included in the caller information 4-611 is not limited in embodiments of this application. For example, the caller name included in the caller information 4-611 is "Zhang San". This may indicate that the electronic device 4-200 receives an incoming call from a user named "Zhang San".

The decline control 4-612 may be used to decline a call, for example, decline the incoming call from Zhang San.

The answer control 4-613 may be used to answer a call, for example, answer the incoming call from Zhang San.

Because there is a communication connection established between the electronic device 4-200 and the smartwatch 4-101, the electronic device 4-200 may send incoming call information to the smartwatch 4-101 after receiving the incoming call from Zhang San. When receiving the incoming call information sent by the electronic device 4-200, the smartwatch 4-101 may detect whether the earphones 4-102 are in a worn state. In a possible implementation, the earphones 4-102 may perform wearing detection periodically or aperiodically. The smartwatch 4-101 may receive a wearing detection result sent by the earphones 4-102, to determine whether the earphones 4-102 are in the worn state. Optionally, the smartwatch 4-101 may send a wearing detection instruction to the earphones 4-102, to indicate the earphones 4-102 to perform wearing detection. According to the wearing detection instruction, the earphones 4-102 may perform wearing detection, and send a wearing detection result to the smartwatch 4-101. An implementation method in which the earphones 4-102 perform wearing detection is not limited in embodiments of this application.
1. When the electronic device 4-200 receives the incoming call, the user does not wear the earphones 4-102.

When it is detected that the earphones 4-102 are not in the worn state, the smartwatch 4-101 may display, based on the received incoming call information, a user interface 4-620 shown in FIG. 61B.

As shown in FIG. 61B, the user interface 4-620 may include time information 4-621, a device name 4-622, caller information 4-623, an answer prompt 4-624, a decline control 4-625, and a decline by message control 4-626.

The time information 4-621 may indicate current time. For example, the time information 4-621 is 8:00, indicating that the current time is 8:00.

The device name 4-622 may indicate a name of a device that receives the incoming call. For example, when the device name 4-622 is "Device 1", it may indicate that the incoming call is received by a device (namely, the electronic device 4-200) whose name is "Device1". In embodiments of this application, an example in which the electronic device 4-200 is a mobile phone named "Device1" is used for description. The name and a device type of the electronic device 4-200 are not limited in embodiments of this application. The user may know a device that receives the incoming call based on the device name 4-622.

For the caller information 4-623, refer to the caller information 4-611 displayed by the electronic device 4-200 on the user interface 4-610. The user may know who makes the call based on the caller information 4-623.

The answer prompt 4-624 may be used to prompt the user with an operation manner of answering, through the earphones 4-102, the incoming call received by the electronic device 4-200. For example, because the earphones 4-102 are currently in the not-worn state, content of the answer prompt 4-624 may include "Wear the earphones to automatically answer the incoming call". That is, after wearing the earphones 4-102, the user may answer the incoming call received by the electronic device 4-200.

The decline control 4-625 may be used to trigger the smartwatch 4-101 to decline the incoming call received by the electronic device 4-200. In response to an operation performed on the decline control 4-625, the smartwatch 4-101 may send a call declining instruction to the electronic device 4-200. The electronic device 4-200 may decline the call according to the call declining instruction.

The decline by message control 4-626 may be used to decline a call with a message. The declining a call with a message may be declining the call and replying with preset SMS message content.

The user may answer the incoming call on the electronic device 4-200 based on the answer prompt 4-624 by wearing the earphones 4-102.

When it is detected that the user wears the earphones 4-102 (that is, the earphones 4-102 changes from the not-worn state to the worn state), the smartwatch 4-101 may send a call answering instruction to the electronic device 4-200.

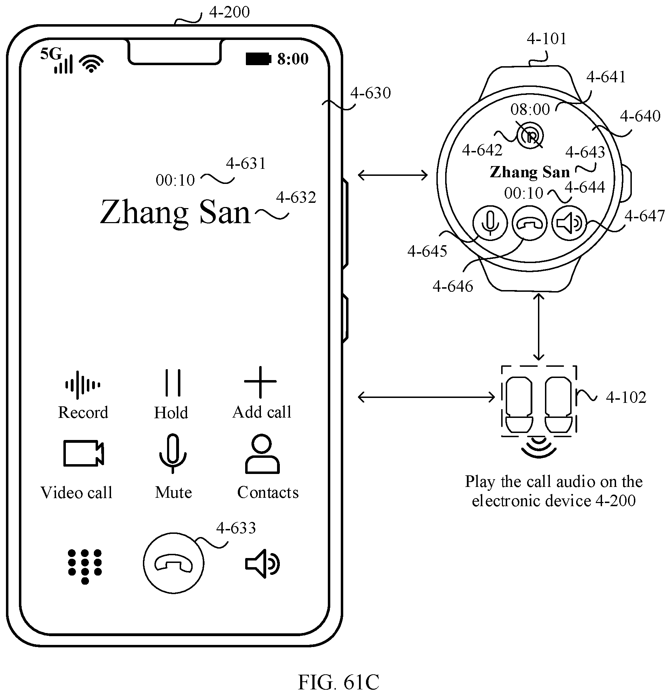

As shown in FIG. 61C, when receiving the call answering instruction of the smartwatch 4-101, the electronic device 4-200 may display a user interface 4-630. The user interface 4-630 may be a call screen of the Phone application in the electronic device 4-200.

The user interface 4-630 may include call duration 4-631, caller information 4-632, and a hang-up control 4-633. The call duration 4-631 may indicate duration of an ongoing call. The caller information 4-632 may indicate information about an object that is in a call with the electronic device 4-200. For example, the caller information 4-632 includes text information "Zhang San", indicating that the object being in the call with the electronic device 4-200 is a user whose name is "Zhang San". The hang-up control 4-632 may be used to hang up the call corresponding to the user interface 4-630. The user interface 4-630 may further include more or fewer controls. This is not limited in embodiments of this application.

After the electronic device 4-200 answers the call, audio data of the call may be transmitted between the electronic device 4-200 and the earphones 4-102. The electronic device 4-200 may send audio data (for example, voice data of the user "Zhang San") from a call peer end to the earphones 4-102. The earphones 4-102 may play, on the electronic device 4-200 with a sound, call audio, namely, the audio data that is of the call peer end and that is in the electronic device 4-200. The earphones 4-102 may collect audio of the user on the electronic device 4-200 side through an audio collection apparatus (for example, a microphone), and send the audio to the electronic device 4-200. Then, the electronic device 4-200 may send the audio data of the user on the electronic device 4-200 side to the call peer end. It can be learned that the user may answer the call on the electronic device 4-200 through the earphones 4-102.

After the electronic device 4-200 answers the call, call control information (for example, control information for hanging up the call) may be transmitted between the electronic device 4-200 and the smartwatch 4-101. The call control information may also be transmitted between the smartwatch 4-101 and the earphones 4-102. The smartwatch 4-101 may display a user interface 4-640 shown in FIG. 61C.

As shown in FIG. 61C, the user interface 4-640 may include time information 4-641, a noise cancellation switching control 4-642, caller information 4-643, call duration 4-644, a mute control 4-645, a hang-up control 4-646, and a volume control 4-647.

The time information 4-641 may indicate current time.

The noise cancellation switching control 4-642 may be used to switch a noise control mode. In response to an operation performed on the noise cancellation switching control 4-642, the smartwatch 4-101 may control the earphones 4-102 to switch among a noise cancellation mode, an awareness mode, and a noise cancellation and awareness disabled mode. The noise cancellation mode may reduce interference caused by an external ambient sound to audio listening performed by the user through the earphones 4-102. When being in the noise cancellation mode, the earphones 4-102 may filter out the external ambient sound to cancel noise. An implementation method in which the earphones 4-102 filters out the external ambient sound in the noise cancellation mode and cancels the noise is not limited in embodiments of this application. The foregoing awareness mode may help the user talk with another person when the user wears the earphones. In the awareness mode, the earphones 4-102 may filter out a background sound from the external ambient sound, but retain a human voice. An implementation method in which the earphones 4-102 filter out the background sound in the external ambient sound in the awareness mode but retain the human voice is not limited in embodiments of this application. That the earphones 4-102 are in the noise cancellation and awareness disabled mode may indicate that the earphones 4-102 disable the noise cancellation mode and the awareness mode.

The smartwatch 4-101 may determine, based on whether the earphones 4-102 are in the noise cancellation mode, the awareness mode, or the noise cancellation and awareness disabled mode, display content included in the noise cancellation switching control 4-642. This can help the user determine a current state of the earphones 4-102 based on the noise cancellation switching control 4-642.

For example, when the earphones 4-102 is in the noise cancellation mode, the noise cancellation switching control 4-102 may include an icon corresponding to the noise cancellation mode shown in FIG. 61C. When the noise cancellation switching control 4-642 may include the icon corresponding to the noise cancellation mode shown in FIG. 61C, in response to an operation, for example, a tap operation, performed on the noise cancellation switching control 4-642, the smartwatch 4-101 may send, to the earphones 4-102, an instruction for switching to the awareness mode, and change the display content of the noise cancellation switching control 4-642 to an icon corresponding to the awareness mode. The earphones 4-102 may switch to the awareness mode in response to the instruction for switching to the awareness mode.

Further, when the noise cancellation switching control 4-642 includes the icon corresponding to the awareness mode, in response to an operation, for example, a tap operation, performed on the noise cancellation switching control 4-642, the smartwatch 4-101 may send, to the earphones 4-102, an instruction for switching to the noise cancellation and awareness disabled mode, and change the display content of the noise cancellation switching control 4-642 to an icon corresponding to the noise cancellation and awareness disabled mode. The earphones 4-102 may switch to the noise cancellation and awareness disabled mode in response to the instruction for switching to the noise cancellation and awareness disabled mode.

Further, when the noise cancellation switching control 4-642 includes the icon corresponding to the noise cancellation and awareness disabled mode, in response to an operation, for example, a tap operation, performed on the noise cancellation switching control 4-642, the smartwatch 4-101 may send, to the earphones, an instruction for switching to the noise cancellation mode, and change the display content of the noise cancellation switching control 4-641 to the icon corresponding to the noise cancellation mode shown in FIG. 61C. The earphones 4-102 may switch to the noise cancellation mode in response to the instruction for switching to the noise cancellation mode.

For the caller information 4-643 and the call duration 4-644, refer to the foregoing descriptions of the caller information 4-632 and the call duration 4-631 on the user interface 4-630, respectively.

The mute control 4-645 may be used to mute a call. In response to an operation, for example, a tap operation, performed on the mute control 4-645, the smartwatch 4-101 may send a mute instruction to the earphones 4-102. When receiving the mute instruction, the earphones 4-102 may stop collecting audio.

The hang-up control 4-646 may be used to hang up a call. In response to an operation performed on the hang-up control 4-646, the smartwatch 4-101 may send a call hang-up instruction to the electronic device 4-200. When receiving the call hang-up instruction, the electronic device 4-200 may hang up the call.

The volume control 4-647 may be used to adjust call volume. In response to an operation of increasing (or decreasing) the call volume through the volume control 4-647, the smartwatch 4-101 may send a volume increase (or decrease) instruction to the earphones 4-102. The earphones 4-102 may increase volume of playing the call audio (or decrease volume of playing the call audio) based on the volume increase (or decrease) instruction.

In some embodiments, when it is detected that one earphone (for example, the left earphone or the right earphone) in the earphones 4-102 changes from the not-worn state to the worn state, and the other earphone (for example, the right earphone or the left earphone) in the earphones 4-102 is still in the not-worn state, the smartwatch 4-101 may also send a call answering instruction to the electronic device 4-200. The electronic device 4-200 may transmit the audio data of the call with the one earphone in the worn state in the earphones 4-102. In a process in which the one earphone in the earphones 4-102 plays the call audio on the electronic device 4-200 with a sound, if the other earphone in the earphones 4-102 changes from the not-worn state to the worn state, the electronic device 4-200 may also transmit the audio data of the call with the other earphone. In other words, after the electronic device 4-200 receives an incoming call, the user may answer the incoming call on the electronic device 4-200 when wearing only one earphone in the earphones 4-102. In a process in which the user answers the call through the one earphone in the earphones 4-102, if the user wears the other earphone in the earphones 4-102, the user may answer the incoming call on the electronic device 4-200 through the two earphones (namely, the left earphone and the right earphone) in the earphones 4-102.

In some embodiments, when receiving an incoming call, the electronic device 4-200 may detect, in response to an operation performed on the answer control 4-613 shown in FIG. 61B, whether the earphones 4-102 is in the worn state.

When it is detected that the earphones 4-102 are in the worn state, the electronic device 4-200 may play the call audio through the earphones 4-102 according to the embodiment shown in FIG. 61C.

When it is detected that the earphones 4-102 are in the not-worn state, the electronic device 4-200 plays audio of the call peer end through an audio playing apparatus (for example, a speaker or an earpiece) of the electronic device 4-200. In addition, the electronic device 4-200 may collect the audio of the user on the electronic device 4-200 side through an audio collection apparatus (for example, a microphone) of the electronic device 4-200. In other words, even if there is a communication connection established between the electronic device 4-200 and the earphones 4-102, the user may directly answer the call through the electronic device 4-200 without wearing the earphones 4-102.

Optionally, after the electronic device 4-200 answers the call in response to the operation performed on the answer control 4-613 shown in FIG. 61B, the electronic device 4-200 may transmit the call control information with the smartwatch 4-101 according to embodiments shown in FIG. 61C. The smartwatch 4-101 may display the user interface 4-640 shown in FIG. 61C. In other words, even if the electronic device 4-200 independently plays the call audio with a sound after answering the call, the smartwatch 4-101 may also display a user interface for controlling a call service on the electronic device 4-200. In this way, the user may control the call service, for example, hanging up a call or adjusting call volume, on the electronic device 4-200 through the smartwatch 4-101.

2. When the electronic device 4-200 receives the incoming call, the user wears the earphones 4-102.

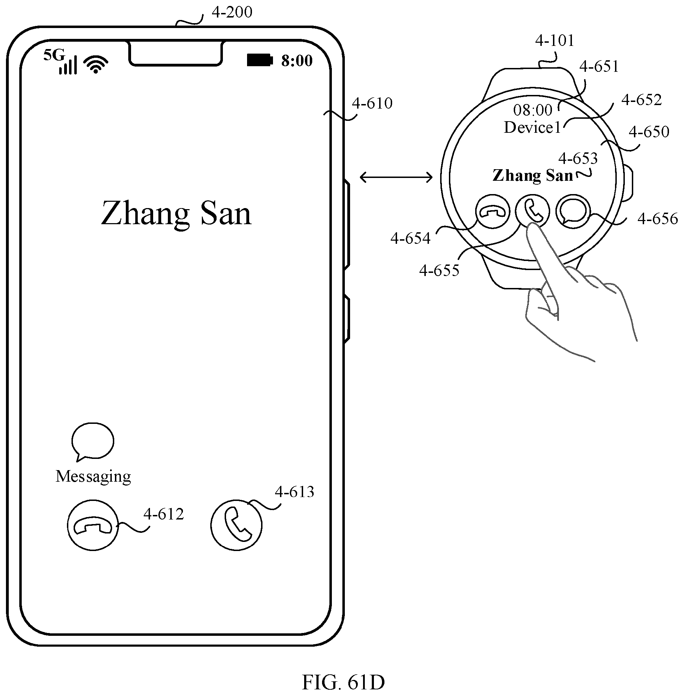

When it is detected that the earphones 4-102 is in the worn state, the smartwatch 4-101 may display, based on the received incoming call information, a user interface 4-650 shown in FIG. 61D.

As shown in FIG. 61D, the electronic device 4-200 may display a user interface 4-610. For the user interface 4-610, refer to the user interface 4-610 shown in FIG. 61B. Details are not described herein again.

The user interface 4-650 displayed by the smartwatch 4-101 may include time information 4-651, a device name 4-622, caller information 4-653, a decline control 4-654, an answer control 4-655, and a decline by message control 4-656.

For the time information 4-651, the device name 4-622, the caller information 4-653, the decline control 4-654, and the decline by message control 4-656, refer to the descriptions of the time information 4-621, the device name 4-622, the caller information 4-623, the decline control 4-625, and the decline by message control 4-626 that are shown in FIG. 61B, respectively. Details are not described herein again.

The answer control 4-655 may be used to answer the incoming call on the electronic device 4-200. In response to an operation, for example, a tap operation, performed on the answer control 4-655, the smartwatch 4-101 may send a call answering instruction to the electronic device 4-200.

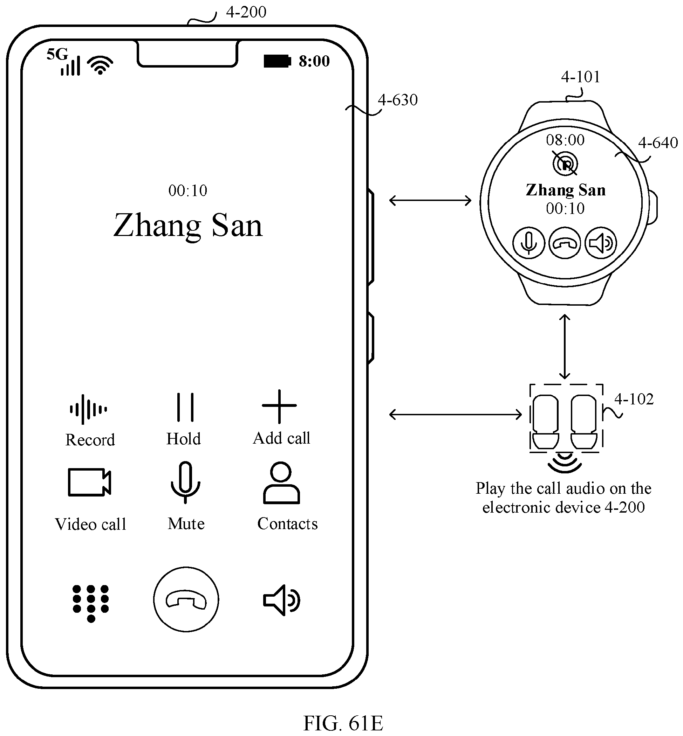

As shown in FIG. 61E, when receiving the call answering instruction of the smartwatch 4-101, the electronic device 4-200 may display a user interface 4-630. For the user interface 4-630, refer to the descriptions in the foregoing embodiments. After the electronic device 4-200 answers the call, the audio data of the call may be transmitted between the electronic device 4-200 and the earphones 4-102. The earphones 4-102 may play the call audio on the electronic device 4-200. The call control information (for example, the control information for hanging up the call) may be transmitted between the electronic device 4-200 and the smartwatch 4-101. The smartwatch 4-101 may display a user interface 4-640 shown in FIG. 61E. For the user interface 4-640, refer to the descriptions in the foregoing embodiments.

In some embodiments, when the incoming call is received, and the earphones 4-102 are in the worn state (one earphone or two earphones in the earphones 4-102 are in the worn state), in response to an operation performed on the answer control 4-613 shown in FIG. 61D, the electronic device 4-200 may play the audio of the call peer end through the earphones 4-102. In other words, when there is a communication connection established between the electronic device 4-200 and the earphones 4-102, and the user wears the earphones 4-102, the user may perform a call answer operation on the electronic device 4-200, and answer the call through the earphones 4-102.

In some embodiments, when the earphones 4-102 are already in the worn state when the electronic device 4-200 receives the incoming call, the user may further perform an operation on the earphones 4-102 to answer the incoming call on the electronic device 4-200. For example, in response to a double-tap operation performed on the earphones 4-102, the earphones 4-102 may send a call answering instruction to the electronic device 4-200. The electronic device 4-200 may display the user interface 4-630 shown in FIG. 61E according to the call answering instruction from the earphones 4-102. In addition, the electronic device 4-200 may further send, to the smartwatch 4-101, information indicating that the call is being answered. The smartwatch 4-101 may display, based on the information indicating that the call is being answered, the user interface 4-640 shown in FIG. 61E. Optionally, in response to the double-tap operation performed on the earphones 4-102, the earphones 4-102 may send the call answering instruction to the electronic device 4-200 through the smartwatch 4-101. In other words, in the scenario shown in FIG. 61D, in addition to answering the call through the answer control 4-613 on the electronic device 4-200 and the answer control 4-655 on the smartwatch 4-101, the user may answer the incoming call on the electronic device 4-200 by double-tapping a preset area of the earphones 4-102. An operation manner of answering the call on the earphones 4-102 is not limited in embodiments of this application.

In some embodiments, when the earphones 4-102 are already in the worn state when the electronic device 4-200 receives the incoming call or plays the call audio through the earphones 4-102, the user may further perform an operation on the earphones 4-102 to decline/hang up the incoming call on the electronic device 4-200. For example, in response to a triple-tap operation performed on the earphones 4-102, the earphones 4-102 may send a call declining/hang-up instruction to the electronic device 4-200. The electronic device 4-200 may decline/hang up the call according to the call declining/hang-up instruction from the earphones 4-102. Optionally, in response to the triple-tap operation performed on the earphones 4-102, the earphones 4-102 may send the call declining/hang-up instruction to the electronic device 4-200 through the smartwatch 4-101. In other words, in the scenario shown in FIG. 61D of receiving the incoming call and the scenario shown in FIG. 61E of answering the call through the earphones 4-102, the user may perform a call declining/hang-up operation on the electronic device 4-200 and the smartwatch 4-101, the incoming call on the electronic device 4-200 may be declined/hung up by triple-tapping a preset area of the earphones 4-102. An operation manner of declining/hanging up the call on the earphones 4-102 is not limited in embodiments of this application.

In some embodiments, after the electronic device 4-200 answers the call, the smartwatch 4-101 may still detect, in real time, whether at least one earphone in the earphones 4-102 is in the worn state. When detecting that the at least one earphone in the earphones 4-102 remains in the worn state, the smartwatch 4-101 may continuously display the user interface 4-640 shown in FIG. 61C. When detecting that the two earphones in the earphones 4-102 are both in the not-worn state, the smartwatch 4-101 may close the user interface 4-640 shown in FIG. 61C. Further, when detecting that the at least one earphone in the earphones 4-102 changes to the worn state, the smartwatch 4-101 may display the user interface 4-640 shown in FIG. 61C again. In other words, in a process in which the user answers the call through the earphones 4-102, if the user takes off the two earphones in the earphones 4-102, the smartwatch 4-101 may close a user interface (for example, the user interface 4-640) for controlling the electronic device 4-200 to answer the call. In this case, the user cannot control the call service on the electronic device 4-200 through the smartwatch 4-101. When the user wears at least one earphone in the earphones 4-102 again, the smartwatch 4-101 may display a user interface (for example, the user interface 4-640) for control the electronic device 4-200 to answer a call. In this case, the user may control the call service on the electronic device 4-200 through the smartwatch 4-101.

Optionally, in some other embodiments, when the electronic device 4-200 answers the call, and there is a communication connection established between the electronic device 4-200 and the earphones 4-102, the smartwatch 4-101 may continuously display the user interface shown in FIG. 61C in a call process. In other words, when the electronic device 4-200 is connected to the earphones 4-102, regardless of whether the user wears the earphones 4-102, the user may control the call service on the electronic device 4-200 through the smartwatch 4-101.

It can be learned from the scenario shown in FIG. 61A to FIG. 61E that, when the electronic device 4-200 is connected to both the smartwatch 4-101 and the earphones 4-102, the user may control the call on the electronic device 4-200 through the smartwatch 4-101 and the earphones 4-102. The user may answer or decline/hang up the call on the electronic device 4-200 through the smartwatch 4-101. In addition, the smartwatch 4-101 may provide a corresponding operation manner of answering or declining/hanging up the call for the user based on whether the earphones 4-102 are in the worn state. If the user wears the earphones 4-102, the user may further answer or decline/hang up the call on the electronic device 4-200 through the earphones 4-102. According to the foregoing embodiments, the user can more conveniently control the call on the electronic device 4-200, to improve call experience of the user.

**FIG. 62A to FIG. 62C** **show an example of another call control scenario.**

As shown in FIG. 62A, the smartwatch 4-101 is paired with an electronic device 4-200, and a communication connection is established between the smartwatch 4-101 and the electronic device 4-200. A communication connection is established between the electronic device 4-200 and earphones 4-102. A communication connection between the smartwatch 4-101 and the earphones 4-102 is disconnected. The communication connection between the smartwatch 4-101 and the electronic device 4-200 and the communication connection between the electronic device 4-200 and the earphones 4-102 may be, for example, Bluetooth communication connections. A communication connection manner is not limited in embodiments of this application. For a manner in which the smartwatch 4-101 establishes the communication connection to the electronic device 4-200 and a manner in which the electronic device 4-200 establishes the communication connection to the earphones 4-102, refer to the descriptions in the foregoing embodiments. Details are not described herein again.

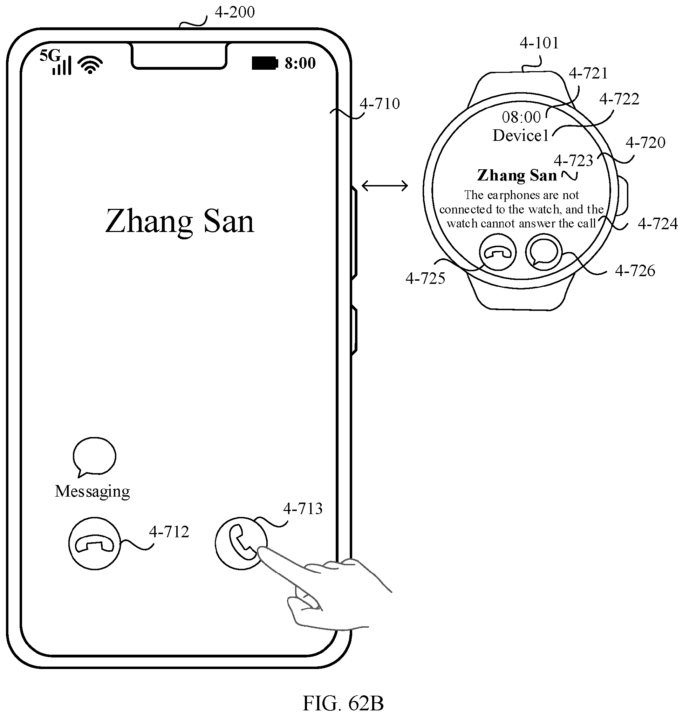

As shown in FIG. 62B, the electronic device 4-200 receives an incoming call. The electronic device 4-200 may display a user interface 4-710. For the user interface 4-710, refer to the user interface 4-610 shown in FIG. 61B. The user interface 4-710 may include a decline control 4-712 and an answer control 4-713. The decline control 4-712 may be used to decline a call. The answer control 4-713 may be used to answer a call.

After receiving the incoming call, the electronic device 4-200 may send incoming call information to the smartwatch 4-101. Because the smartwatch 4-101 currently is not connected to the earphones 4-102, the smartwatch 4-101 may display, based on the received incoming call information, a user interface 4-720 shown in FIG. 62B.

As shown in FIG. 62B, the user interface 4-720 may include time information 4-721, a device name 4-722, caller information 4-723, an earphone disconnection prompt 4-724, a decline control 4-625, and a decline by message control 4-726.

For the time information 4-721, the device name 4-722, the caller information 4-723, the decline control 4-625, and the decline by message control 4-726, refer to the descriptions of the time information 4-621, the device name 4-622, the caller information 4-623, the decline control 4-625, and the decline by message control 4-626 that are on the user interface 4-620 shown in FIG. 61B, respectively. Details are not described herein again.

The earphone disconnection prompt 4-724 may be used to give the user a prompt that the earphones 4-102 are currently not connected to the smartwatch 4-101, and the smartwatch 4-101 cannot control the electronic device 4-200 to answer the call. Content of the earphone disconnection prompt 4-724 may include "The earphones are not connected to the watch, and the watch cannot answer the call". The content of the earphone disconnection prompt 4-724 is not limited in embodiments of this application.

It can be learned from FIG. 62B that, when the smartwatch 4-101 is not connected to the earphones 4-102, the user may learn, through the smartwatch 4-101, that the electronic device 4-200 receives the incoming call, and may decline the call on the electronic device 4-200 through the smartwatch 4-101, but cannot answer the call on the electronic device 4-200 through the smartwatch 4-101. This can avoid a case in which the call is delayed because the user cannot pick up the electronic device 4-200 in a timely manner after the user does not wear the earphones 4-102 and performs a call answer operation on the smartwatch 4-101 to trigger the electronic device 4-200 to answer the call, to improve call experience of the user.

In some embodiments, the user interface 4-720 shown in FIG. 62B may also include an answer control. That is, when the smartwatch 4-101 is not connected to the earphones 4-102, the user may also control, through the smartwatch 4-101, the electronic device 4-200 to answer the call.

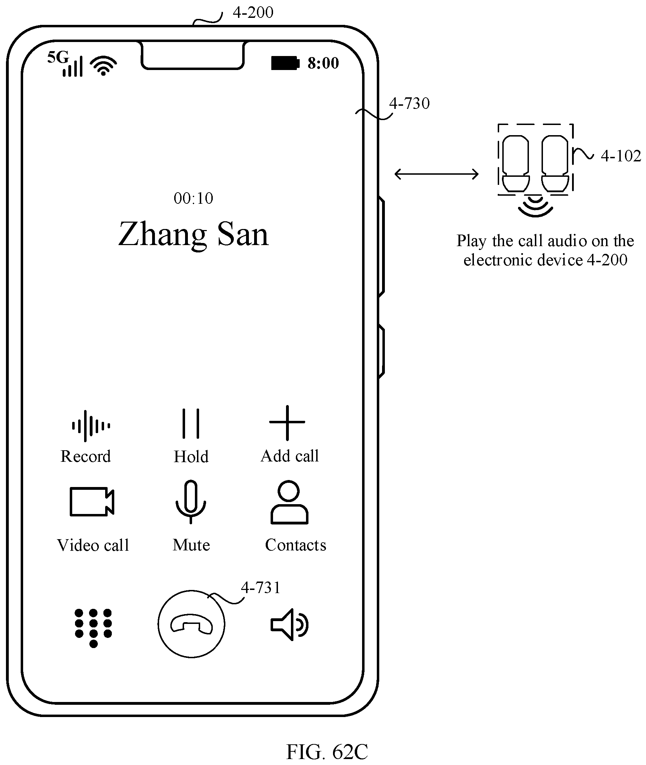

As shown in FIG. 62B, in response to an operation performed on the answer control 4-713 on the electronic device 4-200, the electronic device 4-200 may answer the call, and display a user interface 4-730 shown in FIG. 62C. For the user interface 4-730, refer to the user interface 4-630 shown in FIG. 61C.

As shown in FIG. 62C, in some embodiments, because there is a communication connection established between the electronic device 4-200 and the earphones 4-102, the electronic device 4-200 may transmit audio data of the call with the earphones 4-102 after answering the call. The earphones 4-102 may play, on the electronic device 4-200 with a sound, call audio, namely, the audio data that is of a call peer end and that is in the electronic device 4-200. The earphones 4-102 may further collect audio of the user on the electronic device 4-200 side and send the audio to the electronic device 4-200, so that the electronic device 4-200 may send audio data of the user on the electronic device 4-200 side to the call peer end.

In some embodiments, because there is a communication connection established between the electronic device 4-200 and the earphones 4-102, the electronic device 4-200 may detect, after detecting the operation performed on the answer control 4-713 shown in FIG. 62B, whether the earphones 4-102 are in a worn state. When detecting that one earphone or two earphones in the earphones 4-102 are in the worn state, the electronic device 4-200 may transmit the audio data of the call with the earphones 4-102 after answering the call. When detecting that the two earphones in the earphones 4-102 are both in a not-worn state, the electronic device 4-200 plays the audio of the call peer end through an audio playing apparatus (for example, a speaker or an earpiece) of the electronic device 4-200. In addition, the electronic device 4-200 may collect the audio of the user on the electronic device 4-200 side through an audio collection apparatus (for example, a microphone) of the electronic device 4-200. This can avoid a case in which the user cannot hear the call audio on the electronic device 4-200 because the earphones 4-102 plays the call audio on the electronic device 4-200 with a sound when the electronic device 4-200 is connected to the earphones 4-102 but the user does not wear the earphones and wants to answer the call through the electronic device 4-200, to improve user experience.

**FIG. 63A to FIG. 63E** **show an example of another call control scenario.**

As shown in FIG. 63A, the smartwatch 4-101 is paired with an electronic device 4-200, and a communication connection is established between the smartwatch 4-101 and the electronic device 4-200. A communication connection is established between the smartwatch 4-101 and the earphones 4-102. The electronic device 4-200 and the earphones 4-102 currently are not connected. The communication connection between the smartwatch 4-101 and the electronic device 4-200 and the communication connection between the smartwatch 4-101 and the earphones 4-102 may be, for example, Bluetooth communication connections. A communication connection manner is not limited in embodiments of this application. For a manner in which the smartwatch 4-101 establishes the communication connection to the electronic device 4-200 and a manner in which the smartwatch 4-101 establishes the communication connection to the earphones 4-102, refer to the descriptions in the foregoing embodiments. Details are not described herein again.

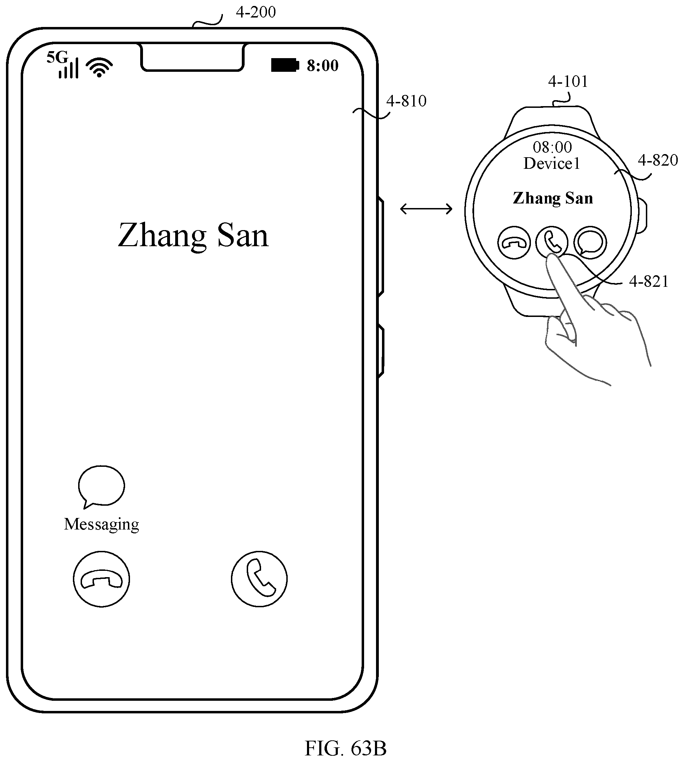

As shown in FIG. 63B, the electronic device 4-200 receives an incoming call. The electronic device 4-200 may display a user interface 4-810. For the user interface 4-810, refer to the user interface 4-610 shown in FIG. 61B. Details are not described herein again.

After receiving the incoming call, the electronic device 4-200 may send incoming call information to the smartwatch 4-101. The smartwatch 4-101 may detect whether the earphones 4-102 is connected to the electronic device 4-200. If it is detected that the earphones 4-102 are connected to the electronic device 4-200, the smartwatch 4-101 may control, based on the scenario shown in FIG. 61B to FIG. 61E, the electronic device 4-200 to answer or decline/hang up the call.

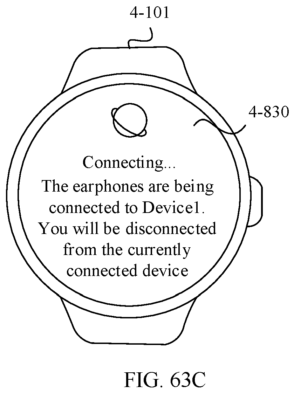

If it is detected that the earphones 4-102 are not connected to the electronic device 4-200, the smartwatch 4-101 may display, based on the received incoming call information, a user interface 4-820 shown in FIG. 63B. For the user interface 4-820, refer to the user interface 4-650 shown in FIG. 61D. The user interface 4-650 may include an answer control 4-821. In response to an operation performed on the answer control 4-821, the smartwatch may display a user interface 4-830 shown in FIG. 63C, and indicate the electronic device 4-200 and the earphones 4-102 to establish a communication connection.

As shown in FIG. 63C, the user interface 4-830 may include a connection prompt. The connection prompt may be used to give the user a prompt that the earphones 4-102 are being connected to the electronic device 4-200, and if there is a communication connection established between the earphones 4-102 and another electronic device than the smartwatch 4-101, the connection between the earphones 4-102 and the electronic device 4-200 causes the communication connection between the earphones 4-102 and the another electronic device to be disconnected. Content of the connection prompt may include "Connecting... The earphones are being connected to Device1. You will be disconnected from the currently connected device". The content of the connection prompt on the user interface 4-830 is not limited in embodiments of this application.

In a possible implementation, because there is a communication connection established between the smartwatch 4-101 and the electronic device 4-200, and there is a communication connection established between the smartwatch 4-101 and the earphones 4-102, the smartwatch 4-101 may send, to the electronic device 4-200, an instruction for establishing a communication connection to the earphones 4-102, and send, to the earphones 4-102, an instruction for establishing a communication connection to the electronic device 4-200. The earphones 4-102 and the electronic device 4-200 may establish the communication connection to each other based on the communication connection establishment instruction. A manner in which the smartwatch 4-101 indicates the electronic device 4-200 and the earphones 4-102 to establish the communication connection is not limited in embodiments of this application.

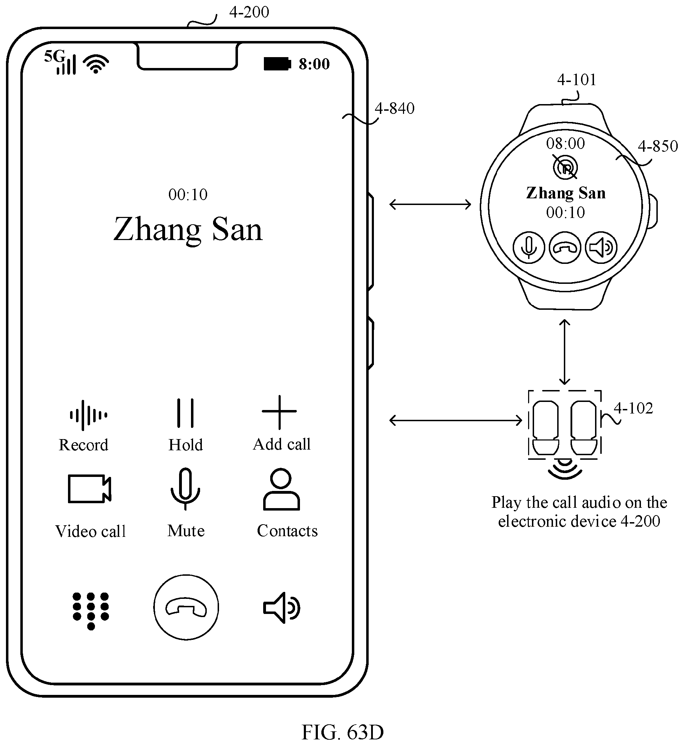

When the electronic device 4-200 successfully establishes the communication connection to the earphones 4-102, the smartwatch 4-101 may control, based on the scenario shown in FIG. 61C, the electronic device 4-200 to answer the call. The smartwatch 4-101 may send a call answering instruction to the electronic device 4-200. When receiving the call answering instruction, the electronic device 4-200 may answer the call, and display a user interface 4-840 shown in FIG. 63D. For the user interface 4-840, refer to the user interface 4-630 shown in FIG. 61C. After the electronic device 4-200 answers the call, the smartwatch 4-101 may display a user interface 4-850 shown in FIG. 63D. For the user interface 4-850, refer to the user interface 4-640 shown in FIG. 61C. The earphones 4-102 may play call audio on the electronic device 4-200.

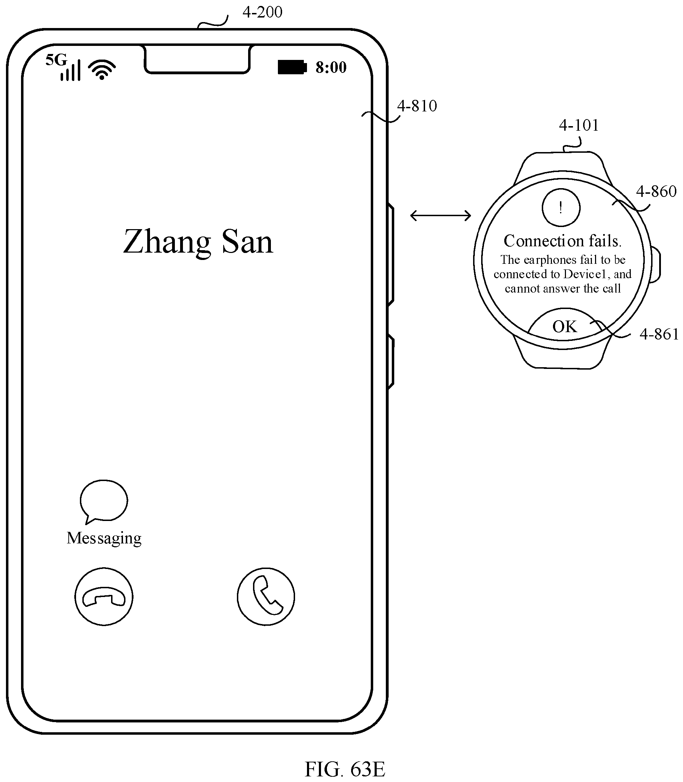

When the electronic device 4-200 fails to establish the communication connection to the earphones 4-102, the smartwatch 4-101 may display a user interface 4-860 shown in FIG. 63E. The user interface 4-860 may include a connection failure prompt. The connection failure prompt may be used to give the user a prompt that the earphones 4-102 fail to be connected to the electronic device 4-200, and the electronic device 4-200 cannot be controlled, through the smartwatch 4-101, to answer the call. Content of the connection failure prompt may include "Connection fails. The earphones fail to be connected to Device1, and cannot answer the call". The user interface 4-860 may further include a confirm control 4-861. In response to an operation performed on the confirm control 4-861, the smartwatch 4-101 may display the user interface 4-820 shown in FIG. 63B again.

As shown in FIG. 63E, when the electronic device 4-200 fails to establish the communication connection to the earphones 4-102, the electronic device 4-200 may continue to maintain a state in which the incoming call waits to be answered, and display the user interface 4-810. The user may perform an operation on the answer control on the user interface 4-810, to answer the call through the electronic device 4-200.

It can be learned from the scenario shown in FIG. 63A to FIG. 63E that, when no communication connection is established between the earphones 4-102 and the electronic device 4-200, the smartwatch 4-101 may give the user a prompt that the electronic device 4-200 receives the incoming call and provides an operation control for answering or declining the call on the electronic device 4-200. When the user controls, through the smartwatch 4-101, the electronic device 4-200 to answer the call, the smartwatch 4-101 may indicate the earphones 4-102 to be connected to the electronic device 4-200, so that the user can answer the call on the electronic device 4-200 through the earphones 4-102, and listen to the call audio. According to the foregoing embodiments, the user does not need to separately perform an operation of connecting the earphones 4-102 to the electronic device 4-200, and the user can conveniently answer the call through the earphones 4-102. This can improve call experience of the user.

In some embodiments, an audio playing apparatus (for example, an earpiece or a speaker) is configured in the smartwatch 4-101. The smartwatch 4-101 may play call audio on a device like the electronic device 4-200.

For example, the electronic device 4-200 receives the incoming call, and may send the incoming call information to the smartwatch 4-101. The smartwatch 4-101 may display an incoming call notification screen (refer to the user interface 4-620 shown in FIG. 61B and the user interface 4-650 shown in FIG. 61D). When detecting an operation of answering the incoming call, the smartwatch 4-101 may detect whether the earphones 4-102 are connected to the electronic device 4-200.

If the earphones 4-102 are connected to the electronic device 4-200, the smartwatch 4-101 may indicate the electronic device 4-200 to answer the incoming call through the earphones 4-102. When the electronic device 4-200 answers the incoming call through the earphones 4-102, the earphones 4-102 may receive and play the call audio of the incoming call on the electronic device 4-200. The earphones 4-102 may further collect the audio and send the audio to the electronic device 4-200, so that the electronic device 4-200 sends the audio collected by the earphones 4-102 to the call peer end.

If the earphones 4-102 are not connected to the electronic device 4-200, the smartwatch 4-101 may indicate the earphones 4-102 to be connected to the electronic device 4-200. After the earphones 4-102 are successfully connected to the electronic device 4-200, the electronic device 4-200 may answer the call through the earphones 4-102. After the earphones 4-102 fail to be connected to the electronic device 4-200, the electronic device 4-200 may play the call audio through an audio playing apparatus on the electronic device 4-200. Alternatively, after the earphones 4-102 fail to be connected to the electronic device 4-200, the smartwatch 4-101 may indicate the electronic device 4-200 to answer the incoming call through the smartwatch 4-101.

Optionally, if the earphones 4-102 are not connected to the electronic device 4-200, after the smartwatch 4-101 indicates the electronic device 4-200 to answer the incoming call, the electronic device 4-200 may play the call audio through the audio playing apparatus on the electronic device 4-200. Alternatively, the smartwatch 4-101 may indicate the electronic device 4-200 to answer the incoming call through the smartwatch 4-101. When the electronic device 4-200 answers the incoming call through the smartwatch 4-101, the smartwatch 4-101 may receive and play the call audio of the incoming call on the electronic device 4-200. The smartwatch 4-101 may further collect the audio and send the audio to the electronic device 4-200, so that the electronic device 4-200 sends the audio collected by the earphones 4-102 to the call peer end.

**FIG. 64A to FIG. 64F** **show an example of another call control scenario.**

As shown in FIG. 64A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 currently are not connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.
1. The smartwatch 4-101 may control a call on the electronic device 4-300 that is not connected to the smartwatch 4-101.

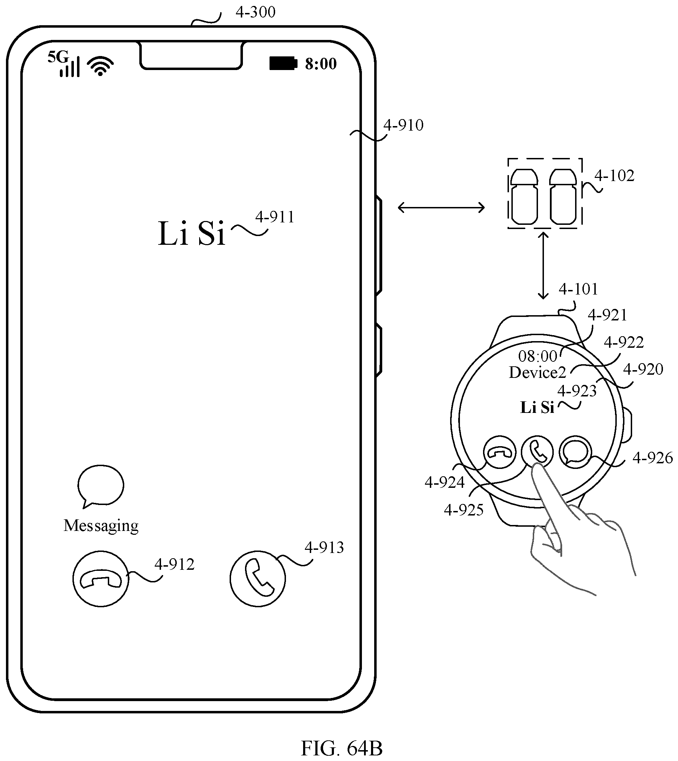

As shown in FIG. 64B, the electronic device 4-300 receives an incoming call. The electronic device 4-300 may display a user interface 4-910. The user interface 4-910 may be an incoming call notification screen of a Phone application in the electronic device 4-300. The user interface 4-910 may include caller information 4-911, a decline control 4-912, and an answer control 4-913.

The caller information 4-911 may indicate a caller who makes a call to the electronic device 4-300. The caller information 4-911 may include information such as a name of the caller, a phone number of the caller, and the like. Content included in the caller information 4-911 is not limited in embodiments of this application. For example, the name of the caller included in the caller information 4-911 is "Li Si". This may indicate that the electronic device 4-300 receives an incoming call from a user named "Li Si".

The decline control 4-912 may be used to decline a call, for example, decline the incoming call from Li Si.

The answer control 4-913 may be used to answer a call, for example, answer the incoming call from Li Si.

After receiving the incoming call from Li Si, the electronic device 4-200 may send incoming call information to the smartwatch 4-101 through the earphones 4-102. When receiving the incoming call information sent by the electronic device 4-200, the smartwatch 4-101 may detect whether the earphones 4-102 are in a worn state. If the earphones 4-102 are in a not-worn state, the smartwatch 4-101 may prompt, based on the scenario shown in FIG. 61B and FIG. 61C, the user to control the incoming call on the electronic device 4-300. If the earphones 4-102 are in the worn state, the smartwatch 4-101 may prompt, based on the scenario shown in FIG. 61D and FIG. 61E, the user to control the incoming call on the electronic device 4-300.

Here, an example in which the smartwatch 4-101 detects that the earphones 4-102 are in the worn state is specifically used for description. When the earphones 4-102 are in the not-worn state, for a method in which the smartwatch 4-101 prompts the user to control the incoming call on the electronic device 4-300, refer to the foregoing descriptions in FIG. 61B and FIG. 61C. Details are not described herein again.

When it is detected that the earphones 4-102 are in the worn state, the smartwatch 4-101 may display, based on the received incoming call information, a user interface 4-920 shown in FIG. 64B.

As shown in FIG. 64B, the user interface 4-920 may include time information 4-921, a device name 4-922, caller information 4-923, a decline control 4-924, an answer control 4-925, and a decline by message control 4-926.

The time information 4-921 may indicate current time.

The device name 4-922 may indicate a name of a device that receives the incoming call. For example, when the device name 4-922 is "Device2", it may indicate that the incoming call is received by a device (namely, the electronic device 4-300) whose name is "Device2". In embodiments of this application, an example in which the electronic device 4-300 is a mobile phone named "Device2" is used for description. The name and a type of the electronic device 4-300 are not limited in embodiments of this application. The user may know a device that receives the incoming call based on the device name 4-922.

For the caller information 4-923, refer to the caller information 4-911 displayed by the electronic device 4-300 on the user interface 4-910.

The decline control 4-924 may be used to trigger the smartwatch 4-101 to control the electronic device 4-300 to decline the call. In response to an operation performed on the decline control 4-924, the smartwatch 4-101 may send a call declining instruction to the electronic device 4-300 through the earphones 4-102. The electronic device 4-300 may decline the received incoming call according to the call declining instruction.

The decline by message control 4-926 may be used to decline a call with a message.

The answer control 4-925 may be used to trigger the smartwatch 4-101 to control the electronic device 4-300 to answer the call. In response to an operation performed on the answer control 4-925, the smartwatch 4-101 may send a call answering instruction to the electronic device 4-300 through the earphones 4-102.

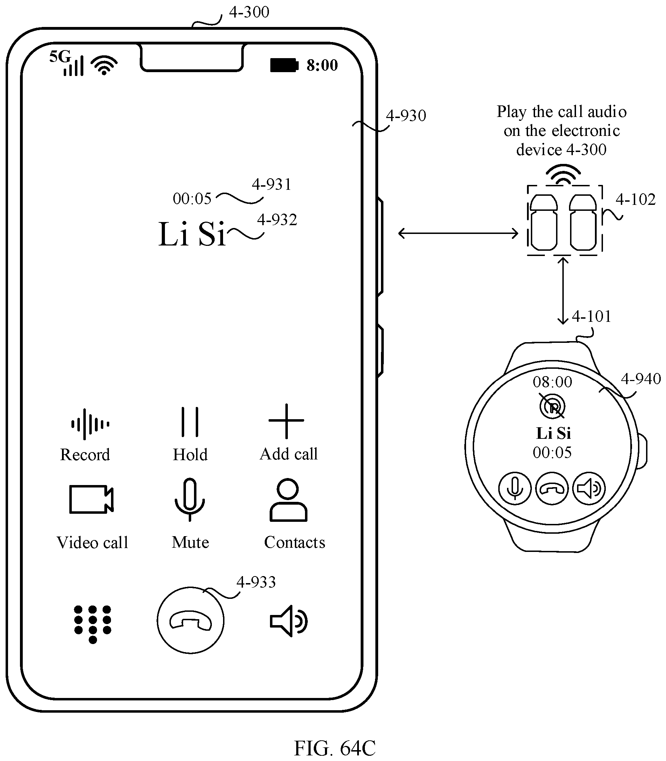

As shown in FIG. 64C, when receiving the call answering instruction of the smartwatch 4-101, the electronic device 4-300 may answer the call, and display a user interface 4-930. The user interface 4-930 may be a call screen of the Phone application in the electronic device 4-300.

The user interface 4-930 may include call duration 4-931, caller information 4-932, and a hang-up control 4-933. The call duration 4-931 may indicate duration of an ongoing call. The caller information 4-932 may indicate information about an object that is in a call with the electronic device 4-300. For example, the caller information 4-932 includes text information "Li Si", indicating that the object being in the call with the electronic device 4-400 is a user whose name is "Li Si". The hang-up control 4-932 may be used to hang up the call corresponding to the user interface 4-930. The user interface 4-930 may further include more or fewer controls. This is not limited in embodiments of this application.

After the electronic device 4-300 answers the call, the audio data of the call may be transmitted between the electronic device 4-300 and the earphones 4-102. The electronic device 4-300 may send audio data (for example, voice data of the user "Li Si") from a call peer end to the earphones 4-102. The earphones 4-102 may play, on the electronic device 4-300 with a sound, call audio, namely, the audio data that is of a call peer end and that is in the electronic device 4-300. The earphones 4-102 may collect audio of the user on the electronic device 4-300 side through an audio collection apparatus (for example, a microphone), and send the audio to the electronic device 4-300. Then, the electronic device 4-300 may send the audio data of the user on the electronic device 4-300 side to the call peer end. It can be learned that the user may answer the call on the electronic device 4-300 through the earphones 4-102.

After the electronic device 4-300 answers the call, call control information may be transmitted between the electronic device 4-300 and the smartwatch 4-101 through the earphone 4-102. The call control information may also be transmitted between the smartwatch 4-101 and the earphones 4-102. The smartwatch 4-101 may display a user interface 4-940 shown in FIG. 64C. For the user interface 4-940, refer to the user interface 4-640 shown in FIG. 61C. Details are not described herein again.

For example, in response to an operation performed on the hang-up control on the user interface 4-940, the smartwatch 4-101 may send a call hang-up instruction to the electronic device 4-300 through the earphones 4-102. When receiving the call hang-up instruction, the electronic device 4-300 may hang up the call.

For another example, in response to an operation that is of increasing volume and that is performed on a volume control on the user interface 4-940, the smartwatch 4-101 may send a volume increase instruction to the earphones 4-102. When receiving the volume increase instruction, the earphones 4-102 may increase volume of playing the call audio.

In some embodiments, in a scenario shown in FIG. 64B in which the electronic device 4-300 receives the incoming call, the earphones 4-102 may send a call answering instruction to the electronic device 4-300 based on a received operation of answering the call (for example, a double-tap operation). In this way, the electronic device 4-300 may answer the call according to the call answering instruction.

In some embodiments, in a scenario shown in FIG. 64C in which the electronic device 4-300 plays the call audio through the earphones 4-102, the earphones 4-102 may further send a call hang-up instruction to the electronic device 4-300 based on a received operation of hanging up the call (for example, a triple-tap operation). In this way, the electronic device 4-300 may hang up the call based on the call hang-up instruction.

It can be learned from the scenario shown in FIG. 64B and FIG. 64C that, in addition to controlling a call on an electronic device (for example, the electronic device 4-200) that directly establishes a communication connection to the smartwatch, the smartwatch 4-101 may control, through the earphones 4-102, a call on an electronic device (for example, the electronic device 4-300) that does not establish a communication connection to the smartwatch. To be specific, the user may view incoming call notifications of a plurality of electronic devices on the smartwatch 4-101, and conveniently control, through the smartwatch 4-101, the plurality of electronic devices to answer or decline/hang up calls. When the user controls, through the smartwatch 4-101, an electronic device to answer a call, the user may listen to call audio on the electronic device through the earphones 4-102.

2. When an incoming call is received in a call answering process, the smartwatch 4-101 may provide a new incoming call notification.

Here, an example in which the electronic device 4-300 receives an incoming call in a call answering process is used for description.

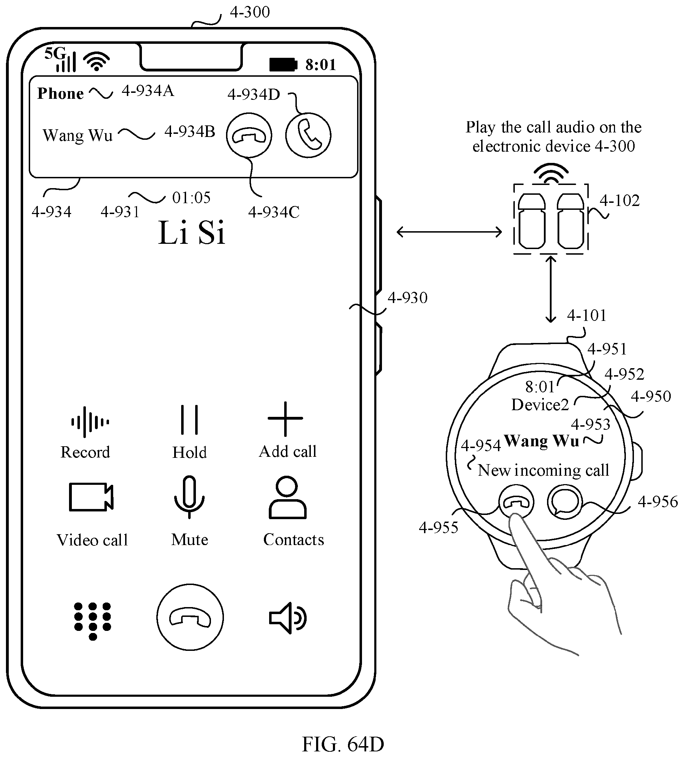

As shown in FIG. 64D, the electronic device 4-300 may display a user interface 4-930. It can be learned from FIG. 64C that the user interface 4-930 may be a call screen in which the electronic device 4-300 answers the call from Li Si. In the process in which the electronic device 4-300 answers the call from Li Si, the electronic device 4-300 receives an incoming call from another user (for example, a user named "Wang Wu"). The electronic device 4-300 may display an incoming call prompt box 4-934 on the user interface 4-930 shown in FIG. 64D. The incoming call prompt box 4-934 may be used to give the user a prompt that the electronic device 4-300 receives a new incoming call.

The incoming call prompt box 4-934 may include an application name 4-934A, caller information 4-934B, a decline control 4-934C, and an answer control 4-934D.

The application name 4-934A may indicate a name of an application that displays the incoming call prompt box 4-934. For example, the application name 4-934A is "Phone". This may indicate that the prompt box 4-934 may be displayed by the Phone application.

The caller information 4-934B may indicate a caller who calls the electronic device 4-300 for the incoming call indicated by the incoming call prompt box 4-934. The caller information 4-934B may include information such as a name of the caller, a phone number of the caller, and the like. Content included in the caller information 4-934B is not limited in embodiments of this application. For example, the caller name included in the caller information 4-934B is "Wang Wu". This may indicate that the electronic device 4-300 receives an incoming call from a user named "Wang Wu".

The decline control 4-934C may be used to decline a call, for example, decline the incoming call from Wang Wu.

The answer control 4-934D may be used to answer a call, for example, answer the incoming call from Wang Wu. In some embodiments, because the electronic device 4-300 is answering the call from Li Si, in response to an operation performed on the answer control 4-934D, the electronic device 4-300 may hang up the call from Li Si, and answer the call from Wang Wu. In some other embodiments, because the electronic device 4-300 is answering the call from Li Si, in response to an operation performed on the answer control 4-934D, the electronic device 4-300 may retain the call from Li Si, answer the call from Wang Wu, and provide a call switching control. The call switching control may help the user switch between the call from Li Si and the call from Wang Wu. An implementation of in which the electronic device 4-300 answers the new incoming call in the call answering process is not limited in embodiments of this application.

When receiving the new incoming call, the electronic device 4-300 may send new incoming call information to the smartwatch 4-101 through the earphones 4-102. When receiving the new incoming call information, the smartwatch 4-101 may display a user interface 4-950 shown in FIG. 64D.

As shown in FIG. 64D, the user interface 4-950 may include time information 4-951, a device name 4-952, caller information 4-953, an incoming call type 4-954, a decline control 4-955, and a decline by message control 4-956.

For the time information 4-951, the device name 4-952, the caller information 4-953, the decline control 4-955, and the decline by message control 4-956, refer to the time information 4-921, the device name 4-922, the caller information 4-923, the decline control 4-924, and the decline by message control 4-926 that are on the user interface 4-920 shown in FIG. 64B.

The incoming call type 4-954 may indicate a type of an incoming call. For example, that the incoming call type 4-954 is a "new incoming call" may mean that the type of the incoming call received by the electronic device 4-300 is a new incoming call. The new incoming call may be an incoming call received by the electronic device 4-300 in a call answering process.

In response to an operation performed on the decline control 4-955, the smartwatch 4-101 may send a new incoming call declining instruction to the electronic device 4-300 through the earphones 4-102. When receiving the new incoming call declining instruction, the electronic device 4-300 may decline the new incoming call (namely, the incoming call from Wang Wu).

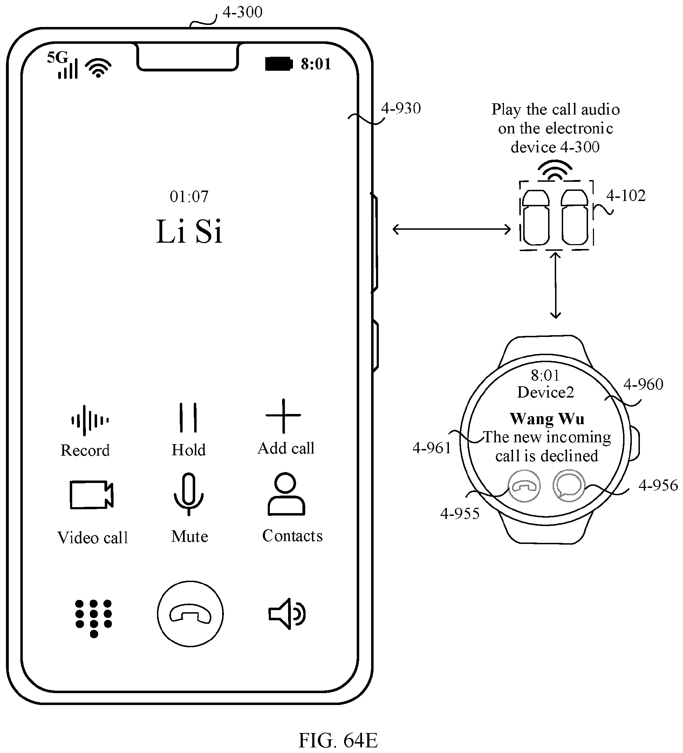

As shown in FIG. 64E, after the new incoming call is declined, the electronic device 4-300 may continue to display the user interface 4-930. In addition, the electronic device 4-300 may send, to the smartwatch 4-101 through the earphones 4-102, a message indicating that the new incoming call is declined. Based on the message indicating that the new incoming call is declined, the smartwatch 4-101 may display a user interface 4-960 shown in FIG. 64E. The user interface 4-960 may include a decline prompt 4-961, a decline control 4-955, and a decline by message control 4-956.

The decline prompt 4-961 may be used to give the user a prompt that the new incoming call is declined. For example, the decline prompt 4-961 may include text information "The new incoming call is declined".

Because the new incoming call in the electronic device 4-300 is declined, the decline control 4-955 and the decline by message control 4-956 on the user interface 4-960 shown in FIG. 64E may be displayed in a display style of unavailable. When the new incoming call in the electronic device 4-300 is not declined, the decline control 4-955 and the decline by message control 4-956 on the user interface 4-950 shown in FIG. 64D may be displayed in a display style of available. For example, the display style of unavailable may be a light-color display style. The display style of available may be a dark display style. Display styles of the decline control 4-955 and the decline by message control 4-956 are not limited in embodiments of this application.

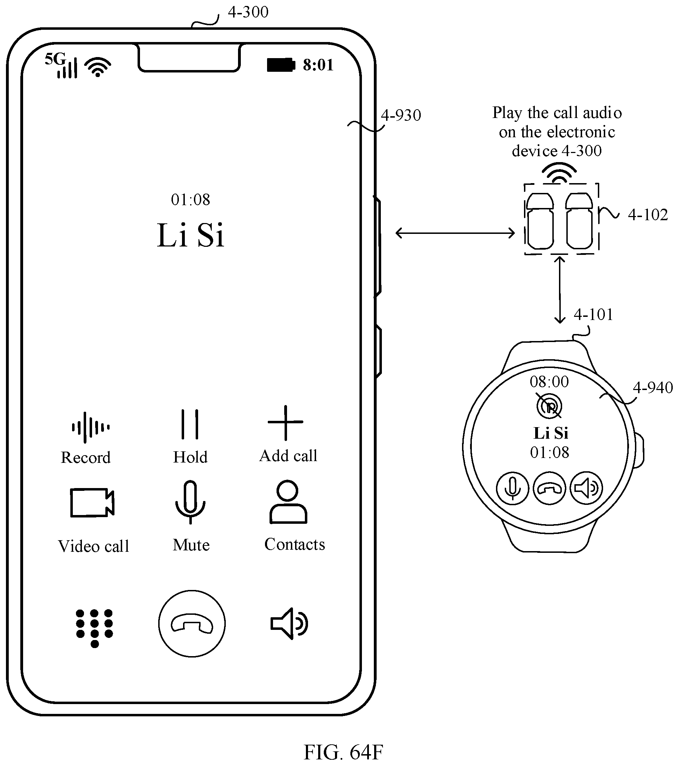

As shown in FIG. 64F, after displaying the user interface 4-960 shown in FIG. 64E for preset duration, the smartwatch 4-101 may display the user interface 4-940 again. For the user interface 4-940, refer to the descriptions in the foregoing embodiments.

It can be learned from the scenario shown in FIG. 64D to FIG. 64F that the smartwatch 4-101 may determine, through the earphones 4-102, that the electronic device 4-300 receives the new incoming call in the call answering process, and give the user a prompt that the electronic device 4-300 receives the new incoming call. In this way, the user may answer or decline, through the smartwatch 4-101, the new incoming call received by the electronic device 4-300. In addition, the user may listen to call audio on the electronic device 4-300 through the earphones 4-102. The call audio may include call audio of any call on the electronic device 4-300 (for example, call audio of the new incoming call and call audio of a call before the new incoming call).

**FIG. 65A to FIG. 65E** **show an example of another call control scenario.**

As shown in FIG. 65A, the electronic device 4-300 is answering a call through the earphones 4-102. The earphones 4-102 may play call audio on the electronic device 4-300 with a sound. The electronic device 4-300 may display a user interface 4-1010. For the user interface 4-1010, refer to the user interface 4-930 shown in FIG. 64C. The electronic device 4-300 and the smartwatch 4-101 may transmit call control information through the earphones 4-102. The smartwatch 4-101 may display a user interface 4-1020. For the user interface 4-1020, refer to the user interface 4-940 shown in FIG. 64C. For a scenario shown in FIG. 65A in which the electronic device 4-300 answers the call, refer to the descriptions of the scenario shown in FIG. 64C. Details are not described herein again.

In addition to establishing a communication connection to the earphones 4-102, the smartwatch 4-101 further establishes a communication connection to the electronic device 4-200. In a process in which the electronic device 4-300 answers the call shown in FIG. 65A, the electronic device 4-200 receives an incoming call.

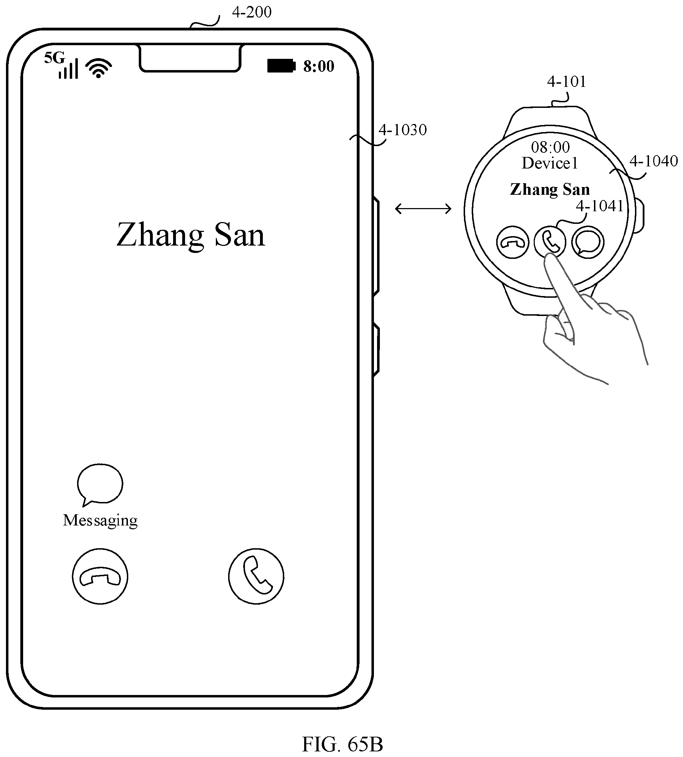

As shown in FIG. 65B, the electronic device 4-200 may display a user interface 4-1030. For the user interface 4-1030, refer to the user interface 4-610 shown in FIG. 61B. When receiving the incoming call, the electronic device 4-200 may send incoming call information to the smartwatch 4-101. The smartwatch 4-101 may display, based on the incoming call information of the electronic device 4-200, a user interface 4-1040 shown in FIG. 61B. For the user interface 4-1040, refer to the user interface 4-650 shown in FIG. 61D.

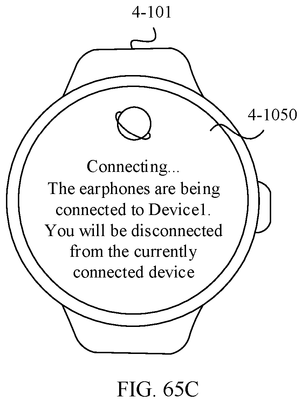

As shown in FIG. 65B, in response to an operation performed on an answer control 4-1041 on the user interface 4-1040, the smartwatch 4-101 may detect whether the earphones 4-102 are connected to the electronic device 4-200. Because the earphones 4-102 are currently connected to the electronic device 4-300, and is playing the call audio on the electronic device 4-300 with a sound, the smartwatch 4-101 may detect that the earphones 4-102 are not connected to the electronic device 4-200. Further, the smartwatch 4-101 may indicate the earphones 4-102 to establish a communication connection to the electronic device 4-200, and may display a user interface 4-1050 shown in FIG. 65C.

The smartwatch 4-101 may send, to the earphones 4-102, an instruction for establishing a communication connection to the electronic device 4-200, and send, to the electronic device 4-200, an instruction for establishing a communication connection to the earphones 4-102. The earphones 4-102 and the electronic device 4-200 may establish the communication connection to each other based on the communication connection establishment instruction.

As shown in FIG. 65C, in a process in which the smartwatch 4-101 indicates the earphones 4-102 to establish the communication connection to the electronic device 4-200, the smartwatch 4-101 may display the user interface 4-1050. The user interface 4-1050 may include a connection prompt. The connection prompt may be used to give the user a prompt that the earphones 4-102 are establishing the communication connection to the electronic device 4-200, and the communication connection between the earphones 4-102 and the electronic device 4-300 is to be disconnected. Content of the connection prompt may include "Connecting... The earphones are being connected to Device1. You will be disconnected from the currently connected device". The content of the connection prompt included on the user interface 4-1050 is not limited in embodiments of this application.

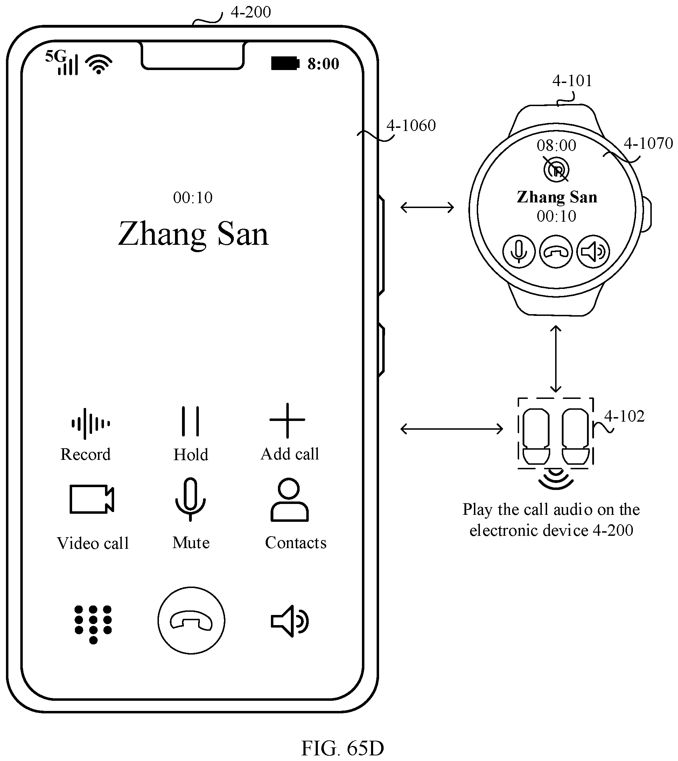

As shown in FIG. 65D, if the earphones 4-102 are successfully connected to the electronic device 4-200, the smartwatch 4-101 may send a call answering instruction to the electronic device 4-200. Then, the electronic device 4-200 may answer the call, and play call audio on the electronic device 4-200 through the earphones 4-102. After answering the call, the electronic device 4-200 may display a user interface 4-1060 shown in FIG. 65D. The electronic device 4-200 may transmit call control information with the smartwatch 4-101. The smartwatch 4-101 may display a user interface 4-1070 shown in FIG. 65D. For the user interface 4-1060 and the user interface 4-1070 shown in FIG. 65D, refer to the user interface 4-840 and the user interface 4-850 shown in FIG. 63D, respectively. Details are not described herein again.

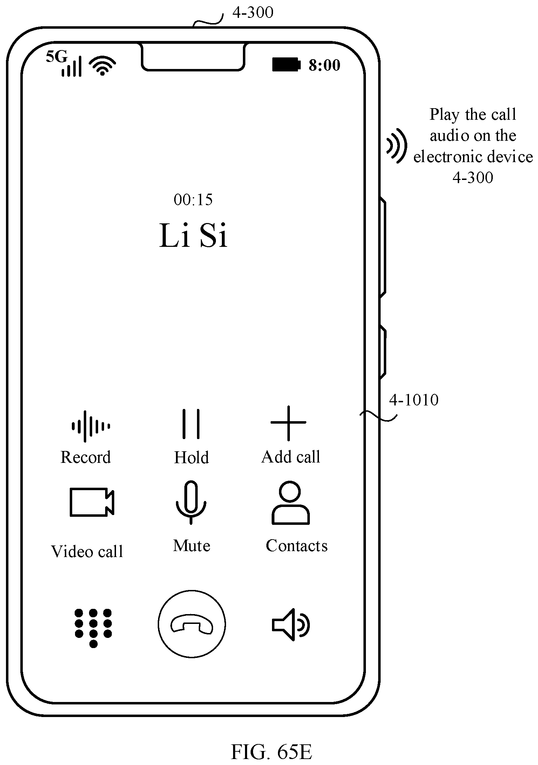

As shown in FIG. 65E, when the earphones 4-102 establish the communication connection to the electronic device 4-200, the earphones 4-102 may disconnect the communication connection to the electronic device 4-300. The call on the electronic device 4-300 is not hung up. The electronic device 4-300 may play the call audio through an audio playing apparatus (for example, a speaker or an earpiece) of the electronic device 4-300. In addition, the electronic device 4-300 may collect audio of the user on the electronic device 4-300 side through an audio collection apparatus (for example, a microphone) of the electronic device 4-300, and send the audio of the user on the electronic device 4-300 side to a device of a call peer end.

For a scenario in which the earphones 4-102 fail to be connected to the electronic device 4-200, refer to the scenario shown in FIG. 63E. Details are not described herein again. In some embodiments, if the earphones 4-102 fail to be connected to the electronic device 4-200, the earphones 4-102 may be connected to the electronic device 4-300 again. In this way, the electronic device 4-300 may continue to play the call audio on the electronic device 4-300 with a sound through the earphones 4-102.

In some embodiments, when the earphones 4-102 play music on the electronic device 4-300 with a sound, after receiving an operation that is shown in FIG. 65B and that is for answering the incoming call on the electronic device 4-200, the smartwatch 4-101 may indicate the earphones 4-102 to establish the communication connection to the electronic device 4-200. In this way, the user can quickly answer the call on the electronic device 4-200 through the earphones 4-102 without manually switching an electronic device connected to the earphones 4-102. When the earphones 4-102 are connected to the electronic device 4-200, the earphones 4-102 may disconnect the communication connection to the electronic device 4-300. When the communication connection between the earphones 4-102 and the electronic device 4-300 is disconnected, the electronic device 4-300 may pause playing of the music. Alternatively, when the communication connection between the earphones 4-102 and the electronic device 4-300 is disconnected, the electronic device 4-300 may play the music with a sound through an audio playing apparatus (for example, a speaker or an earpiece) of the electronic device 4-300.

In some embodiments, when the earphones 4-102 play local music on the smartwatch 4-101 with a sound, after receiving an operation that is shown in FIG. 65B and that is for answering the incoming call on the electronic device 4-200, the smartwatch 4-101 may determine whether the earphones 4-102 is connected to the electronic device 4-200. If the earphones 4-102 are connected to the electronic device 4-200, the smartwatch 4-101 may send the call answering instruction to the electronic device 4-200, and pause the local music on the smartwatch 4-101. After receiving the call answering instruction, the electronic device 4-200 may answer the call. The earphones 4-102 may play the call audio on the electronic device 4-200 with a sound. For details of a scenario in which the electronic device 4-200 answers the call through the earphones 4-102, refer to the scenario shown in FIG. 61C. If the earphones 4-102 currently are not connected to the electronic device 4-200, the smartwatch 4-101 may indicate the earphones 4-102 to establish the communication connection to the electronic device 4-200. After the earphones 4-102 establish the communication connection to the electronic device 4-200, the smartwatch 4-101 may send the call answering instruction to the electronic device 4-200, and pause the local music on the smartwatch 4-101. In this way, the electronic device 4-200 may answer the call through the earphones 4-102. It can be learned that, when the earphones 4-102 do not perform an audio-related service (for example, a music service or a call service) on the electronic device 4-200, if the electronic device 4-200 receives the incoming call, the electronic device 4-200 may preempt the earphones 4-102 through the smartwatch 4-101, so that the earphones 4-102 perform the call service on the electronic device 4-200. That the earphones 4-102 perform the call service on the electronic device 4-200 may include: The earphones 4-102 receive audio data of the call sent by the electronic device 4-200 and play the call audio on the electronic device 4-200 with a sound, and the earphones 4-102 collect the audio data and sends the collected audio data to the electronic device 4-200.

It can be learned from the scenario shown in FIG. 65A to FIG. 65E that the smartwatch 4-101 may be used as a control and management device of the earphones 4-102, to control the earphones 4-102 to perform call services on different electronic devices. The user may control, through the smartwatch 4-101, a plurality of electronic devices to answer or decline/hang up calls, and choose to answer call audio on a specified electronic device through the earphones 4-102. This can improve call experience of the user.

### FIG. 66A to FIG. 66C show an example of another call control scenario.

As shown in FIG. 66A, the smartwatch 4-101 is paired with the electronic device 4-200, and a communication connection is established between the smartwatch 4-101 and the electronic device 4-200. A communication connection is established between the earphones 4-102 and the electronic device 4-300. The earphones 4-102 currently are not connected to the smartwatch 4-101. The communication connection between the smartwatch 4-101 and the electronic device 4-200 and the communication connection between the earphones 4-102 and the electronic device 4-300 may be, for example, Bluetooth communication connections. A communication connection manner is not limited in embodiments of this application. For a manner in which the smartwatch 4-101 establishes the communication connection to the electronic device 4-200, and a manner in which the earphones 4-102 establish the communication connection to the electronic device 4-300, refer to the descriptions in the foregoing embodiments. Details are not described herein again.

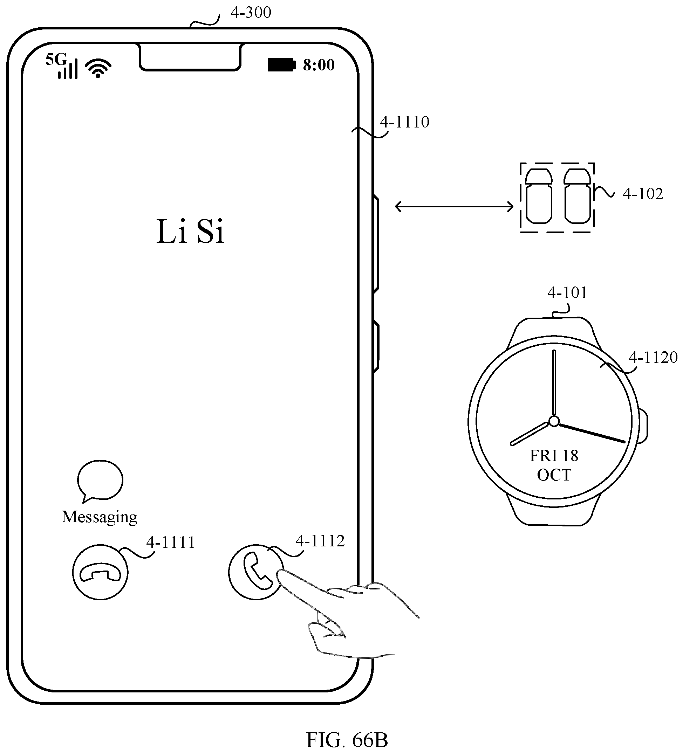

As shown in FIG. 66B, the electronic device 4-300 receives an incoming call. The electronic device 4-300 may display a user interface 4-1110. For the user interface 4-1110, refer to the user interface 4-910 shown in FIG. 64B. The user interface 4-1110 may include a decline control 4-1111 and an answer control 4-1112. The electronic device 4-300 may decline or answer the call in response to an operation performed on the decline control 4-1111 or the answer control 4-1112.

Because there is a communication connection established between the electronic device 4-300 and the earphones 4-102, the electronic device 4-300 may detect whether the earphones 4-102 are in a worn state. If the earphones 4-102 are in the worn state, the electronic device 4-300 may indicate the earphones 4-102 to play an incoming call prompt tone with a sound. In this way, the user learns, based on the incoming call prompt tone played with a sound by the earphones 4-102, that the electronic device 4-300 receives the incoming call. In addition, the earphones 4-102 may indicate the electronic device 4-300 to decline or answer the call in response to an operation performed on the earphones 4-102 to decline or answer the call. If the earphones 4-102 are in a not-worn state, the electronic device 4-300 may play an incoming call prompt tone with a sound through an audio playing apparatus (for example, a speaker or an earpiece) of the electronic device 4-300. In some embodiments, if the electronic device 4-300 is in a silent mode or a vibration mode, the electronic device 4-300 does not play the incoming call prompt tone with a sound.

Because the earphones 4-102 are not connected to the smartwatch 4-101, a user interface displayed by the smartwatch 4-101 when the electronic device 4-300 receives the incoming call may remain unchanged. For example, a user interface displayed by the smartwatch 4-101 before the electronic device 4-300 receives the incoming call is a user interface 4-1120 shown in FIG. 66B. After the electronic device 4-300 receives the incoming call, the smartwatch 4-101 may continue to display the user interface 4-1120. The user interface 4-1120 may be a home screen of the smartwatch 4-101. Alternatively, a screen of the smartwatch 4-101 is in an off state before the electronic device 4-300 receives the incoming call. After the electronic device 4-300 receives the incoming call, the smartwatch 4-101 may continue to keep the screen in the off state.

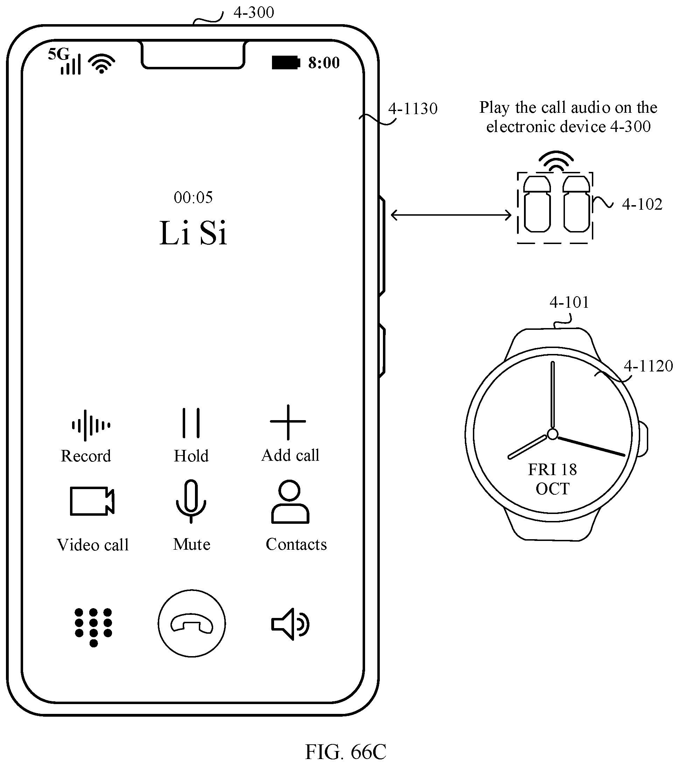

As shown in FIG. 66C, in response to the operation performed on the answer control 4-1112 shown in FIG. 66B, the electronic device 4-300 may answer the call. Audio data of the call may be transmitted between the electronic device 4-300 and the earphones 4-102. The earphones 4-102 may play call audio on the electronic device 4-200. In other words, the user may answer the call on the electronic device 4-300 through the earphones 4-102. The smartwatch 4-101 may continue to display the user interface 4-1120.

It can be learned from the scenario shown in FIG. 66A to FIG. 66C that the smartwatch 4-101 may control, through the earphones 4-102, a call service on an electronic device that is not connected to the smartwatch 4-101. If the communication connection between the smartwatch 4-101 and the earphones 4-102 is disconnected, the user cannot learn, through the smartwatch 4-101, whether the electronic device that is not connected to the smartwatch 4-101 receives an incoming call, and control, on the smartwatch 4-101, the call service on the electronic device that is not connected to the smartwatch 4-101.

**FIG. 67A to FIG. 67K** **show an example of another call control scenario.**

As shown in FIG. 67A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 currently are not connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.
1. The earphones 4-102 establish a communication connection to the electronic device 4-300 before being placed in a compartment, and the earphones 4-102 may be reconnected to the electronic device 4-300 after being removed from the compartment.

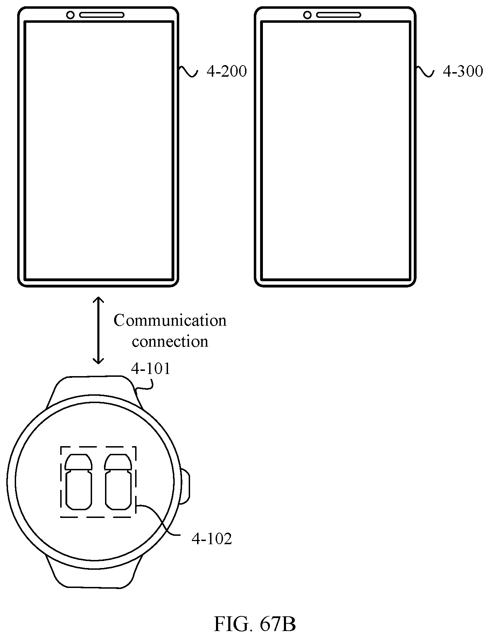

As shown in FIG. 67B, after the earphones 4-102 are placed in an earphone slot in a watch body of the smartwatch 4-101 (that is, the earphones 4-102 are placed in the compartment), the communication connection between the earphones 4-102 and the electronic device 4-300 is disconnected. When the communication connection between the earphones 4-102 and the electronic device 4-300 is disconnected, the smartwatch 4-101 cannot communicate with the electronic device 4-300. In this case, the user cannot control a call service on the electronic device 4-300 through the smartwatch 4-101.

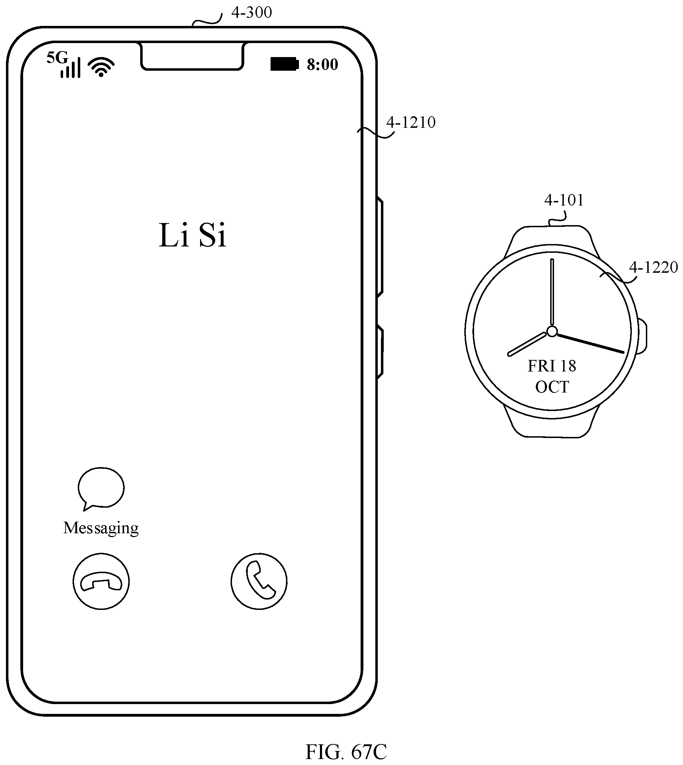

As shown in FIG. 67C, the electronic device 4-300 receives an incoming call. The electronic device 4-300 may display a user interface 4-1210. For the user interface 4-1210, refer to the user interface 4-910 shown in FIG. 64B.

When the earphones 4-102 are placed in the compartment, or when the earphones 4-102 are not connected to the electronic device 4-300, a user interface displayed by the smartwatch 4-101 may be the same as a user interface displayed before the electronic device 4-300 receives the incoming call. For example, before the electronic device 4-300 receives the incoming call, the smartwatch 4-101 displays a user interface 4-1220 shown in FIG. 67C. The user interface 4-1220 may be a home screen of the smartwatch 4-101. After the electronic device 4-300 receives the incoming call, the electronic device 4-300 may continue to display the user interface 4-1220.

In some embodiments, when the earphones 4-102 are taken out of the earphone slot in the watch body of the smartwatch 4-101 (that is, the earphones 4-102 are removed from the compartment), the earphones 4-102 may establish the communication connection to the electronic device 4-300 again.

For example, in a scenario shown in FIG. 67C in which the electronic device 4-300 receives the incoming call after the earphones 4-102 are placed in the compartment, the earphones 4-102 may establish the communication connection to the electronic device 4-300 after being removed from the compartment. Then, the electronic device 4-300 may send incoming call information to the smartwatch 4-101 through the earphones 4-102. The smartwatch 4-101 may display a user interface (for example, the user interface 4-920 shown in FIG. 64B) for controlling a call service on the electronic device 4-200. In a possible implementation, after the earphones 4-102 and the electronic device 4-300 are successfully reconnected, the smartwatch 4-101 may send a call answering instruction to the electronic device 4-300 through the earphones 4-102 when detecting that the earphones 4-102 are in a worn state. In this case, after the user takes the earphones 4-102 out of the watch body of the smartwatch 4-101 and wears the earphones 4-102, the user may directly trigger the electronic device 4-300 to answer the call, and listen to call audio through the earphones 4-102. The user may not need to perform another operation of triggering the electronic device 4-300 to answer the call.

In other words, in a scenario in which the electronic device 4-300 receives the incoming call after the earphones are placed in the compartment, the user may open a watch cover of the smartwatch 4-101 to take the earphones 4-102 out. Then, the earphones 4-102 may be automatically reconnected to the electronic device 4-300. The smartwatch 4-101 may receive the incoming call information of the electronic device 4-300 through the earphones 4-102, and provide a user interface for controlling the call on the electronic device 4-300. In this way, after taking the earphones 4-102 out, the user may listen to the call audio through the earphones 4-102. According to the foregoing embodiments, more operation manners of controlling a call service on the electronic device 4-300 can be provided for the user, to improve call experience of the user.

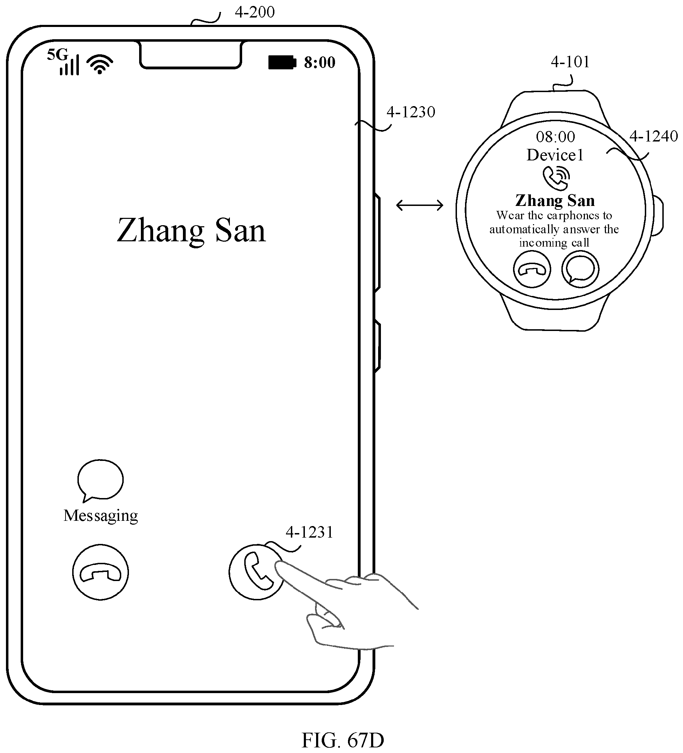

As shown in FIG. 67D, after the earphones 4-102 are placed in the compartment, the electronic device 4-200 receives an incoming call. The electronic device 4-200 may display a user interface 4-1230. For the user interface 1230, refer to the user interface 4-620 shown in FIG. 61B. The electronic device 4-200 may send incoming call information to the smartwatch 4-101.

The earphones 4-102 are currently placed in the earphone slot in the watch body of the smartwatch 4-101. In other words, the earphones 4-102 are currently in a not-worn state. The smartwatch 4-101 may display, based on the incoming call information of the electronic device 4-200, a user interface 4-1240 shown in FIG. 67D. For the user interface 4-1240, refer to the user interface 4-620 shown in FIG. 61B.

The user interface 4-1230 may include an answer control 4-1231. In response to an operation performed on the answer control 4-1231, the electronic device 4-200 may answer the call.

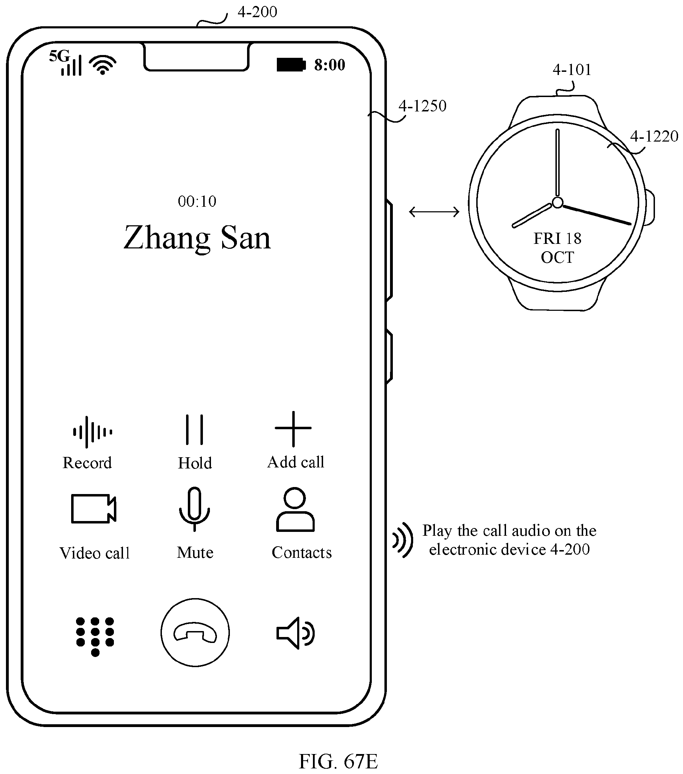

As shown in FIG. 67E, when answering the call, the electronic device 4-200 may display a user interface 4-1250. For the user interface 4-1250, refer to the user interface 4-630 shown in FIG. 61C. The earphones 4-102 are still placed in the watch body of the smartwatch 4-101. The electronic device 4-200 may play call audio of a call peer end through an audio playing apparatus (for example, a speaker or an earpiece) of the electronic device 4-200. The electronic device 4-200 may collect audio of the user on the electronic device 4-200 side through an audio collection apparatus (for example, a microphone) of the electronic device 4-200, and send the audio of the user on the electronic device 4-200 side to an electronic device of the call peer end.

In a possible implementation, after answering the call in response to an operation performed on the answer control 4-1231 shown in FIG. 67D, the electronic device 4-200 may stop sending related data of the call to the smartwatch 4-101. After the electronic device 4-200 answers the call, the smartwatch 4-101 may display the user interface 4-1220 shown in FIG. 67E. In other words, when the electronic device 4-200 independently answers the call, the smartwatch 4-101 does not provide an operation control for controlling the call service on the electronic device 4-200.

It may be understood that the user performs a call answer operation shown in FIG. 67D on the electronic device 4-200, and answers the call through the electronic device 4-200. When the user needs to end the call, the user usually also performs an operation of hanging up the call on the electronic device 4-200. In a scenario shown in FIG. 67E, the smartwatch 4-101 does not provide an operation control for controlling the call service on the electronic device 4-200, and call experience of the user is not affected.

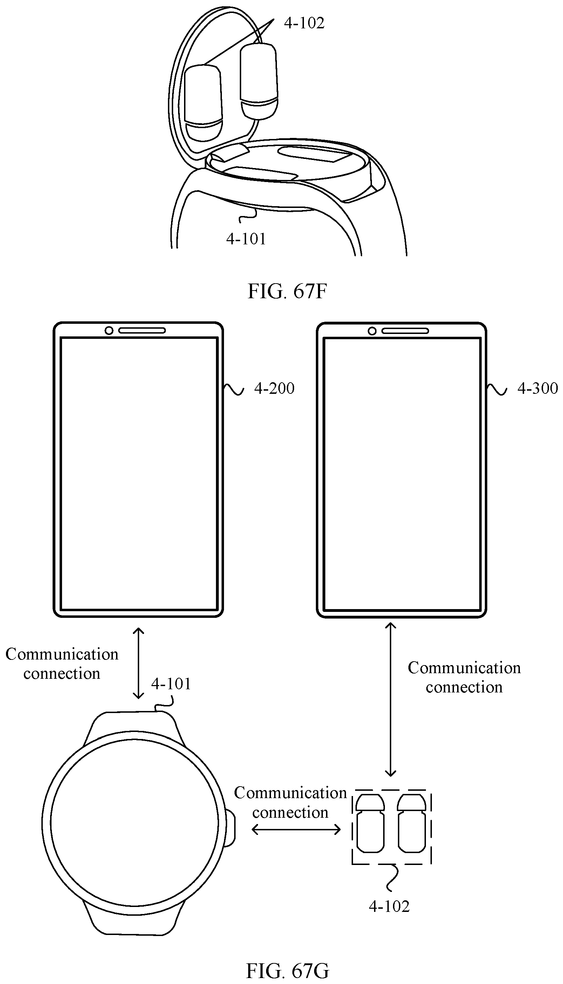

FIG. 67F shows a scenario in which the earphones 4-102 are removed from the compartment.

In some embodiments, after the electronic device 4-200 independently answers the call based on the scenario shown in FIG. 67D and FIG. 67E, or after the electronic device 4-200 decline/hang up the call, if the earphones 4-102 are removed from the compartment, the earphones 4-102 may be automatically reconnected to an electronic device to which the audio apparatus is last connected before the earphones 4-102 are placed in the compartment, namely, the electronic device 4-300.

As shown in FIG. 67G, the earphones 4-102 establish the communication connection to the electronic device 4-300 again. A communication connection is also established between the smartwatch 4-101 and the earphones 4-102. If there is a call service on the electronic device 4-300, the smartwatch 4-101 may control the call service on the electronic device 4-300 through the earphones 4-102.

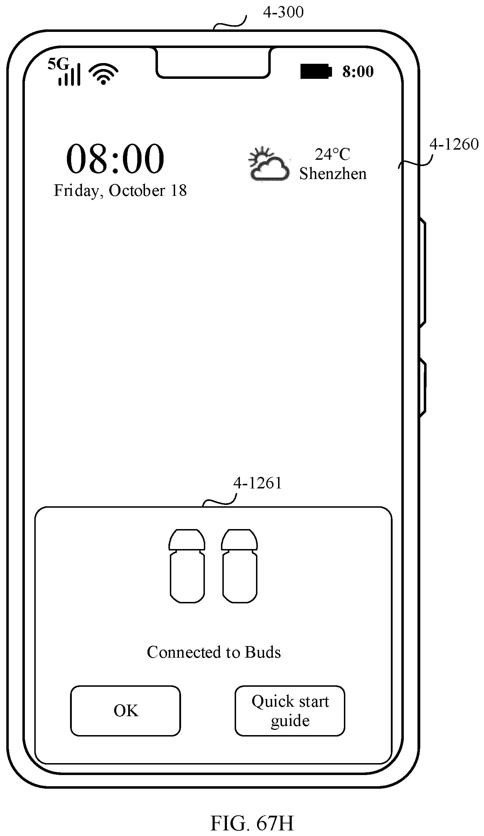

As shown in FIG. 67H, when the earphones 4-102 are connected to the electronic device 4-300 after the earphones 4-102 are removed from the compartment, the electronic device 4-300 may display a user interface 4-1260 shown in FIG. 67H. The user interface 4-1260 may include a connection widget 4-1261. The connection widget 4-1261 may be used to give the user a prompt that the earphones 4-102 have established the communication connection to the electronic device 4-300. Content displayed in the connection widget 4-1261 is not limited in embodiments of this application.

In some embodiments, if the earphones 4-102 are connected to the electronic device 4-200 before being placed in the compartment, the earphones 4-102 may be reconnected to the electronic device 4-200 after being removed from the compartment.

It can be learned from the scenario shown in FIG. 67B to FIG. 67H that, when the earphones 4-102 are connected to an electronic device other than the smartwatch 4-101 before being placed in the compartment, if the smartwatch 4-101 does not indicate the earphones 4-102 to be connected to another electronic device after the earphones 4-102 are removed from the compartment, the earphones 4-102 may be reconnected to the electronic device that is connected before the earphones 4-102 are placed in the compartment. According to the foregoing embodiments, consistency between a connection status of the earphones 4-102 before the earphones 4-102 are placed in the compartment and a connection status of the earphones 4-102 after the earphones 4-102 are removed from the compartment can be maintained, so that after taking the earphones 4-102 out of the watch body of the smartwatch 4-101, the user can quickly use the earphones 4-102 to perform an audio-related service, for example, a music service and a call service, on the electronic device that is connected to the earphones 4-102 before the earphones 4-102 are placed in the compartment.

2. The earphones 4-102 establish the communication connection to the electronic device 4-300 before the earphones 4-102 are placed in the compartment, and the electronic device 4-200 may preempt to be connected to the earphones 4-102 after the earphones 4-102 are removed from the compartment.

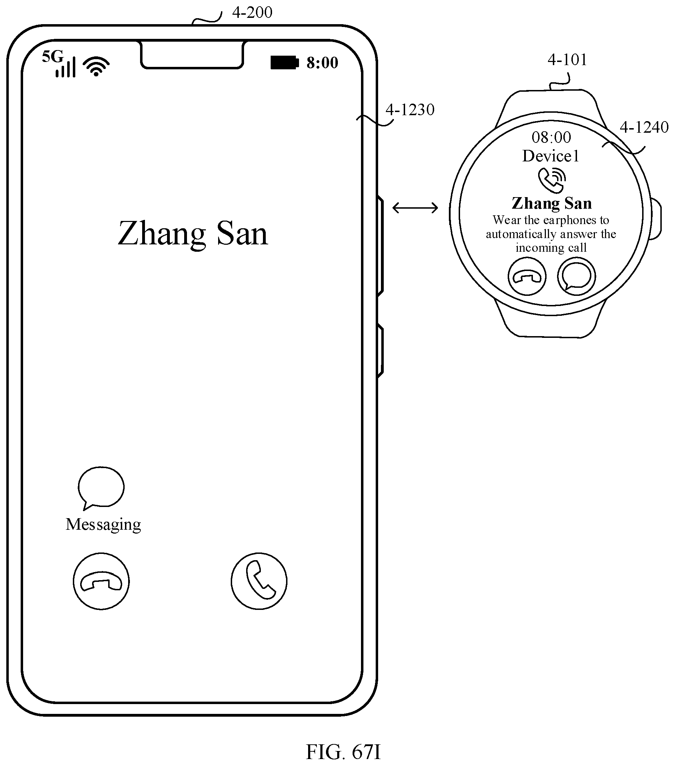

As shown in FIG. 67I, the electronic device 4-200 receives an incoming call, and displays a user interface 4-1230 based on the received incoming call. For the user interface 4-1230, refer to the descriptions in the foregoing embodiments. The electronic device 4-200 may send incoming call information to the smartwatch 4-101 based on the incoming call.

The smartwatch 4-101 may detect that the earphones 4-102 are placed in an earphone slot in a watch body of the smartwatch 4-101. In this case, the earphones 4-102 are in a not-worn state. The smartwatch 4-101 may display, based on the received incoming call information, a user interface 4-1240 shown in FIG. 67I. For the user interface 4-1240, refer to the descriptions in the foregoing embodiments.

The user may take the earphones 4-102 out of the watch body of the smartwatch 4-101 based on content on the user interface 4-1240, to answer the call on the electronic device 4-200.

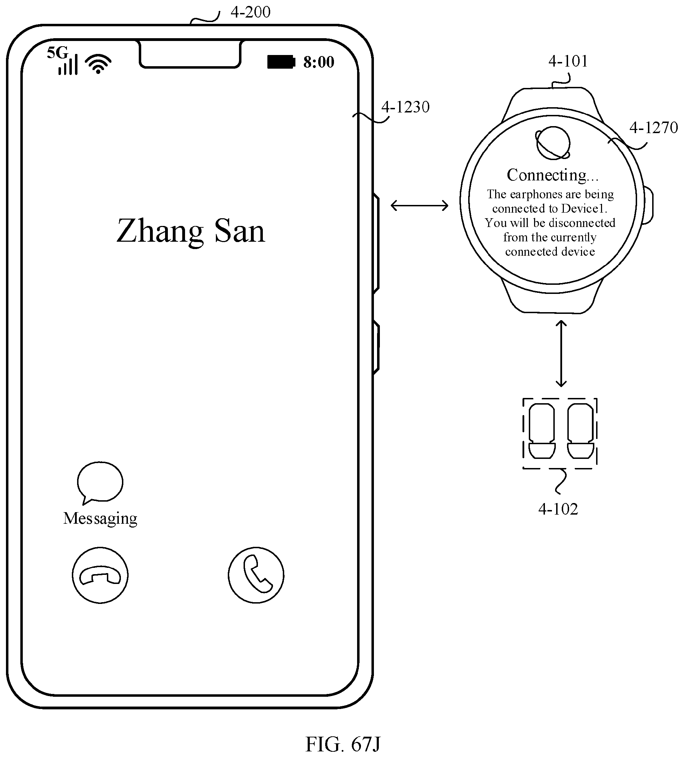

As shown in FIG. 67J, when the electronic device 4-200 receives the incoming call and the call is not answered, the smartwatch 4-101 detects that the earphones 4-102 are removed from the compartment. The smartwatch 4-101 may indicate the earphones 4-102 to establish the communication connection to the electronic device 4-200. The smartwatch 4-101 may send, to the earphones 4-102, an instruction for establishing a communication connection to the electronic device 4-200, and send, to the electronic device 4-200, an instruction for establishing a communication connection to the earphones 4-102. Then, the earphones 4-102 and the electronic device 4-200 may establish the communication connection to each other based on the communication connection establishment instruction.

In a process in which the smartwatch 4-101 indicates the earphones 4-102 to establish the communication connection to the electronic device 4-200, the smartwatch 4-101 may display a user interface 4-1270 shown in FIG. 67J. Content displayed on the user interface 4-1270 may be used to give the user a prompt that the earphones 4-102 are being connected to the electronic device 4-200.

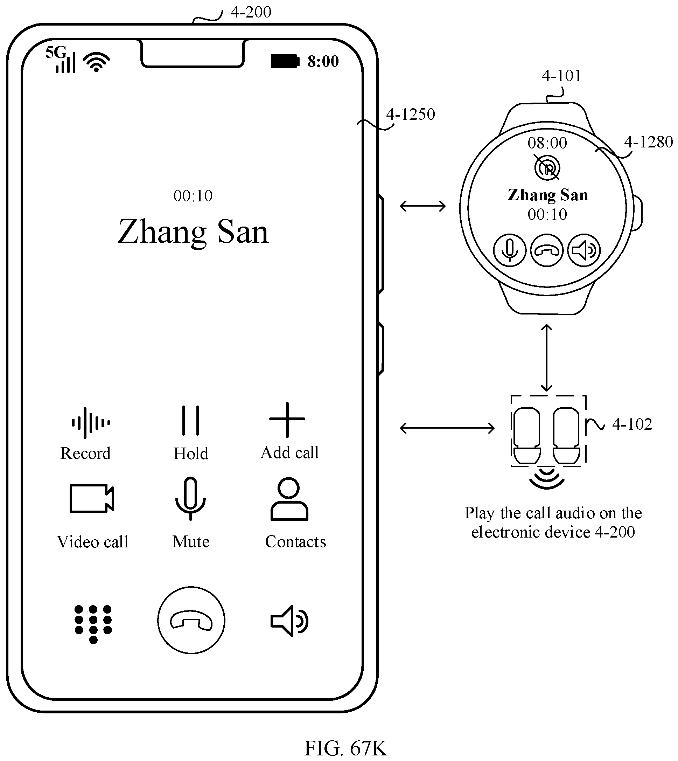

When the electronic device 4-200 is successfully connected to the earphones 4-102, the smartwatch 4-101 may send a call answering instruction to the electronic device 4-200. After answering the call, the electronic device 4-200 may display the user interface 4-1250 shown in FIG. 67K. For the user interface 4-1250, refer to the descriptions in the foregoing embodiments.

As shown in FIG. 67K, after answering the call, the electronic device 4-200 may transmit audio data of the call with the earphones 4-102. The earphones 4-102 may play call audio on the electronic device 4-200 with a sound. The electronic device 4-200 may transmit call control information with the smartwatch 4-101. The smartwatch 4-101 may display a user interface 4-1280. For the user interface 4-1280, refer to the user interface 4-640 shown in FIG. 61C. For a scenario shown in FIG. 67K in which the electronic device 4-200 play the call audio with a sound through the earphones 4-102, and the smartwatch 4-101 may control a call service on the electronic device 4-200, refer to the descriptions of the scenario shown in FIG. 61C. Details are not described herein again.

It can be learned from the scenarios shown in FIG. 67I and FIG. 67K that, regardless of which electronic device is connected to the earphones 4-102 before the earphones 4-102 are placed in the compartment, the earphones 4-102 may be connected to the electronic device 4-200 based on an indication of the smartwatch 4-101 after the earphones 4-102 are removed from the compartment. For example, the earphones 4-102 are connected to the electronic device 4-300 before being placed in the compartment. When the earphones 4-102 are in the compartment (namely, in the earphone slot of the watch body of the smartwatch 4-101), the electronic device 4-200 receives the incoming call. After the earphones 4-102 are removed from the compartment, the smartwatch 4-101 may indicate the earphones 4-102 to be connected to the electronic device 4-200. In this way, the earphones 4-102 are not reconnected to the electronic device 4-300 after being removed from the compartment. The electronic device 4-200 may preempt to be connected to the earphones 4-102 through the smartwatch 4-101.

In some embodiments, the earphones 4-102 are outside the compartment (namely, outside the watch body of the smartwatch 4-101) and is connected to the electronic device 4-300. The electronic device 4-200 may also preempt to be connected to the earphones 4-102 through the smartwatch 4-101.

For example, when the earphones 4-102 are connected to the electronic device 4-300, the smartwatch 4-101 may detect, after receiving the incoming call information of the electronic device 4-200, whether the earphones 4-102 are in a worn state. When it is detected that the earphones 4-102 are in the not-worn state, the smartwatch 4-101 may display the user interface 4-1240 shown in FIG. 67I, to give the user a prompt that the electronic device 4-200 receives the incoming call and with an operation manner of answering the incoming call by the electronic device 4-200. When it is detected that the earphones 4-102 are in the worn state, the smartwatch 4-101 may display the user interface 4-650 shown in FIG. 61D, to give the user a prompt that the electronic device 4-200 receives the incoming call and with the operation manner of answering the incoming call by the electronic device 4-200. When the smartwatch 4-101 detects an operation of answering the call on the electronic device 4-200 (for example, an operation of wearing the earphones by the user, or an operation performed on the answer control 4-655 on the user interface 4-650 shown in FIG. 61D), the smartwatch 4-101 may indicate the earphones 4-102 to be connected to the electronic device 4-200, to help the user answer the call on the electronic device 4-200 through the earphones 4-102. After the call on the electronic device 4-200 is hung up, the earphones 4-102 may maintain the communication connection to the electronic device 4-200. When the earphones 4-102 are connected to the electronic device 4-200, the earphones 4-102 may be disconnected from the electronic device 4-300. It can be learned that the electronic device 4-200 may preempt to be connected to the earphones 4-102 through the smartwatch 4-101, so that the earphones 4-102 are disconnected from the currently connected electronic device 4-300.

According to the foregoing embodiments, the user can conveniently quickly adjust an electronic device connected to the earphones 4-102. In this way, the user can answer calls on different electronic devices through the earphones 4-102, to improve call experience of the user.

**FIG. 68A to FIG. 68J** **show an example of another call control scenario.**

As shown in FIG. 68A, the smartwatch 4-101 may display a user interface 4-1310. The user interface 4-1310 may be displayed by the smartwatch 4-101 in response to an operation performed on a button on a side edge of a watch body of the smartwatch 4-101. The operation of triggering the smartwatch 4-101 to display the user interface 4-1310 is not limited in embodiments of this application.

The user interface 4-1310 may include a setting control 4-1311. In response to an operation performed on the setting control 4-1311, the smartwatch 4-101 may display a user interface 4-1320 shown in FIG. 68B. The user interface 4-1320 may be a user interface of a Settings application in the smartwatch 4-101.

As shown in FIG. 68B, the user interface 4-1320 may include a call setting control 4-1321. In response to an operation performed on the call setting control 4-1321, the smartwatch 4-101 may display a user interface 4-1330 shown in FIG. 68C.
1. An in-compartment hang-up function is enabled.

As shown in FIG. 68C, the user interface 4-1330 may include an in-compartment hang-up switch 4-1331 and an in-compartment hang-up function prompt 4-1332.

The in-compartment hang-up switch 4-1331 may be used to enable or disable the in-compartment hang-up function. The in-compartment hang-up function may be a function of hanging up a call by an electronic device that plays call audio with a sound through the earphones 4-102 after two earphones in the earphones 4-102 are both placed in the watch body of the smartwatch 4-101. The in-compartment hang-up switch 4-1331 is in an enabled display style shown in FIG. 68C, and may indicate that the in-compartment hang-up function is currently in an enabled state.

The in-compartment hang-up function prompt 4-1332 may be used to prompt the user with a method of using the in-compartment hang-up function and an effect achieved by the in-compartment hang-up function. For example, content of the prompt 4-1332 of the function of hanging up the call in the charging case may include "After enabled, hang up the call when the two earphones are placed in the watch body in the call process. If this function is disabled, the audio of the call will be played with a sound from the mobile phone when the two earphones are placed in the watch body". The content of the in-compartment hang-up function prompt 4-1332 is not limited in embodiments of this application.

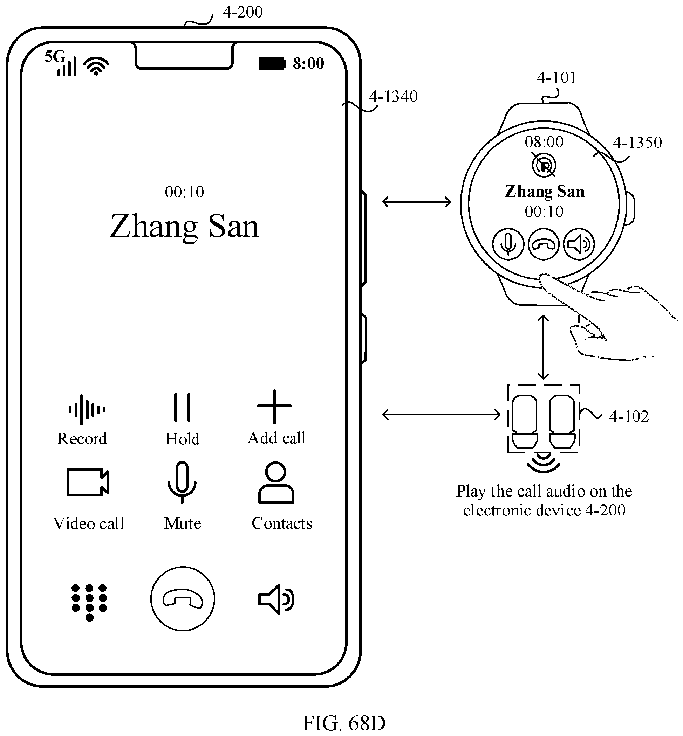

As shown in FIG. 68D, the electronic device 4-200 answers a call. The earphones 4-102 may play call audio on the electronic device 4-200 with a sound. The electronic device 4-200 may display a user interface 4-1340. The smartwatch 4-101 may display a user interface 4-1350. For the user interface 4-1340 and the user interface 4-1350, refer to the user interface 4-630 and the user interface 4-640 shown in FIG. 61C, respectively. For a scenario as shown in FIG. 68D in which the electronic device 4-200 plays the call audio with a sound through the earphones 4-102, and the smartwatch 4-101 may control a call service on the electronic device 4-200, refer to the descriptions of the scenario shown in FIG. 61C. Details are not described herein again.

In response to an operation of opening a watch cover of the smartwatch 4-101, the watch cover of the smartwatch 4-101 may be opened.

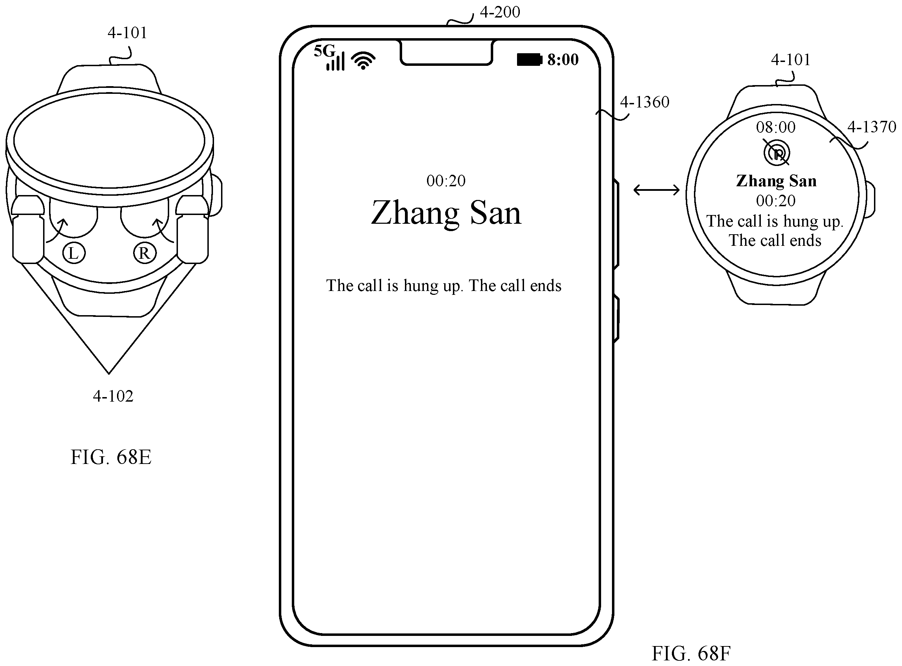

FIG. 68E shows a scenario in which the two earphones in the earphones 4-102 are placed in earphone slots in a watch body of the smartwatch 4-101, namely, a scenario in which the earphones 4-102 are placed in a compartment.

Because the in-compartment hang-up function is currently in the enabled state, after the earphones 4-102 are placed in the compartment, the electronic device 4-200 may hang up the call 4-200. When the call is hung up, the electronic device 4-200 may display a user interface 4-1360 shown in FIG. 68F. The user interface 4-1360 may be used to give the user a prompt that the call is hung up. The electronic device 4-200 may further send, to the smartwatch 4-101, a message indicating that the call is hung up. Based on the message indicating that the call is hung up, the smartwatch 4-101 may display a user interface 4-1370 shown in FIG. 68F. The user interface 4-1370 may be used to give the user a prompt that the call is hung up. Display content on the user interface 4-1360 and the user interface 4-1370 shown in FIG. 68F is not limited in embodiments of this application.

In a possible implementation, when it is detected that the earphones 4-102 are placed in the compartment, the smartwatch 4-101 may send a call hang-up instruction to the electronic device 4-200. The electronic device 4-200 may hang up the call according to the call hang-up instruction. When an electronic device that is not connected to the smartwatch 4-101, for example, the electronic device 4-300, answers a call through the earphones 4-102, the smartwatch 4-101 may control a call service on the electronic device 4-300 through the earphones 4-102. When it is detected that the earphones 4-102 are placed in the compartment, the smartwatch 4-101 may send a call hang-up instruction to the electronic device 4-300 through the earphones 4-102. The electronic device 4-300 may hang up the call according to the call hang-up instruction.

In another possible implementation, after determining that the two earphones in the earphones 4-102 are both placed in compartments, the earphones 4-102 may send a hang-up instruction to the electronic device 4-200. The electronic device 4-200 may hang up the call according to the call hang-up instruction.

An implementation method for detecting an in/out state of the earphones provided in an embodiment of this application is described herein.

A state in which the earphones 4-102 are placed in the earphone slot in the watch body of the smartwatch 4-101 may be referred to as an in state of the earphones 4-102. A state in which the earphones 4-102 are taken out of the earphone slot in the watch body of the smartwatch 4-101 may be referred to as an out state of the earphones 4-102.

Magnets may be disposed on both the earphones 4-102 and the watch cover of the smartwatch 4-101. When the earphones 4-102 are in the in state and the watch cover of the smartwatch 4-101 is closed, after the watch cover of the smartwatch 4-101 is opened, a magnet on the watch cover may attract the earphones 4-102, so that the earphones 4-102 are attracted to the watch cover. A state in which the earphones 4-102 are attracted to the watch cover is an out state.

When the earphones 4-102 are separated from the smartwatch 4-101, the earphones 4-102 are in the out state. After the watch cover of the smartwatch 4-101 is opened, if the earphones 4-102 are close to the watch cover of the smartwatch 4-101, the earphones 4-102 may be attracted to the watch cover. In this case, the earphones 4-102 are still in the out state. Further, when the earphones 4-102 are attracted to the watch cover, after the watch cover of the smartwatch 4-101 is closed, the earphones 4-102 are placed in the earphone slot in the watch body of the smartwatch 4-101. In this case, a state of the earphones 4-102 changes to the in state.

In a possible implementation, a magnetic field sensor may be disposed in a preset area that is in the watch body of the smartwatch 4-101 and that is close to the earphone slot. The magnetic field sensor may be a Hall effect sensor, a magnetometer, or the like. A type of the magnetic field sensor is not limited in embodiments of this application. The smartwatch 4-101 may detect the in state and the out state of the earphones 4-102 through the magnetic field sensor.

Specifically, the magnetic field sensor disposed in the preset area close to the earphone slot may be configured to detect a change of a magnetic flux of an earphone magnet on the earphones 4-102. The magnetic flux that is of the earphone magnet and that is detected by the magnetic field sensor may be directly proportional to a spacing between the magnetic field sensor and the earphone magnet. In a process in which the earphones 4-102 approach the earphone slot, the magnetic flux detected by the magnetic field sensor gradually increases. In a process in which the earphones 4-102 move away from the earphone slot, the magnetic flux detected by the magnetic field sensor gradually decreases.

In other words, when the magnetic flux detected by the magnetic field sensor is greater than a preset threshold, the smartwatch 4-101 may detect that the earphones 4-102 are in the in state. When the magnetic flux detected by the magnetic field sensor is less than the preset threshold, the smartwatch 4-101 may detect that the earphones 4-102 are in the out state.

In another possible implementation, a charging electrode may be disposed on the earphones 4-102. A charging electrode that adapts to the charging electrode on the earphones 4-102 may be disposed in the earphone slot in the watch body of the smartwatch 4-101, to charge the earphones 4-102. The smartwatch 4-101 may detect whether the earphones 4-102 are in the in state or the out state by detecting whether the charging electrode in the earphone slot 4-102 is connected to the charging electrode on the earphones 4-102. That the charging electrode in the earphone slot 4-102 is connected to the charging electrode on the earphones 4-102 may indicate that the earphones 4-102 are in the in state. That the charging electrode in the earphone slot 4-102 is not connected to the charging electrode on the earphones 4-102 may indicate that the earphones 4-102 are in the out state.

In another possible implementation, the earphones 4-102 may also detect whether the earphones 4-102 are in the in state or the out state. A magnetic field sensor may be disposed on the earphones 4-102. A status detection magnet may be disposed in a preset area that is in the watch body of the smartwatch 4-101 and that is close to the earphone slot. The magnetic field sensor on the earphones 4-102 may be configured to detect a change of a magnetic flux of the status detection magnet disposed in the preset area close to the earphone slot. The magnetic flux that is of the status detection magnet and that is detected by the magnetic field sensor may be directly proportional to a spacing between the magnetic field sensor and the status detection magnet. In a process in which the earphones 4-102 approach the earphone slot, the magnetic flux detected by the magnetic field sensor gradually increases. In a process in which the earphones 4-102 move away from the earphone slot, the magnetic flux detected by the magnetic field sensor gradually decreases.

In other words, when the magnetic flux detected by the magnetic field sensor is greater than a preset threshold, the earphones 4-102 may detect that the earphones 4-102 are in the in state. When the magnetic flux detected by the magnetic field sensor is less than the preset threshold, the earphones 4-102 may detect that the earphones 4-102 are in the out state.

Optionally, the earphones 4-102 may further detect whether the earphones 4-102 are in the in state or the out state by detecting whether the charging electrode in the earphone slot 4-102 is connected to the charging electrode on the earphones 4-102.

The foregoing implementation is merely an example of the method for detecting whether the earphones 4-102 are in the in/out state provided in embodiments of this application, and should not constitute a limitation on this application. The smartwatch 4-101 and the earphones 4-102 may alternatively detect the in state and the out state of the earphones 4-102 by using another method.

2. The in-compartment hang-up function is disabled.

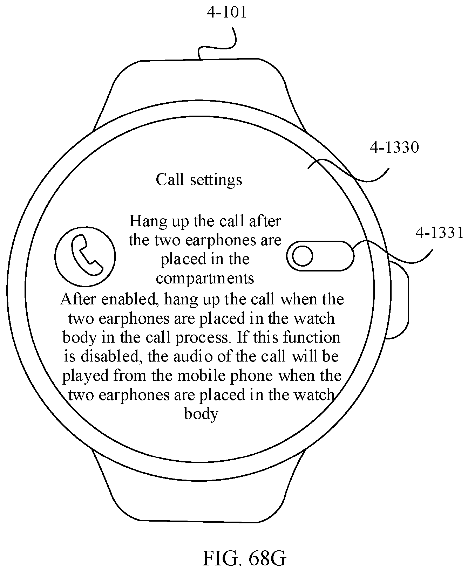

As shown in FIG. 68G, the smartwatch 4-101 may display a user interface 4-1330. For the user interface 4-1330, refer to the descriptions in the foregoing embodiments. The user interface 4-1330 includes the in-compartment hang-up switch 4-1331. The in-compartment hang-up switch 4-1331 is in a disabled display style shown in FIG. 68G, and may indicate that the in-compartment hang-up function is currently in a disabled state. In response to an operation performed on the in-compartment hang-up switch 4-1331 that is in the enabled display style shown in FIG. 68C, the smartwatch 4-101 may change the display style of the in-compartment hang-up switch 4-1331 to the disabled display style shown in FIG. 68G. In response to an operation performed on the in-compartment hang-up switch 4-1331 that is in the disabled display style shown in FIG. 68G, the smartwatch 4-101 may change the display style of the in-compartment hang-up switch 4-1331 to the enabled display style shown in FIG. 68C. Display styles of the in-compartment hang-up switch 4-1331 in the disabled state and the enabled state are not limited in embodiments of this application.

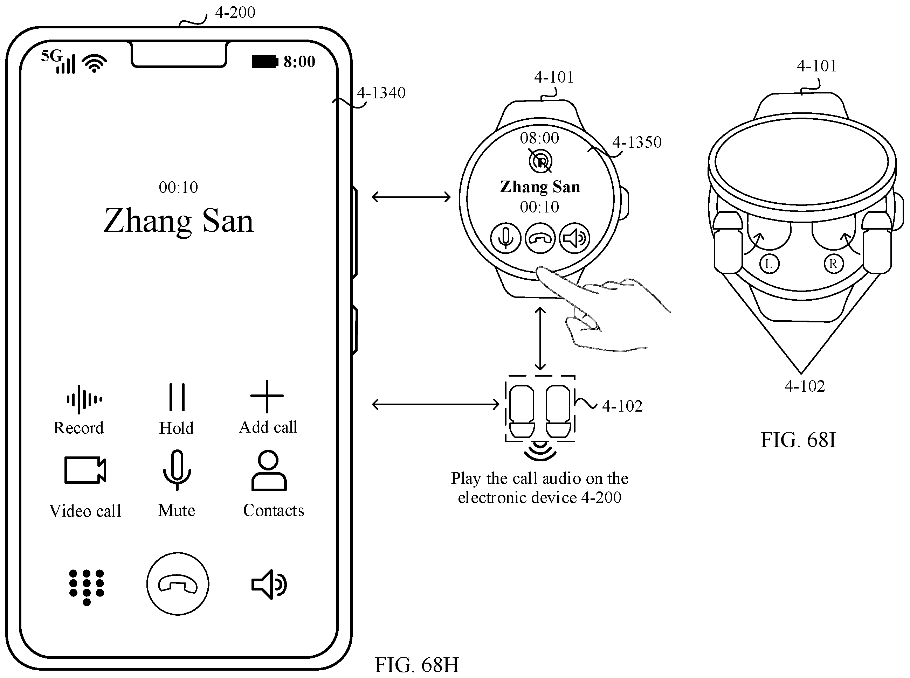

As shown in FIG. 68H, the electronic device 4-200 answers the call. The earphones 4-102 may play the call audio on the electronic device 4-200 with a sound. For the scenario as shown in FIG. 68D in which the electronic device 4-200 plays the call audio with a sound through the earphones 4-102, and the smartwatch 4-101 may control the call service on the electronic device 4-200, refer to the descriptions of the scenario shown in FIG. 61C. Details are not described herein again.

In response to an operation of opening the watch cover of the smartwatch 4-101, the watch cover of the smartwatch 4-101 may be opened.

FIG. 68I shows a scenario in which the two earphones in the earphones 4-102 are placed in the earphone slots in the watch body of the smartwatch 4-101, namely, a scenario in which the earphones 4-102 are placed in the compartment.

Because the in-compartment hang-up function is currently in the disabled state, after the earphones 4-102 are placed in the compartment, a communication connection between the earphones 4-102 and the electronic device 4-200 is disconnected, and a device that plays the call audio on the electronic device 4-200 with a sound may change from the earphones 4-102 to the electronic device 4-200.

As shown in FIG. 68J, the electronic device 4-200 may play call audio that is of a call peer end and that is on the electronic device 4-200 through an audio playing device (for example, a speaker or an earpiece) of the electronic device 4-200. The electronic device 4-200 and the smartwatch 4-101 are still connected. Call control information may continue to be transmitted between the electronic device 4-200 and the smartwatch 4-101. The smartwatch 4-101 may display a user interface 4-1350, so that the user controls the call service of the electronic device 4-200 through the smartwatch 4-101. For the user interface 4-1350, refer to the user interface 4-640 shown in FIG. 61C.

In some embodiments, when an electronic device that is not connected to the smartwatch 4-101, for example, the electronic device 4-300, answers a call through the earphones 4-102, the smartwatch 4-101 may control a call service on the electronic device 4-300 through the earphones 4-102. After the earphones 4-102 are placed in the compartment, a communication connection between the earphones 4-102 and the electronic device 4-300 is disconnected. The electronic device 4-300 may play call audio that is of a call peer end and that is on the electronic device 4-300 through an audio collection apparatus (for example, a speaker or an earpiece) of the electronic device 4-300. In addition, the electronic device 4-300 stops sending call control information to the smartwatch 4-101. The smartwatch 4-101 may close a user interface for controlling the call service on the electronic device 4-300. In other words, after the earphones 4-102 are placed in the compartment, the smartwatch 4-101 does not provide a user interface used to control a call service on an electronic device that is not connected to the smartwatch 4-101 but has been connected to the earphones 4-102.

It can be learned from the scenario shown in FIG. 68A to FIG. 68J that the user may enable or disable the in-compartment hang-up function on the smartwatch 4-101. When the in-compartment hang-up function is enabled, the user may quickly hang up, when answering a call on an electronic device through the earphones 4-102, the call by placing the earphones 4-102 in the earphone slot in the watch body of the smartwatch 4-101. According to the foregoing embodiments, call experience of the user can be improved.

FIG. 69A to FIG. 69E show an example of a scenario in which an electronic device is controlled to make an outgoing call through the smartwatch 4-101.

As shown in FIG. 69A, the smartwatch 4-101 is paired with the electronic device 4-200, and a communication connection is established between the smartwatch 4-101 and the electronic device 4-200. The earphones 4-102 are currently in an in state.

In some embodiments, the electronic device 4-200 may send contact information and call record information in the electronic device 4-200 to the smartwatch 4-101. The contact information may include information such as a contact name and a contact phone number that are stored in a Contact application in the electronic device 4-200. The call record information may include information such as call time of a call record, call duration of the call record, and a user name and a phone number of a call peer end in the call record that is stored in a Phone application in the electronic device 4-200. Specific content of the contact information and the call record information is not limited in embodiments of this application.

When receiving the contact information and the call record information from the electronic device 4-200, the smartwatch 4-101 may display the contact information of the electronic device 4-200 in response to an operation of viewing the contact information of the electronic device 4-200. In response to an operation of selecting a contact from the contact information and making an outgoing call to the contact, the smartwatch 4-101 may indicate the electronic device 4-200 to make the outgoing call to the selected contact. The smartwatch 4-101 may also display the call record information of the electronic device 4-200 in response to an operation of viewing the call record information of the electronic device 4-200. In response to an operation of selecting a call record from the call records and making an outgoing call to a user of a call peer end in the call record, the smartwatch 4-101 may indicate the electronic device 4-200 to make the outgoing call to the user of the call peer end in the selected call record.

Here, a scenario in which a call record is used to make an outgoing call is used as an example for description.

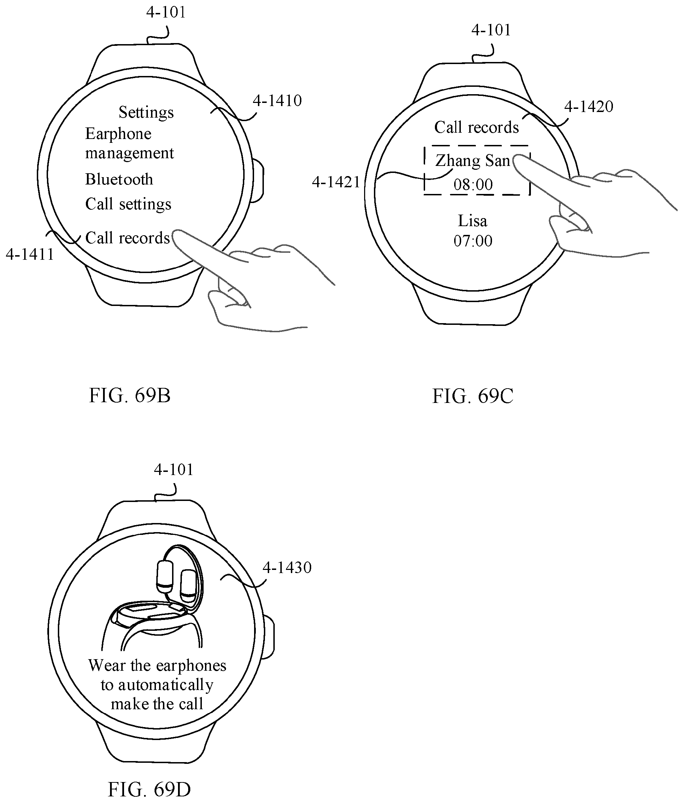

As shown in FIG. 69B, the smartwatch 4-101 may display a user interface 4-1410. For the user interface 4-1410, refer to the user interface 4-1320 shown in FIG. 68B. The user interface 1410 may include a call record control 4-1411. In response to an operation performed on the call record control 4-1411, the smartwatch 4-101 may display a user interface 4-1420 shown in FIG. 69C. The operation performed on the call record control 4-1411 is the operation of viewing the call record information of the electronic device 4-200 by the user.

As shown in FIG. 69C, one or more call records may be displayed on the user interface 4-1420. The one or more call records may be call records on the electronic device 4-200. For example, the user interface 4-1420 may include a call record 4-1421. The call record 4-1421 may indicate a call record between the electronic device 4-200 and a user named "Zhang San".

The user may perform an operation, for example, a tap operation, on any call record on the user interface 4-1420, to trigger the electronic device 4-200 to make an outgoing call to a user of a call peer end in the selected call record.

As shown in FIG. 69C, in response to the operations performed on the call record 4-1421, the smartwatch 4-101 may indicate whether the earphones 4-102 are in a worn state.

If it is detected that at least one earphone in the earphones 4-102 is in the worn state, the smartwatch 4-101 may further detect whether the earphones 4-102 in the worn state are connected to the electronic device 4-200. If it is detected that the earphones 4-102 in the worn state are connected to the electronic device 4-200, the smartwatch 4-101 may send an outgoing call-making instruction to the electronic device 4-200. The outgoing call-making instruction may instruct the electronic device 4-200 to make an outgoing call to the user (namely, the user named "Zhang San") of the call peer end in the call record 4-1421. If it is detected that the earphones 4-102 in the worn state are not connected to the electronic device 4-200, the smartwatch 4-101 may indicate the earphones 4-102 to send the outgoing call-making instruction to the electronic device 4-200 after establishing a communication connection to the electronic device 4-200. In this way, the user can conveniently answer the call on the electronic device 4-200 through the earphones.

If it is detected that two earphones in the earphones 4-102 are in a not-worn state, the smartwatch 4-101 may display a user interface 4-1430 shown in FIG. 69D. The user interface 4-1430 may include a wearing prompt. The wearing prompt may be used to prompt the user to wear earphones 4-102. Specific content of the wearing prompt is not limited in embodiments of this application.

In a possible implementation, the smartwatch 4-101 may detect, within a preset time period (for example, 5 seconds or 8 seconds) after the user interface 4-1430 shown in FIG. 69D is displayed, whether the earphones 4-102 changes from the not-worn state to the worn state. If the two earphones in the earphones 4-102 are still in the not-worn state within the preset time period, the smartwatch 4-101 may close the user interface 4-1430 shown in FIG. 69D, and display the user interface 4-1420 shown in FIG. 69C again. The outgoing call-making operation shown in FIG. 69C fails. If it is detected within the preset time period that at least one earphone in the earphones 4-102 changes from the not-worn state to the worn state, the smartwatch 4-101 may send an outgoing call-making instruction to the electronic device 4-200. A value of the preset time period is not limited in embodiments of this application.

In other words, the smartwatch 4-101 may detect, within the preset time period after the smartwatch prompts the user to wear the earphones 4-102 to make an outgoing call, whether the user wears the earphones 4-102. If the user does not wear the earphones 4-102 for a long time, the smartwatch 4-101 may no longer indicate the electronic device 4-200 to make an outgoing call based on the outgoing call-making operation of the user. That is, the outgoing call-making operation performed by the user fails. If the user wears the earphones 4-102 within the preset time period based on the prompt of the smartwatch 4-101, the smartwatch 4-101 may indicate the electronic device 4-200 to make an outgoing call based on the outgoing call-making operation of the user.

It can be learned from FIG. 69A that the earphones 4-102 are currently in the in state. The user may take the earphones 4-102 out of the earphone slot in the watch body of the smartwatch 4-101 based on the wearing prompt shown in FIG. 69D, and wear the earphones 4-102. Because the earphones 4-102 in the in state are disconnected from the electronic device 4-200, the smartwatch 4-101 may indicate, after detecting that the earphones 4-102 are removed from the compartment, the earphones 4-102 to establish the communication connection to the electronic device 4-200. In this way, the user may not need to perform an operation of connecting the earphones 4-102 and the electronic device 4-200. After wearing the earphones 4-102, the user may directly listen to, through the earphones 4-102, call audio of the outgoing call of the electronic device 4-200.

After the smartwatch 4-101 sends the outgoing call-making instruction to the electronic device 4-200, the electronic device 4-200 may make an outgoing call to the user of the call peer end in the call record 4-1421 shown in FIG. 69C according to the outgoing call-making instruction.

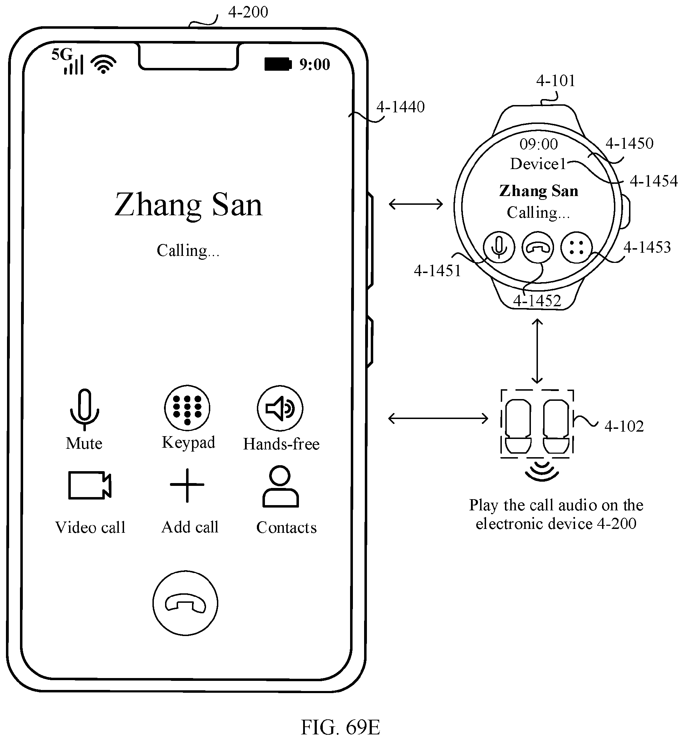

As shown in FIG. 69E, when making an outgoing call, the electronic device 4-200 may display a user interface 4-1440. The user interface 4-1440 may be an outgoing call screen of the Phone application in the electronic device 4-200.

In an outgoing call-making process, the electronic device 4-200 may transmit audio data of the call with the earphones 4-102. The earphones 4-102 may play the call audio on the electronic device 4-200 with a sound. The call audio played with a sound by the earphones 4-102 may include a call prompt tone generated when the call is waiting to be answered by the other party in the outgoing call-making process and audio of the call peer end generated after the call is answered. In addition, the earphones 4-102 may collect audio of the user on the electronic device 4-200 side through an audio collection apparatus (for example, a microphone), and send the audio to the electronic device 4-200. Then, the electronic device 4-200 may send the audio collected by the earphones 4-102 to an electronic device of the call peer end.

In the outgoing call-making process, the electronic device 4-200 may transmit call control information with the smartwatch 4-101. The smartwatch 4-101 may display a user interface 4-1450 shown in FIG. 69E. The user interface 4-1450 may include a mute control 4-1451, a hang-up control 4-1452, a setting control 4-1453, and an outgoing call-making device identifier 4-1454. The outgoing call-making device identifier 4-1454 may indicate an electronic device that makes a call corresponding to the user interface 4-1450. The outgoing call-making device identifier 4-1454 may include a device name. For example, the outgoing call-making device identifier 4-1454 may include "Device1" shown in FIG. 69E. "Device1" in the outgoing call-making device identifier 4-1454 may indicate that the call corresponding to the user interface 4-1450 is made by an electronic device named "Device1" (namely, the electronic device 4-200). The mute control 4-1451 may be used to mute a call. In response to an operation, for example, a tap operation, performed on the mute control 4-1451, the smartwatch 4-101 may send a mute instruction to the earphones 4-102. When receiving the mute instruction, the earphones 4-102 may stop collecting audio. The hang-up control 4-1452 may be used to hang up a call. In response to an operation performed on the hang-up control 4-1452, the smartwatch 4-101 may send a call hang-up instruction to the electronic device 4-200. When receiving the call hang-up instruction, the electronic device 4-200 may hang up the outgoing call shown in FIG. 69E. The setting control 4-1453 may be used to view more controls for controlling a call, for example, a control for enabling a video call or a control for adding a call. In this way, the user may control the call on the electronic device 4-200 through the smartwatch 4-101.

In some embodiments, the call control information may also be transmitted between the electronic device 4-200 and the earphones 4-102. For example, when detecting an operation of muting the call, the electronic device 4-200 may send a mute instruction to the earphones 4-102. When receiving the mute instruction, the earphones 4-102 may turn off the audio collection apparatus (for example, the microphone), and stop collecting the audio of the user on the electronic device 4-200 side. For another example, when detecting an operation performed on the earphones 4-102 to hang up the call, the earphones 4-102 may send a call hang-up instruction to the electronic device 4-200. The electronic device 4-200 may hang up the call according to the call hang-up instruction.

It can be learned from the scenario shown in FIG. 69A to FIG. 69E that the smartwatch 4-101 may control the electronic device 4-200 that establishes the communication connection to the smartwatch 4-101 to make an outgoing call. In this way, the user may not need to perform an operation on the electronic device 4-200, but perform an operation only on the smartwatch 4-101, to trigger the electronic device 4-200 to make a call to a specified contact and answer the call through the earphones 4-102. According to the foregoing embodiments, call experience of the user can be improved.

**FIG. 70A to FIG. 70F** **show an example of another scenario in which an electronic device makes an outgoing call.**

As shown in FIG. 70A, the smartwatch 4-101 is paired with the electronic device 4-200, and a communication connection is established between the smartwatch 4-101 and the electronic device 4-200. The earphones 4-102 is currently in an out state. A communication connection is established between the earphones 4-102 and the electronic device 4-200. The earphones 4-102 currently are not connected to the smartwatch 4-101.

As shown in FIG. 70B, the smartwatch 4-101 may display a user interface 4-1510. For the user interface 4-1510, refer to the user interface 4-1420 shown in FIG. 69C. The user interface 4-1510 may include a call record 4-1511.

When the smartwatch 4-101 is not connected to the earphones 4-102, in response to an operation, for example, a tap operation, performed on the call record 4-1511, the smartwatch 4-101 may display a user interface 4-1520 shown in FIG. 69C.

As shown in FIG. 70C, the user interface 4-1520 may include a connection prompt 4-1521 and a connection control 4-1522. The connection prompt 4-1521 may be used to give the user a prompt that the smartwatch 4-101 currently is not connected to the earphones 4-102, and the electronic device 4-200 cannot be controlled to make an outgoing call through the smartwatch 4-101. Content of the connection prompt 4-1521 may include "The earphones are disconnected from the watch, and the earphones are temporarily unavailable. Place the earphones in the watch body and reconnect". The content of the connection prompt 4-1521 is not limited in embodiments of this application. The connection control 4-1522 may be used to trigger the smartwatch 4-101 to search for the earphones 4-102 and establish a communication connection to the earphones 4-102. For an implementation method for establishing the communication connection between the smartwatch 4-101 and the earphones 4-102, refer to the descriptions in the foregoing embodiments. Details are not described herein again.

When the communication connection is established between the smartwatch 4-101 and the earphones 4-102, the smartwatch 4-101 may control the electronic device 4-200 to make an outgoing call based on the scenario shown in FIG. 69A to FIG. 69E.

When the electronic device 4-200 is connected to the earphones 4-102, the electronic device 4-200 receives an outgoing call-making operation, and may play call audio with a sound through the earphones 4-102.

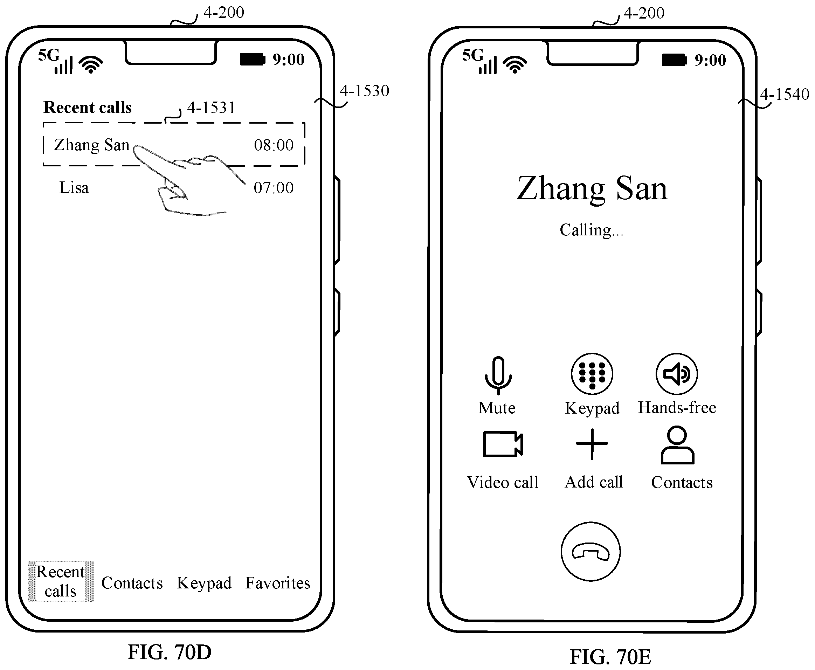

As shown in FIG. 70D, the electronic device 4-200 may display a user interface 4-1530. The user interface 4-1530 may be a call record interface of a Phone application in the electronic device 4-200. One or more call records may be displayed on the user interface 4-1530. The one or more call records may be call records on the electronic device 4-200. For example, the user interface 4-1530 may include a call record 4-1531. The call record 4-1531 may indicate a call record between the electronic device 4-200 and a user named "Zhang San".

The user may perform an operation, for example, a tap operation, on any record on the user interface 4-1530, to trigger the electronic device 4-200 to make an outgoing call to a user of a call peer end in the selected call record.

In response to an operation performed on the call record 4-1531 shown in FIG. 70D, the electronic device 4-200 may display a user interface 4-1540 shown in FIG. 70E. The user interface 4-1540 may be an outgoing call screen of the Phone application in the electronic device 4-200.

In addition, in response to the operation performed on the call record 4-1531 shown in FIG. 70D, the electronic device 4-200 may detect whether the earphones 4-102 are in a worn state.

If it is detected that two earphones in the earphones 4-102 are in a not-worn state, the electronic device 4-200 may independently answer a call. In other words, the electronic device 4-200 may play call audio through an audio playing apparatus (for example, an earpiece or a speaker) of the electronic device 4-200. In addition, the electronic device 4-200 may collect audio of the user on the electronic device 4-200 side through an audio collection apparatus (for example, a microphone) of the electronic device 4-200.

If it is detected that the earphones 4-102 are in the worn state, the electronic device 4-200 may answer a call through the earphones 4-102. In other words, the call audio may be transmitted between the electronic device 4-200 and the earphones 4-102. The earphones 4-102 may play the call audio on the electronic device 4-200 (for example, a call prompt tone generated when the call is waiting to be answered by the other party in the outgoing call-making process and audio of the call peer end generated after the call is answered) with a sound. The earphones 4-102 may collect the audio of the user on the electronic device 4-200 side through an audio collection apparatus (for example, a microphone), and send the audio to the electronic device 4-200.

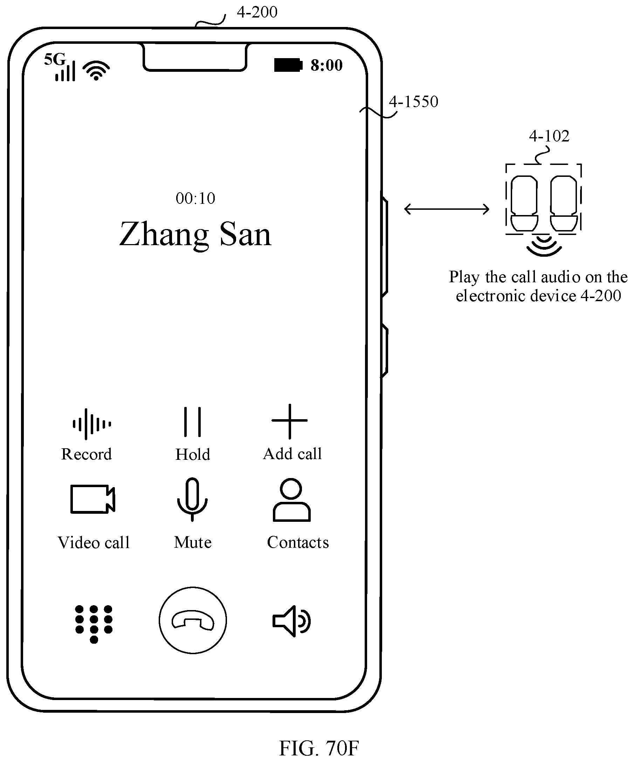

As shown in FIG. 70F, when the electronic device 4-200 answers the call through the earphones 4-102, after the outgoing call of the electronic device 4-200 is answered, a user interface 4-1550 may be displayed. The user interface 4-1550 may be a call screen of the Phone application in the electronic device 4-200. The earphones 4-102 may play the call audio on the electronic device 4-200 with a sound.

It can be learned from the scenario shown in FIG. 70A to FIG. 70F that, when the smartwatch 4-101 is not connected to the earphones 4-102, the user cannot control, through the smartwatch 4-101, the electronic device 4-200 to make a call. However, regardless of whether the smartwatch 4-101 is connected to the earphones 4-102, when the earphones 4-102 are connected to the electronic device 4-200, the user may answer a call on the electronic device 4-200 through the earphones 4-102.

**FIG. 71A to FIG. 71F** **show an example of another scenario in which an electronic device is controlled to make an outgoing call through the smartwatch 4-101.**

As shown in FIG. 71A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphone 4-102 and the electronic device 4-200, but the earphone 4-102 and the electronic device 4-200 currently are not connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.

In some embodiments, in addition to directly controlling a call service on the electronic device 4-200 connected to the smartwatch 4-101, the smartwatch 4-101 may further control, through the earphones 4-102, a call service on an electronic device (for example, the electronic device 300) that is not connected to the smartwatch 4-101. When the earphones 4-102 are connected to the electronic device 4-300, the smartwatch 4-101 may store a call record on the electronic device 4-300. In this way, the user can conveniently control, through the smartwatch 4-101, the electronic device 4-300 to make a call in the device connection scenario shown in FIG. 71A.

Optionally, the call record that is on the electronic device 4-300 and that is stored in the smartwatch 4-101 may be a part of call records on the electronic device 4-300. The part of call records may be call records corresponding to a call service that is on the electronic device 4-300 and that is controlled by the smartwatch 4-101. For example, the electronic device 4-300 receives an incoming call from a user A. If the smartwatch 4-101 receives an operation of answering the incoming call from the user A, and indicates the electronic device 4-300 to answer the incoming call, the smartwatch 4-101 may store a call record of the incoming call from the user A. For another example, the electronic device 4-300 receives an incoming call from a user B. If the electronic device 4-300 receives an operation of answering the incoming call from the user A (that is, the user performs an operation on the electronic device 4-300 to answer the call, but does not perform an operation of answering the call on the smartwatch 4-101), the smartwatch 4-101 may not store the call record of the incoming call from the user A.

Optionally, when the earphones 4-102 are disconnected from the electronic device 4-300, the smartwatch 4-101 may delete the call record of the electronic device 4-300. According to the foregoing method, security of user privacy can be improved, and a case in which privacy information such as the call record on the electronic device 4-300 can still be viewed on the smartwatch 4-101 when the smartwatch 4-101 cannot control the electronic device 4-300 can be avoided.
1. The smartwatch 4-101 may control the electronic device 4-200 to make an outgoing call, and the electronic device 4-200 may preempt to be connected to the earphones 4-102.

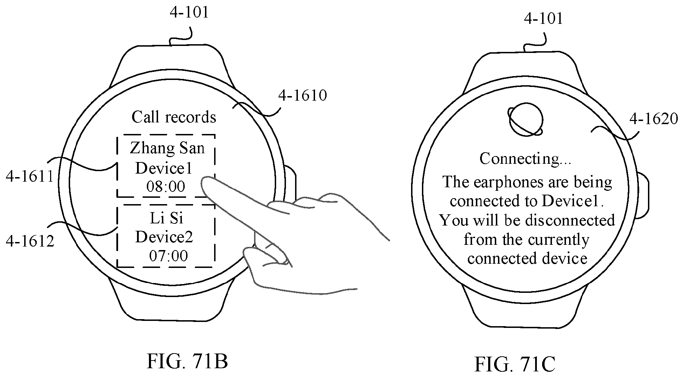

As shown in FIG. 71B, the smartwatch 4-101 may display a user interface 4-1610. For the user interface 4-1610, refer to the user interface 4-1420 shown in FIG. 69C. When the earphones 4-102 are connected to an electronic device that is not connected to the smartwatch 4-101, for example, the electronic device 4-300, each call record displayed on the user interface 4-1610 may include a device label. A device label included in one call record may indicate an electronic device to which the call record belongs (namely, an electronic device that the call record is on). The device label may be a device name of the electronic device. A type of the device label is not limited in embodiments of this application.

For example, the user interface 4-1610 may include a call record 4-1611 and a call record 4-1612. The call record 4-1611 may include a device label "Device1". The device label "Device1" may indicate that an electronic device to which the call record 4-1611 belongs is an electronic device named "Device1", namely, the electronic device 4-200. The call record 4-1612 may include a device label "Device2". The device label "Device2" may indicate that an electronic device to which the call record 4-1612 belongs is an electronic device named "Device2", namely, the electronic device 4-300.

A call record displayed on the user interface 4-1610 may be used by the smartwatch 4-101 to indicate an electronic device to which the call record belongs to make an outgoing call to a user of a call peer end in the call record.

When the earphones 4-102 are connected to the electronic device 4-300, in response to an operation performed on the call record 4-1611 shown in FIG. 71B, the smartwatch 4-101 may indicate the earphones 4-102 to establish a communication connection to the electronic device 4-200 to which the call record 4-1611 belongs. The smartwatch 4-101 may send, to the earphones 4-102, an instruction for establishing the communication connection to the electronic device 4-200, and send, to the electronic device 4-200, an instruction for establishing a communication connection to the earphones 4-102. The earphones 4-102 and the electronic device 4-200 may establish the communication connection to each other based on the communication connection instruction.

In a process in which the smartwatch 4-101 indicates the earphones 4-102 to establish the communication connection to the electronic device 4-200, the smartwatch 4-101 may display a user interface 4-1620 shown in FIG. 71C. The user interface 4-1620 may include a connection prompt. The connection prompt may be used to give the user a prompt that the earphones 4-102 are being connected to the electronic device 4-200, and the connection between the earphones 4-102 and the electronic device 4-300 is to be disconnected. Content of the connection prompt may include "Connecting... The earphones are being connected to Device1. You will be disconnected from the currently connected device". The content of the connection prompt included on the user interface 4-1620 is not limited in embodiments of this application.

It should be noted that, in response to the operation performed on the call record 4-1611 shown in FIG. 71B, the smartwatch 4-101 may further detect whether at least one earphone in the earphones 4-102 is in a worn state. If it is detected that the two earphones in the earphones 4-102 are both in a not-worn state, the smartwatch 4-101 may prompt the user to wear the earphones. For a scenario in which the smartwatch 4-101 prompts the user to wear the earphones, refer to the scenario shown in FIG. 69D.

When the earphones 4-102 are in the worn state, and the earphones 4-102 are connected to the electronic device 4-200, the smartwatch 4-101 may send an outgoing call-making instruction to the electronic device 4-200. The outgoing call-making instruction may instruct the electronic device 4-200 to make an outgoing call to a user (namely, a user named "Zhang San") of a call peer end in the call record 4-1611.

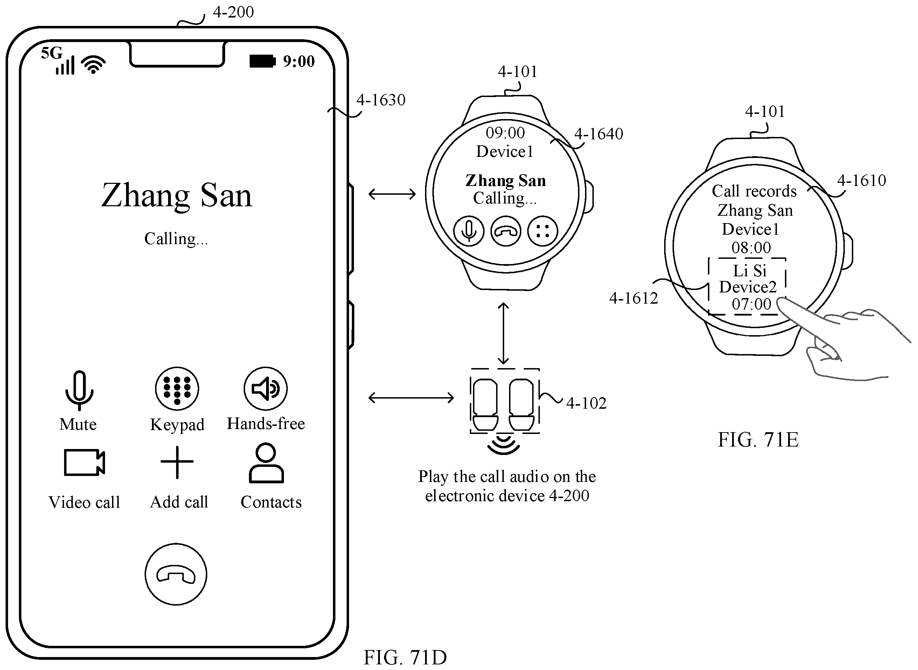

When receiving the outgoing call-making instruction, the electronic device 4-200 may make an outgoing call to the user named "Zhang San", and display a user interface 4-1630 shown in FIG. 71D. The user interface 4-1630 may be an outgoing call screen of the Phone application in the electronic device 4-200. In an outgoing call process of the electronic device 4-200, the smartwatch 4-101 may display a user interface 4-1640 shown in FIG. 71D. For the user interface 4-1640, refer to the user interface 4-1450 shown in FIG. 69E. In addition, the earphones 4-102 may play call audio on the electronic device 4-200 with a sound. For an outgoing call scenario shown in FIG. 71D, refer to the outgoing call scenario shown in FIG. 69E.

It can be learned from the scenario shown in FIG. 71B to FIG. 71D that, when the earphones 4-102 are connected to the electronic device 4-300, if the smartwatch 4-101 receives an operation of indicating the electronic device 4-200 to make an outgoing call, the smartwatch 4-101 may indicate the earphones 4-102 to be connected to the electronic device 4-200, and send an outgoing call-making instruction to the electronic device 4-200 to make an outgoing call. In this way, an electronic device connected to the earphones 4-102 is switched from the electronic device 4-300 to the electronic device 4-200. The electronic device 4-200 implements connection preemption for the earphones 4-102. Switching the electronic device connected to the earphones 4-102 can help the user answer a call on the electronic device 4-200 through the earphones 4-102 when the user wants to use the electronic device 4-200 to make an outgoing call. This improves call experience of the user.

2. The smartwatch 4-101 may control the electronic device 4-300 that is not connected to the smartwatch 4-101 to make an outgoing call.

As shown in FIG. 71E, when the earphones 4-102 are connected to the electronic device 4-300, the smartwatch 4-101 may display a user interface 4-1610. For the user interface 4-1610, refer to the descriptions in the foregoing embodiments.

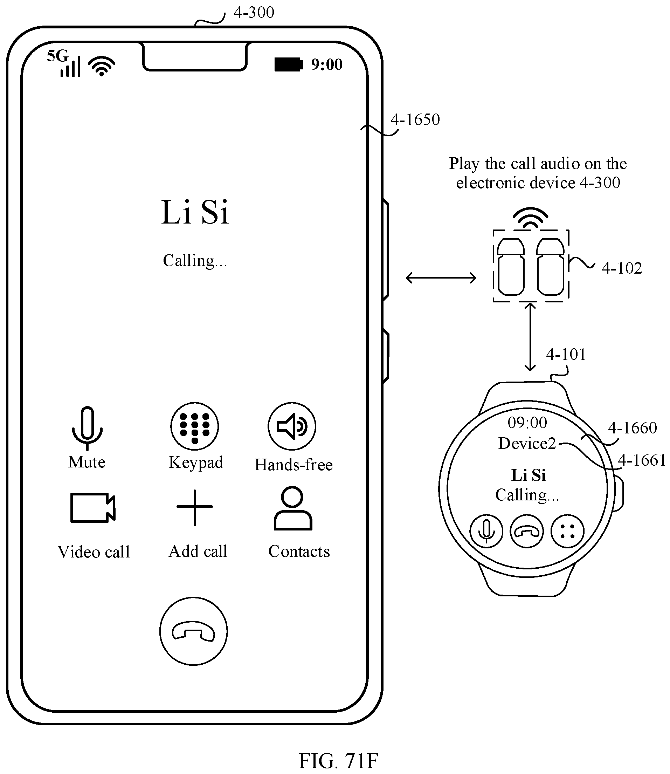

In response to an operation performed on the call record 4-1612 shown in FIG. 71E, the smartwatch 4-101 may detect whether the earphones 4-102 are in the worn state. When it is detected that at least one earphone in the earphones 4-102 is in the worn state, the smartwatch 4-101 may send an outgoing call-making instruction to the electronic device 4-300 through the earphones 4-102. The outgoing call-making instruction may instruct the electronic device 4-300 to make an outgoing call to a user (namely, a user named "Li Si") of a call peer end in the call record 4-1612. When receiving the outgoing call-making instruction, the electronic device 4-300 may make an outgoing call to the user named "Li Si", and display a user interface 4-1650 shown in FIG. 71F. The user interface 4-1650 may be an outgoing call screen of the Phone application in the electronic device 4-300.

In an outgoing call-making process, the electronic device 4-300 may transmit audio data of the call with the earphones 4-102. The earphones 4-102 may play call audio on the electronic device 4-300 with a sound. The call audio played with a sound by the earphones 4-102 may include a call prompt tone generated when the call is waiting to be answered by the other party in the outgoing call-making process and audio of the call peer end generated after the call is answered. In addition, the earphones 4-102 may collect audio of the user on the electronic device 4-300 side through an audio collection apparatus (for example, a microphone), and send the audio to the electronic device 4-300. Then, the electronic device 4-300 may send the audio collected by the earphones 4-102 to an electronic device of the call peer end.

In the outgoing call-making process, call control information may be transmitted between the electronic device 4-200 and the smartwatch 4-101 through the earphones 4-102. The smartwatch 4-101 may display a user interface 4-1660. The user interface 4-1660 may include an outgoing call-making device identifier 4-1661. The outgoing call-making device identifier 4-1661 may indicate an electronic device that makes a call corresponding to the user interface 4-1660. The outgoing call-making device identifier 4-1661 may include a device name. For example, the outgoing call-making device identifier 4-1661 may include "Device2" shown in FIG. 71F. "Device2" in the outgoing call-making device identifier 4-1661 may indicate that the call corresponding to the user interface 4-1660 is made by an electronic device named "Device2" (namely, the electronic device 4-300). For other controls included on the user interface 4-1660, refer to the descriptions of the user interface 4-1450 shown in FIG. 69E. Details are not described herein again.

It can be learned from the scenario shown in FIG. 71E and FIG. 71F that, in addition to controlling the electronic device 4-200 connected to the smartwatch 4-101 to make an outgoing call, the smartwatch 4-101 may control, through the earphones 4-102, an electronic device that is not connected to the smartwatch 4-101, for example, the electronic device 4-300, to make an outgoing call. According to the foregoing embodiments, call experience of the user can be improved. The user may control call services on a plurality of different electronic devices through the smartwatch 4-101.

**FIG. 72A to FIG. 72F** **show an example of another call control scenario.**

As shown in FIG. 72A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 currently are not connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.

In some embodiments, the two earphones (the left earphone and the right earphone) in the earphones 4-102 may be respectively worn on ears of two users. The smartwatch 4-101 is worn on one of the two users. When the earphones 4-102 perform an audio-related service on another electronic device (for example, the electronic device 4-300) than the electronic device 4-200, if the electronic device 4-200 receives an incoming call, the electronic device 4-200 may preempt, through the smartwatch 4-101, one earphone worn by the user wearing the smartwatch 4-101, and a call service on the electronic device 4-200 is performed through the preempted earphone. One earphone worn by the user who does not wear the smartwatch 4-101 may continue to perform the audio-related service on the original electronic device.

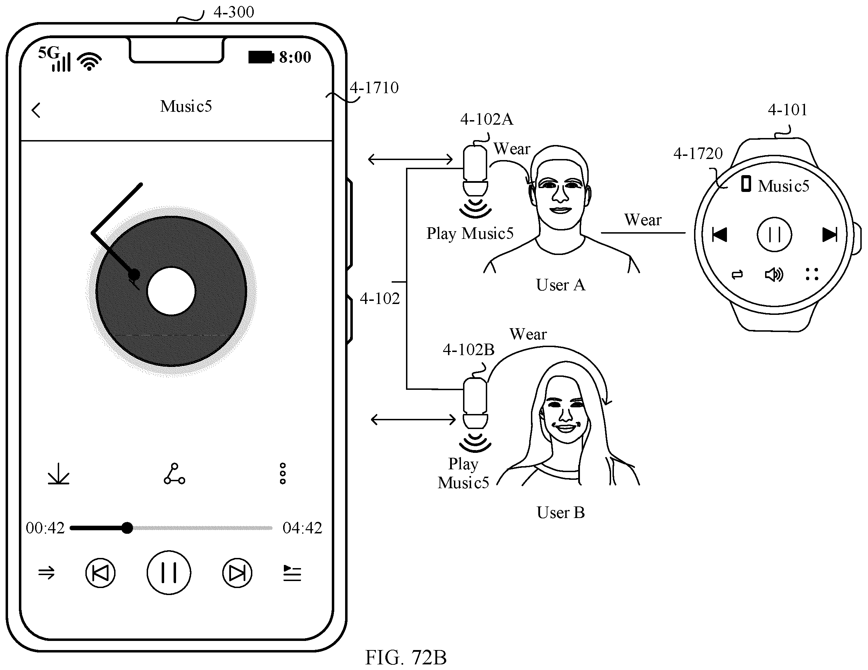

As shown in FIG. 72B, the electronic device 4-300 may display a user interface 4-1710. The user interface 4-1710 may be a user interface of a Music application on the electronic device 4-300. The electronic device 4-300 is playing music (for example, music Music5), and the music on the electronic device 4-300 may be played with a sound by the earphones 4-102. The electronic device 4-300 may send audio data of music playing to the earphones 4-102. The electronic device 4-300 and the smartwatch 4-101 may transmit control information of music playing through the earphones 4-102. The smartwatch 4-101 may display a user interface 4-1720. The user interface 4-1720 may include a control for controlling the electronic device 4-300 to play music. In this way, the user may control, based on the smartwatch 4-101, the electronic device 4-300 to play music.

It can be learned from FIG. 72B that the earphones 4-102 may include an earphone 4-102A and an earphone 4-102B. The earphone 4-102A may be the first earphone 31 shown in FIG. 4. The earphone 4-102B may be the second earphone 32 shown in FIG. 4. The user A wears the earphone 4-102A. The user B wears the earphone 4-102B. The user A further wears the smartwatch 4-101. The user A and the user B may each wear one earphone in the earphones 4-102 to simultaneously listen to music on the electronic device 4-300.

The user A may wear the earphone 4-102A on the right ear. The earphone 4-102A may play audio of a right audio channel with a sound. The user B may wear the earphone 4-102B on the left ear. The earphone 4-102B may play audio of a left audio channel with a sound. In view of this, the earphone 4-102A may also be referred to as a right earphone 4-102A. The earphone 4-102B may also be referred to as a left earphone 4-102B.

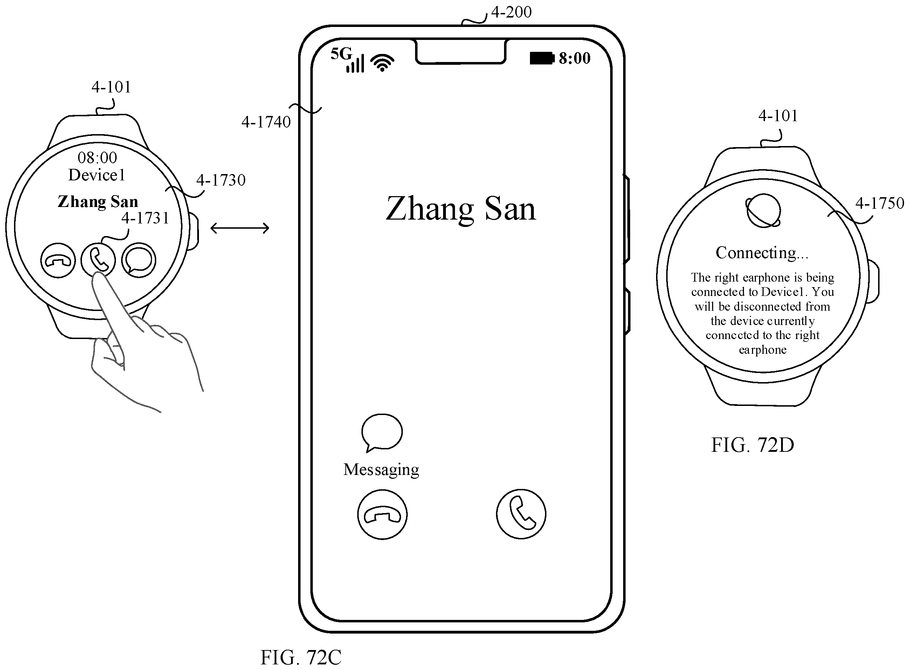

As shown in FIG. 72C, the electronic device 4-200 receives an incoming call. The electronic device 4-200 may display a user interface 4-1740. For the user interface 4-1740, refer to the user interface 4-610 shown in FIG. 61B. The electronic device 4-200 may send incoming call information to the smartwatch 4-101. When receiving the incoming call information, the smartwatch 4-101 may detect whether the earphones 4-102 are in a worn state. It can be learned from FIG. 72B that both the right earphone 4-102A and the left earphone 4-102B in the earphones 4-102 are in the worn state. In this case, the smartwatch 4-101 may detect that the earphones 4-102 are in the worn state. The smartwatch 4-101 may display a user interface 4-1730 shown in FIG. 72C. For the user interface 4-1730, refer to the user interface 4-650 shown in FIG. 61D. The user interface 4-1730 may include an answer control 4-1731. In response to an operation performed on the answer control 4-1731, the smartwatch 4-101 may detect whether the right earphone 4-102A and the left earphone 4-102B in the earphones 4-102 are worn on ears of two different users.

In a possible implementation, the smartwatch 4-101 may detect, by detecting a distance between the right earphone 4-102A and the left earphone 4-102B, whether the right earphone 4-102A and the left earphone 4-102B are worn on the ears of the two different users. The right earphone 4-102A and the left earphone 4-102B may determine a distance between each other according to a Bluetooth ranging method. If the distance between the right earphone 4-102A and the left earphone 4-102B is greater than a preset distance threshold, the smartwatch 4-101 may determine that the right earphone 4-102A and the left earphone 4-102B are worn on the ears of the two different users. If the distance between the right earphone 4-102A and the left earphone 4-102B is less than or equal to the preset distance threshold, the smartwatch 4-101 may determine that the right earphone 4-102A and the left earphone 4-102B are worn on two ears of one user. A method in which the smartwatch 4-101 detects whether the right earphone 4-102A and the left earphone 4-102B are worn on the ears of the two different users is not limited in embodiments of this application.

When it is detected that the right earphone 4-102A and the left earphone 4-102B are worn on two ears of one user, the smartwatch 4-101 may indicate both the two earphones in the earphones 4-102 to establish a communication connection to the electronic device 4-200. In this way, the user may answer the call on the electronic device 4-200 through the earphones 4-102.

When it is detected that the right earphone 4-102A and the left earphone 4-102B are worn on ears of two different users, the smartwatch 4-101 may detect which earphone of the right earphone 4-102A and the left earphone 4-102B is an earphone worn by a user wearing the smartwatch 4-101 (namely, the user A).

In a possible implementation, the smartwatch 4-101 may detect, by detecting distances between the smartwatch 4-101 and the two earphones, which earphone is the earphone worn by the user A. The smartwatch 4-101 may detect the distances between the smartwatch 4-101 and the two earphones according to the Bluetooth ranging method. A distance between the smartwatch 4-101 and the right earphone 4-102A is a distance 1. A distance between the smartwatch 4-101 and the left earphone 4-102B is a distance 2. The smartwatch 4-101 may compare the distance 1 and the distance 2, and determine an earphone closer to the smartwatch 4-101 as the earphone worn by the user A. For example, the smartwatch 4-101 may obtain, through comparison, that the distance 1 is less than the distance 2. The smartwatch 4-101 may determine the right earphone 4-102 as the earphone worn by the user A.

Further, the smartwatch 4-101 may indicate the right earphone 4-102A to establish a communication connection to the electronic device 4-200.

In a process in which the right earphone 4-102A establishes the communication connection to the electronic device 4-200, the smartwatch 4-101 may display a user interface 4-1750 shown in FIG. 72D. The user interface 4-1750 may include a connection prompt. The connection prompt may be used to give the user a prompt that the right earphone 4-102A is establishing the communication connection to the electronic device 4-200, and the right earphone 4-102A is to disconnect the communication connection to the electronic device 4-300. Content of the connection prompt may include "Connecting... The right earphone is being connected to Device1. This operation will disconnect the device currently connected to the right earphone". The content of the connection prompt included on the user interface 4-1750 is not limited in embodiments of this application.

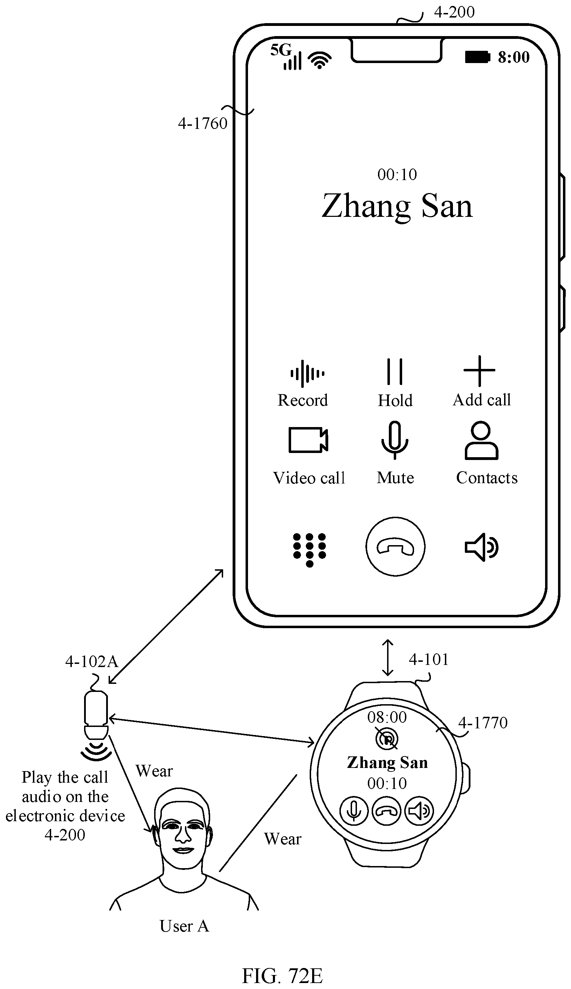

When the right earphone 4-102 is successfully connected to the electronic device 4-200, the smartwatch 4-101 may send a call answering instruction to the electronic device 4-200. According to the call answering instruction, the electronic device 4-200 may answer the call, and display a user interface 4-1760 shown in FIG. 72E. For the user interface 4-1740, refer to the user interface 4-630 shown in FIG. 61C. After the electronic device 4-200 answers the call, call control information may be transmitted between the electronic device 4-200 and the smartwatch 4-101. The smartwatch 4-101 may display a user interface 4-1770 shown in FIG. 72E. For the user interface 4-1770, refer to the user interface 4-640 shown in FIG. 61C. After the electronic device 4-200 answers the call, audio data of the call may be transmitted between the electronic device 4-200 and the right earphone 4-102A. The right earphone 4-102A may play call audio on the electronic device 4-200 with a sound.

It can be learned from FIG. 72E that, after receiving the incoming call, the electronic device 4-200 may preempt one earphone in the earphones 4-102, and answer the call through the preempted earphone. In this way, when the user A wears only the right earphone 4-102A, after the electronic device 4-200 receives the incoming call, the user A may control, through the worn smartwatch 4-101, the electronic device 4-200 to answer the call, and switch, through the right earphone 4-102A, from listening to music on the electronic device 4-300 to listening to call audio on the electronic device 4-200.

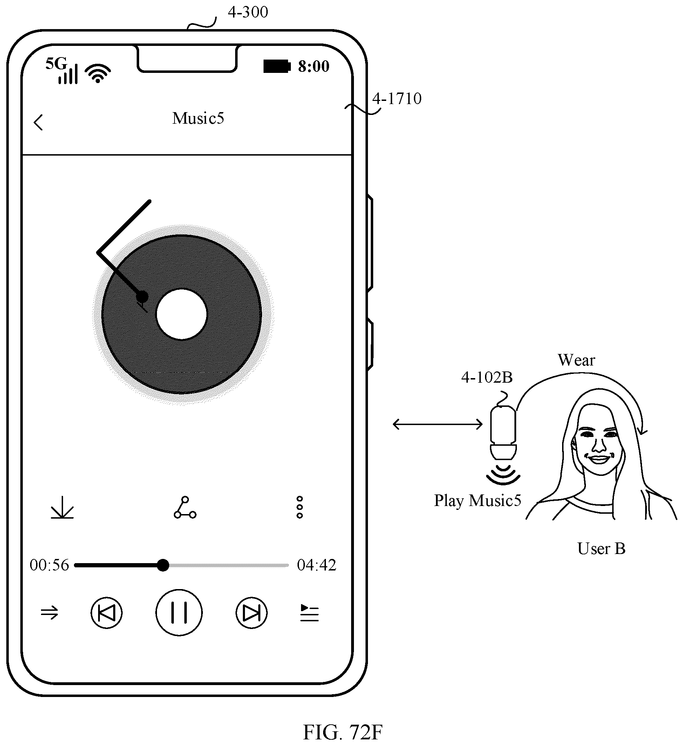

As shown in FIG. 72F, the left earphone 4-102B may continue to maintain a communication connection to the electronic device 4-300, and play the music (for example, music Music5) on the electronic device 4-300 with a sound. In this way, when the user A answers the call on the electronic device 4-200 through the right earphone 4-102A, the user B may continue to listen to the music on the electronic device 4-300 through the left earphone 4-102B.

According to the foregoing embodiments, a user can share the earphones 4-102 with another user to listen to music together without affecting answering of a call by the user through the earphones 4-102, and privacy of the user during answering of the call can be protected. The another user who accepts sharing of the earphones 4-102 may continue to listen to music but cannot hear call content of the user.

For example, the user A wears the right earphone 4-102A, and shares the left earphone 4-102B with the user B. The user A may control, through the smartwatch 4-101, the electronic device 4-300 to play the music. Both the right earphone 4-102A and the left earphone 4-102B may play music on the electronic device 4-300 with a sound. In this way, the user A and the user B may simultaneously listen to the music on the electronic device 4-300. When the electronic device 4-200 receive the incoming call, the user A may control, through the smartwatch 4-101, the electronic device 4-200 to answer the call. The right earphone 4-102A may play the call audio on the electronic device 4-200 with a sound. The left earphone 4-102B may continue to play the music on the electronic device 4-300 with a sound. In this way, the user A may answer the call on the electronic device 4-200 through the right earphone 4-102A, and does not need to worry that the user B hears specific call content, and the user B may continue to listen to the music on the electronic device 4-300 through the left earphone 4-102B.

In some embodiments, when the right earphone 4-102A shown in FIG. 72E plays the call audio on the electronic device 4-200 with a sound, if the call on the electronic device 4-200 ends, the smartwatch 4-101 may indicate the right earphone 4-102A to establish the communication connection to the electronic device 4-300. When the right earphone 4-102A is connected to the electronic device 4-300 again, the electronic device 4-300 may send the audio data of music playing to the right earphone 4-102A. The right earphone 4-102A may play the music on the electronic device 4-300 with a sound. In this way, after answering the call on the electronic device 4-200 through the right earphone 4-102A, the user A may continue to listen to the music on the electronic device 4-300 through the right earphone 4-102A together with the user B.

**FIG. 73A** **and** **FIG. 73B** **show an example of a flowchart of a call control method.**

As shown in FIG. 73A and FIG. 73B, the call control method may include step S1811 to step S1832. The method may be a call control method based on the communication system 40 shown in FIG. 4.

S1811: The electronic device 4-200 receives an incoming call, and displays an incoming call notification screen.

For the incoming call notification screen displayed by the electronic device 4-200, refer to the user interface 4-610 shown in FIG. 61B.

After receiving the incoming call, the electronic device 4-200 may detect whether the electronic device 4-200 is connected to the smartwatch 4-101, and may detect whether the electronic device 4-200 is connected to the earphones 4-102.

**Scenario 1 (S1812 to S1823): The electronic device 4-200 is connected to both the smartwatch 4-101 and the earphones 4-102.**

S1812: The electronic device 4-200 detects that the electronic device 4-200 is connected to both the smartwatch 4-101 and the earphones 4-102.

A case in which the electronic device 4-200 is connected to the earphones 4-102 may include: The electronic device 4-200 is connected to one earphone in the earphones 4-102, and the electronic device 4-200 is connected to two earphones in the earphones 4-102.

S1813: The electronic device 4-200 detects whether the earphones 4-102 are in a worn state.

If it is detected that the earphones 4-102 are in the worn state, the electronic device 4-200 may indicate the earphones 4-102 to perform the following step S1814.

If it is detected that the earphones 4-102 are not in the worn state, the electronic device 4-200 may perform the following step S1815.

S1814: The earphones 4-102 play an incoming call prompt tone with a sound.

When the earphones 4-102 are connected to the electronic device 4-200, and the earphones 4-102 are in the worn state, the electronic device 4-200 may send audio data of the incoming call prompt tone to the earphones 4-102. The earphones 4-102 may play the incoming call prompt tone with a sound. In this way, when wearing the earphones 4-102, a user may learn, based on the heard incoming call prompt tone, that the electronic device 4-200 receives the incoming call.

S1815: The electronic device 4-200 plays an incoming call prompt tone with a sound, or the electronic device 4-200 vibrates or remains muted.

When the electronic device 4-200 is in a ringing mode, the electronic device 4-200 may play the incoming call prompt tone with a sound through an audio playing apparatus on the electronic device 4-200. When the electronic device 4-200 is in a vibration mode, the electronic device 4-200 may vibrate through a vibration apparatus like a motor, to give the user a prompt that the electronic device 4-200 receives the incoming call. When the electronic device 4-200 is in a mute mode, the electronic device 4-200 may remain muted. In a state of the vibration mode or the mute mode, the electronic device 4-200 may not play the incoming call prompt tone with a sound.

Step S1813, step S1814, and step S1815 may constitute step P1.

S1816: The smartwatch 4-101 determines whether the smartwatch is wirelessly connected to the earphones 4-102.

When the earphones 4-102 play the incoming call prompt tone with a sound, the smartwatch 4-101 may determine whether the smartwatch 4-101 is wirelessly connected to the earphones 4-102. The wireless connection manner may be, for example, a wireless communication connection like a Bluetooth communication connection.

If it is determined that the smartwatch 4-101 is wirelessly connected to the earphones 4-102, the smartwatch 4-101 may perform the following step S1817.

If it is determined that there is no wireless connection between the smartwatch 4-101 and the earphones 4-102, the smartwatch 4-101 may perform the following step S1819.

S1817: The smartwatch 4-101 detects that the earphones 4-102 are in the worn state, and displays an incoming call notification screen including an answer control.

It can be learned from the foregoing step S1814 that the earphones 4-102 are currently in the worn state. Therefore, the smartwatch 4-101 may detect that the earphones 4-102 are in the worn state. Then, the smartwatch 4-101 may display the incoming call notification screen including the answer control. For the incoming call notification screen including the answer control, refer to the user interface 4-650 shown in FIG. 61D.

S1818: After any one of the electronic device 4-200, the smartwatch 4-101, and the earphones 4-102 detect an answer operation, the electronic device 4-200 answers the call, and the earphones 4-102 play call audio with a sound.

It can be learned from step S1814 to step S1817 that the user may hear the incoming call prompt tone on the earphones 4-102, and view, on the smartwatch 4-101, the incoming call notification screen indicating that the electronic device 4-200 receives the incoming call. In addition, the user can also view an incoming call notification screen on the electronic device 4-200. The user may perform an answer operation on any one of the electronic device 4-200, the smartwatch 4-101, and the earphones 4-102. For example, the answer operation performed on the electronic device 4-200 may be an operation performed on the answer control 4-613 shown in FIG. 61B. The answer operation performed on the smartwatch 4-101 may be the operation performed on the answer control 4-655 shown in FIG. 61D. The answer operation performed on the earphones 4-102 may be a double-tap operation performed on a preset area of the earphones 4-102. An implementation of the answer operation is not limited in embodiments of this application.

For a scenario in which the electronic device 4-200 answers the call, and the earphones 4-102 play call audio with a sound, refer to the descriptions of the scenario shown in FIG. 61C.

Step S1817 and step S1818 may constitute step P2.

S1819: The smartwatch 4-101 displays an incoming call notification screen that does not include an answer control.

If there is no wireless connection between the earphones 4-102 and the smartwatch 4-101, the smartwatch 4-101 cannot control the earphones 4-102 to play call audio on the electronic device 4-200 with a sound. The smartwatch 4-101 may display the incoming call notification screen that does not include the answer control. For the incoming call notification screen that does not include the answer control, refer to the user interface 4-720 shown in FIG. 62B.

S1820: When the earphones 4-102 are in the worn state, after the electronic device 4-200 answers the call, the earphones 4-102 play the call audio with a sound; or when the earphones 4-102 are in a not-worn state, after the electronic device 4-200 answers the call, the electronic device 4-200 plays the call audio with a sound.

When there is no wireless connection between the earphones 4-102 and the smartwatch 4-101, the electronic device 4-200 or the earphones 4-102 may detect an answer operation, to trigger the electronic device 4-200 to answer the incoming call.

When at least one earphone in the earphones 4-102 is in the worn state, after either of the electronic device 4-200 and the earphones 4-102 detects the answer operation, the electronic device 4-200 may answer the incoming call. To be specific, when wearing the earphones 4-102, the user may answer the incoming call by performing the answer operation on the electronic device 4-200 or the earphones 4-102. In this case, the earphones 4-102 may play the call audio on the electronic device 4-200 with a sound.

When both the two earphones in the earphones 4-102 are in the not-worn state, the electronic device 4-200 may answer the incoming call after detecting the answer operation. To be specific, when the user does not wear the earphones 4-102, the user may answer the incoming call by performing the answer operation on the electronic device 4-200. In this case, the electronic device 4-200 plays the call audio on the electronic device 4-200 with a sound through the audio playing apparatus on the electronic device 4-200.

S1821: The smartwatch 4-101 determines whether the smartwatch is wirelessly connected to the earphones 4-102.

When the electronic device 4-200 performs step S1813 to detect whether the earphones 4-102 are in the worn state, regardless of whether the earphones 4-102 are in the worn state, the electronic device 4-200 may send incoming call information to the smartwatch 4-101 when the electronic device 4-200 is connected to the smartwatch 4-101. When receiving the incoming call information, the smartwatch 4-101 may determine whether the smartwatch 4-101 is wirelessly connected to the earphones 4-102, to determine whether the smartwatch 4-101 can control the earphones 4-102 to play call audio on the electronic device 4-200 with a sound.

Therefore, in a scenario in which the earphones 4-102 are in the worn state and play the incoming call prompt tone with a sound (refer to step S1814), the smartwatch 4-101 may determine whether the smartwatch 4-101 is wirelessly connected to the earphones 4-102 (refer to step S1816). In a scenario in which the earphones 4-102 are in the not-worn state, and the electronic device 4-200 plays the incoming call prompt tone with a sound (refer to step S1815), the smartwatch 4-101 may still determine whether the smartwatch 4-101 is wirelessly connected to the earphones 4-102 (namely, step S1821).

If it is determined that there is no wireless connection between the smartwatch 4-101 and the earphones 4-102, the smartwatch 4-101 may perform step S1819.

If it is determined that the smartwatch 4-101 is wirelessly connected to the earphones 4-102, the smartwatch 4-101 may perform the following step S1822.

S1822: The smartwatch 4-101 detects that the earphones 4-102 are in the not-worn state, and the smartwatch 4-101 prompts the user to wear the earphones 4-102 to answer the incoming call.

It can be learned from the foregoing step S1815 that the earphones 4-102 are in the not-worn state. Therefore, the smartwatch 4-101 may detect that the earphones 4-102 are in the not-worn state.

When the earphones 4-102 are connected to both the smartwatch 4-101 and the electronic device 4-200, but the earphones 4-102 are in the not-worn state, at least one earphone in the earphones 4-102 worn by the user may trigger the electronic device 4-200 to answer the incoming call. The smartwatch 4-101 may prompt the user to wear the earphones 4-102 to answer the incoming call.

For the scenario in which the user is prompted to wear the earphones 4-102 to answer the incoming call, refer to the descriptions of the scenario shown in FIG. 61B.

S1823: After detecting that the user wears the earphones 4-102, the smartwatch 4-101 sends a call answering instruction to the electronic device 4-200, the electronic device 4-200 answers the call, and the earphones 4-102 play the call audio with a sound.

When it is detected that the user wears the earphones 4-102 (that is, the earphones 4-102 change from the not-worn state to the worn state), the smartwatch 4-101 may send the call answering instruction to the electronic device 4-200. For a scenario in which the earphones 4-102 play the call audio on the electronic device 4-200 with a sound, refer to the scenario shown in FIG. 61C.

Step S1822 and step S1823 may constitute step P3.

It should be noted that an execution sequence of step S1813 and step S1816 (or step S1821) is not limited in this application. In a possible implementation, step S1816 (or step S1821) may be performed before step S1813. Alternatively, step S1816 (or step S1821) and step S1813 may be simultaneously performed.

When the earphones 4-102 are in the worn state, and the earphones 4-102 are wirelessly connected to the smartwatch 4-101, the smartwatch 4-101, the electronic device 4-200, and the earphones 4-102 may control the incoming call on the electronic device 4-200 according to step P2.

When the earphones 4-102 are in the not-worn state, and the earphones 4-102 are wirelessly connected to the smartwatch 4-101, the smartwatch 4-101, the electronic device 4-200, and the earphones 4-102 may control the incoming call on the electronic device 4-200 according to step P3.

When there is no wireless connection between the earphones 4-102 and the smartwatch 4-101, the smartwatch 4-101, the electronic device 4-200, and the earphones 4-102 may control the incoming call on the electronic device 4-200 according to step S1819 and step S1820.

In a possible implementation, the electronic device 4-200 may alternatively not perform step S1813. In other words, step S1813 is optional. When the electronic device 4-200 is connected to both the smartwatch 4-101 and the earphones 4-102, after receiving the incoming call, the electronic device 4-200 may send the incoming call information to the smartwatch 4-101. When the incoming call information is received, the smartwatch 4-101 may perform step S1816 or step S1821. After receiving the incoming call, the electronic device 4-200 may further send the audio data of the incoming call prompt tone to the earphones 4-102. The earphones 4-102 may play the incoming call prompt tone with a sound. When the electronic device 4-200 answers the incoming call, the electronic device 4-200 may send audio data of the call to the earphones 4-102. The earphones 4-102 may play the call audio on the electronic device 4-200 with a sound.

Optionally, after receiving the incoming call information of the electronic device 4-200, the smartwatch 4-101 may alternatively not perform step S1816 or step S1817. Specifically, when receiving the incoming call information, the smartwatch 4-101 may display the incoming call notification screen, to give the user a prompt that the electronic device 4-200 receives the incoming call. The incoming call notification screen displayed by the smartwatch 4-101 may include the answer control, or may not include the answer control. When the incoming call notification screen displayed by the smartwatch 4-101 includes the answer control, in response to an operation performed on the answer control, the smartwatch 4-101 may send the call answering instruction to the electronic device 4-200. The electronic device 4-200 may answer the incoming call according to the call answering instruction. After the electronic device 4-200 answers the incoming call, the electronic device 4-200, the earphones 4-102, or the smartwatch 4-101 may play the call audio on the electronic device 4-200 with a sound.

**Scenario 2 (S1824): The electronic device 4-200 is connected to the earphones 4-102, but is not connected to the smartwatch 4-101.**

S1824: The electronic device 4-200 detects that the electronic device 4-200 is connected to the earphones 4-102, but is not connected to the smartwatch 4-101.

The electronic device 4-200 and the earphones 4-102 may perform step P1. Then, the electronic device 4-200 and the earphones 4-102 may perform step S1820. For both step P1 and step S1820, refer to the descriptions of Scenario 1.

It can be learned from step S1824, step P1, and step S1820 that, when the electronic device 4-200 is connected to the earphones 4-102, but is not connected to the smartwatch 4-101, the electronic device 4-200 may detect whether the earphones 4-102 are in the worn state.

If the earphones 4-102 are in the worn state, the electronic device 4-200 may indicate the earphones 4-102 to play the incoming call prompt tone with a sound. In addition, either of the electronic device 4-200 and the earphones 4-102 may detect the answer operation, to trigger the electronic device 4-200 to answer the incoming call. After the electronic device 4-200 answers the incoming call, the earphones 4-102 may play the call audio on the electronic device 4-200 with a sound.

If the earphones 4-102 are in the not-worn state, the electronic device 4-200 may independently play the incoming call prompt tone with a sound. After detecting the answer operation, the electronic device 4-200 may answer the incoming call, and play the call audio on the electronic device 4-200 with a sound through the audio playing apparatus on the electronic device 4-200.

In a possible implementation, when the electronic device 4-200 is connected to the earphones 4-102 but is not connected to the smartwatch 4-101, after receiving the incoming call, the electronic device 4-200 may directly send the audio data of the incoming call prompt tone to the earphones 4-102. After receiving the audio data of the incoming call prompt tone, the earphones 4-102 may play the incoming call prompt tone with a sound. After the electronic device 4-200 answers the incoming call, the electronic device 4-200 may send audio data of the call to the earphones 4-102. The earphones 4-102 may play the call audio on the electronic device 4-200 with a sound. The electronic device 4-200 may answer the incoming call in response to an operation performed on the electronic device 4-200 to answer the call (for example, the operation performed on the answer control 4-613 shown in FIG. 61B). Alternatively, the electronic device 4-200 may answer the incoming call according to a call answering instruction of the earphones 4-102. The earphones 4-102 may send the call answering instruction to the electronic device 4-200 based on an operation performed on the earphones 4-102 to answer the call.

In other words, the electronic device 4-200 may not need to detect whether the earphones 4-102 are in the worn state. Step S1813 in step P1 is optional.

**Scenario 3 (S1825 to S1831): The electronic device 4-200 is connected to the smartwatch 4-101, but is not connected to the earphones 4-102.**

S1825: The electronic device 4-200 detects that the electronic device 4-200 is connected to the smartwatch 4-101, but is not connected to the earphones 4-102.

After receiving the incoming call, the electronic device 4-200 may send incoming call information to the smartwatch 4-101.

S1826: The smartwatch 4-101 determines whether the smartwatch is wirelessly connected to the earphones 4-102.

When receiving the incoming call information, the smartwatch 4-101 may determine whether the smartwatch 4-101 is wirelessly connected to the earphones 4-102.

If it is determined that there is no wireless connection between the smartwatch 4-101 and the earphones 4-102, the smartwatch 4-101 may perform the following step S1827.

If it is determined that the smartwatch 4-101 is wirelessly connected to the earphones 4-102, the smartwatch 4-101 may perform the following step S1830.

S1827: The smartwatch 4-101 indicates the earphones 4-102 to be connected to the electronic device 4-200.

For a scenario in which the smartwatch 4-101 indicates the earphones 4-102 to be connected to the electronic device 4-200, refer to the descriptions of the scenario shown in FIG. 63C.

S1828: The smartwatch 4-101 may determine whether the earphones 4-102 are successfully connected to the electronic device 4-200.

The earphones 4-102 and the electronic device 4-200 may establish a communication connection based on the indication of the smartwatch 4-101. The smartwatch 4-101 may determine whether the earphones 4-102 are successfully connected to the electronic device 4-200.

If it is determined that the earphones 4-102 are successfully connected to the electronic device 4-200, the smartwatch 4-101 may perform the following step S1829.

If it is determined that the earphones 4-102 fail to be connected to the electronic device 4-200, the smartwatch 4-101 may perform the following step S1830.

Optionally, if it is determined that the earphones 4-102 fail to be connected to the electronic device 4-200, the smartwatch 4-101 may also give a user a prompt that the connection fails. For a scenario in which the smartwatch 4-101 prompts the user with a failure of the connection, refer to the scenario shown in FIG. 63E.

S1829: The smartwatch 4-101 determines whether the earphones 4-102 are in a worn state.

If at least one earphone in the earphones 4-102 is in the worn state, the smartwatch 4-101, the earphones 4-102, and the electronic device 4-200 may control the incoming call on the electronic device 4-200 according to step P2.

If two earphones in the earphones 4-102 are in a not-worn state, the smartwatch 4-101, the earphones 4-102, and the electronic device 4-200 may control the incoming call on the electronic device 4-200 according to step P3.

S1830: The smartwatch 4-101 displays an incoming call notification screen that does not include an answer control.

For the incoming call notification screen that does not include the answer control, refer to the user interface 4-720 shown in FIG. 62B.

Alternatively, the smartwatch 4-101 may display an incoming call notification screen including an answer control. For the incoming call notification screen including the answer control, refer to the user interface 4-650 shown in FIG. 61D. In this way, the user may perform an operation on the smartwatch 4-101, to conveniently control the electronic device 4-200 to answer the incoming call.

S1831: After detecting an answer operation, the electronic device 4-200 answers the call, and the electronic device 4-200 plays call audio with a sound.

When the earphones 4-102 are not connected to the electronic device 4-200, the user needs to perform the answer operation on the electronic device 4-200 to answer the call. After answering the call, the electronic device 4-200 may play the call audio on the electronic device 4-200 with a sound through an audio playing apparatus on the electronic device 4-200.

In a possible implementation, the smartwatch 4-101 may not perform step S1826. After receiving the incoming call, the electronic device 4-200 may send the incoming call information to the smartwatch 4-101. When receiving the incoming call information, the smartwatch 4-101 may directly display the incoming call notification screen, to give the user a prompt that the electronic device 4-200 receives the incoming call. The incoming call notification screen displayed by the smartwatch 4-101 may include an answer control, or may not include an answer control. When the incoming call notification screen displayed by the smartwatch 4-101 includes the answer control, in response to an operation performed on the answer control, the smartwatch 4-101 may send a call answering instruction to the electronic device 4-200. The electronic device 4-200 may answer the incoming call according to the call answering instruction. After the electronic device 4-200 answers the incoming call, the electronic device 4-200 or the smartwatch 4-101 may play the call audio on the electronic device 4-200 with a sound. Alternatively, after the electronic device 4-200 is connected to the earphones 4-102, the electronic device 4-200 may play the call audio on the electronic device 4-200 with a sound through the earphones 4-102.

**Scenario 4 (S1832): The electronic device 4-200 is connected to neither the smartwatch 4-101 nor the earphones 4-102.**

S1831: The electronic device 4-200 detects that the electronic device 4-200 is connected to neither the smartwatch 4-101 nor the earphones 4-102.

When the electronic device 4-200 is connected to neither the smartwatch 4-101 nor the earphones 4-102, a user needs to perform an answer operation on the electronic device 4-200 to answer the call. The electronic device 4-200 may control the incoming call on the electronic device 4-200 according to step S1831.

In a possible implementation, in a process in which the earphones 4-102 play the call audio on the electronic device 4-200 with a sound, the electronic device 4-200 may detect whether the earphones 4-102 are in a worn state. When it is detected that the user takes off the earphones 4-102 (that is, the earphones 4-102 change from the worn state to a not-worn state), the earphones 4-102 may stop playing the call audio with a sound, and the electronic device 4-200 may independently continue to play the call audio with a sound.

In a possible implementation, in a process in which the earphones 4-102 play the call audio on the electronic device 4-200 with a sound, if the earphones 4-102 are placed in a compartment, the electronic device 4-200 may hang up the call. In this way, the user may hang up the call by placing the earphones 4-102 in the compartment.

It can be learned from the method shown in FIG. 73A and FIG. 73B that the user may control the call on the electronic device 4-200 through the smartwatch 4-101 and the earphones 4-102. The user may perform an answer operation on the smartwatch 4-101, the earphones 4-102, or the electronic device 4-200 based on a requirement of the user, and choose to use the earphones 4-102 or the electronic device 4-200 to answer the call. The foregoing method can help the user more conveniently control the call on the electronic device 4-200, to improve call experience of the user.

**FIG. 74A** **and** **FIG. 74B** **show an example of a flowchart of a call control method.**

As shown in FIG. 74A and FIG. 74B, the call control method may include step S1911 to step S1926. The method may be a call control method based on the communication system 50 shown in FIG. 5.
**1. (S1911 to S1923) The electronic device 4-300 receive an incoming call.**

S1911: The electronic device 4-300 receives the incoming call, and displays an incoming call notification screen.

For the incoming call notification screen displayed by the electronic device 4-300, refer to the user interface 4-910 shown in FIG. 64B.

S1912: The electronic device 4-300 determines whether the electronic device 4-300 is connected to the earphones 4-102.

If it is determined that the electronic device 4-300 is connected to the earphones 4-102, the electronic device 4-300 may perform the following step S1913.

If it is determined that the electronic device 4-300 is not connected to the earphones 4-102, the electronic device 4-300 may perform the following step S1923.

S1913: The electronic device 4-300 determines whether the earphones 4-102 are in a worn state.

If it is determined that at least one earphone in the earphones 4-102 is in the worn state, the electronic device 4-300 may indicate the earphones 4-102 to perform the following step S1914.

If it is determined that two earphones in the earphones 4-102 are both in a not-worn state, the electronic device 4-300 may perform the following step S1915.

S1914: The earphones 4-102 play an incoming call prompt tone with a sound.

S1915: The electronic device 4-300 plays an incoming call prompt tone with a sound, or the electronic device 4-300 vibrates or remains muted.

When the electronic device 4-300 is in a ringing mode, the electronic device 4-300 may play the incoming call prompt tone with a sound through an audio playing apparatus on the electronic device 4-300. When the electronic device 4-300 is in a vibration mode, the electronic device 4-300 may vibrate through a vibration apparatus like a motor, to give a user a prompt that the electronic device 4-300 receives the incoming call. When the electronic device 4-300 is in a mute mode, the electronic device 4-300 may remain muted. In a state of the vibration mode or the mute mode, the electronic device 4-300 may not play the incoming call prompt tone with a sound.

S1916: The earphones 4-102 determine whether the earphones 4-102 are wirelessly connected to the smartwatch 4-101.

When the earphones 4-102 are in the worn state, the earphones 4-102 may determine whether the earphones 4-102 are wirelessly connected to the smartwatch 4-101.

If the earphones 4-102 are wirelessly connected to the smartwatch 4-101, the electronic device 4-300 and the smartwatch 4-101 may perform the following step S1917.

If there is no wireless connection between the earphones 4-102 and the smartwatch 4-101, the electronic device 4-300 and the earphones 4-102 may perform the following step S1919.

S1917: The electronic device 4-300 sends incoming call information to the smartwatch 4-101 through the earphones 4-102, and the smartwatch 4-101 displays an incoming call notification screen including an answer control.

For the incoming call notification screen that includes the answer control and that is displayed by the smartwatch, refer to the user interface 4-920 shown in FIG. 64B.

S1918: After any one of the electronic device 4-300, the smartwatch 4-101, and the earphones 4-102 detect an answer operation, the electronic device 4-300 answers the call, and the earphones 4-102 play call audio with a sound.

When a user wears the earphones 4-102, and the earphones 4-102 are connected to both the electronic device 4-300 and the smartwatch 4-101, the user may perform the answer operation on any one of the electronic device 4-300, the smartwatch 4-101, and the earphones 4-102, to answer the incoming call on the electronic device 4-300.

S1919: After the electronic device 4-300 or the earphones 4-102 detect an answer operation, the electronic device 4-300 answers the call, and the earphones 4-102 play call audio with a sound.

When there is no wireless connection between the earphones 4-102 and the smartwatch 4-101, the electronic device 4-300 cannot send incoming call information to the smartwatch 4-101. In this case, the smartwatch 4-101 does not give a user a prompt that the electronic device 4-300 receives the incoming call.

When the user wears the earphones 4-102, and the earphones 4-102 are connected to the electronic device 4-300, but there is no wireless connection between the earphones 4-102 and the smartwatch 4-101, the user may perform the answer operation on the electronic device 4-300 or the earphones 4-102 to answer the incoming call on the electronic device 4-300.

In a possible implementation, before the earphones 4-102 determine whether the earphones 4-102 are wirelessly connected to the smartwatch 4-101, if the electronic device 4-300 or the earphones 4-102 detect the answer operation, the electronic device 4-300 may answer the call. The earphones 4-102 may play the call audio on the electronic device 4-300 with a sound. In this case, the earphones 4-102 may no longer perform step S1916. In other words, step S1916 is optional.

S1920: The earphones 4-102 determine whether the earphones 4-102 are wirelessly connected to the smartwatch 4-101.

With reference to step S1914, it can be learned that regardless of whether the earphones 4-102 are in the worn state, the earphones 4-102 may determine whether the earphones 4-102 are wirelessly connected to the smartwatch 4-101.

When the earphones 4-102 are in the not-worn state, and the earphones 4-102 are wirelessly connected to the smartwatch 4-101, the electronic device 4-300 and the smartwatch 4-101 may perform the following step S1921.

When the earphones 4-102 are in the not-worn state, and there is no wireless connection between the earphones 4-102 and the smartwatch 4-101, the electronic device 4-300 may perform the following step S1923.

S1921: The electronic device 4-300 sends incoming call information to the smartwatch 4-101 through the earphones 4-102, and the smartwatch 4-101 prompts the user to wear the earphones 4-102 to answer the incoming call.

S1922: After detecting that the user wears the earphones 4-102, the smartwatch 4-101 sends a call answering instruction to the electronic device 4-300 through the earphones 4-102, the electronic device 4-300 answers the call, and the earphones 4-102 play call audio with a sound.

The user wears the earphones 4-102 according to the prompt of the smartwatch 4-101 in step S1921. When it is detected that the user wears the earphones 4-102 (that is, the earphones 4-102 change from the not-worn state to the worn state), the smartwatch 4-101 may send the call answering instruction to the electronic device 4-300 through the earphones 4-102. For a scenario in which the earphones 4-102 play the call audio on the electronic device 4-300 with a sound, refer to the descriptions of the scenario shown in FIG. 64C.

Optionally, in addition to triggering, by wearing the earphones 4-102, the electronic device 4-300 to answer the call, the user may perform an answer operation on the electronic device 4-300 to trigger the electronic device 4-300 to answer the call. After answering the call based on the answer operation performed on the electronic device 4-300, the electronic device 4-300 may also indicate the earphones 4-102 to play the call audio with a sound.

S1923: After detecting an answer operation, the electronic device 4-300 answers the call, and plays call audio with a sound.

When the earphones 4-102 are not connected to the electronic device 4-300, or when the earphones 4-102 are connected to the electronic device 4-300, but the earphones 4-102 are in the not-worn state and the earphones 4-102 are not connected to the smartwatch 4-101, the user needs to perform the answer operation on the electronic device 4-300. After detecting the answer operation, the electronic device 4-300 may answer the call, and play the call audio on the electronic device 4-300 with a sound through the audio playing apparatus on the electronic device 4-300.

It should be noted that an execution sequence of step S1913 and step S1916 (or step S1920) is not limited in this application. In a possible implementation, step S1916 (or step S1920) may be performed before step S1913. Alternatively, step S1916 (or step S1920) and step S1913 may be simultaneously performed.

When the earphones 4-102 are in the worn state, and the earphones 4-102 are wirelessly connected to the smartwatch 4-101, the smartwatch 4-101, the electronic device 4-300, and the earphones 4-102 may control the incoming call on the electronic device 4-300 according to step S1917 and step S1918.

When the earphones 4-102 are in the worn state, and there is no wireless connection between the earphones 4-102 and the smartwatch 4-101, the electronic device 4-300 and the earphones 4-102 may control the incoming call on the electronic device 4-300 according to step S1919.

When the earphones 4-102 are in the not-worn state, and the earphones 4-102 are wirelessly connected to the smartwatch 4-101, the smartwatch 4-101, the electronic device 4-200, and the earphones 4-102 may control the incoming call on the electronic device 4-300 according to step S1921 and step S1922.

When the earphones 4-102 are in the not-worn state, and there is no wireless connection between the earphones 4-102 and the smartwatch 4-101, the electronic device 4-300 may control the incoming call on the electronic device 4-300 according to step S1923.

In a possible implementation, the electronic device 4-300 may alternatively not perform step S1913. Specifically, when it is determined that the electronic device 4-300 is connected to the earphones 4-102, the electronic device 4-300 may send audio data of the incoming call prompt tone to the earphones 4-102. The earphones 4-102 may play the incoming call prompt tone (namely, step S1914). When it is determined that the electronic device 4-300 is not connected to the earphones 4-102, the electronic device 4-300 may play the incoming call prompt tone with a sound, vibrate, or remain muted. In addition, after answering the call, the electronic device 4-300 may play the call audio on the electronic device 4-300 with a sound through the audio playing apparatus on the electronic device 4-300.

**2. (S1924 to S1926) The electronic device 4-200 receives an incoming call, and the electronic device 4-200 preempts to be connected to the earphones 4-102.**

S1924: The smartwatch 4-101 receives incoming call information of the electronic device 4-200, and displays an incoming call notification screen including an answer control.

A communication connection is established between the smartwatch 4-101 and the electronic device 4-200.

When the earphones 4-102 play the call audio on the electronic device 4-300 with a sound (refer to step S1918 or step S1922), if the electronic device 4-200 receives the incoming call, the smartwatch 4-101 may display the incoming call notification screen indicating that the electronic device 4-200 receives the incoming call. For the incoming call notification screen, refer to the user interface 4-1040 shown in FIG. 65B.

S1925: The smartwatch 4-101 detects an operation of answering the incoming call on the electronic device 4-200, and indicates the earphones 4-102 to be connected to the electronic device 4-200.

For the operation of answering the incoming call on the electronic device 4-200, refer to the operation shown in FIG. 65B.

For a scenario in which the smartwatch 4-101 indicates the earphones 4-102 to be connected to the electronic device 4-200, refer to the descriptions of the scenario shown in FIG. 65C.

S1926: After the earphones 4-102 are successfully connected to the electronic device 4-200, the earphones 4-102 are disconnected from the electronic device 4-300, the earphones 4-102 play call audio on the electronic device 4-200 with a sound, and the electronic device 4-300 plays the call audio on the electronic device 4-300 with a sound through the audio playing apparatus on the electronic device 4-300.

The electronic device 4-200 preempts to be connected to the earphones 4-102 through the smartwatch 4-101, so that the earphones 4-102 play the call audio on the electronic device 4-200 with a sound. For a scenario in which the electronic device 4-300 independently plays the call audio on the electronic device 4-300 with a sound, refer to the descriptions of the scenario shown in FIG. 65D and FIG. 65E.

S1927: After the electronic device 4-200 ends the call, the earphones 4-102 are connected to the electronic device 4-300 again.

It can be learned from step S1924 to step S1926 that, when the earphones 4-102 perform an audio-related service on the electronic device 4-300, the electronic device 4-200 preempts to be connected to the earphones 4-102, so that the earphones 4-102 are disconnected from the electronic device 4-300. After being connected to the electronic device 4-200, the earphones 4-102 may play the call audio on the electronic device 4-200 with a sound. After the call on the electronic device 4-200 ends, the earphones 4-102 may be actively connected to an electronic device connected before the connection is preempted, namely, the electronic device 4-300. Alternatively, after detecting that the call on the electronic device 4-200 ends, the smartwatch 4-101 may indicate the earphones 4-102 to be connected to an electronic device connected before the connection is preempted, namely, the electronic device 4-300.

Optionally, after the electronic device 4-200 ends the call, the earphones 4-102 may maintain the connection to the electronic device 4-200.

In a possible implementation, when the earphones 4-102 are connected to the electronic device 4-300 and performs the audio-related service (for example, a music service or a call service) on the electronic device 4-300, if an audio-related service exists on the electronic device 4-200, the earphones 4-102 may switch, between the electronic device 4-200 and the electronic device 4-300 based on a user selection or based on a priority of an audio-related service, an electronic device connected to the earphones 4-102. In this way, the earphones 4-102 may intelligently switch an audio-related service performed on the earphones 4-102.

For example, when the electronic device 4-300 plays the call audio through the earphones 4-102 with a sound, if the electronic device 4-200 receives the incoming call, the smartwatch 4-101 may indicate, after detecting the operation of answering the incoming call on the electronic device 4-200, the earphones 4-102 to be connected to the electronic device 4-200. Then, the earphones 4-102 may switch the connected electronic device from the electronic device 4-300 to the electronic device 4-200. In this way, the earphones 4-102 may switch from playing the call audio on the electronic device 4-300 with a sound to playing the call audio on the electronic device 4-200 with a sound. It can be learned that the user may select the earphones 4-102 through the smartwatch 4-101, to perform an audio-related service on a specified device.

For another example, an audio-related service has a priority. Here, an example in which a priority of the call service is higher than a priority of the music service is used for description. When the electronic device 4-300 plays music on the electronic device 4-300 with a sound through the earphones 4-102, if the electronic device 4-200 receives the incoming call, the smartwatch 4-101 may indicate, after the electronic device 4-200 answers the call, the earphones 4-102 to be connected to the electronic device 4-200. After being connected to the electronic device 4-200, the earphones 4-102 may play the call audio on the electronic device 4-200 with a sound. The earphones 4-102 may be disconnected from the electronic device 4-300. The electronic device 4-300 may pause playing of the music. It can be learned that when the user listens to the music on the electronic device 4-300 through the earphones 4-102, the electronic device 4-200 receives the incoming call. Because the priority of the call service is higher than the priority of the music service, the earphones 4-102 may be connected to the electronic device 4-200 and play the call audio on the electronic device 4-200 with a sound. In this way, the user can use the earphones 4-102 to switch from a state of listening to the music on the electronic device 4-300 to a state of listening to the call audio on the electronic device 4-200, without manually switching the electronic device connected to the earphones 4-102. Optionally, after the call on the electronic device 4-200 ends, the earphones 4-102 may be reconnected to the electronic device 4-300, and continue to play the music on the electronic device 4-300 with a sound. Alternatively, after the call on the electronic device 4-200 ends, the earphones 4-102 may maintain the connection to the electronic device 4-200.

The electronic device connected to the earphones 4-102 is not limited in embodiments of this application. For example, in addition to the electronic device 4-200 and the electronic device 4-300, the earphones 4-102 may establish communication connections to more electronic devices such as a mobile phone, a tablet computer, and a notebook computer. The earphones 4-102 may perform an audio-related service on the electronic device connected to the earphones 4-102.

It can be learned from the method shown in FIG. 74A and FIG. 74B that the user may control the call on the electronic device 4-300 through the smartwatch 4-101 and the earphones 4-102. The user may perform the answer operation on the smartwatch 4-101, the earphones 4-102, or the electronic device 4-300 based on a requirement of the user, and choose to use the earphones 4-102 or the electronic device 4-300 to answer the call. The foregoing method can help the user more conveniently control the call on the electronic device 4-300, to improve call experience of the user. In addition, the user may further control, through the smartwatch 4-101, the earphones 4-102 to play the call audio on the electronic device 4-200 or the electronic device 4-300 with a sound. In this way, the user may select, based on a requirement, the earphones 4-102 to play call audio on a specified device with a sound.

In some embodiments, the smartwatch 4-101 may support a plurality of connections. In addition to being connected to the electronic device 4-200, the smartwatch 4-101 may establish a communication connection to an electronic device like the electronic device 4-300.

**FIG. 75A to FIG. 75F** **are diagrams of an example of a scenario in which the smartwatch 4-101 controls the electronic device 4-300 to answer a call when the smartwatch 4-101 is connected to a plurality of electronic devices.**

As shown in FIG. 75A, a communication connection is established between the smartwatch 4-101 and each of the electronic device 4-200, the electronic device 4-300, and the earphones 4-102. A communication connection is established between the earphones 4-102 and the electronic device 4-300.

As shown in FIG. 75B, after the earphones 4-102 are placed in a compartment, the communication connection between the earphones 4-102 and the electronic device 4-300 is disconnected. Because there is a communication connection between the smartwatch 4-101 and the electronic device 4-300, the smartwatch 4-101 may still control the electronic device 4-300. For example, a user may control a call service, a music service, and the like on the electronic device 4-300 through the smartwatch 4-101.

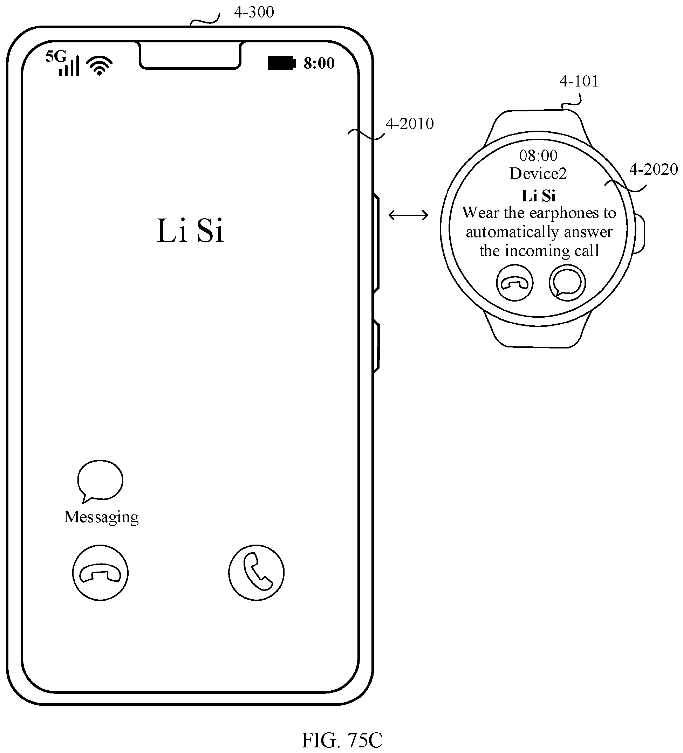

As shown in FIG. 75C, the electronic device 4-300 receives an incoming call. The electronic device 4-300 may display a user interface 4-2610. For the user interface 4-2610, refer to the user interface 4-910 shown in FIG. 64B. Because the electronic device 4-300 is connected to the smartwatch 4-101, the electronic device 4-300 may send an incoming call message to the smartwatch 4-101. The smartwatch 4-101 may display an incoming call notification screen based on the received incoming call message, to give the user a prompt that the electronic device 4-300 receives the incoming call. For example, the incoming call notification screen displayed by the smartwatch 4-101 may be a user interface 4-2620 shown in FIG. 75C. For the user interface 4-2620, refer to the user interface 4-620 shown in FIG. 61B.

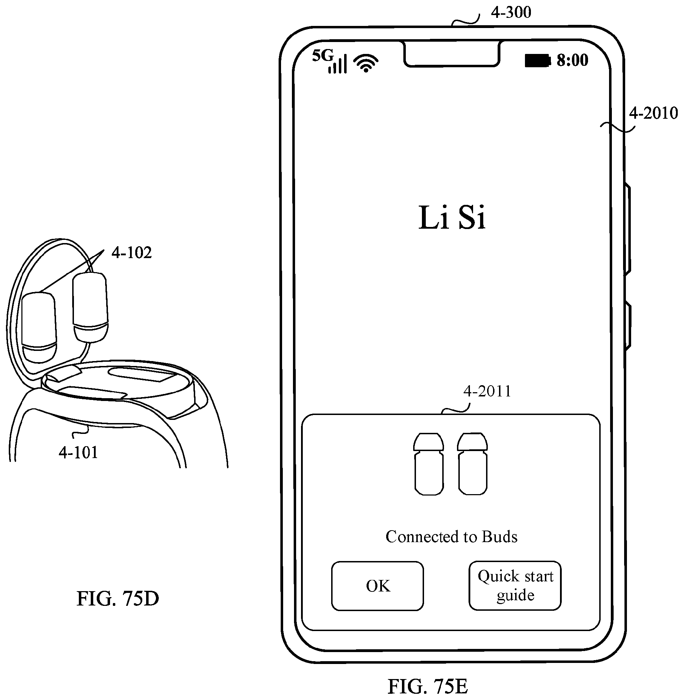

As shown in FIG. 75D, after the earphones 4-102 are removed from the compartment, the earphones 4-102 may be reconnected to the electronic device 4-300.

As shown in FIG. 75E, when the earphones 4-102 are reconnected to the electronic device 4-300, the electronic device 4-300 may display a connection widget 4-2011 on the user interface 4-2610. The connection widget 4-2011 may be used to give the user a prompt that the earphones 4-102 have established the communication connection to the electronic device 4-300. Content displayed in the connection widget 4-2011 is not limited in embodiments of this application.

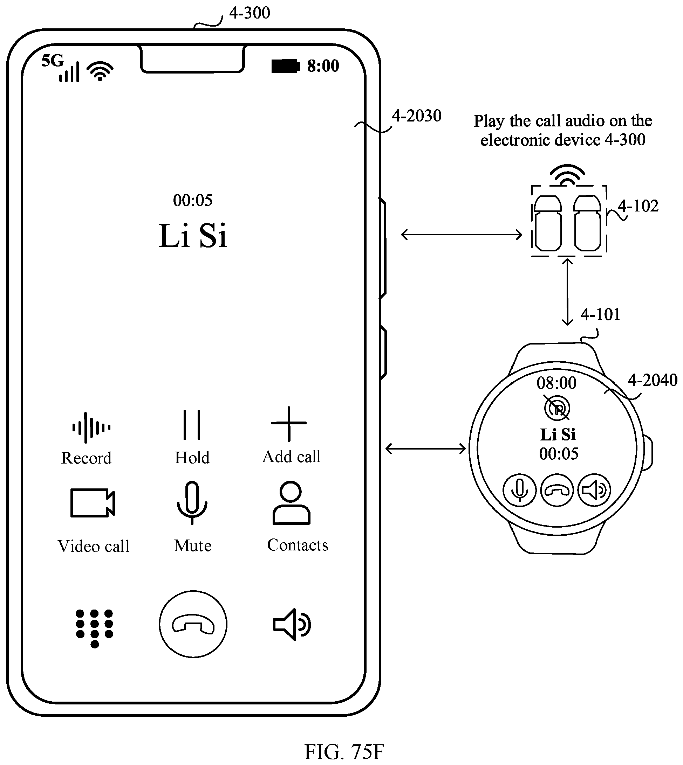

As shown in FIG. 75F, after the electronic device 4-300 answers the incoming call, the electronic device 4-300 may display a user interface 4-2630. The electronic device 4-300 may transmit audio data of the call with the earphones 4-102. The earphones 4-102 may play call audio on the electronic device 4-300 with a sound. The electronic device 4-300 may transmit call control information with the smartwatch 4-101. The smartwatch 4-101 may display a user interface 4-2640 shown in FIG. 75F, so that the user controls, through the smartwatch 4-101, the call service on the electronic device 4-300. For the user interface 4-2630 and the user interface 4-2640, refer to the user interface 4-930 and the user interface 4-940 shown in FIG. 64C, respectively.

It can be learned from the scenario shown in FIG. 75A to FIG. 75F that the smartwatch 4-101 may be connected to a plurality of electronic devices such as the electronic device 4-200 and the electronic device 4-300. The smartwatch 4-101 may control one or more services (for example, a call service and a music service) on the plurality of electronic devices. According to the foregoing embodiments, the user can conveniently control the plurality of electronic devices on the smartwatch 4-101 in a centralized manner, so that time and energy of the user for searching for a device control operation entry on different electronic devices are reduced, and user experience of using a wearable device is improved.

**FIG. 76** **shows an example of a flowchart of a call control method.**

As shown in FIG. 76, the call control method may include step S2111 to step S2121. The method may be a method for controlling the electronic device 4-200 to make an outgoing call based on the communication system 40 shown in FIG. 4.

S2111: The smartwatch 4-101 receives an operation of making an outgoing call to a phone number 1, where the phone number 1 is a phone number that has been called by the electronic device 4-200.

For the operation of making the outgoing call to the phone number 1, refer to the operation performed on the call record 4-1421 shown in FIG. 69C. The phone number 1 may be a phone number corresponding to a call record in call records stored in the smartwatch 4-101. The call record may be a call record on the electronic device 4-200. In other words, the electronic device 4-200 is previously used to talk with a user to which the phone number 1 belongs.

Optionally, the phone number 1 may be a phone number of a contact in a contact list stored in the smartwatch 4-101. The contact list may be obtained by the smartwatch 4-101 from the electronic device 4-200. Alternatively, the phone number 1 may be a phone number entered by a user and received by the smartwatch 4-101. The operation of making the outgoing call to the phone number 1 is not limited in embodiments of this application.

S2112: The smartwatch 4-101 determines whether the smartwatch is connected to the earphones 4-102.

When an operation of making an outgoing call to a specified phone number (for example, the phone number 1) is received, the smartwatch 4-101 may determine whether the smartwatch 4-101 is connected to the earphones 4-102.

When it is determined that the smartwatch 4-101 is not connected to the earphones 4-102, the smartwatch 4-101 may perform the following step S2113.

When it is determined that the smartwatch 4-101 is connected to the earphones 4-102, the smartwatch 4-101 may perform the following step S2114.

It should be noted that, that the smartwatch 4-101 is not connected to the earphones 4-102 may indicate that the smartwatch 4-101 is not connected to two earphones in the earphones 4-102. That the smartwatch 4-101 is connected to the earphones 4-102 may indicate that the smartwatch 4-101 is connected to one earphone or two earphones in the earphones 4-102.

S2113: The smartwatch 4-101 prompts the user to connect the smartwatch 4-101 and the earphones 4-102.

For a method in which the smartwatch 4-101 prompts the user to connect the smartwatch 4-101 and the earphones 4-102, refer to the foregoing descriptions of FIG. 70C.

S2114: The smartwatch 4-101 determines whether the earphones 4-102 are connected to the electronic device 4-200.

The smartwatch 4-101 may recognize an association relationship between the phone number 1 and the electronic device 4-200. The association relationship between the phone number 1 and the electronic device 4-200 may be represented as follows: The phone number 1 is a phone number corresponding to a call record on the electronic device 4-200, or the phone number 1 is a phone number of a contact in the electronic device 4-200.

When the phone number 1 is associated with the electronic device 4-200, the smartwatch 4-101 may determine whether the earphones 4-102 are connected to the electronic device 4-200.

When it is determined that the earphones 4-102 are not connected to the electronic device 4-200, the smartwatch 4-101 may perform the following step S2115.

When it is determined that the earphones 4-102 are connected to the electronic device 4-200, the smartwatch 4-101 may perform the following step S2118.

S2115: The smartwatch 4-101 indicates the earphones 4-102 to be connected to the electronic device 4-200.

When the earphones 4-102 are not connected to the electronic device 4-200, the smartwatch 4-101 may indicate the earphones 4-102 to be connected to the electronic device 4-200. For a method in which the smartwatch 4-101 indicates the earphones 4-102 to be connected to the electronic device 4-200, refer to the foregoing descriptions of FIG. 63C.

S2116: The smartwatch 4-101 determines whether the earphones 4-102 are successfully connected to the electronic device 4-200.

When it is determined that the earphones 4-102 fail to be connected to the electronic device 4-200, the smartwatch 4-101 may perform the following step S2117.

When it is determined that the earphones 4-102 are successfully connected to the electronic device 4-200, the smartwatch 4-101 may perform the following step S2118.

S2117: The smartwatch 4-101 gives the user a prompt that the earphones 4-102 fail to be connected to the electronic device 4-200, and the outgoing call to the phone number 1 cannot be made.

S2118: The smartwatch 4-101 determines whether the earphones 4-102 are in a worn state.

When it is determined that the earphones 4-102 are in the worn state, the smartwatch 4-101 may perform the following step S2119.

When it is determined that the earphones 4-102 are in a not-worn state, the smartwatch 4-101 may perform the following step S2120.

That the earphones 4-102 are in the worn state may indicate that one earphone or the two earphones in the earphones 4-102 are in the worn state. That the earphones 4-102 are in the not-worn state may indicate that the two earphones in the earphones 4-102 are both in the not-worn state.

S2119: The smartwatch 4-101 indicates the electronic device 4-200 to make the outgoing call to the phone number 1, and the earphones 4-102 play call audio on the electronic device 4-200 with a sound.

The smartwatch 4-101 may send an outgoing call-making instruction to the electronic device 4-200. The outgoing call-making instruction may include the phone number 1. The electronic device 4-200 may make the outgoing call to the phone number 1 according to the outgoing call-making instruction. Because the earphones 4-102 are connected to the electronic device 4-200, the earphones 4-102 may play the call audio on the electronic device 4-200 with a sound.

S2120: The smartwatch 4-101 prompts the user to wear the earphones 4-102.

For a method in which the smartwatch 4-101 prompts the user to wear the earphones 4-102, refer to the foregoing descriptions of FIG. 69D.

S2121: The smartwatch 4-101 detects that the earphones 4-102 are in the worn state.

The user may wear the earphones 4-102 according to the prompt of the smartwatch 4-101 in step S2120. When it is detected that the earphones 4-102 change from the not-worn state to the worn state, the smartwatch 4-101 may perform step S2119.

It can be learned from the method shown in FIG. 76 that the smartwatch 4-101 may control the electronic device 4-200 to make an outgoing call. In this way, the user may not need to perform an operation on the electronic device 4-200, but perform an operation only on the smartwatch 4-101, to trigger the electronic device 4-200 to make a call to a specified contact and answer the call through the earphones 4-102. According to the foregoing method, call experience of the user can be improved.

In addition to controlling the electronic device 4-200 to make an outgoing call, the smartwatch 4-101 may control more electronic devices to make an outgoing call.

For example, in the communication system 50 shown in FIG. 5, the earphones 4-102 are connected to the smartwatch 4-101 and the electronic device 4-300. The smartwatch 4-101 may control, through the earphones 4-102, the electronic device 4-300 to make an outgoing call. For a method for controlling the electronic device 4-300 to make an outgoing call, refer to the descriptions shown in FIG. 71E and FIG. 71F.

For another example, the smartwatch 4-101 may support a plurality of connections. In addition to being connected to the electronic device 4-200, the smartwatch 4-101 may be connected to an electronic device like the electronic device 4-300. For a method in which the smartwatch 4-101 controls the electronic device 4-300 to make the outgoing call, refer to the method shown in FIG. 76 in which the smartwatch 4-101 controls the electronic device 4-200 to make the outgoing call.

An execution sequence of step S2114 and step S2118 in FIG. 76 is not limited in embodiments of this application. In a possible implementation, the smartwatch 4-101 may first perform step S2118 and then perform step S2114. When the smartwatch 4-101 is connected to the earphones 4-102, the smartwatch 4-101 may determine whether the earphones 4-102 are in the worn state. When it is determined that the earphones 4-102 are in the worn state, the smartwatch 4-101 may determine whether the earphones 4-102 are connected to the electronic device 4-200. When it is determined that the earphones 4-102 are connected to the electronic device 4-200, the smartwatch 4-101 may perform step S2119. When it is determined that the earphones 4-102 are in the not-worn state, the smartwatch 4-101 may prompt the user to wear the earphones 4-102 (namely, step S2120). When the earphones 4-102 are in the worn state and the earphones 4-102 are connected to the electronic device 4-200, the smartwatch 4-101 may indicate the electronic device 4-200 to make the outgoing call (namely, step S2119). Optionally, the smartwatch 4-101 may simultaneously perform step S2114 and step S2118.

In a possible implementation, the smartwatch 4-101 may not perform one or more of step S2112, step S2114, and step S2118 in FIG. 76. That is, step S2112, step S2114, and step S2118 are all optional.

For example, the smartwatch 4-101 may not perform step S2112, step S2114, and step S2118 in FIG. 76. Specifically, when receiving the operation of making the outgoing call to the phone number 1, the smartwatch 4-101 may recognize the association relationship between the phone number 1 and the electronic device 4-200. The smartwatch 4-101 may directly indicate the electronic device 4-200 to make the outgoing call to the phone number 1. If the electronic device 4-200 is connected to the earphones 4-102, the earphones 4-102 may play the call audio on the electronic device 4-200 with a sound. If the electronic device 4-200 is not connected to the earphones 4-102, the electronic device 4-200 may play the call audio on the electronic device 4-200 with a sound through an audio playing apparatus on the electronic device 4-200.

For another example, the smartwatch 4-101 may not perform step S2118 in FIG. 76. When it is determined that the earphones 4-102 are connected to the electronic device 4-200, the smartwatch 4-101 may indicate the electronic device 4-200 to make the outgoing call to the phone number 1. The earphones 4-102 may play the call audio on the electronic device 4-200 with a sound. Optionally, when receiving the outgoing call-making instruction of the smartwatch 4-101, the electronic device 4-200 may determine whether the earphones 4-102 are in the worn state. When the electronic device 4-200 determines that the earphones 4-102 are in the worn state, the electronic device 4-200 may play the call audio with a sound through the earphones 4-102. When the electronic device 4-200 determines that the earphones 4-102 are in the not-worn state, the electronic device 4-200 may independently play the call audio with a sound.

For another example, the smartwatch 4-101 may not perform step S2114 in FIG. 76. When the earphones 4-102 are connected to the smartwatch 4-101, the smartwatch 4-101 may directly perform step S2118. After the smartwatch 4-101 indicates the electronic device 4-200 to make the outgoing call to the phone number 1, the electronic device 4-200 may play, when being connected to the earphones 4-102, the call audio with a sound through the earphones 4-102.

In some embodiments, the smartwatch 4-101 may determine distances between surrounding electronic devices and the smartwatch 4-101, or determine distances between surrounding electronic devices and the earphones 4-102. After receiving the outgoing call-making operation, the smartwatch 4-101 may indicate an electronic device that is closest to the smartwatch 4-101 and that has an outgoing call-making function to make an outgoing call, or indicate an electronic device that is closest to the earphones 4-102 and that has an outgoing call-making function to make an outgoing call.

**FIG. 77** **shows an example of a flowchart of another call control method.**

As shown in FIG. 77, the call control method may include step S2211 to step S2214.

S2211: The smartwatch 4-101 receives an operation of making an outgoing call to a phone number 2.

The phone number 2 may be a phone number corresponding to a call record in call records stored in the smartwatch 4-101. Alternatively, the phone number 2 may be a phone number of a contact in a contact list stored in the smartwatch 4-101. Alternatively, the phone number 2 may be a phone number entered by a user and received by the smartwatch 4-101.

S2212: The smartwatch 4-101 searches for a surrounding electronic device that can be used to make an outgoing call, and finds the electronic device 4-300, where the electronic device 4-300 is an electronic device that is closest to the smartwatch 4-101 and that can be used to make an outgoing call.

In a possible implementation, the smartwatch 4-101 may search, through Bluetooth communication, for surrounding electronic devices that can make an outgoing call and determine distances between these electronic devices that can make an outgoing call and the smartwatch 4-101. For example, the smartwatch 4-101 may calculate the distances between the electronic devices and the smartwatch 4-101 based on strength of received Bluetooth signals of the surrounding electronic devices. An implementation method in which the smartwatch 4-101 searches for the surrounding electronic devices that can make an outgoing call and determines the distances between these electronic devices that can make an outgoing call and the smartwatch 4-101 is not limited in embodiments of this application.

Here, an example in which the electronic device 4-300 is an electronic device that is closest to the smartwatch 4-101 and that can make an outgoing call when the smartwatch 4-101 receives the operation of making the outgoing call to the phone number 2 is used for description.

S2213: The smartwatch 4-101 indicates the electronic device 4-300 to make the outgoing call to the phone number 2.

A communication connection may be established between the smartwatch 4-101 and the electronic device 4-300. The smartwatch 4-101 may send an outgoing call-making instruction to the electronic device 4-300. The outgoing call-making instruction may include the phone number 2. The electronic device 4-300 may make the outgoing call to the phone number 2 according to the outgoing call-making instruction. Alternatively, a communication connection is established between the earphones 4-102 and the electronic device 4-300. In addition, a communication connection is established between the earphones 4-102 and the smartwatch 4-101. The smartwatch 4-101 may send an outgoing call-making instruction to the electronic device 4-300 through the earphones 4-102.

In a possible implementation, the smartwatch 4-101 may further choose to indicate an electronic device that is closest to the earphones 4-102 and that can make an outgoing call to make the outgoing call. Specifically, after receiving the operation of making the outgoing call to the phone number 2, the smartwatch 4-101 may send a device search instruction to the earphones 4-102. According to the device search instruction, the earphones 4-102 may search for the electronic device that is closest to the earphones 4-102 and that can make an outgoing call. For example, the earphones 4-102 find that the electronic device 4-300 is the electronic device that is closest to the earphones 4-102 and that can make an outgoing call. The earphones 4-102 may send device information of the electronic device 4-300 to the smartwatch 4-101. The smartwatch 4-101 may directly indicate the electronic device 4-300 to make the outgoing call to the phone number 2. Alternatively, the smartwatch 4-101 may indicate, through the earphones 4-102, the electronic device 4-300 to make the outgoing call to the phone number 2. For a method in which the earphones 4-102 search for the electronic device that is closest to the earphones 4-102 and that can make an outgoing call, refer to the method in which the smartwatch 4-101 searches for the electronic device that is closest to the smartwatch 4-101 and that can make an outgoing call in step S2212.

S2214: When the electronic device 4-300 is connected to the earphones 4-102, the earphones 4-102 play call audio on the electronic device 4-300 with a sound; or when the electronic device 4-300 is not connected to the earphones 4-102, the electronic device 4-300 plays call audio on the electronic device 4-300 with a sound.

It can be learned from the method shown in FIG. 77 that, after receiving the outgoing call-making operation, the smartwatch 4-101 may search for an electronic device that is closest to the smartwatch 4-101 or the earphones 4-102 and that can make an outgoing call, and indicate the electronic device to make the outgoing call. It may be understood that the user wears the smartwatch 4-101 and/or the earphones 4-102. An electronic device closest to the smartwatch 4-101 or the earphones 4-102 is usually also an electronic device closest to the user. According to the foregoing method, the user can conveniently use the electronic device closest to the user to make an outgoing call. In this way, the user can better control the outgoing call. This can reduce a case in which the user cannot take an electronic device in a timely manner to answer a call and control the call because the electronic device is too far away from the user.

In some embodiments, the earphones 4-102 may search for surrounding electronic devices, and calculate distances between the surrounding electronic devices and the earphones 4-102. The earphones 4-102 may play call audio on an electronic device closest to the earphones 4-102 with a sound. The electronic devices that can be found by the earphones 4-102 may include an electronic device currently connected to the earphones 4-102 and an electronic device to which the earphones 4-102 currently are not connected but have been connected.

For example, when one or two earphones in the earphones 4-102 are in an out state, surrounding electronic devices may be searched for through Bluetooth communication and distances between these electronic devices and the earphones 4-102 may be determined. The earphones 4-102 may calculate the distances between the electronic devices and the earphones 4-102 based on strength of received Bluetooth signals of the surrounding electronic devices. A method in which the earphones 4-102 calculate the distances between the surrounding electronic devices and the earphones 4-102 is not limited in embodiments of this application.

When the earphones 4-102 find that the electronic device 4-200 is an electronic device that is closest to the earphones 4-102 and that is performing a call service, the earphones 4-102 may be connected to the electronic device 4-200, and play call audio on the electronic device 4-200 with a sound.

The user may move in a process of wearing the earphones 4-102. Herein, a scenario in which the user wears the earphones 4-102 and moves from a location close to the electronic device 4-200 to a location close to the electronic device 4-300 is used as an example for description. The electronic device 4-300 is also performing a call service.

As a location of the earphones 4-102 changes, the earphones 4-102 may detect that an electronic device that is closest to the earphones 4-102 and that is performing a call service changes from the electronic device 4-200 to the electronic device 4-300. Then, the earphones 4-102 may be connected to the electronic device 4-300, and play the call audio on the electronic device 4-300 with a sound. When the earphones 4-102 play the call audio on the electronic device 4-300 with a sound, if the call on the electronic device 4-200 is not hung up, the electronic device 4-200 may play the call audio on the electronic device 4-200 with a sound through an audio playing apparatus on the electronic device 4-200.

In a possible implementation, when the earphones 4-102 are in a worn state, the earphones 4-102 may calculate the distances between the surrounding electronic devices and the earphones 4-102 and play call audio on an electronic device closest to the earphones 4-102 with a sound.

In some embodiments, a voice interaction application may be installed in the smartwatch 4-101. For example, the voice interaction application may be a voice assistant. The smartwatch 4-101 may wake up the voice assistant in response to a detected wake-up word. After being woken up, the voice assistant may be configured to execute a voice instruction of the user. Content of the wake-up word is not limited in embodiments of this application.

For example, when detecting a voice instruction for making an outgoing call to a phone number 3, the smartwatch 4-101 may recognize an electronic device associated with the phone number 3, and indicate the electronic device associated with the phone number 3 to make the outgoing call to the phone number 3. Alternatively, the smartwatch 4-101 may search for surrounding electronic devices that can make an outgoing call and determine distances between these electronic devices and the smartwatch 4-101. The smartwatch 4-101 may indicate an electronic device that is closest to the smartwatch 4-101 and that can make an outgoing call to make the outgoing call to the phone number 3.

For another example, the electronic device 4-200 receives an incoming call. The smartwatch 4-101 receives incoming call information of the electronic device 4-200. In response to a voice instruction for answering the incoming call, the smartwatch 4-101 may control the electronic device 4-200 to answer the incoming call.

Optionally, a voice assistant may be installed in the earphones 4-102. The earphones 4-102 may recognize a voice instruction of the user through the voice assistant, and execute the voice instruction of the user (for example, a voice instruction for making an outgoing call or a voice instruction for answering an incoming call). For a method in which the earphones 4-102 execute the voice instruction through the voice assistant, refer to the foregoing method in which the smartwatch 4-101 executes the voice instruction. Details are not described herein again.

In other words, the user may directly deliver a voice instruction to the smartwatch 4-101 or the earphones 4-102, to control, through the smartwatch 4-101 or the earphones 4-1012, an electronic device like the electronic device 4-200 or the electronic device 4-300 to make an outgoing call or answer a call. According to the foregoing method, a call control operation performed by the user can be simplified, and user experience of performing call control through a wearable device can be improved.

It should be noted that the voice instruction is not limited to a call control voice instruction (for example, a voice instruction for making an outgoing call or a voice instruction for answering an incoming call). The wearable device may further control an electronic device like the electronic device 4-200 or the electronic device 4-300 in response to a voice instruction like a voice instruction of the user for controlling a music service (for example, a voice instruction for playing music, a voice instruction for pausing playing of music, or a voice instruction for increasing/decreasing volume).

In some embodiments, a communication connection may be established between the smartwatch 4-101 and the electronic device 4-200. The smartwatch 4-101 may further communicate with the electronic device 4-300 through the earphones 4-102. The smartwatch 4-101 may obtain device information of an electronic device whose device account is the same as that of the electronic device 4-200 and/or the electronic device 4-300. In addition, the smartwatch 4-101 may control the electronic device whose device account is the same as that of the electronic device 4-200 and/or the electronic device 4-300. For example, the smartwatch 4-101 may control the electronic device to make an outgoing call, answer a call, play music, and the like. Here, an example in which the smartwatch 4-101 controls the electronic device whose device account is the same as that of the electronic device 4-200 and/or the electronic device 4-300 to make an outgoing call is used for description.

**FIG. 78A to FIG. 78F** **show an example of a scenario in which the smartwatch 4-101 controls a same-account device to make an outgoing call.**

The same-account device may include an electronic device whose device account is the same as a device account of an electronic device having been connected to the smartwatch 4-101 and/or the earphones 4-102. For example, the smartwatch 4-101 is connected to the electronic device 4-200. The earphones 4-102 are connected to the electronic device 4-300. In this case, the same-account device may include an electronic device whose device account is the same as that of the electronic device 4-200, and an electronic device whose device account is the same as that of the electronic device 4-300.

The device account may be a login account on an electronic device, for example, a Huawei account. A type of the device account is not limited in embodiments of this application.

As shown in FIG. 78A, the smartwatch 4-101 is paired with the electronic device 4-200, and a communication connection is established between the smartwatch 4-101 and the electronic device 4-200. A communication connection is established between the smartwatch 4-101 and the earphones 4-102. A communication connection has been established between the earphones 4-102 and the electronic device 4-200, but the earphones 4-102 and the electronic device 4-200 currently are not connected. A communication connection is currently established between the earphones 4-102 and the electronic device 4-300. An electronic device 4-400 has not been connected to the smartwatch 4-101, and has not been connected to the earphones 4-102. The electronic device 4-400 may be an electronic device having an outgoing call-making function, for example, a mobile phone, a tablet computer, or a notebook computer. A type of the electronic device 4-400 is not limited in embodiments of this application.

Here, an example in which the electronic device 4-400 is the same-account device is used for description. The electronic device 4-400 and the electronic device 4-200 have a same device account.

In a possible implementation, the electronic device 4-400 and the electronic device 4-200 may share pairing connection information based on the same device account. A device that is previously paired with and connected to the electronic device 4-200 includes the smartwatch 4-101 and the earphones 4-102. The electronic device 4-200 may share watch information of the smartwatch 4-101 and earphone information of the earphones 4-102 with the electronic device 4-400. For example, the watch information may include a media access control address (media access control address, MAC address) of the smartwatch 4-101. The earphone information may include a MAC address of the earphones 4-102. The electronic device 4-400 may establish a communication connection to the smartwatch 4-101 based on the watch information, and establish a communication connection to the earphones 4-102 based on the earphone information. Content of the watch information and the earphone information is not limited in embodiments of this application.

In addition, the electronic device 4-200 may further share device information of the electronic device 4-400 with the smartwatch 4-101 and the earphones 4-102. For example, the device information of the electronic device 4-400 may include a MAC address of the electronic device 4-400. The smartwatch 4-101 and the earphones 4-102 may establish communication connections to the electronic device 4-400 based on the device information of the electronic device 4-400. Content of the device information of the electronic device 4-400 is not limited in embodiments of this application.

It should be noted that, a method in which the electronic device 4-200 shares the watch information and the earphone information with the electronic device 4-400 may include: The electronic device 4-200 directly sends the watch information and the earphone information to the electronic device 4-400. The electronic device 4-200 stores the watch information and the earphone information in a cloud server, and the electronic device 4-400 may obtain the watch information and the earphone information from the cloud server. It may be understood that the cloud server may include cloud storage space corresponding to different device accounts. Because the electronic device 4-200 and the electronic device 4-400 have the same device account, the electronic device 4-200 and the electronic device 4-400 may access same cloud storage space in the cloud server. The method in which the electronic device 4-200 shares the watch information and the earphone information with the electronic device 4-400 is not limited in embodiments of this application.

A method in which the electronic device 4-200 shares the information about the electronic device 4-400 with the smartwatch 4-101 and the earphones 4-102 may include: The electronic device 4-200 directly sends the device information of the electronic device 4-400 to the smartwatch 4-101 and the earphones 4-102 through a wireless connection (for example, a Bluetooth communication connection). The electronic device 4-200 directly sends the device information of the electronic device 4-400 to the smartwatch 4-101 through a wireless connection (for example, a Bluetooth communication connection), and then the smartwatch 4-101 sends the device information of the electronic device 4-400 to the earphones 4-102. The electronic device 4-200 directly sends the device information of the electronic device 4-400 to the earphones 4-102 through a wireless connection (for example, a Bluetooth communication connection), and then the earphones 4-102 send the device information of the electronic device 4-400 to the smartwatch 4-101. The electronic device 4-200 shares the device information of the electronic device 4-400 with the smartwatch 4-101 and the earphones 4-102 through the cloud server (for example, the electronic device 4-200 stores the device information of the electronic device 4-400 in the cloud server, the smartwatch 4-101 may obtain the device information of the electronic device 4-400 from the cloud server, and the smartwatch 4-101 may send the device information of the electronic device 4-400 to the earphones 4-102). The method in which the electronic device 4-200 shares the device information of the electronic device 4-400 with the smartwatch 4-101 and the earphones 4-102 is not limited in embodiments of this application.

In a possible implementation, after the electronic device 4-400 is paired with the earphones 4-102 and a communication connection is established, the electronic device 4-400 and the smartwatch 4-101 may communicate with each other through the earphones 4-102. The electronic device 4-400 may send the device information of the electronic device 4-400 to the smartwatch 4-101 through the earphones 4-102. The smartwatch 4-101 may control a call service on the electronic device 4-400 through the earphones 4-102. For example, the electronic device 4-400 receives an incoming call. The earphones 4-102 may play the call audio on the electronic device 4-400 with a sound. The electronic device 4-400 may send incoming call information to the smartwatch 4-101 through the earphones 4-102. The smartwatch 4-101 may display an incoming call notification screen and a call screen, so that the user controls, through the smartwatch 4-101, the electronic device 4-400 to answer the incoming call and hang up the call. In addition, the smartwatch 4-101 may further store call records on the electronic device 4-400. For a method in which the smartwatch 4-101 controls the call service on the electronic device 4-400 through the earphones 4-102, refer to the foregoing descriptions shown in FIG. 64A to FIG. 64C of controlling, by the smartwatch 4-101, the call service on the electronic device 4-300 through the earphones 4-102. Details are not described herein again.

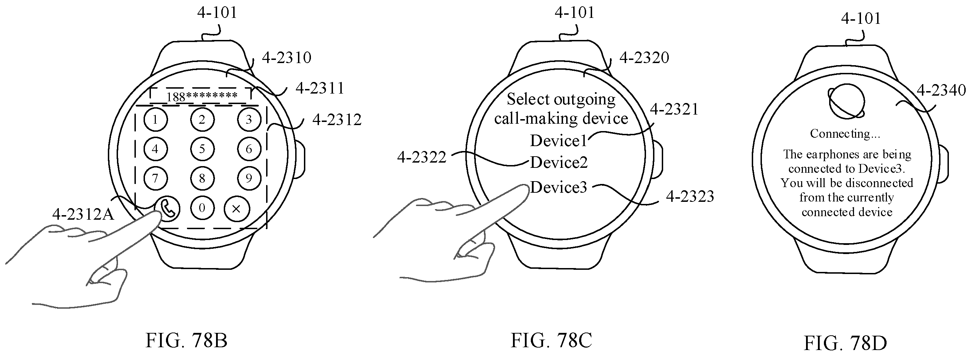

As shown in FIG. 78B, the smartwatch 4-101 may display a user interface 4-2310. The user interface 4-2310 may be a dialing interface, and may be used by the user to enter a phone number and make a call. The user interface 4-2310 may include a phone number display area 4-2311 and a dial button area 4-2312. The phone number display area 4-2311 may be used to display the phone number entered by the user. The dial button area 4-2312 may include a control for entering a phone number and a control for making a call. For example, the control for entering a phone number may include a number button. The control for making a call may be a dial control 4-2312A. After entering a to-be-dialed phone number, the user may make an outgoing call to the entered phone number through the dial control 4-2312A.

In response to an operation, for example, a touch operation, performed on the dial control 4-2312A shown in FIG. 78B, the smartwatch 4-101 may search for an electronic device having been connected to the smartwatch 4-101 and/or the earphones 4-102 and a same-account device, and display a user interface 4-2320 shown in FIG. 78C. The user interface 4-2320 may include device options of one or more electronic devices. The one or more electronic devices may include the electronic device having been connected to the smartwatch 4-101 and/or the earphones 4-102 and the same-account device. For example, the electronic device having been connected to the smartwatch 4-101 and/or the earphones 4-102 includes the electronic device 4-200 and the electronic device 4-300. The same-account device includes the electronic device 4-400. The user interface 4-2320 may include a device option 4-2321 corresponding to the electronic device 4-200, a device option 4-2322 corresponding to the electronic device 4-300, and a device option 4-2323 corresponding to the electronic device 4-400. Display content of a device option may include a device name of an electronic device corresponding to the device option. For example, a name of the electronic device 4-400 is "Device3". Display content of the device option 4-2323 may be "Device3". The name of the electronic device 4-400 is not limited in embodiments of this application.

The device option on the user interface 4-2320 may indicate an electronic device corresponding to the device option to make an outgoing call.

In response to an operation, for example, a touch operation, performed on the device option 4-2323, the smartwatch 4-101 may determine whether the earphones 4-102 are connected to the electronic device 4-400 corresponding to the device option 4-2323. It can be learned from FIG. 78A that the earphones 4-102 are currently connected to the electronic device 4-300, but are not connected to the electronic device 4-400. The smartwatch 4-101 may indicate the earphones 4-102 to establish a communication connection to the electronic device 4-400, and display a user interface 4-2340 shown in FIG. 78D. The user interface 2340 may be used to give the user a prompt that the earphones 4-102 are establishing the communication connection to the electronic device 4-400. The smartwatch 4-101 may send, to the earphones 4-102, an instruction for establishing the communication connection to the electronic device 4-400. The earphones 4-102 may request, according to the communication connection establishment instruction, to establish the communication connection to the electronic device 4-400.

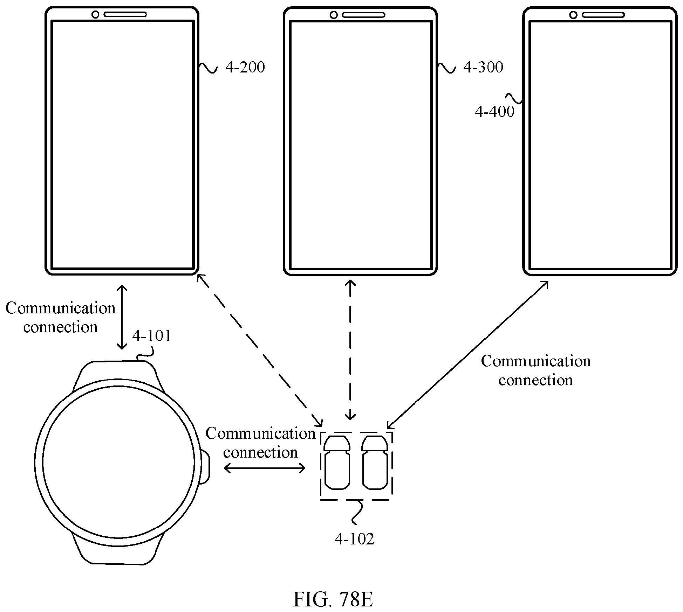

As shown in FIG. 78E, the communication connection is established between the earphones 4-102 and the electronic device 4-400. In addition, the earphones 4-102 may disconnect the communication connection to the electronic device 4-300. The smartwatch 4-101 and the electronic device 4-400 may communicate with each other through the earphones 4-102.

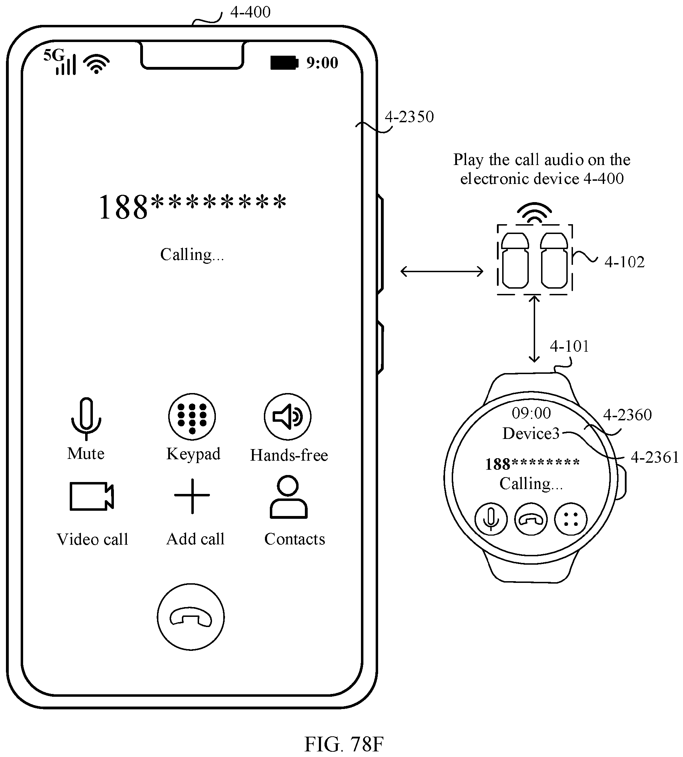

As shown in FIG. 78F, after the earphones 4-102 successfully establishes the communication connection to the electronic device 4-400, the smartwatch 4-101 may send an outgoing call-making instruction to the electronic device 4-400 through the earphones 4-102. The outgoing call-making instruction may include the phone number entered in the phone number display area 4-2311 shown in FIG. 78B. According to the outgoing call-making instruction, the electronic device 4-400 may make the outgoing call to the phone number entered in the phone number display area 4-2311. When making the outgoing call, the electronic device 4-400 may display a user interface 4-2350. The earphones 4-102 may play call audio on the electronic device 4-400 with a sound. The electronic device 4-400 may send, to the smartwatch 4-101 through the earphones 4-102, a message indicating that the outgoing call is being made. Then, the smartwatch 4-101 may display a user interface 4-2360. The user interface 4-2360 may include an outgoing call-making device identifier 4-2361. The outgoing call-making device identifier 4-2361 may indicate an electronic device that makes a call corresponding to the user interface 4-2360. The outgoing call-making device identifier 4-2361 may include a device name. For example, the outgoing call-making device identifier 4-2361 may include "Device3" shown in FIG. 78F. "Device3" in the outgoing call-making device identifier 4-2361 may indicate that the call corresponding to the user interface 4-2361 is made by an electronic device named "Device3" (namely, the electronic device 4-400).

In a possible implementation, after the call on the electronic device 4-400 ends, the earphones 4-102 may maintain the connection to the electronic device 4-400. Alternatively, after the call on the electronic device 4-400 ends, the earphones 4-102 may be disconnected from the electronic device 4-400, and may be reconnected to an electronic device (for example, the electronic device 4-300) that is disconnected before the electronic device 4-400 is connected.

It can be learned from the scenario shown in FIG. 78A to FIG. 78F that, based on sharing of the pairing connection information between the electronic device having been connected to the smartwatch 4-101 and/or the earphones 4-102 and the same-account device, the smartwatch 4-101 may control the same-account device to make an outgoing call in addition to controlling the electronic device having been connected to the smartwatch 4-101 and/or the earphones 4-102 to make an outgoing call. According to the foregoing embodiments, the user can conveniently control call services of a plurality of electronic devices through the smartwatch 4-101, to improve user experience of making a call.

In a possible implementation, in the communication system shown in FIG. 78A, the earphones 4-102 may be connected to both the electronic device 4-200 and the electronic device 4-300. When the user chooses to use the electronic device 4-400 to make an outgoing call on the smartwatch 4-101, the smartwatch 4-101 may indicate the earphones 4-102 to be connected to the electronic device 4-400. When the earphones 4-102 are connected to the electronic device 4-400, the earphones 4-102 may be disconnected from one of the electronic device 4-200 and the electronic device 4-300. For example, services performed by the electronic device 4-200 and the electronic device 4-300 through the earphones 4-102 are different, and the services have priorities. The earphones 4-102 may be disconnected from an electronic device corresponding to a service with a lower priority. For another example, the electronic device 4-200 and the electronic device 4-300 perform services through the earphones 4-102 at different time. The earphones 4-102 may be disconnected from an electronic device that uses the earphones 4-102 to perform a service earlier. A rule used when the earphones 4-102 are disconnected from one of the electronic device 4-200 and the electronic device 4-300 is not limited in embodiments of this application.

### Watch and earphone management method

This application provides a wearable device management method. The method may be applied to a wearable device provided in this application and an audio apparatus that can be accommodated in the wearable device. A smartwatch 5-101 may be used as a control and management device of earphones 5-102. A user may perform an operation on the smartwatch 5-101, to manage the smartwatch 5-101 and the earphones 5-102. Optionally, the user may further perform an operation on an electronic device 5-200 connected to the smartwatch 5-101, to manage the smartwatch 5-101 and the earphones 5-102.

The management of the smartwatch 5-101 may include: managing an open/closed state of a watch cover of the smartwatch 5-101, managing a charging status of the smartwatch 5-101, managing a function of controlling another electronic device provided by the smartwatch 5-101, managing content displayed on a user interface of the smartwatch 5-101, and the like.

The management of the earphones 5-102 may include: managing an electronic device connected to the earphones 5-102, managing a noise control mode of the earphones 5-102, managing volume of the earphones 5-102, managing a sound effect of the earphones 5-102, managing a function that can be controlled through an operation performed on the earphones 5-102, and the like.

According to the foregoing method for managing the wearable device and the audio apparatus that can be accommodated in the wearable device, user experience of using the wearable device and the audio apparatus can be improved, so that life convenience of the user can be improved through the wearable device and the audio apparatus.

It should be noted that the smartwatch 5-101 may be the wearable device 1 shown in FIG. 1 to FIG. 4. The earphones 5-102 may be an audio apparatus that can be accommodated in the wearable device 1, for example, the earphones 3 shown in FIG. 1 to FIG. 4. The earphones 5-102 may include the first earphone 31 and the second earphone 32 shown in FIG. 4.

Here, an example in which the wearable device is the smartwatch 5-101 and the audio apparatus is the earphones 5-102 is used, and the following describes some wearable device management scenarios provided in embodiments of this application in the foregoing device connection manner.

**FIG. 79A to FIG. 79F** **show an example of a scenario of managing a cover open/closed state of the smartwatch 5-101.**

As shown in FIG. 79A, the smartwatch 5-101 may display a user interface 5-610. The user interface 5-610 may be a home screen of the smartwatch 5-101. Content displayed on the user interface 5-610 may be a watch face of the smartwatch 5-101. The watch face displayed on the user interface 5-610 may be preset before delivery of the smartwatch 5-101, or may be set by the user. A display style of the watch face of the smartwatch 5-101 is not limited in embodiments of this application.

A watch cover open button may be disposed on the smartwatch 5-101. An implementation of the watch cover open button and a location of the watch cover open button on the smartwatch 5-101 are not limited in embodiments of this application. In response to an operation, for example, a press operation, performed on the watch cover open button 5-101, the watch cover of the smartwatch 5-101 may be opened.

As shown in FIG. 79B, in a process in which the watch cover of the smartwatch 5-101 is opened, the smartwatch 5-101 may display a cover opening animation. The cover opening animation may be played on a user interface 5-620. Content of the cover opening animation is not limited in embodiments of this application. The cover opening animation can improve interest of opening the watch cover by the user.

With reference to FIG. 2A, it can be learned that an earphone slot (for example, an earphone slot 5-101A and an earphone slot 5-101B) may be disposed in a watch body of the smartwatch 5-101. The earphone slot 5-101A may be a left earphone slot. The earphone slot 5-101B may be a right earphone slot. The earphone slot may be configured to place the earphones 5-102. In addition, magnets may be disposed on the earphones 5-102 and the watch cover of the smartwatch 5-101. In response to the operation of opening the watch cover shown in FIG. 79A, the watch cover of the smartwatch 5-101 may attract the earphones 5-102, so that the earphones 5-102 are taken out of the earphone slot 5-101A and the earphone slot 5-101B. The earphones 5-102 are attracted to the watch cover after the cover of the smartwatch 5-101 is opened, so that the user can take the earphones 5-102.

As shown in FIG. 79C, in response to an operation of closing the watch cover, the smartwatch 5-101 may close the watch cover.

In some embodiments, when the earphones 5-102 are not attracted to the watch cover, and no earphone 5-102 is placed in the earphone slot 5-101A and the earphone slot 5-101B, the smartwatch 5-101 may close the watch cover. In this case, there is no earphone 5-102 in the watch body of the smartwatch 5-101. Two earphones in the earphones 5-102 are both in an out state.

In some other embodiments, when only one earphone in the earphones 5-102 is attracted to the watch cover, the smartwatch 5-101 may close the watch cover. When the smartwatch 5-101 closes the watch cover, the earphone attracted to the watch cover may be placed in the earphone slot (for example, the earphone slot 5-101A or the earphone slot 5-101B) in the watch body of the smartwatch 5-101 as the watch cover is closed. Alternatively, when there is an earphone placed in only one of the two earphone slots, the smartwatch 5-101 may close the watch cover. In this case, one earphone in the earphones 5-102 is placed in the earphone slot in the watch body of the smartwatch 5-101. One earphone in the earphones 5-102 is in the out state, and the other earphone is in an in state.

In some other embodiments, when the two earphones in the earphones 5-102 are attracted to the watch cover, the smartwatch 5-101 may close the watch cover. When the smartwatch 5-101 closes the watch cover, the two earphones attracted to the watch cover may be placed in the earphone slot in the watch body of the smartwatch 5-101 as the watch cover is closed. Alternatively, when an earphone is placed in each of the two earphone slots, the smartwatch 5-101 may close the watch cover. In this case, the two earphones in the earphones 5-102 are placed in the earphone slots in the watch body of the smartwatch 5-101. The two earphones in the earphones 5-102 are both in the out state.

It can be learned that the user may attract the earphones 5-102 to the watch cover by opening the watch cover, and then close the watch cover, or may directly place the earphones 5-102 in the earphone slot by opening the watch cover, and then close the watch cover, so that the earphones 5-102 are placed back into the watch body of the smartwatch 5-101.

When the watch cover is closed, the smartwatch 5-101 may detect whether an earphone is placed in the watch body and a quantity of placed earphones. The smartwatch 5-101 may detect, based on whether charging electrodes in the earphone slot 5-101A and the earphone slot 5-101B are connected to charging electrodes of the earphones 5-102, whether the earphones are placed in the earphone slot 5-101A and the earphone slot 5-101B. An implementation in which the smartwatch 5-101 detects whether an earphone is placed in the watch body and a quantity of placed earphones is not limited in embodiments of this application.

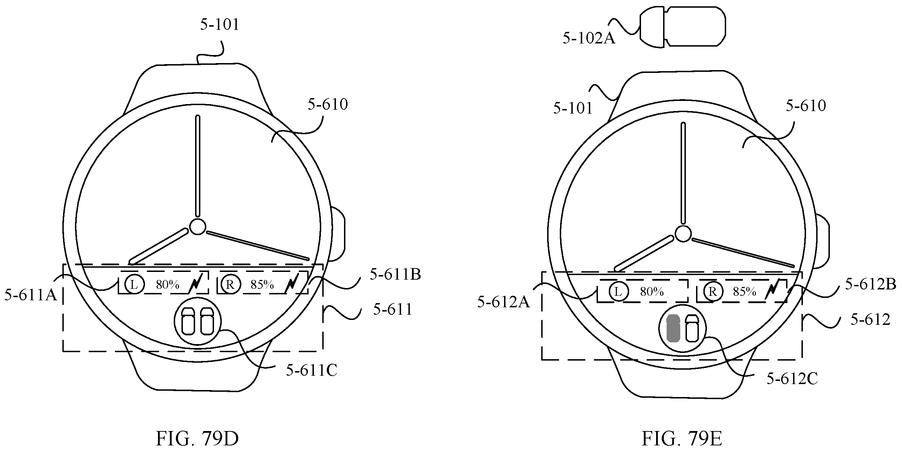

As shown in FIG. 79D, when it is detected that two earphones are placed in the watch body of the smartwatch 5-101 (that is, an earphone is placed in each of the earphone slot 5-101A and the earphone slot 5-101B), the smartwatch 5-101 may display an earphone status area 5-611 on a user interface 5-610. In some embodiments, the smartwatch 5-101 may display the earphone status area 5-611 within a preset time period (for example, 3 seconds or 5 seconds) after the watch cover is closed. After the preset time period, the smartwatch 5-101 may cancel displaying the earphone status area 5-611, to display the user interface 5-610 shown in FIG. 79A. A value of the preset time period is not limited in embodiments of this application.

The earphone status area 5-611 may include left earphone information 5-611A, right earphone information 5-611B, and earphone in-compartment information 5-611C.

The left earphone information 5-611A may indicate related information of a left earphone. For example, the left earphone information 5-611A may include power information "80%" and a charging icon. The power information "80%" may indicate that current power of the left earphone is 80% of full power. The charging icon in the left earphone information 5-611A may indicate that the left earphone is being charged. That the left earphone information 5-611A including a charging icon may indicate that an earphone is placed in the left earphone slot (namely, the earphone slot 5-101A).

The right earphone information 5-611B may indicate related information of a right earphone. For example, the right earphone information 5-611A may include power information "85%" and a charging icon. The power information "85%" may indicate that current power of the right earphone is 85% of full power. The charging icon in the right earphone information 5-611B may indicate that the right earphone is being charged. That the right earphone information 5-611B including a charging icon may indicate that an earphone is placed in the right earphone slot (namely, the earphone slot 5-101B).

The earphone in-compartment information 5-611C may indicate whether earphones are placed in the left earphone slot and the right earphone slot in the watch body. As shown in FIG. 79D, that the earphone in-compartment information 5-611C includes two earphone icons may indicate that an earphone is placed in each of the left earphone slot and the right earphone slot.

It should be noted that, in some embodiments, the smartwatch 5-101 may reset left and right earphones in the earphones 5-102 that are placed in a compartment. The smartwatch 5-101 may reset an earphone placed in the left earphone slot (namely, the earphone slot 5-101A) to the left earphone. The smartwatch 5-101 may reset an earphone placed in the right earphone slot (namely, the earphone slot 5-101B) to the right earphone. An implementation method in which the smartwatch 5-101 resets the left and right earphones is not limited in embodiments of this application.

In some embodiments, after the earphones 5-102 are removed from the compartment and worn, the earphones 5-102 may perform left and right ear recognition, to determine an ear of the user on which each of the two earphones in the earphones 5-102 is worn. For example, the earphones 5-102 include two earphones: an earphone 5-102A and an earphone 5-102B. When the earphone 5-102A recognizes that the earphone 5-102A is worn on the left ear of the user, the earphone 5-102A may give, with a sound, the user a prompt that the earphone 5-102A is a left earphone. When the earphone 5-102A is the left earphone, the earphone 5-102A may play audio of a left audio channel with a sound. When the earphone 5-102A recognizes that the earphone 5-102A is worn on the right ear of the user, the earphone 5-102A may give, with a sound, the user a prompt that the earphone 5-102A is a right earphone. When the earphone 5-102A is the right earphone, the earphone 5-102A may play audio of a right audio channel with a sound. Similarly, the earphone 5-102B may also determine whether the earphone 5-102B is worn on the left ear or the right ear. Details are not described herein again.

The earphone 5-102A may be the first earphone 31 shown in FIG. 4. The earphone 5-102B may be the second earphone 32 shown in FIG. 4.

In some embodiments, when the watch cover is closed, the smartwatch 5-101 may display an earphone icon on a screen. For example, the earphone icon may be displayed on the user interface 5-610 shown in FIG. 79A. In response to an operation performed on the earphone icon, the smartwatch 5-101 may display, on the screen, the earphone status area 5-611 shown in FIG. 79D. Optionally, display of the earphone icon may be canceled when no operation is performed within a preset time period.

As shown in FIG. 79E, the earphone 5-102A included in the earphones 5-102 is in the out state, and the earphone 5-102B included in the earphones 5-102 is in the in state. When it is detected that an earphone is placed only in the right earphone slot (namely, the earphone slot 5-101B) in the watch body of the smartwatch 5-101, the smartwatch 5-101 may display an earphone status area 5-612 on the user interface 5-610. In some embodiments, the smartwatch 5-101 may display the earphone status area 5-612 within a preset time period (for example, 3 seconds or 5 seconds) after the watch cover is closed. After the preset time period, the smartwatch 5-101 may cancel displaying the earphone status area 5-612, to display the user interface 5-610 shown in FIG. 79A. A value of the preset time period is not limited in embodiments of this application.

The earphone status area 5-612 may include left earphone information 5-612A, right earphone information 5-612B, and earphone in-compartment information 5-612C.

The left earphone information 5-612A may indicate related information of the left earphone. For example, the left earphone information 5-612A may include power information "80%". The power information "80%" may indicate that current power of the left earphone is 80% of full power. The power information "80%" may be sent by the left earphone to the smartwatch 5-101 through a communication connection. That the left earphone information 5-612A does not include the charging icon shown in FIG. 79D may indicate that there is no earphone in the left earphone slot.

For the right earphone information 5-612B, refer to the right earphone information 5-611B shown in FIG. 79D.

The earphone in-compartment information 5-612C may indicate whether earphones are placed in the left earphone slot and the right earphone slot in the watch body. As shown in FIG. 79E, the earphone in-compartment information 5-612C includes one empty earphone slot icon and one earphone icon, and the empty earphone slot icon is located on a left side of the earphone icon. This may indicate that there is no earphone in the left earphone slot, and an earphone is placed in the right earphone slot.

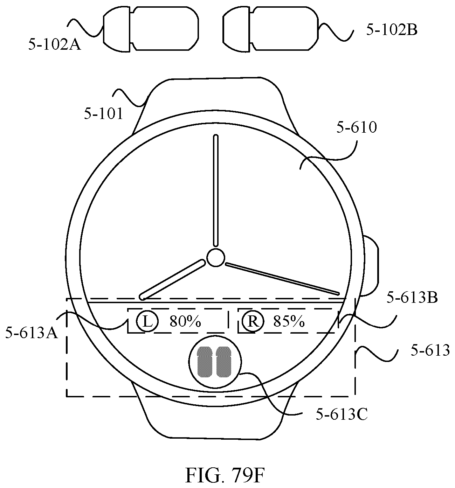

As shown in FIG. 79F, both the earphone 5-102A and the earphone 5-102B included in the earphones 5-102 are in the out state. When it is detected that there is no earphone in the watch body of the smartwatch 5-101, the smartwatch 5-101 may display an earphone status area 5-613 on the user interface 5-610. In some embodiments, the smartwatch 5-101 may display the earphone status area 5-613 within a preset time period (for example, 3 seconds or 5 seconds) after the watch cover is closed. After the preset time period, the smartwatch 5-101 may cancel displaying the earphone status area 5-613, to display the user interface 5-610 shown in FIG. 79A. A value of the preset time period is not limited in embodiments of this application.

For the left earphone information 5-613A, refer to the left earphone information 5-612A shown in FIG. 79E.

The right earphone information 613B may indicate related information of the right earphone. For example, the right earphone information 5-613B may include power information "85%". The power information "85%" may indicate that current power of the right earphone is 85% of full power. That the right earphone information 5-613B does not include the charging icon shown in FIG. 79D may indicate that there is no earphone in the right earphone slot.

The earphone in-compartment information 5-613C may indicate whether earphones are placed in the left earphone slot and the right earphone slot in the watch body. As shown in FIG. 79F, that the earphone in-compartment information 5-613C includes two empty earphone slot icons may indicate that there is no earphone in the left earphone slot and the right earphone slot.

It can be learned from FIG. 79D to FIG. 79F that, based on the earphone status area 5-611, the earphone status area 5-612, or the earphone status area 5-613, after the watch cover is closed, the user may quickly learn about power of the earphones 5-102 and placement locations of the two earphones in the earphones 5-102 in the watch body.

In some embodiments, when the watch cover is opened, the smartwatch 5-101 may detect duration in which the watch cover is in an open state. When it is detected that the duration in which the watch cover is in the open state exceeds preset duration, the smartwatch 5-101 may prompt the user to close the watch cover. For example, the smartwatch 5-101 may prompt, in a manner such as vibration or ringing, the user to close the watch cover. A manner in which the smartwatch 5-101 prompts the user to close the watch cover is not limited in embodiments of this application. This can avoid a case in which the user forgets to close the watch cover and consequently use of the smartwatch 5-101 is affected.

**FIG. 80A to FIG. 80G** **show an example of a scenario in which the earphones 5-102 are managed through the smartwatch 5-101.**

As shown in FIG. 80A, the smartwatch 5-101 may display a user interface 5-710. The user interface 5-710 may include an earphone status area 5-711. For the earphone status area 5-711, refer to the earphone status area 5-613 shown in FIG. 79F. It can be learned from the earphone status area 5-711 in the figure that two earphones in the earphones 5-102 are both in an out state. In response to an operation, for example, a tap operation, performed on the earphone status area 5-711, the smartwatch 5-101 may display a user interface 5-720 shown in FIG. 80B. The user interface 5-720 may be a user interface that is in the smartwatch 5-101 and that is for managing the earphones 5-102.

It may be understood that both the earphone status area 5-611 shown in FIG. 79D and the earphone status area 5-612 shown in FIG. 79E may be used to open a user interface for managing the earphones 5-102.

As shown in FIG. 80B, the user interface 5-720 may include an earphone name 5-721, a noise cancellation control 5-722, a disable control 5-723, an awareness control 5-724, and a device connection option 5-725.

The earphone name 5-721 may indicate a name of the earphones 5-102. For example, the name of the earphones 5-102 is "Buds". The name of the earphones 5-102 is not limited in embodiments of this application.

The noise cancellation control 5-722 may be used to enable a noise cancellation mode of the earphones 5-102. The noise cancellation mode may reduce interference caused by an external ambient sound to audio listening performed by the user through the earphones 5-102. In response to an operation, for example, a tap operation, performed on the noise cancellation control 5-722, the smartwatch 5-101 may send, to the earphones 5-102, a message for enabling the noise cancellation mode. Then, the earphones 5-102 may enable the noise cancellation mode, to filter out the external ambient sound and cancel noise. An implementation method in which the earphones 5-102 filters out the external ambient sound in the noise cancellation mode and cancels the noise is not limited in embodiments of this application.

The awareness control 5-724 may be used to enable an awareness mode of the earphones 5-102. The foregoing awareness mode may help the user talk with another person when the user wears the earphones. In response to an operation, for example, a tap operation, performed on the awareness control 5-724, the smartwatch 5-101 may send, to the earphones 5-102, a message for enabling the awareness mode. Then, the earphones 5-102 may enable the awareness mode, to filter out a background sound in the external ambient sound, but retain a human voice. An implementation method in which the earphones 5-102 filter out the background sound in the external ambient sound in the awareness mode but retain the human voice is not limited in embodiments of this application.

The disable control 5-723 may be used to disable the awareness mode and the noise cancellation mode of the earphones 5-102. In response to an operation, for example, a tap operation, performed on the disable control 5-723, the smartwatch 5-101 may send, to the earphones 5-102, a message indicating to maintain the awareness mode and the noise cancellation mode in a disabled state. In this way, the earphones 5-102 may maintain the awareness mode and the noise cancellation mode in the disabled state.

It may be understood that, in a same time period, only one of the noise cancellation control 5-722, the disable control 5-723, and the awareness control 5-724 can be in a selected state in the same time period. A display style used when any one of the noise cancellation control 5-722, the disable control 5-723, and the awareness control 5-724 is in the selected state may be different from a display style used when any one of the noise cancellation control 5-722, the disable control 5-723, and the awareness control 5-724 is in an unselected state. For example, as shown in FIG. 80B, the noise cancellation control 5-722 is in the selected state. The noise cancellation control 5-722 may have a dark display style. The disable control 5-723 and the awareness control 5-724 are in the unselected state. The disable control 5-723 and the awareness control 5-724 may have light-color display styles. Display styles of the noise cancellation control 5-722, the disable control 5-723, and the awareness control 5-724 are not limited in embodiments of this application.

The device connection option 5-725 may indicate a status of a connection between the earphones 5-102 and a smartwatch named "Watch", and may be used to disconnect a communication connection between the earphones 5-102 and the smartwatch named "Watch". The smartwatch named "Watch" may be the smartwatch 5-101. The name of the smartwatch 5-101 is not limited in embodiments of this application. For example, the device connection option 5-725 includes a text prompt "Connected". The text prompt "Connected" may indicate that a communication connection is currently established between the earphones 5-102 and the smartwatch 5-101. When the earphones 5-102 is not connected to the smartwatch 5-101, the device connection option 5-725 may include a text prompt "Not connected".

In some embodiments, the user interface 5-720 may further include more controls for managing the earphones 5-102.

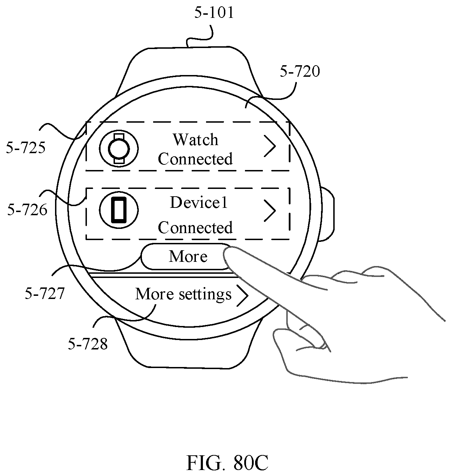

In response to an operation of sliding upward on the user interface 5-720 shown in FIG. 80B, the smartwatch 5-101 may display a user interface 5-720 shown in FIG. 80C, to provide more controls for managing the earphones 5-102.

As shown in FIG. 80C, in addition to the device connection option 5-725, the user interface 5-720 may further include a device connection option 5-726, a more control 5-727, and a more settings control 5-728.

The device connection option 5-726 may indicate a status of a connection between the earphones 5-102 and a mobile phone named "Device1", and may be used to control the earphones 5-102 to be disconnected from or reconnected to the mobile phone named "Device1". The mobile phone named "Device1" may be the electronic device 5-200. The name and a device type of the electronic device 5-200 are not limited in embodiments of this application. In subsequent embodiments, an example in which the electronic device 5-200 is the mobile phone named "Device1" is used for description. For example, the device connection option 5-726 includes a text prompt "Connected". The text prompt "Connected" may indicate that a communication connection is currently established between the earphones 5-102 and the electronic device 5-200. When the earphones 5-102 are not connected to the electronic device 5-200, the device connection option 5-726 may include a text prompt "Not connected".

The more control 5-727 may be used to view more device connection options corresponding to electronic devices currently connected to the earphones 5-102, and a device connection option corresponding to an electronic device having been connected to the earphones 5-102 but currently being not connected to the earphones 5-102.

The more settings option 5-728 may be used to trigger the smartwatch 5-101 to display more controls for managing the earphones 5-102.

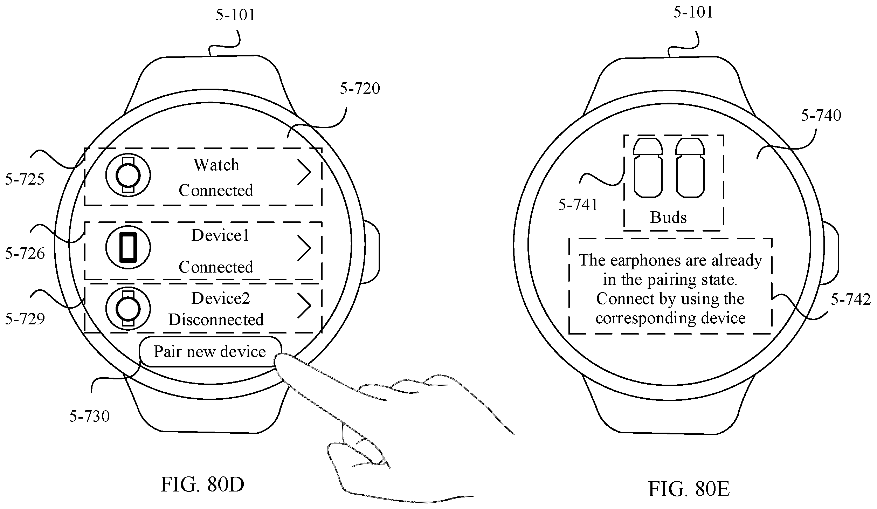

For example, the earphones 5-102 have been connected to an electronic device 5-300, but currently are not connected to the electronic device 5-300. In response to an operation, for example, a tap operation, performed on the more control 5-727 shown in FIG. 80C, the smartwatch 5-101 may display, on the user interface 5-720, a device connection option 5-729 and a pairing control 5-730 shown in FIG. 80D.

The device connection option 5-729 may indicate a status of a connection between the earphones 5-102 and a mobile phone named "Device2", and may be used to control the earphones 5-102 to be disconnected from or reconnected to the mobile phone named "Device2". The mobile phone named "Device2" may be the electronic device 5-300. The name and a device type of the electronic device 5-300 are not limited in embodiments of this application. In subsequent embodiments, an example in which the electronic device 5-300 is the mobile phone named "Device2" is used for description. For example, the device connection option 5-729 includes a text prompt "Not connected". The text prompt "Not connected" may indicate that the earphones 5-102 currently are not connected to the electronic device 5-300. When the earphones 5-102 are connected to the electronic device 5-300, the device connection option 5-729 may include a text option "Connected".

The pairing control 5-730 may be used to control the earphones 5-102 to enter a pairing state. When the earphones 5-102 are in the pairing state, the earphones 5-102 may perform pairing with an electronic device that the earphones have not been connected to, and establish a communication connection. In response to an operation performed on the pairing control 5-730, the smartwatch 5-101 may display a user interface 5-740 shown in FIG. 80E.

As shown in FIG. 80E, the user interface 5-740 may include to-be-paired device information 5-741 and a pairing prompt 5-722. The to-be-paired device information 5-741 may include related information of a device that is in the pairing state. For example, the to-be-paired device information 5-741 may include an icon and a name of the earphones 5-102. Based on the to-be-paired device information 5-741, the user may know that the device in the pairing state is the earphones 5-102. The pairing prompt 5-722 may be used to prompt the user with an operation method for pairing the earphones 5-102 with another electronic device. For example, content of the pairing prompt 5-722 may include "The earphones are already in the pairing state. Connect by using the corresponding device". The content of the pairing prompt 5-722 is not limited in embodiments of this application. An implementation of pairing the earphones 5-102 with the electronic device and establishing the communication connection is not limited in embodiments of this application.

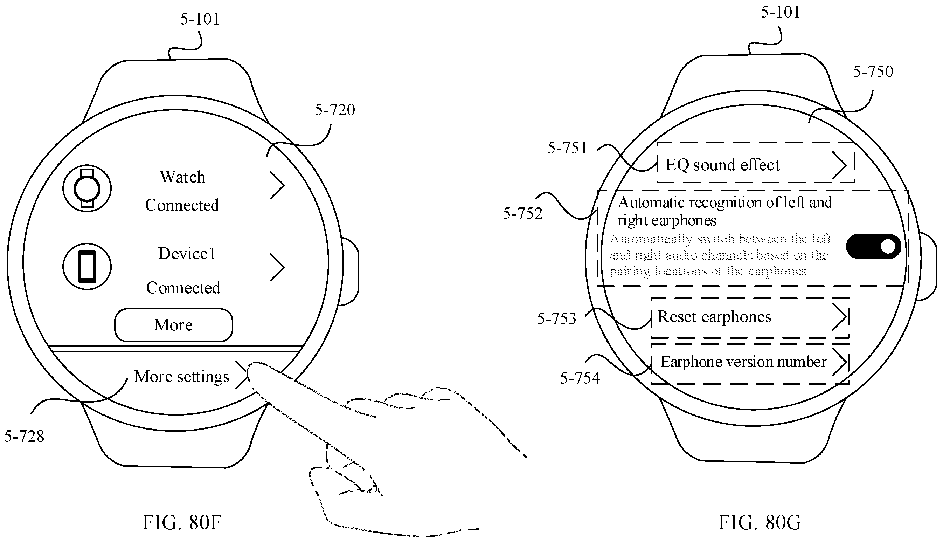

As shown in FIG. 80F, the smartwatch 5-101 may display the user interface 5-720. In response to an operation performed on the more settings control 5-728 on the user interface 5-720, the smartwatch 5-101 may display a user interface 5-750 shown in FIG. 80G.

As shown in FIG. 80G, the user interface 5-750 may include a sound effect setting option 5-751, a left and right ear recognition option 7-752, an earphone reset option 5-753, and an earphone version number 5-754.

The sound effect setting option 5-751 may be used to manage a sound effect of audio played with a sound by the earphones 5-102. Content of sound effect management may include bass enhancement, treble enhancement, sound clarity adjustment, reverberation and surround sound control, and the like. In a possible implementation, in response to an operation performed on the sound effect setting option 5-751, the smartwatch 5-101 may provide one or more controls for setting a sound effect parameter. The sound effect parameter may include but is not limited to a frequency, a gain, and a frequency band width. The sound effect parameter may be used to adjust a sound effect of audio played with a sound by the earphones 5-102.

The left and right ear recognition option 7-752 may be used to enable or disable a left and right ear recognition function. The left and right ear recognition function may be a function of recognizing, when the earphones 5-102 are in a worn state, an ear of the user on which each of the two earphones in the earphones 5-102 is worn. When one earphone in the earphones 5-102 recognizes that the earphone is worn on the left ear, the earphone may play audio of a left audio channel with a sound. When one earphone in the earphones 5-102 recognizes that the earphone is worn on the right ear, the earphone may play audio of a right audio channel with a sound. The left and right ear recognition option 7-752 may include a function switch. An operation may be performed on the switch to enable or disable the left and right ear recognition function.

The earphone reset option 5-753 may be used to reset the earphones 5-102, so that the earphones 5-102 are restored to factory settings. A specific method for resetting the earphones 5-102 is not limited in embodiments of this application.

The earphone version number 5-754 may be used to view a current version number of the earphones 5-102.

The user interface 5-750 may further include more controls for managing the earphones 5-102. This is not limited in embodiments of this application.

It can be learned from the scenario shown in FIG. 80A to FIG. 80G that, after the watch cover of the smartwatch 5-101 is closed, the user may view, in the earphone status area 5-711 shown in FIG. 80A, the power of the earphones 5-102 and a placement location of the earphones 5-102 in the watch body, and may further open, through the earphone status area 5-711, a user interface for managing the earphones 5-102, to manage content such as a noise control mode, a connected electronic device, a sound effect, and the left and right ear recognition function of the earphones 5-102. According to the foregoing embodiments, the user can conveniently manage the earphones 5-102 through the smartwatch 5-101, to improve user experience of using the earphones 5-102.

**FIG. 81A to FIG. 81F** **show an example of another scenario in which the earphones 5-102 are managed through the smartwatch 5-101.**

As shown in FIG. 81A, the smartwatch 5-101 may display a user interface 5-810. For the user interface 5-810, refer to the user interface 5-610 shown in FIG. 79A. In response to a pull-down operation shown in FIG. 81A of sliding downward from the top of a screen of the smartwatch 5-101, the smartwatch 5-101 may display a user interface 5-820 shown in FIG. 81B. The user interface 5-820 may be a pull-down control interface of the smartwatch 5-101.

It may be understood that, not limited to the user interface 5-810 shown in FIG. 81A, when another user interface is displayed on the screen of the smartwatch 5-101, the smartwatch 5-101 may also display the user interface 5-820 in response to the pull-down operation.

As shown in FIG. 81B, the user interface 5-820 may include a screen-on control 5-821, a setting control 5-822, a device search control 5-823, a do-not-disturb control 5-824, an alarm clock control 5-825, a noise cancellation switching control 5-826, earphone in-compartment information 5-827, left earphone information 5-828, right earphone information 5-829, a Bluetooth icon, and a power identifier 5-831.

The screen-on control 5-821 may be used to enable or disable a screen steady-on function of the smartwatch 5-101. When the screen steady-on function is enabled, the smartwatch 5-101 may keep the screen always on. When the screen steady-on function is disabled, after the screen is turned on, the smartwatch 5-101 may automatically turn off the screen when no user operation is detected on the screen within a preset time period.

The setting control 5-822 may be used to start a Settings application in the smartwatch 5-101. The Settings application may be used to perform a related setting on the smartwatch 5-101.

The device search control 5-823 may be used to provide a function of searching for a device, for example, searching for a mobile phone connected to the smartwatch 5-101, searching for the earphones 5-102 connected to the smartwatch 5-101, and the like.

The do-not-disturb control 5-824 may be used to enable or disable a do-not-disturb function.

The alarm clock control 5-825 may be used to provide functions of viewing and setting an alarm clock on the smartwatch 5-101.

The noise cancellation switching control 5-826 may be used to switch a noise control mode. The noise control mode may include a noise cancellation mode, an awareness mode, and a noise cancellation and awareness disabled mode. For the noise cancellation mode and the awareness mode, refer to the descriptions in the foregoing embodiments. That the earphones 5-102 are in the noise cancellation and awareness disabled mode may indicate that the earphones 5-102 disable the noise cancellation mode and the awareness mode.

In response to an operation performed on the noise cancellation switching control 5-826, the smartwatch 5-101 may control the earphones 5-102 to switch among the noise cancellation mode, the awareness mode, and the noise cancellation and awareness disabled mode.

The smartwatch 5-101 may determine, based on whether the earphones 5-102 are in the noise cancellation mode, the awareness mode, or the noise cancellation and awareness disabled mode, display content included in the noise cancellation switching control 5-826. This can help a user determine a current state of the earphones 5-102 based on the noise cancellation switching control 5-826.

For example, when the earphones 5-102 are in the noise cancellation mode, the noise cancellation switching control 5-826 may include an icon corresponding to the noise cancellation mode shown in FIG. 81B. The icon corresponding to the noise cancellation mode may be the icon of the noise cancellation control 5-722 shown in FIG. 80B. When the noise cancellation switching control 5-826 may include the icon corresponding to the noise cancellation mode shown in FIG. 81B, in response to an operation, for example, a tap operation, performed on the noise cancellation switching control 5-826, the smartwatch 5-101 may send, to the earphones 5-102, an instruction for switching to the awareness mode, and change the display content of the noise cancellation switching control 5-826 to an icon corresponding to the awareness mode. The icon corresponding to the awareness mode may be the icon of the awareness control 5-724 shown in FIG. 80B. The earphones 5-102 may switch to the awareness mode in response to the instruction for switching to the awareness mode.

Further, when the noise cancellation switching control 5-826 includes the icon corresponding to the awareness mode, in response to an operation, for example, a tap operation, performed on the noise cancellation switching control 5-826, the smartwatch 5-101 may send, to the earphones 5-102, an instruction for switching to the noise cancellation and awareness disabled mode, and change the display content of the noise cancellation switching control 5-826 to an icon corresponding to the noise cancellation and awareness disabled mode. The icon corresponding to the noise cancellation and awareness disabled mode may be the icon of the disable control 5-723 shown in FIG. 80B. The earphones 5-102 may switch to the noise cancellation and awareness disabled mode in response to the instruction for switching to the noise cancellation and awareness disabled mode.

Further, when the noise cancellation switching control 5-826 includes the icon corresponding to the noise cancellation and awareness disabled mode, in response to an operation, for example, a tap operation, performed on the noise cancellation switching control 5-826, the smartwatch 5-101 may send, to the earphones 5-102, an instruction for switching to the noise cancellation mode, and change the display content of the noise cancellation switching control 5-826 to the icon corresponding to the noise cancellation mode shown in FIG. 79B. The earphones 5-102 may switch to the noise cancellation mode in response to the instruction for switching to the noise cancellation mode.

For the earphone in-compartment information 5-827, the left earphone information 5-828, and the right earphone information 5-829, refer to the earphone in-compartment information 5-611C, the left earphone information 5-611A, and the right earphone information 5-611B shown in FIG. 79D, respectively. Details are not described herein again. It can be learned from the earphone in-compartment information 5-827, the left earphone information 5-828, and the right earphone information 5-829 that the two earphones in the earphones 5-102 are currently in an in state.

It may be understood that, if an earphone is placed only in a right earphone slot in a watch body of the smartwatch 5-101, for display styles of the earphone in-compartment information 5-827, the left earphone information 5-828, and the right earphone information 5-829, refer to the earphone in-compartment information 5-612C, the left earphone information 5-612A, and the right earphone information 5-612B shown in FIG. 79E. If there is no earphone in the watch body of smartwatch 5-101, for display styles of the earphone in-compartment information 5-827, the left earphone information 5-828, and the right earphone information 5-829, refer to the earphone in-compartment information 5-613C, the left earphone information 5-613A, and the right earphone information 5-613B shown in FIG. 79F.

The Bluetooth icon 5-830 may indicate that Bluetooth of the smartwatch 5-101 is currently in an enabled state. If the Bluetooth of the smartwatch 5-101 is disabled, the smartwatch 5-101 may cancel display of the Bluetooth icon 5-830 on the user interface 5-820.

The power identifier 5-831 may indicate current remaining power of the smartwatch 5-101.

The user interface 5-820 may further include more or fewer controls. This is not limited in embodiments of this application.

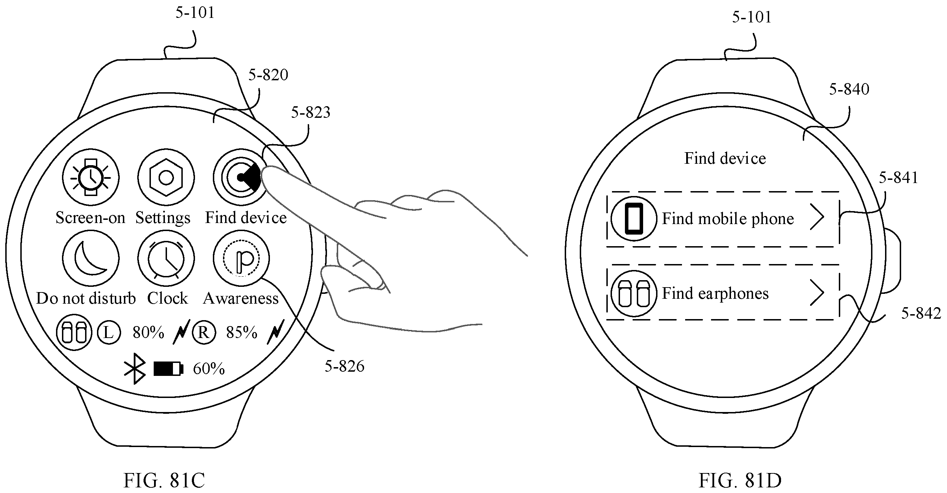

As shown in FIG. 81B, when the noise cancellation switching control 5-826 may include the icon corresponding to the noise cancellation mode, in response to an operation performed on the noise cancellation switching control 5-826, the smartwatch 5-101 may change the display content of the noise cancellation switching control 5-826 from the icon corresponding to the noise cancellation mode shown in FIG. 81B to the icon corresponding to the awareness mode shown in FIG. 81C. That the noise cancellation switching control 5-826 includes the icon corresponding to the awareness mode may indicate that the earphones 5-102 are currently in the awareness mode.

In response to an operation, for example, a tap operation, performed on the device search control 5-823 shown in FIG. 81C, the smartwatch 5-101 may display a user interface 5-840 shown in FIG. 81D.

As shown in FIG. 81D, the user interface 5-840 may include a mobile phone search option 5-841 and an earphone search option 5-842. The mobile phone search option 5-841 may be used to provide a function of searching, through the smartwatch 5-101, for a mobile phone connected to the smartwatch 5-101, for example, the electronic device 5-200. The earphone search option 5-842 may be used to provide a function of searching for the earphones 5-102 through the smartwatch 5-101. An implementation in which the smartwatch 5-101 searches for the mobile phone and the earphones 5-102 is specifically described in subsequent embodiments of this application.

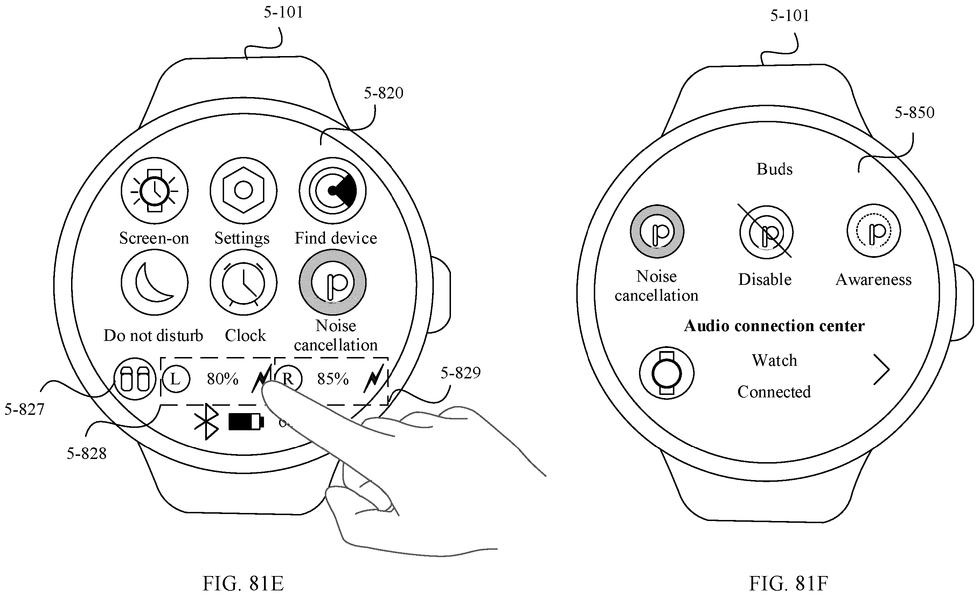

As shown in FIG. 81E, in response to a user operation, for example, a tap operation, performed on a display area of the earphone in-compartment information 5-827, the left earphone information 5-828, or the right earphone information 5-829, the smartwatch 5-101 may display a user interface 5-850 shown in FIG. 81F. For the user interface 5-850, refer to the user interface 5-720 shown in FIG. 80B. Details are not described herein again. The user may manage the earphones 5-102 through a control displayed on the user interface 5-850.

It can be learned from the scenario shown in FIG. 81A to FIG. 81F that the user may further perform a pull-down operation on the screen of the smartwatch 5-101, to quickly find an operation entry for managing the earphones 5-102. According to the foregoing embodiments, the user can conveniently quickly manage the earphones 5-102 through the smartwatch 5-101, to improve user experience of using the earphones 5-102.

**The following describes a method for searching for a mobile phone through the smartwatch 5-101 provided in an embodiment of this application.**

Here, an example in which the electronic device 5-200 is searched for is used for description.

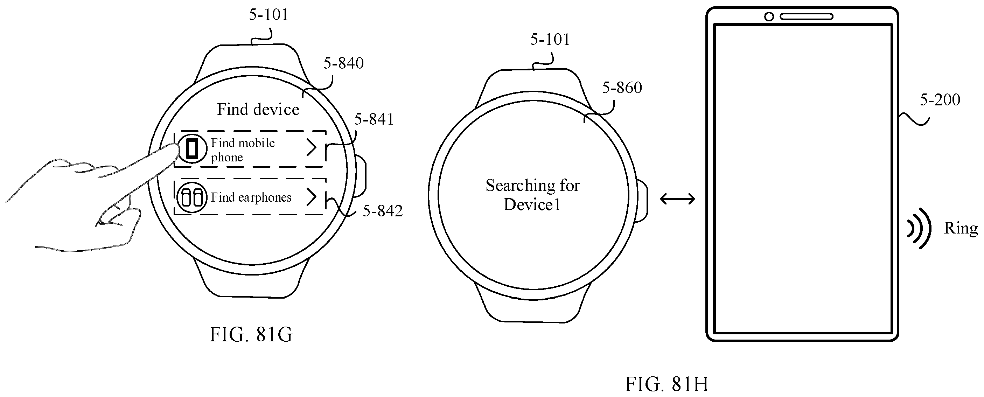

As shown in FIG. 81G, in response to an operation, for example, a tap operation, performed on the mobile phone search option 5-841, the smartwatch 5-101 may detect whether the smartwatch 5-101 is connected to the electronic device 5-200.

As shown in FIG. 81H, when the smartwatch 5-101 is connected to the electronic device 5-200, the smartwatch 5-101 may send a ringing instruction to the electronic device 5-200, and display a user interface 5-850 shown in FIG. 81H. Content displayed on the user interface 5-850 may be used to give the user a prompt that the smartwatch 5-101 is searching for the electronic device 5-200. The display content on the user interface 5-850 is not limited in embodiments of this application. The electronic device 5-200 may ring according to the ringing instruction through an audio playing apparatus, for example, a speaker, on the electronic device 5-200. In this way, the user may search for the electronic device 5-200 based on a sound made by the electronic device 5-200.

Optionally, when searching for the electronic device 5-200 through the smartwatch 5-101, the smartwatch 5-101 may further send a vibration instruction to the electronic device 5-200, to indicate the electronic device 5-200.

In some embodiments, when the smartwatch 5-101 is not connected to the electronic device 5-200, the smartwatch 5-101 may give the user a prompt that the smartwatch 5-101 is not connected to the electronic device 5-200, and the electronic device 5-200 cannot be found.

In some embodiments, the smartwatch 5-101 may obtain location information of the electronic device 5-200. When the smartwatch 5-101 is not connected to the electronic device 5-200, the smartwatch 5-101 may display location information of the electronic device 5-200 that is obtained when the smartwatch 5-101 is connected to the electronic device 5-200 last time, to prompt the user to search for the electronic device 5-200.

The foregoing method is merely an example for description of this application. An implementation method for searching for the mobile phone through the smartwatch 5-101 is not limited in embodiments of this application.

**The following describes a method for searching for the earphones 5-102 through the smartwatch 5-101 provided in an embodiment of this application.**

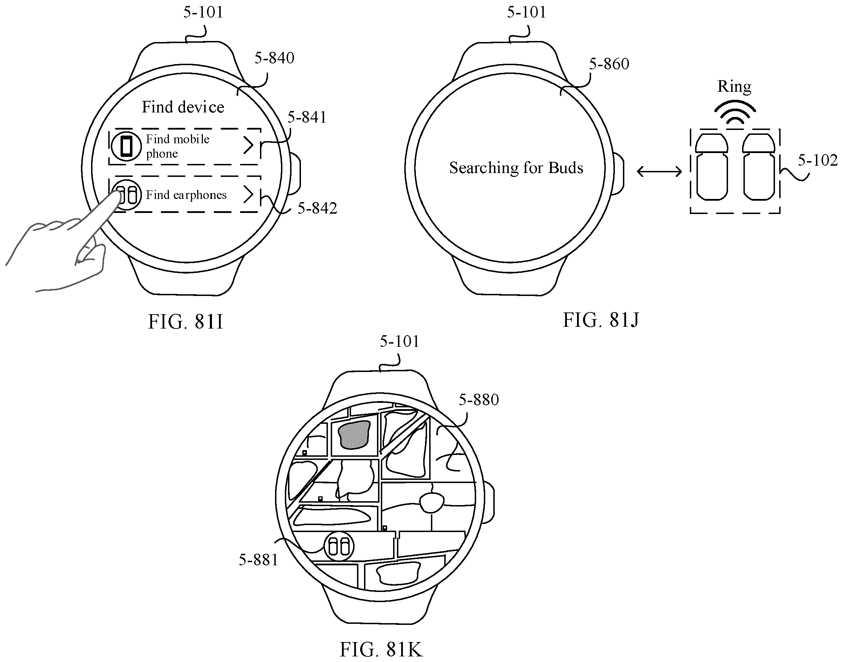

As shown in FIG. 81I, in response to an operation, for example, a tap operation, performed on the mobile phone search option 5-842, the smartwatch 5-101 may detect whether the smartwatch 5-101 is connected to the earphones 5-102.

As shown in FIG. 81J, when the smartwatch 5-101 is connected to the earphones 5-102, the smartwatch 5-101 may send a ringing instruction to the earphones 5-102, and display a user interface 5-860 shown in FIG. 81J. Content displayed on the user interface 5-860 may be used to give a user a prompt that the smartwatch 5-101 is searching for the earphones 5-102. The display content on the user interface 5-860 is not limited in embodiments of this application. The earphones 5-102 may ring according to the ringing instruction through an audio playing apparatus, for example, a speaker, on the earphones 5-102. A ringing sound of the earphones 5-102 may be heard without a need for the user to wear the earphones. In this way, the user may search for the earphones 5-102 based on the sound made by the earphones 5-102.

As shown in FIG. 81K, the smartwatch 5-101 may obtain and store location information when the smartwatch 5-101 is disconnected from the earphones 5-102. When the smartwatch 5-101 is not connected to the electronic device 5-200, the smartwatch 5-101 may display a user interface 5-880 shown in FIG. 81K. The user interface 5-880 may include an earphone location 5-881. The earphone location 5-881 may indicate location information of the earphones 5-102 in a case in which the smartwatch 5-101 is disconnected from the earphones 5-102 last time. The earphone location 5-881 may prompt the user to search for the earphones 5-102.

The foregoing method is merely an example for description of this application. An implementation method for searching for the earphones 5-102 through the smartwatch 5-101 is not limited in embodiments of this application.

It may be understood that, not limited to searching for the mobile phone and the earphones 5-102, the smartwatch 5-101 may be further used to search for another electronic device connected to the smartwatch 5-101. For a method in which the smartwatch 5-101 searches for the another electronic device connected to the smartwatch 5-101, refer to the foregoing method for searching for the mobile phone and the earphones 5-102 through the smartwatch 5-101. Details are not described herein again.

**FIG. 82A to FIG. 82D** **show an example of another scenario in which the earphones 5-102 are managed through the smartwatch 5-101.**

As shown in FIG. 82A, a button 5-101C may be disposed on the smartwatch 5-101. The button 5-101C may be disposed on a side of a watch body of the smartwatch 5-101. A location of the button 5-101C on the smartwatch 5-101 is not limited in embodiments of this application. In response to an operation, for example, a press operation, performed on the button 5-101C, the smartwatch 5-101 may display a user interface 5-910 shown in FIG. 82B.

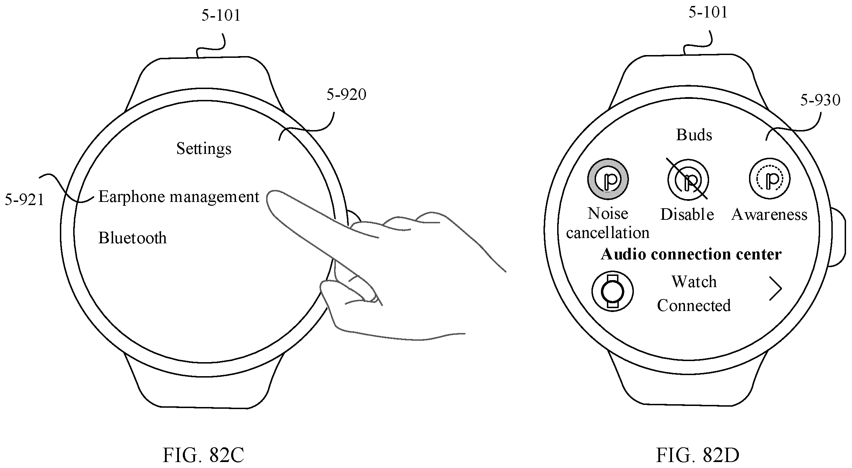

As shown in FIG. 82B, the user interface 910 may include a setting control 5-911. In response to an operation performed on the setting control 5-911, the smartwatch 5-101 may display a user interface 5-920 shown in FIG. 82C. The user interface 5-920 may be a user interface of a Settings application in the smartwatch 5-101.

As shown in FIG. 82C, the user interface 5-920 may include an earphone management control 5-921. In response to an operation performed on the earphone management control 5-921, the smartwatch 5-101 may display a user interface 5-930 shown in FIG. 82D. For the user interface 5-930, refer to the user interface 5-720 shown in FIG. 80B. Details are not described herein again. A user may manage the earphones 5-102 through a control displayed on the user interface 5-930.

It can be learned from the scenario shown in FIG. 82A to FIG. 82D that the user may quickly find, through the button 5-101C on the smartwatch 5-101, an operation entry for managing the earphones 5-102. According to the foregoing embodiments, the user can conveniently quickly manage the earphones 5-102 through the smartwatch 5-101, to improve user experience of using the earphones 5-102.

**FIG. 83A to FIG. 83I** **show an example of a scenario in which the smartwatch 5-101 manages playing audio with a sound by the earphones 5-102.**
1. Manage playing music with a sound by the earphones 5-102.

As shown in FIG. 83A, the smartwatch 5-101 may control the earphones 5-102 to play local music on the smartwatch 5-101 with a sound. For example, the smartwatch 5-101 may send audio data of the local music (for example, music Music1) on the smartwatch 5-101 to the earphones 5-102. Based on the received audio data, the earphones 5-102 may play the local music (for example, the music Music1) of the smartwatch 5-101 with a sound.

The smartwatch 5-101 may display a user interface 5-1010. The user interface 5-1010 may be a music playing interface in the smartwatch 5-101. The user interface 5-101 may include a control for controlling the smartwatch 5-101 to play music. For example, the user interface 5-101 may include a music setting control 5-1011, a volume control 5-1012, a previous track control 5-1013, and a next track control 5-1014.

The volume control 5-1012 may be used to adjust volume of audio (for example, the music Music1) played with a sound by the earphones 5-102.

The previous track control 5-1013 may be used to switch to a previous track of music of currently played music.

The next track control 5-1014 may be used to switch to a next track of music of currently played music.

In response to an operation performed on the music setting control 5-1011, the smartwatch 5-101 may display a user interface 5-1020 shown in FIG. 83B.

As shown in FIG. 83B, the user interface 5-1020 may include a noise cancellation control 5-1021, a disable control 5-1022, an awareness control 5-1023, and a delete control 5-1024. For the noise cancellation control 5-1021, the disable control 5-1022, and the awareness control 5-1023, refer to the descriptions of the noise cancellation control 5-722, the disable control 5-723, and the awareness control 5-724 shown in FIG. 80B. The delete control 5-1024 may be used to delete, from the smartwatch 5-101, music indicated by the user interface 5-1010 shown in FIG. 83A.

It can be learned from FIG. 83A and FIG. 83B that, as a control and management device of the earphones 5-102, the smartwatch 5-101 may control the earphones 5-102 to play the local music on the smartwatch 5-101 with a sound. In addition, the user may quickly find, on the music playing interface displayed on the smartwatch 5-101, functions of switching music, adjusting volume, and switching a noise control mode, so that song switching, volume adjustment of the earphones 5-102, and noise control mode switching of the earphones 5-102 can be conveniently performed.

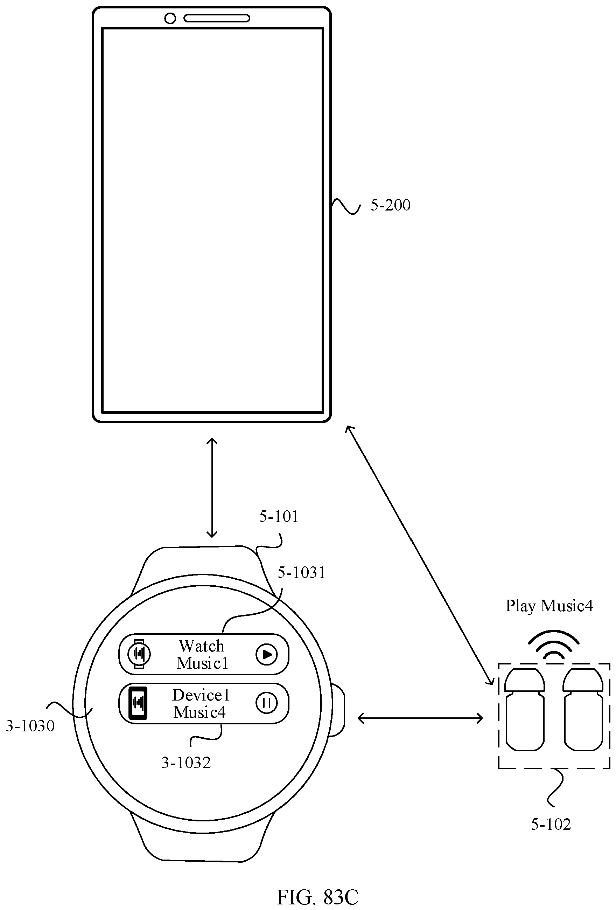

As shown in FIG. 83C, in some embodiments, the smartwatch 5-101 may further control the earphones 5-102 to play music on the electronic device 5-200 connected to the smartwatch 5-101 with a sound. When the earphones 5-102 play the music on the electronic device 5-200 with a sound, the smartwatch 5-101 may display a user interface 5-1030. The user interface 5-1030 may be a leftmost screen interface of the smartwatch 5-101. In a possible implementation, the user interface 5-1030 may be displayed by the smartwatch 5-101 in response to an operation of sliding rightward on a screen when the smartwatch displays the user interface 5-610 shown in FIG. 79A. A method operation of triggering the smartwatch 5-101 to display the user interface 5-1030 is not limited in embodiments of this application.

The user interface 5-1030 may include one or more music controls. The one or more music controls may be separately used to control music on devices to which the earphones 5-102 have been connected. For example, the earphones 5-102 have been connected to both the smartwatch 5-101 and the electronic device 5-200. The user interface 5-1030 may include a music control 5-1031 and a music control 5-1032.

The music control 5-1031 may be used to control the local music on the smartwatch 5-101. For example, the music control 5-1031 may include a play/pause control. In response to an operation performed on the play/pause control in the music control 5-1031, the smartwatch 5-101 may control the earphones 5-102 to play the local music (for example, the music Music1) of the smartwatch 5-101 or pause playing of the local music.

The music control 5-1032 may be used to control the music on the electronic device 5-200. For example, the music control 5-1032 may include a play/pause control. In response to an operation performed on the play/pause control in the music control 5-1032, the smartwatch 5-101 may control the earphones 5-102 to play the music (for example, music Music4) on the electronic device 5-200 or pause playing of the music.

In some embodiments, a music control displayed on the user interface 5-1020 may be used to trigger the smartwatch 5-101 to open a music playing interface of music on a device that can be controlled by the music control.

For example, in response to the operation performed on the music control 5-1031, the smartwatch 5-101 may display the user interface 5-1010 shown in FIG. 83A. In this way, the user may manage volume of the local music on the smartwatch 5-101 played with a sound by the earphones 5-102, a noise control mode, and the like.

In response to the operation performed on the music control 5-1032, the smartwatch 5-101 may display a music playing interface of the music on the electronic device 5-200. For the music playing interface of the music on the electronic device 5-200, refer to the foregoing user interface 5-1010. In this way, the user may manage volume, a noise control mode, and the like of music on the electronic device 5-200 played with a sound by the earphones 5-102.

It can be learned from the scenario shown in FIG. 83C that the music control 5-1031 and the music control 5-1032 provided by the smartwatch 5-101 can help the user switch music played with a sound by the earphones 5-102 between the music on the smartwatch 5-101 and the music on the electronic device 5-200. When the user wants to listen to the music on the smartwatch 5-101, the user may quickly switch music played with a sound by the earphones 5-102 to the music on the smartwatch 5-101. When the user wants to listen to the music on the electronic device 5-200, the user may quickly switch the music played with a sound by the earphones 5-102 to the music on the electronic device 5-200. In addition, the user may quickly find, through the music control, the functions of switching the music, adjusting the volume, and switching the noise control mode, so that song switching, the volume adjustment of the earphones 5-102, and noise control mode switching of the earphones 5-102 can be conveniently performed.

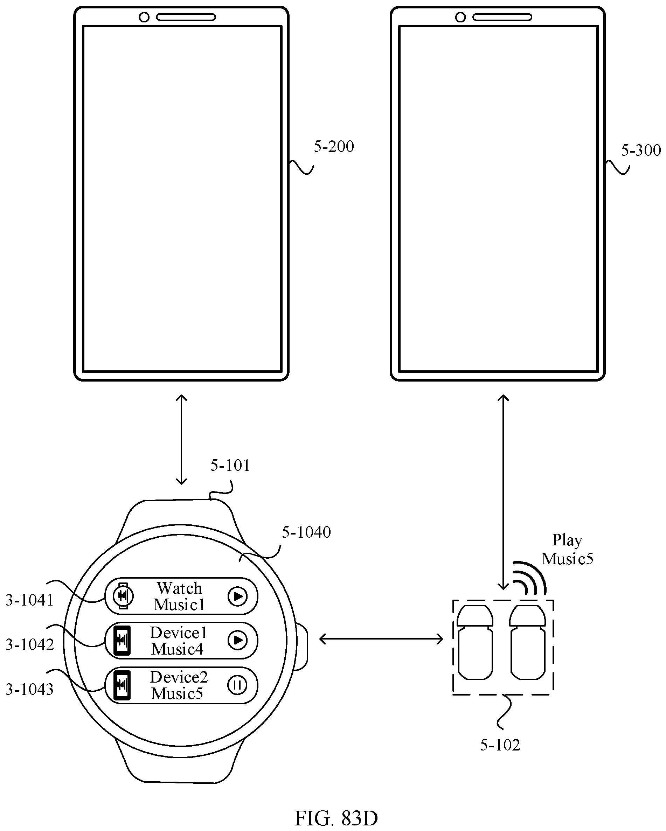

As shown in FIG. 83D, in some embodiments, the smartwatch 5-101 may further control, through the earphones 5-102, the earphones 5-102 to play, with a sound, music on the electronic device 5-300 that is not connected to the smartwatch 5-101. When the earphones 5-102 play the music on the electronic device 5-300 with a sound, the smartwatch 5-101 may display a user interface 5-1040. For the user interface 5-1040, refer to the user interface 5-1030 shown in FIG. 83C.

The user interface 5-1040 may include a music control 5-1041, a music control 5-1042, and a music control 5-1043.

For the music control 5-1041 and the music control 5-1042, refer to the music control 5-1031 and the music control 5-1032 shown in FIG. 83C, respectively. Details are not described herein again.

The music control 5-1043 may be used to control the music on the electronic device 5-300. For example, the music control 5-1043 may include a play/pause control. In response to an operation performed on the play/pause control in the music control 5-1043, the smartwatch 5-101 may control the earphones 5-102 to play the music (for example, music Music5) on the electronic device 5-300 or pause playing of the music. In response to the operation performed on the music control 5-1043, the smartwatch 5-101 may display a music playing interface of the music on the electronic device 5-300. For the music playing interface of the music on the electronic device 5-300, refer to the foregoing user interface 5-1010. In this way, the user may manage volume, a noise control mode, and the like of the music on the electronic device 5-300 played with a sound by the earphones 5-102.

It can be learned from the scenario shown in FIG. 83D that the music control 5-1041, the music control 5-1042, and the music control 5-1043 provided by the smartwatch 5-101 can help the user switch the music played with a sound by the earphones 5-102 among the music on the smartwatch 5-101, the music on the electronic device 5-200, and the music on the electronic device 5-300. In addition, the user may quickly find, through the music control, the functions of switching the music, adjusting the volume, and switching the noise control mode, so that song switching, the volume adjustment of the earphones 5-102, and noise control mode switching of the earphones 5-102 can be conveniently performed.

2. Manage playing call audio with a sound by the earphones 5-102.

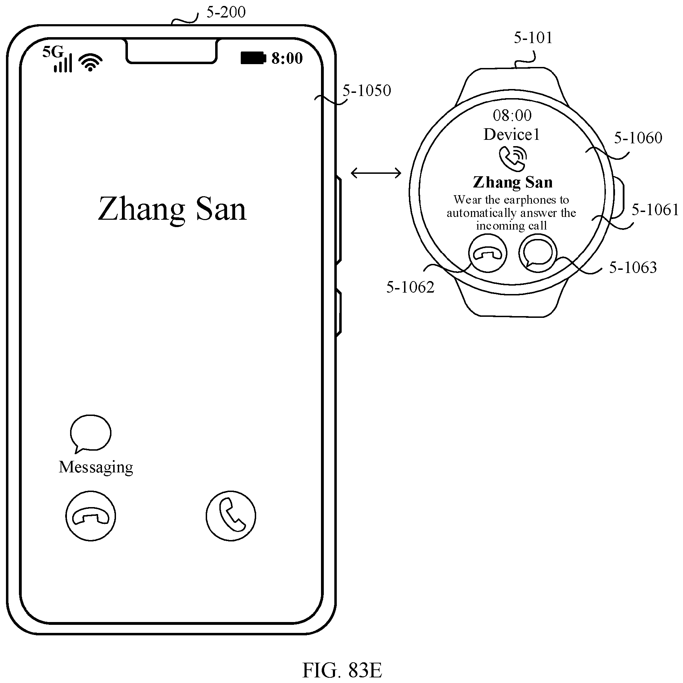

As shown in FIG. 83E, in some embodiments, the smartwatch 5-101 may control a call on the electronic device 5-200 connected to the smartwatch 5-101. After receiving an incoming call, the electronic device 5-200 may display a user interface 5-1050, and send incoming call information to the smartwatch 5-101. When receiving the incoming call information, the smartwatch 5-101 may detect whether the earphones 5-102 are in a worn state.

When it is detected that the earphones 5-102 are in a not-worn state, the smartwatch 5-101 may display, based on the received incoming call information, a user interface 5-1060. The user interface 5-1060 may be an incoming call notification screen, to give the user a prompt that the electronic device 5-200 receives the incoming call.

The user interface 5-1060 may include an answer prompt 5-1061, a decline control 5-1062, and a decline by message control 5-1063.

The answer prompt 5-1061 may be used to prompt the user with an operation manner of answering, through the earphones 5-102, the incoming call received by the electronic device 5-200. For example, because the earphones 5-102 are currently in the not-worn state, content of the answer prompt 5-1061 may include "Wear the earphones to automatically answer the incoming call". That is, after wearing the earphones 5-102, the user may answer the incoming call received by the electronic device 5-200.

The decline control 5-1062 may be used to trigger the smartwatch 5-101 to decline the incoming call received by the electronic device 5-200. In response to an operation performed on the decline control 5-625, the smartwatch 5-101 may send a call declining instruction to the electronic device 5-200. The electronic device 5-200 may decline the call according to the call declining instruction.

The decline by message control 5-1063 may be used to decline a call with a message. The declining a call with a message may be declining the call and replying with preset SMS message content.

When it is detected that the earphones 5-102 are in the worn state, the smartwatch 5-101 may display an answer control on the incoming call notification screen. In this way, the user may tap the answer control on the smartwatch 5-101, to answer the call on the electronic device 5-200. In addition, the user may listen to the call audio on the electronic device 5-200 through the earphones 5-102.

After the user interface 5-1060 shown in FIG. 83E is displayed, if it is detected that a state of the earphones 5-102 changes to the worn state, the smartwatch 5-101 may send a call answering instruction to the electronic device 5-200. The smartwatch 5-101 may answer the call according to the call answering instruction.

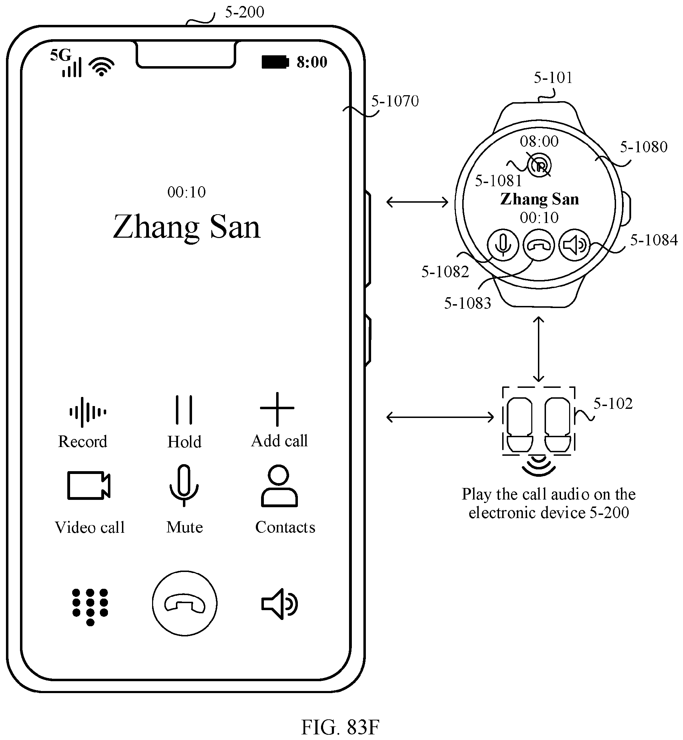

As shown in FIG. 83F, after answering the call, the electronic device 5-200 may display a user interface 5-1070. The electronic device 5-200 may transmit audio data of the call to the earphones 5-102. The earphones 5-102 may play the call audio on the electronic device 5-200 with a sound. The earphones 5-102 may collect audio of the user on the electronic device 5-200 side, and send the audio to the electronic device 5-200. The electronic device 5-200 may send the audio collected by the earphones 5-102 to an electronic device of a call peer end. The electronic device 5-200 may further transmit call control information to the earphones 5-102. The smartwatch 5-101 may display a user interface 5-1080. The user interface 5-1080 may be a call screen. The user interface 5-1080 may include a noise cancellation switching control 5-1081, a mute control 5-1082, a hang-up control 5-1083, and a volume control 5-1084.

For the noise cancellation switching control 5-1081, refer to the noise cancellation switching control 5-826 shown in FIG. 81B.

The mute control 5-1082 may be used to mute a call. In response to an operation, for example, a tap operation, performed on the mute control 5-1082, the smartwatch 5-101 may send a mute instruction to the earphones 5-102. When receiving the mute instruction, the earphones 5-102 may stop collecting audio.

The hang-up control 5-1083 may be used to hang up a call. In response to an operation performed on the hang-up control 5-1083, the smartwatch 5-101 may send a call hang-up instruction to the electronic device 5-200. When receiving the call hang-up instruction, the electronic device 5-200 may hang up the call.

The volume control 5-1084 may be used to adjust call volume. In response to an operation of increasing (or decreasing) the call volume through the volume control 5-1084, the smartwatch 5-101 may send a volume increase (or decrease) instruction to the earphones 5-102. The earphones 5-102 may increase volume of playing the call audio (or decrease volume of playing the call audio) based on the volume increase (or decrease) instruction. After indicating, based on the operation of increasing or decreasing the call volume, the earphones 5-102 to increase or decrease the call volume, the smartwatch 5-101 may send volume information to the electronic device 5-200. The volume information may indicate volume of the call audio currently played with a sound by the earphones 5-102. In this way, after performing a call volume adjustment operation on the smartwatch 5-101, the user may view current volume of the earphones 5-102 on the electronic device 5-200, and may further perform a call volume adjustment operation on the electronic device 5-200 based on the current volume, to adjust the volume of the earphones 5-102.

In some embodiments, when the earphones 5-102 play the call audio on the electronic device 5-200 with a sound, in response to an operation performed on the electronic device 5-200 to increase or decrease the call volume, the electronic device 5-200 may send, to the earphones 5-102, a call volume increase or decrease instruction. Then, the earphones 5-102 may increase or decrease the call volume according to the received instruction. Similarly, after indicating the earphones 5-102 to adjust the call volume, the electronic device 5-200 may also send the volume information to the smartwatch 5-101. In this way, the call volume of the call audio played with a sound by the earphones 5-102 can be synchronized among the earphones 5-102, the smartwatch 5-101, and the electronic device 5-200.

In addition to controlling the electronic device 5-200 to answer the incoming call, the smartwatch 5-101 may control the electronic device 5-200 to make an outgoing call. The earphones 5-102 may play the call audio of the electronic device 5-200 with a sound when the electronic device 5-200 makes the outgoing call. In some embodiments, the smartwatch 5-101 may further control, through the earphones 5-102, the electronic device 5-300 that is not connected to the smartwatch 5-101 to answer or make a call. The earphones 5-102 may play call audio of the electronic device 5-300 with a sound when the electronic device 5-300 answers the incoming call or makes the outgoing call. For a method in which the smartwatch 5-101 controls the electronic device 5-200 to make an outgoing call and controls the electronic device 5-300 to answer or make a call, refer to the descriptions of controlling, by the smartwatch 5-101, the electronic device 5-200 to answer the call shown in FIG. 83E and FIG. 83F. Details are not described herein again.

In some embodiments, when a call on the electronic device 5-200 or the electronic device 5-300 is answered through the earphones 5-102, and it is detected that two earphones in the earphones 5-102 are placed in compartments, the electronic device 5-200 or the electronic device 5-300 may hang up the call. In other words, the smartwatch 5-101 and the earphones 5-102 may provide an in-compartment hang-up function.

It can be learned from FIG. 83E and FIG. 83F that, when an incoming call is received on an electronic device connected to the earphones 5-102, the user may wear the earphones 5-102 to answer the call (that is, perform answer through wearing), and may place the earphones 5-102 in a watch body to hang up the call (that is, perform in-compartment hanging up). The smartwatch 5-101 may control the earphones 5-102 to play call audio on different electronic devices. In addition, the user may adjust the call volume of the earphones 5-102 on the call screen displayed on the smartwatch 5-101.

The foregoing embodiments are implemented, so that the user can quickly find an operation control of a common function when listening to music, answering a call, or listening to other audio, to conveniently manage the earphones 5-102. This can improve user experience of using a wearable device.

3. A prompt is displayed when the volume of the earphones 5-102 is too high.

In some embodiments, the earphones 5-102 may prompt the user when volume of playing audio is excessively high, to avoid damage to hearing of the user due to the excessively high volume.

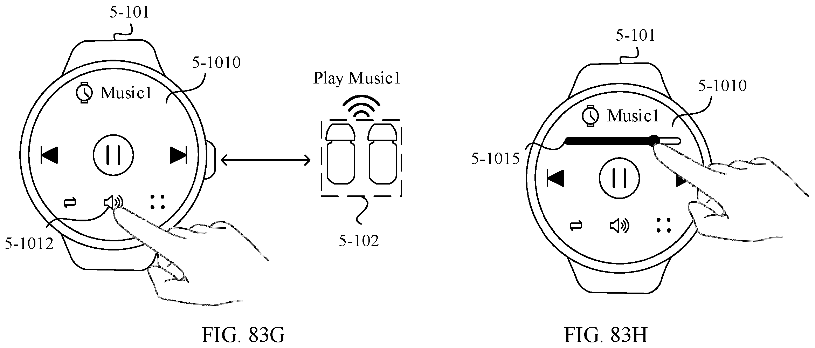

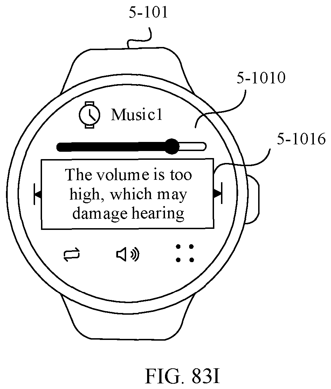

As shown in FIG. 83G, the smartwatch 5-101 may display the user interface 5-1010. For the user interface 5-1010, refer to the descriptions in the foregoing embodiments. In response to an operation performed on the volume control on the user interface 5-1010, the smartwatch 5-101 may display, on the user interface, a volume control bar 5-1015 shown in FIG. 83H. The volume control bar 5-1015 may be used to adjust the volume of the earphones 5-102. In response to the operation of adjusting the volume of the earphones 5-102 on the volume control bar 5-1015, the smartwatch 5-101 may indicate the earphones 5-102 to adjust the volume. In addition, the smartwatch 5-101 may detect whether adjusted volume is greater than a volume threshold. The volume threshold may be a maximum volume value that does not damage hearing or greatly affect hearing when the user wears the earphones to listen to audio. For example, a value of the volume threshold may be 85 decibels. The value of the volume threshold is not limited in embodiments of this application. When it is detected that the adjusted volume is greater than the volume threshold, the smartwatch 5-101 may display, on the user interface 5-1016, a prompt box 5-1016 shown in FIG. 83I. The prompt box 5-1016 may include a text prompt "The volume is too high, which may damage hearing". The prompt box 5-1016 may give the user a prompt that the current volume is too high, which may damage hearing.

4. A hearing health report is provided based on statistics of audio played with a sound by the earphones 5-102.

In some embodiments, the smartwatch 5-101 may collect statistics on sound volume of audio played with a sound by the earphones 5-102, and provide a hearing health report based on the sound volume obtained through statistics collection. The hearing health report may include duration in which the user wears the earphones 5-102, a quantity of times and duration in which volume of the audio played with a sound by the earphones 5-102 is greater than the volume threshold, a suggestion and a reminder for using an ear, and the like. The hearing health report may be a daily report, a weekly report, a monthly report, or the like. For example, the daily report may indicate a hearing health report provided by performing statistical analysis based on sound volume of audio played with a sound by the earphones 5-102 in a day. The weekly report may indicate a hearing health report provided by performing statistical analysis based on sound volume of audio played with a sound by the earphones 5-102 in a week.

According to the foregoing embodiments, the user can be prompted to use the earphones 5-102 in a healthy manner, to reduce a case in which the user excessively uses the earphones 5-102 or volume of the earphones 5-102 is excessively high, resulting in damage to hearing of the user.

5. The earphones 5-102 broadcast health data.

In some embodiments, the smartwatch 5-101 may monitor health data of the user. For example, the health data may include a heart rate, blood oxygen, blood pressure, a stress value, sleep data, and the like. The smartwatch 5-101 may indicate the earphones 5-102 to verbally broadcast the health data. For example, when it is determined that the heart rate of the user is excessively high, the smartwatch 5-101 may send a heart rate broadcast instruction to the earphones 5-102. The heart rate broadcast instruction may include a monitored value of the heart rate of the user. The earphones 5-102 may verbally broadcast the heart rate of the user based on the heart rate broadcast instruction, to give the user a prompt that the current heart rate is excessively high. When it is determined that the blood pressure of the user is excessively high, the smartwatch 5-101 may send a blood pressure broadcast instruction to the earphones 5-102. The blood pressure broadcast instruction may include a monitored value of the blood pressure of the user. The earphones 5-102 may verbally broadcast the blood pressure of the user based on the blood pressure broadcast instruction, to give the user a prompt that the current blood pressure is excessively high.

6. Manage the earphones 5-102 in a meditation mode and a sleep assistance mode.

In some embodiments, the smartwatch 5-101 may provide a meditation mode and a sleep assistance mode. The meditation mode may be used to play audio of a corresponding meditation course with a sound through the earphones 5-102, to help the user meditate. The sleep assistance mode may be used to play audio of a corresponding sleep assistance course with a sound through the earphones 5-102, to help the user quickly fall asleep.

In response to an operation of enabling the meditation mode, the smartwatch 5-101 may indicate the earphones 5-102 to play the audio of the corresponding meditation course with a sound. When playing the audio of the meditation course with a sound, the earphones 5-102 may automatically enable a noise cancellation mode, to reduce impact of external environmental noise on the meditation of the user.

In response to an operation of enabling the sleep assistance mode, the smartwatch 5-101 may indicate the earphones 5-102 to play the audio of the corresponding sleep assistance course with a sound. When the sleep assistance mode is enabled, the smartwatch 5-101 may monitor a sleep status of the user. When it is detected that the user is not asleep, the smartwatch 5-101 may indicate the earphones 5-102 to continuously play the audio of the corresponding sleep assistance course with a sound. After detecting that the user already falls asleep, the smartwatch 5-101 may indicate the earphones 5-102 to stop playing the audio of the sleep assistance course. An implementation in which the smartwatch 5-101 monitors the sleep status of the user is not limited in embodiments of this application.

The following describes a voice interaction function provided by the smartwatch 5-101.

In some embodiments, a voice interaction application may be installed in the smartwatch 5-101. For example, the voice interaction application may be a voice assistant. The smartwatch 5-101 may wake up the voice assistant in response to a detected wake-up word. After being woken up, the voice assistant may be configured to execute a voice instruction of the user.

For example, in response to a voice instruction for playing local music on the smartwatch 5-101, the smartwatch 5-101 may indicate, based on the scenario shown in FIG. 83A, the earphones 5-102 to play the local music on the smartwatch 5-101.

For another example, in response to a voice instruction for playing music on the electronic device 5-200, the smartwatch 5-101 may indicate, based on the scenario shown in FIG. 83C, the earphones 5-102 to play the music on the electronic device 5-200 with a sound.

For another example, in response to a voice instruction for playing music on the electronic device 5-300, the smartwatch 5-101 may indicate, based on the scenario shown in FIG. 83D, the earphones 5-102 to play the music on the electronic device 5-200 with a sound.

For another example, when the electronic device 5-200 receives an incoming call, in response to a voice instruction for answering the incoming call, the smartwatch 5-101 may control, based on the scenario shown in FIG. 83F, the electronic device 5-200 to answer the incoming call, and indicates the earphones 5-102 to play call audio on the electronic device 5-200 with a sound.

For another example, in response to a voice instruction for making an outgoing call through the electronic device 5-200, the smartwatch 5-101 may send an outgoing call-making instruction to the electronic device 5-200, to instruct the electronic device 5-200 to make the outgoing call to a contact included in the voice instruction of the outgoing call. In an outgoing call-making process of the electronic device 5-200, the earphones 5-102 may play call audio of the outgoing call of the electronic device 5-200.

For another example, in response to a voice instruction for opening a payment interface of the watch, the smartwatch 5-101 may open the payment interface. In other words, the user may quickly open the payment interface on the smartwatch 5-101 according to the voice instruction, to conveniently perform payment.

It should be noted that the wake-up word used to wake up the voice assistant and the voice instruction may be monitored by the smartwatch 5-101 through an audio collection apparatus (for example, a microphone), or may be monitored by the earphones 5-102 through an audio collection apparatus (for example, a microphone). An implementation of recognizing the wake-up word and the voice instruction is not limited in embodiments of this application.

It can be learned from the foregoing embodiments that the user may deliver a voice instruction to the smartwatch 5-101, to control, through the smartwatch 5-101, different devices to play music and control different devices to answer a call or make a call. According to the foregoing embodiments, operations of controlling music playing, answering a call, and making a call by the user through the smartwatch 5-101 can be simplified, and user experience of using a wearable device can be improved.

The following describes a near field communication function provided by the smartwatch 5-101.

In some embodiments, the smartwatch 5-101 may include a near field communication (Near Field Communication, NFC) module. Based on the NFC module, the smartwatch 5-101 may implement a transportation card payment function. When the smartwatch 5-101 is close to a transportation card reader, the smartwatch 5-101 may exchange data with the transportation card reader through the NFC module, to complete transportation card payment. Based on the NFC module, the smartwatch 5-101 may further implement a function of opening a door through an access card. When the smartwatch 5-101 is close to an access control apparatus on the door, the smartwatch 5-101 may exchange data with the access control apparatus through the NFC module, to complete a door opening action. Based on the NFC module, the smartwatch 5-101 may further implement a function of opening a vehicle door through a vehicle key. When the smartwatch 5-101 is close to a vehicle locking apparatus of the vehicle door, the smartwatch 5-101 may exchange data with the vehicle locking apparatus through the NFC module, to open the vehicle door.

In addition to the transportation card payment function, the function of opening the door through the access card, and the function of opening the vehicle door through the vehicle key, the smartwatch 5-101 may implement functions such as ticketing, anti-counterfeiting, and advertising based on the NFC module.

It can be learned from the foregoing embodiments that the smartwatch 5-101 may be equivalent to a transportation card, the access card, and the vehicle key. The user may quickly perform, through the smartwatch 5-101, operations implemented through the NFC module, such as the transportation card payment, opening the door through the access card, and opening the vehicle door through the vehicle key.

The following describes a message notification function provided by the smartwatch 5-101.

In some embodiments, the smartwatch 5-101 may provide a weather update message notification. The smartwatch 5-101 may display updated weather content on a screen. If the earphones 5-102 are in a worn state, the smartwatch 5-101 may indicate the earphones 5-102 to play a prompt tone of a weather update message notification with a sound, and verbally broadcast updated weather.

In some embodiments, the smartwatch 5-101 may provide a message notification of travel information. The smartwatch 5-101 may receive an operation of entering the travel information by the user, and store the travel information of the user. Alternatively, the smartwatch 5-101 may obtain the travel information of the user from the electronic device 5-200, and store the travel information of the user. The travel information may include but is not limited to travel time, a travel destination, and departure information of a travel tool such as a flight or a train. The smartwatch 5-101 may provide a travel notification for the user before the user travels based on the travel information. This can prevent the user from forgetting to travel, and help the user prepare for the travel. When the smartwatch 5-101 provides the travel notification, if the earphones 5-102 are in the worn state, the smartwatch 5-101 may indicate the earphones 5-102 to play a message prompt tone of the travel notification with a sound, and verbally broadcast content of the travel notification.

In some embodiments, a communication connection is established between the smartwatch 5-101 and the electronic device 5-200. The smartwatch 5-101 may provide an incoming call notification and a message notification of a communication application in the electronic device 5-200. The communication application may indicate an application used for information exchange and telephone communication with another user. For example, the communication application may include a Phone application, a Messaging application, a WeChat application, and the like. When the electronic device 5-200 receives an incoming call or a chat message, the electronic device 5-200 may send, to the smartwatch 5-101, information indicating the incoming call or the chat message. Then, the smartwatch 5-101 may give the user a prompt that the electronic device 5-200 receives the incoming call or the chat message. If the earphones 5-102 are in the worn state, the smartwatch 5-101 may indicate the earphones 5-102 to play an incoming call prompt tone or a chat message prompt tone with a sound. The earphones 5-102 may further play call audio on the electronic device 5-200 with a sound, or verbally broadcast content of the chat message received by the electronic device 5-200.

Optionally, a communication connection may be established between the earphones 5-102 and the electronic device 5-300. The smartwatch 5-101 may determine, through the earphones 5-102, that the electronic device 5-300 receives an incoming call or a chat message, and provide an incoming call notification and a message notification of a communication application in the electronic device 5-300.

In addition to the weather update message notification, the message notification of the travel information, the incoming call notification, and the message notification, the smartwatch 5-101 may further provide a corresponding notification for the user based on an obtained message of another type. The foregoing embodiments are implemented, so that the smartwatch 5-101 can provide an intelligent message notification for the user, to bring more convenience to life of the user.

The following describes a function that is provided in an exercise scenario and that is of managing the smartwatch 5-101 and the earphones 5-102.

In some embodiments, the smartwatch 5-101 may provide a plurality of sports modes, for example, an outdoor running mode, an indoor running mode, an outdoor walking mode, an indoor walking mode, an outdoor cycling mode, a swimming mode, a mountain climbing mode, and a hiking mode. The smartwatch 5-101 may enable an exercise mode in response to an operation of enabling the exercise mode, to monitor exercise data of the user. Optionally, the smartwatch 5-101 may further determine, based on data monitored by a sensor like an acceleration sensor or a gyroscope sensor, whether the user is performing sports corresponding to a sports mode, to enable the corresponding sports mode.

When any sports mode is enabled, if the earphones 5-102 are in the worn state, the smartwatch 5-101 may indicate the earphones 5-102 to broadcast a related sports guide with a sound. For example, when the outdoor running mode is enabled, the earphones 5-102 may broadcast, with a sound, a sports guide related to running of the user, for example, running duration, a running distance, a running speed, a heart rate of the user, and a running posture. Specific content of the sports guide is not limited in embodiments of this application.

Optionally, when any sports mode is enabled, in response to an operation of opening a watch cover of the smartwatch 5-101, the smartwatch 5-101 may pause the exercise mode, to pause recording of the exercise data of the user. Further, in response to an operation of closing the watch cover of the smartwatch 5-101, the smartwatch 5-101 may enable the sports mode, and continue to record the exercise data of the user.

Optionally, when any exercise mode is enabled, the smartwatch 5-101 may further indicate the earphones 5-102 to play music with a sound. In this way, the user can wear the earphones 5-102 to listen to the music when performing sports. The smartwatch 5-101 is worn on a wrist of the user. When a wrist flipping action is detected, the smartwatch 5-101 may switch music played with a sound by the earphones 5-102, for example, switch to a next track of music. In other words, in a scenario in which the user wears the smartwatch 5-101 and the earphones 5-102 to perform sports, the user may switch listened music by flipping the wrist. In addition to switching music, the wrist flipping action may be further used to perform another music control (for example, volume adjustment) in an exercise scenario.

Optionally, when any exercise mode is enabled, the smartwatch 5-101 may further indicate the earphones 5-102 to play music with a sound. When a preset gesture is detected, the smartwatch 5-101 may further indicate the earphones 5-102 to pause or resume the music. The preset gesture may be, for example, a gesture of covering the screen of the smartwatch 5-101 by a palm, or a gesture of photographing the screen. The preset gesture is not limited in embodiments of this application.

According to the foregoing embodiments, the user can more conveniently control, in an exercise scenario, a behavior of monitoring exercise data by the smartwatch 5-101, and can conveniently control listened music.

The following describes a foreign object detection function provided by the smartwatch 5-101.

It can be learned from the wearable device shown in FIG. 1 to FIG. 4 that an earphone slot (for example, an earphone slot 5-101A and an earphone slot 5-101B) is disposed in a watch body of the smartwatch 5-101. The earphone slot may be configured to accommodate the earphones 5-102. In a process of using the smartwatch 5-101, there may be a foreign object (for example, a liquid, a solid, or a semi-solid dirt) in the earphone slot of the smartwatch 5-101. The foreign object in the earphone slot may cause a smudge, corrosion, and rust on surfaces of the smartwatch 5-101 and the earphones 5-102, function exceptions (such as charging and communication exceptions), and the like.

The smartwatch 5-101 may provide a foreign object detection function, to detect whether there is a foreign object in the earphone slot.

In a possible implementation, a foreign object detection apparatus may be disposed in the earphone slot of the smartwatch 5-101. The foreign object detection apparatus may be disposed on a slot wall of the earphone slot in a form of a spring plate. An earphone charging apparatus may be further disposed in the earphone slot of the smartwatch 5-101. The earphone charging apparatus may be configured to charge the earphones 5-102 by the smartwatch 5-101 when the earphones 5-102 are placed in the earphone slot. A manner of disposing the foreign object detection apparatus and the earphone charging apparatus is not limited in embodiments of this application.

A principle of performing foreign object detection on the earphone slot by the smartwatch 5-101 may be specifically as follows:
when both the foreign object detection apparatus and the earphone charging apparatus are in contact with a foreign object, a waveform of a charging signal of the smartwatch 5-101 changes. The charging signal whose waveform changes may be referred to as an abnormal charging signal. If only the earphone charging apparatus or only the foreign object detection apparatus is in contact with the foreign object, the waveform of the charging signal of the smartwatch 5-101 does not change. The charging signal whose waveform remains unchanged may be referred to as a normal charging signal. The smartwatch 5-101 may detect, based on a type of the charging signal, whether there is a foreign object in the earphone slot. When determining that the charging signal is an abnormal charging signal, the smartwatch 5-101 may determine that there is a foreign object in the earphone slot. When determining that the charging signal is a normal charging signal, the smartwatch 5-101 may determine that there is no foreign object in the earphone slot.

The foregoing method is merely an example of the foreign object detection method provided in embodiments of this application. The smartwatch 5-101 may alternatively use another method to detect whether there is a foreign object in the earphone slot.

When detecting that there is a foreign object in the earphone slot, the smartwatch 5-101 may turn off a charging circuit. In this way, when the earphones 5-102 are placed in the earphone slot, the smartwatch 5-101 stops charging the earphones 5-102. There is no charging current between the smartwatch 5-101 and the earphones 5-102. In this way, when there is a foreign object in the earphone slot, a charging exception (for example, a short circuit) can be prevented when the smartwatch 5-101 charges the earphones 5-102, to improve safety of the smartwatch 5-101 charging the earphones 5-102.

It may be understood that, when it is detected that the foreign object in the earphone slot is removed (that is, the type of the charging signal changes from the abnormal charging signal to the normal charging signal), the smartwatch 5-101 may turn on the charging circuit again. In this way, after the foreign object is removed, the smartwatch 5-101 may charge the earphones 5-102 placed in the earphone slot.

Optionally, when it is detected that there is a foreign object in the earphone slot, the smartwatch 5-101 may further send an alert to the user. For example, the smartwatch 5-101 may display a prompt message on the screen, to give the user a prompt that there is a foreign object in the earphone slot and the foreign object needs to be removed as soon as possible. The smartwatch 5-101 may alternatively emit a warning tone through a speaker, to give the user a prompt that there is a foreign object in the earphone slot. The smartwatch 5-101 may alternatively notify, through motor vibration, the user that there is a foreign object in the earphone slot. An implementation in which the smartwatch 5-101 gives the user a prompt that there is a foreign object in the earphone slot is not limited in embodiments of this application.

It can be learned from the foregoing embodiments that the smartwatch 5-101 may detect whether there is a foreign object in the earphone slot in the watch body, and after detecting the foreign object, disconnect the charging circuit, to give the user a prompt that the foreign object appears. This can improve safety of the smartwatch 5-101 charging the earphones 5-102, and bring better user experience.

**FIG. 84A to FIG. 84K** **show an example of a scenario in which power management is performed on the smartwatch 5-101 and the earphones 5-102.**

### 1. (FIG. 84A to FIG. 84E) Display of power of the smartwatch 5-101 and the earphones 5-102

In some embodiments, the smartwatch 5-101 may display the power of the smartwatch 5-101 and the earphones 5-102. For a scenario in which the smartwatch 5-101 displays power of the smartwatch 5-101, refer to the scenario shown in FIG. 81B. For a scenario in which the smartwatch 5-101 displays power of the earphones 5-102, refer to the scenarios shown in FIG. 79D to FIG. 79F and FIG. 81B. Details are not described herein again.

In some embodiments, the smartwatch 5-101 is paired with the electronic device 5-200, and a communication connection is established between the smartwatch 5-101 and the electronic device 5-200. For a process in which the smartwatch 5-101 performs pairing with and establishes a communication connection to the electronic device 5-200, refer to the descriptions in the foregoing embodiments. The smartwatch 5-101 may send power information of the smartwatch 5-101 and the earphones 5-102 to the electronic device 5-200. The electronic device 5-200 may display the power of the smartwatch 5-101 and the earphones 5-102 based on the received power information. In this way, the user may further view the power of the smartwatch 5-101 and the earphones 5-102 on the electronic device 5-200.

It should be noted that an application for managing the smartwatch 5-101 and the earphones 5-102 may be installed in the smartwatch 5-101. The application for managing the smartwatch 5-101 and the earphones 5-102 may be, for example, a Health application. The smartwatch 5-101 may display, on a user interface of the Health application, the power of the smartwatch 5-101 and the earphones 5-102, and related controls for managing the smartwatch 5-101 and the earphones 5-102. The application for managing the smartwatch 5-101 and the earphones 5-102 is not limited in embodiments of this application. In subsequent embodiments, the Health application is specifically used as an example for description.

As shown in FIG. 84A, the electronic device 5-200 may display a user interface 5-1110. The user interface 5-1110 may include an application icon, for example, a Health application icon 5-1111. In response to an operation performed on the Health application icon 5-1111, the smartwatch 5-101 may start the Health application.

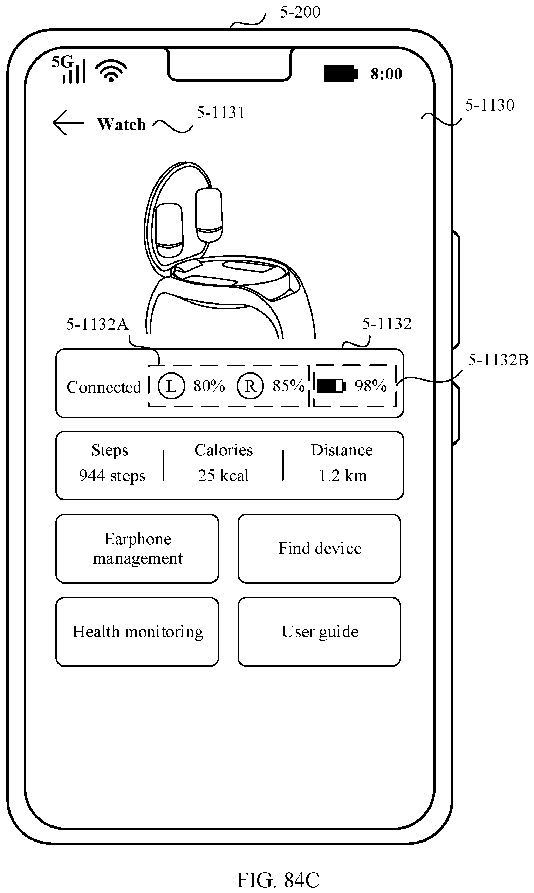

As shown in FIG. 84B, when the Health application is started, the smartwatch 5-101 may display a user interface 5-1120. The user interface 5-1120 may include a device option 5-1121. The device option 5-1121 may be a device option corresponding to the smartwatch 5-101. A device icon and a device name of the smartwatch 5-101 and a status of a connection between the smartwatch 5-101 and the electronic device 5-200 may be displayed on the device option 5-1121. Content displayed on the device option 5-1121 is not limited in embodiments of this application. In response to an operation performed on the device option 5-1121, the electronic device 5-200 may display a user interface 5-1130 shown in FIG. 84C. The user interface 5-1130 may be a user interface used to manage the smartwatch 5-101 and the earphones 5-102 in the Health application.

As shown in FIG. 84C, the user interface 5-1130 may include a page title 5-1131 and a device information display box 5-1132.

The page title 5-1131 may indicate a device corresponding to the user interface 5-1131. For example, the page title 5-1131 may be a name "Watch" of the smartwatch 5-101.

The device information display box 5-1132 may include earphone power information 5-1132A, smartwatch power information 5-1132B, and the status of the connection between the smartwatch 5-101 and the electronic device 5-200. The earphone power information 5-1132A may indicate current power of two earphones in the earphones 5-102. For example, it can be learned from the earphone power information 5-1132A that, for the earphones 5-102, power of the left earphone is 80% of full power, and power of the right earphone is 85% of full power. The smartwatch power information 5-1132B may indicate current power of the smartwatch 5-101. For example, it can be learned from the smartwatch power information 5-1132B that the power of the smartwatch 5-101 is 98% of full power. That the status of the connection between the smartwatch 5-101 and the electronic device 5-200 is "Connected" may indicate that there is a communication connection between the smartwatch 5-101 and the electronic device 5-200 currently.

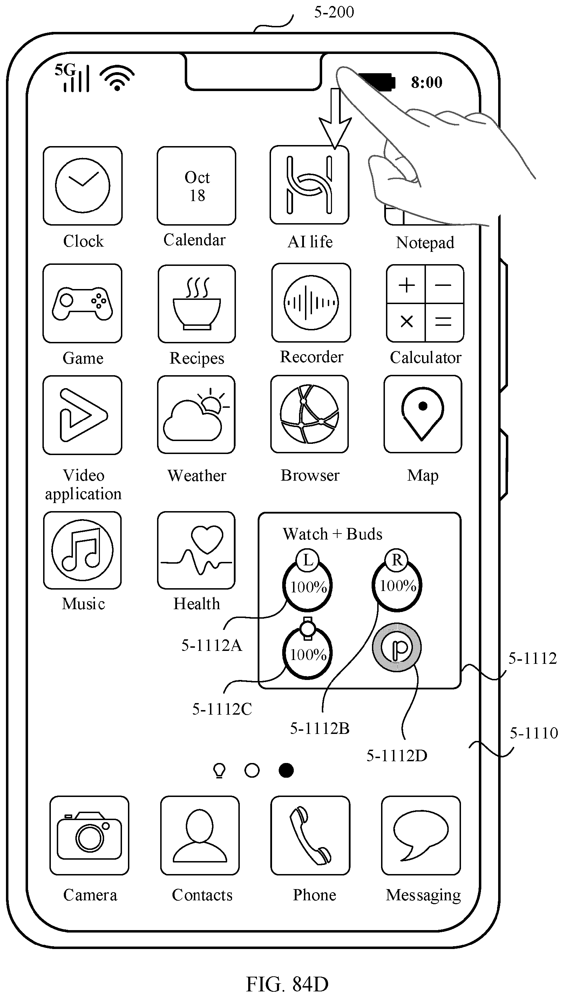

As shown in FIG. 84D, the electronic device 5-200 may further display a service widget 5-1112 on the user interface 5-1110. The service widget 5-1112 may include left earphone power information 5-1112A, right earphone power information 5-1112B, smartwatch power information 5-1112C, and a noise cancellation switching control 5-1112D. The left earphone power information 5-1112A may indicate current power of the left earphone in the earphones 5-102. The right earphone power information 5-1112B may indicate current power of the right earphone in the earphones 5-102. The smartwatch power information 5-1112C may indicate the current power of the smartwatch 5-101. For the noise cancellation switching control 5-1112D, refer to the descriptions of the noise cancellation switching control 5-826 shown in FIG. 81B. In other words, the user may add, to the user interface of the electronic device 5-200, a service widget related to the smartwatch 5-101 and the earphones 5-102, to conveniently view the power of the smartwatch 5-101 and the earphones 5-102 through the service widget.

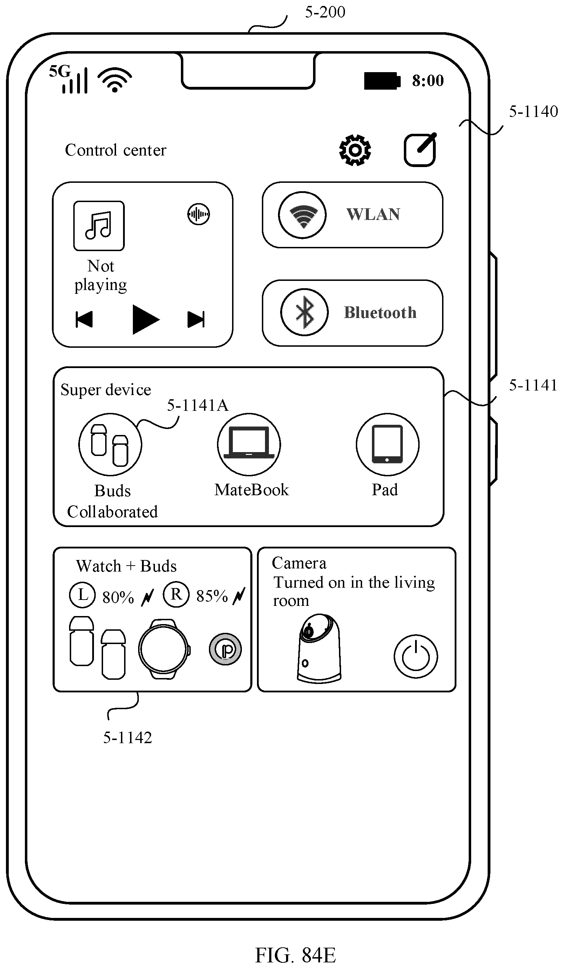

In response to a pull-down operation of sliding downward from a top right area of a screen of the electronic device 5-200 shown in FIG. 84D, the electronic device 5-200 may display a user interface 5-1140 shown in FIG. 84E. The user interface 5-1140 may be a pull-down control interface of the electronic device 5-200. A user operation for opening the pull-down control interface is not limited in embodiments of this application.

As shown in FIG. 84E, the user interface 5-200 may include a device list widget 5-1141 and a wearable device widget 5-1142.

Icons of one or more devices may be displayed in the device list widget 5-1141. The one or more devices may include a device currently connected to the electronic device 5-200, a device detected by the electronic device 5-200 but not connected to the electronic device 5-200, and the like. For example, the electronic device 5-200 is currently connected to the earphones 5-102, and plays music with a sound through the earphones 5-102. The electronic device 5-200 may display an earphone icon 5-1141A shown in FIG. 84E in the device list widget 5-1141.

The wearable device widget 5-1142 may be used to open a user interface (for example, the user interface 5-1130 shown in FIG. 84C) for managing the smartwatch 5-101 and the earphones 5-102. Power information of the earphones 5-102 may be displayed in the wearable device widget 5-1142. Optionally, power information of the smartwatch 5-101 may also be displayed in the wearable device widget 5-1142. In other words, the user may open the pull-down control interface by using the pull-down operation, and quickly view the power of the smartwatch 5-101 and the earphones 5-102 on the pull-down control interface.

In addition to the user interface, the service widget, and the pull-down control interface of the Health application, the electronic device 5-200 may further display the power information of the smartwatch 5-101 and the earphones 5-102 at another location. For example, the electronic device 5-200 may alternatively display the power information of the smartwatch 5-101 and the earphones 5-102 on a leftmost screen interface. A location at which the electronic device 5-200 displays the power information of the smartwatch 5-101 and the earphones 5-102 is not limited in embodiments of this application.

It can be learned from the scenario shown in FIG. 84A to FIG. 84E that the electronic device 5-200 may display the power information of the smartwatch 5-101 and the earphones 5-102 at a plurality of locations, and the user may quickly view the power of the smartwatch 5-101 and the earphones 5-102 by using a plurality of operations.

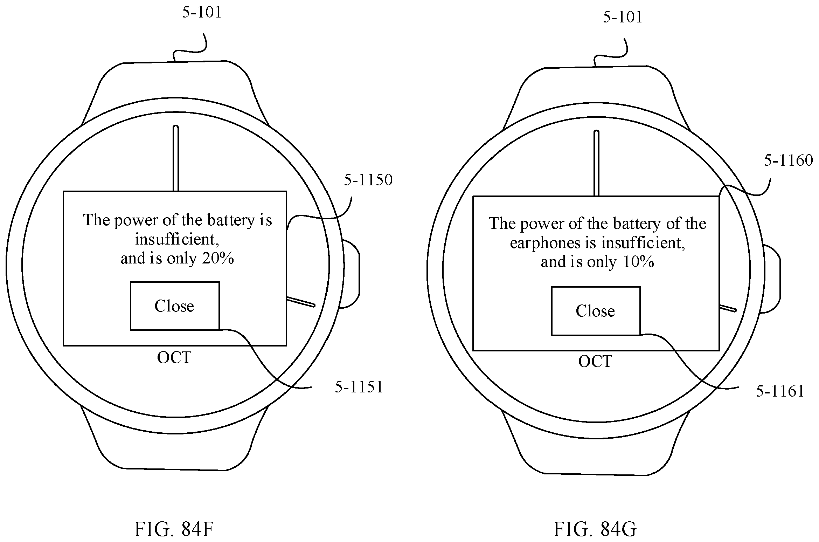

### 2. (FIG. 84F to FIG. 84H) Low power notifications of the smartwatch 5-101 and the earphones 5-102

In some embodiments, the smartwatch 5-101 may provide a low power notification when the power of the smartwatch 5-101 is low, to prompt the user to charge the smartwatch 5-101 in a timely manner.

For example, when it is detected that the power of the smartwatch 5-101 is 20% of the full power, the smartwatch 5-101 may display a prompt box 5-1150 shown in FIG. 84F. The prompt box 5-1150 may include prompt content "The power of the battery is insufficient, and is only 20%", to give the user a prompt that the power of the smartwatch 5-101 is low. The prompt box 5-1150 may further include a close control 5-1151. The close control 5-1151 may be used to close the prompt box 5-1150.

When it is detected that the power of the smartwatch 5-101 is 10% of the full power, the smartwatch 5-101 may give the user a prompt that the power of the smartwatch is only 10%. When it is detected that the power of the smartwatch 5-101 is 5% of the full power, the smartwatch 5-101 may give the user a prompt that the power of the smartwatch is only 5%. For low power notifications provided by the smartwatch 5-101 when the power is 10% and 5% of the full power, refer to the prompt box 5-1150 shown in FIG. 84F.

Not limited to the power of 20%, the power of 10%, and the power of 5%, the smartwatch 5-101 may further provide a low power notification when the power of the smartwatch 5-101 is another low power value.

In some embodiments, the smartwatch 5-101 may provide a low power notification when the power of the earphones 5-102 is low, to prompt the user to charge the earphones 5-102 in a timely manner.

The smartwatch 5-101 may obtain power information of the earphones 5-102. For example, when the earphones 5-102 are placed in an earphone slot in a watch body of the smartwatch 5-101, the smartwatch 5-101 may obtain the power information of the earphones 5-102 through a physical connection (for example, a charging electrode) between the smartwatch 5-101 and the earphones 5-102. For another example, when the earphones 5-102 are in an out state, the smartwatch 5-101 may obtain the power information of the earphones 5-102 through a Bluetooth communication connection between the smartwatch 5-101 and the earphones 5-102. A method in which the smartwatch 5-101 obtains the power information of the earphones 5-102 is not limited in embodiments of this application.

When it is detected that power of at least one earphone in the earphones 5-102 is 10% of full power, the smartwatch 5-101 may display a prompt box 5-1160 shown in FIG. 84G. The prompt box 5-1160 may include prompt content "The power of the battery of the earphones is insufficient, and is only 10%", to give the user a prompt that the power of the earphones 5-102 is low. The prompt box 5-1160 may further include a close control 5-1161. The close control 5-1161 may be used to close the prompt box 5-1160.

When it is detected that the power of the at least one earphone in the earphones 5-102 is 20% (or 5%) of the full power, the smartwatch 5-101 may give the user a prompt that the power of the earphones 5-102 is only 20% (or 5%). For a low power notification provided by the smartwatch 5-101 when the power of the earphones 5-102 is 20% (or 5%) of the full power, refer to the prompt box 5-1160 shown in FIG. 84G.

Not limited to the power of 20%, the power of 10%, and the power of 5%, the smartwatch 5-101 may further provide a low power notification when the power of the earphones 5-102 is another low power value.

In some embodiments, when the earphones 5-102 are in a worn state, the earphones 5-102 may prompt, through a low power prompt tone or a verbally broadcast low power notification when the power of the earphones 5-102 is low, the user to charge the earphones 5-102 in a timely manner. An earphone 5-102A in the earphones 5-102 may detect whether power of the earphone 5-102A is low, and give a low power notification of the earphone 5-102A. An earphone 5-102B in the earphones 5-102 may detect whether power of the earphone 5-102B is low, and give a low power notification of the earphone 5-102B. The following uses 5-102A as an example to describe how to give a low power notification.

For example, when it is detected that the power of the earphone 5-102A is 20% (or 10%, or 5%) of full power, the earphone 5-102A may play a low power prompt tone with a sound or verbally broadcast a low power notification. Content of the verbally broadcast low power notification may include "The power of the battery is low, and is only 20% (or 10%, or 5%)". In this way, when wearing the earphone 5-102A, the user may learn, through a notification of the earphone 5-102A, that the power of the earphone 5-102A is low, to charge the earphone 5-102A in a timely manner.

It can be learned from the scenario shown in FIG. 84A to FIG. 84E that the electronic device 5-200 may also obtain the power information of the smartwatch 5-101 and the earphones 5-102.

In some embodiments, when it is detected that the power of the smartwatch 5-101 is low (for example, it is detected that the power of the smartwatch 5-101 reaches a preset power value), the electronic device 5-200 may provide a low power notification indicating that the power of the smartwatch 5-101 is insufficient. The preset power value may be, for example, power of 20%, power of 10%, or power of 5%. A value of the preset power value is not limited in embodiments of this application.

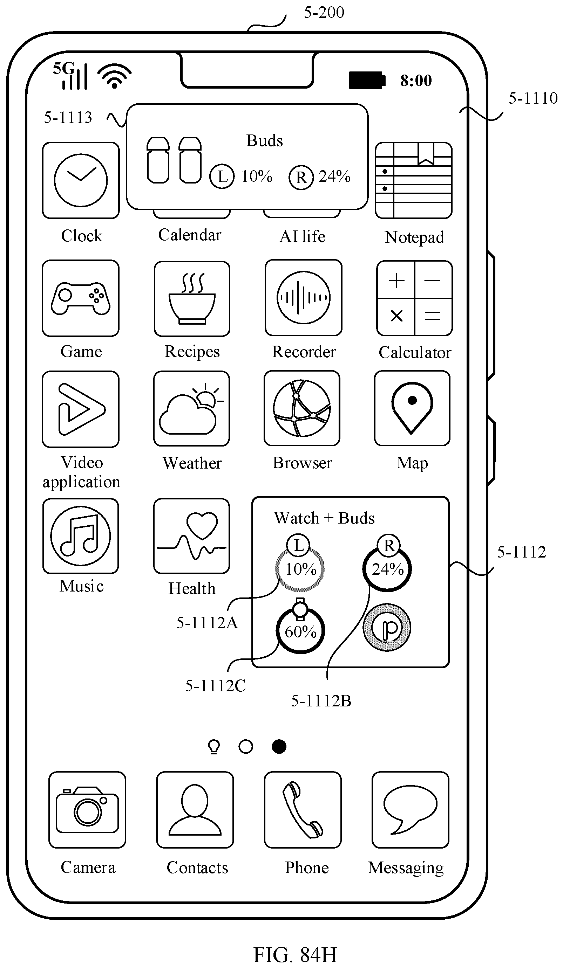

In some embodiments, when it is detected that power of at least one earphone in the earphones 5-102 is low (for example, it is detected that the power of the at least one earphone in the earphones 5-102 reaches a preset power value), the electronic device 5-200 may provide a low power notification indicating that the power of the earphones 5-102 is insufficient. For example, when it is detected that the power of the at least one earphone in the earphones 5-102 is low, the electronic device 5-200 may display a prompt box 5-1113 shown in FIG. 84H. The prompt box 5-1113 may include power information of the two earphones in the earphones 5-102. For example, it can be learned from the prompt box 5-1113 that the power of the left earphone in the earphones 5-102 is 10%. The power of the right earphone in the earphones 5-102 is 24%. The prompt box 5-1113 may give the user a prompt that the power of the earphones 5-102 is low and the earphones 5-102 need to be charged in a timely manner.

As shown in FIG. 84H, the user interface 5-1110 may further include a service widget 5-1112. For the service widget 5-1112, refer to the descriptions in the foregoing embodiments. Display styles of the left earphone power information 5-1112A, the right earphone power information 5-1112B, and the smartwatch power information 5-1112C included in the service widget 5-1112 may change with a change of corresponding device power. Herein, a change of a display style of the left earphone power information 5-1112A is used as an example for description. For changes of display styles of the right earphone power information 5-1112B and the smartwatch power information 5-1112C, refer to the change of the display style of the left earphone power information 5-1112A.

When the power of the left earphone in the earphones 5-102 reaches or is lower than the preset power value, for a display style of the left earphone power information 5-1112A, refer to the left-earphone power information 5-1112A shown in FIG. 84H. When the power of the left earphone in the earphones 5-102 is higher than the preset power value, for a display style of the left earphone power information 5-1112A, refer to the left earphone power information 5-1112A shown in FIG. 84D. It can be learned by comparing FIG. 84D and FIG. 84H that the left earphone power information 5-1112A may be presented in different display styles in different colors as the left earphone power information changes. The different display styles of the left earphone power information 5-1112A are not limited in embodiments of this application.

It can be learned from the scenario shown in FIG. 84F to FIG. 84H that both the smartwatch 5-101 and the electronic device 5-200 may provide the low power notifications of the smartwatch 5-101 and the earphones 5-102. The earphones 5-102 may also provide a low power notification of the earphones 5-102. The low power notifications may prompt the user to charge the smartwatch 5-101 and the earphones 5-102 in a timely manner, to reduce a case in which the smartwatch 5-101 and the earphones 5-102 are automatically powered off due to running out of power.

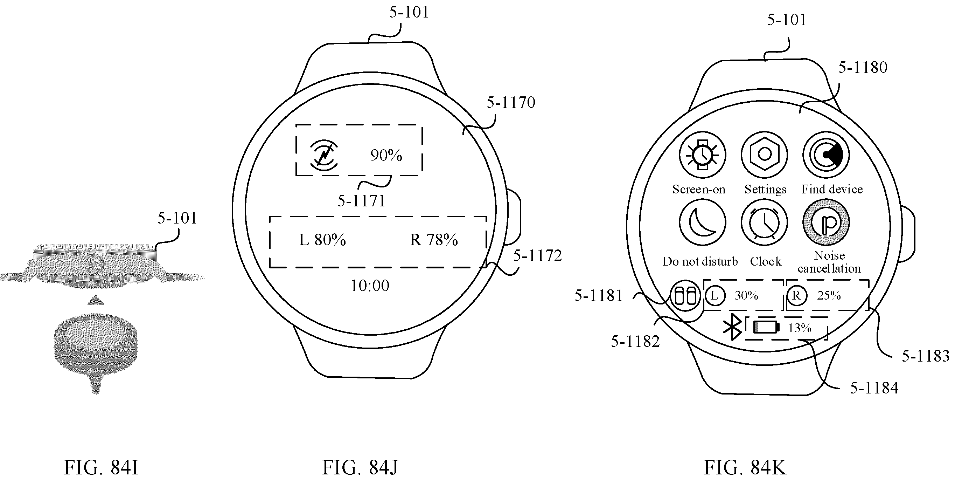

### 3. (FIG. 84I to FIG. 84K) Charging statuses of the smartwatch 5-101 and the earphones 5-102

In some embodiments, when the smartwatch 5-101 is not connected to a charging apparatus, the smartwatch 5-101 may charge, with a battery of the smartwatch 5-101, the earphones 5-102 placed in the earphone slot.

As shown in FIG. 84I, when the smartwatch 5-101 is connected to the charging apparatus, the smartwatch 5-101 may enter a charged state, and display a user interface 5-1170 shown in FIG. 84J. The charging apparatus may be, for example, a wireless charging cradle. The charging apparatus is not limited in embodiments of this application.

As shown in FIG. 84J, the user interface 5-1170 may include smartwatch charging information 5-1171 and earphone charging information 5-1172. The smartwatch charging information 5-1171 may indicate the current power of the smartwatch 5-101. The earphone charging information 5-1172 may indicate the current power of the earphones 5-102. It should be noted that, if there is an earphone placed in only one earphone slot in the watch body of the smartwatch 5-101, the earphone charging information 5-1172 on the user interface 5-1170 may include only power of the earphone placed in the earphone slot. If the two earphones in the earphones 5-102 are in the out state, the user interface 5-1170 may not include the earphone charging information.

In some embodiments, when the earphones 5-102 are in an in state, after the smartwatch 5-101 is connected to the charging apparatus, the charging apparatus may simultaneously charge the smartwatch 5-101 and the earphones 5-102. In other words, power for charging both the smartwatch 5-101 and the earphones 5-102 is from the charging apparatus. The smartwatch 5-101 may not need to charge the earphones 5-102 with the battery of the smartwatch 5-101.

In some embodiments, when the earphones 5-102 are in the in state, after the smartwatch 5-101 is connected to the charging apparatus, the charging apparatus may charge the smartwatch 5-101 and the earphones 5-102 according to a preset watch and earphone charging time sequence. For example, the charging apparatus may first charge the earphones 5-102. After the power of the earphones 5-102 reaches preset power (for example, 50% or 60%), the charging apparatus may charge the watch 5-101. After the smartwatch 5-101 is fully charged, if the charging apparatus is still connected to the smartwatch 5-101, the charging apparatus may continue to charge the earphones 5-102 until the earphones 5-102 are fully charged. For another example, the charging apparatus may first charge the watch 5-101. After the watch 5-101 is fully charged, the charging apparatus may charge the earphones 5-102. This can improve charging efficiency. In a scenario in which time for which the smartwatch 5-101 is connected to the charging apparatus is short, the charging apparatus preferentially charges the smartwatch 5-101. Subsequently, after the smartwatch 5-101 is disconnected from the charging apparatus, the earphones 5-102 may be further charged by the smartwatch 5-101. The preset watch and earphone charging time sequence is not limited in embodiments of this application.

In some embodiments, when the power of the smartwatch 5-101 is lower than a power threshold, the smartwatch 5-101 may stop charging the earphones 5-102 in the earphone slot.

As shown in FIG. 84K, the smartwatch 5-101 may display a user interface 5-1180. For the user interface 5-1180, refer to the user interface 5-820 shown in FIG. 81B. The user interface 5-1190 may include earphone in-compartment information 5-1181, left earphone information 5-1182, right earphone information 5-1183, and a power identifier 5-1184.

The earphone in-compartment information 5-1181 may indicate that the two earphones in the earphones 5-102 are both in the in state.

The left earphone information 5-1182 and the right earphone information 5-1183 may respectively indicate related information (for example, power and whether the left earphone and the right earphone are in a charged state) of the left earphone and the right earphone in the earphones 5-102. If the left earphone and the right earphone are in the charged state, the left earphone information 5-1182 and the right earphone information 5-1183 may include charging icons in the left earphone information 5-828 and the right earphone information 5-829 shown in FIG. 81B. That the left earphone information 5-1182 and the right earphone information 5-1183 do not include the charging icons may indicate that the left earphone and the right earphone are not in the charged state.

The power identifier 5-1184 may indicate the current power of the smartwatch 5-101. For example, the power identifier 5-1184 includes "13%". "13%" may indicate that the current power of the smartwatch 5-101 is 13% of the full power.

If the power threshold is 20%, the smartwatch 5-101 may detect that the current power of the smartwatch 5-101 is lower than the power threshold. Therefore, when the earphones 5-102 are placed in the earphone slot, the smartwatch 5-101 may not charge the earphones 5-102. Content of the left earphone information 5-1182 and the right earphone information 5-1183 may be content shown in FIG. 84K but does not include the charging icons. A value of the power threshold is not limited in embodiments of this application.

According to the foregoing embodiments, when the power of the smartwatch 5-101 is excessively low, it can be ensured as much as possible that the smartwatch 5-101 has power, to reduce a case in which the smartwatch 5-101 is automatically powered off because the smartwatch 5-101 runs out of power.

In some embodiments, when the smartwatch 5-101 charges, with the battery of the smartwatch 5-101, the earphones 5-102 placed in a compartment, the smartwatch 5-101 may charge the earphones 5-102 to a preset power value. When the power of the earphones 5-102 is the preset power value, the smartwatch 5-101 may stop charging the earphones 5-102. The preset power value may be preset before delivery of the smartwatch 5-101. Optionally, the preset power value may be determined by the smartwatch 5-101 based on a use habit of the user. Optionally, the preset power value may be set by the user. For example, the preset power value may be a value like 50% or 60%. A method for determining the preset power value and a value of the preset power value are not limited in embodiments of this application.

According to the foregoing embodiments, when the smartwatch 5-101 charges the earphones 5-102 when the smartwatch 5-101 is not connected to the charging apparatus, the earphones 5-102 are only charged to the preset power value but not fully charged, so that the power of the smartwatch 5-101 and the earphones 5-102 can be properly allocated, and standby time of the smartwatch 5-101 and the earphones 5-102 is prolonged.

### 4. Low power consumption modes of the smartwatch 5-101 and the earphones 5-102

In some embodiments, the smartwatch 5-101 may have a low power consumption mode. When the smartwatch 5-101 enters the low power consumption mode, one or more functions of the smartwatch may be disabled. The one or more functions may include heart rate monitoring, blood pressure monitoring, a wrist-raise-to-wake function, a message push function, and the like. The function disabled when the smartwatch 5-101 is in the low power consumption mode is not limited in embodiments of this application. The smartwatch 5-101 may provide a low power consumption switch. In response to an operation performed on the low power consumption switch to enable the low power consumption mode, the smartwatch 5-101 may enter the low power consumption mode. In other words, the user may enable or disable, with one click, the low power consumption mode of the smartwatch 5-101 through the low power consumption switch.

In some embodiments, the smartwatch 5-101 may provide a switch corresponding to each function, for example, a heart rate monitoring switch, a blood pressure monitoring switch, a wrist-raise-to-wake switch, and a message push switch. A switch corresponding to a function may be used to enable or disable the function. In this way, the user may enable or disable a corresponding function in the smartwatch 5-101 based on a requirement of the user.

In some embodiments, the earphones 5-102 may have a low power consumption mode. When the earphones 5-102 enter the low power consumption mode, the earphones may keep a wearing detection function enabled, and disable other functions. The earphones 5-102 may detect, through the wearing detection function, whether the earphones 5-102 are in the worn state. When it is detected that the earphones 5-102 are in the worn state, the earphones 5-102 may disable the low power consumption mode. When it is detected that the earphones 5-102 are in a not-worn state, the earphones 5-102 may enable the low power consumption mode, to save power of the earphones 5-102.

In some embodiments, the smartwatch 5-101 may provide a switch corresponding to each function that can be implemented by the earphones 5-102, for example, a call switch, a recording switch, a music switch, or a voice wakeup switch. A switch corresponding to a function may be used to enable or disable the function. In this way, the user may enable or disable a corresponding function in the earphones 5-102 based on a requirement of the user.

### FIG. 84L is an example of a flowchart of a power management method for a wearable device.

As shown in FIG. 84L, the power management method may include step S1111 to step S1115. The smartwatch 5-101 is not connected to the charging apparatus. The smartwatch 5-101 may charge, with the battery of the smartwatch 5-101, the earphones placed in the compartment.

S1111: The earphone 5-102A is placed in the compartment.

After any one earphone in the earphones 5-102 is placed in a compartment, the smartwatch 5-101 may charge the earphone in the in state. Here, the earphone 5-102A is specifically used as an example for description. For a method in which the smartwatch 5-101 charges the other earphone (namely, the earphone 5-102B) in the earphones 5-102, refer to the method in which the smartwatch 5-101 charges the earphone 5-102A shown in FIG. 84L. Details are not described herein again.

S1112: The smartwatch 5-101 detects whether the power of the smartwatch 5-101 is lower than the power threshold.

When it is detected that the earphone 5-102A is placed in the compartment, the smartwatch 5-101 may detect whether the power of the smartwatch 5-101 is lower than the power threshold. The power threshold may be, for example, a value like 30% of the full power of the smartwatch 5-101 or 20% of the full power of the smartwatch 5-101. A value of the power threshold is not limited in embodiments of this application.

When the power of the smartwatch 5-101 is not lower than the power threshold, the smartwatch 5-101 may perform the following step S1113.

When the power of the smartwatch 5-101 is lower than the power threshold, the smartwatch 5-101 may perform the following step S1115.

S1113: The smartwatch 5-101 detects whether the power of the earphone 5-102A is higher than power A.

The smartwatch 5-101 may obtain power information of the earphone 5-102A, and detect whether the power of the earphone 5-102A is higher than the power A. The power A may be preset before delivery of the smartwatch 5-101. Optionally, the power A may be determined by the smartwatch 5-101 based on a use habit of the user. Optionally, the power A may be set by the user. For example, the power A may be a value like 50% of the full power of the earphone or 60% of the full power of the earphone. A method for determining the power A and a value of the power A are not limited in embodiments of this application.

When the power of the earphone 5-102A is not higher than the power A, the smartwatch 5-101 may perform the following step S1114.

When the power of the earphone 5-102A is higher than the power A, the smartwatch 5-101 may perform the following step S1115.

S1114: The smartwatch 5-101 charges the earphone 5-102A, and stops charging the earphone 5-102A when the power of the earphone 5-102A reaches the power A.

When the power of the smartwatch 5-101 is not lower than the power threshold, and the power of the earphone 5-102A is not higher than the power A, the smartwatch 5-101 may charge the earphone 5-102A. When the power of the earphone 5-102A reaches the power A, the smartwatch 5-101 may stop charging the earphone 5-102A.

In a process in which the smartwatch 5-101 charges the earphone 5-102A, if the power of the earphone 5-102A does not reach the power A, but the power of the smartwatch 5-101 is lower than the power threshold, the smartwatch 5-101 may also stop charging the earphone 5-102A.

S1115: The smartwatch 5-101 does not charge the earphone 5-102A.

It may be understood that, when the power of the smartwatch 5-101 is lower than the power threshold, the smartwatch 5-101 may enter a mode of power only for the watch. The mode of power only for the watch may also be referred to as a name like "watch only mode". When in the mode of power only for the watch, the smartwatch 5-101 may not charge the earphones 5-102 in the in case. In this way, a case in which the smartwatch 5-101 runs out of power because the smartwatch 5-101 charges the earphones 5-102 when the power of the smartwatch is low can be avoided.

It should be noted that an execution sequence of step S1112 and step S1113 is not limited in embodiments of this application. In a possible implementation, the smartwatch 5-101 may simultaneously perform step S1112 and step S1113. Optionally, the smartwatch 5-101 may alternatively first perform step S1113, and then perform step S1112.

It can be learned from the method shown in FIG. 84L that, when the smartwatch 5-101 charges the earphones 5-102 when the smartwatch 5-101 is not connected to the charging apparatus, the earphones 5-102 are only charged to the preset power value but not fully charged, so that the power of the smartwatch 5-101 and the earphones 5-102 can be properly allocated, and standby time of the smartwatch 5-101 and the earphones 5-102 is prolonged.

In a possible implementation, the smartwatch 5-101 may not perform step S1112 and step S1113. In other words, both step S1112 and step S1113 are optional. Regardless of the power of the smartwatch 5-101 and the earphone 5-102A, the smartwatch 5-101 can charge the earphone 5-102A after the earphone 5-102A is placed in the compartment.

In a possible implementation, the smartwatch 5-101 may not perform step S1112. Specifically, after the earphone 5-102A is placed in the compartment, the smartwatch 5-101 may detect whether the power of the earphone 5-102A is higher than the power A (namely, step S1113). Then, the smartwatch 5-101 may determine, according to step S1114 and step S1115, whether to charge the earphone 5-102A.

In a possible implementation, the smartwatch 5-101 may not perform step S1113. Specifically, after the earphone 5-102A is placed in the compartment, the smartwatch 5-101 may detect whether the power of the smartwatch 5-101 is lower than the power threshold (namely, step S1112). When the power of the smartwatch 5-101 is lower than the power threshold, the smartwatch 5-101 may not charge the earphone 5-102A. When the power of the smartwatch 5-101 is not lower than the power threshold, the smartwatch 5-101 may charge the earphone 5-102A until the earphone 5-102A is fully charged.

**FIG. 84M** **is an example of a flowchart of another power management method for a wearable device.**

As shown in FIG. 84M, the power management method may include step S1121 to step S1123.

S1121: The smartwatch 5-101 is connected to the charging apparatus.

S1122: The earphones 5-102 are placed in the compartment, and the charging apparatus charges the smartwatch 5-101 and the earphones 5-102 according to a preset charging time sequence.

The charging apparatus may be configured to charge the smartwatch 5-101 and/or the earphones 5-102.

When one earphone or two earphones in the earphones 5-102 are placed in a compartment (compartments), the charging apparatus may charge, according to the preset charging time sequence, the smartwatch 5-101 and the earphone that is in the earphones 5-102 and that is in the in state.

In a possible implementation, the preset charging time sequence may be simultaneously charging the smartwatch 5-101 and the earphones 5-102. That is, after the smartwatch 5-101 is connected to the charging apparatus, the charging apparatus may simultaneously charge the smartwatch 5-101 and the earphone that is in the earphones 5-102 and that is in the in state.

In another possible implementation, the preset charging time sequence may be charging the earphones 5-102 first, and then charging the smartwatch 5-101 after the power of the earphones 5-102 reaches the preset power (for example, 50% or 60%). After the power of the smartwatch 5-101 is fully charged, the earphones 5-102 are fully charged. That is, after the smartwatch 5-101 is connected to the charging apparatus, the charging apparatus may first charge the earphones 5-102 to the preset power, and then charge the smartwatch 5-101. After the charging apparatus fully charges the smartwatch 5-101, the charging apparatus may continue to charge the earphones 5-102. If the power of the earphones 5-102 in a case in which the earphones 5-102 are placed in the compartment is higher than the preset power, the charging apparatus may directly charge the smartwatch 5-101.

In another possible implementation, the preset charging time sequence may be charging the smartwatch 5-101 first, and then charging the earphones 5-102 after the smartwatch 5-101 is fully charged.

The preset charging time sequence is not limited in embodiments of this application. The preset charging time sequence may be preset before delivery of the smartwatch 5-101 and the earphones 5-102. Alternatively, the preset charging time sequence may be determined by the smartwatch 5-101 based on a use habit of the user. Alternatively, the preset charging time sequence may be set by the user.

S1123: The earphones 5-102 are removed from the compartment, and the charging apparatus charges the smartwatch 5-101.

When the two earphones in the earphones 5-102 are both in the out state, the charging apparatus may charge only the smartwatch 5-101.

In a possible implementation, when the smartwatch 5-101 is fully charged, the charging apparatus may be powered off to ensure charging safety.

In a possible implementation, in a process in which the charging apparatus charges the smartwatch 5-101, if the earphones 5-102 are placed in the compartment, the charging apparatus may charge the smartwatch 5-101 and the earphones 5-102 according to the preset charging time sequence in step S1122.

**FIG. 85A to FIG. 85J show an example of a scenario of managing a wearable device through the electronic device 5-200.**

In some embodiments, the smartwatch 5-101 is paired with the electronic device 5-200, and a communication connection is established between the smartwatch 5-101 and the electronic device 5-200. The electronic device 5-200 may manage the smartwatch 5-101, and manage the earphones 5-102 through the smartwatch 5-101. When the electronic device 5-200 establishes a communication connection to the earphones 5-102, the electronic device 5-200 may alternatively directly manage the earphones 5-102.

As shown in FIG. 85A, the electronic device 5-200 may display a user interface 5-1210. For the user interface 5-1210, refer to the user interface 5-1130 shown in FIG. 84C. The user interface 5-1210 may include an earphone management control 5-1211. The earphone management control 5-1211 may be used to open a user interface for managing the earphones 5-102. The user interface 5-1210 may further include more controls for managing the smartwatch 5-101. This is not limited in embodiments of this application.

In response to an operation performed on the earphone management control 5-1211, the electronic device 5-200 may display a user interface 5-1220 shown in FIG. 85B.

As shown in FIG. 85B, the user interface 5-1220 may include a wearing detection option 5-1221, a wearing detection introduction 5-1222, a healthy earphone use option 5-1223, a healthy earphone use introduction 5-1224, a game low-latency option 5-1225, a game low-latency introduction 5-1226, a left and right ear recognition option 5-1227, a left and right ear recognition introduction 5-1228, and a help option 5-1229.

The wearing detection option 5-1221 may include a switch used to enable or disable a wearing detection function. The wearing detection function may be a function of detecting whether the earphones 5-102 are in a worn state. For example, in response to an operation of enabling the wearing detection function through the wearing detection option 5-1221, the electronic device 5-200 may send, to the earphones 5-102 through the smartwatch 5-101 or directly, an instruction for enabling the wearing detection function. The earphones 5-102 may enable the wearing detection function according to the instruction for enabling the wearing detection function.

The wearing detection introduction 5-1222 may be used to describe a function of the wearing detection function. Content of the wearing detection introduction 5-1222 is not limited in embodiments of this application.

The healthy earphone use option 5-1223 may include a switch used to enable or disable a healthy earphone use prompt function. The healthy earphone use prompt function may be a function of prompting the user with healthy use of the earphones after the earphones 5-102 are worn for more than preset duration. For example, in response to an operation of enabling the healthy earphone use prompt function through the healthy earphone use option 5-1223, the electronic device 5-200 may send, to the earphones 5-102 through the smartwatch 5-101 or directly, an instruction for enabling the healthy earphone use prompt function. The earphones 5-102 may enable the healthy earphone use prompt function according to the instruction for enabling the healthy earphone use prompt function. The earphones 5-102 may detect duration in which the earphones 5-102 are in the worn state. When the duration in which the earphones 5-102 are in the worn state exceeds the preset duration, the earphones 5-102 may verbally prompt, with a sound, the user to take off the earphones, to protect hearing health.

The healthy earphone use introduction 5-1224 may be used to describe a function of the healthy earphone use prompt function. Content of the healthy earphone use introduction 5-1224 is not limited in embodiments of this application.

The game low-latency option 5-1225 may include a switch used to enable or disable a game low-latency function. The game low-latency function may be a function of reducing a latency of playing a game sound with a sound by the earphones 5-102.

The game low-latency introduction 5-1226 may be used to describe a function of the game low-latency function.

The left and right ear recognition option 5-1227 may include a switch used to enable or disable a left and right ear recognition function. The left and right ear recognition function may be a function in which the earphones 5-102 recognize a wearing location and automatically switches between a left audio channel and a right audio channel, so that the left audio channel and the right audio channel correspond to a left ear and a right ear.

The left and right ear recognition introduction 5-1228 may be used to describe a function of the left and right ear recognition function.

The help option 5-1229 may be used to view more instructions for using the earphones 5-102.

**The following describes the left and right ear recognition function of the earphones 5-102.**

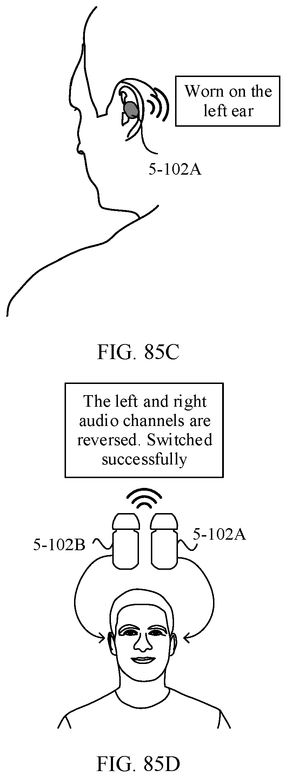

As shown in FIG. 85C, when the left and right ear recognition function is enabled, after the earphone 5-102A is worn on the left ear, the earphone 5-102Amay recognize that the earphone 5-102Ais worn on the left ear. The earphone 5-102A may be used as a left earphone to play audio of the left audio channel with a sound. After the user wears the earphone 5-102A on the left ear, the earphone 5-102A may verbally broadcast "Worn on the left ear" with a sound, to give the user a prompt that the earphone 5-102A is currently worn on the left ear. Similarly, the earphone 5-102B may also perform left and right ear recognition in a worn state, to determine whether to play audio of the left audio channel or the right audio channel.

As shown in FIG. 85D, in some embodiments, when the earphone 5-102A is worn on the left ear and the earphone 5-102B is worn on the right ear, if the user exchanges locations of the earphone 5-102A and the earphone 5-102B to wear the earphone 5-102A on the right earphone and the earphone 5-102B on the left earphone, the earphone 5-102A and the earphone 5-102B can re-recognize wearing locations. When it is recognized that the earphone 5-102A is adjusted from being worn on the left ear to being worn on the right ear, and the earphone 5-102B is adjusted from being worn on the right ear to being worn on the left ear, the earphone 5-102A and the earphone 5-102B may verbally broadcast "The left and right audio channels are reversed. Switched successfully" with a sound. After the wearing location exchange is recognized, the earphone 5-102A may be adjusted from playing the audio of the left audio channel with a sound as a left earphone to playing the audio of the right audio channel with a sound as a right earphone, and the earphone 5-102B may be adjusted from playing the audio of the right audio channel with a sound as a right earphone to playing the audio of the left audio channel with a sound as a left earphone.

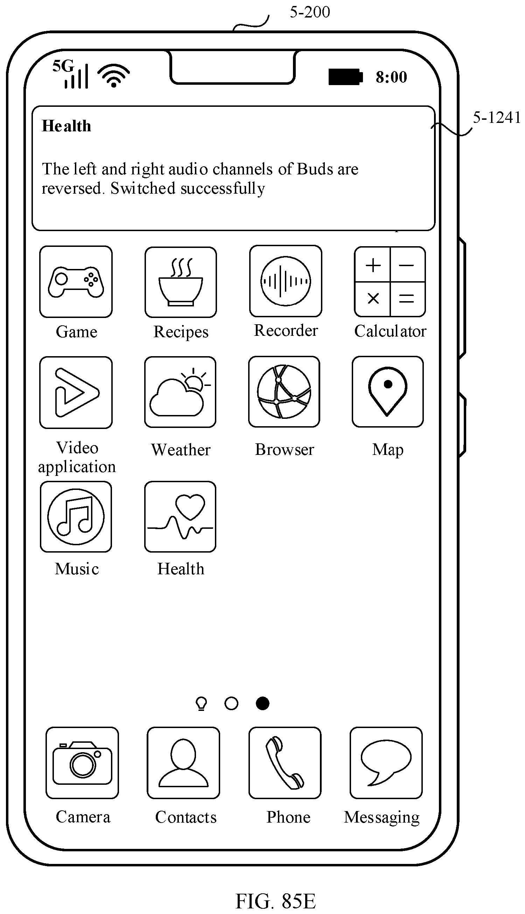

Optionally, when the earphone 5-102A and the earphone 5-102B switch the left audio channel and the right audio channel, the earphone 5-102A and/or the earphone 5-102B may send, through the smartwatch 5-101 or directly, an audio channel switching message to the electronic device 5-200. Based on the foregoing audio channel switching message, the electronic device 5-200 may display a message prompt 5-1241 shown in FIG. 85E. The message prompt 5-1421 may be used to give a prompt that the left audio channel and the right audio channel of the earphone 5-102A and the earphone 5-102B is already switched. Content of the message prompt 5-1241 is not limited in embodiments of this application.

Based on the foregoing left and right ear recognition function, the earphones 5-102 may always ensure that an earphone worn on the left ear plays the audio of the left audio channel with a sound, and an earphone worn on the right ear plays the audio of the right audio channel with a sound. The user may randomly wear the two earphones in the earphones 5-102 on the left ear and the right ear without distinguishing between the left earphone and the right earphone. According to the foregoing embodiments, user experience of using the earphones 5-102 can be improved.

**The following describes a wide-area touch-control function of the earphones 5-102.**

The wide-area touch-control function may be a function in which the earphones 5-102 detect a preset operation in a preset area and executes an instruction corresponding to the preset operation when the earphones 5-102 are in the worn state. The preset area may be an area distributed on an ear of the user and around the ear. The preset operation may include but is not limited to a slightly double-tap operation and a slightly triple-tap operation. The slightly double-tap operation may be an operation of quickly tapping twice consecutively. The slightly triple-tap operation may be an operation of quickly tapping three times consecutively. The instruction corresponding to the preset operation may include but is not limited to: a play instruction, a playing pause instruction, an answering instruction, a declining/hang-up instruction, an instruction for switching to a previous track, an instruction for switching to a next track, an instruction for waking up a voice assistant, a volume adjustment instruction, a noise control instruction, a quick play instruction, and a song identification instruction.

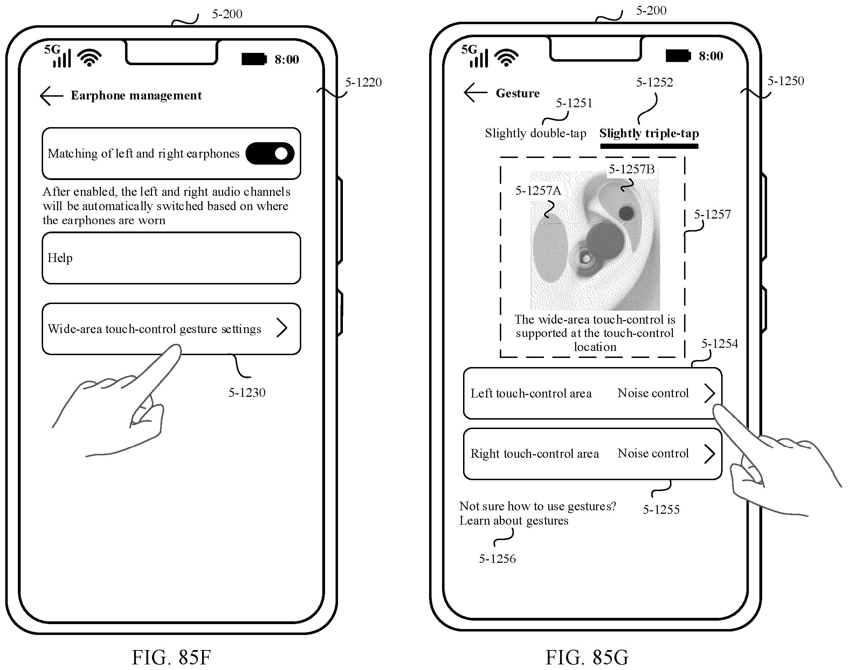

As shown in FIG. 85F, the electronic device 5-200 may display a user interface 5-1220. The user interface 5-1220 shown in FIG. 85F may be displayed by the electronic device 5-200 in response to a slide-up operation performed on the user interface shown in FIG. 85B. The user interface 5-1220 may include a wide-area touch-control option 5-1230. In response to an operation performed on the wide-area touch-control option 5-1230, the electronic device 5-200 may display a user interface 5-1250 shown in FIG. 85G.

As shown in FIG. 85G, the user interface 1250 may include a slightly double-tap option 5-1251, a slightly triple-tap option 5-1252, touch-control area information 5-1257, a left touch-control area option 5-1254, a right touch-control area option 5-1255, and a gesture learning control 5-1256.

The slightly double-tap option 5-1251 may be used to trigger the electronic device 5-200 to display a user interface used to set an instruction corresponding to the operation "Slightly double-tap".

The slightly triple-tap option 5-1252 may be used to trigger the electronic device 5-200 to display a user interface used to set an instruction corresponding to the operation "Slightly triple-tap".

The slightly double-tap option 5-1251 and the slightly triple-tap option 5-1252 may help the user switch between setting interfaces of different operations. When the slightly triple-tap option 5-1252 is in a selected state, the electronic device 5-200 may display the user interface 5-1250 shown in FIG. 85G. In other words, the user interface 5-1250 is a user interface used to set an instruction corresponding to the operation "Slightly triple-tap". For the user interface used to set the instruction corresponding to the operation "Slightly double-tap", refer to the user interface 5-1250. Details are not described in this application again one by one.

The touch-control area information 5-1257 may indicate an area in which the wide-area touch-control function can be implemented, namely, an area in which the foregoing preset operation (for example, the slightly double-tap operation or the slightly triple-tap operation) is performed.

For example, the touch-control area information 5-1257 includes an illustration of an ear, and a touch-control area 5-1257A and a touch-control area 5-1257B are marked on the illustration of the ear. The touch-control area 5-1257A may be an area that is of a cheek and that is close to a tragus. The touch-control area 5-1257A may also be referred to as a left touch-control area. The touch-control area 5-1257B may be an area where a triangular fossa is located on an auricle. The touch-control area 5-1257B may also be referred to as a right touch-control area. The user may perform the preset operation on the touch-control area 5-1257A and the touch-control area 5-1257B, to trigger the earphones 5-102 to execute the instruction corresponding to the preset operation.

The touch-control area 5-1257A and the touch-control area 5-1257B are merely examples for description of this application, and should not constitute a limitation on this application. The foregoing touch-control function may further be supported on more touch-control areas.

The left touch-control area option 5-1254 may be used to set a corresponding instruction when the operation "Slightly triple-tap" is performed on the touch-control area 5-1257A. For example, "Noise control" may be displayed in the left touch-control area option 5-1254, which may indicate that the corresponding instruction when the operation "Slightly triple-tap" is performed on the touch-control area 5-1257A is a noise control instruction. The noise control instruction may instruct the earphones 5-102 to switch a noise control mode.

The right touch-control area option 5-1255 may be used to set a corresponding instruction when the operation "Slightly triple-tap" is performed on the touch-control area 5-1257B. For example, "Noise control" may be displayed in the right touch-control area option 5-1255, which may indicate that the corresponding instruction when the operation "Slightly triple-tap" is performed on the touch-control area 5-1257B is a noise control instruction.

The gesture learning control 5-1256 may be used to view more usage descriptions of gestures supported by the wide-area touch-control function.

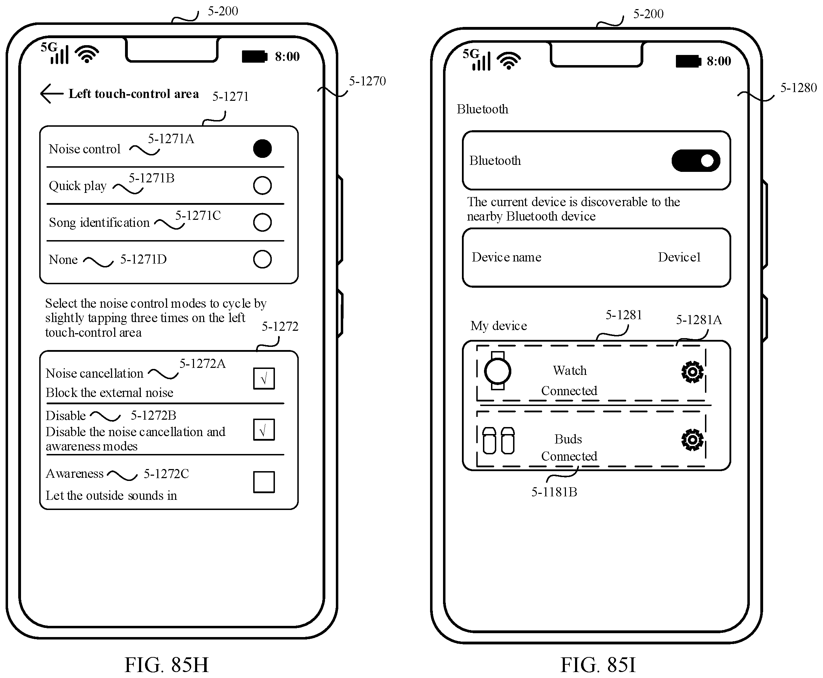

In response to an operation performed on the left touch-control area option 5-1254 shown in FIG. 85G, the electronic device 5-200 may display a user interface 5-1270 shown in FIG. 85H.

As shown in FIG. 85H, the user interface 5-1260 may include an instruction selection box 5-1271 and a noise control mode option box 5-1272.

The instruction selection box 5-1271 may include a plurality of instruction options. For example, a noise control instruction option 5-1271A, a quick play instruction option 5-1271B, a song identification instruction option 5-1271C, and a no instruction option 5-1271D. The plurality of instruction options may help the user select an instruction indicated by an instruction option from the plurality of instruction options as the corresponding instruction when the operation "Slightly triple-tap" is performed on the touch-control area 5-1257A. The no instruction option 5-1271D may indicate that no instruction is set.

When the noise control instruction option 5-1271A is in the selected state, the electronic device 5-200 may display the noise control mode option box 5-1272. When the noise control instruction option 5-1271A is in an unselected state, the user interface 5-1270 may not include the noise control mode option box 5-1272.

The noise control mode option box 5-1272 may include an option corresponding to each noise control mode. For example, a noise cancellation option 5-1272A corresponding to a noise cancellation mode, a disable option 5-1272B corresponding to a noise cancellation and awareness disabled mode, and an awareness option 5-1272C corresponding to an awareness mode. The options corresponding to the noise control modes may help the user select one or more options from the options to implement noise control mode switching.

For example, when the noise cancellation option 5-1272A and the disable option 5-1272B are in the selected state, and the awareness option 5-1272C is in the unselected state, the earphones 5-102 may switch the noise control mode between the noise cancellation mode and the noise cancellation and awareness disabled mode based on a slightly triple-tap operation detected on the touch-control area 5-1257A. For another example, when the noise cancellation option 5-1272A, the disable option 5-1272B, and the awareness option 5-1272C are all in the selected state, the earphones 5-102 may switch the noise control mode among the noise cancellation mode, the awareness mode, and the noise cancellation and awareness disabled mode based on a slightly triple-tap operation detected on the touch-control area 5-1257A.

In some embodiments, in different use scenarios, same operations performed on a same touch-control area may trigger different instructions to be executed by the earphones 5-102. For example, in a music playing scenario, a slightly double-tap operation performed on the touch-control area 5-1257A may be used to trigger the earphones 5-102 to play music or pause playing of the music. In a scenario of receiving an incoming call, a slightly double-tap operation performed on the touch-control area 5-1257A may be used to trigger the earphones 5-102 to answer the incoming call. In a scenario in which a call is in progress, a slightly double-tap operation performed on the touch-control area 5-1257A may be used to trigger the earphones 5-102 to hang up the call.

In some embodiments, same operations performed on different touch-control areas may trigger different instructions to be executed by the earphones 5-102. For example, a slightly double-tap operation performed on the touch-control area 5-1257A may be used to trigger the earphones 5-102 to play music or pause playing of the music. A slightly double-tap operation performed on the touch-control area 5-1257B may be used to trigger the earphones 5-102 to switch to a previous track of music. For another example, a slightly three-tap operation performed on the touch-control area 5-1257A may be used to trigger the earphones 5-102 to switch the noise control mode. A slightly three-tap operation performed on the touch-control area 5-1257B may be used to trigger the earphones 5-102 to implement a song identification function.

In some embodiments, same operations performed on same touch-control areas of the left ear and the right ear may trigger the earphones 5-102 to execute a same instruction. For example, both a slightly double-tap operation performed on the touch-control area 5-1257A of the left ear and a slightly double-tap operation performed on the touch-control area 5-1257A of the right ear may be used to trigger the earphones 5-102 to play music or pause playing of the music. Alternatively, same operations performed on same touch-control areas of the left ear and the right ear may trigger different instructions to be executed by the earphones 5-102.

In some embodiments, the electronic device 5-200 may further provide a switch used to enable or disable a wide-area touch-control function, so that the user can enable or disable the wide-area touch-control function of the earphones 5-102.

It can be learned that the user may set, on the electronic device 5-200, functions that can be implemented by triggering the earphones 5-102 through various operations performed on the touch-control area. In this way, when wearing the earphones 5-102, in addition to performing an operation on the earphones 5-102 (for example, tapping a preset area on the earphones 5-102, or sliding on a preset area on the earphones 5-102) to trigger the earphones 5-102 to implement a function corresponding to the operation, the user may perform an operation on a preset area on the human body (for example, the touch-control area 5-1257A and the touch-control area 5-1257B shown in FIG. 85G), to trigger the earphones 5-102 to implement a function corresponding to the operation. The wide-area touch-control function can improve user experience of using the earphones 5-102.

As shown in FIG. 85I, in some embodiments, the electronic device 5-200 may further display a user interface 5-1280. The user interface 5-1280 may be a Bluetooth setting interface of a Settings application in the electronic device 5-200. Both a manner of a communication connection between the electronic device 5-200 and the smartwatch 5-101 and a manner of a communication connection between the electronic device 5-200 and the earphones 5-102 may be a Bluetooth communication connection. The user interface 5-1280 may include a device option box 5-1281. The device option box 5-1281 may include device options corresponding to one or more devices. The one or more devices may be devices that are currently connected to or have been connected to the electronic device 5-200. For example, the device option box 5-1281 may include a device option 5-1281A and a device option 5-1281B.

The device option 5-1281A may indicate a status of the connection between the smartwatch 5-101 and the electronic device 5-200. For example, the device option 5-1281A may include a text prompt "Connected". This may indicate that a communication connection is currently established between the smartwatch 5-101 and the electronic device 5-200. In response to an operation performed on the device option 5-1281A, the electronic device 5-200 may open a user interface used to manage the smartwatch 5-101, so that the user can manage the smartwatch 5-101 on the electronic device 5-200, for example, disconnect the communication connection between the smartwatch 5-101 and the electronic device 5-200, and enable or disable a function of the smartwatch 5-101.

The device option 5-1281B may indicate a status of the connection between the earphones 5-102 and the electronic device 5-200. For example, the device option 5-1281B may include a text prompt "Connected". This may indicate that a communication connection is currently established between the earphones 5-102 and the electronic device 5-200. In response to an operation performed on the device option 5-1281B, the electronic device 5-200 may open a user interface used to manage the earphones 5-102, so that the user can manage the earphones 5-102 on the electronic device 5-200, for example, disconnect the communication connection between the earphones 5-102 and the electronic device 5-200, adjust the noise control mode of the earphones 5-102, and enable or disable a function of the earphones 5-102.

It can be learned from the scenario shown in FIG. 85A to FIG. 85I that, when the electronic device 5-200 establishes communication connections to the smartwatch 5-101 and the earphones 5-102, the user may view related setting information of the smartwatch 5-101 and the earphones 5-102 through the electronic device 5-200, and manage the smartwatch 5-101 and the earphones 5-102. The electronic device 5-200 may provide an entry (for example, a Health application) for centrally managing the smartwatch 5-101 and the earphones 5-102, so that the user can quickly find operation controls for performing various types of management on the smartwatch 5-101 and the earphones 5-102. According to the foregoing embodiments, user experience of managing the smartwatch 5-101 and the earphones 5-102 can be improved. In this way, the user can use the smartwatch 5-101 and the earphones 5-102 more conveniently.

**The following describes a method for implementing a wide-area touch-control function provided in an embodiment of this application.**

In some embodiments, two earphones in the earphones 5-102 each may store a trained gesture recognition model. The gesture recognition model may be used to recognize a wide-area touch-control operation. The wide-area touch-control operation may include various types of operations performed on touch-control areas. For example, the wide-area touch-control operation may include a double-tap operation (namely, the slightly double-tap operation) performed on the touch-control area 5-1257A, a triple-tap operation (namely, the slightly triple-tap operation) performed on the touch-control area 5-1257A, a double-tap operation performed on the touch-control area 5-1257B, and a triple-tap operation performed on the touch-control area 5-1257B. In this way, the earphones 5-102 may execute, based on the wide-area touch-control operation recognized by the gesture recognition model, an instruction corresponding to the wide-area touch-control operation, to implement a corresponding function.

**An implementation method for training the gesture recognition model is first described herein.**

FIG. 86 is an example of a flowchart of a gesture recognition model training method.

As shown in FIG. 86, the method may include step S1311 and step S1312. Step S1311 and step S1312 may be performed by a model training device. The model training device may be a cloud server. A type of the model training device is not limited embodiments of this application.

S1311: Establish a database for training the gesture recognition model, where the database includes acceleration data or a sound signal collected by a sensor when a wide-area touch-control operation is performed.

When performing the wide-area touch-control operation, a user needs to tap an ear or an area around the ear. In this case, the wide-area touch-control operation may cause vibration of an auricle, and may make a tapping sound. If a bone conduction sensor or an inertial measurement unit (inertial measurement unit, IMU) is disposed in the earphones, the bone conduction sensor or the IMU may collect the acceleration data. The acceleration data may reflect vibration of the auricle caused by the wide-area touch-control operation. If a sound pickup sensor (for example, a microphone) is disposed in the earphones, the sound pickup sensor may collect a sound signal. The sound signal may reflect a sound made by the wide-area touch-control operation. Therefore, the acceleration data or the sound signal may be used to train the gesture recognition model.

In some embodiments, the database may further include acceleration data or a sound signal collected by the sensor when a non-wide-area touch-control operation is performed. The non-wide-area touch-control operation may include an operation that easily causes a wide-area touch-control operation recognition error. For example, the non-wide-area touch-control operation may include a single-tap operation performed on a touch-control area. The gesture recognition model is trained based on the acceleration data or the sound signal collected by the sensor when the non-wide-area touch-control operation is performed, so that recognition accuracy of the gesture recognition model can be improved.

The model training device may receive and store the database.

S1312: Preprocess data in the database according to a decision tree algorithm.

The model training device may preprocess the data in the database according to the decision tree algorithm, to obtain a plurality of groups of training samples. The decision tree algorithm may be used to recognize a signal waveform generated by a double-tap operation (for example, a signal waveform of acceleration data or a waveform of a sound signal) and a signal waveform generated by a triple-tap operation. In the foregoing preprocessing process, a tap force and a time interval between two taps may be intercepted, to reduce decision items used in the decision tree algorithm, to improve decision accuracy of the decision tree algorithm.

In some embodiments, the plurality of groups of training samples obtained by the model training device through preprocessing may include: a training sample corresponding to a double-tap operation performed on the touch-control area 5-1257A, a training sample corresponding to a double-tap operation performed on the touch-control area 5-1257B, a training sample corresponding to a triple-tap operation performed on the touch-control area 5-1257A, a training sample corresponding to a triple-tap operation performed on the touch-control area 5-1257B, and a training sample corresponding to a non-double-tap and non-triple-tap operation.

A group of training samples corresponding to the double-tap operation performed on the touch-control area 5-1257A may include acceleration data or a sound signal collected by the sensor when the double-tap operation is performed once on the touch-control area 5-1257A.

A group of training samples corresponding to the double-tap operation performed on the touch-control area 5-1257B may include acceleration data or a sound signal collected by the sensor when the double-tap operation is performed once on the touch-control area 5-1257B.

A group of training samples corresponding to the triple-tap operation performed on the touch-control area 5-1257A may include acceleration data or a sound signal collected by the sensor when the triple-tap operation is performed once on the touch-control area 5-1257A.

A group of training samples corresponding to the triple-tap operation performed on the touch-control area 5-1257B may include acceleration data or a sound signal collected by the sensor when the triple-tap operation is performed once on the touch-control area 5-1257B.

A group of training samples corresponding to the non-double-tap and non-triple-tap operation may include acceleration data or a sound signal collected by the sensor when the non-double-tap and non-triple-tap operation is performed once.

S1313: Train the gesture recognition model by using preprocessed data, where the gesture recognition model is a tri-classification model, and can recognize a double-tap operation, a triple-tap operation, and a non-double-tap and non-triple-tap operation that are performed on different areas.

The model training device may train the gesture recognition model by using the plurality of groups of training samples obtained through preprocessing. The gesture recognition model may be a neural network model, for example, a convolutional neural network model. A type of the gesture recognition model is not limited in embodiments of this application.

Specifically, the gesture recognition model may be a tri-classification model, and may recognize three types of operations: a double-tap operation, a triple-tap operation, and a non-double-tap and non-triple-tap operation. The foregoing process of training the gesture recognition model by using the plurality of groups of training samples is a process of enabling the gesture recognition model to recognize a wide-area touch-control operation and reducing a probability of incorrectly recognizing a single-tap operation, an operation generated when a posture of the earphones is adjusted, and an operation generated when the earphones are worn or removed and a probability of confusing a double-tap operation and a triple-tap operation. A specific process of training the gesture recognition model by using the training samples is not limited in embodiments of this application.

The trained gesture recognition model may receive input data. The input data may be the acceleration data or the sound signal. The trained gesture recognition model may output a recognition result based on the received input data. The recognition result may indicate a wide-area touch-control operation corresponding to the input data.

FIG. 86 is merely an example of a gesture recognition model training method according to this application, and should not constitute a limitation on this application. The model training device may alternatively obtain the gesture recognition model through training by using another method.

In some embodiments, the foregoing trained gesture recognition model may be preset for the two earphones (namely, the earphone 5-102A and the earphone 5-102B) in the earphones 5-102 before delivery. The earphones 5-102 may recognize a wide-area touch-control operation based on the gesture recognition model, to provide a wide-area touch-control function.

**Here, an implementation method for providing the wide-area touch-control function by the earphones 5-102 is described.**

FIG. 87 is an example of a flowchart of a method for providing the wide-area touch-control function by the earphones 5-102.

As shown in FIG. 87, the method may include step S1411 to step S1414. The earphone 5-102A and the earphone 5-102B may separately perform step S1411 to step S1414. Here, the earphones 5-102 are used as an execution body for description, to indicate that any earphone in the earphones 5-102 may be used as an execution body of the method shown in FIG. 87.

S1411: A sensor of the earphones 5-102 collects acceleration data or a sound signal.

A bone conduction sensor, an IMU sensor, and/or a sound pickup sensor may be disposed in the earphones 5-102. The earphones 5-102 may collect the acceleration data through the bone conduction sensor or the IMU sensor. The earphones 5-102 may collect the sound signal through the sound pickup sensor.

S1412: The earphones 5-102 perform gesture recognition based on the acceleration data or the sound signal through the trained gesture recognition model, and determine a recognized wide-area touch-control operation.

When the wide-area touch-control function is enabled, the earphones 5-102 may continuously collect acceleration data through the bone conduction sensor or the IMU sensor, or continuously collect a sound signal through the sound pickup sensor. Then, the earphones 5-102 may recognize, based on the trained gesture recognition model, the continuously collected acceleration data or the continuously collected sound signal, to determine whether a wide-area touch-control operation exists.

S1413: The earphones 5-102 determine a wearing event based on the recognized wide-area touch-control operation and a current service, and send the wearing event to the smartwatch 5-101 or another electronic device connected to the earphones 5-102.

The service performed by the earphones 5-102 may include audio-related services such as a call service and a music service. It can be learned from the foregoing embodiments that a same wide-area touch-control operation may indicate different wearing events in different services, and may be used to trigger the earphones 5-102 to execute different instructions.

For example, when the earphones 5-102 perform the music service, a wearing event indicated by a double-tap operation performed on the touch-control area 5-1257A may be an event of playing/pausing music, and may be used to trigger the earphones 5-102 to play music or pause playing of the music. When the earphones 5-102 perform the call service, and the call service is receiving an incoming call, a wearing event indicated by a double-tap operation performed on the touch-control area 5-1257A may be an event of answering the incoming call, and may be used to trigger the earphones 5-102 to answer the incoming call. When the earphones 5-102 perform the call service, and the call service is an ongoing call, a wearing event indicated by a double-tap operation performed on the touch-control area 5-1257A may be an event of hanging up the call, and may be used to trigger the earphones 5-102 to hang up the call.

The wearing event may include but is not limited to: an event of playing/pausing music, an event of switching to a previous track of music, an event of switching to a next track of music, an event of answering an incoming call, an event of hanging up a call, an event of waking up a voice assistant, an event of switching a noise control mode, and the like.

The another electronic device connected to the earphones 5-102 may be, for example, the electronic device 5-200 or the electronic device 5-300.

S1414: The smartwatch 5-101 or the another electronic device connected to the earphones 5-102 processes the wearing event sent by the earphones 5-102.

In a possible implementation, the earphones 5-102 may send the wearing event to the smartwatch 5-101.

If the service performed by the earphones 5-102 is a service belonging to the smartwatch 5-101, the smartwatch 5-101 may process the wearing event. For example, when playing music on the smartwatch 5-101, the earphones 5-102 detect a wide-area touch-control operation, and the wide-area touch-control operation is a double-tap operation performed on the touch-control area 5-1267A. The earphones 5-102 may determine, based on the wide-area touch-control operation and the current service, that the wearing event is the event of playing/pausing music. The smartwatch 5-101 may send, to the earphones 5-102, an instruction for playing music or pausing playing of the music, to instruct the earphones 5-102 to play the music or pause playing of the music.

If the service performed by the earphones 5-102 is not a service belonging to the smartwatch 5-101, for example, is a service belonging to the electronic device 5-200, the smartwatch 5-101 may send the wearing event to the electronic device 5-200. Then, the electronic device 5-200 may process the wearing event. For example, when playing music on the electronic device 5-200, the earphones 5-102 determine an event of playing/pausing music. The earphones 5-102 may send the event of playing/pausing the music to the smartwatch 5-101. The smartwatch 5-101 may send the event of playing/pausing the music to the electronic device 5-200. The electronic device 5-200 may indicate the earphones 5-102 to play the music or pause playing of the music.

In a possible implementation, the earphones 5-102 may determine a device to which the current service belongs, and send the wearing event to the device to which the current service belongs. Then, the device to which the current service belongs may process the wearing event.

For example, when playing music on the electronic device 5-300, the earphones 5-102 determine an event of playing/pausing the music. The earphones 5-102 may determine that a device to which the current service belongs is the electronic device 5-300. The earphones 5-102 may send the event of playing/pausing the music to the electronic device 5-300. The electronic device 5-300 may indicate the earphones 5-102 to play the music or pause playing of the music.

### Hardware architecture of a wearable device

Electronic composition of the wearable device 4-100 mainly focuses on the host 4-101. As shown in FIG. 88, the host 4-101 may include a processor 4-2710, a magnet 4-2711, a magnet 4-2712, an interface 4-2713, and an interface 4-2714. To better describe the host 4-101, FIG. 88 further shows an audio apparatus that matches the host 4-101. As shown in FIG. 88, the audio apparatus 4-102A may include a controller 4-2720, a magnetic field sensor 4-2721, and an interface 4-2722.

When the audio apparatus 4-102A is placed in an audio apparatus slot of the host 4-101, the interface 4-2713 in the host 4-101 may be connected to the interface 4-2722 in the audio apparatus 4-102A. The interface 4-2713 may be an electrical connector in the host 4-101, for example, a communication electrode or a charging electrode in an audio apparatus compartment. A structure of the interface 4-2713 may cooperate with or be in contact with the interface 4-2722 in the audio apparatus, to implement an electrical connection (or a physical connection) between the host 4-101 and the audio apparatus 4-102. The interface 4-2722 may be an audio apparatus electrical connector 4-2661, for example, a communication electrode or a charging electrode at an end of an ear handle of the audio apparatus. The interface 4-2722 may be a pogo pin, a spring pin, a spring plate, a conductive block, a conductive patch, a conductive sheet, a pin, a plug, a contact pad, a jack, a socket, or the like in the audio apparatus electrical connector 4-2661. A method for setting the interface 4-2713 and the interface 4-2722 is not limited in embodiments of this application.

The processor 4-2710 and the controller 4-2720 of the audio apparatus may transmit information through the interface 4-2713 and the interface 4-2722, or charge a battery in the audio apparatus 4-102A.

The magnet 4-2711 in the host 4-101 may be distributed on a watch cover of the host 4-101 and/or at a location close to the audio apparatus slot. A location of the magnet 4-2711 may correspond to a location at which the audio apparatus 4-102A is placed in the audio apparatus slot, so that when the audio apparatus 4-102A is in an in state or an out state, a magnitude of a magnetic induction intensity (for example, a magnetic flux) detected by the magnetic field sensor 4-2721 of the audio apparatus shown in FIG. 89 is mainly generated by the magnet 4-2711. Similarly, the magnet 4-2712 in the host 4-101 may alternatively be distributed on the watch cover of the host 4-101 and/or at a location close to the audio apparatus slot. A location of the magnet 4-2712 may correspond to a location at which the audio apparatus 4-102B is placed in the audio apparatus slot, so that when the audio apparatus 4-102B is in an in state or an out state, a magnitude of a magnetic induction intensity (for example, a magnetic flux) detected by the magnetic field sensor 4-2722 of the audio apparatus is mainly generated by the magnet 4-2712.

The audio apparatus 4-102A may implement in/out state detection of the audio apparatus 4-102A through the magnetic field sensor 4-2721. The audio apparatus 4-102B may implement in/out state detection of the audio apparatus 4-102B through the magnetic field sensor 4-2731.

In some embodiments, a magnetic field sensor may be disposed in the host 4-101, and magnets may be disposed in the audio apparatus 4-102A and the audio apparatus 4-102B. The host 4-101 may detect, through the magnetic field sensor, whether the audio apparatus 4-102A and the audio apparatus 4-102B are in the in state or the out state.

For a method for placing the audio apparatus 4-102B in the host 4-101 to form an electrical connection to the host 4-101, refer to the foregoing method for electrically connecting the audio apparatus 4-102A to the host 4-101. Details are not described herein again.

It is not shown that the host 4-101 may further have a wireless communication module. The wireless communication module may be configured to support data exchange of wireless communication including Bluetooth, a GNSS, a WLAN, FM, NFC, IR, and the like between the host 4-101 and another electronic device (for example, an audio apparatus). In addition, the wireless communication module may be further connected to an antenna, and may receive an electromagnetic wave through the antenna, perform frequency modulation and filtering on the electromagnetic wave signal, and sends a processed signal to the processor 4-2710. The wireless communication module may further receive a to-be-sent signal from the processor 4-2710, perform frequency modulation and amplification on the signal, and convert, through the antenna, the signal into an electromagnetic wave for radiation. The wireless communication module may further cooperate with a wireless charging coil to wirelessly charge the wearable device 4-100.

It is not shown that the host 4-101 may further have a power module. The power module may be configured to supply power to the host 4-101, supply power to modules in the host 4-101, support the host 4-101 in receiving a charging input, and the like.

It is not shown that the host 4-101 may further have a wireless charging coil, to obtain power supply from an external power supply (for example, a wireless charging cradle) in a wireless charging manner.

It is not shown that a first part (which may be referred to as a cover body) of the host 4-101 may further have a magnetic field sensor, and a second part (which may be referred to as a main body) of the host 4-101 may be mounted with a status detection magnet. The magnetic field sensor may be configured to detect a magnetic flux of the status detection magnet in the second part. A value of the magnetic flux may be used by the processor 4-2710 to determine whether the cover of the host 4-101 is opened. Locations of the magnetic field sensor and the status detection magnet may be interchanged. To be specific, the magnetic field sensor may be in the main body, and the status detection magnet may be in the cover body.

FIG. 88 shows only an example of the host 4-101 of the wearable device 4-100 according to embodiments of this application. In actual application, the host 4-101 may include more or fewer components. For implementation details of the host 4-101, refer to the content of the foregoing sections. Details are not described herein again.

### Hardware architecture of an audio apparatus

As shown in FIG. 89, the audio apparatus 4-102A may include a controller 4-2610, a memory 4-2620, a wireless communication module 4-2630, an audio input/output circuit 4-2640, a power module 4-2650, an interface 4-2660, a sensor module 4-2670, and the like. The power module 4-2650 may include a power management module 4-2651 and a battery 4-2652. The interface 4-2660 may include an audio apparatus electrical connector 4-2661. The audio apparatus 4-102A is the audio apparatus 4-102A shown in FIG. 88.

The memory 4-2620 may be configured to store program code, for example, program code used to charge the audio apparatus 4-102A, perform wireless pairing and connection between the audio apparatus 4-102A and another electronic device, or perform wireless communication between the audio apparatus 4-102A and an electronic device. The memory 4-2620 may further store a Bluetooth address used to uniquely identify a wireless audio apparatus. In addition, the memory 4-2620 may further store connection data of an electronic device that is previously successfully paired with the audio apparatus 4-102A. For example, the connection data may be a Bluetooth address of the electronic device that is previously successfully paired with the audio apparatus 4-102A. Based on the connection data, the audio apparatus 4-102A can be automatically paired with the electronic device, and does not need to configure a connection to the electronic device, for example, perform validity verification. The Bluetooth address may be a media access control (media access control, MAC) address.

The controller 4-2610 may be configured to execute the program code stored in the memory 4-2620, and invoke a related module to implement a function of the audio apparatus 4-102A in embodiments of this application, for example, to implement a charging function, a wireless communication function, an audio data playing function, a wearing detection function, and an in/out state detection function of the audio apparatus 4-102A. The controller 4-2610 may be specifically an integrated control chip, or may include a circuit including various active components and/or passive components, and the circuit is configured to perform a function of the controller 4-2610 that is described in embodiments of this application. The controller of the audio apparatus 4-102A may be a micro controller unit (micro controller unit, MCU).

In some embodiments, the controller 4-2610 may include one or more interfaces. The controller 4-2610 may be connected to another component of the audio apparatus 4-102A through the one or more interfaces.

The wireless communication module 4-2630 may be configured to support data exchange of wireless communication including Bluetooth, a GNSS, a WLAN, FM, NFC, IR, and the like between the audio apparatus 4-102A and another electronic device. In some embodiments, the wireless communication module 4-2630 may be a Bluetooth chip. The audio apparatus 4-102A may be paired with and wirelessly connected to a Bluetooth chip in another electronic device through the Bluetooth chip, to implement wireless communication between the audio apparatus 4-102A and the another electronic device and through the wireless connection. For example, in embodiments of this application, the wireless communication module 4-2630 may be configured to: after the controller 4-2610 determines that the audio apparatus 4-102A is removed from a compartment, send remaining power of the audio apparatus 4-102A to an electronic device that establishes a wireless connection (for example, a Bluetooth connection) to the audio apparatus 4-102A.

In addition, the wireless communication module 4-2630 may be further connected to an antenna. The wireless communication module 4-2630 receives an electromagnetic wave through the antenna, performs frequency modulation and filtering on the electromagnetic wave signal, and sends a processed signal to the controller 4-2610. The wireless communication module 4-2630 may further receive a to-be-sent signal from the controller 4-2610, perform frequency modulation and amplification on the signal, and convert, through the antenna, the signal into an electromagnetic wave for radiation.

The audio input/output circuit 4-2640 may be connected to a sound collection apparatus like a microphone, to process a sound, convert the sound into an audio signal, and transmit the audio signal to the processor for further processing. The audio input/output circuit 4-2640 may be further connected to a sound playing apparatus like a speaker, to convert an audio signal from the processor into a sound for output. In this way, functions such as answering/making a call, playing music, and using a voice assistant can be implemented.

The power module 4-2650 may be configured to supply power to the audio apparatus 4-102A, supply power to modules of the audio apparatus 4-102A, support the audio apparatus 4-102A in receiving a charging input, and the like.

The interface 4-2660 may be used to provide a wired connection for charging or communication between the audio apparatus 4-102A and the smartwatch 4-101. In some embodiments, the audio apparatus 4-102A may have a plurality of interfaces 4-2660. In some embodiments, the interface 4-2660 may include an audio apparatus electrical connector 4-2661. When the audio apparatus 4-102A is placed in an audio apparatus slot of the smartwatch 4-101, the audio apparatus 4-102A may establish an electrical connection to an electrical connector in the smartwatch 4-101 through the audio apparatus electrical connector 4-2661 (for example, the audio apparatus electrical connector is in direct contact with the electrical connector in the smartwatch 4-101). After the electrical connection is established, the smartwatch 4-101 may charge the battery 4-2652 in the audio apparatus 4-102A based on current transmission functions of the audio apparatus electrical connector 4-2661 and the electrical connector in the smartwatch 4-101. For example, the audio apparatus electrical connector 4-2661 may be a pogo pin, a spring pin, a spring plate, a conductive block, a conductive patch, a conductive sheet, a pin, a plug, a contact pad, a jack, a socket, or the like. A specific type of the electrical connector 4-2661 is not limited in embodiments of this application. In some other embodiments, after the electrical connection is established, the audio apparatus 4-102A may further perform data communication with the smartwatch 4-101, for example, may receive a pairing instruction from the smartwatch 4-101.

The sensor module 4-2670 may include, for example, an optical proximity sensor 4-2671, a bone conduction sensor 4-2673, a touch sensor 4-2675, a distance sensor 4-2676, and a magnetic field sensor 4-2677. In some embodiments, the controller 4-2610 may perform wearing detection through the optical proximity sensor 4-2671, to determine whether the audio apparatus 4-102A is worn by a user. In some embodiments, the controller 4-2610 may obtain a vibration signal of a vibration bone of a vocal-cord part through the bone conduction sensor 4-2673, and obtain a voice signal through parsing, to implement a voice function. In some embodiments, the controller 4-2610 may detect, based on a change of a magnetic induction intensity detected by the magnetic field sensor 4-2677, whether the audio apparatus 4-102A is in an in state or an out state. The magnetic field sensor 4-2677 may be a Hall effect sensor or a magnetometer. In addition, the controller 4-2610 may perform the method in embodiments of this application, and exchange information with devices such as the smartwatch 4-101, the electronic device 4-200, and the electronic device 4-300.

In some embodiments, a housing of the audio apparatus 4-102A may be further provided with a magnet (for example, a magnetic iron) configured to attract the smartwatch 4-101, so that the audio apparatus 4-102A is placed in the audio apparatus slot of the smartwatch 4-101. For example, an outer surface of the audio apparatus 4-102A may further include components such as a button, an indicator light (which may indicate power, an incoming/outgoing call, a pairing mode, and the like), a display (which may prompt user-related information), and a dust filter (which may be used in cooperation with an earpiece). The button may be a physical button, a touch button (used in cooperation with the touch sensor), or the like, and is configured to trigger operations such as powering on, powering off, pausing, playing, recording, starting charging, and stopping charging.

The structure shown in FIG. 89 does not constitute a specific limitation on the audio apparatus 4-102A. In actual application, the audio apparatus 4-102A may include more or fewer components than those shown in the figure, or some components may be combined, or some components may be split, or different component arrangements may be used. The components shown in the figure may be implemented by hardware, software, or a combination of software and hardware.

### Hardware architecture of an electronic device like a mobile phone

FIG. 90 is an example of a diagram of a structure of the electronic device 3-200 according to an embodiment of this application. In addition to the mobile phone, the electronic device 3-200 may alternatively be a tablet computer, a notebook computer, a smart large-screen device, or the like. The smart large-screen device may be, for example, a smart television.

As shown in FIG. 90. The electronic device 3-200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 3-200. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 3-200.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through Bluetooth earphones.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through Bluetooth earphones. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through Bluetooth earphones.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 3-200. The processor 110 communicates with the display 194 through the DSI interface, to implement a display function of the electronic device 3-200.

The GPIO interface may be configured by software. The GPIO interface may be configured as a control signal or a data signal. In some embodiments, the GPIO interface may be used to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to the charger to charge the electronic device 3-200, or may be used to transmit data between the electronic device 3-200 and a peripheral device, or may be used to connect to earphones for playing audio through the earphones. The interface may be further configured to connect to another electronic device like an AR device.

In embodiments of this application, only an interface connection relationship between the modules is used as an example, and does not constitute a limitation on an internal structure of the electronic device 3-200. In some other embodiments of this application, the electronic device 3-200 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 3-200. The charging management module 140 supplies power to an electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 3-200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 3-200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 3-200. In some embodiments, at least some function modules in the mobile communication module 150 may be disposed in the processor 110. In some embodiments, at least some function modules of the mobile communication module 150 may be disposed in a same device as at least some modules of the processor 110.

The wireless communication module 160 may provide a wireless communication solution that is applied to the electronic device 3-200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 3-200 are coupled, and the antenna 2 and the wireless communication module 160 in the electronic device 3-200 are coupled, so that the electronic device 3-200 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 3-200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The external memory interface 120 may be used to connect to an external storage card, for example, a micro SD card, to extend a storage capability of the electronic device 3-200. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 3-200 and data processing.

The electronic device 3-200 may implement an audio function, for example, music playing and recording, through the audio module 170, the speaker 170A, the receiver 170B, the microphone 170C, the earphone jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 3-200 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 3-200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 3-200. In some other embodiments, two microphones 170C may be disposed in the electronic device 3-200, to collect a sound signal and implement a noise cancellation function. In some other embodiments, three, four, or more microphones 170C may alternatively be disposed in the electronic device 3-200, to collect a sound signal, implement noise cancellation, and identify a sound source, so as to implement a directional recording function and the like.

The earphone jack 170D is configured to connect to wired earphones. The earphone jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 3-200 may receive a button input, and generate a button signal input related to a user setting and function control of the electronic device 3-200.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 3-200. The electronic device 3-200 may support one or N SIM card interfaces, where N is a positive integer greater than 1.

The structure shown in FIG. 90 does not constitute a specific limitation on the electronic device 3-200. In some other embodiments of this application, the electronic device 3-200 may include more or fewer components than those shown in the figure, or some components may be combined, or some components may be split, or different component arrangements may be used. The components shown in the figure may be implemented by hardware, software, or a combination of software and hardware.

### Audio communication system

An embodiment of this application provides an audio communication system, including a wearable device and an audio apparatus. The foregoing "fixed connection" may be formed between the wearable device and the audio apparatus. The wearable device may be the wearable device described in embodiments in FIG. 88, and the audio apparatus may be the audio apparatus described in embodiments in FIG. 88 and FIG. 89. For specific details of the wearable device and the audio apparatus, refer to the descriptions of the wearable device and the audio apparatus in the foregoing sections. Details are not described herein again.

An embodiment of this application further provides an audio communication system, including a wearable device, an audio apparatus, and a first electronic device. The foregoing "triangular connection" may be formed between the wearable device, the audio apparatus, and the first electronic device. The wearable device may be the wearable device described in embodiments in FIG. 88, the audio apparatus may be the audio apparatus described in embodiments in FIG. 88 and FIG. 89, and the first electronic device may be the electronic device described in embodiments in FIG. 90. For specific details of the wearable device and the audio apparatus, refer to the descriptions of the wearable device and the audio apparatus in the foregoing sections. Details are not described herein again. For specific details of the first electronic device, refer to the descriptions of the mobile phone in the "triangular connection" in the foregoing sections. Details are not described herein again.

An embodiment of this application further provides an audio communication system, including a wearable device, an audio apparatus, a first electronic device, and a second electronic device. The foregoing "U-shaped connection" may be formed among the wearable device, the audio apparatus, the first electronic device, and the second electronic device. The wearable device may be the wearable device described in embodiments in FIG. 88, the audio apparatus may be the audio apparatus described in embodiments in FIG. 88 and FIG. 89, and both the first electronic device and the second electronic device may be the electronic device described in embodiments in FIG. 90. For specific details of the wearable device and the audio apparatus, refer to the descriptions of the wearable device and the audio apparatus in the foregoing sections. Details are not described herein again. For specific details of the first electronic device and the second electronic device, refer to the descriptions of the two mobile phones in the "U-shaped connection" in the foregoing sections. Details are not described herein again. In a possibility, the earphones may support a plurality of connections. In this way, the system may further form the foregoing "2+1 connection", that is, the earphones may be connected to both the first electronic device and the second electronic device. However, there is a physical connection between the earphones and one of the electronic devices, and there is a virtual connection between the earphones and the other electronic device.

An embodiment of this application further provides an audio communication system, including a wearable device, an audio apparatus, and more than two electronic devices. When earphones support a plurality of connections, the foregoing "2+1 connection", "2+2 connection", "2+3 connection", and even a more complex communication architecture may be formed among the wearable device, the audio apparatus, and the more than two electronic devices. The wearable device may be the wearable device described in embodiments in FIG. 88, the audio apparatus may be the audio apparatus described in embodiments in FIG. 88 and FIG. 89, and both the first electronic device and the second electronic device may be the electronic device described in embodiments in FIG. 90.

Method or algorithm steps described in combination with the content disclosed in embodiments of this application may be implemented by hardware, or may be implemented by a processor by executing software instructions. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a transceiver or a relay device. Certainly, the processor and the storage medium may alternatively exist in a radio access network device or user equipment as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that facilitates transmission of a computer program from one place to another. The storage medium may be any available medium accessible to a general-purpose or a dedicated computer.

In the specific implementations, the objectives, technical solutions, and beneficial effects of embodiments of this application are further described in detail. It should be understood that the descriptions are merely specific implementations of embodiments of this application, but are not intended to limit the protection scope of embodiments of this application. Any modification, equivalent replacement, improvement, or the like made based on the technical solutions of embodiments of this application shall fall within the protection scope of embodiments of this application.

## Claims

1. A pairing and connection method, applied to a wearable device, wherein the wearable device has an audio apparatus slot, the audio apparatus slot is capable of accommodating an audio apparatus, and the method comprises:
performing, by the wearable device, pairing with a first electronic device;
establishing, by the wearable device, a connection to the first electronic device; and
sending, by the wearable device, a media access control MAC address of the audio apparatus to the first electronic device through the connection, wherein the MAC address of the audio apparatus is used by the first electronic device to perform pairing with the audio apparatus.

2. The method according to claim 1, wherein the MAC address of the audio apparatus is obtained by the wearable device from the audio apparatus through an electrical connection formed through contact between a communication electrode in the audio apparatus slot and a communication electrode of the audio apparatus.

3. The method according to claim 2, further comprising: performing, by the wearable device, pairing with the audio apparatus based on the MAC address of the audio apparatus.

4. The method according to claim 3, wherein pairing between the wearable device and the audio apparatus is performed when the audio apparatus is located in the audio apparatus slot or after the audio apparatus is back to the audio apparatus slot.

5. The method according to claim 3 or 4, wherein the performing, by the wearable device, pairing with the audio apparatus based on the MAC address of the audio apparatus specifically comprises:
if only a single earphone is located in the audio apparatus slot, performing, by the wearable device, pairing with the single earphone located in the audio apparatus slot;
if two earphones are located in the audio apparatus slot, performing, by the wearable device, pairing with the two earphones located in the audio apparatus slot; or
if a single earphone or two earphones not located in the audio apparatus slot are back to the audio apparatus slot, performing, by the wearable device, pairing with the single earphone or two earphones back to the audio apparatus slot.

6. The method according to any one of claims 1 to 5, wherein the wearable device comprises a smartwatch.

7. The method according to any one of claims 1 to 6, further comprising:
detecting, by the wearable device, that a new audio apparatus enters the audio apparatus slot;
performing, by the wearable device, pairing with the new audio apparatus; and
sending, by the wearable device, a MAC address of the new audio apparatus to the first electronic device, wherein the MAC address of the new audio apparatus is used by the first electronic device to perform pairing with the new audio apparatus, and the new audio apparatus is an audio apparatus whose pairing information is not in the wearable device.

8. The method according to claim 7, further comprising: obtaining, by the wearable device, the MAC address of the new audio apparatus from the new audio apparatus through an electrical connection formed through contact between the communication electrode in the audio apparatus slot and a communication electrode of the new audio apparatus, wherein the MAC address of the new audio apparatus is used by the wearable device to perform pairing with the new audio apparatus.

9. The method according to claim 7 or 8, wherein a prerequisite for pairing between the wearable device and the new audio apparatus comprises: an old audio apparatus is not in use, wherein the old audio apparatus is an audio apparatus whose pairing information is in the wearable device.

10. The method according to claim 9, wherein that an old audio apparatus is not in use comprises: the old audio apparatus is located in the audio apparatus slot, or the old audio apparatus is not located in the audio apparatus slot but is not connected to an electronic device, or the old audio apparatus is not located in the audio apparatus slot, and is connected to an electronic device, but is not engaged in an audio service.

11. The method according to any one of claims 1 to 10, wherein the new audio apparatus comprises earphones, and the performing, by the wearable device, pairing with the new audio apparatus specifically comprises:
if two new earphones enter the audio apparatus slot, performing, by the wearable device, pairing with the two new earphones;
if a single new earphone enters the audio apparatus slot and there is no old earphone in the audio apparatus slot, performing, by the wearable device, pairing with the single new earphone; or
if a single new earphone enters the audio apparatus slot but there is still an old earphone in the audio apparatus slot, deleting, by the wearable device, pairing information of the old earphone, and performing pairing with the pair of earphones in the audio apparatus slot.

12. The method according to any one of claims 1 to 11, wherein the method further comprises: if the wearable device is further connected to a second electronic device before performing pairing with the first electronic device, disconnecting, by the wearable device, from the second electronic device.

13. A pairing and connection method, applied to a first electronic device, wherein the method comprises:
performing, by the first electronic device, pairing with a wearable device, wherein the wearable device has an audio apparatus slot, and the audio apparatus slot is capable of accommodating an audio apparatus;
establishing, by the first electronic device, a connection to the wearable device;
receiving, by the first electronic device through the connection, a MAC address of the audio apparatus sent by the wearable device; and
performing, by the first electronic device, pairing with the audio apparatus based on the MAC address of the audio apparatus.

14. The method according to claim 13, wherein before the first electronic device performs pairing with the wearable device, the first electronic device detects a first pairing operation.

15. The method according to claim 14, wherein the first pairing operation comprises an operation of scanning, through a camera of the first electronic device, a graphic code that is of the wearable device and that is displayed on the wearable device.

16. The method according to claim 15, wherein before the performing, by the first electronic device, pairing with a wearable device, the method further comprises: obtaining, by the first electronic device, a MAC address of the wearable device by scanning the graphic code, wherein the MAC address of the wearable device is used by the first electronic device to perform pairing with the wearable device.

17. The method according to claim 14, wherein the first pairing operation comprises an operation of selecting the wearable device from a nearby device found by the first electronic device and adding the wearable device.

18. The method according to claim 17, wherein before the performing, by the first electronic device, pairing with a wearable device, the method further comprises: obtaining, by the first electronic device, a MAC address of the nearby device by searching for the nearby device, wherein a MAC address of the wearable device is used by the first electronic device to perform pairing with the wearable device.

19. The method according to claim 14, wherein the first pairing operation comprises an operation of selecting to connect to the wearable device found by the first electronic device through proximity discovery.

20. The method according to claim 19, wherein before the performing, by the first electronic device, pairing with a wearable device, the method further comprises: obtaining, by the first electronic device, a MAC address of the wearable device through proximity discovery for the wearable device, wherein the MAC address of the wearable device is used by the first electronic device to perform pairing with the wearable device.

21. The method according to any one of claims 13 to 20, wherein pairing between the first electronic device and the audio apparatus is performed when the audio apparatus is located in the audio apparatus slot or after the audio apparatus is back to the audio apparatus slot.

22. The method according to any one of claims 13 to 21, wherein the audio apparatus comprises earphones; and the performing, by the first electronic device, pairing with the audio apparatus based on the MAC address of the audio apparatus specifically comprises:
if only a single earphone is located in the audio apparatus slot, performing, by the first electronic device, pairing with the single earphone located in the audio apparatus slot;
if two earphones are located in the audio apparatus slot, performing, by the first electronic device, pairing with the two earphones located in the audio apparatus slot; or
if a single earphone or two earphones not located in the audio apparatus slot are back to the audio apparatus slot, performing, by the first electronic device, pairing with the single earphone or two earphones back to the audio apparatus slot.

23. The method according to any one of claims 13 to 22, wherein the MAC address of the audio apparatus is obtained by the wearable device from the audio apparatus through an electrical connection formed through contact between a communication electrode in the audio apparatus slot and a communication electrode of the audio apparatus.

24. A pairing and connection method, applied to an audio apparatus, wherein the audio apparatus is capable of being accommodated in an audio apparatus slot of a wearable device, and the method comprises:
transmitting, by the audio apparatus, a MAC address of the audio apparatus to the wearable device, wherein the MAC address of the audio apparatus is used by a first electronic device connected to the wearable device to perform pairing with the audio apparatus; and
performing, by the audio apparatus, pairing with the first electronic device connected to the wearable device.

25. The method according to claim 24, wherein the transmitting, by the audio apparatus, a MAC address of the audio apparatus to the wearable device specifically comprises: when the audio apparatus is located in the audio apparatus slot, transmitting, by the audio apparatus, the MAC address of the audio apparatus to the wearable device through an electrical connection formed through contact between a communication electrode of the audio apparatus and a communication electrode in the audio apparatus slot.

26. The method according to claim 24 or 25, wherein pairing between the audio apparatus and the first electronic device is performed when the audio apparatus is located in the audio apparatus slot or after the audio apparatus is back to the audio apparatus slot.

27. The method according to any one of claims 24 to 26, wherein the audio apparatus comprises earphones, and the performing, by the audio apparatus, pairing with the first electronic device connected to the wearable device specifically comprises:
if only a single earphone is located in the audio apparatus slot, performing, by the single earphone located in the audio apparatus slot, pairing with the first electronic device;
if two earphones are located in the audio apparatus slot, performing, by the two earphones located in the audio apparatus slot, pairing with the first electronic device; or
if a single earphone or two earphones not located in the audio apparatus slot are back to the audio apparatus slot, performing, by the single earphone or two earphones back to the audio apparatus slot, pairing with the first electronic device.

28. The method according to any one of claims 24 to 27, further comprising: performing, by the audio apparatus, pairing with the wearable device.

29. The method according to claim 28, wherein pairing between the wearable device and the audio apparatus is performed when the audio apparatus is located in the audio apparatus slot or after the audio apparatus is back to the audio apparatus slot.

30. The method according to claim 28 or 29, wherein the audio apparatus comprises the earphones, and the performing, by the audio apparatus, pairing with the wearable device specifically comprises:
if only a single earphone is located in the audio apparatus slot, performing, by the single earphone located in the audio apparatus slot, pairing with the wearable device;
if the two earphones are located in the audio apparatus slot, performing, by the two earphones located in the audio apparatus slot, pairing with the wearable device; or
if a single earphone or the two earphones not located in the audio apparatus slot are back to the audio apparatus slot, performing, by the single earphone or two earphones back to the audio apparatus slot, pairing with the wearable device.

31. The method according to any one of claims 24 to 30, wherein the wearable device comprises a smartwatch.

32. The method according to any one of claims 24 to 31, wherein if the audio apparatus is a new audio apparatus, a prerequisite for pairing between the audio apparatus and the wearable device comprises: an old audio apparatus is not in use, wherein the old audio apparatus is an audio apparatus whose pairing information is in the wearable device.

33. The method according to claim 32, wherein that an old audio apparatus is not in use comprises: the old audio apparatus is located in the audio apparatus slot, or the old audio apparatus is not located in the audio apparatus slot but is not connected to an electronic device, or the old audio apparatus is not located in the audio apparatus slot, and is connected to an electronic device, but is not engaged in an audio service.

34. A wearable device, comprising a memory, and a processor and a transceiver that are coupled to the memory, wherein the transceiver is configured to communicate with another communication device, the memory is configured to store code for implementing the pairing and connection method provided in this application, and the processor is configured to execute the program code stored in the memory, to perform the method according to any one of claims 1 to 12.

35. An electronic device, comprising a memory, and a processor and a transceiver that are coupled to the memory, wherein the transceiver is configured to communicate with another communication device, the memory is configured to store code for implementing the pairing and connection method provided in this application, and the processor is configured to execute the program code stored in the memory, to perform the method according to any one of claims 13 to 23.

36. An audio apparatus, comprising a memory, and a processor and a transceiver that are coupled to the memory, wherein the transceiver is configured to communicate with another communication device, the memory is configured to store code for implementing the pairing and connection method provided in this application, and the processor is configured to execute the program code stored in the memory, to perform the method according to any one of claims 24 to 33.

37. A communication system, comprising a wearable device and an audio apparatus, wherein the wearable device is the wearable device according to claim 34, and the audio apparatus is the audio apparatus according to claim 36.

38. A communication system, comprising a wearable device, an audio apparatus, and an electronic device, wherein the wearable device is the wearable device according to claim 34, the audio apparatus is the audio apparatus according to claim 36, and the electronic device is the electronic device according to claim 35.

39. A computer-readable storage medium, wherein the readable storage medium stores instructions, and when the instructions are run on a computer, the computer is enabled to perform the method according to any one of claims 1 to 12.

40. A computer-readable storage medium, wherein the readable storage medium stores instructions, and when the instructions are run on a computer, the computer is enabled to perform the method according to any one of claims 13 to 23.

41. A computer-readable storage medium, wherein the readable storage medium stores instructions, and when the instructions are run on a computer, the computer is enabled to perform the method according to any one of claims 24 to 33.
